# NEW EUROPEAN PATENT SPECIFICATION

(11) **EP 0 125 787 B2**
(45) Date of publication and mention of the opposition decision: **22.03.2000**
(45) Mention of the grant of the patent: 07.08.1991
(21) Application number: 84302454.8
(22) Date of filing: 11.04.1984
(51) Int. Cl.: B29C 45/16, B65D 1/40

(54) **Injection molding methods, injection molding apparatus and injection nozzle devices for use in molding multiple-layer articles, and multiple-layer injection molded articles**
Spritzgussverfahren, Spritzgussvorrichtung und Einspritzdüseneinrichtung zum Herstellen von mehrschichtigen Gegenständen, und mehrschichtige spritzgegossene Gegenstände
Procédé de moulage par injection, appareil de moulage par injection et installation de buse d'injection à utiliser pour le moulage d'objets multicouches et objets multicouches moulés par injection

(30) Priority: 13.04.1983 US 484707; 13.04.1983 US 484706; 13.04.1983 US 484501; 13.04.1983 US 484441; 13.04.1983 US 484548; 13.04.1983 US 484561
(43) Date of publication of application: 21.11.1984
(60) Divisional application: 88201955.7
(73) Proprietor: AMERICAN NATIONAL CAN COMPANY, Chicago, Illinois 60631 (US)
(72) Inventor: Kudert, Frederick G., Niles Illinois 60648 (US); Mchenry, Robert J., St. Charles Illinois 60174 (US); Latreille, Maurice G., Batavia Illinois 60648 (US); Nahill, George F., Crystal Lake Illinois 60014 (US); Pfutzenreuter III, Henry, Alta Loma California 91701 (US); Tung, Thomas T., Hoffman Estates Illinois 60195 (US); Tennant, William A., Schaumburg Illinois 60193 (US); Vella, John, Jr., Aurora Illinois 60505 (US)
(74) Representative: Pigasse, Daniel

(56) References cited:
- WO-A-81/00230
- WO-A-81/00231
- WO-A-81/02407
- DE-A- 2 821 257
- DE-A- 3 036 064
- DE-A- 3 201 986
- DE-B- 2 401 168
- FR-B- 1 290 262
- GB-A- 2 006 108
- US-A- 3 737 263
- US-A- 3 921 856
- US-A- 3 976 226
- US-A- 4 052 497

## Description

The present invention relates to improvements in injection molding methods, injection molding apparatus and injection nozzle devices for use in molding multiple-layer articles. More particularly, but not exclusively, the invention is concerned with improvements in the field of injection molding, or injection blow molding, which enable a plurality of multi-layer articles (usually identical articles) to be produced by molding them simultaneously, or substantially simultaneously, in the course of each cycle of molding operations.

The invention has a number of aspects, which for convenience will now be summarized in the following section headed "Abstracts".

Apparatus for unit cavity and multi-cavity, multi-layer injection molding and injection blow molding machines are provided, which, in preferred embodiments, include:
- co-injection nozzle means including multi-polymer co-injection nozzles comprising an assembly of shells, and having fixed, tapered passageways communicating with annular orifices close to the nozzle gate and to each other, and polymer flow balancing and directing means in the passageways in the form of concentric and eccentric chokes;
- valve means for each co-injection nozzle, operative in the nozzle central channel to and adapted to be moved to different positions to block and unblock the nozzle orifices, and, in each nozzle to control the initiation, flow and termination of flow of a plurality of polymer flow streams, comprised of an elongated sleeve having an axial central passageway and a port in its side wall and axially-reciprocable within the nozzle central channel, and, either a solid pin within and fixed relative to the sleeve, or, more preferably, an elongated pin axially-reciprocable within the sleeve central passageway, the sleeves and pins each mounted in close tolerance slip fits to prevent any significant accumulation of polymer melt material therebetween;
- valve means adapted to move through a nozzle central channel to assist in knitting the internal layer with itself in the central channel;
- valve means adapted to move through a nozzle central channel with an accumulation of polymer melt material at its forward end, and to assist in encapsulating the knit internal layer in what will be the sprue or bottom area of the container to be formed;
- valve means adapted to be moved through a nozzle central channel to substantially clear the central channel of polymer melt material;
- a feed block for each co-injection nozzle, for receiving a plurality of separate polymer melt material flow streams in an axially-aligned, spaced pattern in the periphery of the device, and for redirecting their travel paths to flow axially in a radially-spaced pattern out of the forward end of the device into the rear of a co-injection nozzle;
- polymer melt material flow stream splitter devices, including runner extensions, T-splitters and Y-splitters, for splitting an incoming flow stream channel for each melt material, into first and second branched flow channels of equal length which communicate with sets of first and second branched exit ports, each set in an axially-aligned, spaced pattern in different peripheral surface portions of the device;
- drive means in communication with separate valve means for each nozzle, for simultaneously and identically driving the valve means in each co-injection nozzle, to there simultaneously and identically initiate, regulate and terminate the flow of the respective polymer melt material streams, the drive means including a sleeve shuttle for each sleeve, a pin shuttle for each pin, each connected to common moving means including a sleeve cam bar and a pin cam bar;
- control means for moving the common moving means in a desired mode to provide the identical, simultaneous movements of the valve means and identical, simultaneous flow control of corresponding materials in each nozzle;
- a free floating runner system wherein runner means, including a runner block and its runner extension, are mounted on their axial center lines on support means, with a gap between the runner structures and surrounding structures to allow the runner structures to freely thermally expand radially and axially;
- a force compensation system comprised of means, preferably hydraulic, for providing a forward force to the runner structures to offset any rearward force from axial floatation of the runner means and to provide an on-line, effective pressure contact seal between the nozzle sprues and injection cavity sprues;
- a runner system providing a substantially equal flow path and experience to corresponding polymer melt material flow streams fed to corresponding passageways in each co-injection nozzle, for forming corresponding layers in each injected article; and
- apparatus for injection molding and blow molding multi-layer plastic articles, employing the valve means and a fewer number of means for displacing polymer melt materials than there are layers of such materials in the article formed;
- combinations of the aforementioned and other apparatus and devices, with and without the valve means, and with and without means for displacing and pressurizing each polymer melt material from its source to the co-injection nozzles.

Methods for injection molding and injection blow molding articles by means of unit cavity and multi-cavity, multi-layer injection molding and injection blow molding machines are provided, which, in preferred embodiments, include:
- methods of initiating, regulating and terminating the respective flows of polymer melt material flow streams through the co-injection nozzle orifices, preferably with, but also without the use of valve means, to form thin articles, including parisons and containers comprised of at least three, preferably five layers;
- methods of doing the above with valve means, and with flow balancing and directing means, involving selectively moving the valve means to various positions which block and unblock the nozzle orifices to form the articles, to provide them with desired characteristics, and to control the relative thicknesses, uniformities and radial positions of the respective layers, especially the internal layer of the article;
- methods of doing the above with valve means, and with flow balancing and directing means, involving selectively moving the valve means to various positions which block and unblock the nozzle orifices to form the articles, to control the final lateral location of the internal layer within the wall of the injected article;
- methods of doing the above with and without valve means, and with flow balancing and directing means, in conjunction with pressurizing one or more polymer melt materials, to precisely control the relative flows of the respective polymer melt materials into and through the nozzle central channels and into the injection cavities;
- methods of initiating flow of a melt stream of polymeric material substantially simultaneously from all portions of an annular passageway orifice into the central channel of a co-injection nozzle of a multi-polymer injecting molding machine for forming multi-layer articles, by providing a melt material in the passageway while preventing the material from flowing through the orifice, subjecting the material to a pressure which at all points about the orifice is greater than the ambient pressure of a flowing melt stream of another polymeric material through the central channel, at all circumferential positions which correspond to said points, and allowing the pressurized material to flow through the orifice to obtain the simultaneous onset flow. The flowing pressurized material has a leading edge sufficiently thick about its annulus that the marginal end portion of the internal layer in the side wall of the injection molded article is at least 1% of the total thickness of the side wall. These methods can be applied to runner systems which extend from reciprocating sources of polymeric melt material displacement to the orifices of a multi-material co-injection nozzle by providing the aforementioned pressure to the polymeric melt material in the runner system.
- methods of doing the above wherein the pressure subjecting step is effected in two stages, first by providing a residual pressure lower than the desired pressure, and then, before or upon effecting the allowing step, raising the level of the pressure to the desired pressure at which the internal layer material flows through the orifice.
- methods of prepressurizing at least one polymer melt material, preferably for the internal layer, in its respective passageway whether or not its orifice is blocked by physical means, to provide a uniform onset flow of the melt material simultaneously over all points of its orifice into the central channel, to avoid time bias with respect to the entry of the flow of the material into the central channel, and to provide articles having the leading edge of their internal layer uniformly disposed about the marginal edge portion of the articles if they have no side wall, and about the marginal end portion of the articles, such as parisons and containers, if they have a side wall;
- methods of injection molding and blow molding articles having the aforementioned uniform leading edge, - and/or having an internal layer thicker in the bottom wall than in the side wall, wherein the bottom wall is, on average, thinner than the side wall of an article, - and/or having, in a five layered article, the terminal end of the internal layer(s) encapsulated within intermediate layer material, preferably an adherent material;
- methods of injection molding and blow molding multi-layer plastic articles having an internal layer whose marginal end portion is folded over within the side wall of the article, by introducing the internal layer material at a first location at the interface between a core stream of material which is to form one surface layer of the article, and an annular stream of material which is to form the other surface layer of the article, and moving the introduced annular stream of third material from its first location which is not coincident with the fast flow streamline, to a second location more proximate to, or coincident with, or across from, the fast flow streamline in the central channel of the nozzle;
- methods of overcoming bias of a portion of the terminal end of the internal layer of a multi-layer injection blow molded container by folding over the biased terminal end to provide a substantially unbiased overall leading edge of this internal layer;
- methods of forming an injection molded multi-layer rigid plastic parison for forming a blow molded container whose side wall marginal end portion has a portion of its internal layer folded over, comprising, during injection of the parison, causing a portion of the internal layer to fold over as the layer moves into and through the cavity;
- methods of simultaneously forming substantially identical injection molded articles in each of a plurality of injection cavities using separate, simultaneously driven valve means in each co-injection nozzle;
- methods of utilizing the valve means in a co-injection nozzle to assist in knitting the internal layer material to provide a continuous internal layer in the sprue or bottom area of the injected article, parison or container;
- methods of utilizing the valve means in a co-injection nozzle to assist in encapsulating the internal layer material within structural layer material to provide a completely encapsulated internal layer in the sprue or bottom area of the injected article, parison or container;
- methods utilizing the valve means, for very rapidly effecting simultaneous initiations, regulations and terminations of flows of combinations of at least three polymer melt material flow streams, in each co-injection nozzle of a multi-coinjection nozzle injection molding machine; and
- methods of controlling the flows of polymeric material streams into the central channel of a co-injection nozzle by employing valve means in combination with fewer means for displacing the polymer melt materials, than there are layers in the article, parison or container to be formed.

Injection molded and injection blow molded multi-layer substantially rigid plastic articles are provided, which, in preferred embodiments, include:
- articles having at least three layers wherein a portion of the marginal end portion of their internal layer is folded over within the marginal end portion of the side wall of the article, preferably in the flange if the article is a parison or container;
- the aforementioned articles wherein the folded over portion is toward the inside or the outside of the side wall;
- the aforementioned articles, parisons, and containers, open-ended, or closed with end closures double seamed thereto or flexible lids secured thereto by an adherent, or heat seal, or other suitable means;
- the aforementioned articles wherein the folded over portion and any not folded over portion of the marginal end portion of the internal layer, extends substantially uniformly into the marginal end portion of the side wall of the article, parison or container;
- at least five layer plastic articles having side and bottom walls, and an outside surface layer, an inside surface layer, an internal layer, and first and second intermediate layers, one on either side of the internal layer, and having the terminal end of the internal layer encapsulated by intermediate layer material, whether it be solely or primarily by first or by both first and second intermediate layer material; and
- multi-layer injection molded plastic containers each of whose side wall is comprised of at least three layers, wherein - the ratio of the internal layer thickness in the bottom wall relative to the total bottom wall thickness is on the average greater than the ratio of the internal layer thickness in the side wall relative to the total side wall thickness, - the bottom wall total thickness is less than the side wall total thickness and the thickness of the internal layer in the bottom wall is at least equal to the average thickness of the internal layer in the side wall, - the bottom wall total thickness is less than the total thickness of the side wall, and, in a central portion of the bottom wall, the internal layer thickness is greater than the average thickness of the internal layer in the side wall, or - the average bottom wall total thickness is less than the average side wall total thickness, and at least a portion of the internal layer is thicker in the bottom wall than the average thickness of the internal layer in the side wall.

### FIELD OF THE INVENTION

The present invention is concerned with improved multi-layer injection molded and injection blow molded articles, apparatus to manufacture such articles and methods to produce them.

### BACKGROUND OF THE INVENTION

Containers for packaging food require a combination of physical properties which is not economically available with rigid and semi-rigid containers made from any single polymeric material. Among the properties required are low oxygen and moisture permeability, compatibility with the temperatures and pressures encountered in conventional food processing and sterilization, and the impact resistance and rigidity required to withstand shipping, warehousing, and abuse. Multi-layer constructions comprised of more than one plastic material can offer such a combination of properties.

Multi-layer containers have been made commercially by thermoforming and extrusion blow molding processes. These processes, however, suffer from major disadvantages. The chief disadvantage is that only a portion of the multi-layer material formed goes into the actual container. The remainder of the material can sometimes be recovered and used either in other applications or in one of the layers of future containers made by the same process. This "recycle" use, however, recovers only a part of the value of the original material because the scrap is a mixture of the materials. Other disadvantages of these processes include limited options in terminal end geometry or "finish," in shape, and in material distribution.

Injection molding and injection blow molding are often preferred for making single layer containers because they are scrapless and overcome many of the other limitations of thermoforming and extrusion blow molding. These processes have not been commercially adapted to multi-layer constructions because of difficulties in achieving the required control of the location and uniformity of the various layers, particularly on a multi-cavity basis. In fact, even on a single cavity basis, multi-layer injection molding has been limited to relatively thick parts in which a thin surface layer of plastic covers a relatively thick core layer of either foamed plastic or of some other aesthetically unattractive material such as scrap plastic.

To be successfully commercially adapted to food containers, multi-layer injection molding would require two major improvements over the processes which are now commercially practiced. Economical multi-layer food containers require very thin core layers comprised of relatively expensive barrier resin such as a copolymer comprised of vinyl alcohol and ethylene monomer units. The location and continuity of these thin core layers are important and must be precisely controlled. International Patent Publication Nos. WO81/00231 and WO/00230 and incorporated herein by reference, disclose multi-layer, injection molded and injection blow molded articles, parisons and containers having a thin continuous core layer substantially encapsulated within inner and outer structural layers, and methods and apparatus to make them. The disclosures in the aforementioned applications apply to both single and multi-cavity injection molding machines.

The second improvement over current commercial multi-layer injection molding processes is that the process must be capable of forming containers on a multi-cavity basis. Although the relatively large parts made by current commercial multi-layer processes can be economically practiced on a single cavity basis, food containers, which are relatively small, require a multi-cavity process to be economical. The extension from single cavity processes to an acceptable multi-cavity process presents many serious technical difficulties.

One way to extend from a single cavity to a multi-cavity process would be to replicate for each cavity the polymeric material melting and displacement and other flow distributing means used in a single cavity process. Such replication would realize some advantages over a unit cavity process. For example, a common clamp means could be used. However, it would not provide the maximum advantage because individual polymeric material melting and displacement means would still be necessary. Such a multiplicity of melting and pressurization means would not only be costly but would create severe geometrical and design problems of positioning a large number of separate flow streams in a balanced configuration, thereby increasing the required spacing between cavities, and limiting the number of cavities which would fit within the area of the clamped platens.

An alternate means of molding multi-layer articles on a multi-cavity basis would be to have a single multi-layer nozzle with its associated melting, displacement and distributing means communicate with a single channel or runner feeding multiple materials to multiple cavities. Such a runner system might be either of the cold runner type in which the plastic in the runner is cooled and removed with the injection molded article in each cycle, or of the hot runner type in which the plastic remaining in the runner after each shot is kept hot and is injected into the cavities during subsequent shots. The chief limitation of this single runner approach is that the single runner channel itself would contain multiple materials which would make it very difficult to control the flow of the individual materials into each cavity, particularly for a process having elements of both sequential and simultaneous flow such as that described in International Patent Publication No. WO81/00230. Controlling the flow of multiple materials in a single runner would be even more difficult in a case in which the runner is long, as in a multi-cavity system.

In the preferred embodiments of the apparatus and methods of this invention, a single displacement source is used for each material which is to form a layer of the article, but the materials are kept separate while each material is split into several streams each feeding a separate nozzle for each cavity. The individual materials are thereby combined into a multi-layer stream only at the individual nozzles, in their central channels, which feed directly into each cavity. Although this approach avoids many of the disadvantages of the previously described methods, it presents many problems which must be satisfactorily overcome for successful injection of articles in which thin core layers are properly distributed and located.

Several of these problems result from the length of the runner and the distribution system for a multi-coinjection nozzle machine. For economical reasons, it is desirable to have as many cavities as possible within the machine in order to provide as many articles as possible upon each injection cycle. It is possible to minimize the average runner length for a given number of cavities by having the channels run directly to the remotest nozzle, redirecting a part of the stream as it passes near each other nozzle. It has been found that such a channel geometry, while suitable for most single layer injection molding, has a major disadvantage for precise multi-layer injection in that a given impetus introduced at the displacement or pressurization source will have its effect more immediately in the more proximate nozzles than in the more remote ones. The time delay between the initiation of an impetus and its effect at a distance results from the compressibility of the plastic. Because of this compressibility, material must flow in the channel before a desired pressure change can be achieved at a remote location. It has been found that in order to achieve the same flow initiation and termination times and the same relative flow rates of various layers in each nozzle as well as to obtain articles from all cavities having substantially the same characteristics, the material entering each nozzle must have undergone essentially the same flow experience in its path to the nozzle.

It has further been found that in a system in which a given flow stream is split into several individual streams to feed each nozzle, the channel and device geometries which accomplish each of these flow splittings must be symmetrically designed so as to provide the same flow experience to the material in each of the resulting split streams. Such symmetry is difficult to achieve with viscoelastic materials such as polymer melts because the materials have a "memory" of their previous history. When a flow channel contains a sharp turn, for example, material which has passed near the inner radius of curvature of that turn will have a different flow experience from the material which has passed near the outer radius of curvature.

Even with a runner system which, by its design, minimizes the differences in flow history in the path to each nozzle, there will remain some differences as a result of remaining memory effects, temperature non-uniformities in the melt stream before it is split, temperature non-uniformities in the runner system, and machining tolerances. For this reason, it would be desirable to have independent control of the time of initiation and termination of each flow, a critical requirement for precise control of thin core multi-layer injection molding. Such independent control should be effected as near as possible to the point at which the individual flow streams are combined into a multi-layer flow stream. Although these control means should be located in each individual nozzle, they should be controlled in such a manner that they are actuated simultaneously in desired nozzles of a multi-coinjection nozzle machine.

It is not sufficient that the flow of each material be substantially identical in each nozzle. It is also necessary that the flow of the individual materials be uniformly distributed within each injection cavity and, hence, within the nozzle channel feeding the cavity. For axisymmetrical articles, such as most food containers, this is most readily achieved by shaping the various flow streams into concentric annular flows or by shaping one stream into a cylindrical flow and shaping the other flows into annular flows concentric with that cylinder before combining the flow streams.

In order to achieve the required uniformity in these concentric annular flows, it is necessary to redistribute a given flow stream from its shape as it leaves the runner system into a balanced annular flow. Achieving such a balanced annular flow is difficult in itself but is much more difficult to achieve with an intermittent flow process than it is, say, in conventional blown film dies where the flow is constant. Among the complexities of such an intermittent flow process are the difficulty of achieving flow balance when the rate of flow is deliberately varied during each cycle, and the additional problem of different time response behavior at various locations around the annulus.

An additional requirement for an acceptable multi-cavity, multi-layer runner system is that it accurately align and maintain an effective pressure contact seal between each nozzle with its respective cavity. This alignment is particularly critical for the injection of the internal layer of the multi-layer articles in that any misalignment will adversely affect the uniformity and location of the internal layer. The difficulty in achieving such alignment is that the metal for such a hot runner system is at a higher temperature than is the metal plate in which the cavities are mounted. Because of the thermal expansion of materials of construction normally used for such mold parts, the nozzle to nozzle distance will tend to grow with temperature more than will the cavity to cavity distance. In single layer, multi-cavity injection molding, there are two conventional ways of compensating for this difference in thermal expansion. The first is to prevent the relative expansion or contraction by physical restraint; that is, by physically interlocking the runner with the cavity plate. For a large runner system, such a physical constraint system will generate large often problematical opposing forces in the two parts. The second way is to size the runner system so that it will align with the cavity plate when it is at an elevated temperature within a narrow range, even though it will be misaligned beyond the range, e.g., at room temperature. In accordance with this invention, the runner system is not attached to the cavity plate, but rather is left free to grow radially. The nozzles and cavity faces are flat to provide a sliding interface. Given this feature, and that the cavity sprue orifices are provided with a larger diameter than that of the nozzle sprue orifices, the runner has a much greater opportunity to grow radially without the cavity and nozzle sprue orifices becoming misaligned. This provides a much broader temperature range within which to operate, and a wider range of possible polymer melt materials which can be used. However, in order for the nozzles mounted in the runner to transfer plastic at high pressure to the cavities without leakage, it is necessary to impose an opposing force to counteract the separation force generated by this high pressure. This is conventionally achieved by transmitting all or part of the force of the injection clamp through the runner system to the fixed platen. An alternative method is, to use the axial thermal expansion of the runner system to generate a compressive force on the runner between the fixed platen and the cavity plate. One difficulty with any of the above methods of compensating for this differential expansion is that they require close physical contact between the hot runner and the colder metal of the cavity plate and of the fixed platen. This close contact causes thermal variations in the runner. While such thermal gradients would be acceptable in a single layer runner system, the resulting differences in flow experience to each nozzle could for example result in a significant variation in the uniformity and location of a thin inner layer in multi-layer injection molding. This invention overcomes these problems by mounting the runner system with minimum contact between it and surrounding structure.

Other problems encountered in multi-cavity injection molding of articles relates to the formation of high-barrier multi-layer plastic containers. Such containers require that the leading edge of the internal barrier layer material be extended substantially uniformly into and about the marginal end portion of the side wall of the parison or container. This condition is difficult to obtain, because of the compressibility of polymeric melt materials and the long runners of multi-cavity machines which result in a delay in flow response which is accentuated the more remote the materials are from the sources of material displacement. In addition, there are the previously mentioned difficulties of achieving balanced annular flow and uniform time response due for example to variations in polymer and machine temperatures and in machining tolerances, and due to the intermittency of the flow process. These factors render it difficult to introduce a polymeric melt material uniformly and simultaneously over all points of its orifice in one co-injection nozzle, and likewise with respect to introducing the corresponding material through corresponding orifices in the plurality of co-injection nozzles. It has been found that such an introduction is important to extending the leading edge uniformly into the marginal end portion of a container side wall because the portion of the annulus of material first introduced into the central channel will first reach the marginal end portion of the parison or container side wall in the cavity, while the last introduced portion will trail and may not reach the marginal end portion. This condition, referred to as "time bias," has been found to be one cause of bias in the leading edge of the internal layer, which is unacceptable for, for example, quality, high oxygen barrier containers for highly oxygen sensitive food products.

Another problem is that even if the internal layer material is introduced without time bias into the central channel, there may still be bias in the leading edge of the internal layer material in the side wall of the injected article, if all portions of the annulus of the leading edge of the internal layer material are not introduced into or onto a flow stream in the central channel having a substantially uniform velocity about its circumference. This is difficult to achieve for one reason because the flow stream having a substantially uniform velocity about its circumference is not necessarily radially uniform. If this type of introduction occurs, there will be what is referred to as "velocity bias" in that the portions of the annulus in the central channel introduced onto a flow stream which has a high velocity will reach the marginal end portion of the side wall of the article in the cavity before those portions of the annulus introduced onto a flow stream having a lower velocity. Thus, in such case, other things being equal, even though there was no time bias in the introduction of the annulus of the internal layer material, a velocity bias in the central channel and cavity nevertheless resulted in a biased leading edge in the marginal end portion of the side wall of the injected article.

These and other problems associated with multi-layer unit and multi-coinjection nozzle injection molding and injection blow molding machines, processes and articles are overcome by the apparatus, methods and articles of this invention.

Accordingly, it is an object of this invention to provide methods and apparatus for commercially injection molding multi-layer, substantially rigid plastic parisons and containers, and for commercially injection blow molding multi-layer, substantially rigid plastic articles and containers by means of multi-cavity, co-injection nozzle machines.

It is another object of this invention to provide the above methods and apparatus for so molding said items by means of multi-cavity, multi-coinjection nozzle machines.

Another object of this invention is to provide and commercially manufacture, at high speeds, injection molded and injection blow molded, thin, substantially rigid, multi-layer, plastic articles, parisons, and containers.

Another object of this invention is to provide the above methods and apparatus for manufacturing the aforementioned articles, parisons and containers on a multi-cavity multi-coinjection nozzle basis, such that each item injected into and formed in each cavity has substantially identical characteristics.

Another object is to provide injection molding and blow molding methods and apparatus which overcome problems of long runners, variations in temperatures within structural components, variations in temperatures and characteristics of individual and corresponding polymer melts, and variations in machining tolerances which may occur with respect to multi-layer multi-cavity machines.

Another object of this invention is to provide methods and apparatus for providing a substantially equal flow path and experience for each corresponding polymer material flow stream displaced to each corresponding passageway of each co-injection nozzle for forming a corresponding layer of an aforementioned item to be injected.

Another object of this invention is to provide methods and apparatus for preventing bias in the leading edge of the internal layer in the marginal edge portions of the previously mentioned articles, and in the marginal end portion of the side walls of the above-mentioned articles, parisons and containers.

Another object of this invention is to provide methods and apparatus for forming such articles, parisons and containers wherein the leading edges of their internal layers are substantially uniformly extended into and about their marginal edge portions and the marginal end portions of their side walls.

Another object of this invention is to provide methods for positioning, controlling and for utilizing foldover of a portion of the marginal end portion of said internal layer or layers to reduce or eliminate bias and obtain said substantially uniformly extended leading edge of the internal layer or layers.

Another object is to provide methods of avoiding and overcoming time bias and velocity bias as causes of biased leading edges in articles formed by injection molding machines and processes.

Another object is to provide methods of pressurizing polymer melt materials in their passageways to improve their time responses, provide greater control over their flows, obtain substantially simultaneous and uniform onset flows of their melt streams substantially uniformly over all points of their respective nozzle orifices, and obtain substantially simultaneous and identical time responses and flows of corresponding melt streams of the materials in and through each of the multiplicity co-injection nozzles of multi-cavity injection molding and blow molding machines.

Another object is to provide separate valve means operative in the central channel of a co-injection nozzle to there block and unblock the nozzle orifices in various desired combinations and sequences, to control the flow and non-flow of the polymer melt materials through their orifices.

Another object is to provide the aforementioned valve means wherein they are commonly driven to be substantially simultaneously and substantially identically affected in each co-injection nozzle of a multi-coinjection nozzle injection molding machine.

Another object of this invention is to control the relative locations and thicknesses of the layers, particularly the internal layer(s) of the previously mentioned multi-layer injection molded or injection blow molded items.

Another object of this invention is to provide methods and apparatus for obtaining effective control of the polymer flow streams which are to form the respective layers of the injected items, in the passageways, orifices and combining areas of co-injection nozzles and in the injection cavities of multi-cavity injection molding and blow molding machines.

Another object of this invention is to provide co-injection nozzle means adapted to provide in co-injection nozzles, a controlled multi-layer melt material flow stream of thin, annular layers substantially uniformly radially distributed about a substantially radially uniform core flow stream.

Another object of this invention is to provide runner means for a multi-cavity, multi-coinjection nozzle injection molding machine, which splits each flow stream which is to form a layer of each injected item, into a plurality of branched flow streams, and directs each branched flow stream along substantially equal paths to each co-injection nozzle.

Yet another object of this invention is to provide the aforementioned runner means which includes a polymer flow stream redirecting and feeding device associated with each co-injection nozzle for redirecting the path of each branched flow stream for forming a layer of the item to be injected, and feeding them in a staggered pattern of streams to each co-injection nozzle.

Still another object is to provide apparatus for multi-layer, multi-coinjection nozzle injection molding machines, including floating runner means and a force compensation system, for compensating for injection back pressure and maintaining an on-line effective pressure contact seal between all co-injection nozzles and all cavities of the machines.

The foregoing and other objects, features and advantages of this invention will be further appreciated from the following description and the accompanying drawings and appendices.

According to one aspect of the present invention, there is provided a method of forming multi-layer plastics articles wherein said method involves use of a multi-cavity injection molding machine, in which a combined material stream is injected from each of a plurality of co-injection nozzle means of said machine into an associated injection cavity to form each article, and said method further including:
- providing polymeric materials to form layers of the articles, and moving streams thereof separately to each of the nozzle means,
- forming in the plural nozzle means combined streams, which are substantially identical, from the separate material streams, and
- injecting the combined streams to form the multi-layer plastics articles.

According to another aspect of the present invention, there is provided apparatus for forming a plurality of multi-layer plastics articles, comprising a plurality of injection nozzle means each for injecting materials into an associated one of a plurality of cavities to form the articles, means for providing streams of materials for injection to form layers of the articles, means associated with the nozzle means to channel the material streams separately from one another to each of the nozzle means, means for moving the material streams along their respective channels to the respective nozzle and means for combining in each nozzle means the streams moved thereto, to form combined streams, which are substantially identical, in the said nozzle means, for injection into their associated injection cavities to form said articles.

### SUMMARY OF THE INVENTION

The present invention is concerned with injection molded and injection blow molded articles, including containers, whose walls are multiple plies of different polymers. In a preferred embodiment, the article is a container for oxygen-sensitive products including food products, the walls of the container are thin and contain an internal, extremely thin, substantially continuous oxygen-barrier layer, preferably of ethylene vinyl alcohol, which is substantially completely encapsulated within outer layers. The invention includes apparatus and methods for high-speed manufacture of such articles, parisons and containers, and the articles, parisons and containers themselves. The apparatus includes co-injection nozzle structure and valve means associated with the nozzle for precisely controlling the flow of at least three polymer streams through the nozzle which facilitates continuous, high-speed manufacture in a multi-nozzle apparatus of multi-layer, thin wall articles, parisons and containers, particularly those having therein an extremely thin, substantially continuous and substantially completely encapsulated internal oxygen-barrier layer. The invention further comprises improved methods of producing such articles, parisons and containers.

The apparatus comprises a nozzle having a central channel open at one end and having a flow passageway in the nozzle for each polymer stream to be coinjected to form the multi-layer plastic articles from the polymer streams. Each of at least two of the nozzle passageways terminates at an exit orifice, preferably fixed and preferably annular, communicating with the nozzle central channel at locations close to its open end. At least two of the nozzle passageways each comprises a feed channel portion, a primary melt pool portion, a secondary melt pool portion, and a final melt pool portion a part of which forms a tapered, symmetrical reservoir of polymer. The nozzle orifices preferably are axially close to each other and close to the gate of the nozzle. Valve means, which may include sleeve means or pin and sleeve means, are carried in the nozzle central channel and are moveable to selected positions to block and unblock one or more of the orifices to prevent or permit flow of the polymer streams from the nozzle flow passageways into the nozzle central channel.

The valve means has at least one internal axial polymer flow passageway which communicates with the nozzle central channel and is adapted to communicate with one of the flow passageways in the nozzle. Movement of the valve means to selected positions brings the internal axial passageway into and out of communication with the nozzle passageway to permit or prevent flow of a polymer stream through that nozzle passageway and into the internal axial passageway of the valve means and then into the nozzle central channel.

When the valve means comprises sleeve means, or pin and sleeve means, it is preferred that communication from the internal axial passageway of the sleeve means to the passageway in the nozzle is through an aperture in the wall of the sleeve means. It is also preferred that the sleeve means fits closely within the nozzle central channel so there is no substantial cavity for polymer accumulation between the outside of the sleeve means and the central channel. Further, when the valve means is a sleeve means, it is preferred that the sleeve means have axial movement in the central channel of the nozzle (although it may also have rotational movement therein), so that when the sleeve is moved axially it blocks and unblocks one or more of the orifices. When it is rotatable and rotated, the aperture in the wall of the sleeve means is brought into and out of alignment with a nozzle passageway. Alternatively, the nozzle structure including that passageway may be rotated instead of rotating the sleeve means.

When the valve means comprises pin and sleeve means, the pin means preferably is moveable in the axial passageway of the sleeve means to block and unblock an aperture in the wall of the sleeve means so as to interrupt and restore communication between the internal axial passageway in the sleeve and a nozzle passageway for polymer flow. The valve means of this invention can include a fixed pin over which the sleeve reciprocates axially and whose forward end cooperates with the sleeve aperture. One sleeve embodiment of this invention has axially-stepped outer wall surface portions of different diameter for use in a nozzle central channel having cooperative axially-stepped cylindrical portions of different diameters.

The valve means are adapted to assist in knitting the polymer melt material for forming the internal layer with itself in the central channel, and/or to assist in encapsulating the internal layer with other polymeric material, and/or to substantially clear the central channel of polymer melt material when the valve means is moved axially forward through the central channel. In assisting in encapsulating the internal layer, the tip of the pin is partially withdrawn in the sleeve and accumulates the encapsulating material in front of it within the sleeve, and as the valve means is moved forward, the pin can be moved relatively faster forward to eject the accumulated material from the sleeve into the central channel.

The apparatus of the present invention further comprises, with the co-injection nozzle means, or the nozzle means and valve means of the present invention, the combination of polymer flow directing means in at least one of the nozzle passageways for balancing the flow of at least one polymer stream around the passageway in the nozzle and the exit orifice through which it flows. The polymer flow directing means comprises cut-out sections in the nozzles which cooperate with eccentric and concentric chokes to direct the polymer stream exiting from a feed channel on one side of the nozzle into an annular stream whose flow is substantially evenly balanced around the circumference of the nozzle and associated exit orifice. In a preferred embodiment, the combination just described further includes means for pressurizing that polymer stream to produce a pressurized reservoir of polymer in the nozzle passageway between the flow directing means and the orifice, whereby, when the valve means is moved to unblock the orifice, the start of flow of the polymer through the orifice is prompt and substantially uniform around the circumference of the orifice. Prompt and uniform start of flow of the polymer stream around the circumference of the orifice is important, particularly when the polymer stream whose flow is being thus controlled is the one which is to form an internal, thin, substantially continuous layer of the injection molded and injection blow molded article. Such prompt, uniform start of flow of the polymer to form an internal layer greatly facilitates the production of multi-layer injected articles in which an internal layer of the article extends substantially uniformly throughout the wall of the article particularly about the marginal end or edge portion of the article at the conclusion of polymer movement in the injection cavity. This is particularly important in the production of articles which are to be containers for oxygen-sensitive food products where the internal, thin, oxygen-barrier layer must be substantially continuous throughout the wall of the container.

The apparatus of this invention also includes a polymer flow stream redirecting and feeding device, preferably in the form of the feedblock of this invention, for receiving from a runner block a plurality of polymer flow streams separately directed at the device preferably at its periphery, and, while maintaining them separate, redirecting them to flow axially out of the forward end of the device into the multi-polymer co-injection nozzle of this invention. In a preferred embodiment, flow streams enter radially into inlets in the periphery, travel about a portion of the circumference of the device, then inward through a channel toward the axis of the device and then axially forward and communicate with exit holes in the forward end portion of the device. The forward end portion has a stepped channel for receiving the shells of the nozzle assembly of this invention.

This invention further includes drive means which include common moving means for substantially simultaneously and identically driving each of the plurality of separate valve means through each co-injection nozzle and feedblock mounted in the multi-nozzle, multi-polymer injection molding machine, and provide in each nozzle, simultaneous identical control over the initiation, regulation and termination of flow of polymer materials through the nozzles. The drive means includes shuttles for the valve means and the common moving means includes cam bars for moving the respective shuttles, and hydraulic cylinders for moving the cam bars. Control means are provided for moving the common moving means in a desired mode which provides the substantially simultaneous and identical movements and flow controls.

The apparatus of this invention further includes polymer stream flow channel splitter devices adapted for use in conjunction with runner structures of multi-coinjection nozzle injection molding machines. The splitter devices include the runner extensions, T-splitters and Y-splitters of this invention and embodiments thereof, which split each flow channel for a polymer melt material into first and second branched exit flow channels of substantially equal length which exit the devices through first and second sets of axially-aligned spaced, exit ports, each set being located in a different surface portion of the device for communication with corresponding polymer stream flow channel entrances in a runner block of the machine. Preferred embodiments of the T and Y-splitters are cylindrical in shape, wherein the flow channels enter the devices radially and transaxially and their first and second branched exit flow channels extend in opposite directions and exit the device through exit ports at an angle greater than 90° relative to the flow channel from which they are split. In the preferred runner extension the flow channels enter axially into the rearward end of the device in a spread quincuncial pattern, and proceed to the forward end portion of the device where the flow channels are split at axially-spaced branched points into first and second branched exit flow channels of equal length, which proceed in opposite directions and exit the device through a set of axially-spaced first exit ports in one surface portion of the device, and a set of axially-spaced exit ports in another surface portion, about 180° removed from the first exit ports. The splitter devices include isolation means preferably in the form of expandable piston rings for isolating the polymer flow streams from one another as they enter and exit the device.

This invention also includes free-floating, force compensating apparatus and methods for a multi-coinjection nozzle injection molding machine. Runner means are mounted preferably on its axial center line, on support means by mounting means in a manner which enables the runner means, including the runner block and the runner extension, to float or thermally grow axially and radially on the support means while the machine is in operation. Means, preferably hydraulic are included for providing a forward force to the runner means sufficient to offset any rearward force from axial floatation due to injection back pressure, and sufficient to provide and maintain an effective pressure contact seal between the co-injection nozzle sprue faces and the cavity sprue faces during operation of the machine. A gap is provided between the runner block and runner extension and adjacent structure to allow for their floatation and to prevent loss of heat to the adjacent structure.

The apparatus of the present invention further comprises a multi-nozzle machine for making multi-layer injected articles in which each nozzle co-injects at least three polymer streams and in which the polymeric material for each corresponding stream is furnished to each of the nozzles in a separate, substantially equal and symmetrical flow path. The purpose and function of this flow path system is to ensure that each particle of a particular material for a particular layer of the article to be formed that reaches the central channel of any one of the nozzles has experienced substantially the same length of flow path, substantially the same change in direction of flow path, substantially the same rate of flow and change in rate of flow, and substantially the same pressure and change of pressure as is experienced by each corresponding particle of the same material which reaches any one of the remaining nozzles. This simplifies and facilitates precise control over the flow of each of a plurality of materials to a plurality of injection nozzles in a multi-cavity injection apparatus.

The apparatus of this invention further includes the use of valve means with fewer polymer melt material displacement means than there are layers in the article to be formed, whereby one displacement means, displaces material for two layers, and the valve means partially blocks one of the nozzle orifices for one of the two layer materials and thereby controls the relative flows of the two layers.

The present invention provides improved methods of injection molding a multi-layer article having at least three layers and preferably having a side wall. In a preferred method, the valve means is moved in the nozzle means of the present invention to a first position to prevent flow of all polymer streams through the central channel of the nozzle. The valve means is then moved to a second position to permit the flow of a first polymer stream through the nozzle central channel. In a preferred embodiment, this first polymer stream will form one of the surface layers of the injection molded article, preferably the inside surface layer. The valve means is moved to a third position to permit continued flow of the first polymer stream and to permit flow of a second polymer stream into the nozzle central channel. In a preferred embodiment, this second polymer stream will form the other surface layer of the injection molded article, preferably the outside surface layer. The valve means may be moved, as just described, to permit the first polymer stream to begin to flow before the second polymer stream. Alternatively, flow of the first and second polymer streams may be commenced substantially simultaneously, meaning that the flows begin either at the same time or that a small time interval may exist after commencement of flow of the first polymer stream and before commencement of flow of the second polymer stream, or vice versa. Each of the alternatives is intended to be encompassed by movement of the valve means to the second and third positions. The valve means is then moved to a fourth position to permit continued flow of the first and second polymer streams, and to permit flow of a third polymer stream into the nozzle central channel between the first and second streams. In a preferred embodiment, the third polymer stream will form an internal layer in the injection molded article, between the inside surface layer and the outside surface layer. Precise and repeatable control of the flow of at least those three polymer streams through the central channel of each nozzle employed facilitates continuous, high-speed manufacture in a multi-nozzle machine of multi-layer, thin wall containers, particularly those in which there is an extremely thin, substantially continuous, internal layer such as an oxygen-barrier layer.

This invention includes methods of forming a plurality of substantially identical multi-layer injection molded plastic articles by injection of a substantially identical stream of polymeric materials from each of a plurality of co-injection nozzles, by feeding separately to each nozzle through the previously-mentioned substantially equal flow path feature, the melt material for each layer of the article to be formed, and substantially simultaneously positively effecting the blocking and unblocking of the nozzle orifices for the melt streams which form corresponding layers in the articles. While these corresponding streams are positively blocked and just prior to their being unblocked, they are pressurized with a common pressure source. The positive blocking and unblocking is effected with substantially identical valve means driven substantially simultaneously and identically in each co-injection nozzle.

This invention includes methods of forming a multi-polymer, multi-layer combined stream of materials in an injection nozzle such that the leading edges of the layers are substantially unbiased, by using the valve means in the central channel for independently and selectively controlling the flow from the orifices in various combinations, including to prevent flow from all of the orifices, prevent flow from the orifice for the internal layer or layers while allowing the flow of material for the inner layer from the third orifice, for the outer layer from the first orifice or from both of these orifices, and, while continuing to allow said flows, allowing material(s) for the internal layer or layers to flow. In addition, the flow through the third orifice may be reduced or prevented, and the flow through the second orifice may be terminated. The above methods can be successfully employed to form a container whose internal layer is encapsulated at the bottom of the container with a material for the outer layer which is the same as, interchangeable or compatible with the material for the inner layer.

The methods of this invention include utilizing polymer material melt stream flow directing or balancing means in nozzle flow stream passageways to control the thickness, uniformity and radial position of the layers in the combined stream in the nozzle.

The methods of this invention include forming a substantially concentric combined stream of at least three polymeric materials for injection as a shot continuously injected as it is formed into an injection cavity, to form a multi-layer article wherein the combined stream and shot have an outer melt stream layer of polymeric material for forming the outside layer of the article, a core melt stream of polymeric material for forming the inside layer of the article, and at least one intermediate melt stream layer of polymeric material for forming an internal layer of the article, by utilizing the valve means in the co-injection nozzle basically in the manners of the methods described above.

An alternative method of forming such a substantially concentric combined stream for injection as a shot continually injected as it is formed, involves utilizing the valve means in the nozzle means for preventing flow of polymer material from all of the orifices, preventing flow of polymer material through the second orifice while allowing flow of structural material through the first, the third or both the first and third orifices, then, allowing flow of polymer material through the second orifice while allowing material to flow through the third orifice, restricting the flow of polymer material through the third orifice while allowing the flow of material through the second orifice, and restricting the flow of polymer material through the second orifice while allowing flow of polymer material through the first or third orifices or both the first and third orifices to knit the intermediate layer material with itself through the core material and substantially encapsulate the intermediate layer in the combined stream and in the shot.

Another method of utilizing the valve means for forming an at-least-three layer combined stream in a nozzle involves preventing flow of polymer material through the intermediate or internal orifice while allowing flow of polymer structural material through the first orifice, the third orifice or both the first and third orifices, then allowing flow of polymer material through the second orifice while allowing material to flow through the third orifice, reducing the flow of polymer material through the third orifice while allowing polymer material to flow through the second orifice, terminating the flow of polymer material through the second orifice, and allowing flow of polymer material only through the first orifice while preventing flow of polymer material from the second and third orifices to substantially encapsulate the intermediate polymer material in the combined stream.

Another method included within the scope of this invention is injection molding, by use of a multi-coinjection nozzle, multi-cavity injection molding apparatus, an at-least three layer multi-material plastic container having a sidewall thickness below its marginal end portion of from about .010 inch to about .035 inch, preferably from about .012 inch to about .030 inch (0.25 to 0.29, preferably 0.31 to 0.76 mm).

In the preferred embodiments of this invention wherein an even number of at least four co-injection nozzles are provided in the runner means of this invention, one at each corner of a substantially square or rectangular pattern, the methods include the steps of bringing the separate polymer material streams close to each other in a pattern in substantially the same horizontal and axial plane wherein they are transaxially offset from each other and axially offset just to the rear of and between the four nozzles and directing each flow stream to each of the four respective nozzles.

In the methods of this invention wherein the apparatus includes eight nozzles, and they are aligned in a pattern of two rows each having four nozzles therein, each of the respective rows being positioned along one of the elongated sides of a rectangular pattern, the steps preferably include bringing the separate flow streams of polymer material into substantially horizontal alignment along a plane centered in the rectangle axially offset and just to the rear of and between the parallel rows of four nozzles, then into horizontally and axially respectively displaced alignment, then outward towards the narrow ends of the rectangle to the center of each of the upper and lower patterns of four nozzles, T-splitting at each side center each of the polymer streams into two opposite horizontal streams each of which extends to a point between the point at which the streams were T-split and the respective adjacent two nozzles on either side of the pattern, and, at such latter point Y-splitting the respective streams into a Y-pattern of diagonal streams, and directing each stream to each of respective co-injection nozzles of the eight co-injection nozzles injection molding apparatus.

Another method of this invention for forming a five layer plastic container having a side wall of the aforementioned thickness comprises, providing a source of supply for each polymer material which is to form a layer of the container, providing a means for moving each polymer material to each of the nozzles, moving each material that is to form a layer of the article from the moving means to the respective nozzles, combining the separately moved materials in each of the respective nozzles, and injecting the combined flow stream through each injection nozzle into a juxtaposed cavity to form the multi-layer, multi-material container. Still another method of forming such a container having such a side wall thickness comprises, providing a source of supply and a source of polymer flow movement for each polymer melt material, channelling each polymer material flow stream from its source of flow movement separately to each nozzle, and providing valve means operative in each of the respective co-injection nozzles and utilizing the valve means in each of said co-injection nozzles in the combining of the separately channelled flow streams.

In preferred practices of the present methods, the production of such containers and other desired containers is greatly enhanced by imparting pressure to at least the third polymer stream prior to, or concurrently with, moving the valve means to the fourth position. In a further preferred practice of the method of the present invention, pressure is also imparted to at least one of the first and second polymer streams, and, prior to or concurrent with moving the valve means to the fourth position, the pressure of one or more of the first, second and third polymer streams is adjusted so that the pressure of the third stream is greater than the pressure of at least one of the first and second streams. In a particularly preferred practice of the method of the present invention, pressure is imparted to the first, second and third polymer streams, and, prior to or concurrent with moving the valve means to the fourth position, the pressure of the third polymer stream is increased and the pressure of at least one of the first and second streams is reduced, whereby the pressure of the third polymer stream is greater than the pressure of at least one of the first and second streams when the valve means is moved to the fourth position. The method of the present invention induces a sufficient initial rate of flow of the polymer streams, and particularly of the annular polymer stream (or streams) which forms an internal layer (or layers) in the injection molded article, substantially uniformly around the circumference of the orifice through which the polymer flows into the central channel of the nozzle.

This invention includes methods of initiating the flow of a melt stream of polymeric material substantially simultaneously from all portions of an annular passageway orifice into the central channel of a multi-material co-injection nozzle, comprising, providing a polymeric melt material in the passageway while preventing the material from flowing through the orifice into the central channel (preferably with physical means such as the valve means of this invention), flowing a melt stream of another polymeric material through the central channel past the orifice, subjecting the melt material in the passageway to pressure which at all points about the orifice is greater than the ambient pressure of the flowing stream at circumferential positions which correspond to the points about the orifice, the pressure being sufficient to obtain a simultaneous onset flow of the pressurized melt material from all portions of the annular orifice, and, allowing the pressurized material to flow through the orifice to obtain said simultaneous onset flow. Preferably, the material pressurized is that which will form the internal layer of a multi-layer article injected from the nozzle, the subjected pressure is uniform at all points about the orifice, and the orifice has a center line which is substantially perpendicular to the axis of the central channel. During the allowing step there is preferably included the step of continuing to subject the material in the passageway to a pressure sufficient to establish and maintain a substantially uniform and continuous steady flow rate of material simultaneously over all points of the orifice into the central channel. The subjected pressure is sufficient to provide the onset flow of the internal layer material with a leading edge sufficiently thick at every point about its annulus that the internal layer in the marginal end portion of the side wall of the article formed is at least 1% of the total thickness of the side wall at the marginal end portion. These methods can be employed for pressurizing the runner system of a multi-material co-injection nozzle, multi-polymer injection molding machine having a runner system for polymer melt materials which extends from sources of polymeric material displacement to the orifices of a multi-material co-injection nozzle. In pressurizing the runner system, the pressure subjecting step is preferably effected in two stages, first by providing a residual pressure lower than the desired pressure at which the material is to flow through the blocked orifice, and then before or upon effecting the allowing step, raising the level of pressure to the desired pressure at which the internal layer material is to flow through the orifice. The pressure raising step may be executed gradually but preferably rapidly, just prior to or upon effecting the allowing step.

This invention includes methods of prepressurizing the runner system of a unit-cavity or multi-cavity multi-polymer injection molding machine for forming injection molded articles, having a runner system for polymer melt materials which extends from sources of polymer melt material displacement to the orifices of a co-injection nozzle having polymer melt material passageways in communication with the orifices which, in turn, communicate with a central channel in the nozzle, which in some embodiments basically comprises, blocking an orifice with physical means to prevent material in the passageway of the orifice from flowing into the central channel, and, while so blocking the orifice, retracting the polymer melt material displacement means, filling the resulting volume in the runner system with polymer melt material from a source upstream relative to the polymer melt material displacement means and external to the runner system, the amount of retraction and the pressure of the polymer melt with which the volume is filled being calculated to be just sufficient to provide that layer's portion of the next injection molded article and the pressure of the volume-filling melt being designed to generate in the runner system a residual pressure sufficient to increase the time response of the polymer melt material in the runner system to subsequent movements of the source of polymer melt material displacement means, and prior to unblocking the orifice, displacing the polymer melt material displacement means towards the orifice to compress the material further and raise the pressure in the runner system to a level greater than the residual pressure and sufficient to cause when the orifice is unblocked, the simultaneous onset flow. These methods can also be effected while the orifice is blocked, by moving melt material into the portion of the runner system extending to the blocked orifice, discerning the level of residual pressure of the polymer melt material moved into said portion of the runner system, and displacing the melt material in the runner system towards the orifice to compress the material and raise the pressure in the runner system to a level greater than the residual pressure and sufficient to cause the simultaneous and preferably uniformly thick onset flow.

Another prepressurization method of this invention is for forming a multi-layer plastic article having a marginal edge or end portion, first and second surface layers, and at least one internal layer therebetween, in an injection cavity of an injection molding machine such that the leading edge of the internal layer extends substantially uniformly into and about the marginal edge or end portion, by applying the aforementioned method of prepressurizing the internal layer material, flowing the first surface layer material through the central channel while blocking the internal layer material orifice, flowing the second surface layer material as an annular stream about the first surface layer material, unblocking the orifice, and flowing the prepressurized internal layer material into the central channel into or onto the interface of the flowing first and second surface materials such that the internal layer material has a rapid initial and simultaneous onset flow over all points of its orifice and forms an annulus about the flowing first surface layer material between it and the second surface layer material, and such that the leading edge of the annulus of the internal layer material lies in a plane substantially perpendicular to the axis of the central channel, and, injecting the combined flow stream of the inner, second and internal layer materials into the injection cavity in a manner that places the leading edge of the internal layer material substantially uniformly into and about the marginal edge portion of the article. The method can include increasing the rate of displacement of the internal layer polymer melt material as its orifice is unblocked to approach and maintain a substantially steady flow rate of it through the orifice. This method can place the leading edge within the marginal edge or end portion of articles, parisons and containers.

Another method utilizes pressurization for controlling the final lateral location of the internal layer material within the multi-layer wall of an injected parison, by positively controlling the flow and non-flow of the streams which form the outer and internal layers through their orifices by moving the streams past flow balancing means in the nozzle passageways for there selectively and respectively providing desired design flows for each of said streams of polymeric materials, and displacing the respective outer and internal layer materials and the inner layer materials through their respective passageways to thereby achieve their respective desired design flows, to place the annuluses of the respective materials uniformly radially in the combining area, and to thereby control the radial location of the internal layer material in the combined injected material flow stream in the combining area of each nozzle and in each injection cavity. This method can include physically blocking the orifices of the outer and internal layer materials, prepressurizing the outer and internal layer materials in their passageways while their orifices are blocked such that when the orifices are unblocked, the transient times required to reach the desired design flows are reduced and the volumetric flows of the outer and internal structural materials into the combining area are controlled. With respect to this method, a uniform start of the flow of the outer structural material and the internal layer material past all points of its passageway orifice into the nozzle central channel can be effected. By practicing these methods, there can be maintained a continuous flow in arms of velocity and volumetric rate of all of the materials during most of the injection cycle. The pressurizing step can be effected during the displacing step by utilizing a source of material displacement for subjecting the polymer melt material for the outer layer while it is in its blocked passageway to a first pressure which would be sufficient to cause the material to flow into the central channel if its orifice was unblocked, and prior to allowing flow of the outer layer material through its orifice, moving the source of polymer displacement and thereby subjecting said outer layer material to a second pressure greater than the first pressure and sufficient to create, when its orifice is unblocked, a surge of said material and a uniform onset of annular flow of polymer material over all points of its orifice into the central channel when the flow stream is considered relative to a plane perpendicular to the axis of the central channel, said second pressure being less than that which would cause leakage of polymer material past the means which is blocking flow of material into the channel, and, during and after the unblocking of the orifice for the material which is to form the outer layer, changing the rate of movement of the source of polymer displacement to approach and maintain a desired design substantially steady flow rate of said material through the first orifice into the central channel. This method can also include leaving the orifice for the outer structural material unblocked for a time sufficient for effecting and maintaining a continuous, uniform rate and volume of flow of the outer material during 90% of the injection cycle.

This invention includes methods of pressurization which are effected without the use of physical means for blocking an orifice, to obtain a substantially uniform onset flow over the orifice. One method comprises subjecting the internal layer material to a pressure equal to or just below the ambient pressure of the materials flowing in the central channel, and effecting a rapid change in pressure between the pressure of that material relative to the ambient pressure, to cause the internal layer material to establish the desired substantially uniform onset flow.

A method of pressurizing included in this invention involves preventing a condensed phase polymeric material from flowing through an orifice, and prior to allowing the material to flow through the orifice, subjecting the material to a high initial pressure at least about 20% greater than necessary to cause it to flow into the central channel and sufficient to densify the material adjacent the orifice to a density of about 2% to about 5% or more greater than atmospheric density. The level of prepressurization imparted can be greater than, preferably about 20% or more higher than the ambient pressure of the materials flowing in the central channel.

This invention includes methods of utilizing pressurization in combination with flow directing and balancing means to control the radial location of an internal layer in the article. A prepressurized material is allowed to flow at a controlled rate past flow directing means such that the material achieves its desired design flow and places the leading annulus of the material uniformly radially in the combining area of the central channel and in the side wall of the injected article.

This invention includes methods of pressurization wherein during and after the unblocking of an orifice of a prepressurized material, the rate of movement of the ram for the flowing material is increased to approach and maintain a desired design steady flow rate of the material through the orifice into the central channel.

This invention includes methods of providing and maintaining uniform thickness about and along the annuluses of the materials flowing in the nozzle central channel by subjecting the material in its passageway to a first pressure sufficient to cause the material to flow into the central channel if its orifice was not blocked, subjecting the material to a second pressure greater than the first and sufficient to provide substantially uniform onset flow over the orifice, unblocking the orifice to provide an onset flow whose leading edge is in a vertical plane relative to the axis of the central channel, and maintaining the second pressure for preferably from about 10 to about 40 centiseconds to maintain a steady flow of the material into the central channel.

This invention includes methods of co-injecting a multi-layer flow stream comprised of at least three layers into an injection cavity in which the speed of flow of the layered stream is highest on the fast flow streamline positioned intermediate the boundaries of the layered stream. The methods include establishing the flow of material of a first layer and the flow of a second layer of the flow stream adjacent to the first to form an interface between the flowing materials, positioning the interface at a first location not coincident with the fast flow streamline, interposing the flow of material of a third layer of the flow stream between the first and second layers at a location not coincident with the fast flow streamline, and moving the location of the third layer to a second location which is either relatively more proximate to, or substantially coincident with the fast flow streamline, or which is across from and not substantially coincident with the fast flow streamline. The moving of the third layer to the second location can be effected at or shortly after the interposition of the third layer between the first and second layers, preferably at substantially all places across the breadth of the layered stream. The rates of flow of the first and second layer materials may be selected to position their interface to be non-coincident with the fast flow streamline, and after interposing the flow stream of the third layer in the interface, the relative rates of flow of the first and second layer materials may be adjusted to move the third layer to a location more proximate to, or substantially coincident with the fast flow streamline, or across the fast flow streamline to a location not coincident with the fast flow streamline. The third layer material may be moved from a fast flow streamline in the central channel that does not correspond to the fast flow streamline, to, relatively more proximate to, or across the fast flow streamline that does correspond to the fast flow streamline in the injection cavity. In the preferred method of this aspect of the invention, the interface is annular and the interposition of the third layer material is at substantially all places around the circumference of the annular interface.

This invention includes various methods of preventing, reducing and overcoming bias of portions of the terminal end of the internal layer during the formation of a multi-layer injection blow molded container, which, in certain embodiments involve folding over the biased portion of the terminal end to provide a substantially unbiased overall leading edge of said internal layer, such that the folded over portion and the unfolded portion of the marginal end portion is finally positioned in the side wall of the article in a substantially unbiased plane relative to the axis of the container.

The methods of preventing, reducing and overcoming bias include methods of preventing, reducing and overcoming time bias and velocity flow bias.

This invention includes injection molded multi-layer rigid plastic articles, parisons and containers and injection blow molded multi-layer rigid plastic articles and containers, made by the foldover methods of this invention. A terminal end portion of the internal layer is folded over within the article, usually within its side wall, and preferably its flange. The foldover can be towards the inside or outside of the article, parison or container. The container having the folded over internal layer may be open-ended or have an end closure or flexible lid secured thereto. Preferably, the leading edge of the internal layer is in a plane which is substantially unbiased relative to the axis of the container. In the containers of this invention, the terminal end of the internal layer is more removed from the terminal end of the container than is another adjacent directionally related marginal end portion of the internal layer. The containers of this invention include those wherein the terminal end of the folded over portion of the internal layer is more removed than the fold line is from the terminal end of the container, wherein there is less variation in the distance from the fold line to the terminal end of the container than from the terminal end of the internal layer to the terminal end of the container, and wherein the terminal end of the internal layer is more removed than the fold line is from the terminal end of the container.

This invention also includes injection molded multi-layer substantially rigid plastic articles including parisons and containers, and injection blow molded multi-layer substantially rigid plastic articles, including containers having side and bottom walls, and having at least five layers comprised of an outside surface layer, an inside surface layer, an internal layer, and first and second intermediate layers one on either side of the internal layer, wherein the terminal end of the internal layer encapsulated by intermediate layer material, whether it be solely or primarily by first or by both first and second intermediate layer material.

This invention further includes multi-layer injection molded or injection blow molded plastic containers whose side wall is comprised of at least three layers, wherein - the ratio of the internal layer thickness in the bottom wall relative to the total bottom wall thickness is on the average greater than the ratio of the internal layer thickness in the side wall relative to the total side wall thickness, - the bottom wall total thickness is less than the side wall total thickness and the thickness of the internal layer in the bottom wall is at least equal to the average thickness of the internal layer in the side wall, - the bottom wall total thickness is less than the total thickness of the side wall, and, in a central portion of the bottom wall, the internal layer thickness is greater than the average thickness of the internal layer in the side wall, or - the average bottom wall total thickness is less than the average side wall total thickness, and at least a portion of the internal layer is thicker in the bottom wall than the average thickness of the internal layer in the side wall.

### BRIEF DESCRIPTION OF THE DRAWINGS

Figure 1 is a front elevational view of an open ended plastic parison of this invention.
Figure 1A is a vertical section taken along line 1A-1A of Figure 1.
Figure 2 is a front elevational view of an open ended plastic container of this invention.
Figure 2A is a front elevational view partially in vertical section and with portions broken away, showing the container of Figure 2 having an end closure double seamed thereto.
Figure 3 is an enlarged horizontal section taken along line 3-3 of Figure 2A.
Figure 4 is an enlarged view of a vertical section taken through a portion of the bottom wall and side wall of the container of Figure 2A.
Figure 5 is a schematic enlarged vertical section as might be taken through a marginal end portion of the container of Figure 2.
Figure 6 is a schematic enlarged vertical section as might be taken through another marginal end portion of the container of Figure 2 wherein the marginal end portion of the internal layer or layers folded over toward the outside of the container.
Figure 7, a schematic enlarged vertical section similar to Figure 6, shows another embodiment wherein the marginal end portion of the internal layer or layers is folded over toward the inside of the container.
Figure 8 is a schematic view of an enlarged vertical section as might be taken through a container of this invention with layers not shown and with letter designations representing the container's overall dimensions.
Figure 8A is an enlarged schematic vertical section with layers not shown and with portions broken away, of the bottom of a container of this invention.
Figure 9 is an enlarged vertical section through a marginal end portion of a container of this invention having an end closure double seamed thereto.
Figures 9A through 9D are enlarged vertical sections through various embodiments of multi-layer plastic containers of this invention whose marginal end portions have an end closure double seamed thereto.
Figure 9A shows the marginal end portion of the internal layer or layers folded over in the flange toward the outside of the container.

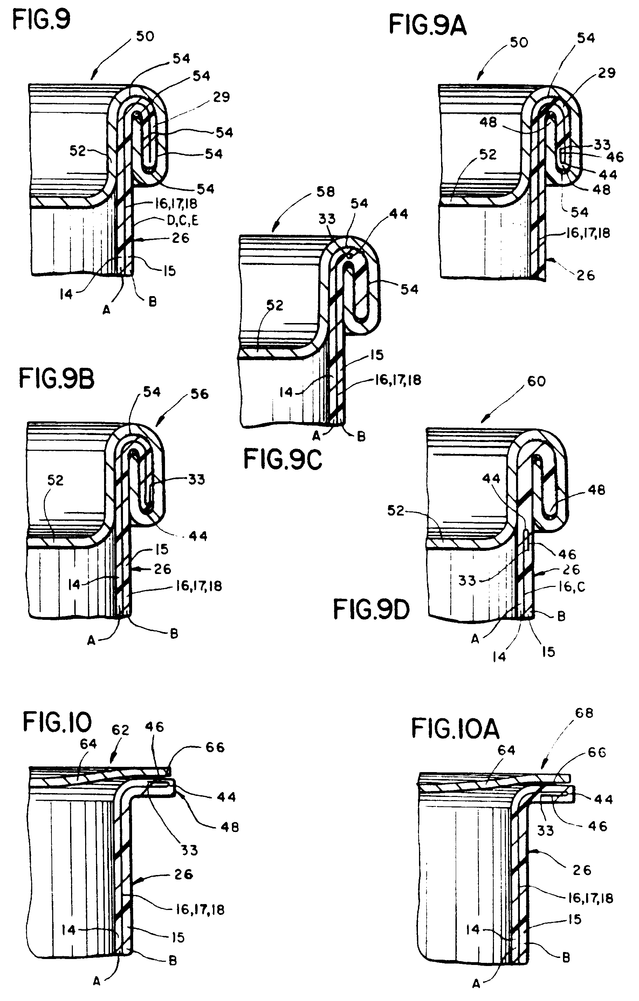

Figure 9B shows the marginal end portion of the internal layer or layers folded over in the flange toward the inside of the container.
Figure 9C shows the marginal end portion of the internal layer or layers in the arcuate portion of the top end of the container side wall, folded over toward the outside of the container.
Figure 9D shows the marginal end portion of the internal layer or layers in the marginal end portion of the container side wall near the bottom of the double seam, folded over toward the outside, of the container.
Figures 10 and 10A show enlarged vertical sections through embodiments of the multi-layer plastic containers of this invention having a flexible lid sealed to the container flange.
Figure 10 shows the marginal end portion of the internal layer or layers in the flange folded over toward the inside of the container.
Figure 10A shows the marginal end portion of the internal layer or layers in the flange folded over toward the outside of the container.

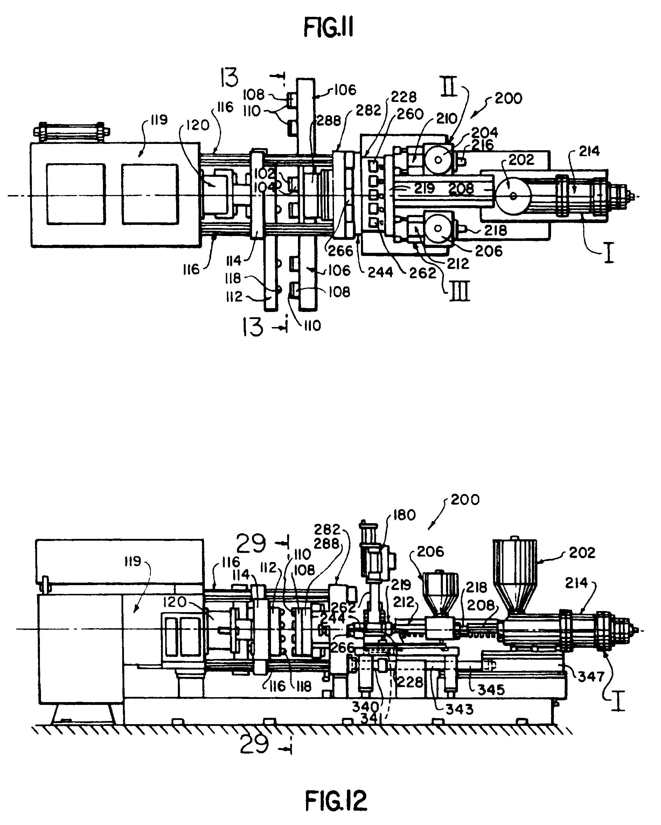

Figure 11 is a top plan view of an injection blow molding line which includes apparatus of this invention.
Figure 12 is a side elevational view of the injection blow molding line of Figure 11.

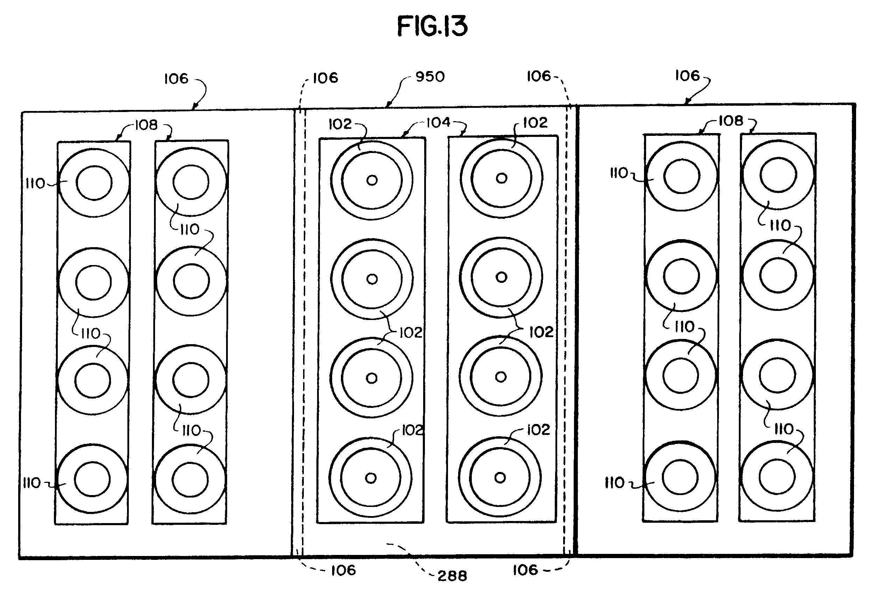

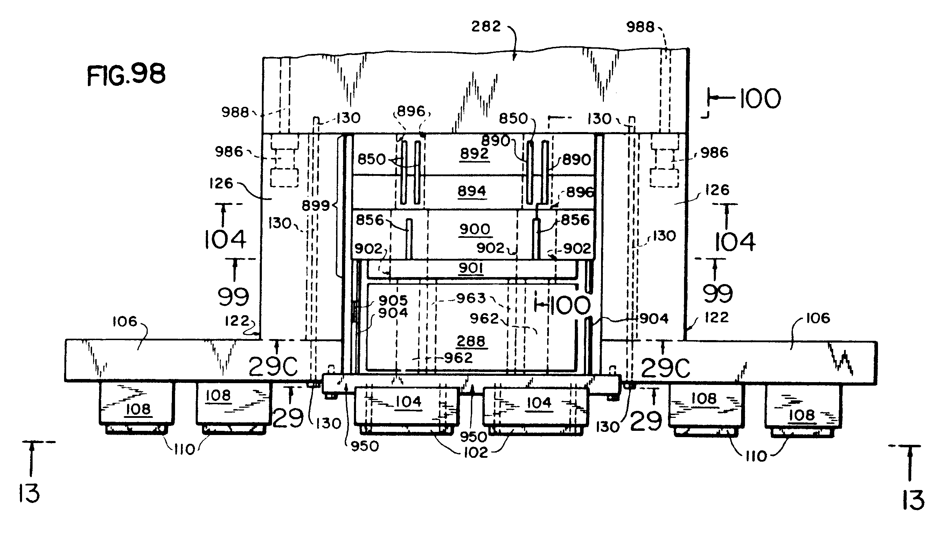

Figure 13 is an elevational view of a portion of the apparatus with portions omitted, as would be seen along line 13-13 of Figure 11 or of Figure 98.

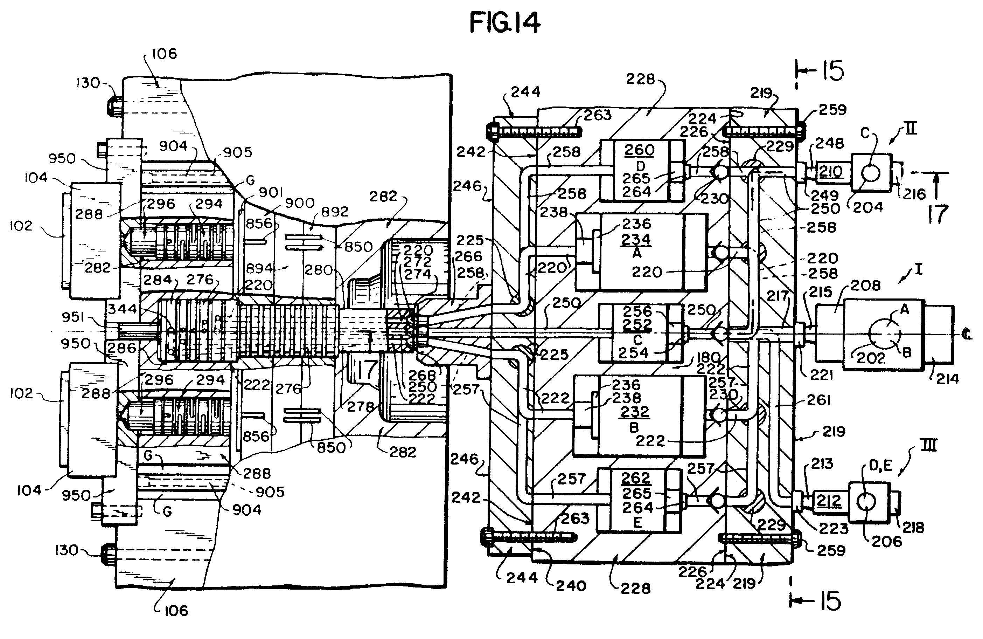

Figure 14 is a top schematic view, with portions broken away and portions in horizontal cross-section at different levels, showing the right portion of the apparatus of Figure 11.

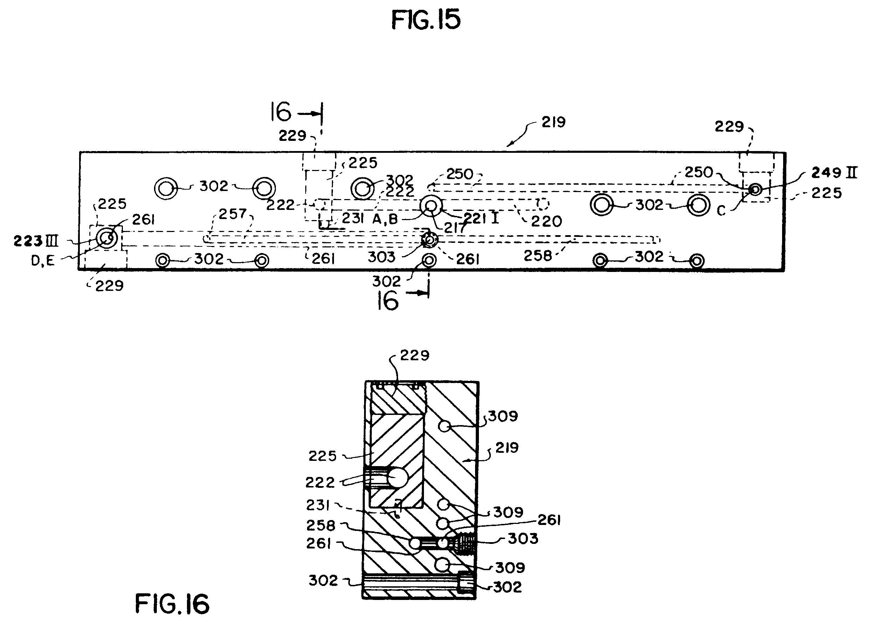

Figure 15 is an elevational view basically as would be seen along line 15-15 of Figure 14.
Figure 16 is a vertical section taken along line 16-16 of Figure 15.

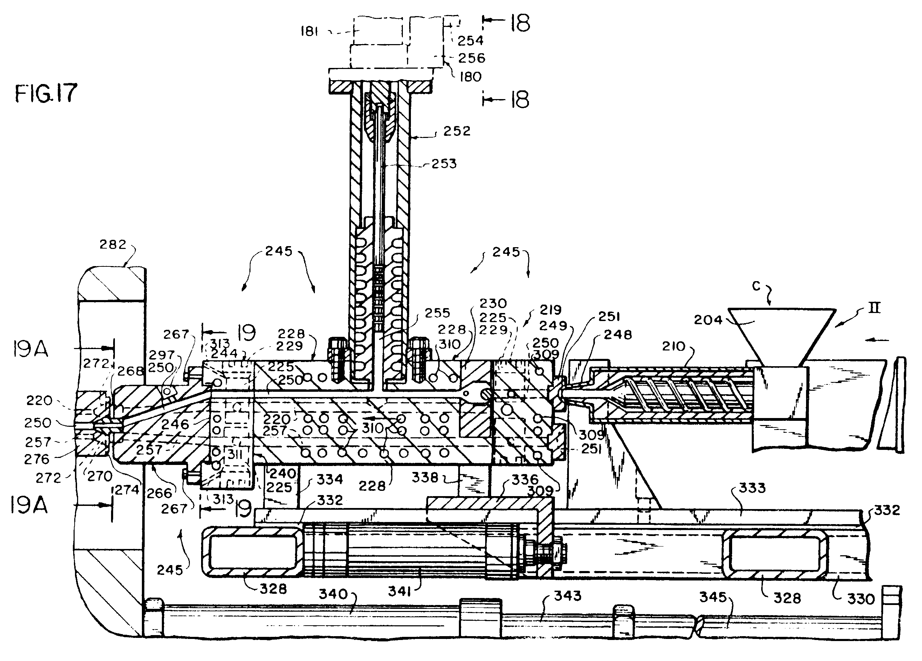

Figure 17 is a vertical section taken along line 17-17 of Figure 14.

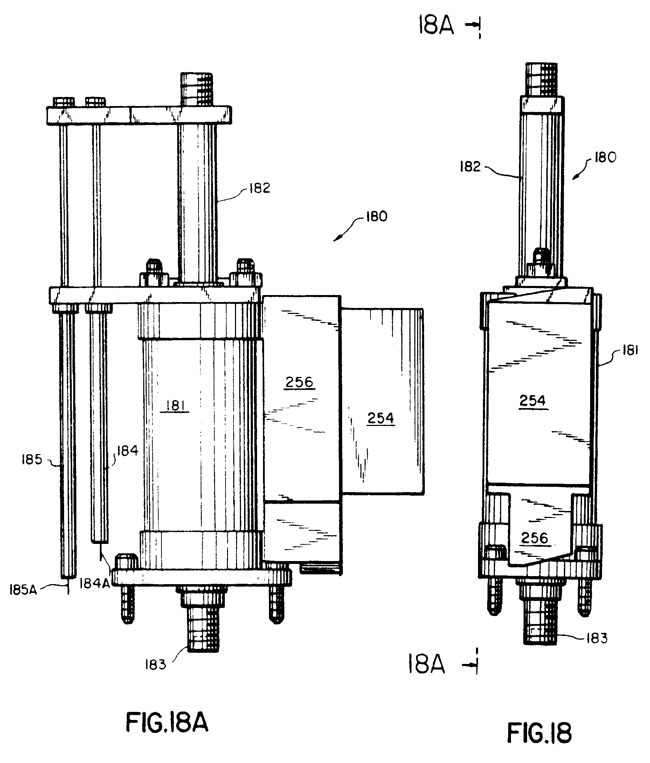

Figure 18 is a side elevational view taken along line 18-18 of Figure 17.
Figure 18A is a side elevational view taken along line 18A-18A of Figure 18.

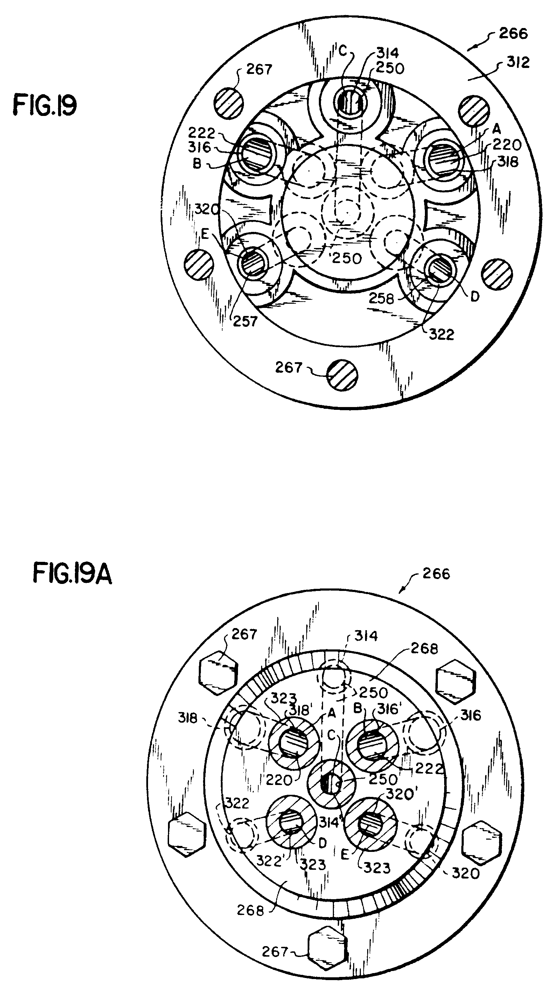

Figure 19 is an elevational view with portions in section, taken along line 19-19 of Figure 17.
Figure 19A is an elevational view with portions in section, taken along line 19A-19A of Figure 17.

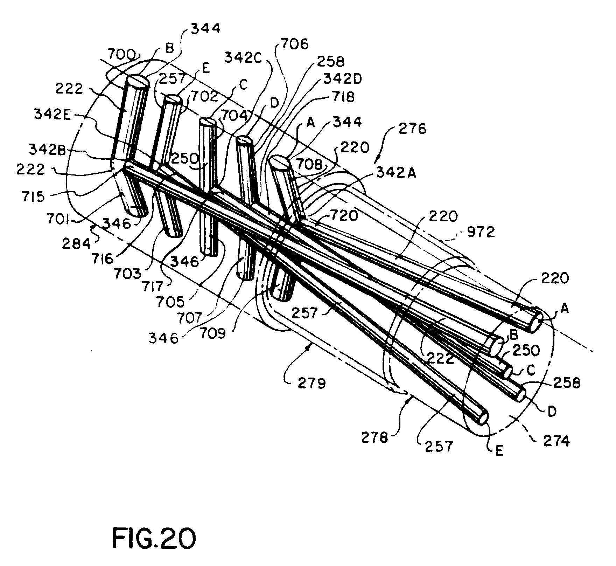

Figure 20 is a perspective view, with portions broken away, of the runner extension shown in Figure 14.

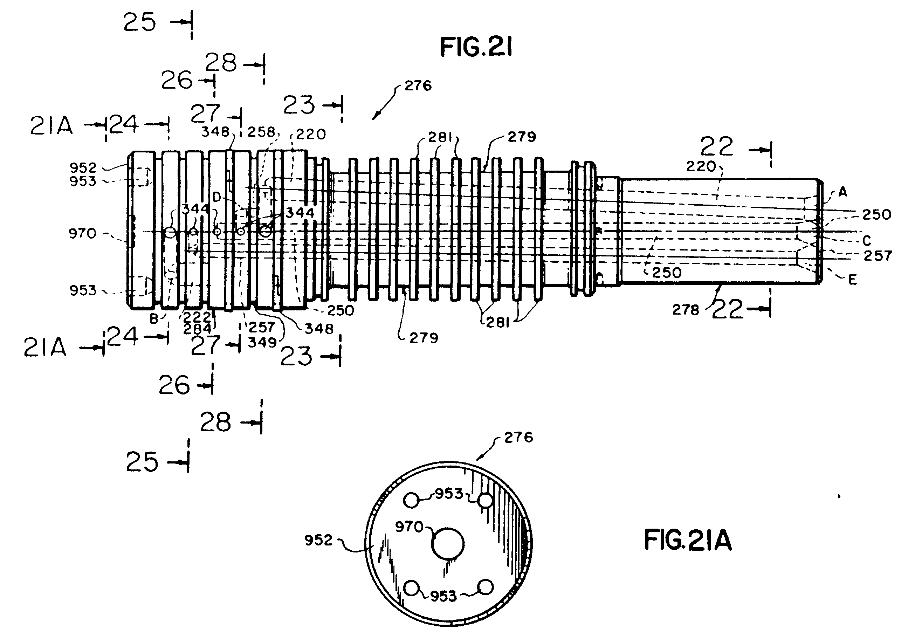

Figure 21 is an enlarged top plan view of the runner extension shown in Figure 14.
Figure 21A is an end view of the forward end of the runner extension of Figure 21.

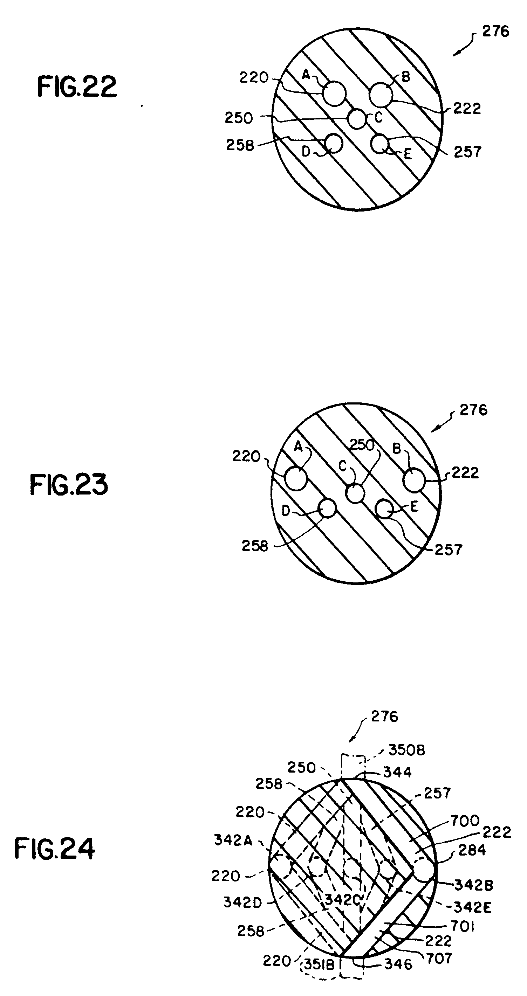

Figure 22 is a vertical section taken along line 22-22 of Figure 21.
Figure 23 is a vertical section taken substantially along line 23-23 of Figure 21.
Figure 24 is a vertical section taken substantially along line 24-24 of Figure 21.

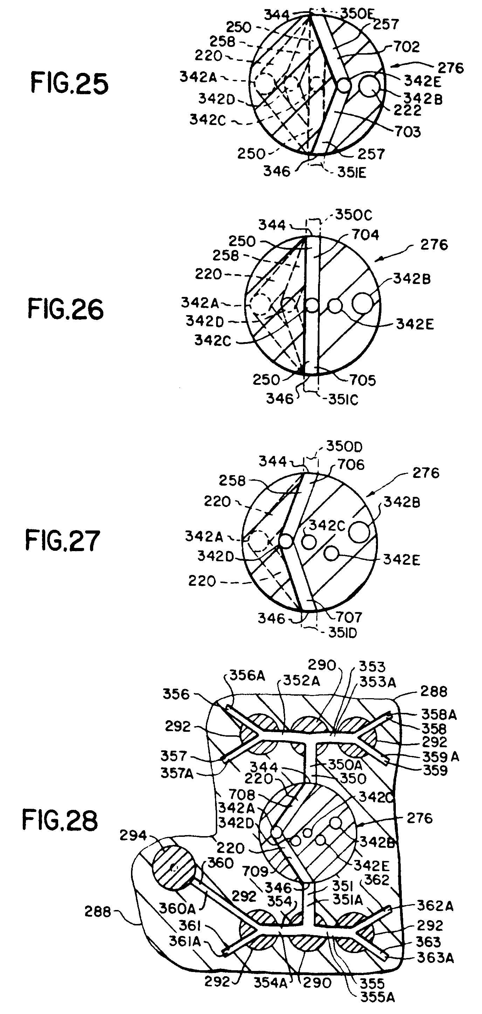

Figure 25 is a vertical section taken substantially along line 25-25 of Figure 21.
Figure 26 is a vertical section taken substantially along line 26-26 of Figure 21.
Figure 27 is a vertical section taken substantially along line 27-27 of Figure 21.

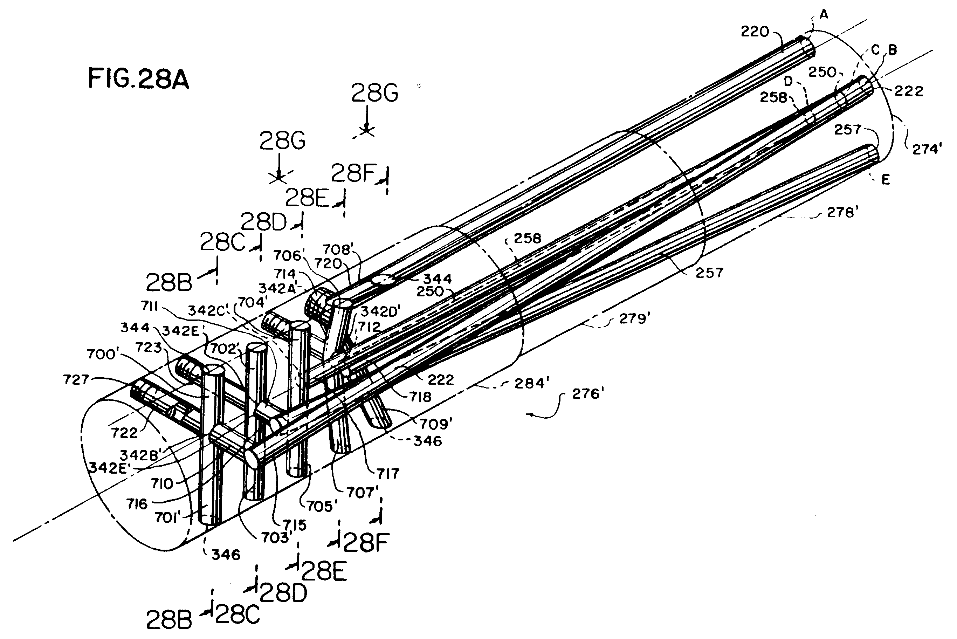

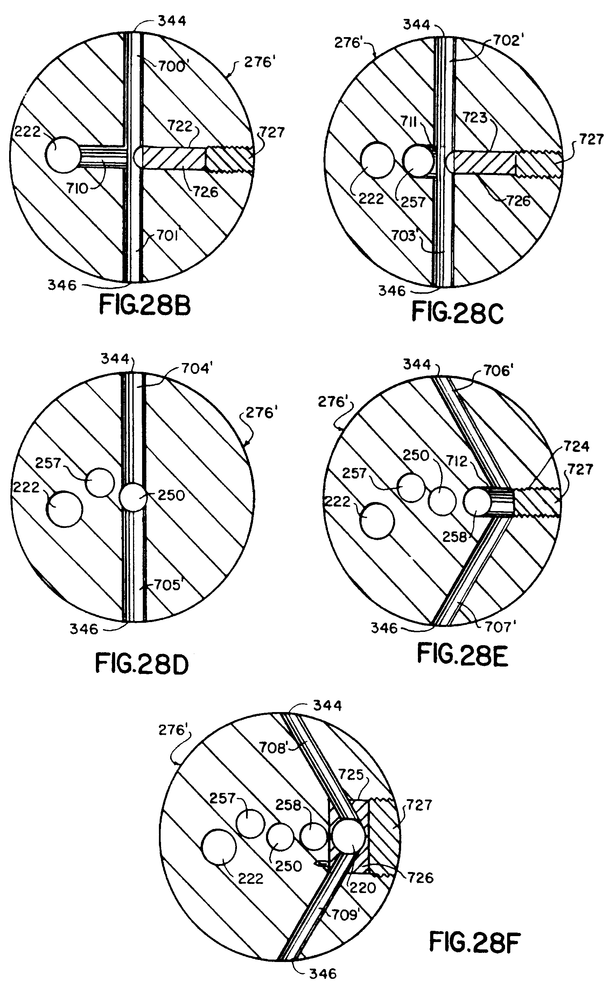

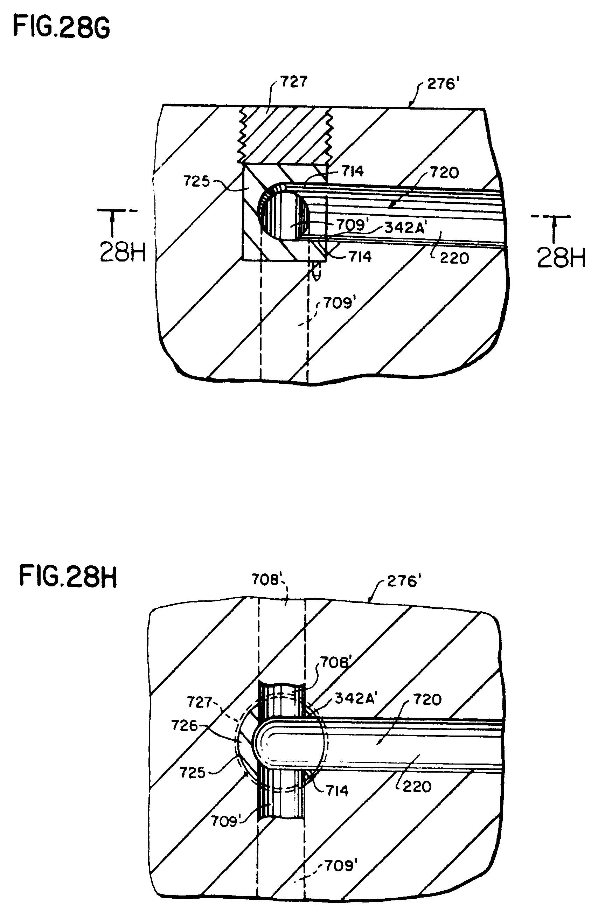

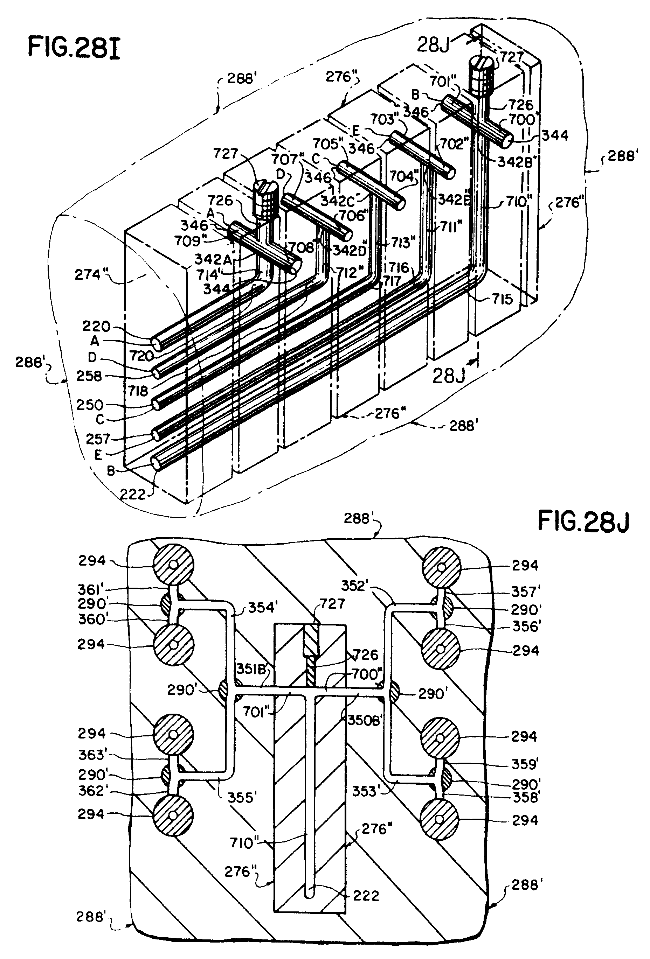

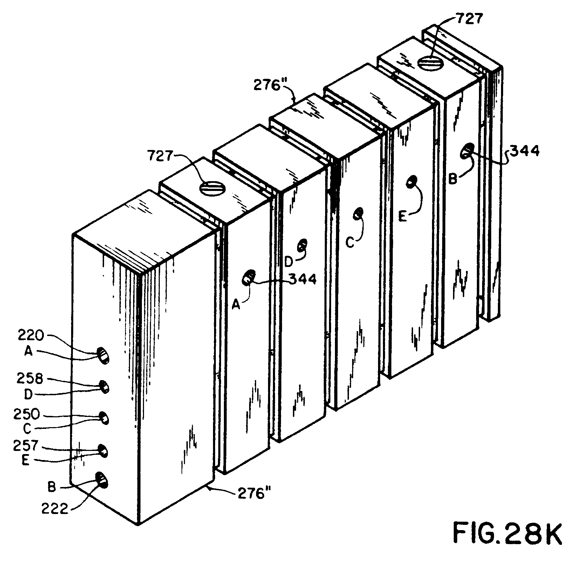

Figure 28 is a vertical section taken substantially along line 28-28 of Figure 21, but additionally shown within a vertical section (with portions broken away) of the runner block of this invention.
Figure 28A is an enlarged perspective view of another embodiment of the runner extension of this invention.
Figure 28B is a vertical section taken along line 28B-28B of Figure 28A.
Figure 28C is a vertical section taken along line 28C-28C of Figure 28.
Figure 28D is a vertical section taken along line 28D-28D of Figure 28.
Figure 28E is a vertical section taken along line 28E-28E of Figure 28.
Figure 28F is a vertical section taken along line 28F-28F of Figure 28.
Figure 28G is a horizontal diametrical section with portions broken away, taken substantially along a line represented by 28G-28G of Figure 28.
Figure 28H is a vertical section with portions broken away taken along line 28H-28H of Figure 28G.
Figure 28I is a perspective view of another embodiment of the runner extension of this invention, shown partially in phantom within a portion of a runner block, also shown in phantom.
Figure 28J is a vertical section with portions broken away showing the runner extension embodiment of Figure 28I within a portion of a runner block of this invention.
Figure 28K is a perspective view of the runner extension embodiment of Figure 28I and 28J.

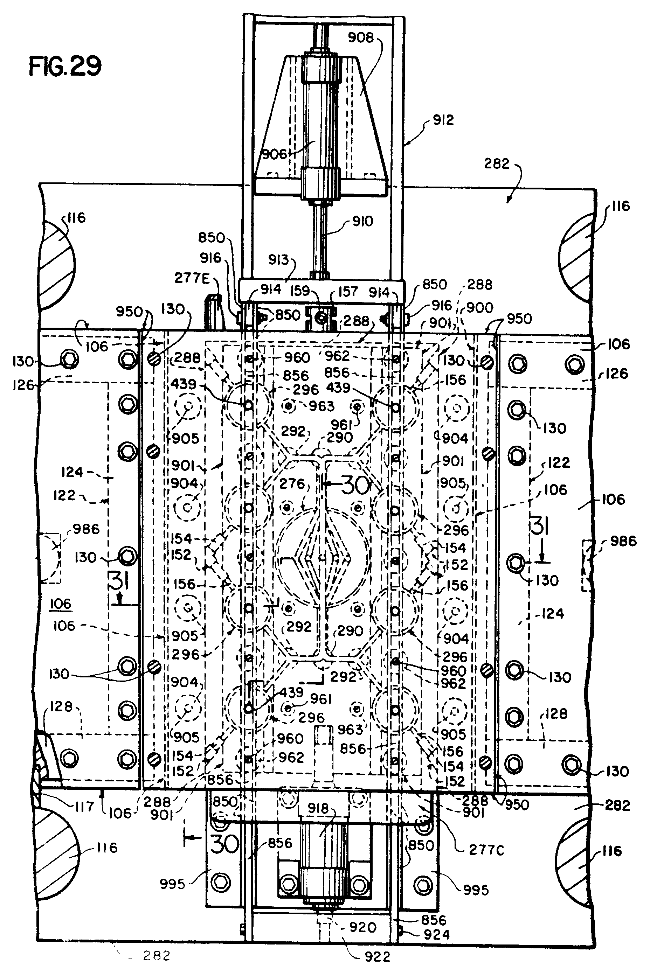

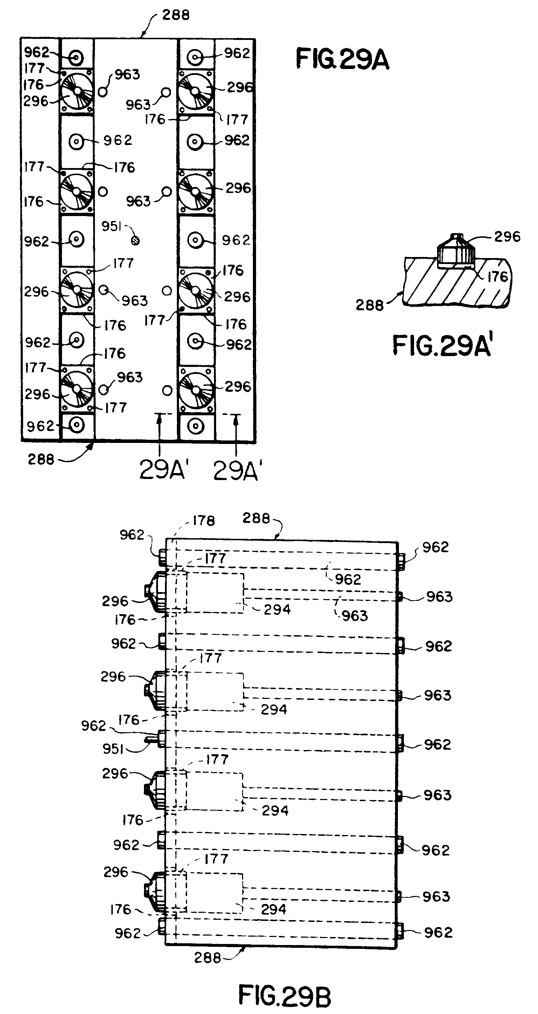

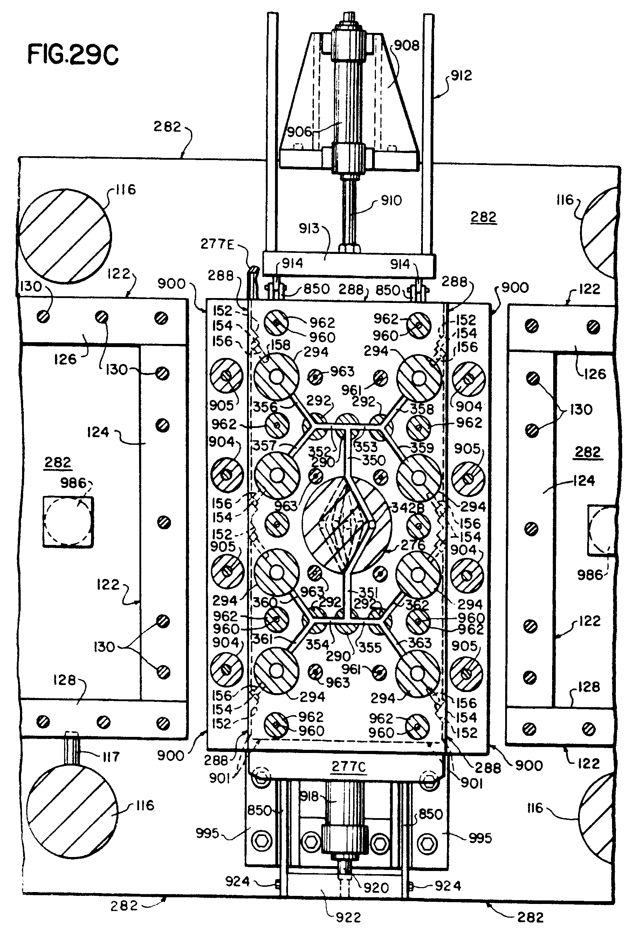

Figure 29 is a front view partially in elevation, partially in vertical section (with section lines not shown for clarity), and with portions broken away, taken substantially along line 29-29 of Figure 98.
Figure 29A is a front elevational view of the runner block of this invention having eight co-injection nozzles mounted therein, as would be seen in Figure 98 with the injection cavity bolster plate 950 and its attached structure removed.
Figure 29A' is a vertical section taken along line 29A'-29A' of Figure 29A.
Figure 29B is a side elevational view of the runner block of Figure 29A.
Figure 29C is a front view with portions in elevation, portions in vertical section (with some section lines omitted for clarity) and portions broken away taken through the runner block along line 29C-29C of Figure 98.

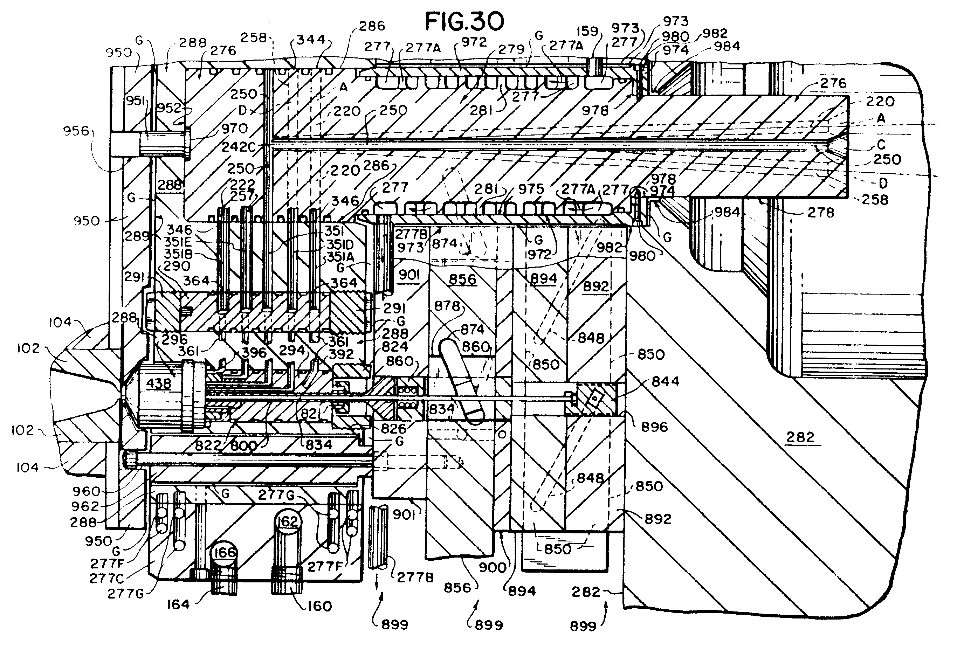

Figure 30 is a vertical section taken substantially along line 30-30 of Figure 29, showing the forward portion of the apparatus of this invention.

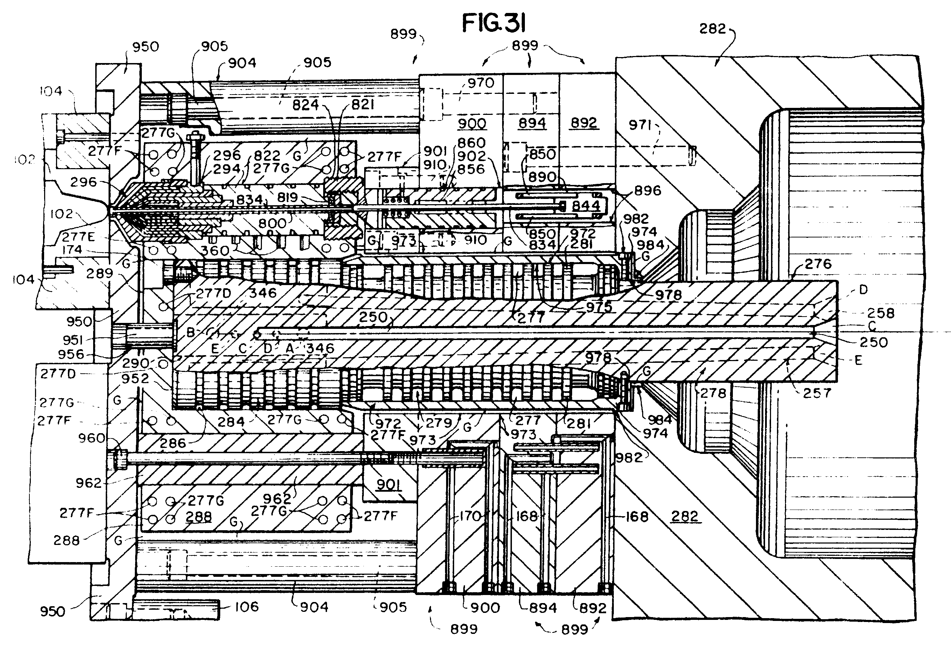

Figure 31 is a top horizontal sectional view taken substantially along line 31-31 of Figure 29, through the second from the bottom nozzle in the left column of nozzles in Figure 29.

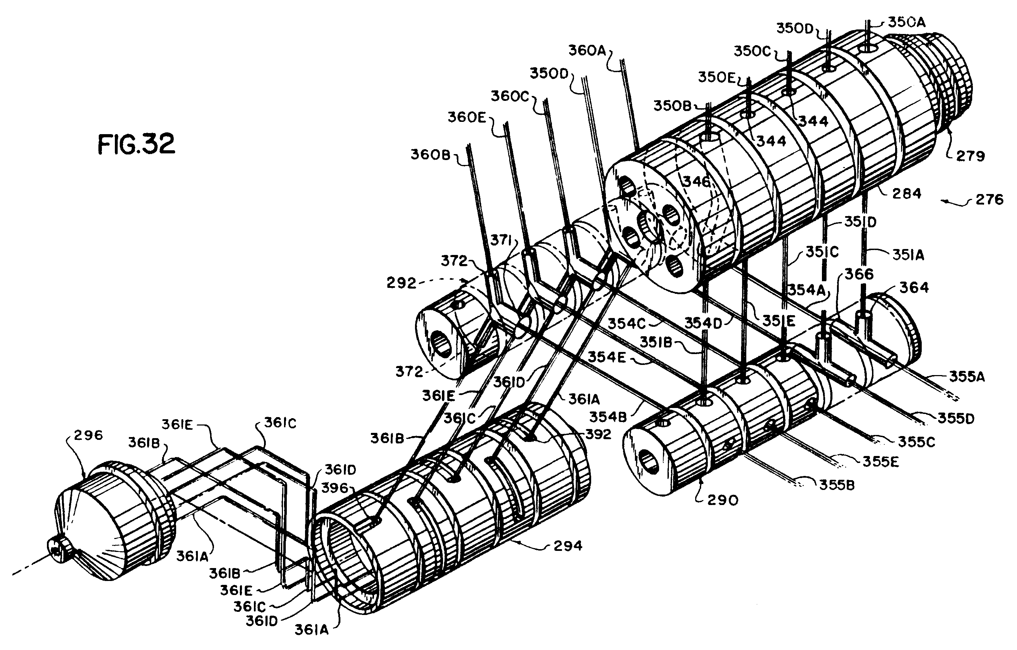

Figure 32 is an exploded perspective view showing the positional relationship in a runner block (not shown) of the runner extension, the T-splitter, Y-splitter, and feed block, as shown in the lower left portion of Figure 29C.

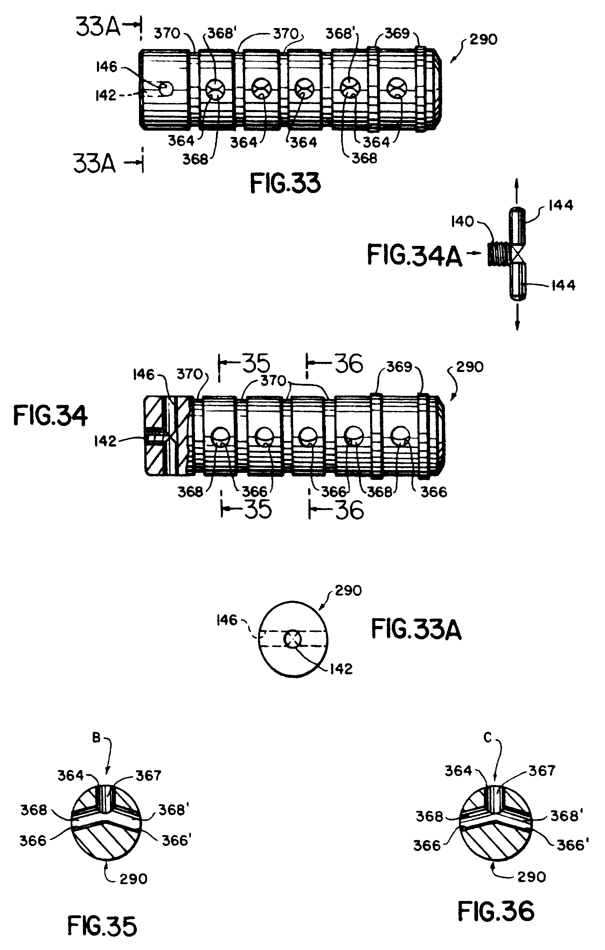

Figure 33 is a top plan view of the T-splitter shown in Figures 29, 30 and 32.
Figure 33A is a view of the forward face of the T-splitter of Figure 33.
Figure 34 is a side elevational view of the T-splitter shown in Figures 30, 32 and 33.
Figure 34A is an elevational view of pins and set screw which fit within bores in the left side of the T-splitter of Figures 33 and 34.
Figure 35 is a vertical section taken along line 35-35 of Figure 34.
Figure 36 is a vertical section taken along line 36-36 of Figure 34.

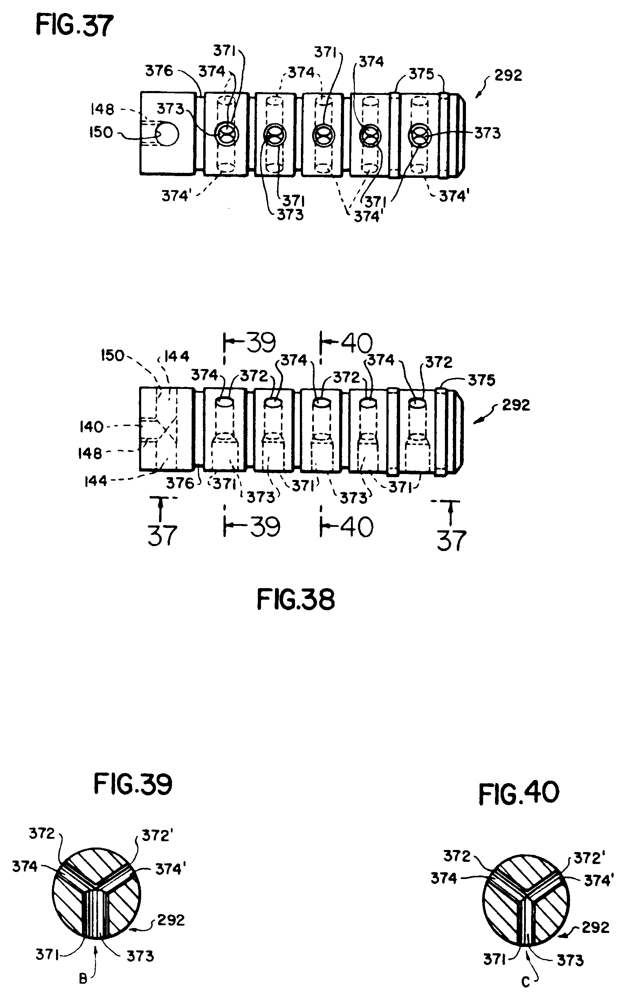

Figure 37 is a side elevational view of the Y-splitter shown in Figure 32.
Figure 38 is a top plan view of a Y-splitter having its entrance holes aligned at the six o'clock position.
Figure 39 is a vertical section taken along line 39-39 of Figure 38.
Figure 40 is a vertical section taken along line 40-40 of Figure 38.

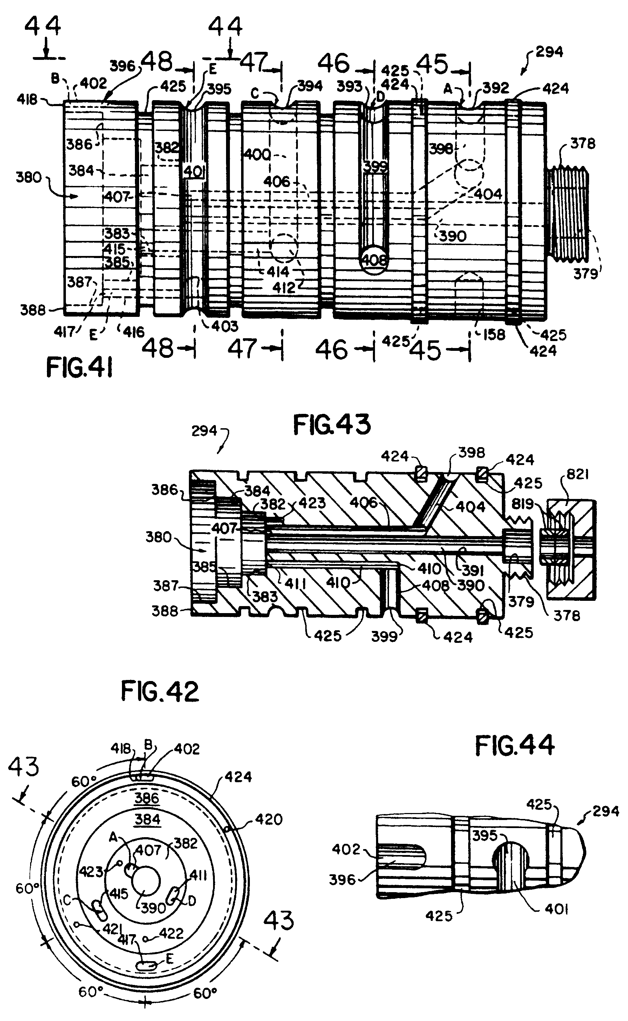

Figure 41 is a side elevational view of the feed block shown in Figure 32 rotated to have its inlets aligned at the twelve o'clock position.
Figure 42 is an end view of the forward end of the feed block of Figure 41.
Figure 43 is a vertical section taken along line 43-43 of Figure 42.
Figure 44 is an enlarged view with portions broken away as would be seen along line 44-44 of Figure 41.

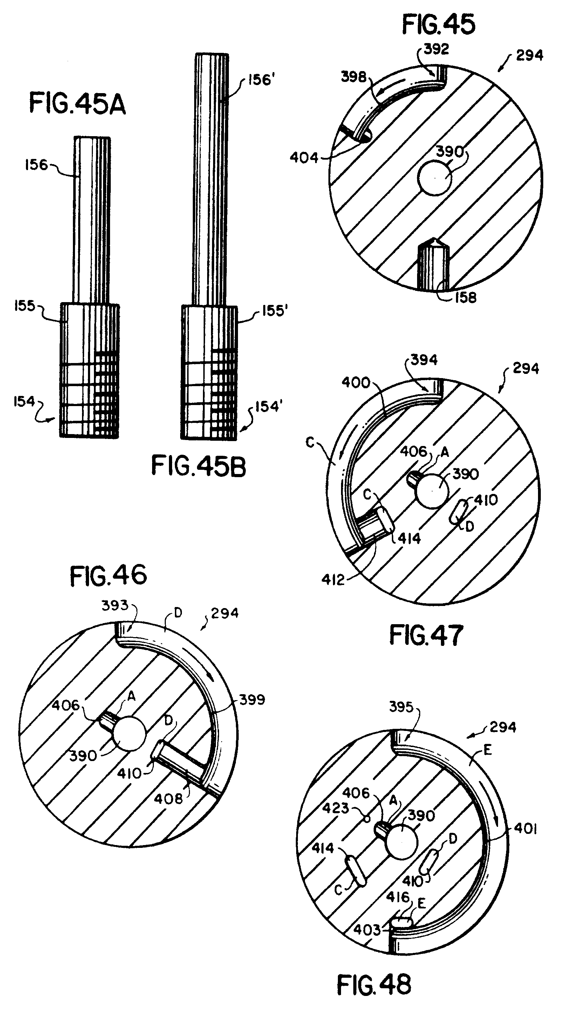

Figure 45 is a vertical section taken along line 45-45 of Figure 41.
Figure 45A is an enlarged side elevational view of a plug 154 for bore 152 In the runner block and hole 158 in the feed block.
Figure 45B is an enlarged side elevational view of another plug 154' similar to plug 154 in Figure 45A but having a larger nose.
Figure 46 is a vertical section taken along line 46-46 of Figure 41.
Figure 47 is a vertical section taken along line 47-47 of Figure 41.
Figure 48 is a vertical section taken along line 48-48 of Figure 41.

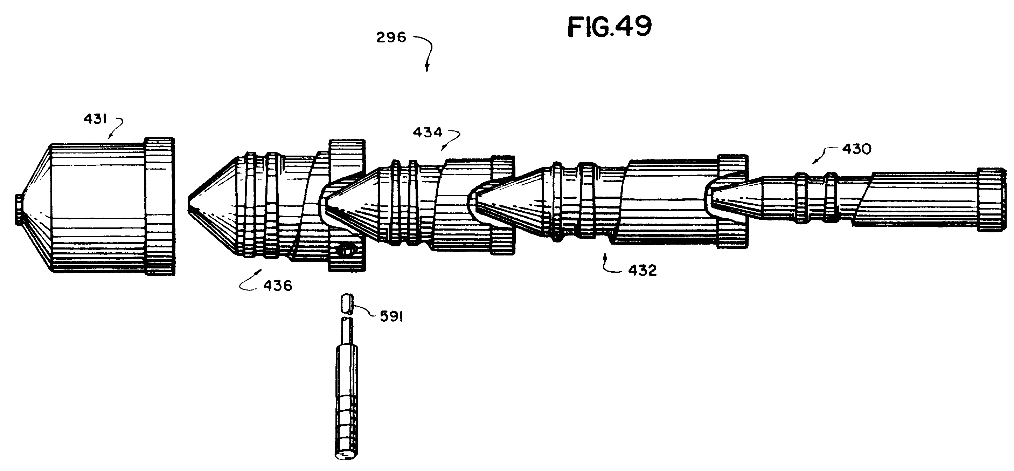

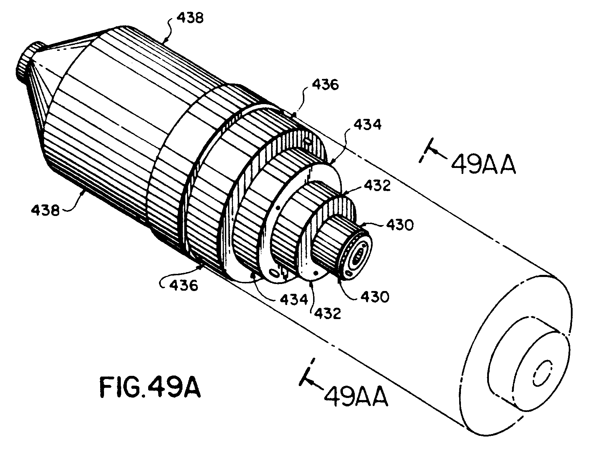

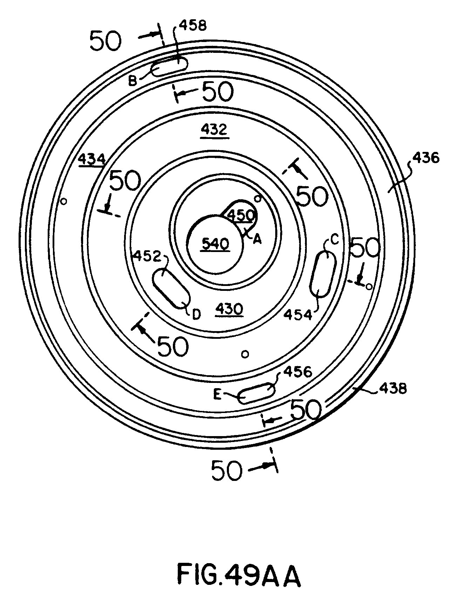

Figure 49 is a side elevational exploded telescoped view with portions broken away, showing the nozzle shells and nozzle cap components which comprise the preferred nozzle assembly of this invention.
Figure 49A is a perspective view showing the nozzle assembly mounted within the feed block of Figure 41 (shown in phantom).
Figure 49AA is an end view of the nozzle assembly as would be seen along line 49AA-49AA of Figure 49A.

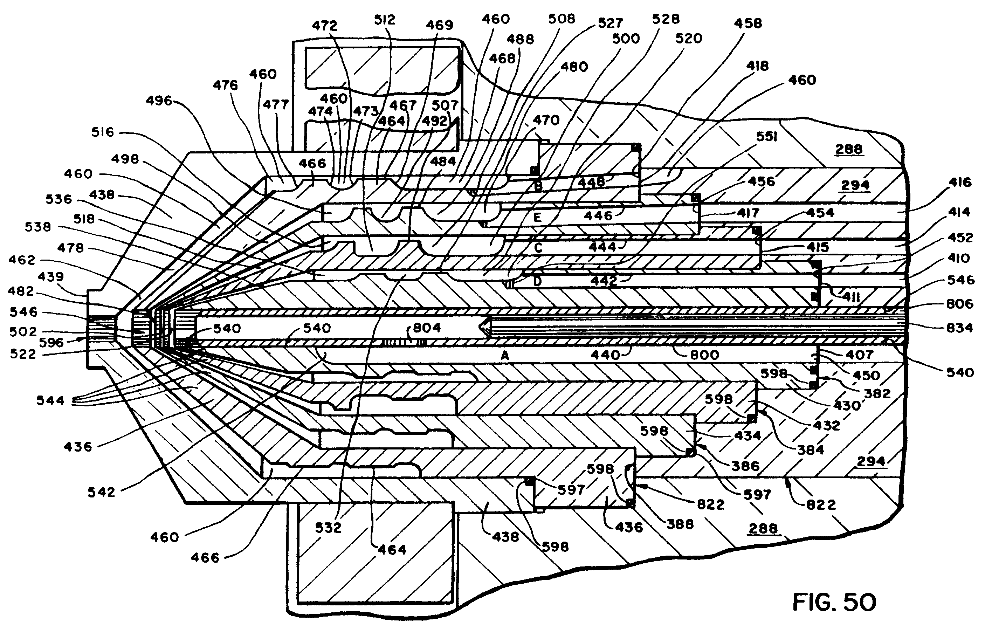

Figure 50 is a vertical sectional view of the nozzle assembly taken along the various sets of lines 50-50 of Figure 49AA.

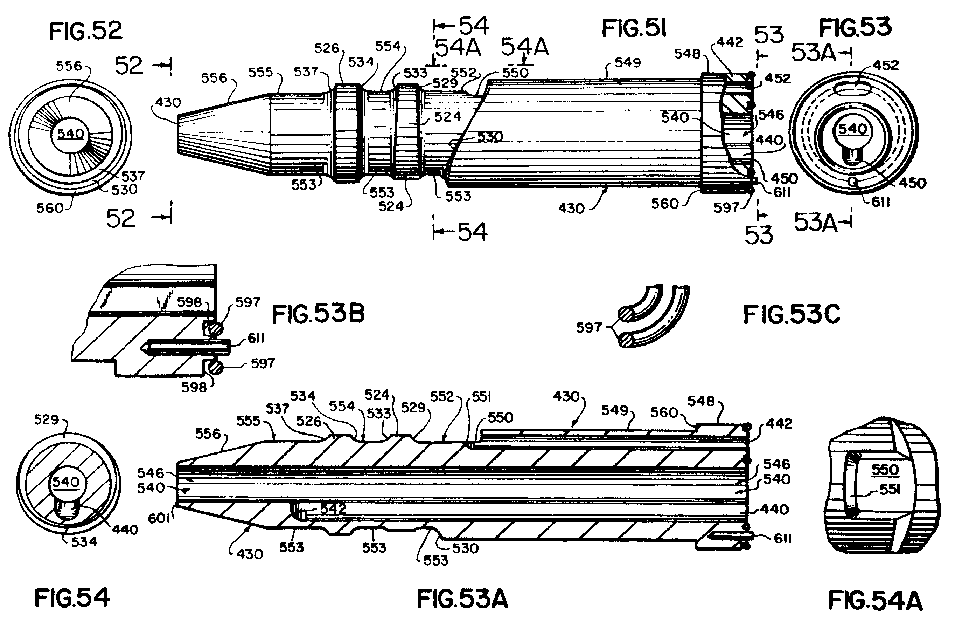

Figure 51 is a side elevational view of the inner shell of the nozzle assembly.
Figure 52 is a front end view of the inner shell of Figure 50.
Figure 53 is a rear end view of the inner shell shown in Figure 50.
Figure 53A is a vertical section taken along line 53A-53A of Figure 53.
Figure 53B is an enlarged view of the lower right portion of Figure 53A.
Figure 53C is an enlarged view with portions in section, and portions broken away, of the sealing rings shown in Figure 53.
Figure 54 is a vertical section taken along line 54-54 of Figure 51.
Figure 54A is an enlarged top plan view with portions broken away as would be seen alone line 54A-54A of Figure 51 showing the port in the wall of the inner shell.

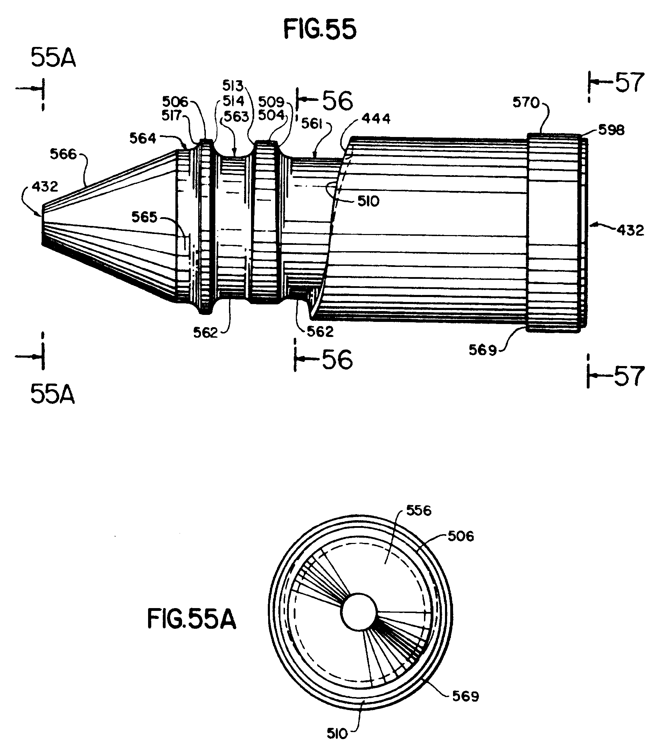

Figure 55 is a side elevational view of the third shell of the nozzle assembly.
Figure 55A is a view of the front end of the third shell as would be seen along line 55A-55A of Figure 55.

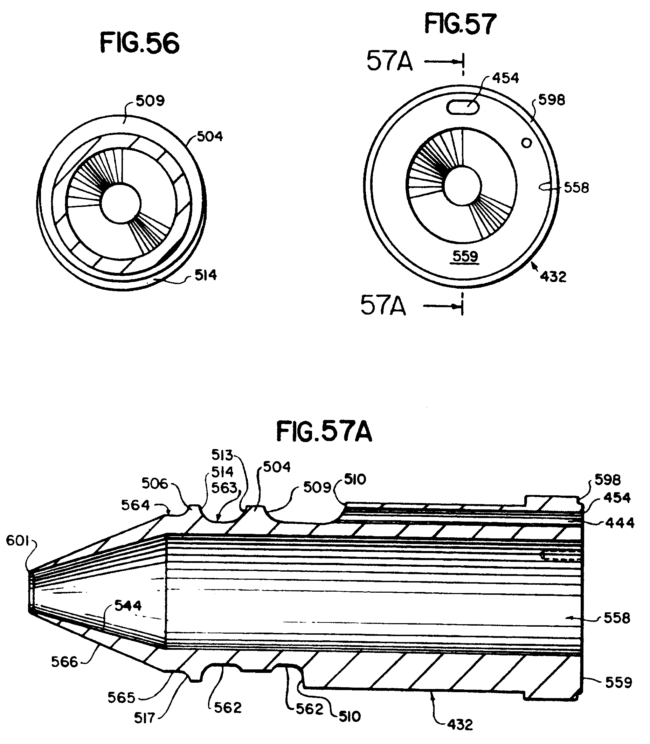

Figure 56 is a vertical section taken along line 56-56 of Figure 55.

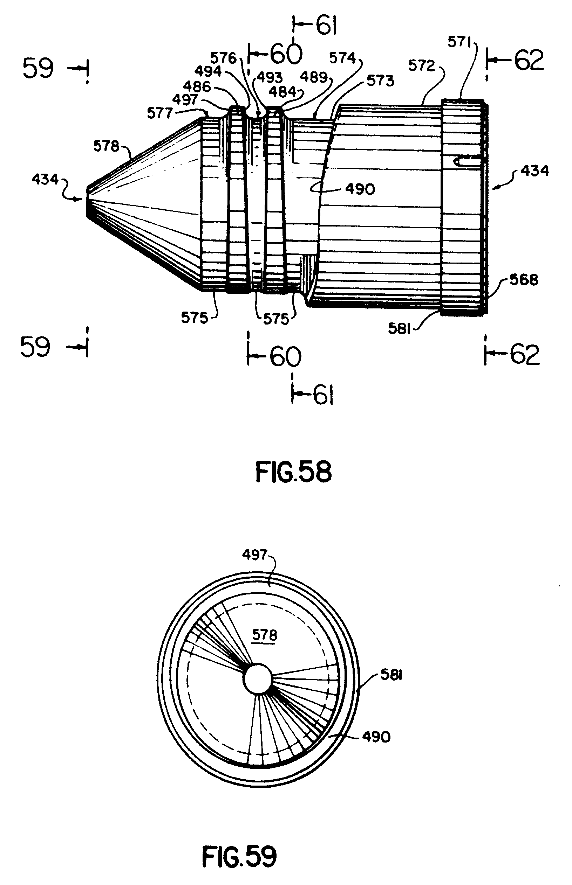

Figure 57 is an end view of the rear face of the third shell as would be seen along line 57-57 of Figure 55.
Figure 57A is a vertical section taken along line 57A-57A of Figure 57.
Figure 58 is a side elevational view of the second shell of the nozzle assembly.
Figure 59 is a front end view of the second shell taken along line 59-59 of Figure 58.

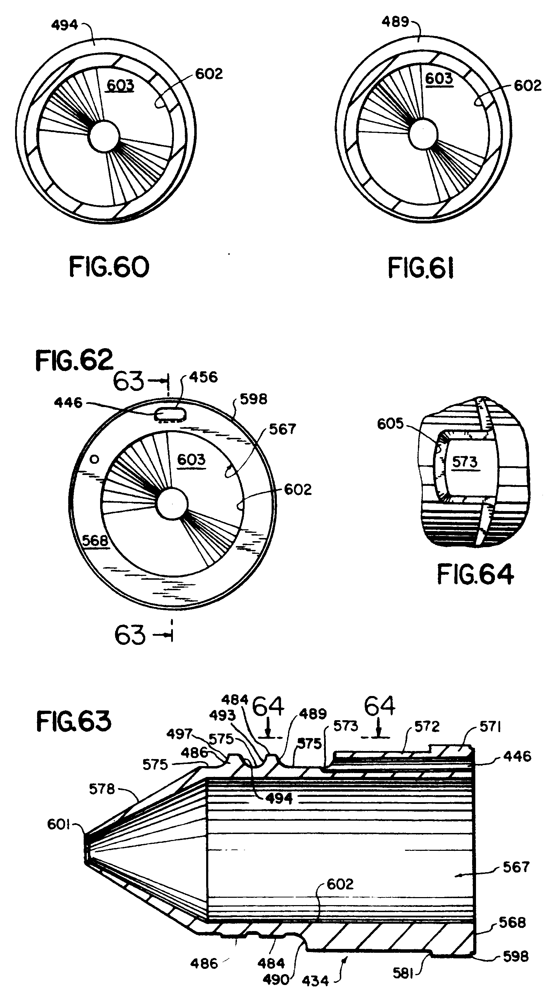

Figure 60 is a vertical section taken along line 60-60 of Figure 58.
Figure 61 is a vertical section taken along line 61-61 of Figure 58.
Figure 62 is an end view of the rear face of the second shell of Figure 58.
Figure 63 is a vertical section taken along line 63-63 of Figure 62.
Figure 64 is a top plan view with portions broken away showing the port in the upper wall of the second shell of Figure 58, taken along line 64-64 of Figure 63.

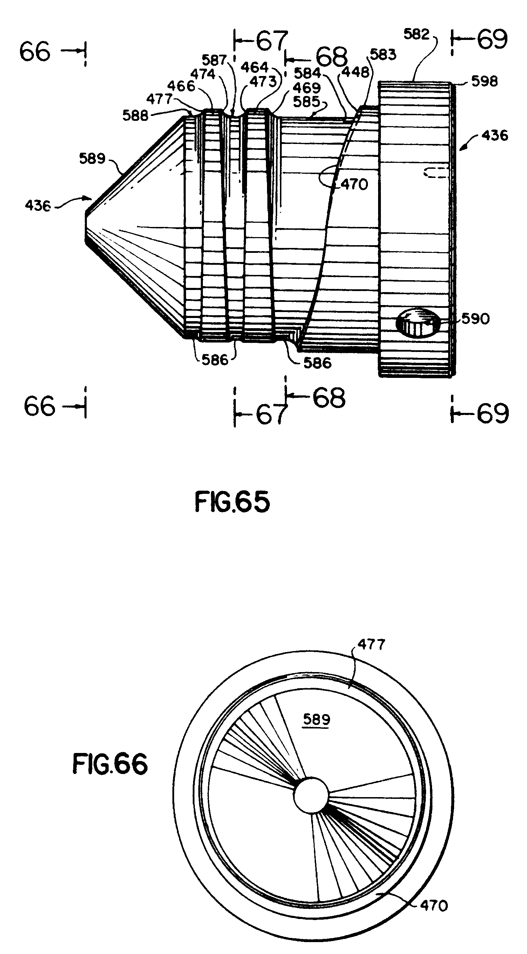

Figure 65 is a side elevational view of the outer shell of the nozzle assembly of Figure 50.
Figure 66 is a front view of the outer shell as would be seen along line 66-66 of Figure 65.

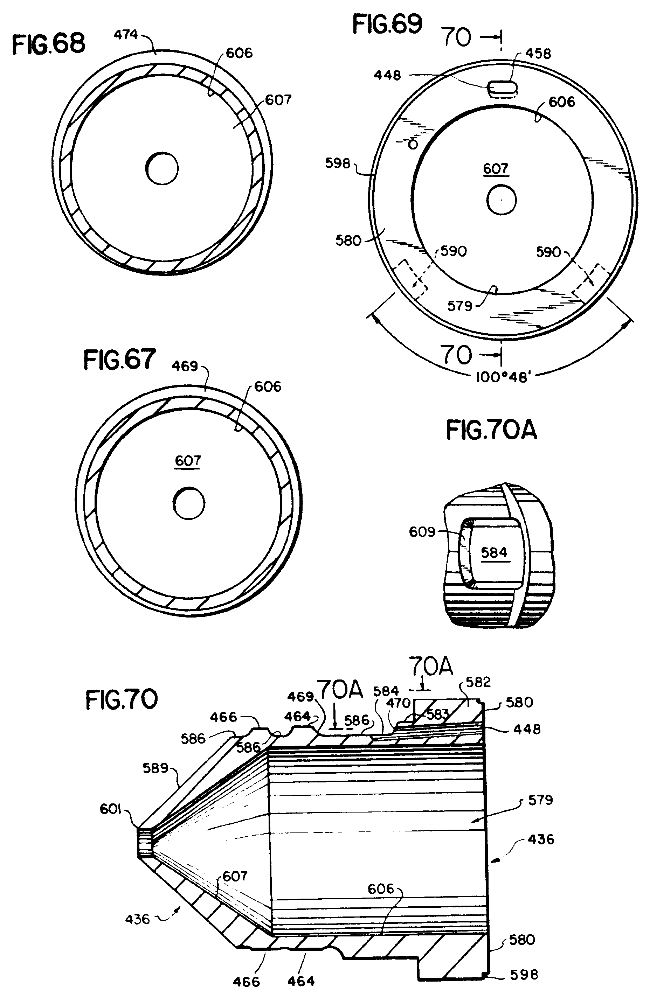

Figure 67 is a vertical section taken along line 67-67 of Figure 65.
Figure 68 is a vertical section taken along line 68-68 of Figure 65.
Figure 69 is an end view of the rear face of the outer shell as would be seen along line 69-69 of Figure 65.
Figure 70 is a vertical section taken along line 70-70 of Figure 69.
Figure 70A is a top plan view with portions broken away showing a port in the upper wall of the outer shell of Figure 70, as would be seen along line 70A-70A of Figure 70.

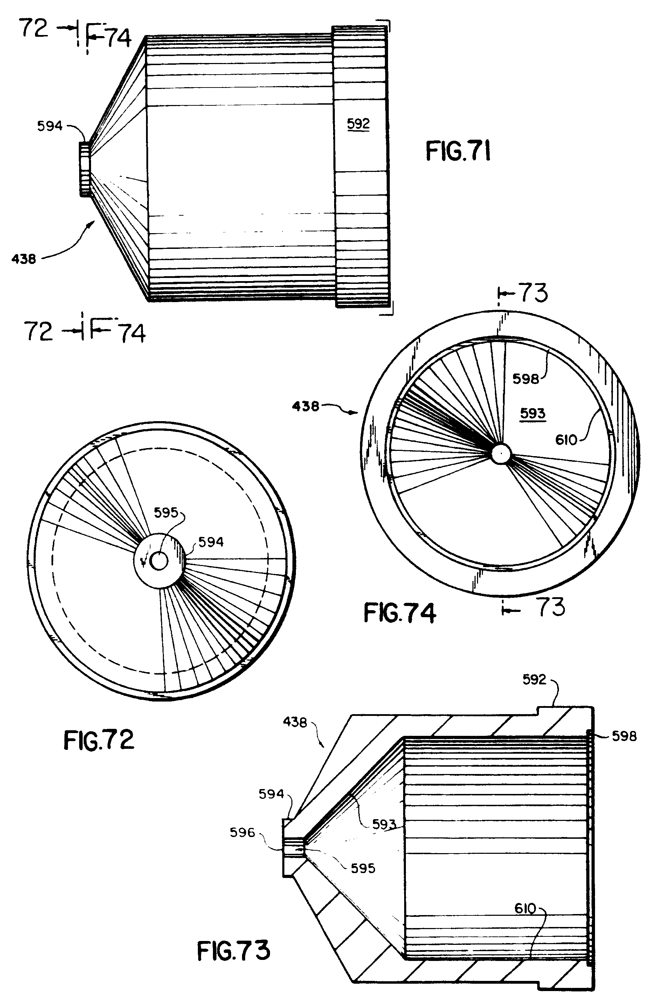

Figure 71 is a side elevational view of the nozzle cap of the nozzle assembly of Figure 50.
Figure 72 is a front elevational view of the nozzle cap of Figure 71.
Figure 73 is a vertical section taken along line 73-73 of Figure 74.
Figure 74 is a rear elevational view of the nozzle cap of Figure 71.

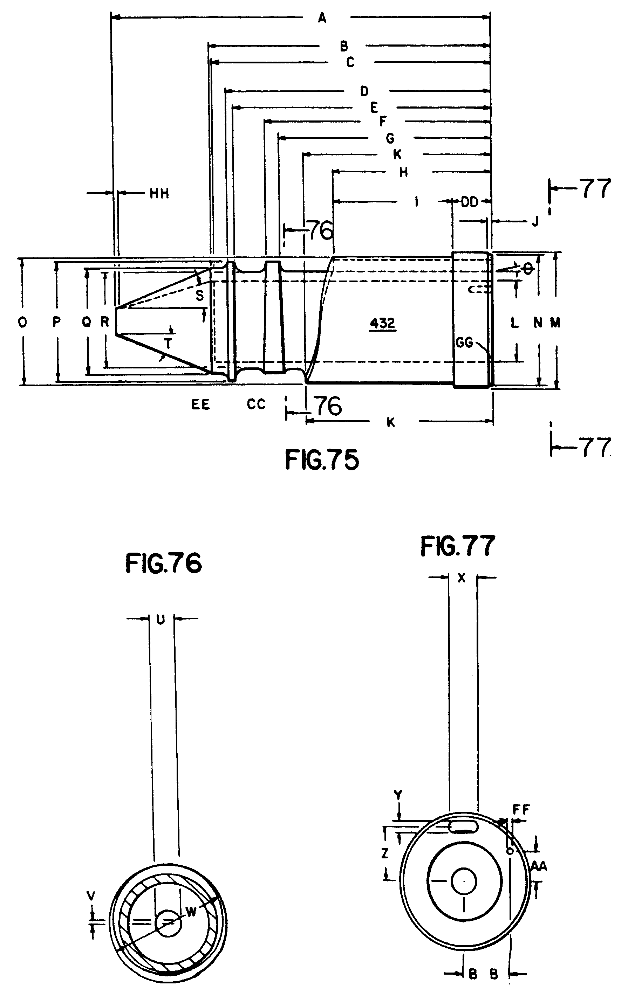

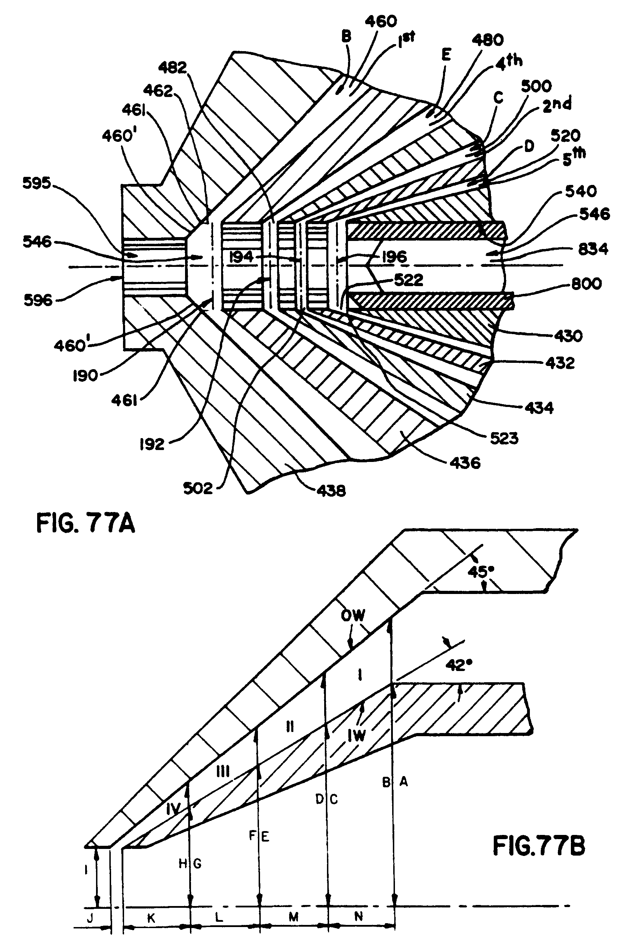

Figure 75 is a side elevational view of shell 432, Figure 76 is a vertical section taken along line 76-76 of Figure 75, and Figure 77 is a rear elevational view taken along line 77-77 of Figure 75, each of Figures 75, 76 and 77 showing letter designations for the dimensions of common structural features for each of the shells and cap of the nozzle assembly, for use with Table I.
Figure 77A is an enlarged vertical section with portions broken away, taken through a forward portion of a co-injection nozzle embodiment of this invention, showing orifice center lines perpendicular to the axis of the nozzle central channel.
Figure 77B is a schematic drawing representing a portion of shells of a co-injection nozzle showing dimensions thereof which are used in calculations to provide data shown in the Tables for Figure 77B.

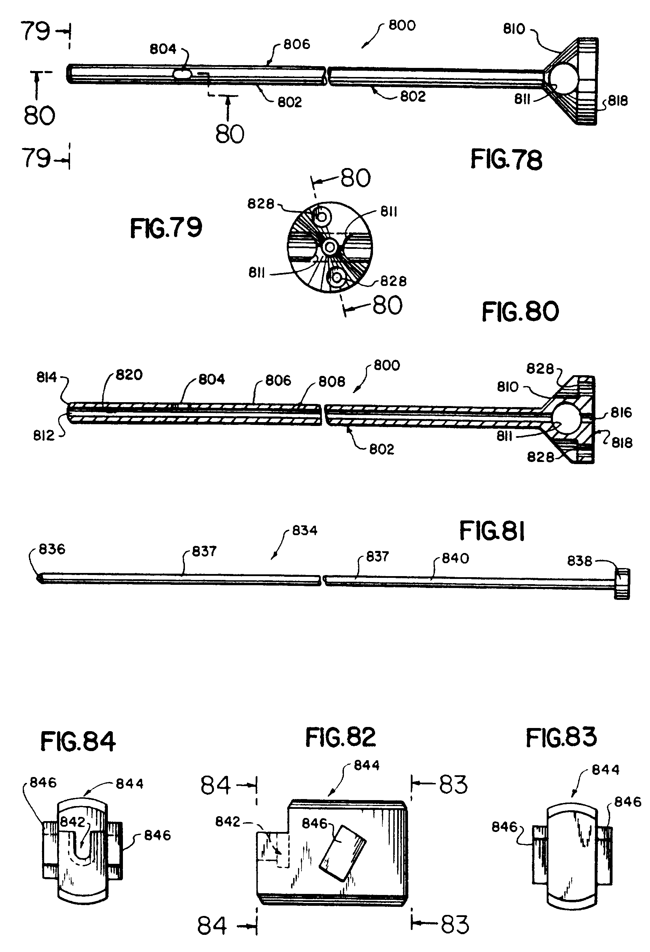

Figure 78 is a side elevational view of a preferred embodiment of the hollow sleeve of the preferred valve means of this invention.
Figure 79 is a front elevational view of the sleeve of Figure 78.
Figure 80 is in part a vertical section taken along line 80-80 of Figure 79, and in part a vertical section taken along line 80-80 of Figure 78.
Figure 81 is a side elevational view of the preferred solid shut-off pin of the preferred valve means of this invention which cooperates with the sleeve of Figure 81 and the nozzle assembly of Figure 50.
Figure 82 is a side elevational view of the solid pin shuttle of this invention.
Figure 83 is a rear elevational view of the solid pin shuttle of Figure 82.
Figure 84 is a front elevational view of the solid pin shuttle of Figure 82.

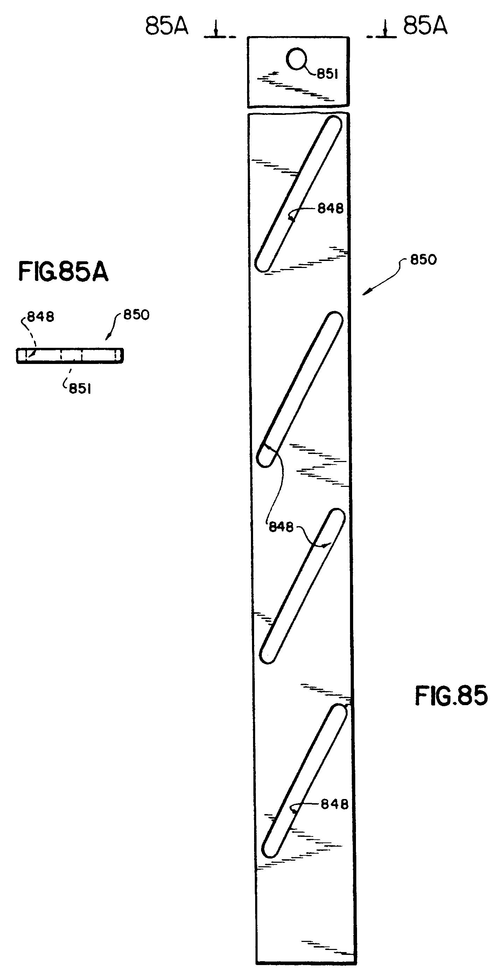

Figure 85 is a side elevational view of the solid pin cam bar which cooperates with the solid pin shuttle of Figures 83-85.
Figure 85A is a top plan view as would be seen along line 85A-85A of Figure 85.

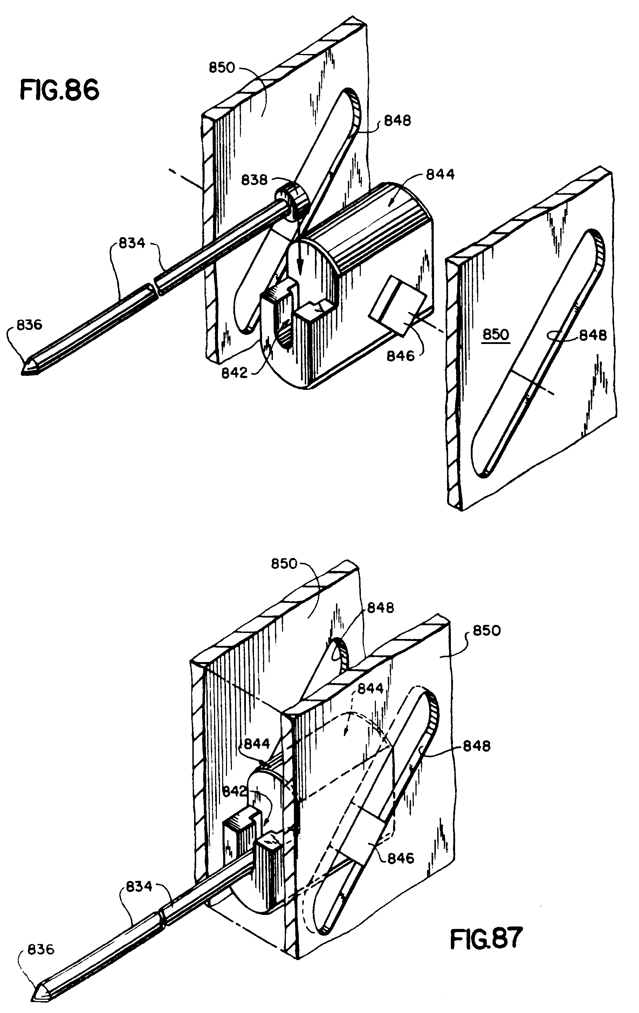

Figure 86 is an exploded perspective view of the solid pin, and solid pin shuttle and solid pin cam bars of Figures 83-85A.
Figure 87 is a perspective view of the solid pin in the solid pin shuttle in turn mounted within the pair of solid pin cam bars shown in Figure 86.

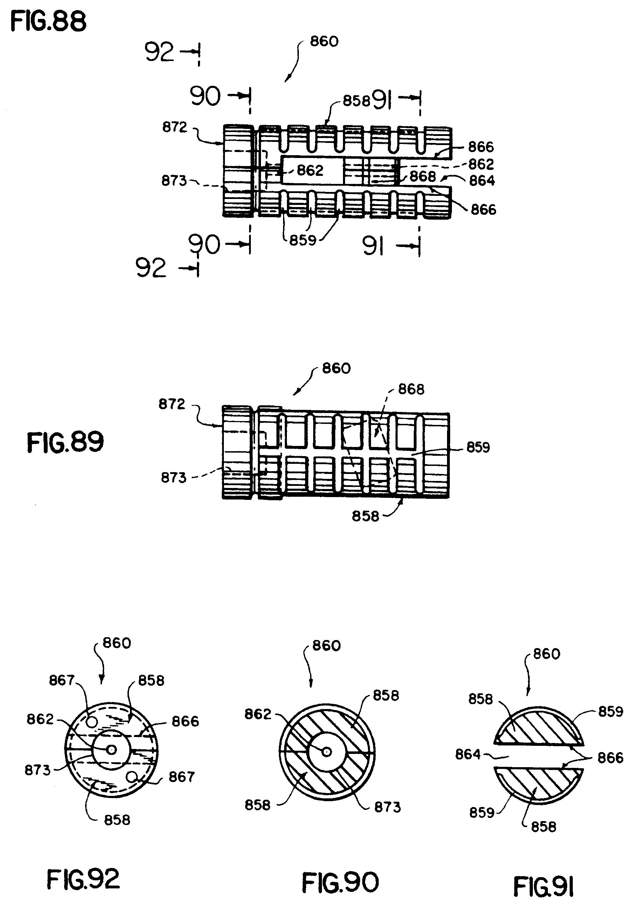

Figure 88 is a top plan view of the sleeve shuttle of this invention.
Figure 89 is a side elevational view of the solid pin shuttle of Figure 88.
Figure 90 is a vertical section taken along line 90-90 of Figure 88.
Figure 91 is a vertical section taken along line 91-91 of Figure 88.
Figure 92 is a front elevational view of the solid pin shuttle of Figure 88.

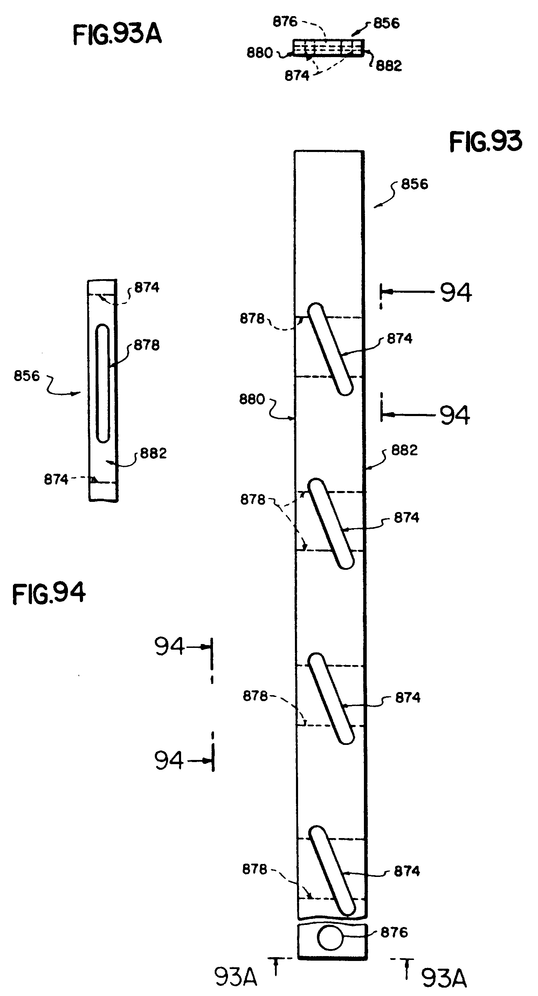

Figure 93 is a side elevational view with portions broken away of the sleeve cam bar upon which is mounted the sleeve shuttle of Figures 88-92.
Figure 93A is a plan view of the bottom of the sleeve cam bar as would be seen along line 93A-93A of Figure 93.
Figure 94 is a front elevational view of a portion of the sleeve cam bar as would be seen along line 94-94 of Figure 93.

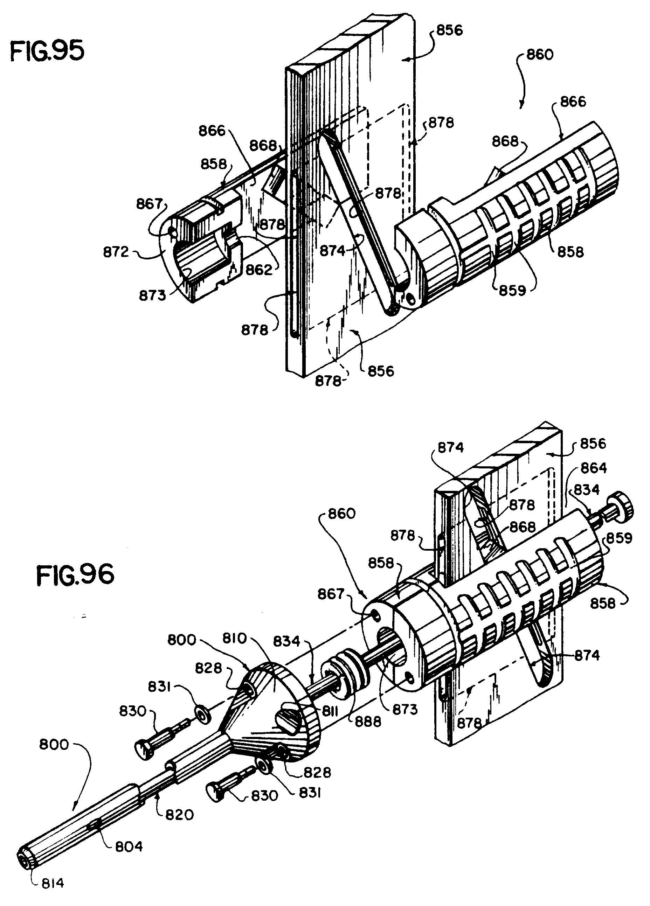

Figure 95 is an exploded perspective view with portions broken away of the two halves of the sleeve shuttle positioned one on either side of the sleeve cam bar of Figure 93.
Figure 96 is a perspective view with portions broken away and portions exploded showing the sleeve shuttle mounted onto the sleeve cam bar, with the sleeve ready for mounting onto the shuttle.

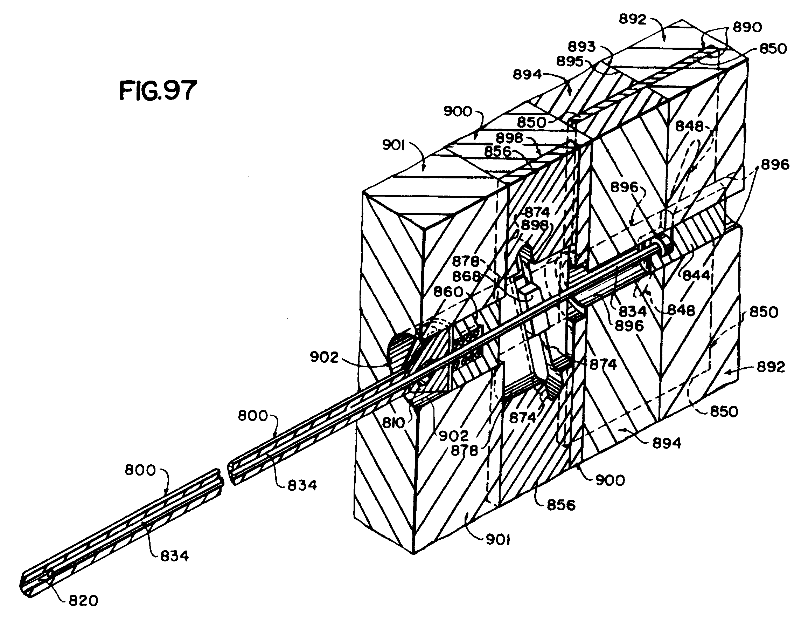

Figure 97 is a vertical section with portions broken away as would be taken through the nozzle shut-off assembly, and through the sleeve and shuttle components, showing the mounting and relationships of the sleeve, its shuttle, and the pin and its shuttle.
Figure 98 is an enlarged schematic top plan view with portions broken away showing the front portion of a preferred embodiment of the multi-layer multi-cavity injection machine of this invention.

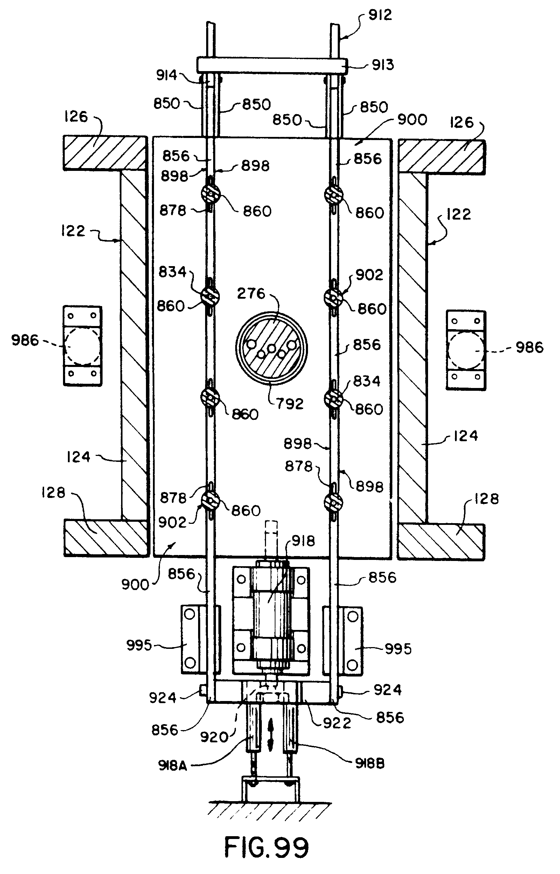

Figure 99 is a view with portions in vertical section, in front elevation and with portions broken away, as would be seen along line 99-99 of Figure 98.

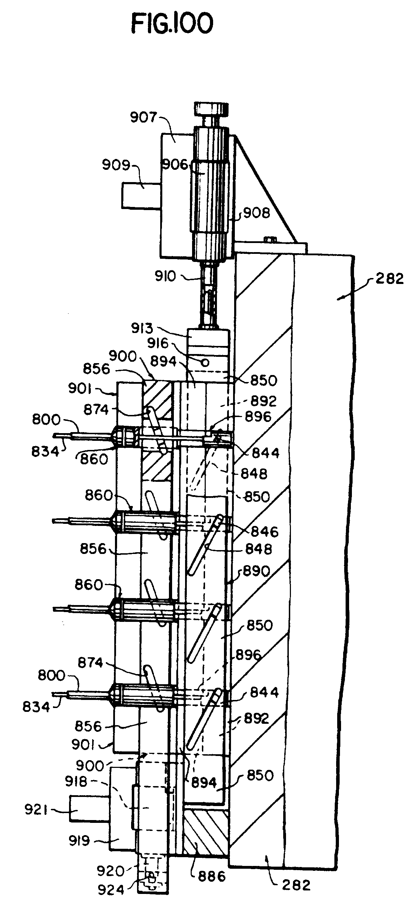

Figure 100 is a view with portions in vertical section, in side elevation and with portions such as transducers not shown, as would be seen substantially along line 100-100 of Figure 98.

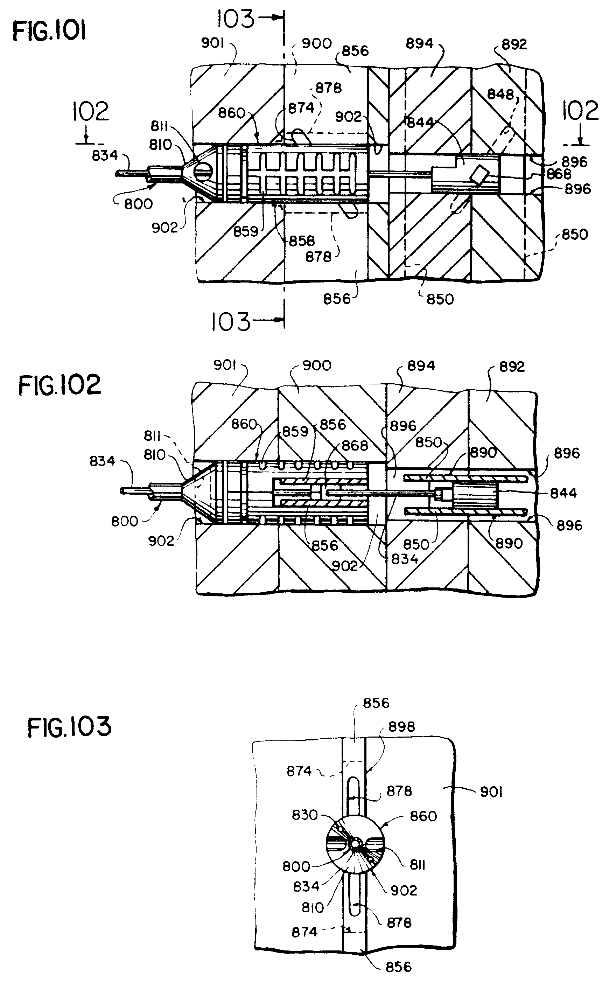

Figure 101 is an enlarged vertical section with portions broken away and portions shown in side elevation, of a portion of Figure 30, showing the sleeve and pin mounted on their shuttles and on their respective cam bars in the nozzle shut-off assembly.
Figure 102 is a horizontal section with portions shown in top plan view as would be seen substantially along line 102-102 of Figure 101.
Figure 103 is a front elevational view with portions in vertical section and portions broken away, as would be seen substantially along line 103-103 of Figure 101.

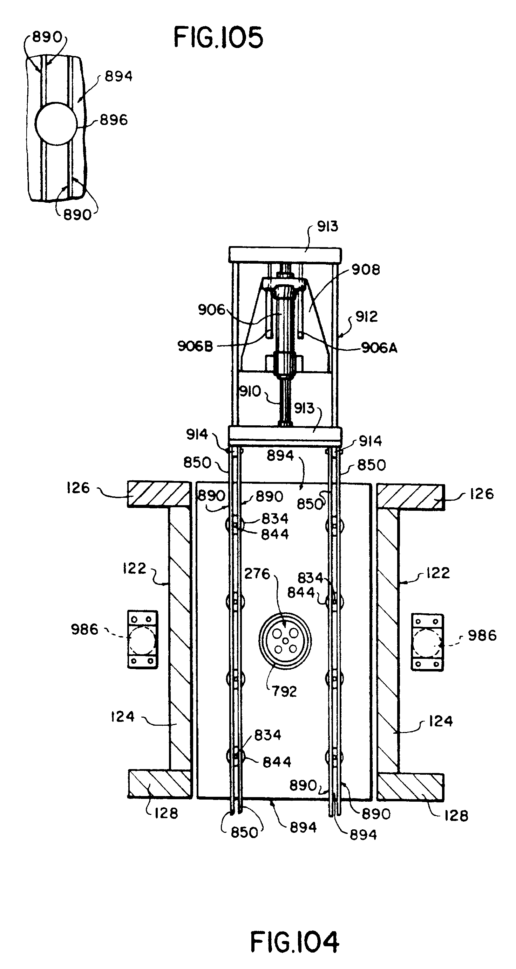

Figure 104 is a front elevational view with portions shown in vertical section and portions broken away, as would be seen substantially along line 104-104 of Figure 98.
Figure 105 is an enlarged front elevational view as would be seen of a portion of Figure 104 with the pin shuttle and pin cam bars removed.

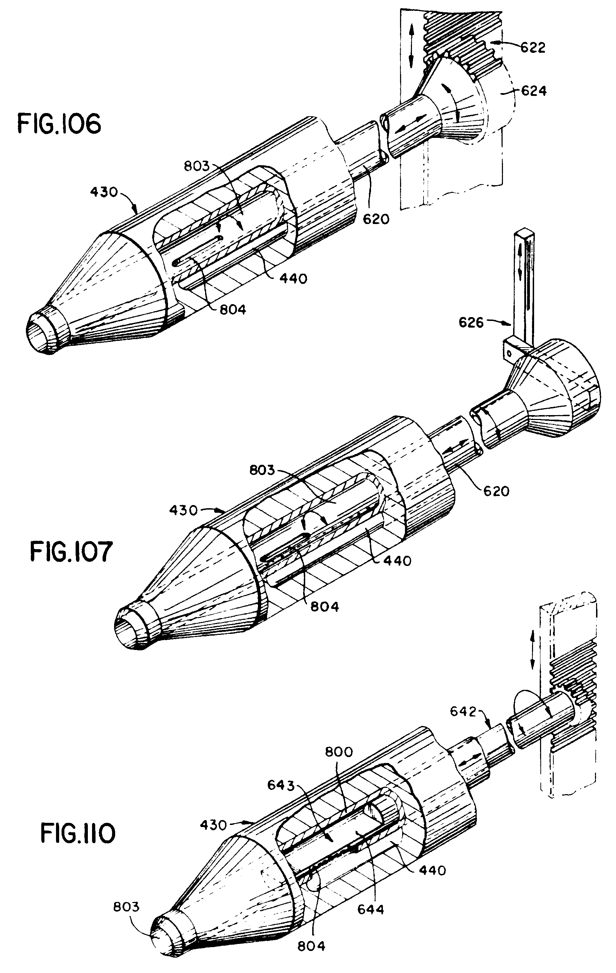

Figure 106 is an enlarged perspective view with portions broken away, portions in cross-section and portions in phantom, showing alternative valve means mounted in a nozzle shell, and alternative drive means of this invention.
Figure 107 is an enlarged perspective view with portions broken away and portions in cross-section showing alternative valve means mounted in the central channel of a nozzle shell, and alternative drive means of this invention.

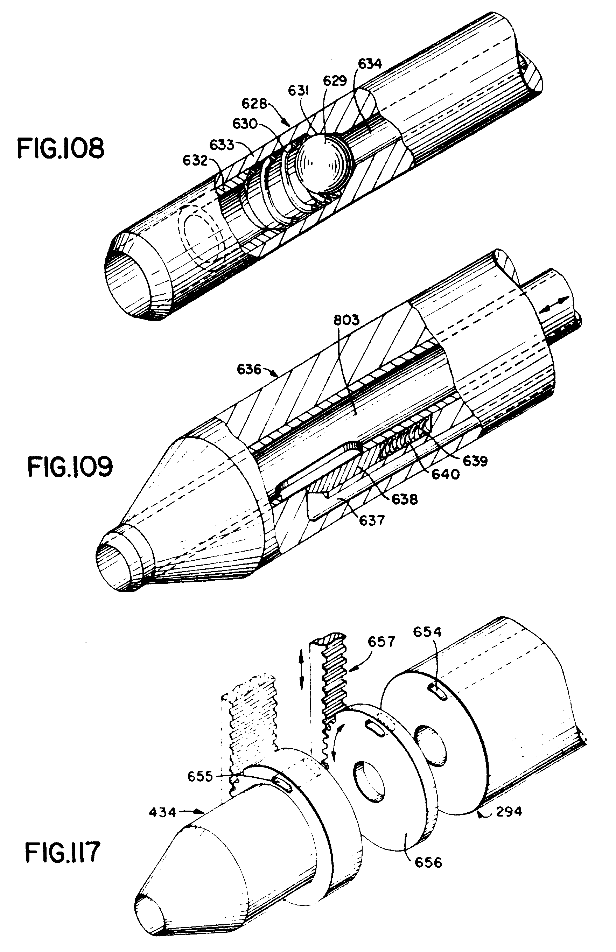

Figure 108 is an enlarged perspective view with portions broken away and portions in cross-section showing alternative valve means of this invention.
Figure 109 is an enlarged perspective view with portions broken away and portions in cross-section showing an alternative embodiment of valve means mounted within the central channel of a nozzle shell.

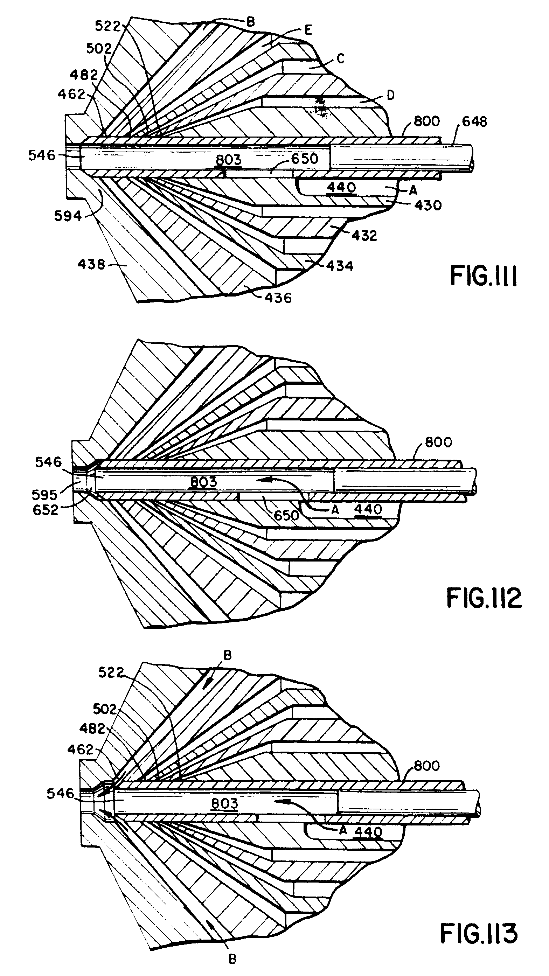

Figure 110 is a perspective view with portions broken away and portions in cross-section showing another embodiment of valve means mounted within the central channel of a nozzle shell, and of alternative drive means of this invention.

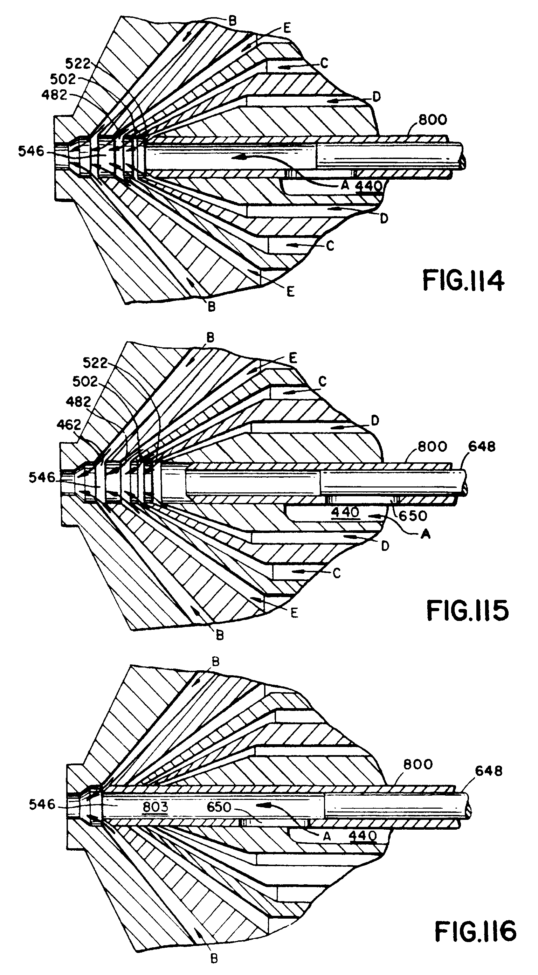

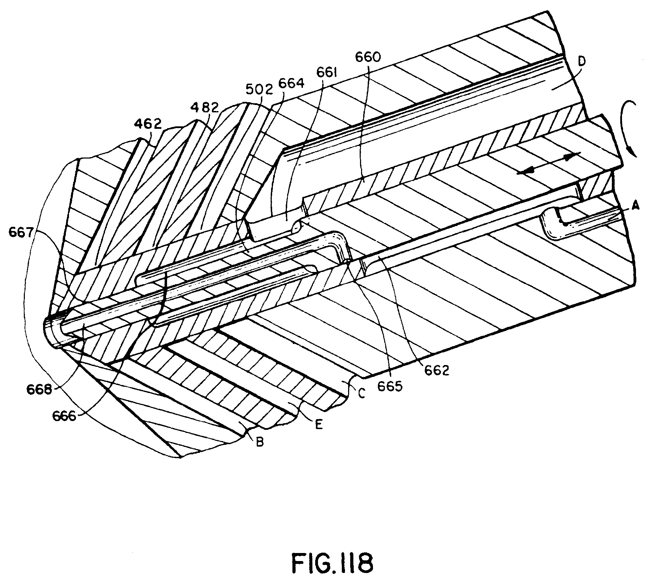

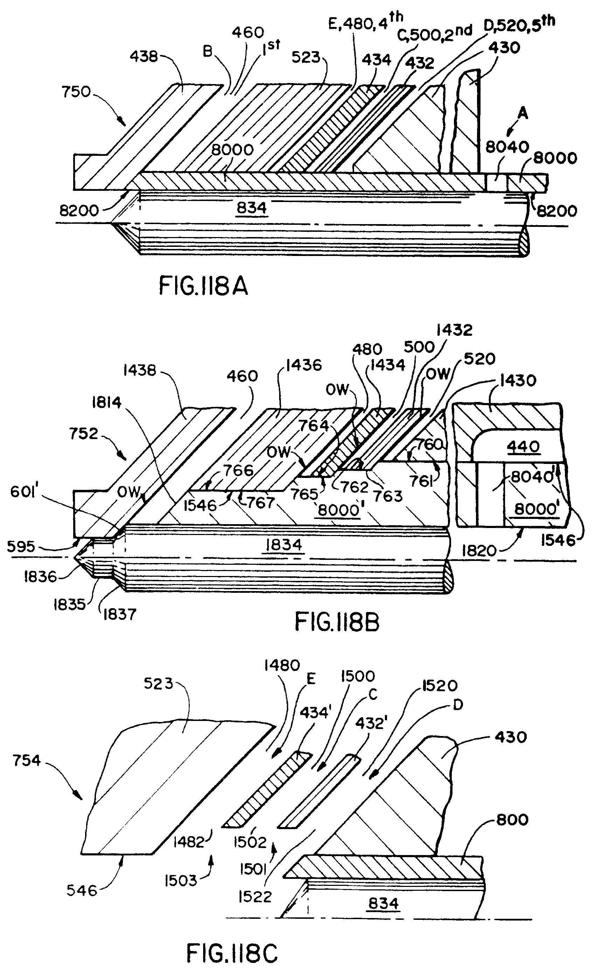

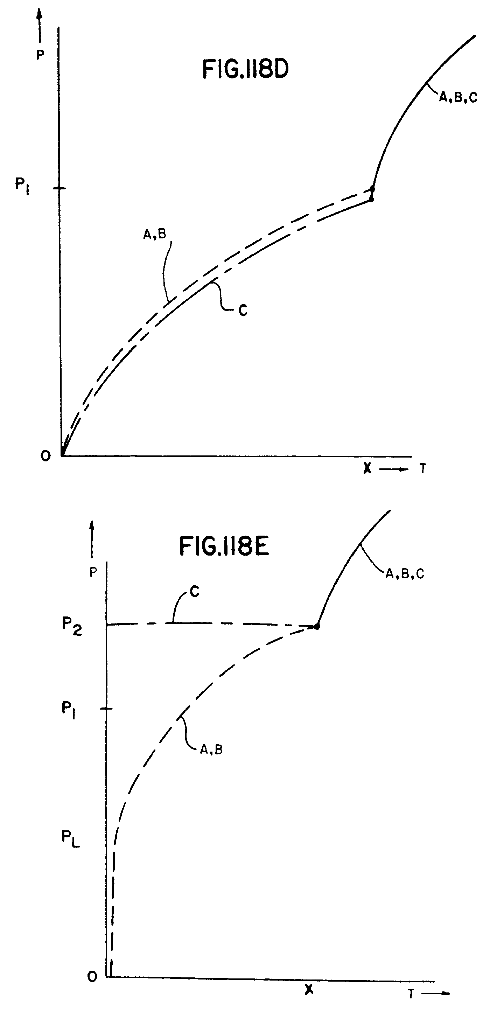

Figures 111 through 116 are enlarged vertical sections with portions broken away and portions shown in side elevation taken through the forward portion of a preferred embodiment of co-injection nozzle means of this invention wherein the valve means includes a fixed pin. Figure 111 shows the first position or mode of the sleeve, Figure 112 shows the second, Figure 113 the third, Figure 114 the fourth, Figure 115 the fifth and Figure 116 the sixth position or mode of the sleeve in an injection cycle.

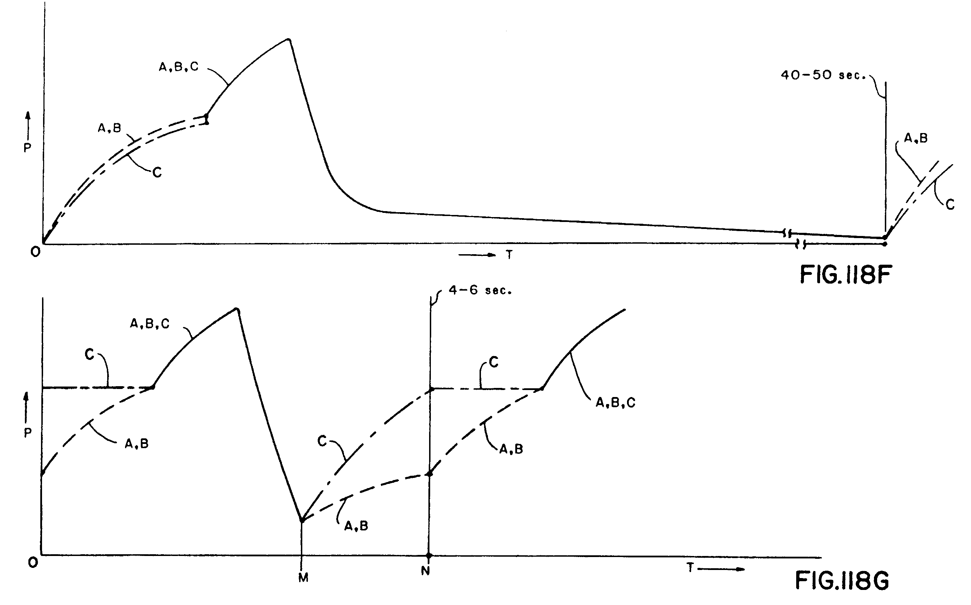

Figure 117 is an enlarged exploded perspective view with portions shown in section, portions broken away and portions shown in phantom, showing still another embodiment of the valve means and drive means of this invention.
Figure 118 is an enlarged perspective view with portions in vertical section and portions broken away, showing the forward portion of another embodiment of co-injection nozzle means of this invention.
Figure 118A is an enlarged schematic view with portions in vertical section, portions in side elevation and portions broken away showing a portion of an alternative nozzle assembly of this invention.
Figure 118B is an enlarged perspective view with portions shown in vertical section, in side elevation and portions broken away, showing alternative valve means in the form of a stepped sleeve and modified pin nose.
Figure 118C is an enlarged schematic view with portions in vertical section, portions in side elevation and portions broken away showing an embodiment of the co-injection nozzle assembly having modified passageways and orifices for internal layer materials.
Figure 118D is a schematic plot of pressure (P) in the combining area of a co-injection nozzle without valve means, as a function of time (T).
Figure 118E is a schematic plot of pressure (P) in the combining area of a co-injection nozzle with valve means, as a function of time (T).
Figure 118F is a schematic plot showing pressure as a function of injection cycle time without the benefit of the valve means of this invention.
Figure 118G is a schematic plot of pressure versus injection cycle time with the benefit of the valve means of this invention.

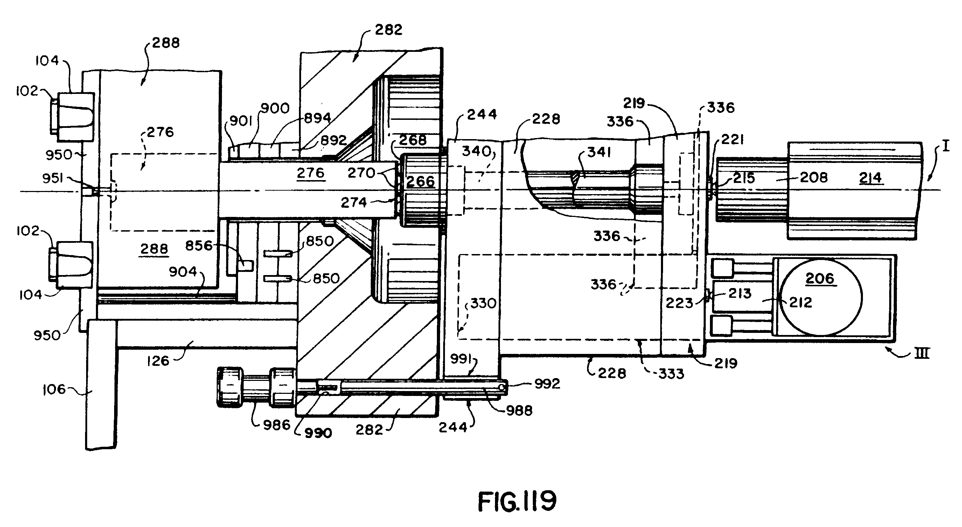

Figure 119 is a schematic view with portions shown in horizontal section and portions broken away, showing the left-hand portion of the apparatus of this invention which provides the effective pressure contact seal between the injection cavity sprue and nozzle orifices of this invention.

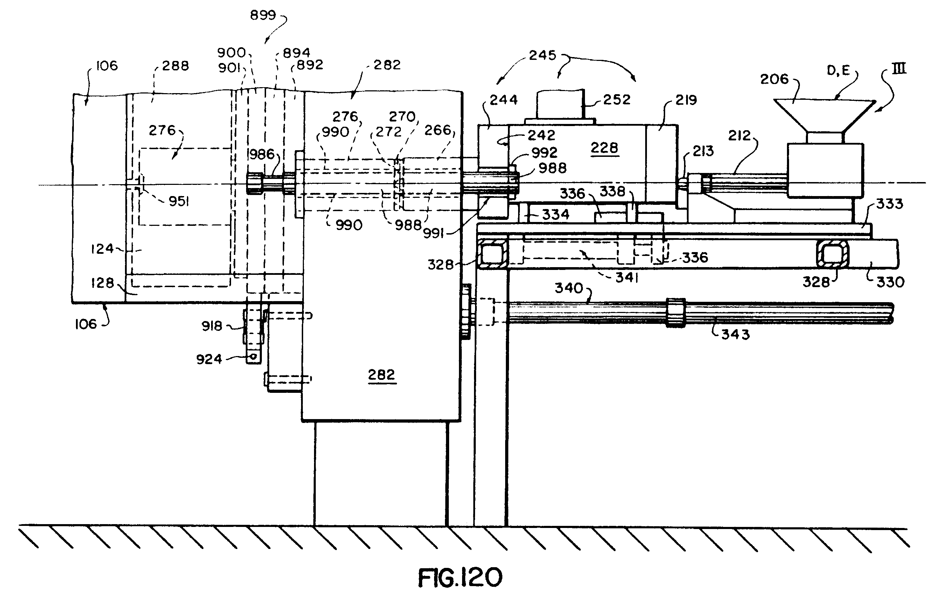

Figure 120 is an enlarged side elevational view with portions shown in section and portions broken away, of the apparatus of Figure 119.

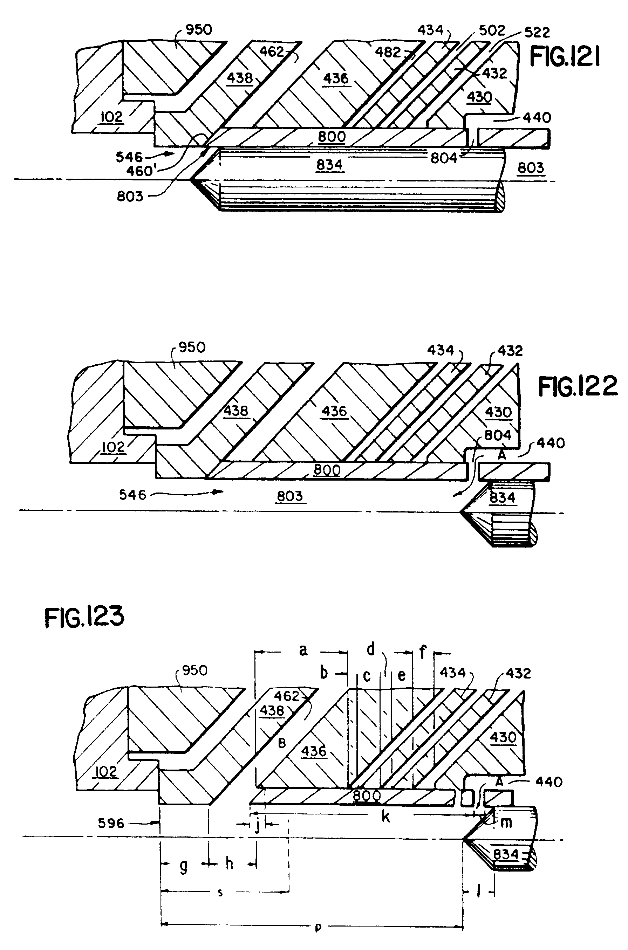

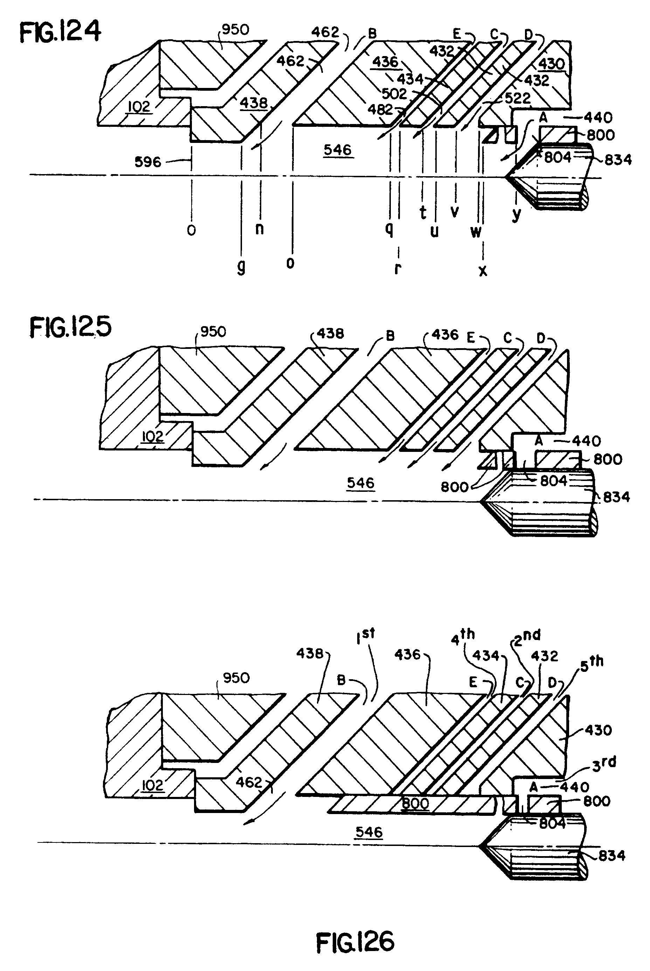

Figures 121 through 126 are enlarged schematic views with portions in vertical section and in side elevation, and with portions broken away, showing the preferred selected positions or modes of the preferred valve means of this invention. Figure 121 shows the first mode, Figure 122 the second, Figure 123 the third, Figure 124 the fourth, Figure 125 the fifth and Figure 126 the sixth mode.

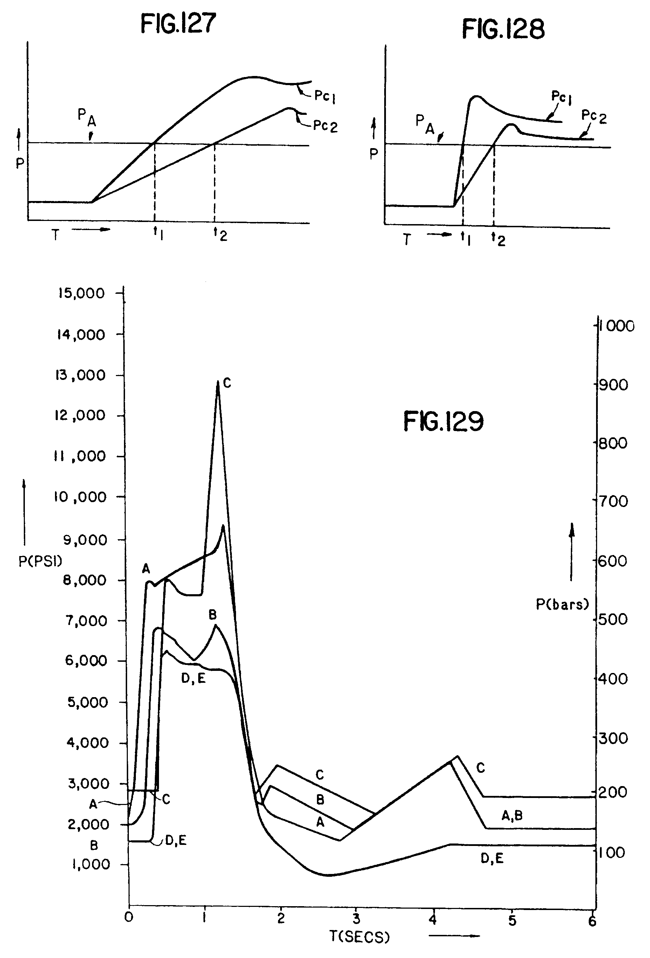

Figure 127 is a plot of melt pressure versus time showing a relatively slow rate of buildup of pressure of the C layer material.
Figure 128 is a plot of melt pressure versus time with a relatively increased rate of pressure buildup of the C layer material.

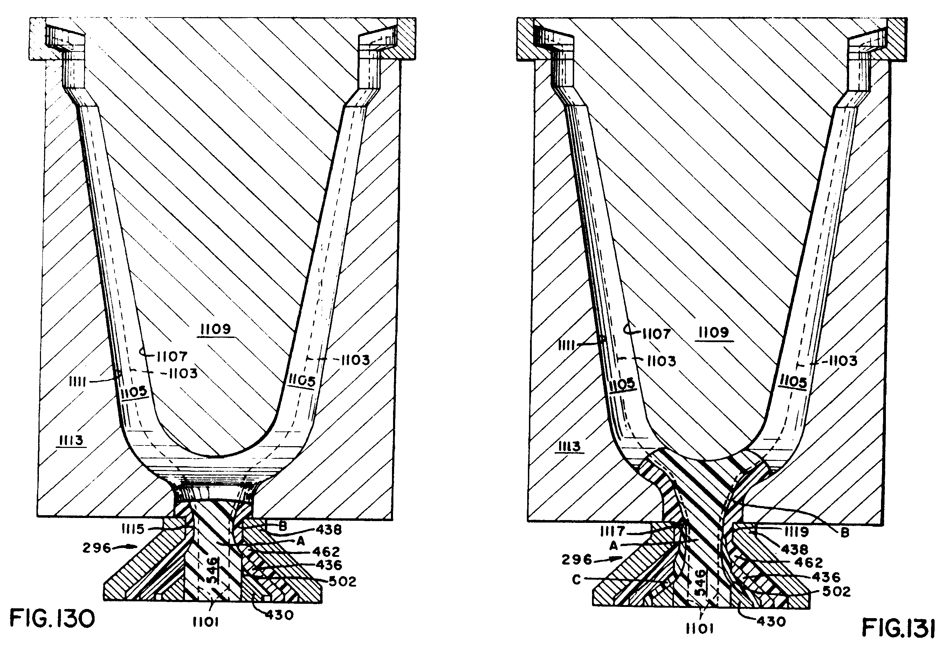

Figure 129 is a plot of the melt pressure of five polymer flow streams of this invention as a function of time for the eight cavity injection machine of this invention.

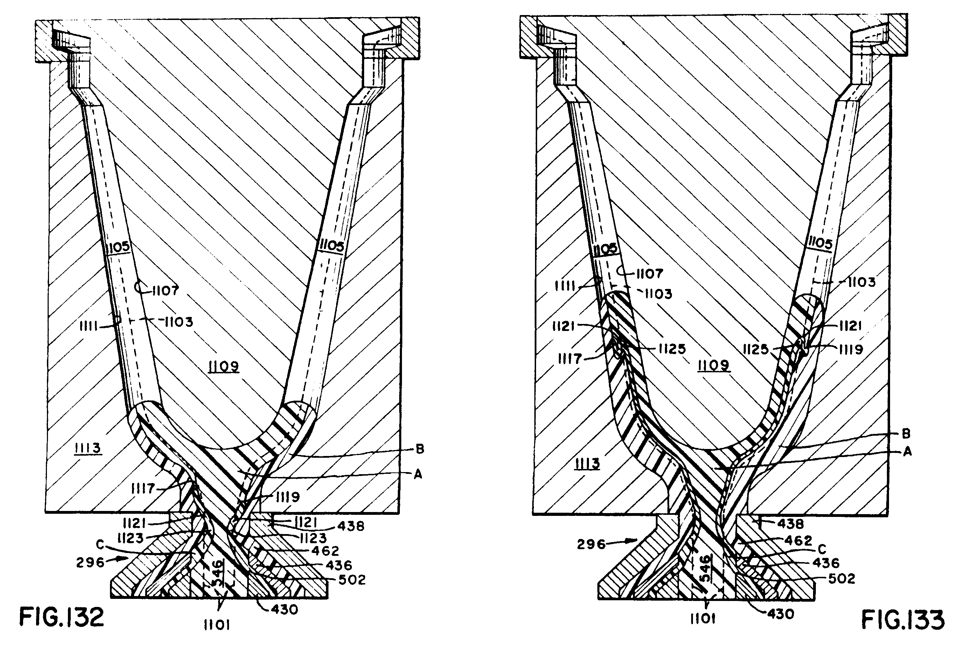

Figures 130 through 137 are enlarged schematic vertical sectional views of the forward portion of a co-injection nozzle assembly in communication with an injection cavity sprue, showing the foldover injection method of this invention. Figure 131 shows time bias in the initial flow of C layer material, Figure 132 the C layer material moved across the fast flow streamline, and Figure 133 the marginal end portion of the C layer material folded over within a flow stream moving into the injection cavity sprue.

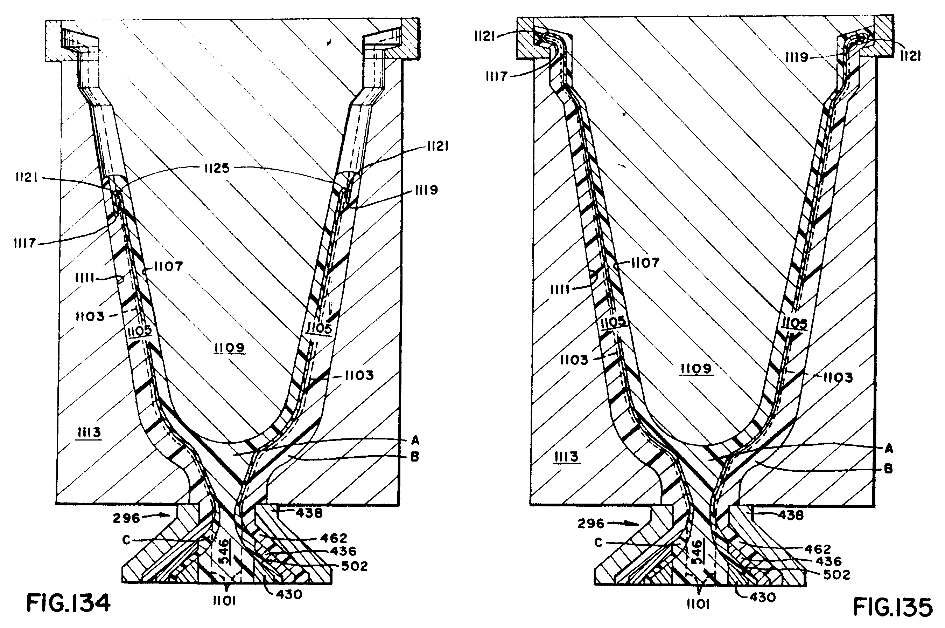

Figure 134 shows the polymer melt material moving up into the cavity.
Figure 135 shows the leading edge of the folded over internal layer in the flange of the injected parison and with substantially no axial bias.

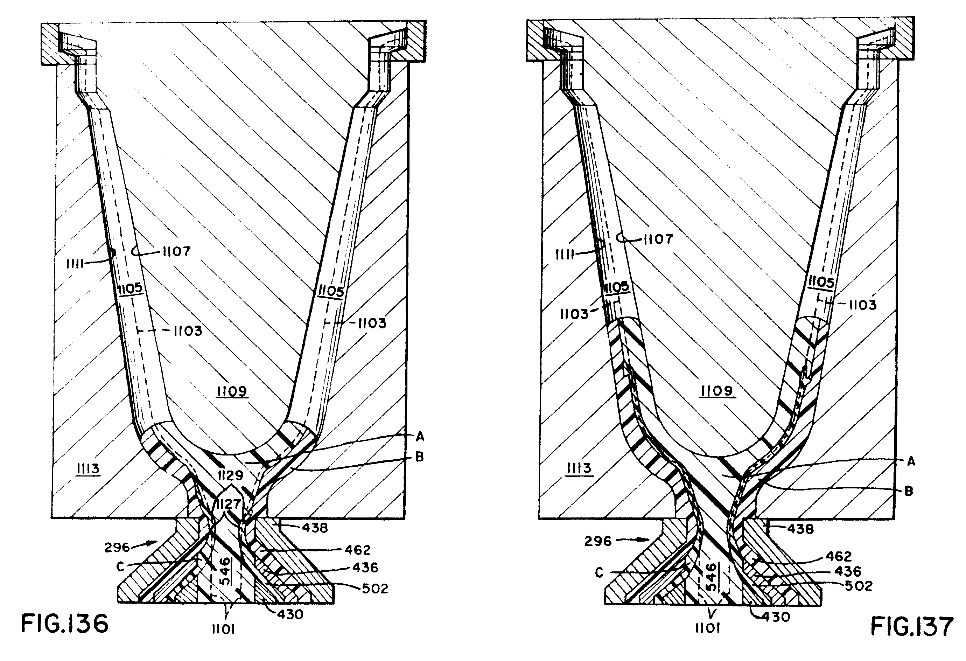

Figures 136 and 137 show another application of the foldover method of this invention.

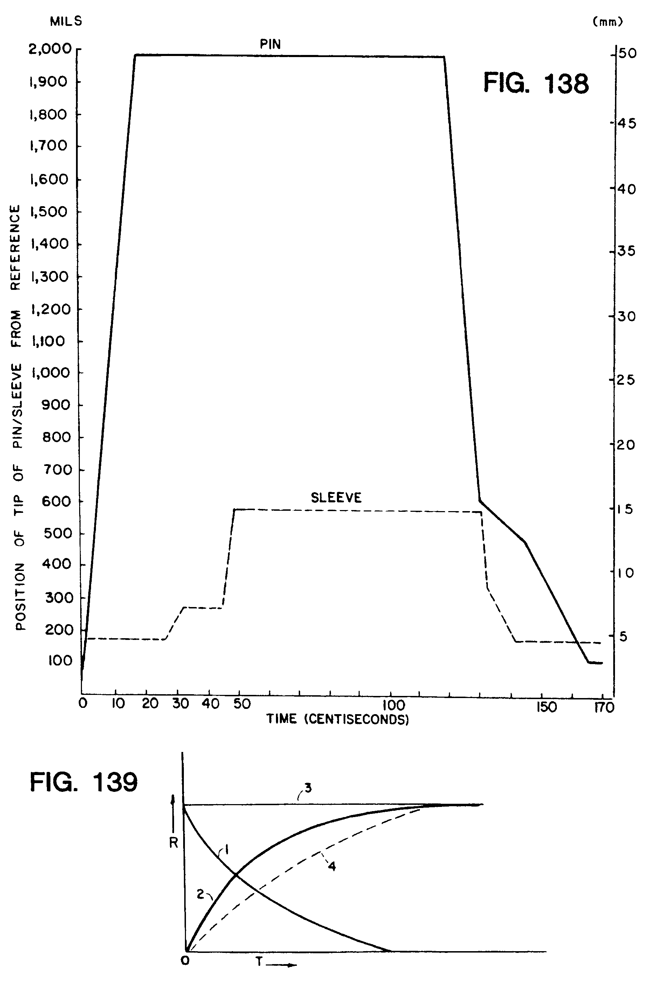

Figure 138 is a plot of the position of the tip of the pin and sleeve as a function of time, relative to a reference point designated O in Figure 124.

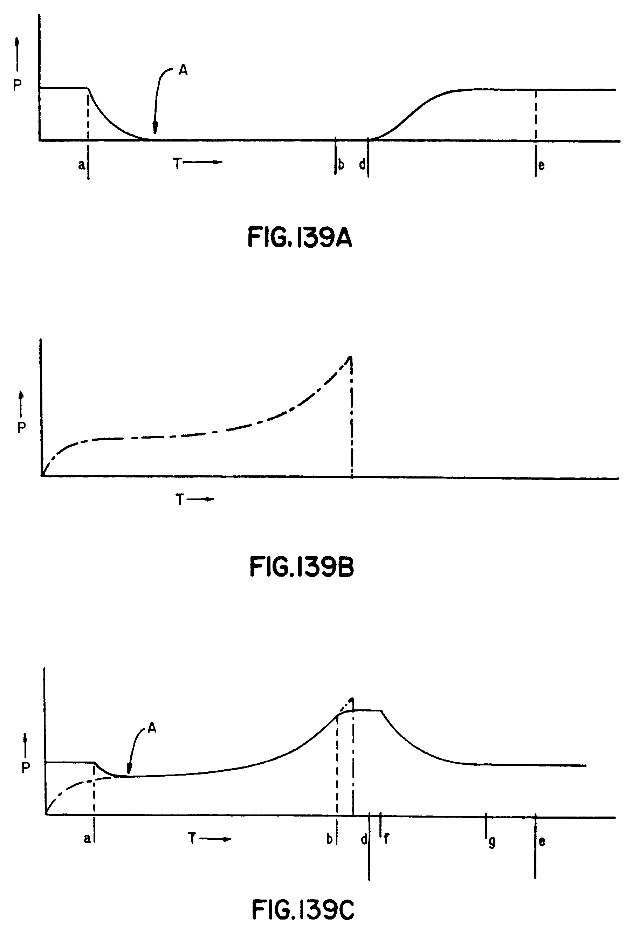

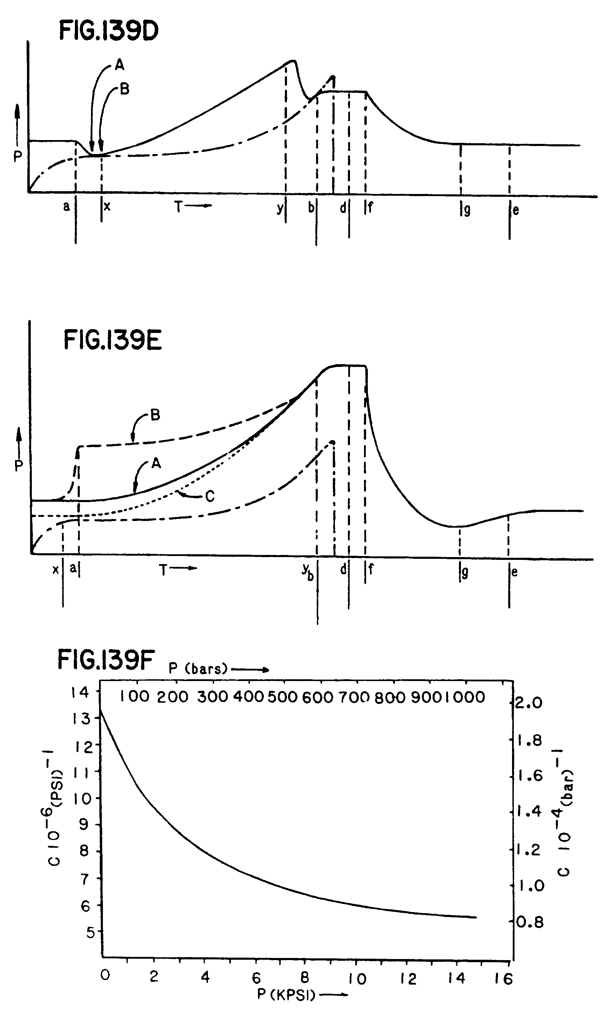

Figure 139 is a graph schematically plotting a melt flow rate of polymer material into an injection cavity, as a function of time.
Figures 139A through 139E are schematic diagrams, not drawn to scale and with portions exaggerated for illustrative purposes, illustrating the effects of pressure with time upon a polymeric melt material in a passageway at its orifice prior to, upon, and after opening of the orifices.
Figure 139F is a plot of compressibility versus pressure for high density polyethylene at about 400°F., illustrating the effect of pressure upon response time of the material.

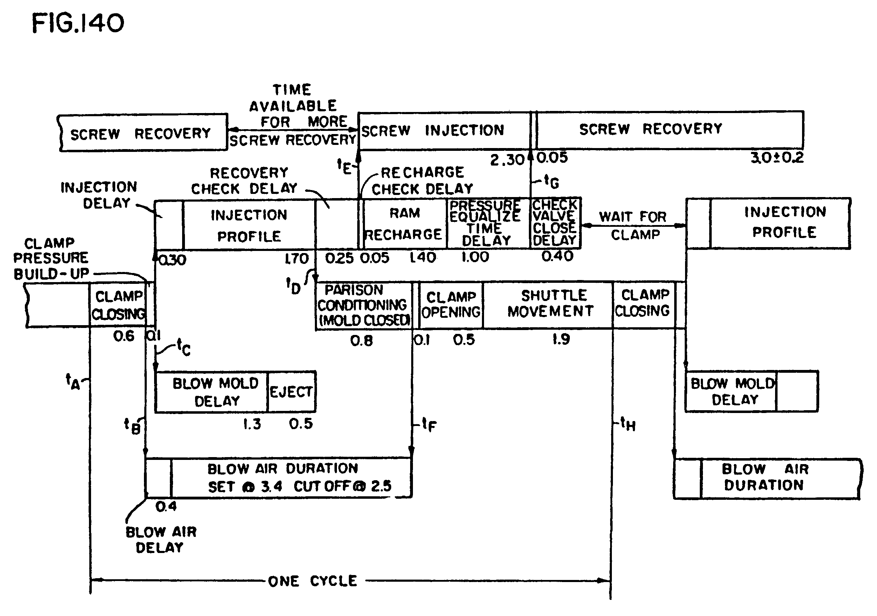

Figure 140 is a flow chart showing the sequence of operations of the tasks performed in accordance with this invention, relative to an injection cycle.

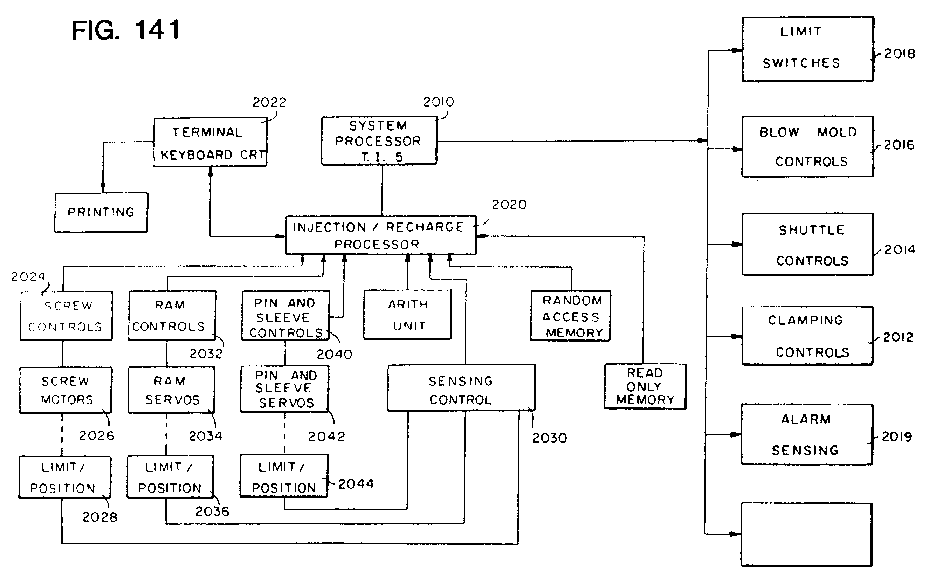

Figure 141 is a general block diagram of the control system used in accordance with the sequence of Figure 140.

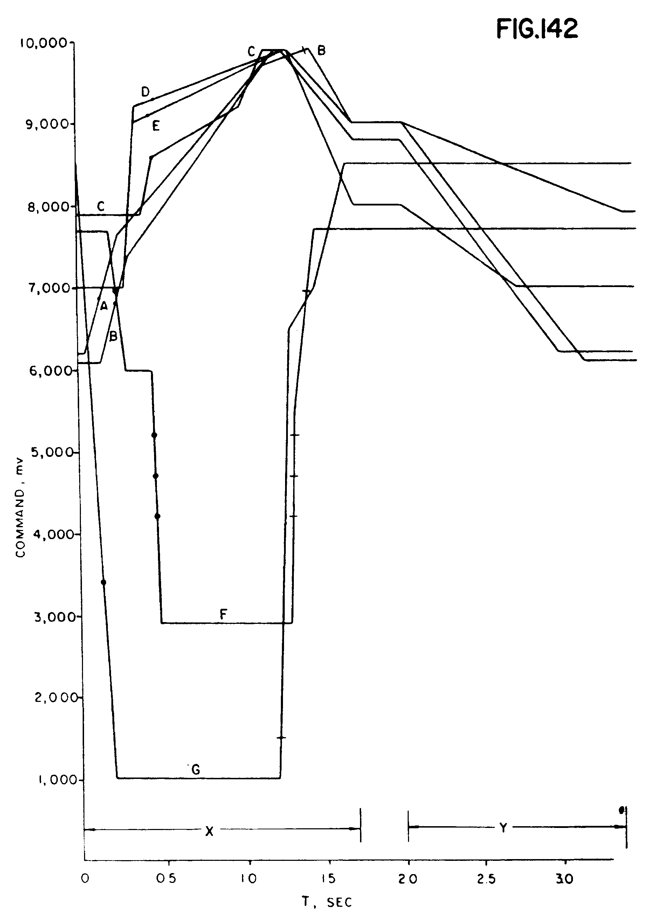

Figure 142 is a graph of command voltages versus time for each servo.

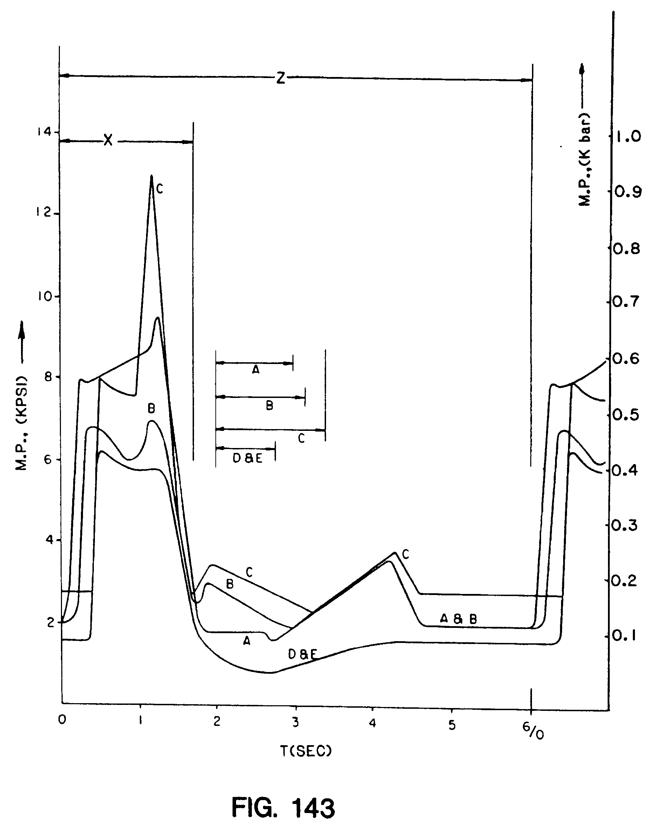

Figure 143 is a pressure diagram resulting from the servo commands of Figure 142.

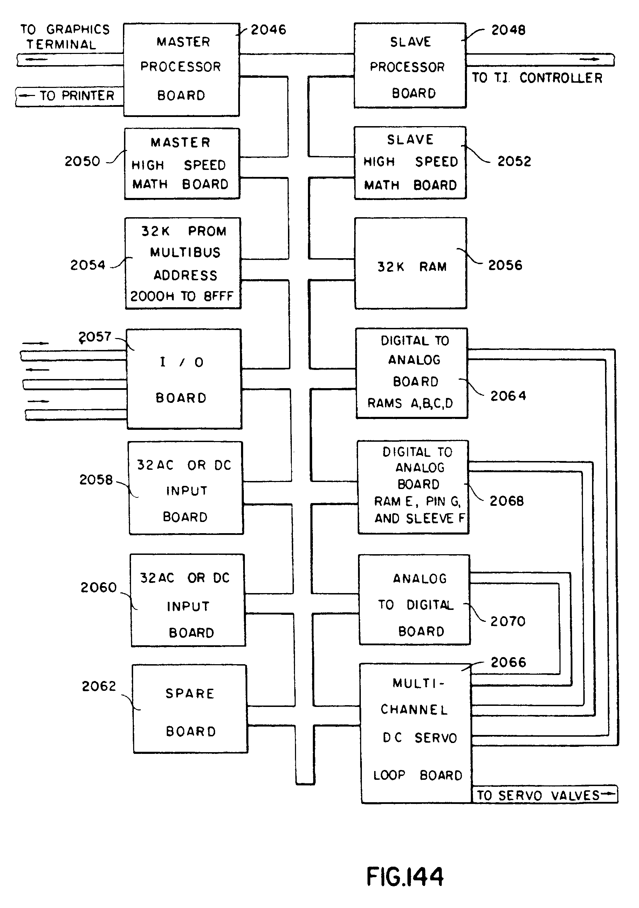

Figure 144 is a block diagram of the principal control circuit boards used in Figure 141 for injection/recharge control.

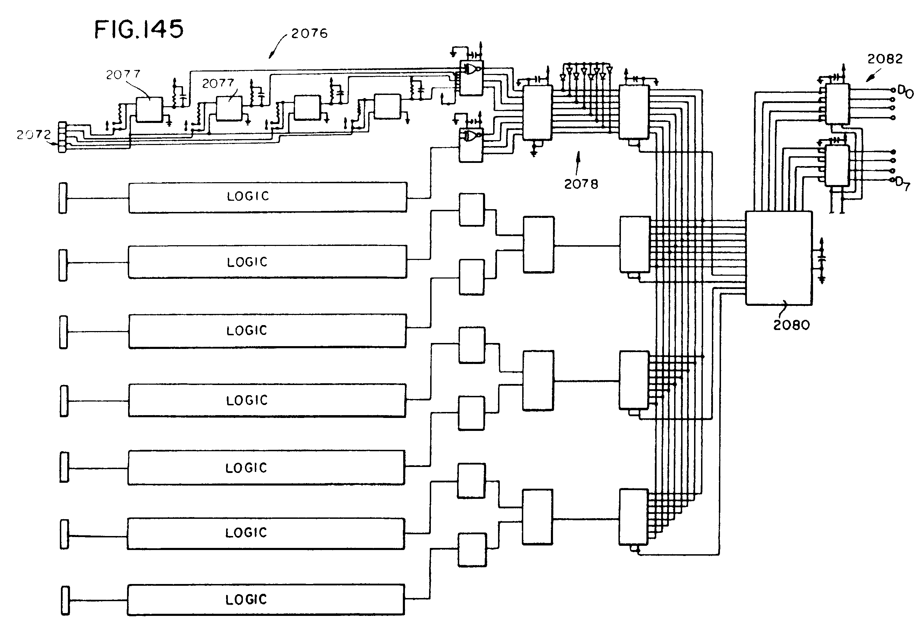

Figure 145 is a signal input circuit used in conjunction with this invention.

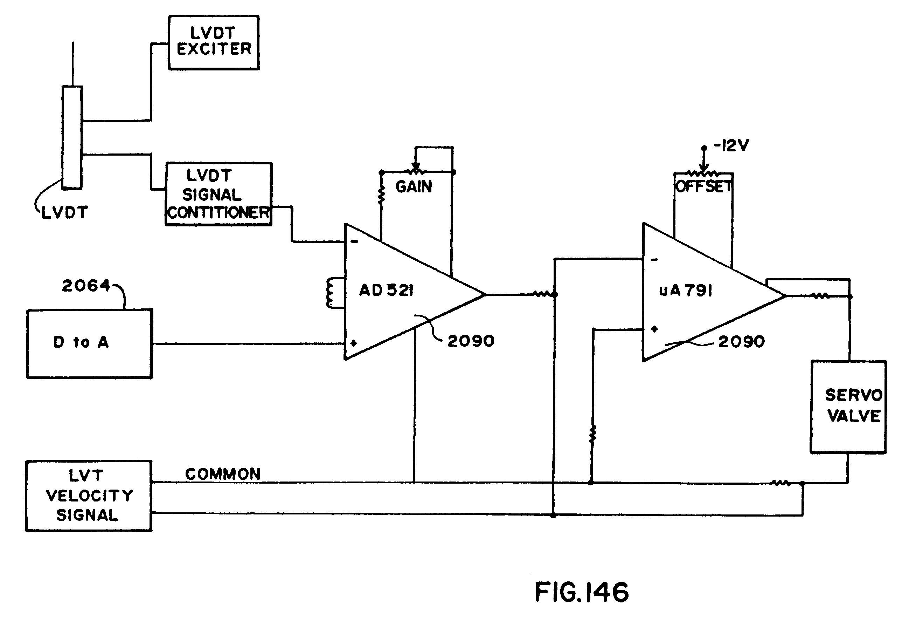

Figure 146 is a detail of the servo loop circuitry.

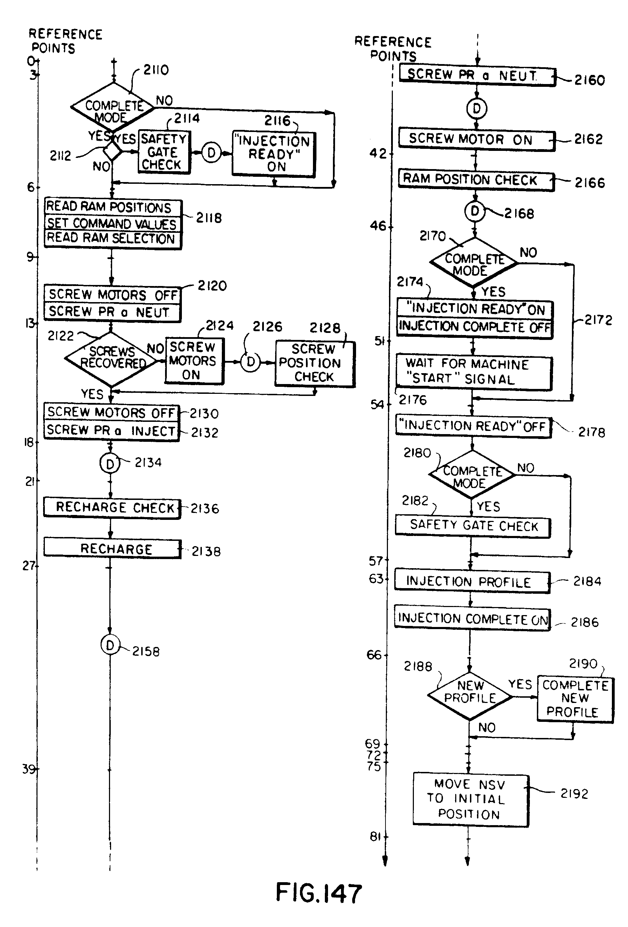

Figure 147 is a flow chart in two vertical columns of the program employed in conjunction with the injection/recharge processor unit.

### DETAILED DESCRIPTION OF THE INVENTION

### The Article

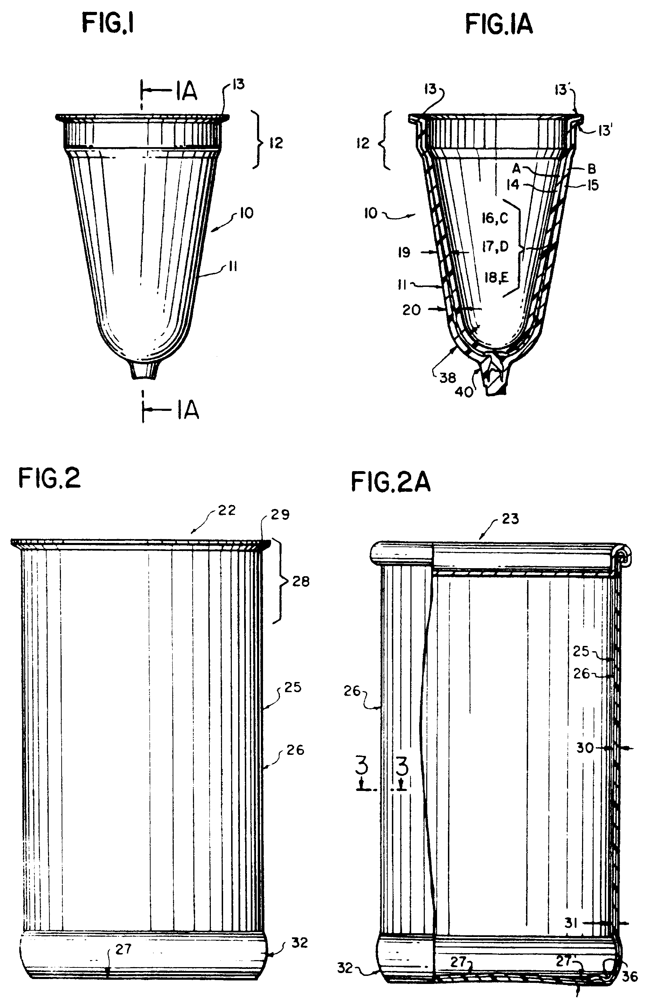

The multi-layer injection molded article or structure produced by the present invention may be in the form of a container, shown as a parison 10 in Fig. 1 and in the cross-section shown in Fig. 1A. The parison has a wall 11 with a marginal end portion 12, terminating in a outwardly-extending flange 13. In a preferred embodiment, the parison is of a size to form a 202 x 307 blow-molded container which when double seamed would have a nominal diameter of 2-2/16 inches and a nominal height of 3-7/16 inches (5.4 x 8.7 cm). Parisons of other sizes and shapes to form containers having the same or other dimensions are included within the scope of this invention. In the preferred embodiment, shown in Figs. 1 and 1A, the parison wall 11 is comprised of five co-injected layers 14-18 of polymeric materials. For purposes of the description herein, the inside layer 14, referred to as layer A, is formed of polymer A and may also be referred to as the inside structural or surface layer, inside layer or inner layer. The outside layer 15, referred to as layer B, is formed of polymer B, and may also be referred to as the outside structural or surface layer, outside layer or outer layer. Polymer "A" may be the same material as polymer "B". Internal layer 16, referred to as layer C, is formed of polymer C, and may also be referred to as the internal layer or the buried layer. There may be one or more layers between layer A and layer C, and between layer B and layer C. Such layers may perform one or more of the functions of being adhesives or being carriers for other materials such as drying agents or oxygen-scavenging compounds. In the preferred embodiment, layer 17, located between layers A and C and sometimes referred to as layer D, is formed of polymer D, and may also be referred to as an intermediate or as an adhesive layer. Similarly, layer 18, located between layers B and C and sometimes referred to as layer E, is formed of polymer E, and may also be referred to as an intermediate or as an adhesive layer. Polymer "D" may be the same material as polymer "E". The multi-layer parison wall 11 may be comprised of three layers A, B and C. In a five layer embodiment, the layers 16, 17 and 18 may be referred to in combination as the internal layers or buried layers.

The articles, parisons and containers which can be formed in accordance with this invention are thin, and are preferably very thin.

The thicknesses in inches (millimetres in brackets) of layers A, B, C, D and E in parison 10 at the base 13' of flange 13, at approximately mid-length 19, at a location 20 closer to the bottom of the parison and at location 38 still closer to the bottom are as follows. Flange 13: A 0.0095; B 0.0113; C 0.0010; D 0.0005; E 0.0022 (0.24; 0.29; 0.25; 0.01; 0.06). Mid-length 19: A 0.0350; B 0.0375; C 0.0028; D 0.0027; E 0.0030 (0.89; 0.95; 0.07; 0.07; 0.08). Location 20 close to bottom: A 0.0396; B 0.0508; C 0.0040; D 0.0020; E 0.0026 (1.00; 1.29; 0.10; 0.05; 0.07). Location 38 close to bottom: A 0.0363; B 0.0346; C 0.0073; D 0.0009; E 0.0009 (0.92; 0.88; 0.18; 0.02; 0.02). The overall length of parison 10 is about 3 inches including the length of sprue 40 (7.6 cm long).

The multi-layer, injection molded or blow-molded articles produced by the present invention may be in the form of the containers as broadly meant and represented by the parison embodiments shown in Figs. 1 and 1A, and in the form of the containers represented by the embodiments shown in Figs. 2 through 10A. Each of the containers 22 and 23, 50 and 56-62, and 68 has a multi-layer wall 25 having side wall 26 and bottom wall 27 portions. Side wall 26 has a marginal end portion 28 terminating in a flange 29. The lower portion of side wall 26 has an outwardly-extending contour 32. This contour tends to protect side wall labels (not shown) and enables the container to roll in processing equipment.

Comparing parison 10 with the finished containers, flanges 13 and 29 and the upper parts of the marginal end portions 12 and 28 are not substantially changed when the parison is inflated and are essentially formed in the injection process. The remainder of the multi-layer parison wall is stretched and thinned in the blow-molding process. In a preferred container such as designated 23 in Fig. 2A, inflated from a parison having approximately the thicknesses stated above, the thicknesses in inches (millimetres in brackets) of layers A, B, C, D and E at approximately mid-length 30 of side portion 26 (roughly corresponding to parison location 19), at lower portion 31 of side portion 26 (roughly corresponding to parison location 20) and at bottom portion 27 (roughly corresponding to parison location 38) are as follows. Mid-length 30: A 0.0165; B 0.0177; C 0.0013; D 0.0013; E 0.0014 (0.42; 0.45; 0.033; 0.036). Lower portion 31: A 0.0120 B 0.0154; C 0.0012.; D 0.0006; E 0.0008 (0.30; 0.39; 0.033; 0.015; 0.020). Bottom portion 27': A 0.0085; B 0.0081; C 0.0017; D 0.0002; E 0.0002 (0.21; 0.21; 0.043; 0.0051; 0.0051).

When the containers of the present invention are used for hot-filled food products, it is preferred that the thickness of the side wall be substantially uniform from the flange to the bottom radius 36, and that the bottom wall 27 be thinner than the side wall. Having the bottom wall thinner will cause it, rather than the side wall, to bow inwardly upon cool-down of the sealed, hot-filled container. Dimension for the bottom of a retortable container of the same size would be different.

Broadly, the present invention has utility with respect to materials which exhibit laminar flow which is important in maintaining the separateness of the layers of the materials in the injection nozzle central channel and in the injection cavity, as will be more fully described below. Materials and process conditions which lead to turbulent flow or to other forms of flow instability, for example melt fracture are undesirable. The materials described below are, for the most part, polymers which form melt material flow stress at the conditions of elevated temperature and pressure which are preferred in the practice of the present invention. Those skilled in the art having read the present specification will appreciate that other equivalent materials may be used. The materials preferably are also condensed phase materials, that is, they do not foam when the material is not under pressure.

In a preferred embodiment, the polymers of structural layers A and B are polyolefins or blends of polyolefins, the polymer of internal layer C is an oxygen-barrier material, preferably a copolymer of ethylene and vinyl alcohol, and the polymers of internal layers D and E are adhesives whose function is to assist in adhering polyolefin layers A and B to the ethylene vinyl alcohol, oxygen-barrier layer C.

When the injection molded and injection blow molded article is to be used as a container for oxygen-sensitive food, the preferred polymeric material for each of the structural layers A and B is a polyolefin blend of 50% by weight of polypropylene homopolymer (Exxon Inc. PP. 5052; melt flow rate of 1.2) and 50% by weight of high density polyethylene (DuPont Alathon 7820; 0.960 density and a melt index 0.45); the preferred polymeric material for layer C is a copolymer of ethylene and vinyl alcohol ("EVOH") (Kuraray EVAL-EPF; melt index of 1.3), which functions as an oxygen-barrier layer; and the preferred polymeric material for layers D and E is an adhesive comprising a modified polypropylene in which maleic anhydride is grafted onto the polypropylene backbone (Mitsui Petrochemical Ind., Ltd., Admer-QB 530; melt flow rate of 1.4). Containers have been made from these materials and in which, per container, there is 0.616 gram EVOH, 0.796 gram of adhesive and 11.02 grams of polyolefin blend. The weight of blend in the inside A structural layer is about 5.40 grams; in the outside B structural layer, about 5.62 grams. The weight of adhesive in layer E is about 0.46 gram; in layer D, about 0.34 gram.

The principal requirements for the material of structural layers A and B are impact resistance, low moisture vapor transmission and a desired high degree of rigidity. Depending upon the desired end use of the container, alternative materials for the structural layers include high density polyethylene, polypropylenes, other blends of polypropylenes and polyethylenes, low density polyethylenes where a flexible container is desired, and polystyrenes, polyvinylchloride and thermoplastic polyesters such as polyethylene terephthalate or its copolymers. Suitable copolymers of polyethylene terephthalate are those in which a minor proportion, for example up to about 10% by weight, of the ethylene terephthalate units are replaced by compatible monomer units in which the glycol moiety of the monomer is replaced by aliphatic or alicyclic glycols. These suitable copolyesters based on polyethylene terephlhatate are generally prepared from terephthalic acid or its acid forming derivatives and ethylene glycol or its ester forming derivatives. They can be prepared from the condensation polymerization of a single diacid and two diols, or of two diacids and a single diol. Examples are glycol modified polyethylene terephthalate, referred to as PETC, made from dimethyl terephthalate, ethylene glycol and cyclohexane dimethanol, and one referred to as PTCA, made from dimethyl terephthalate and dimethyl isophthalate and cyclohexane dimethanol. Those skilled in the art will select appropriate and suitable materials depending on the end use of the product. For instance, although homopolymers of polypropylene by themselves may be too brittle when the article is to be used at low temperatures, suitable copolymers and impact modified grades of polypropylene may be employed. The structural layers may contain fillers, such as calcium carbonate or talc, or pigments, such as titanium dioxide.

Internal layer C forms the desired barrier, whether for oxygen or another gas or moisture or other barrier properties such as a barrier to radio frequencies. When oxygen barrier property is desired and the packaged product has high oxygen sensitivity, EVOH is the preferred material for layer C. High oxygen barrier property may be attained with a very thin layer of EVOH, on the order of about 0.001 inch (0.025 mm) thickness, which, in view of the relatively high cost of EVOH, is quite important from the economic standpoint of cost-effectiveness. The present invention provides for continuous, high-speed manufacture of multi-layer containers having such a thin layer of EVOH which is substantially continuous throughout the wall of the container. Where oxygen sensitivity of the packaged product exists, but is relatively low, other oxygen-barrier materials such as nylon, plasticized polyvinyl alcohol and polyvinylchloride may be used. Although most acrylonitrile and polyvinylidene chloride copolymers as currently produced probably would not be suitable, with appropriate modifications it is contemplated these might be employed. For certain packaged products a foam may be employed as an internal layer.

Adhesive layers D and E are preferably formed of the above-described maleic anhydride graft polymer when the barrier layer C material is EVOH and the material of the adjacent structural layer is polypropylene or is a blend of polypropylene and high density polyethylene. When high density polyethylene forms a structural layer adjacent an EVOH barrier layer, an adhesive between them may be employed in accordance with the teachings of the aforementioned applications, International Patent Publication Nos. WO81/00231 and WO81/00230. Those applications disclose that a suitable adhesive for use with structural layers of polypropylene-polyethylene block copolymers, is a blend of ethylene vinyl acetate copolymer and a graft copolymer. They also disclose that a suitable adherent is the aforementioned blend wherein the graft copolymer is of high density polyethylene and a fused ring carboxylic acid anhydride.

As mentioned, EVOH is a relatively expensive material and, therefore, when it is employed as the polymer for oxygen-barrier layer C, it is highly desirable to keep the thickness of the layer to the minimum needed to impart oxygen-barrier property to the container's wall. The present invention facilitates reliable, high-speed manufacture of containers having an oxygen-barrier layer C as thin as 0.001 inch (0.025 mm) or less and which is substantially continuous throughout the wall and is substantially completely encapsulated by the inside and outside layers A and B.

When layer C is an EVOH oxygen-barrier polymer, its barrier properties may be protected against moisture-induced degradation by the incorporation of a drying agent into one or more of the layers, as is more fully described in our EPA 0059274. Further, one or more of the layers may incorporate oxygen-scavenging material, as is more fully described in EPA 0083826.

In the preferred injection molded articles and injection blow-molded articles, the internal layer 16 and all internal layers are substantially continuous and substantially completely encapsulated within the outer layers 14, 15. Most preferably, there are no discontinuities or holes in the internal layer or in the encapsulating layers, and the terminal end 33 (Fig. 5) of the internal layer (sometimes referred to hereinafter as the leading edge of the internal layer or buried layer) extends sufficiently into the marginal end portion 12, 28 of the side wall 11, 26 of the parison and container, respectively, such that when the article is covered or sealed, the terminal end of the internal layer material is included within the cover or seal area, whereby there is a relatively long path through the wall of the article for permeation of unwanted material, e.g., gas. In a flanged container which is to be double seamed, the most preferred embodiment is one wherein the terminal end of the internal layer extends into the flange and the location of the terminal end is uniform about the circumference of the flange. For the present purposes, the term uniform encompasses a variation of about plus or minus .030 inch (0.76 mm). Also, in the most preferred embodiment, the terminal end of the internal layer extends to at least half of the length of the flange. An acceptable container is also obtained when the terminal end of the internal layer extends to the base of the flange, such that when the double seam is formed, as shown in Fig. 9C, a portion of the double seam sufficiently overlaps the end portion 28 of the container side wall which contains internal layer that there remains a relatively long travel path for permeation of an unwanted material through the side wall structure. The less need there is for a completely continuous and completely encapsulated internal barrier layer, the more tolerable will be a lower reaching terminal end, non-uniformity of location of the terminal end, and, for example pinhole-sized discontinuities in the internal layer or in the outer surface layer. Thus, in many packaging applications, there are less stringent requirements with respect to barrier layer continuity, outer structural layer encapsulation of the barrier layer, and uniformity and extension of the barrier layer into the flange. In such applications, a container wherein the leading edge or fold line (e.g. 44 in Fig. 9D) extends approximately to or just within the pinched wall thickness area formed during the double seaming operations, will suffice. Suitable containers could contain minor imperfections such as pin holes and relatively insignificant discontinuities in the barrier material or in the encapsulating material, and non-uniform leading edge 33 of the internal layer. The terms substantially continuous, substantially encapsulated and substantially uniform are intended to encompass such acceptable containers.

It is to be understood that with respect to all inventions disclosed and claimed herein, the terms "marginal end portion of a side wall" applies equally to the marginal edge or end portion of an article having no side wall, for example a phonograph record, a disc, or a blank.

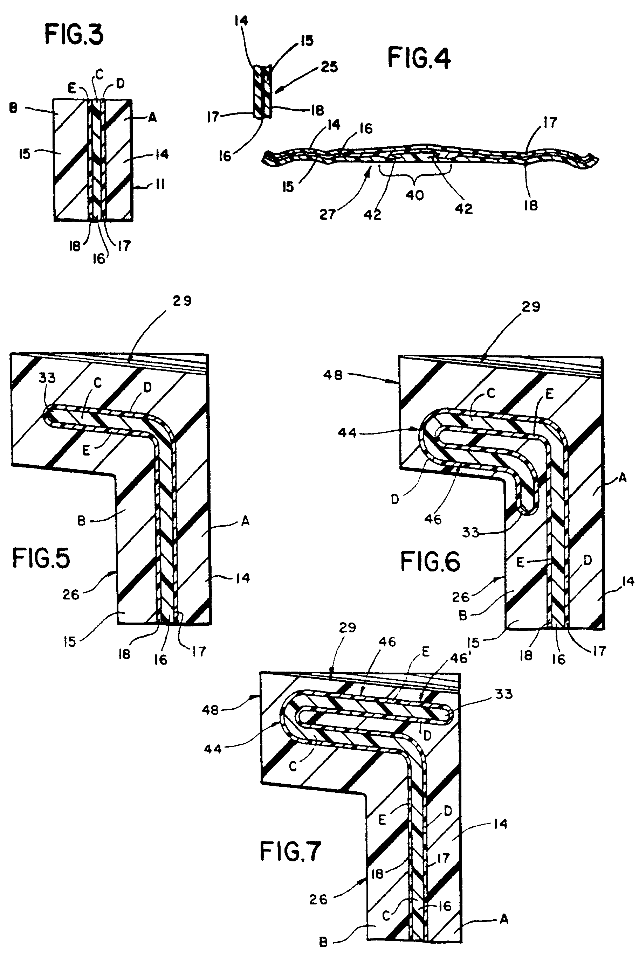

Fig. 3, an enlarged portion broken away from side wall 26 on the left of container 23 of Fig. 2A, clearly shows the relative positions and thicknesses of the respective five layers of the preferred multi-layer injection molded or injection blow molded container of this invention.

Fig. 4, a vertical sectional view of an enlarged broken away portion of bottom wall 27 and of side wall 25 of the container of Fig. 2A, shows that in a preferred injection molded or injection blow molded container for oxygen sensitive food products which must be heat sterilized in the container, the bottom wall total thickness is on the average less than the side wall total thickness. Also, generally speaking, the thickness of the internal or barrier layer is on the average greater in the bottom wall than in the side wall. More particularly, the ratio of the thickness of the internal layer or barrier layer 16 in the bottom wall relative to the total thickness of the bottom wall, is greater than the ratio of the thickness of the internal layer in the side wall relative to the total thickness of the side wall. Preferably, the thickness of the internal layer in the bottom wall is at least the thickness of that layer in the side wall. Fig. 4 also shows that the total thickness of a central portion of the container, generally designated 40, which includes the sprue area, is thicker than the total thickness of other areas of the rest of the bottom wall, and that at least in central portion 40, the thickness of the internal layer is greater than the average thickness of the internal layer in the side wall. Central portion 40 includes downwardly depending trails or tails 42 of internal layer 16 and adhesive material 17, 18 encapsulated within outer structural layer B, 15.

Figs. 5 through 7 are enlarged cross-sections as might be taken through various locations of the marginal end portion of a preferred injection molded or blow-molded five layer open ended plastic container such as the one shown in Fig. 2. More particluarly, Fig. 5 shows that the marginal end portion of the internal layer 16 extends into the container flange 29, and the terminal edge or terminal end 33 of the internal layer is encapsulated by intermediate layer material, which can be comprised of either or both of adhesive layers 17 and 18, also respectively designated the second and first intermediate layers. As will be explained, preferably, terminal end 33 of internal layer 16 is encapsulated primarily or entirely by first intermediate layer material, adhesive layer E, 18.

Fig. 6 also shows another embodiment wherein the terminal end 33 of internal layer 16 is encapsulated within intermediate or adhesive layer material in a portion of the marginal end portion of a container side wall. Fig. 6 shows a portion of the marginal end portion of the internal layer 16 or internal layers 16, 17, 18 folded over toward the outside of the container within the marginal end portion of the container side wall 26. The internal layer or layers are folded over along a fold line generally designated 44 near the terminal end 48 of the container flange 29. The folded over portion, designated 46 of the internal layer or layers, extends downwardly in outside layer B, 15 of the side wall. The terminal end portion of the internal layer is that portion of the marginal end portion which is near or adjacent the terminal end, usually, the terminal end portion is within the length of the folded over portion of the internal layer.

Fig. 7 shows another embodiment wherein the terminal end 33 of internal layer 16 is encapsulated within intermediate adhesive material. In Fig. 7, a portion of the marginal end portion of the internal layer 16 or layers 16, 17, 18 is folded over along a fold line 44 toward the inside of the container and the folded over portion and marginal end portion 46 is within flange 29.

In the articles of this invention having a portion of the internal layer or layers folded over, the leading edge of the internal layer in the marginal end portion, usually the flange, of article, parison or container, can be the fold line 44 or the terminal end 33 and as meant herein, its meaning encompasses the furthest extent of the internal layer from the bottom wall whether it be the fold line, the terminal end or some other portion of the internal layer. Preferably the leading edge or the plane along the leading edge of the internal layer is substantially unbiased relative to the axis of the containers on the terminal end 48 of the container side wall. In the articles of this invention, the terminal end of the internal layer or layers is more removed from the terminal end of the container, for example, terminal end 48 of flange 29, than is another adjacent directionally-related marginal end portion of the internal layer or layers. The terminal end of the folded over portion of the internal layer or layers is more removed than the fold line is from the terminal end of the container. Also, there is less variation in the distance from the fold line to the terminal end of the container than from the terminal end of the internal layer to the terminal end of the container. The folded over portion may but need not lie near another portion of the internal layer as shown. It could extend in a direction away from another portion of the internal layer, for example such that the terminal end of the folded over portion is further removed than any other folded over portion is from the folded over portion or the non-folded over portion of the internal layer. As contemplated herein, the folded over portion need not extend in a relatively straight line as shown, but it may have, curled, compressed or other configurations. It is to be noted that in a single container, the marginal end portion of the internal layer or layers may have different configurations at different circumferential locations about the container flange. For example, in one radial segment of an arc about the circumference of the flange, the marginal end portion of the internal layer or layers may not be folded over, as in Fig. 5, in another segment it may be folded over slightly, in another segment, it may be more folded over to the outside of the container, as in Fig. 6, and, still in another segment, it may be folded over to the inside of the container slightly, greatly, or moderately as shown in Fig. 7. Another possible configuration is one wherein the terminal end of the unfolded portion of the internal layer and the fold line are located in the terminal end portion of the container side wall. In Fig. 7, the terminal end of the folded over portion may extend downwardly within inside layer 14. Methods of forming articles having one or more folded over internal layers are disclosed later herein.

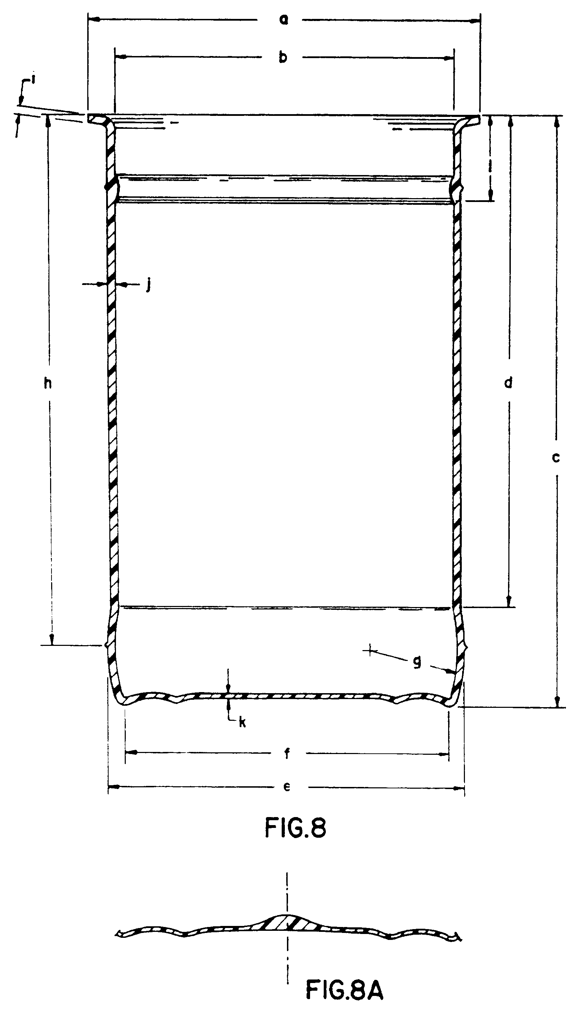

Fig. 8, a schematic vertical section through a multi-layer plastic container of this invention whose internal layers are not shown, represents an estimate of the overall dimensions of a typical 202 by 307 inch (5.4 x 8.7 cm) container, based upon the dimensions of the blow-mold cavity in which the container would be blown, considering some shrinkage of the container due to cooling upon removal from the blow-mold cavity. The dimensions represented by the letter designations are shown in the Table below.

**TABLE A**

| DIMENSIONS FOR FIGURE 8 | | | | |
|---|---|---|---|---|
| Letter Designation | Dimension (inches) | | millimetres | |
| | Typical | Range(±) | Typical | Range(±) |
| a | 2.28 | .010 | 57.8 | 0.25 |
| b | 2.08 | .010 | 52.8 | 0.25 |
| c | 3.40 | .010 | 86.4 | 0.25 |
| d | 2.95 | .010 | 74.9 | 0.25 |
| e | 2.19 | .010 | 55.6 | 0.25 |
| f | 1.90 | .010 | 48.3 | 0.25 |
| g | .55 | .010 | 14.0 | 0.25 |
| h | 3.08 | .010 | 78.2 | 0.25 |
| i | .027 | .003 | 0.69 | 0.08 |
| j | .031 | .010 | 0.79 | 0.25 |
| k | .020 | .010 | 0.51 | 0.25 |
| l | .37 | .010 | 9.4 | 0.25 |

Fig. 8A schematically shows the profile of the bottom of a plastic container of this invention whose internal layers are not shown. More particularly, Fig. 8A is a tracing of the bottom surface of an actual container, and is an approximation of the inside surface based upon thickness measurements taken at various points along the bottom. Fig. 8A shows that the thickness of the central portion of the bottom is greater than that of the rest of the bottom.

Figs. 9 through 10A are enlarged vertical sections through various embodiments of closed multi-layer plastic containers of this invention having internal layers folded over in different configurations and at different locations within the marginal end portion of the container side wall.

In Fig. 9 there is shown a container 50 wherein the marginal end portion of the internal layer 16 (hereinafter, for Figs. 9 through 10A, referring to the layer individually or collectively with layers 17 and 18) is not folded over, and the marginal end of the container side wall 26 has a container end closure 52 double seamed thereto. The double seam includes a suitable adherent material 54 between the container flange and the inside surface of the end closure portion which runs from its arcuate portion at the top of the container side wall, through the portion which forms the double seam, to the terminal edge of the end closure.

Fig. 9A shows another embodiment represented by another marginal end portion of either the container shown in Fig. 9 or another container having an end closure 52 double seamed thereto wherein a portion of the marginal end portion of internal layers 16 is folded over towards the outside of the container in container flange 29. The folded over configuration shown in Fig. 9A is preferred for a double seamed container for packaging oxygen sensitive foods.

Fig. 9B represents another embodiment of a container of this invention identical to those shown in Fig. 9 and 9A, except that the folded over portion of the marginal end portion of the internal layer 16 in Fig. 9B is folded over toward the inside of the container.

In Fig. 9C, the folded over portion does not extend as far into container side wall flange 29 as it does in Figs. 9A and 9B. Rather, it only extends to the arcuate portion of the top end of the container side wall beyond the point where adhesive 54 is positioned between the inside arcuate surface of the end closure and the convex upper portion of the container side wall. The location of the folded over portion of the internal layer in Fig. 9C does provide an acceptable barrier to unwanted substances. For example, when the internal layer 16 is an oxygen barrier material, the location of the folded over portion provides an adequate barrier since the travel path for oxygen is an extended one which requires the oxygen to travel up through the outer layer 15 over the folded over portion and back down through the inner layer 14 to reach the inside of the container.

In Fig. 9D, the fold over portion located in the marginal end portion of the container side wall is folded over toward the outside of the container, and fold line 44 which in this case is the leading edge of the internal layer extends to about the bottom of the double seam. While perhaps not providing an adequate barrier for the long shelf life for a highly oxygen sensitive food product this configuration and location of the folded over internal layer or layers would provide adequate barrier properties for less sensitive food products and products which are not oxygen sensitive. Preferably at least part of the folded over portion of the internal layer is in the flange.

Figs. 10 and 10A show embodiments of the multi-layer plastic containers of this invention having a flexible lid sealed to the container flange. In Fig. 10, the folded over portion extends upward into and toward the inside of the container side wall. In Fig. 10A, the folded over portion extends downward and into the outside portion of the container side wall. Whereas Figs. 9 through 10A show substantially rigid end closures double seamed, and flexible lids otherwise sealed to embodiments of the containers of this invention, other suitable end closures, lids and securements are contemplated to be within the scope of this invention. The end closures 52 which have successfully been double seamed to the marginal end portions of the containers of this invention were metal end closures made of aluminum, organically coated TFS steel and ETP steel and were double seamed to the container flanges by use of a conventional double seaming machine such as a Canco 400, 006 or 6R double seamer, modified with special seaming rolls. More particularly, the second operation rolls had different grooves, shorter axially and shallower diametrically then those commonly used for metal can bodies. Such rolls are currently used for double seaming metal end closures on plastic ham cans and on composite fiber cans. Any suitable metal end closure can be employed and the methods and means of securing or double seaming the ends to the containers are within the knowledge of those skilled in the art. Examples of suitable adherents 54 are sealing compounds sold under the trade designation SS A44 by Dewey & Almy, a Division of W. R. Grace & Company for packaging fruit and vegetable products, and made and sold under the trade designation M 261 by Whittaker Corp. for packaging meat products. Flexible lids such as shown in Fig. 10 and 10A can comprise single or multi-layer plastic materials and can include one or more foil layers. The flexible lids 64 may be secured in any suitable manner to the container side wall, for example by heat sealing or by use of an adhesive. Suitable adhesives for flexible lids for packaging hot-filled food products include a hot melt material chosen to provide a peel strength sufficiently low in magnitude to permit easy removal by peeling lid 64 from the container 26 and to maintain a hermetic seal to protect product integrity. Flexible lids having a suitable adherent thereon can be obtained under the trade designation of SUN SEAL EFAH-123040 PET/ALU./PE/SEALANT AH, and of SUN SEAL EFKW-123020 PET/ALU./PE/SEALANT-KW from SANEH Chemical of Japan.

It is to be understood that although the aforementioned discussion refers to five layer containers, the articles contemplated to be within the scope of the inventions need not have a side wall, and they may be comprised of three layers, such as generally represented by Fig. 9D, or they may be comprised of more than three layers, for example seven or more layers.

### The Apparatus

An injection blow molding line which includes the apparatus of this invention, suitable for forming the articles, parisons and containers of this invention according to the methods of this invention, will now be described. Having reference to Figs. 11, 12, 13 and 14, the injection line, generally designated 200, includes three hoppers, 202, 204 and 206 which receive granulated polymeric material therein and pass it to three respective underlying heated injection cylinders 208, 210 and 212. Each cylinder contains a reciprocating injection screw rotatably driven by respective motors 214, 216, 218 to melt the granulated polymeric material. Each injection cylinder is located to the rear of rear injection manifold 219, a rectangular solid block formed of steel. Manifold 219 has polymer flow channels drilled in it and each injection cylinder has a nozzle which injects polymeric material into the opening of an associated flow channel in the manifold's rear face. The channels in the manifold divide in two, the flow streams from two cylinders, 208 and 212, so that five polymer flow streams are created and exit from the forward portion of manifold 219.

The rear injection manifold 219 is bolted by bolts 259 to ram block 228, a rectangular solid block of steel having polymer flow channels drilled therein. The five flow streams of polymeric materials pass out of manifold 219 and into the channels within the ram block 228. The channels within the ram block lead to the respective sources of polymeric material displacement which preferably are five rams, 232, 234, 252, 260 and 262, which are bolted to the top of the ram block (see Fig. 14). In accordance with a displacement-time schedule, described later, each ram is moved to force the material of each of five polymer flow streams through downstream channels drilled in the ram block 228, through channels drilled in a forward ram manifold 244 which is a rectangular steel block bolted by bolts 263 to the front of the ram block, through channels drilled in manifold extension 266 which is a cylindrical steel block bolted to the front face of the ram manifold, and through channels drilled in a runner extension 276 which is a cylindrical steel block whose front face 952 is bolted by bolt 174 to the runner block 288 (see Fig. 31). The runner extension passes through a bore 280 in a first fixed support means or fixed platen 282 and extends into a bore 286 drilled in runner block 288 in which the front end of the runner extension is supported. The polymers flow out of the channels of the runner extension and into channels drilled in the runner block. The channels in the runner block lead to two T-splitters 290 (see Fig. 28) inserted in the runner block, then through channels in the runner block to four Y-splitters 292 (see Fig. 28) inserted in the runner block, and then through channels in the runner block to eight feed blocks 294 (see Figs. 32 and 41) inserted in the runner block, and, finally from the feed blocks to eight injection nozzle assemblies (also called nozzles or injection nozzles), generally designated 296, each nozzle assembly being mounted in the forward end of a feed block.

Eight nozzles are mounted in runner block 288 in a rectangular pattern of two columns of four nozzles each (see Figs. 29A, 29B). Each nozzle 296 injects a multi-layer shot of polymeric materials into a juxtaposed injection cavity 102 mounted on injection cavity carrier block 104 in turn mounted on a fixed injection cavity bolster plate 950 (Fig. 98), to form a multi-layer parison.

A side-to-side moveable core carrier plate 112 mounted on an axially moveable platen 114 carried by tie bars 116 carries sixteen cores 118 in two eight-core sets and is moveable to align one set of eight cores and seat them within eight injection cavities 102. A cylinder (not shown) drives the carrier plate transaxially from side to side to position the cores respectively with the injection cavities 102 and blow-mold cavities 108. Suitable driving means known to the art, such as generally designated 119 and including drive cylinder 120, a housing, oil reservoir, hydraulic pump, filtering system and related electrical cabinets, moves the moveable platen along the tie bars to seat the set of eight cores in the injection cavities. This system designated 119 also drives all of the extruders 210, 212 and 214, and it drives core carrier plate 112. Concurrently with the injection forming of the eight parisons, eight parisons previously injected onto the other set of eight cores are positioned in associated blow-mold cavities 110, mounted in blow-mold carrier blocks 108, in turn mounted in blow-mold bolster plate 106 (see Fig. 13), for inflation into the desired container shape. When the injection cycle is completed (eight parisons are formed), the platen is moved rearwardly and the core carrier plate is reciprocated to the opposite side of the machine where, when the platen is moved forwardly, the eight cores carrying parisons are seated within an associated set of blow-mold cavities 110 in which the parisons are inflated.

Further details of the apparatus will now be described having particular reference to the portions thereof through which pass the melt streams of material for each of the layers comprising the injected articles. In the preferred embodiment, there are three sources of supply of polymer material, namely, hopper 202 of extruder unit "I" for supplying the polymer material which will form the inside and outside structural layers A and B, hopper 204 on extruder unit "II", for supplying the polymer material C which will form the internal layer C, and hopper 206 of extruder unit "III" for supplying adhesive polymer for forming adhesive layers D and E. It will be understood that in the illustrated embodiment the same polymeric material is used to form layers A and B and the same polymeric material is used to form layers D and E. When layers A and B are formed of different materials, separate extruder units Ia and Ib (not shown) are used. When layers D and E are formed of different materials, separate extruder units IIIa and IIIb (not shown) are used.

Considering extruder unit I, the polymer melt flow stream is forced out of cylinder 208 by its reciprocating extruder screw which moves the polymer material through nozzle 215, sprue bushing 221 and into channel 217 drilled in rear injection manifold 219. The flow of the structural polymer melt material is divided in manifold 219 into two equal-distance channels 220, 222 drilled in the manifold and whose paths proceed in opposite horizontal directions. Channel 220, which is split to the right (upwards in Fig. 14), carries the polymer melt stream material which will form the A inside structural layer of the article to be formed. Channel 222, which carries the polymer melt stream which will form the B structural outside layer of the article, is split to the left and turns roughly 90° and passes axially and horizontally out of a hole in the forward face 224 of the rear manifold 219 and into on aligned channel drilled in the ram block 228. In ram block 228, each respective channel 220 and 222 communicates with a check valve 230 and then with the inlet to a source of polymer material displacement and pressurization, which, in the preferred embodiment, are rams 232, 234, each ram having connected thereto a servo controlled drive means or mechanism, here shown as including a servo manifold 236 and a servo valve 238. One of the servo controlled drive means, generally designated 180, for ram 252, and representative of the servo drive means for each of the rams employed in this invention, is shown in Figs. 18, 18A and 18B. The servo system controls the displacement versus time movement of the rams.

With specific reference to Fig. 14, the operations of the five rams, 234, 232, 252, 260 and 262, are controlled by the selective application of drive signals to the five respective servo valves 238, 254 and 264 coupled to each of these rams. Figs. 17, and 18 and 18A, show the conventional ram constructions employed and show, for ram 252, a hydraulically driven ram piston 253 and servo control means comprised of controllable servo valve 254 which provides hydraulic oil into double ended hydraulic cylinder 181 for driving the ram piston 253 into and out of position. Each of the rams is driven in accordance with a desired time sequence for providing appropriately dimensioned pressures for insuring the manufacture of the article with the proper configurations. As will be set forth in further detail below, major functions of the injection control are accomplished by virtue of a system processor which controls the overall movement of the various major segments of the apparatus for performing the injection sequence. Thus, a predetermined operational sequence is programmed into the system processor for moving the moveable core carrier plate along the tie bars for positioning the sixteen cores in their respective eight core sets. The processor drive acts to drive the moveable platen by energization of the hydraulic cylinder, generally represented as 119, as by opening a valve and permitting hydraulic oil to flow therein, so that the parisons previously described may be placed in the appropriate positions both for injection onto one set of eight cores and for blow-molding for inflation into the desired container shape from the other set of eight cores. The operations, including clamping, movement of the moveable platen, and other major injection cycling sequences are thereby controlled by the system processor in accordance with movements governed by means of various limit switches strategically placed at locations defining the limits of movements of these various apparatus segments within the general machine configuration. A second processor, suitably programmed, takes over the specific operation of carrying out the injection cycle when the moveable platen is properly positioned for an injection cycle on the injection cavities. This second processor directly controls the various rams by controlling the hydraulic fluid flow into the ram cylinders for purposes of applying pressure along the respective feed channel operatively connected to the ram. Since ram position is critical in determining ram pressure, appropriate feedback mechanisms are provided from each ram servo mechanism for feedback to the second processor and utilization in the program for purposes of accurately determining ram position. As shown in Fig. 18A, two transducers are employed, the first transducer 184 determining the position of the cylinder, and thereby the appropriate pressure, and the second transducer 185 determining the velocity of movement of the cylinder within the servo. Signals along appropriate lines 184A and 185A, are electrically conducted from the position transducers to the second processor for control purposes. Each of the servos shown in Fig. 14 is provided with corresponding transducers for accurately determining their respective positions. The relationship of ram position to pressure is shown in greater detail and described further below.

From the rams, each channel 220, 222 proceeds axially and horizontally through bores drilled in ram block 228 and, by means of respective holes in forward face 240 of the ram block and matched aligned holes in rear face 242 of forward ram manifold 244, channels 220 and 222 pass out of ram block 228 and into channels drilled in forward ram manifold 244. In forward ram manifold 244, each channel 220 and 222, for flow of the respective inside structural material A and outside structural material B, turn approximately 90° and run generally perpendicular to the axis of the machine to a point where the channels again turn 90° and again travel in the axial direction to holes in forward ram manifold forward face 246.

In similar fashion, the polymer material which is to form the internal layer C is forced out of injection cylinder 210 of extruder unit II by an extruder screw which moves the material forward from the extruder through a nozzle 248, sprue bushing 249, and into central flow channel 250, which enters the rear face of rear injection manifold 219, turns 90° and travels left (downward in Fig. 14) in a horizontal path above channel 220 until it reaches the axial center line of the rear injection manifold where channel 250 turns 90° and travels axially out of a hole in forward face 224 of the rear manifold 219 into a matched, aligned hole in the rear face 226 of ram block 228. In ram block 228, channel 250 communicates with a check valve 230 and then with the inlet to a source of polymer material displacement and pressurization, which, in the preferred embodiment, is ram 252 having servo 254 and manifold 256 connected thereto. From ram 252, channel 250 proceeds axially and horizontally to a hole in the forward face 240 of ram block 228. Channel 250 enters a hole in the rear face 242 of forward ram manifold 244 and passes through manifold 244 in an axial path to a hole in the forward face 246.

Extruder III forces the polymer material which is to form the internal D and E layers of the article through injection cylinder 212, through nozzle 213, sprue bushing 223 and into channel 261, which enters the rear face of rear injection manifold 219. In the rear manifold, channel 261 turns approximately 90° and travels on a plane below channel 217 in a horizontal path toward, and until the channel meets, the axial center line of the rear manifold 219. Channel 261 then turns approximately 90° and proceeds a short distance in the axial direction. It then splits into two oppositely directed horizontal channels 257, to the left, and 258, to the right (up in Fig. 14), which travel perpendicularly to the axis toward the opposing sides of the rear manifold, where they each again turn about 90° and travel axially, out of holes in the forward face 224 of the rear manifold. Flow channels 257 and 258 for the polymer of layers E and D are located in the rear injection manifold 219 below the flow channels for the polymer of layers B and A. Those holes communicate with matched aligned holes in the rear face 226 of ram block 228 which form continuations of channels 257, 258 in the ram block. Each of those channels communicates with a check valve 230 and then with the inlet to sources of polymer material displacement and pressurization, which, in the preferred embodiment, are rams 260, 262 each of which has a servo valve 264 and servo manifold 265 connected thereto. From rams 260, 262, the channels proceed forward in an axial, horizontal direction and communicate with matched, aligned holes in the ram block forward face 240 and in the forward manifold rear face 242. Channels 257, 258 continue axially, horizontally forward a short distance into forward manifold 244 where each again turns 90° and returns toward the axis until they reach respective points near but spaced from the axis where each turns 90° and travels again in the axial direction to where they communicate with holes in forward face 246 of the forward ram manifold 244. The rear and forward ram manifolds 219 and 244 are each attached to opposite faces of the ram block by respective bolts 259, and 263.

To prevent clogging of the melt flow channels, particularly those where the dimensional clearances are small, e.g. in the nozzle assemblies 296, appropriate filters may be placed in the flow channel of each melt material, preferably between the extruders and the rams. It is desirable that each flow stream prior to reaching the nozzles pass through a restricted area at least as restricted as the most restricted polymer flow stream path in the nozzles, to there remove any undesired matter from the polymer stream.

Channels 220, 222, 250, 257 and 258 then travel through bores drilled in manifold extension 266 connected to the forward face 246 of the forward ram manifold 244. On the forward face 268 of the manifold extension 266 are a plurality of nozzles 270, one for each channel which passes through the manifold extension. Each nozzle is seated in a pocket 272 at the rear face 274 of runner extension 276. The runner extension 276 is mounted at its rearward end portion 278 through a bore 280 in fixed platen 282, and at its forward end portion 284 through a bore 286 in runner block 288. As channels 220, 222, 250, 257 and 258 pass through manifold extension 266, they are rearranged (when viewed in vertical cross-section) from a spread out pentagonal or star pattern at its rearward portion to a more tightened pattern at its forward end portion, such as the quincuncial pattern shown. As the channels pass through runner extension 276, they are rearranged, when viewed in vertical cross section, from the pattern of the quincunx, at the rear end portion 278 of the runner extension, to a substantially flattened horizontal pattern near the forward end portion 284 of the runner extension. At the forward end portion 284, each channel is split into sub-channels, as will be more fully explained in conjunction with Fig. 29, and directed through channels in a runner or runner block 288 to two T-splitters 290, and then through channels in runner block 288 to four Y-splitters 292 and then through channels in runner block 288 to eight feed blocks 294 (two shown), each one of which is mated with a nozzle assembly, generally designated 296. Each feed block contains five passageways or feed channels, each of which carries a stream of polymer melt material which is to form a layer of the injected article.

Referring to Fig. 15, entrances designated 221 I, 249 II and 223 III to channels 217, 250 and 261 are cut into and through rear manifold 219 at different respective elevations and travel along horizontal paths. More particularly, entrance 219 II receives the polymer melt material that is to form internal layer C of the multi-layer plastic article to be formed. It communicates at the upper right corner of manifold 219 with central flow channel 250 which travels axially in the manifold, and then the channel turns approximately 90° and is directed toward the axis (from right to left in Fig. 15). Likewise, entrance I near the center of the rear face of manifold 219 receives the polymer material which forms the respective inside and outside structural layers A and B of the multi-layer article to be formed. Entrance I communicates with channel 217 which travels a short distance axially forward into the manifold and is then split into two channels 220, 222 (dashed lines in Fig. 15) which travel in right and left opposite horizontal directions each for a short equal distance to points wherein each channel turns substantially 90° and travels axially horizontally for short equal distances to holes where they exit the rear manifold's forward face 224. At the lower left corner of rear manifold 219, the polymer melt material which is to form internal layers D and E of the multi-layer article passes through entrance III which communicates with channel 261 which passes a short axial distance horizontally into manifold 219, then makes a substantially 90° right turn and travels along a substantially horizontal path below and parallel to channels 220 and 250. At the axial center line of manifold 219, channel 261 turns at a substantially 90° angle and travels a short distance forward and into the manifold, where it then splits into two oppositely directed channels 257, 258 of equal length which run left and right perpendicularly outwardly away from the axial center line to where the respective channels again turn substantially 90° and travel axially forward into and through the short length of the ram manifold and exit through holes in the forward face 224 of rear manifold 219. The rear manifold has three metal plugs 225 each seated and located in a respective bore in the manifold by a locator pin 231 and each being pressure locked therein by a threaded set screw 229. The manifold has holes 302 therein for receiving bolts 259 (not shown) for bolting the rear ram manifold to the ram block and it has a threaded drill hole plug 303 for sealing channel 261. The rear manifold also contains oil flow channels 309 which run from side end to side end horizontally through the manifold for circulation of heated oil which maintains the manifold and the polymer melt streams running therethrough at the desired temperature.

Rear injection manifold 219 contains a metal plug 225, retained by set screw 229, having two portions of channel 222 drilled therein at right angles and with a ball end mill at the intersecting end of each portion. (See Figs. 15 and 16). The ball end mills establish a spherical surface at the intersection of the channels which provides a smooth transition right angle turn to the polymer flow channel 222. Such a smooth transition turn prevents undesirable stagnation of polymer melt flow which otherwise tends to occur at sharp turns of a polymer melt stream flow channel. All turns of flow channels in the rear injection manifold 219, ram block 228, forward ram manifold 244, manifold extension 266, runner block 288, T-splitters 290 and Y-splitters 292, where drilled channels intersect to form the turn, are smooth transition turns to prevent polymer stagnation. The turns are formed by ball end mills or other suitable means either in the channels drilled in the injection manifold, ram block, etc., or, when the geometry requires it, in channels drilled in plugs 225 or plugs similar thereto.

Referring to Fig. 17, hopper 204 is supported on injection cylinder 210 of extruder unit II which plasticizes the polymer melt material which is to form internal layer C. injection nozzle 248 at the forward end of the injection unit II is seated in and communicates with sprue bushing 249 having a nozzle seat 251 which in turn communicates with channel 250, for carrying polymer C, bored or cut horizontally through rear manifold 219. A ball check valve 230 communicating with channel 250 allows material to pass through the check valve in the foward direction but prevents the material from flowing back into rear manifold 219 from pressure exerted by injection ram 252 having a hollow chamber, and a vertically reciprocable piston 253 and an accumulator seated therein. Channel 250 in ram block 228 communicates with ram bore 255. Shown in phantom attached to the top of ram 252 is a conventional servo control mechanism generally designated 180 (more particularly described in relation to Figs. 18 and 18A). Channel 250 for the C material is cut straight horizontally and axially through ram block 228 and communicates with a matched hole in forward face 240 of the ram block and in rear face 242 of the forward ram manifold (see Fig. 14), which in turn communicates with the continuation of channel 250 through forward ram manifold 244. Channels 250, 220, and 257 are directed horizontally forward through ram block 228 in separate, parallel paths at different elevations. As will be explained, the entire ram block, generally designated 245, which includes rear injection manifold 219, ram block 228, forward ram manifold 244, and manifold extension 266, is heated by suitable means, here shown as a plurality of bored and communicating oil flow channels running horizontally through the widths of its components for circulating a heated oil or another suitable heated fluid. The oil flow channels are designated 309 for the rear ram manifold, 310 for the ram block and 311 for the forward ram manifold. Forward ram manifold 244 has vent holes 313 therein for venting polymer material which has leaked from an interface of the manifold extension with an adjacent structure, and to prevent the material from blowing the plugs 225 out of the structure. Manifold extension 266 is bolted to the forward face 246 of forward ram manifold 244 by bolts 267. As will be explained, the manifold extension tightens the pattern of respective channels 250, 220 and 257 as well as those of the other channels not here shown, such that the channels are in a tight quincuncial pattern when viewed in vertical cross-section, for communication with runner extension 276. The respective flow channels continue from the manifold extension to runner extension 276 by means of nozzles 270 which are seated in pockets 272 in runner extension rear face 274.

Pressure transducer port 297 is located in the upper portion of manifold extension 266. It is at this location, approximately thirty-nine inches away (1 metre) from the tips of nozzles 296, that the pressure measurements of Table IV were made.

The support and drive mechanism for the entire ram block 245 will now be described. (See lower portion of Fig. 17.) Cross frames 328 and longitudinal frames 330 (one shown) support a pair of wear strips 332 and a pair of mounting sleds 333, which in turn support a long ram block stand-off 334, and a sled drive bracket 336 which in turn supports short ram block stand-off 338. A horizontally-mounted ram block sled drive cylinder 341 is connected to mounting sleds 333 and drive bracket 336, and which latter structures are bolted together, thereby drives entire ram block 245 rearward and forward to thereby bring the nozzles 270 on the manifold extension into and out of seated engagement with the pockets 272 in the rear face 274 of the runner extension 276. Main extruder carriage cylinder 340 is bolted at its forward end to fixed platen 282 and, through its cylinder rod 343 and rod extension 345, it is connected to and drives main extruder carriage 347 to which is attached main extruder unit I. As will be explained in conjunction with Figs. 98, 105 and 106, once nozzles 270 are seated, the ram block sled drive cylinder 341 maintains sufficient force, in conjunction with clamp cylinders 986 and drive cylinder 340, to maintain a seated leak-proof engagement between the nozzles and the runner extension.

Referring to Figs. 18 and 18A, one of the conventional servo control mechanisms 180 employed in this invention and which drives and controls ram 252 is comprised of a servo manifold 256, a servo valve 254, a double-ended hydraulic cylinder 181 having an upper rod 182 and a threaded lower rod extension 183 to which is connected ram piston 253, and velocity and position transducers, generally designated 184, 185, which as will be explained, communicate with and provide signals to microprocessor 2020 (Fig. 141). A separate servo control mechanism similar to the one generally designated 180 is connected to and drives each ram 260, 234, 252, 232 and 262.

Referring to Fig. 19, a view of the rear of manifold extension 266 shows that the paths of channels 220, 222, 250, 257 and 258 which enter the rear of the manifold extension at holes 318, 316, 314, 320, 322 are arranged in a spread or enlarged, five-pointed star pattern. In manifold extension 266, the paths of channels 220, 222, 250, 257 and 258 are changed from their horizontal paths in forward ram manifold 244 to inwardly angled paths which tighten the quincuncial pattern such that the channels exit through holes 318', 316', 314', 320', and 322' which are arranged in a tighter four-pointed quincuncial pattern, relative to the central exit hole 314', for carrying the internal layer C material (see Fig. 19A, a view of the front face of the manifold extension). Nozzles 270 are seated in bores 323 in the front face 268 of manifold extension 266. The nozzles are connected to and communicate with respective manifold extension exit holes 314', 316', 318', 320' and 322'. Nozzles 270 protrude into and are seated in matching pockets 272 cut into the rear face of runner extension 276 where the sprue or mouth of each nozzle communicates with a matched, aligned entrance hole in the runner extension pockets, which holes in turn communicate with aligned continuations of the five polymer flow channels 220, 222, 250, 257 and 258 bored into the runner extension.

As is more fully described below, an important feature of the present invention is that it facilitates production of substantially uniform, multi-layer injected articles from each of a plurality of injection nozzles. This is achieved, in part, by having the flow and flow path and flow experience of each melt material from the material moving means, material displacement means, or source of material displacement, -- the ram --, to the central channel of any one of the plurality of injection nozzles 296 (Fig. 14), be substantially the same as that of each of the corresponding melt materials in the other corresponding flow channels, as the material travels from that ram to the central channel of any of the other nozzles. The arrangement of the flow channels, branch points and exit ports in the polymer stream flow channel splitter devices of this invention, including runner extension 276, T-splitters 290 and Y-splitters 292, and other parts of the apparatus (see, e.g., Figs. 28 and 29C), is designed to assist in providing such a flow system.

The flow pattern of the five flow channels 220, 222, 250, 257 and 258 is rearranged in the runner means of this invention which is a polymer flow stream splitting and distribution system, here including runner extension 276 from a tight-knit star pattern at the rearward end portion 278 of the runner extension to an axially-spaced, radially or horizontally offset pattern along the horizontal diameter in the forward end portion 284 of the runner extension (see Fig 20). Thus, channel 250 for the polymer C material travels directly through the center line of the runner extension along its axis. Channels 220 and 222 for the respective structural layers A and B are drilled within the runner extension at an angle downward and outward relative to its axis (see Figs. 20, 21 and 30). Channels 257 and 258 for the material for layers E and D, respectively, are drilled at an angle upwardly and slightly inwardly relative to the axis of the runner extension (see Figs. 20 and 21).

The flow channel for each melt material is split or divided at a branch point, generally designated 342, in the forward end portion 284 of the runner extension. The locations of the branch points 342 are such that the flow and flow path of the melt material passing through any given branch point is, from there to any one of the injection nozzle assemblies, the same as from there to every other nozzle assembly. In the preferred embodiment, the branch points 342A, 342B, 342C, 342D and 342E for the respective materials forming layers A, B, C, D and E of the multi-layer injected article, preferably located in a common plane (a horizontal plane in this embodiment) but in different vertical planes, are spaced from each other horizontally and along the axis of the runner extension and are radially offset with respect to the axis of the runner extension, in the sense that other than branch point 342C, each is on a radius of a different length measured from the axis.

In the preferred embodiment of the injection nozzle assembly 296, described below, the melt stream for each of the layers of the injected article enters the central channel 546 of the nozzle at locations spaced from each other along the axis of channel 546 (see Fig. 50). The melt stream from which is formed the outside structural layer B of the injected article enters the nozzle central channel 546 at an axial location closest to the gate at the front face 596 of the nozzle. The melt stream from which is formed the inside structural layer A of the injected article enters the nozzle central channel 546 at an axial location farther from the gate of the nozzle than any of the melt streams which form the other layers of the injected article. The melt stream (or streams) which form the internal layer (or layers) of the injected article enter the nozzle central channel at an axial location (or set of axial locations) between the melt streams for layers B and A. In the preferred five-layer injected article, the locations at which the five melt streams for those layers enter the nozzle central channel 546 are in the order B, E, C, D, A. Preferably all orifices other than for the inside structural layer, here A, are axially as close as possible to the gate of the injection nozzle. The axial order of sequence, from front to rear, of the five branch points 342 in the runner extension is: 342B, 342E, 342C, 342D and 342A, respectively, for the materials from which are formed layers B, E, C, D and A of the injected article. At each branch point, the axial end portion of the primary flow channel is split into two branches, referred to as first and second branched flow channels which are bores equal in length and respectively directed at an angle upward and downward toward, and communicate with and terminate at, a plurality of first exit ports 344 and a plurality of second exit ports 346 (see Figs. 20-28). Each plurality of exit ports is axially aligned and spaced in the same order along the respective top and bottom peripheral surface portions of forward end portion 284 of runner extension 276 for presentation to and communication with flow channels in runner block 288.

The amount of radial offset of branch point 342B from the axis of the runner extension is the same as for branch point 342A, and the radial offset for branch point 342E is the same as for branch point 342D. It is desired that the radial offsets for the branch points of the layer A and B materials, be similar to facilitate achievement of equal response time in each layer in each pair. The same applies to the respective flow channels in the entire ram block 245. It also applies to the layer D and E materials where it is desired to start flow of both substantially simultaneously into the nozzle central channel. It should be noted that, because of nozzle geometry, in which the orifice for the layer E material is located closer to the open end of the nozzle central channel than the orifice for the layer D material, as described later it is desirable to have a small time lag in the introduction of layer E material into the nozzle central channel to compensate for the axial difference in nozzle position of the orifices for the materials of layers E and D.

The construction of the preferred runner extension 276 and pattern of travel in it of each of the material flow channels can be more clearly understood by reference to Figs. 20-28. Channels 220, 222, 257 and 258 are bores of circular cross-section drilled from the rearward end or rear face 274 generally axially, at a compound angle in and through a portion of the length of the cylindrical block of steel out of which the runner extension is made. Channel 250, also referred to as the central flow channel, is a circular bore drilled along the central axis of the runner extension. As the plurality of channels pass axially forward through the runner extension, they are gradually oriented or rearranged from a radial, tight star or quincuncial pattern, (Fig. 22) at the rear face 274 and rearward end 278, of the runner extension, where each channel passes through a common vertical plane, into a more flattened, substantially horizontal, axially spaced or offset pattern (Fig. 23) at the middle porton 279 of the runner extension. In the forward end portion 284 of the runner extension, the axial end portions 715, 716, 717, 718 and 720 of the flow channels are split or divided at spaced, horizontally coplanar branch points 342A, 342B, 342C, 342D and 342E, each in a different plane vertical to the axis of the runner extension, into two branches, referred to as first and second branched flow channels.

The branch paint 342C for material C is formed at the intersection of axial end portion 717 of central flow channel 250, and is the bore portion drilled on the axis of the runner extension, at the intersection with a bore through the runner extension along a diameter thereof (see Fig. 26) and which forms first branched flow channel 704 and second branched flow channel 705. The other branch points are each formed at the intersection of two equal angular bores which form the branches or first and second branched flow channels, e.g. 700 and 701 for the first and second branched flow channels of channel 222 for material B (see Fig. 24), drilled into the runner extension from opposite diametral locations, to intersect with the generally-axial compound-angle bore for channel 222. Smooth transition turns are formed at each branch point by using a ball end mill to finish the bores.

In the embodiment just described, the axial end portions 715, 716, 717, 718 and 720 of flow channels 220, 222, 257 and 258 (for respective layers A, B, E and D) adjacent to and upstream of respective branch points 342A, 342B, 342E and 342D intersect the branch points at compound angles. As a result, the angle of intersection between the upstream portion of the channel, for example axial end portion 715 of channel 222 (Fig. 20), and one of the adjacent branches of the channel downstream of the branch point, for example the bore which forms branch 700 of channel 222 (Fig. 24), is substantially the same as but not identical to the angle of intersection between the upstream connecting channel portion and the other adjacent downstream branch, for example the bore which forms branch 701 of channel 222. This may cause a slight bias of flow at the branch point, generally favoring flow into the downstream branch having the larger angle of intersection with the upstream connective channel portion. In the above described embodiment, however, the angles of intersection are substantially the same, the maximum difference being three degrees off the perpendicular and satisfactory, multi-layer injected articles from a plurality of injection nozzles have been made, and the above-stated object of having substantially equal flow and flow path to each injection nozzle is achieved.

Where the manufacture of injected articles requires it, the previously-described slight flow bias may be substantially eliminated by having the angle of intersection be the same, as in the alternative embodiment of the runner extension described below.

In the first alternative embodiment of the runner extension (see Figs. 28A-28H), the angle of intersection between the axial end portions of flow channels 220, 222, and 258 and the adjacent downstream two branches of the flow channel is the same. In this particular alternative embodiment, the axis of the axial end portion of each flow channel is either on or generally on the central axis of the runner extension. Thus, the axial end portion 717 of central flow channel 250 for the C layer material is on the central axis of the runner extension. Channel 222 for the B layer material has a connecting channel portion 710, adjacent to and upstream of branch point 3428', which is perpendicular to the central axis of the runner extension; channel 257 for the E layer material has a connecting channel portion 711, adjacent to and upstream of branch point 342E', which is perpendicular to the central axis; channel 258 for the D layer material has a connecting channel portion 712, adjacent to and upstream of branch point 342D', which is perpendicular to the central axis; and channel 220 for the A layer material has a connecting channel portion 714, adjacent to an upstream of branch point 342A', which is generally axial to the central axis. (See Figs. 28G and 28H) Each of the upstream connecting channel portions 710, 711, 712, and 714 is long enough for the melt material flowing therethrough and entering the branch point to have largely forgotten the direction in which it was moving in the compound-angle channels prior to flowing into the connecting channel portion. Each of the branches or branched flow channels 700' and 701', 702' and 703', and 704' and 705' of flow channels 222, 257, and 250 which is adjacent to and downstream of respective branch points 342B', 342E', and 342C', is perpendicular to the respective upstream connecting channel portions 710, 711, and to axial end portion 717, and thus, for each of these flow channels, the angle of intersection between the adjacent upstream portion and each adjacent downstream branch is the same. Each of the adjacent branches or branched flow channels 706', 707' of flow channel 258 which is downstream of branch point 342D' intersects the upstream connecting channel portion 712 of channel 258 at the same angle; and, similarly, the intersection angles are the same between upstream connecting channel portion 714 in plug 725 (see Fig. 28G) of channel 220 and the branches or branched flow channels 708', 709' of channel 220 which are adjacent and downstream of branch point 342A'.

This alternative embodiment of the runner extension shown in Figs. 28A-28H is made by first drilling the bore for the axial channel 250 and the bores for generally-axial channels 220, 222, 257 and 258. Four parallel diametrical bores 722, 723, 724 (fully threaded), and 725 (see Fig. 28G) for forming connecting channels 710, 711 and 712, are drilled to intersect the bores for channels 222, 257, 258 and 220. A cylindrical metal insert or plug, generally designated 726, retained by a set screw 727, is inserted into diametrical bores 722, 723 and 725. Only a set screw 727 is employed in bore 724. Perpendicular bores are drilled on a diameter through the runner extension and the internal ends of the plugs to form the perpendicular branches or branched flow channels 700', 701' and 702', 703' of channels 222 and 257 which are adjacent to and downstream of branch points 342B' and 342E'. The plugs 727 may be temporarily removed, extract any severed ends of the plugs and any feathered edges. Equal angular bores are drilled through the runner extension and respectively into the plugs in bores 724 and 725, to form the branches or branched flow channels 706', 707' and 708', 709' of respective channels 258 and 220 which are adjacent to and downstream of branch points 342D' and 342A'. A ball end mill is used to form the branches 708' and 709' from connecting channel 714 in plug 727'. Though not shown in Fig. 28F, Figs. 28G and 28H show that generally axial flow channel 220 has an axial end portion 720 which communicates with straight, connecting channel portion 714 in plug 725 which, in contrast with the other connecting channel portions of this embodiment, runs axial to the runner extension.

A second alternative embodiment of the polymer flow stream channel splitter device of this invention is runner extension 276'' (see Figs. 28I, 28J and 28K). In this embodiment, there is a plurality of spaced substantially vertically arranged polymer stream flow channels 222, 257, 250, 258 and 220, bored substantially axially through the runner extension 276''. The flow channels each have an axial portion which terminates in an axial end portion 715, 716, 717, 718 and 720, each of which in turn communicates at rounded connecting points with connecting channel portions 710'', 711'', 713'', 712'' and 714''. The connecting channel portions extend from the connecting points vertically within the runner extension 276'' in an axially-spaced pattern and are connected at their downstream ends to, and then communicate with respective branch points 342B'', 342E'', 342C'', 342D'' and 342A''. Each of the branch points is located in the forward end portion 284'' of the runner extension in an axially-spaced, horizontally substantially coplanar pattern wherein each branch point is in a different vertical plane. At each branch point, the channel is split into branches, here designated first and second branched flow channels, 700'' and 701'', 702'' and 703'', 704'' and 705'', 706'' and 707'', and 708'' and 709'', each of which is equal in length and communicates with and terminates at respective first and second exit ports 344, 346, in different surface portions of the periphery of the forward end portion of the runner extension. The first and second exit ports for a flow channel are in the same vertical and horizontal plane, each of the first and second exit ports for each flow channel are in different vertical planes relative to the exit ports of each other flow channels, and the plurality of first exit ports 344 of the first branched flow channels and the plurality of second exit ports 346 for the second branched flow channels is each arranged in its own respective axially-aligned spaced pattern of exit ports along a common line in different peripheral surface portions of the runner extension, for presentation to and communication with corresponding flow channel entrance holes or channels in runner block 288 of the multi-coinjection nozzle, multi-polymer injection molding machine of this invention. The vertical bores which form the respective connecting channel portions 714'' and 710'', are commenced through the top periphery of the runner extension, said holes being sealed by cylindrical metal plugs 726 which are retained by set screws 727.

The respective polymer flow streams which form the respective layers of the article to be formed in accordance with this invention, in this embodiment, and which exit the periphery of the runner extension 276'' through respective first and second exit ports 344 and 346, follow respective paths similar to each other in and through runners 350B' and 351B' in runner block 288' to two respective T-splitters 290', then through runners 352', 353', 354' and 355' to four more respective T-splitters 290' and then through respective runners 356', 357', 358', 359', 360', 361', 362' and 363' to a respective feed block 294 each of which is associated with a respective one of the eight nozzles assemblies 296.

It is preferred that the materials flowing out of each exit port 344 be isolated from the other exit ports 344 and likewise with respect to exit ports 346. In the preferred embodiment and the first alternative embodiment of the runner extensions, the isolation means for isolating the polymer flow streams preferably include stepped cut expandable piston rings 348 (two of the six employed are shown) which seat in respective annular grooves 349 formed in forward end portion 284 of the runner extension 276 (see Fig. 21). The isolation means are sufficiently compressible to permit insertion and withdrawal of runner extension 276 into and from bore 286 in runner block 288 (see Figs. 14 and 30), while still maintaining sealing engagement with the bore and the runner extension when the runner extension is in operating position within the runner block. Isolation means such as expandable mating cast iron strips are to be employed with runner extension 276''. The middle portion 279 of the runner extension 276 contains a plurality of annular fins 281 which cooperate with the internal surface of a main bore 975 in oil retainer sleeve 972 (see Fig. 30) and with the interstices between the fins to provide channels 277, 277A for the flow of heating oil about the runner extension.

Preferably, sealing means are employed downstream of the foremost of the exit ports 344, 346, i.e., those most proximate to runner extension front face 952, and upstream of the rearmost exit ports, i.e., those most remote from front face 952, to substantially prevent polymer material which exits the ports, from flowing axially downstream of the foremost sealing means and upstream of the rearmost sealing means in the runner block bore 286 in which the runner extension sits. Preferably, the sealing means includes stepped cut piston rings 348 seated in annular grooves 349. All of the piston rings bear against and cooperate with the inner surface of bore 286 to provide the effective isolating and sealing functions.

The paths of respective polymer flow streams A-E which form the respective layers of the article to be formed in accordance with this invention and the channels or runners through which they flow from the periphery of the runner extension 276 through respective top, first, and bottom second exit ports 344, 346 through the runner block 288, through runners 350, 351 to two T-splitters 290 then through runners 352-355 to four Y-splitters 292 and then through runners 356-363 to the respective feed block 294 for each of the eight nozzle assemblies 296, will now be described in reference to Figs. 28, 28I, 29, and 29C through 31. Fig. 28, a vertical cross-section taken along line 28-28 of Fig. 21, shows the path of the A polymer material from the runner extension through the runner block, and Fig. 28I shows the same for the B material from the second runner extension embodiment 276''. Figs. 29 and 29C through 31 show various views of the runner block and its components 276, 290, 292, 294 and 296 in that portion of the injection molding machine of this invention which is located forward or downstream of manifold extension 266. Fig. 29 shows the front of the injection portion of the machine, absent injection cavities 102 and injection cavity carrier blocks 104 (see Figs. 13 and 98), and through injection cavity bolster plate 950. The view shows the overall polymer stream flow path and channel pattern (dashed lines) for the B material through runner block 288 (dashed lines). Fig. 29 also shows the pattern of eight nozzle assemblies 296 arranged in two vertical columns of four assemblies in each column, and five stepped bores, generally designated 152, which enter the sides of runner block 288 at an angle and form the respective runners, four of which are plugged at their entrances by plugs, generally designated 154 (see Fig. 45A), each having a threaded head 155 and a nose 156. The tip of the nose 156 of each plug extends into the runner block to a point near the periphery of a feed block 294 (located behind a nozzle assembly 296). The nose of the fifth plug 154', one for each feed block, is elongated, fits closely into anti-rotational hole 158 in the feed block (see Figs. 29C, 41, 45, 45A and 45B) and not only plugs the fifth bore but prevents the feed block from rotating in the runner block.

Fig. 29C, a vertical section taken along line 29C-29C of Fig. 98, shows the polymer stream flow paths in runner block 288 for the B polymer material. The vertical section is taken through C-standoff 122, through the runner block and through feed blocks 294. Fig. 29C also shows those plugs 154 in stepped bores 152 which have an elongated nose 156 whose tip is engaged in anti-rotational holes 158 in the feed blocks and thereby prevent the feed blocks from rotating in the runner bores in which they sit.

As shown in Figs. 28, 28I, 28J, 29, and 29C to 32, and considering the preferred embodiment of the runner extension 276, and the runner block 288, each of the first exit ports 344 along the top periphery and each of the second exit ports 346 along the bottom periphery of the preferred runner extension 276, respectively communicates with runners 350, 351 which are holes or channels drilled or bored vertically through the runner block 288. Each of the polymer flow streams exit through the respective upper and lower exit ports 344, 346 directly into and through respective runners 350, 351 and then the flow streams (350B, 350E, 350C, 350D and 350A, and 351B, 315E, 351C, 351D, and 351A) (see Fig. 32) travel into an associated T-splitter 290 which splits each respective flow stream into two opposite but equal streams (352B-352A, 353B-353A, upper left and right (in Fig. 28) 354B-354A, 355B-355A, lower left and right), each of which flows through runners 352, 353, 354 and 355 which in turn lead into a Y-splitter 292. Each Y-splitter 292 takes each incoming flow stream and in turn splits it into two diagonally divergent, but equal, flow streams 356A and 357A (upper left in Fig. 28), 358A and 359A (upper right), 360A and 361A (lower left), 362A and 363A (lower right), each of which flows through runners 356, 357, 358, 359, 360, 361, 362, 363 in runner block 288 to a feed block 294 for a nozzle assembly 296. The feed block functions to receive each of the flow streams B, E, C, D, A and separately direct the appropriate one into the appropriate shell of the nozzle assembly, generally designated 296, and whose rear portion is seated within the forward end of the feed block.

The flow path for each of the polymeric materials B, E, C, D and A, which comprise the injected articles and injection blow molded articles of, and produced by, the present invention has been quickly traced from the source of its flow to an injection nozzle. It is an important feature of the present invention that the flow and flow path for each material, for a particular layer is substantially identical, for that material and layer, desirably from the source of flow of the material, extruder Units I, II and III, and preferably from the place where a flow channel is split, e.g., at a branch point in the runner extension, to and through the runner extension and to each of the nozzle assemblies. Thus, for example, the flow of material C splits at branch point 342C in runner extension 276 into two equal, symmetrically-directed and symmetrically-volumed flow paths 350C and 351C. The rate of flow of material C is the same in path 350C as in 351C. The flow of material C in path 351C is then again equally and symmetrically divided in T-splitter 290 into equal flow paths 354C and 355C, and path 354C is yet again equally and symmetrically divided in Y-splitter 292 into equal flow paths 360C and 361C, each of which enters a different feed block 294 and associated nozzle assembly 296. It is to be further noted that the materials A-E are maintained separate and isolated from each other, throughout the apparatus, from the first location where the A, B, D and E materials are split in ram manifold 219, up to the location where the material enters the central channel of the injection nozzle assembly 296. The purpose and function of this separate, equal and symmetrical flow path system is to ensure that each particular material (e.g., polymer C for layer C) that reaches the central channel of any one of the eight nozzles has experienced substantially the same length of flow path, substantially the same changes in direction of flow path, substantially the same rate of flow and change in rate of flow, and substantially the same pressure and change of pressure, as is experienced by each corresponding material for the same layer (e.g. polymer C for layer C) which reaches any one of the remaining seven nozzles. This simplifies and facilitates precise control over the flow of each of a plurality of materials to a plurality of co-injection nozzles in a multi-cavity or multi-coinjection nozzle injection molding apparatus, and provides substantially the same characteristics in the corresponding materials and layers in and of each layer of each of the eight multi-layer articles of and formed in accordance with this invention.

Fig. 30 is a vertical section taken along line 30-30 of Fig. 29. At the upper part of Fig. 30, the vertical section through the runner extension 276 shows channels 220 and 258 (in dashed lines) for the A and D material flow streams and (in solid lines) channel 250 for material C. Fig. 30 shows channel 250 passing through the axial center of the runner extension to branch point 242C where it communicates with straight up and down branched first and second flow channels 250. Fig. 30 also shows runner channels 351 in runner block 288 for flow streams 351B-351A, each of which channel at second exit port 346 respectively communicates directly with entrance ports 364 in T-splitter 290.

The vertical section shown in Fig. 30 does not show Y-splitter 292 but merely shows runners 361 broken away within the runner block and communicating with entrance ports 392 and 396 in the peripheral wall of the feed block 294. The polymer flow streams flow through the feed block into the nozzle assembly 296, at the bottom left in Figs. 29, 29C and 32. It is to be noted that all inlets, and radial and axial feed channel portions are shown schematically, out of position.

The injection cavity structure is shown schematically in Figs. 30 and 31. The profile is not accurate and details of the cavity, such as fins, etc., are not shown.

Fig. 31, a top view of a horizontal section taken along line 31-31 of Fig. 29, is a horizontal section taken diametrically through runner extension 276. Fig. 31 shows channel 250 (in solid lines) for internal layer C material and channels 258 and 257 (in dashed lines) respectively for carrying the polymer flow streams of the material which will form the D and E layers of the article to be formed in accordance with this invention. At the forward end portion 283 of runner extension 276, the axially-aligned spaced dashed lines indicate the bottom holes 346 for each of the polymer flow streams B, E, C, D and A, at the bottom of the runner extension. Fig. 31 shows runner portions 360 broken away but communicating with entrance holes in the periphery of the feed block 294 (located at the second from the bottom left in Figs. 29 and 29C) which has mounted within the receiving chamber in its forward end portion section, a nozzle assembly 296.

Fig. 31 also shows a set of grease channels, generally designated 168, sealed at their entrance and exit ports by plugs, and extending through pin cam base 892 and pin cam base cover 894, for providing grease for lubrication of the drive means of this invention, more particularly, pin sleeve cam bars 850, for their reciprocation through pin cam bar slots 890. Likewise, grease channels 170, sealed at their entrance and exit ports by plugs and extending through sleeve cam base 900, provide for grease lubrication of sleeve cam bar 856 in sleeve cam bar slot 898, and sleeve 860 in bore 902 of the pin cam base. Fig. 31 does not show stepped bores 152 or plugs 154 therein.

Fig. 32 shows the three preferred elongated cylindrical polymer stream channel splitter devices of the invention, runner extension 276, T-splitter 290 and Y-splitter 292, for the multi-coinjection nozzle, multi-polymer injection molding machine of this invention. The devices are shown in axially parallel positions as they are mounted in the center and lower left portion of runner block 288 (not shown). Each device has a polymer stream entrance surface portion having a plurality of spaced, aligned flow channel entrance ports bored therein and communicating with a plurality of respective polymer flow channels bored into the device wherein each flop channel is split into branches or first and second branched flow channels which in a device are substantially equal in length and which communicate with and terminate at respective first and second exit ports, each positioned in a different polymer stream exit surface portions of the device, for presentation to and communication with corresponding flow channel entrances or holes in runner block 288.

### The T-Splitter

The structure of T-splitter 290 will now be described (Figs. 33-36). Fig. 33, a top plan view of the T-splitter shown in Fig. 32, and Figs. 34-36 show that each T-splitter is a cylindrical steel block into whose top surface are drilled five axially-aligned entrance bores or ports 364 which communicate with and form entrance flow channels 367 each of which enters the device radially and transaxially to a branch point where the entrance channel intersects with and splits into two symmetrical bores forming first and second exit or branched flow channels 368, 368'. The axis of the entrance channel 367 intersects the axis of the branched flow channels 368 at a location above the central axis of the T-splitter. Each first branched flow channel communicates with and terminates at a first exit port 366, and each second branched flow channel communicates with and terminates at second exit port 366', the plurality of each of which set of exit ports is axially-aligned along a line and is respectively located about 90° around the circumference of the T-splitter from entrance port 364. In the T-splitter shown, the communicating entrance port, entering flow channel, branch point, first and second branched flow channels and first and second exit ports for a polymer material, are preferably all in a common vertical plane. The entrance channels at each end of the T-splitter are of the same diameter and are larger in diameter than the middle three entrance channels, which themselves are of the same size. The diameter of each branched flow channel 368, 368' is the same as the entrance channel which it intersects. Preferably, the axis of each branched flow channel, say 368, is drilled transaxially at an angle of about 15° to the horizontal center line, to meet the entrance channel and the opposing exit flow channel 368', at a point below the axial center line. Six annular grooves 370 are cut into the cylindrical surface of the T-splitter to serve as seats for stepped cut piston rings 369.

Rotation of the T-splitter within the bore in which it is seated in the runner block is prevented by locking pin means located at one end of the T-splitter. The locking pin means comprises two cylindrical cone-pointed locking pins 144 carried within diametrical bore 146 in the shoulder at the end of the T-splitter. The outer end of each locking pin has a spherical or rounded surface and the inner end of each locking pin has a 45° conical surface. Rotation of cone point set screw 140 carried in axial tapped hole 143 at the end of the T-splitter causes the set screw to act as a wedge to drive the locking pins radially outwardly to press the spherically-surfaced end of each pin against the bore in the runner into which the T-splitter is inserted. The T-splitter is held in its axial position in the runner bore in which it is seated by threaded lock nuts 291 each of which is screwed into a threaded end portion of the bore, the T-splitter being wedged axially therebetween (see Fig. 30).

### The Y-Splitter

The structure of the Y-splitter 292 will now be described (Figs. 37-40). Fig. 37, is a side elevational view of the Y-splitter shown in Fig. 32, as would be seen along line 37-37 of Fig. 38, shows that each Y-splitter is a cylindrical steel block into whose peripheral surface are drilled five axially-aligned entrance bores or ports 371 which communicate with and form entrance flow channels 373 each of which enters the device radially and transaxially to a branched point where the entrance channel intersects with and forms two symmetrical bores forming first and second exit or branched flow channels 374, 374'. The axis of the entrance channel 373 intersects the axis of the first and second branched flow channels 374, 374' at the center line of the Y-splitter. Fig. 38, a side elevational view of the Y-splitter of Fig. 37 rotated 45° clockwise, shows that each first branched flow channel communicates with and terminates at a first branched exit port 372 and each second branched flow channel with a second branched exit port 372', the plurality of each set of exit ports of which is respectively axially-aligned along a line respectively located about 130° around the circumference of the Y-splitter from entrance port 371. The entrance channels at each end of the Y-splitter are of the same diameter (about one-half inch - 12.7 mm) and are larger in diameter than the three middle entrance channels, which themselves are of the same size (about three-eighths inch - 9.5 mm). The branched flow channels are all of the same diameter (about one-quarter inch - 6.4 mm) and are smaller than the entrance channels. Preferably, the axis of each of the first and second branched flow channels 374, 374' is at an angle of about 39° from the horizontal line and its junction is at the axial center line of the device. Six annular grooves 376 are cut into the cylindrical surface of the Y-splitter to serve as seats for stepped cut piston rings 375.

The materials flowing into and out of the T-splitters and Y-splitters are kept separate and isolated from each other by isolating means which, in the preferred embodiment, are expansion type stepped piston rings 369 (two of the six are shown) which seat in annular grooves 370 formed in the periphery of T-splitters 290, and step cut piston rings 375 (two of the six are shown) which seat in annular grooves 376 formed in the periphery of Y-splitters 252. The isolation means are sufficiently compressible to permit insertion and withdrawal of the T-splitters and Y-splitters into and from the bores in runner block 288 in which they are located, yet they are capable of still maintaining sealing engagement with the bores and the splitters when the splitters are in operating position within the runner block.

Preferably, sealing means, preferably also in the form expandable stepped piston rings 369 and annular grooves 370 in which the rings sit, with respect to the T-splitters, and, piston rings 375 and annular grooves 376 with respect to the Y-splitters, are respectively employed downstream of the foremost and upstream of the rearmost entrance ports 364, and of the foremost and rearmost first and second branched exit flow channels 368, 368' for the T-splitters, and downstream of the foremost and upstream of the rearmost of the entrance ports 371, and of the foremost and rearmost first and second branched exit flow channels 374, 374' for the Y-splitters, to substantially prevent polymer material which enters and exits the respective ports, from flowing axially downstream of the foremost sealing means and upstream of the rearmost sealing means in the runner extension bores in which the respective splitters sit.

As shown in Fig. 38, Y-splitter 292 is held in rotational position in the runner bore in which it is seated in the same manner as T-splitter 290 is held in its runner bore, a cone-pointed set screw 140 in axial hole 148 wedging or forcing a pair of cone-pointed pins 144 apart in diametrical bore 150 against the surface of the runner bore for the Y-splitter.

### The Feed Block

The structure of the feed block 294 will now be described (Figs. 41-48). The feed block is a cylindrical block of steel having at one end a threaded extension 378 having a bore 379 therein, extending axially from the rear face of the feed block. Sealing ring retaining cap 821 threads onto extension 378 and retains sealing rings 819 in bore 379. Cut into the opposite, forward or front face of the feed block is an axially extending co-injection nozzle or nozzle assembly receiving stepped chamber 380 having an axially innermost first shelf 382 and first annular wall 383, a second shelf 384 and second annular wall 385, and an axially outermost third shelf 386 and a third annular wall 387 which communicates with front face 388 of the feed block. The shelves are the transaxial portions and the annular walls are the axial portions of the steps. The feed block has a central channel 390 which communicates with bore 379 and, when the stepped rear portion of nozzle assembly 296 is inserted into chamber 380, is aligned with the central channel of the nozzle. In a preferred embodiment, the valve means for controlling the flow of materials A-E in the nozzle comprises pin and sleeve means which fit within and pass through retaining cap 821, bore 379, sealing rings 819 and central channel 390 of feed block 294, and extend forward and fit within the central channel of the nozzle assembly 296.

Each of the eight feed blocks 294 separately receives each separate polymer flow stream of the five passed to it through the appropriate five runners designated either 356, 357, 358, 359, 360, 362 or 363 extending from the Y-splitters. Thus, each feed block receives the five separate polymer flow streams (i.e., streams 361B, 361E, 361C, 361D and 361A, as shown in Fig. 32). While maintaining them separate, the feed block changes their overall direction of flow by about 90°, preferably in the manner described below, from radial entry to axial exit, and passes each of them separately and axially into an associated plurality of nozzle shells which together with a nozzle cap comprise the co-injection nozzle or co-injection nozzle assembly of this invention, generally designated 296.

Basically, each polymer flow stream is radially received in an inlet which communicates with a peripheral feed throat through which the stream flows along or about a portion of the periphery of the feed block. Most of the feed throats have a terminal end portion where the stream passes into a feed channel having a radial portion which runs radially into the feed block toward its central axis and turns and extends axially to an exit hole in the stepped receiving chamber through which the stream is passed axially to the appropriate nozzle channel.

Polymer flow stream inlets 392, 393, 394, 395 and 396 are rounded grooves cut radially inwardly into the outer periphery of the cylindrical feed block 294. Each of inlets 392-395 has a defining wall formed by a .156 inch (3.96 mm) radius extending from the inlet's center point. The center points for each of the inlets fall on a common center line which runs axially along the top of the feed block (see Fig. 32). The defining wall of each inlet is the origination of grooves or feed throats 398, 399, 400, 401 and 402 cut into and along the outer surface of the feed block.

The structure of feed block 294 through which passes the polymer A flow stream will now be described. Inlet 392 is the origination of a feed throat 398 (dashed lines in Fig. 41) cut approximately .196 inches (4.97 mm) deep by a 5/16 inch (8 mm) spherical ball end mill into a portion of the periphery of the feed block. Throat 398, when viewed in vertical section has a bottom wall and flat opposed side walls with rounded surfaces therebetween. Throat 398 runs a 60° circumferential arc counter-clockwise about the periphery of the feed block. (Fig. 45) At the end of the 60° arc, feed throat 398 communicates with a feed channel 404 cut radially and angularly in the forward direction (left in Fig. 41) into the feed block towards central channel 390. Prior to reaching the central channel, feed channel 404 turns axially into an axially-cut forwardly extended key slot 406 which communicates directly with the central channel along a portion of the length of its wall 391 (Fig. 43) and which terminates in a matching key slot exit hole 407 in the first shelf 382 in nozzle assembly receiving chamber 380 at the forward end portion of the feed block.

The structure of feed block 294 through which passes the polymer D flow stream will now be described. Inlet 393 originates feed throat 399 cut into a portion of the outer periphery of the feed block in the same manner as that of feed throat 398. Throat 399 runs a clockwise circumferential arc of 120° about the periphery of the feed block (Fig. 46). At the end of the 120° arc, feed throat 399 communicates with a feed channel 408 cut radially directly into and straight toward the central axis of the feed block to a controlled depth which in this preferred embodiment is .298 inch (7.56 mm) from the central axis. There the feed channel communicates in a 90° turn with obloround feed channel 410 which is approximately .093 inch by .251 inch (2.4 x 6.78 mm). Channel 410 passes axially through the feed block and terminates in a matching obloround exit hole 411 in the first shelf 382 in nozzle assembly receiving chamber 380 at the forward end portion of the feed block.

The structure of feed block 294 through which passes the polymer C flow stream will now be described. Inlet 394 is the origination of feed throat 400 cut into a portion of the periphery of the feed block in the same manner as that of feed throat 398. Throat 400 runs a counter-clockwise circumferential arc of 120° about the periphery of the feed block (Fig. 47). At the end of the 120° arc, feed throat 400 communicates with a feed channel 412 cut radially directly towards the central axis of the feed block to a controlled depth which in this preferred embodiment is .516 inch (13.1 mm) from the central axis of the feed block. There the feed channel communicates in a 90° turn with obloround feed channel 414 which is approximately .125 inch by .251 inch (3.18 x 6.88 mm). Channel 414 passes axially at that depth through the feed block and terminates in a matching obloround exit hole 415 in the second shelf 384 in nozzle assembly receiving chamber 380.

The structure of feed block 294 through which passes the polymer E flow stream will now be described. Inlet 395 is the origination of feed throat 401 cut into a portion of the periphery of the feed block in the same manner as that of throat 398. Throat 401 runs a clockwise circumferential arc of 180° about the periphery of the feed block (Fig. 48). At the end of the 180° arc, feed throat 401 communicates with a feed channel 403 cut radially toward the central axis of the feed block to a controlled depth which in this preferred embodiment is 0.734 inch (18.6 mm) from the central axis of the feed block. There the feed channel communicates in a 90° turn with obloround feed channel 416 (dashed lines in Fig. 41) in which is approximately .125 inch by .251 inch (3.18 x 6.88 mm). The center line of channel 416 is .734 inch (18.6 mm) from the central axis of the feed block. Channel 416 passes axially through the feed block and terminates in a matching obloround exit hole 417 in the third shelf 386 in nozzle assembly receiving chamber at the forward end portion of the feed block (Fig. 41).

The polymer B flow stream enters the feed block through inlet 396 which is the origination of feed throat 402 cut radially and into a portion of the outer periphery of the feed block. Throat 402 runs forwardly axially along the outer periphery of the feed block and cooperates with the surface of bore 822 in runner block 288 (Fig. 50), into which feed block 294 is seated, to form a passageway or channel 460 for the flow of polymer B to the forward end of the feed block, where the polymer exits at port 418 formed by channel 460 and bore 822. Throat 402 is .093 inch deep and .250 inch wide (2.4 x 6.35 mm).

Fig. 42, an end view of the feed block of Fig. 41, shows the shelves, the exit holes previously described and their radially spaced arrangement. Fig. 42 also shows locator pin holes 420, bored into front face 388 of the feed block, and holes 421, 422 and 423 respectively bored in the third, second and first shelves of nozzle assembly receiving chamber 380. The holes receive locator pins (not shown) which extend into associated locator holes in the shells comprising the nozzle assembly, to maintain the positions of and facilitate proper alignment of feed block exit holes 407, 411, 415, 417 and 418 with associated inlets in the nozzle assembly.

With reference to the claims to the feed block, inlets 392-395 are referred to as the first inlets, inlet 396 is referred to as the second inlet, the feed throats 398-401 are referred to as the first feed throats and 402 as the second feed throat, and the exit holes 407, 415, 417, 411 are referred to as the first exit holes, and 418 as the second exit hole.

The B, E, C, D and A materials flowing into feed block 294 are kept separate and isolated from each other by isolating means, which preferably include sealing means, here, expandable stepped piston rings 424 (two are shown in Fig. 41) and annular grooves 425 in which the piston rings seat. Similar piston rings are employed in the annular seats cut into the periphery of the T-splitter, Y-splitter and runner extension. The clearance between the internal diameter of the bore in runner block 288, into which the feed block is inserted, and the feed block outer diameter is approximately .001 to .0025 inch (0.025 to 0.064 mm). The expandable piston rings compensate for this gap and expand out to prevent intermixing of the materials flowing into the feed block. The isolating means are particularly important in the preferred practice of the method of the present invention wherein the materials are under high pressure. Without this or equivalent isolating means, there could occur inter-material mixing and contamination in the feed block, which might result in an intermixed flow of materials in the nozzle assembly, and lead to deleterious discontinuities of the layers of the multi-layer injected article. Preferably, sealing means such as just described, are also respectively employed upstream of the rearmost inlet 392 to substantially prevent polymer material directed at the feed block from flowing axially upstream of the sealing means in the runner block bore in which the feed block sits.

Referring to Fig. 42, and using as a reference a radial line from the central axis of the feed block through the center of exit port 418 and feed throat 402 for material B, the axis of key slot exit hole 407 and key slot 406 for material A is located 60° counter-clockwise from the reference, the center of exit hole 415 and channel 414 for material C is located 120° from the reference, the center of exit hole 417 and channel 416 for material E is located 180° from the reference and the center of exit hole 411 and channel 410 for material D is located 240° counter-clockwise from the reference. The exit holes for the polymer flow stream are provided in a radially-spread relatively balanced pattern to attempt to balance the heat distribution in the structure and prevent hot streaks therein, to provide relatively balanced overall pressure at the end of each nozzle assembly 296 (Figs. 49A, 49AA, 50) and prevent the assembly from skewing as would be the case if say all the exit ports were in the top half of the end view. Any relatively balanced pattern which meets the above objectives is acceptable.

### The Nozzle Assembly

Referring to Figs. 49-77A and with particular reference to Fig. 50, the preferred embodiment of the nozzle assembly or co-injection nozzle or nozzle 296 of this invention comprises four interfitting nozzle shells 430, 432, 434 and 436, and nozzle cap 438 in which the nozzle shells fit. In actual assembly, the interfitted nozzle shells are arranged so that their feed channels 440, 442, 444, 446, 448 and feed channel entrance ports 450, 452, 454, 456, 458 are angularly offset as shown in Figs. 49A and 49AA. Using as a reference a radial line from the central axis of the interfitted shells through the center of entrance port 458 and feed channel 448 for material B in nozzle shell 436, the axis of entrance port 456 and feed channel 446 in nozzle shell 434 is located 180° from the reference, the axis of entrance port 454 and feed channel 444 in nozzle shell 432 is located 120° from the reference, the axis of entrance port 452 and feed channel 442 in nozzle shell 430 is located 240° from the reference, and the axis of entrance port 450 and feed channel 440 in shell 430 is 60° from the reference. So arranged, the nozzle feed channel entrance ports are aligned with associated exit holes 407, 411, 415, 417, 418 in feed block 294. However, in order more clearly to show the structure of the shells and their inter-relationship to each other, Figs. 49 and 50 depict the shells arranged with the centers of their feed channels located in a common plane.

As mentioned, the preferred nozzle is comprised of an assembly 296 of four interfitting nozzle shells enclosed within a nozzle cap. The outermost or first nozzle shell 436 contains a feed channel 448 for polymer B which communicates with an annular polymer flow passageway 460 formed between a portion of the inner surface of the nozzle cap and a portion of the outer surface of the nozzle insert shell. The passageway terminates at an annular exit orifice 462. The shell 436 is formed with first and second eccentric chokes 464, 466 extending into the passageway 460 and which restrict and direct the flow of polymer (Figs. 50, 65, 67, 68 and 70). The flow restriction around the circumference of the first eccentric choke is greatest in the area 467 where the feed channel communicates with the polymer flow passageway. The eccentric chokes function to assist in evenly balancing and distributing the flow of polymer around the circumference of the polymer flow passageway and its exit orifice. The eccentric chokes for all nozzle shells are designed to achieve steady state flow. A primary melt pool 468 (Fig. 50) is formed in flow passageway 460 between the rear wall 469 of the first eccentric choke and a forwardly tapered or pitched wall 470. Wall 470 defines the rear of the primary melt pool 468 and is shaped approximately to conform to the streamlines that the polymer would follow in dividing from a solid stream, from the forward end of feed channel 448, to the cylinder that exits from orifice 462. The pattern or shape of wall 470 is intended to approximate the boundary between flow of polymer and no-flow of polymer which would otherwise become a pool of stagnant polymer. A secondary melt pool 472 is formed in flow passageway 460 between the forward wall 473 of the first eccentric choke and the rear wall 474 of second eccentric choke 466 (Fig. 50). A final melt pool 476 is formed in flow passageway 460 between the forward wall 477 of the second eccentric choke and the orifice 462 of flow passageway 460. The final melt pool 476 comprises a conical portion 478 which forms a tapered, symmetrical reservoir of polymer. The purpose of the tapered conical section is to increase the circumferential uniformity of the flow of polymer existing from orifice 462. This is discussed below in reference to Fig. 77B, which shows a similar tapered conical flow channel.

Inserted within the first nozzle shell 436 is a second nozzle insert shell 434 having a feed channel 446 for polymer E (Figs. 50, 58-64) which is angularly offset from the feed channel 448 of polymer B by 180°. The feed channel 446 for polymer E communicates with an annular polymer flow passageway 480 formed between a portion of the inner surface of the outer nozzle insert shell 436 and a portion of the outer surface of the second nozzle insert shell 434 (Fig. 50). The passageway terminates at an annular exit orifice 482. The second nozzle insert shell 434 is formed with first and second eccentric chokes 484, 486 (Fig. 63) extending into the passageway 480 and which restrict and direct the flow of polymer E for the purpose previously described. The flow restriction around the circumference of the first eccentric choke is greatest in the area 487 where the feed channel 446 communicates with the polymer flow passageway 480 (Fig. 50). A primary melt pool 488 (Fig. 50) is formed in flow passageway 480 between the rear wall 489 of the first eccentric choke 484 and a forwardly pitched wall 490 (Figs. 58 and 63) which has the shape and function previously described with respect to wall 470. A secondary melt pool 492 is formed in flow passageway 480 between the forward wall 493 of the first eccentric choke 484 and the rear wall 494 of second eccentric choke 486 (Fig. 50). A final melt pool 496 is formed in flow passageway 480 between the forward wall 497 of the second eccentric choke 486 and the orifice 482 of flow passageway 480. The final melt pool comprises a conical portion 498 which forms a tapered, symmetrical reservoir of polymer for the purpose and function previously described.

Within the second nozzle insert shell 434 is a third noble insert shell 432 (Figs. 50, 55-57A) having a feed channel 444 for polymer C which is angularly offset by 120° (counter-clockwise when viewed from the shell's formed end or tip) from the feed channel 448 for polymer B. The feed channel 444 for polymer C communicates with an annular polymer flow passageway 500 formed between a portion of the inner surface of the second nozzle insert shell 434 and a portion of the outer surface of the third nozzle insert shell 432 (Fig. 50). The passageway terminates at an annular exit orifice 502. The third nozzle insert shell 432 (Figs. 55 and 57A) is formed with one eccentric choke 504 and one concentric choke 506 which restrict and direct the flow of polymer C for the purpose previously described. The flow restriction around the circumference of the eccentric choke is greatest in the area 507 where the feed channel 444 communicates with the polymer flow passageway 500. A primary melt pool 508 is formed in flow passageway 500 between the rear wall 509 of the eccentric choke 504 and a forwardly pitched wall 510 which has the shape and function previously described. A secondary melt pool 512 is formed in flow passageway 500 between the forward wall 513 of the eccentric choke 504 and the rear wall 514 of concentric choke 506. A final melt pool 516 is formed in flow passageway 500 between the forward wall 517 of the concentric choke 506 and the orifice 502 of flow passageway 500. The final melt pool comprises a conical portion 518 which forms a tapered, symmetrical reservoir of polymer for the purpose and function previously described.

Fitted within the third nozzle insert shell 432 is the inner nozzle insert shell 430 (Figs. 51-54A) having a feed channel 442 for polymer D which is angularly offset by 240° (counter-clockwise when viewed from the shell's forward end or tip) from the feed channel 448 for polymer B in the outer nozzle insert shell. A portion of the inner surface of the third nozzle insert shell 432 and a portion of the outer surface of the inner nozzle insert shell 430 form an annular polymer flow passageway 520 for polymer D (Fig. 50). The passageway 520 communicates with the feed channel 442 and terminates at an annular exit orifice 522. The inner nozzle insert shell 430 is formed with one eccentric choke 524 (Figs. 50, 51 and 53A) and one concentric choke 526 which restrict and direct the flow of polymer D for the purpose previously described. The flow restriction around the circumference of the eccentric choke is greatest in the area 527 where the feed channel 442 communicates with the polymer flow passageway 520. A primary melt pool 528 is formed in flow passageway 520 between the rear wall 529 of the eccentric choke 524 and a forwardly pitched wall 530 which has the shape and function previously described (Fig. 51). A secondary melt pool 532 is formed in flow passageway 520 between the forward wall 533 of the eccentric choke 524 and the rear wall 534 of second concentric choke 526. A final melt pool 536 is formed in flow passageway 520 between the forward wall 537 of the concentric choke 526 and the orifice 522 of flow passageway 520. The final melt pool 536 comprises a conical portion 538 which forms a tapered, symmetrical reservoir of polymer for the purpose previously described.

Inner shell 430 contains a central channel 540 (Fig. 50) which is preferably cylindrical and through which passes, and in which is carried, the preferred nozzle valve control means which comprises hollow sleeve 800 and solid pin 834. Controlled, reciprocal movement of sleeve 800 selectively blocks and unblocks one or more exit orifices 462, 482, 502 and 522, selectively preventing and permitting the flow of one or more of polymers B, E, C and D from those respective orifices. Inner feed channel 440 elsewhere sometimes referred to as a third orifice, for polymer A in inner shell 430 is angularly offset by 60° (counter-clockwise when viewed from the shell's forward end or tip) from the feed channel 448 for polymer B in the outer shell 436. Feed channel 440 communicates with central channel 540, but flow of polymer A into channel 540 is prevented when the pin blocks the aperture 804 in the wall of the sleeve (Fig. 50) and as the sleeve 800 blocks feed channel 440. Flow of polymer A into channel 540 is permitted when the pin is withdrawn sufficiently to unblock aperture 804 in the wall of the sleeve or when the sleeve is withdrawn sufficiently to unblock the forward end 542 (Fig. 53A) of feed channel 440.

Thus, each polymer flow passageway 460, 480, 500 and 520 terminates at an exit orifice and the orifices are located close to each other and to the tip of the nozzle cap 438. The central channel 540 of the inner nozzle insert shell 430, together with the orifice-forming ends of the tapered, conical portions 544 at the forward end of each of the shells, form the central channel 546 of the nozzle, and each of the annular exit orifices 462, 482, 502 and 522 of the polymer flow passageways communicates with the central channel 546 of the nozzle in a central channel combining area at a location close to the open end thereof.

It is highly desirable to have uniformity of polymer temperature around the annular flow passageway for each polymer. Lack of annular temperature uniformity causes lack of viscosity uniformity which, in turn, leads to non-uniform flow of the polymer, producing a deleterious bias of the leading edge of the internal layers. Angularly offsetting the nozzle shell feed channels from each other, as shown in Fig. 49AA, and as described above, angularly distributes around the nozzle the heat from the entering polymer flow streams, promoting annular temperature uniformity and correlative uniformity of polymer flow. A secondary benefit of angularly offsetting the nozzle shell feed channels is a substantial radial pressure balance of polymer flow streams on each nozzle assembly.

Particular aspects of the nozzle shells will now be described. Referring now particularly to Figs. 49A, 49AA and 50-54A, inner feed channel 440 in inner shell 430 is preferably a keyhole passageway (Fig. 54) which runs axially through the inner shell and communicates along its axial length with central channel 540 of the inner shell. The keyhole passageway running axially in communication with the central channel terminates at its forward end 542 in a forward terminal runout wall which is rounded so that the polymer material washes out of the keyhole and does not accumulate in any sharply cut corner. Keyhole exit port 407 in the first shelf 382 of feed block 294 communicates directly with a matched key slot entrance port 450 to inner feed channel 440. Key slot port 450 has a 5 mil (0.13 mm) chamfer to ensure proper alignment with exit port 407 in the feed block. The obloround exit port 411 in the first shelf of the feed block (Figs. 41, 42 and 42A) communicates directly with a matched obloround entrance port 452 cut into the rear face of the inner shell, and which communicates directly with an obloround feed channel 442 (.093 wide by .251" long - 2.36 x 6.38 mm) which runs axially through the approximately rear longitudinal half of the inner shell a uniform distance from the shoulder 548 (Figs. 51 and 53A) and through the pilot 549 at least approximately .298 inch (7.57 mm) from the axial center of the inner shell. The obloround feed channel 442 terminates at its forward end in an obloround forward exit port, whose upper portion communicates directly with a cut-away area 550 in the outer surface of the inner shell, and whose lower portion terminates in a forward terminal runout wall portion 551 (Fig. 53A) having a rounded sloping surface to avoid material accumulation there. Cut-away area 550 is of the same open cross-sectional area as the forward end of the feed channel. Wall portion 551 is preferably at a 45° angle or less, as measured from the central axis of the shell. The inner shell has a forwardly pitched cut circumferential forward edge or wall 530 having a low point adjacent obloround forward exit port of channel 442 and a high point disposed 180° from the exit port. The obloround feed channel exit port and the obloround feed channel runout which exit adjacent the low point of wall 530 communicate directly with a primary melt pool cut-away section 552 formed and defined at its rear boundary by wall 530, at its forward boundary by the rounded rear wall 529 of eccentric choke ring 524 and on its lower boundary by the cylindrical inner axial base wall 553 cut into the periphery of the inner shell (Fig. 53A). Eccentric choke ring 524 is disposed perpendicular to the axis of the inner shell. The width of choke 524 is narrower adjacent the obloround exit port and runout than it is at the 180° opposite side of the shell adjacent the high point of wall 530. When viewed in cross-section, eccentric choke 524 is circular. However, the center point of the circle it forms is eccentrically located relative to the axis of the shell such that the height of the radial protuberance (as shown in Fig. 51) is greater in the area adjacent the obloround exit port and runout than it is adjacent the high point of the elliptical wall 530. The inner shell 430 also has a restricter in the form of a concentric choke 526 concentrically disposed perpendicular to the axis of the inner shell. The width of the concentric choke 526 is the same about its circumference and the radial distance from the axis of the shell to its outer surface is the same around the circumference of the shell (Figs. 52 and 54). The walls 533, 534 of the respective eccentric and concentric chokes, together with the cylindrical inner axial base wall 553 form a secondary melt pool cut away section 554, 360° about the inner shell (Fig. 51). Forward of the concentric choke 526 is a final melt pool cut away section 555 formed by the forward wall 537 of the concentric choke, the cylindrical inner base wall 553 of the inner shell, and the frustoconical base wall 556 at the forward portion of the shell. The intersection of frustoconical wall 556 with central channel 540 in shell 430 has been ground to a flat annulus 601 (shown in exaggerated form in Fig. 53A), lying in a plane perpendicular to the longitudinal axis of the shell, to avoid breakage and wear which may occur when the acute angle intersection is a sharp edge. In the preferred embodiment, the radial thickness of the flat is 5 mils (0.13 mm). The radial distance of the base wall 553 from the central axis of the shell is the same for the primary and secondary melt pools as well as for the rear portion of final melt pool section 555.

As shown in Figs. 49, 49A, 49AA and 50, inner shell 430 is telescopingly seated in a close tolerance fit within the bore, generally designated 558 (Fig. 57A), of third shell 432 such that the rear face 559 of the third shell abuts against the forward face 560 (Figs. 51 and 53A) of the inner shell's shoulder 548. The cylindrical wall portion of the bore 558 in the third shell 432 cooperates with the walls of the melt pool cut away sections and forms the radially outer boundary wall of the primary melt pool 528, and of the secondary melt pool 532, of polymer D. The cylindrical wall portion of bore 558 and the inner surface of the tapered, frustoconical portion 544 of shell 432 form the outer wall of a cylindrical portion of, and of the tapered conical portion of, the final melt pool 536 of polymer D (Figs. 50 and 57A).

The third shell 432 of the nozzle assembly of this invention is shown in Figs. 50 and 55-57A. Obloround entrance port 454 communicates directly with a matched obloround exit port 415 in the second shelf 384 of the feed block 294 nozzle-receiving chamber 380. Port 454 communicates directly with a like obloround feed channel 444 (.250 inch wide by about .109 inch high - 6.35 x 2.77 mm) which runs axially through the approximate rear longitudinal half of the third shell, the axis of channel 444 being located approximately .460 inch (11.7 mm) measured from the axial center line of the third shell. The third shell has a forwardly pitched cut circumferential forward edge or wall 510 (Fig. 55) having a low point adjacent the forward exit port of channel 444 and a high point disposed 180° from the exit port. Feed channel 444 terminates at its forward end in an obloround forward exit port which communicates directly with a primary melt pool cut-away section 561 and defined at its rear boundary by the wall 510, at its forward boundary by the rear wall 509 of the eccentric choke 504 and on its lower boundary by the cylindrical inner axial base wall 562 cut into the periphery of the third shell. The eccentric choke 504 has its circumferential center line in a plane perpendicular to the axis of the third shell. The width of the choke is non-uniform around its circumference. When viewed in cross-section (see Fig. 57A), eccentric choke 504 is circular, but the center of the circle it forms is eccentrically located relative to the axis of the third shell, such that the height of the radial protuberance (as also shown in Fig. 55) relative to the base wall 562 is greater in the area adjacent the obloround exit port than it is adjacent the high point of the elliptical wall 510. The third shell 432 also has, adjacent to but axially forward of eccentric choke ring 504, a restricter in the form of a concentric choke ring 506, concentrically disposed relative to, and having a plane through its circumferential center line perpendicular to, the axis of the third shell. The width of the concentric choke 506 is the same around its circumference and the radial distance from the axis of the shell to the outer surface of the choke is uniform. The walls 513, 514 of the respective eccentric and concentric chokes, together with the base wall 562 form a secondary melt pool cut away section 563, 360° about the shell. The radial distance of the base wall 562 from the central axis of the shell is the same for each of the primary and secondary melt pools. Forward of the concentric choke 506 is a final melt pool cut away section 564, formed by the forward wall 517 of the concentric choke 506, the cylindrical inner base wall 565 portion of the shell and by the frustoconical base wall 566 at the forward portion of the third shell. To add strength to the forward portion of the shell, the radial distance of the base wall 565 from the central axis of the shell is greater than the distance of base wall 562.

Referring again to Figs. 49, 49A and 50, the third shell 432 is telescopingly seated in a close tolerance fit within the bore, generally designated 567, of second shell 434 such that the rear face 568 of the second shell abuts against the forward face 569 of the third shell's shoulder 570. The cylindrical wall portion 602 of the bore 567 in the second shell 434 forms the radially outer boundary wall of the primary melt pool 508, and of the secondary melt pool 512, of polymer C. The cylindrical wall portion 602 of bore 567 and the inner surface 603 of the tapered, frustoconical portion 544 of shell 434 form the outer wall of a cylindrical portion of, and of the tapered conical portion of, the final melt pool 516 of polymer C.

The second shell 434 of the nozzle assembly of this invention is shown in Figs. 58 through 62B. Obloround entrance port 456 communicates directly with a matched obloround exit port 417 in the third shelf 386 of the feed block 294 nozzle receiving chamber 380. Port 456 communicates directly with a like obloround feed channel 446 (.093 inch high by .250 inch wide - 2.4 x 6.35 mm) which runs axially through the approximately rear longitudinal half of the shell from the rear face 568 of the shell, through the shoulder 571 and through the pilot 572 at a downward angle directed toward the axis of the shell to the forward end of the feed channel. The upper end portion of the exit port of feed channel 446 communicates directly with a cut-away area 573 in the outer surface of the shell. The lower portion of the feed channel obloround forward exit port terminates in a forward terminal run-out wall portion 605 having a rounded, sloping surface to avoid material accumulation therein. As in the case of the inner and third shells, the second shell likewise has an eccentrically cut circumferential forward edge or wall 490. Wall 490 has a low point adjacent the obloround forward exit port of channel 446 and a high point disposed 180° from the exit port. The exit port and run-out communicate directly with a primary melt pool cut-away section 574 formed and defined at its rear boundary by wall 490, at its forward boundary by the rounded side wall 489 of the eccentric choke ring 484, and on its lower boundary by the cylindrical inner axial base wall 575 cut into the periphery of the shell. Eccentric choke 484 is disposed perpendicular to the axis of the shell. The width of choke 484 is narrower adjacent exit port and run-out than it is at the 180° opposite side of the shell adjacent the high point of wall 490. When viewed in cross-section, eccentric choke 484 is circular. However, the center point of the circle it forms is eccentrically located relative to the axis of the shell such that the height of the protruding choke wall (as shown in Fig. 58) is greater in the area adjacent the obloround exit port and run-out than it is adjacent the high point of the elliptical wall 490. The second shell 434 also has, adjacent to but axially forward of eccentric choke 484, a second flow restricter in the form of another eccentric choke 486 disposed perpendicular to the axis of the shell. The width of eccentric choke 486 is non-uniform and like eccentric choke 484 is narrower in the portion of the circumference of the shell which is aligned with the exit port.

When viewed in cross-section, eccentric choke 486 is circular. However, the center point of the circle it forms is eccentrically located relative to the axis of the shell such that the height of the protruding choke wall relative to the base wall 575 (as shown in Fig. 58) is greater on the side of the shell where the feed channel 446 is located than it is on the side where the forward portion of the wall 490 is located. The walls 493, 494 of respective eccentric chokes 484, 486, together with the base wall 575, form a secondary melt pool cut away section 576, 360° about the shell. Forward of choke 486 is a final melt pool cut away section 577, formed by forward wall 49 of choke 486, the cylindrical base wall 575 portion of the shell and by the frustoconical base wall 578. The radial distance of base wall 575 from the central axis of the shell is the same for the primary and secondary melt pools and for the rear portion of the final melt pool.

Referring again to Figs. 49, 49A and 50, the second shell 434 is telescopingly seated in a close tolerance fit within the bore, generally designated 579, of first shell 436 such that the rear face 580 of the first shell abuts against the forward face 581 of the second shell's shoulder 571. The cylindrical wall portion 606 of the bore 579 in the first shell 436 forms the radially outer boundary wall of the primary melt pool 488, and of the secondary melt pool 492, of polymer E. The cylindrical wall portion 606 of bore 579 and the inner surface 607 of the tapered, frustoconical portion 544 of shell 436 form the outer wall of a cylindrical portion of, and of the tapered conical portion of, the final melt pool 496 of polymer E.

The first shell 436 of the nozzle assembly of this invention is shown in Figs. 65 through 70A. Obloround entrance port 458 communicates directly with a matched exit port 418 in the front face 388 of the feed block 294. Exit port 418 is the exit of feed throat 402 which is cut out of the periphery of feed block 294. The radially outer wall of feed throat 402 is the inside surface of the bore in the runner block into which is inserted the feed block 294. Port 458 communicates directly with a like obloround feed channel 448 (.093 inch high by .250 inch wide - 2.4 x 6.35 mm) which runs axially through the approximately rear longitudinal third of the shell from the rear face 580 of the shell, through the shoulder 582 and through the pilot 583 at a downward angle directed toward the axis of the shell to the forward end of the feed channel. The upper end portion of the exit port of feed channel 448 communicates directly with a cut-away area 584 in the outer surface of the shell. The lower portion of the feed channel obloround forward exit port terminates in a forward terminal run-out wall portion 609 having a rounded, sloping surface to avoid material accumulation therein. As in the case of the previously mentioned shells, the first shell has an eccentrically cut circumferential forward edge or wall 470. Wall 470 has a low point adjacent the obloround forward exit port of channel 448 and a high point disposed 180° from the exit port. The exit port and run-out communicate directly with a primary melt pool cut-away section 585 formed and defined at its rear boundary by wall 470, at its forward boundary by the rounded side wall 469 of the eccentric choke ring 464, and on its lower boundary by the cylindrical inner axial base wall 586 cut into the periphery of the shell. Eccentric choke 464 is disposed perpendicular to the axis of the shell. The width of choke 464 is narrower adjacent exit port and run-out than it is at the 180° opposite side of the shell adjacent the high point of wall 470. When viewed in cross-section, eccentric choke 464 is circular. However, the center point of the circle it forms is eccentrically located relative to the axis of the shell such that the height of the protruding choke wall (as shown in Fig. 65) is greater in the area adjacent the obloround exit port and run-out than it is adjacent the high point of the elliptical wall 470. The first shell 436 also has, adjacent to but axially forward of eccentric choke 464, a second flow restricter in the form of another eccentric choke 466 disposed perpendicular to the axis of the shell. The width of eccentric choke 466 is non-uniform and like eccentric choke 464 is narrower in the portion of the circumference of the shell which is aligned with the exit port. When viewed in cross-section, eccentric choke 466 is circular. However, the center point of the circle it forms is eccentrically located relative to the axis of the shell such that the height of the protruding choke wall relative to the base wall 586 (as shown in Fig. 65) is greater on the side of the shell where the feed channel 448 is located than it is on the side where the forward portion of the wall 470 is located. Eccentric choke 464, in the preferred embodiment, is 10 mils (0.25 mm) radially larger than eccentric choke 466. The walls 473, 474 of respective eccentric chokes 464, 466, together with the base wall 586, form a secondary melt pool cut away section 587, 360° about the shell. Forward of choke 466 is a final melt pool cut away section 588, formed by forward wall 477 of choke 466, the cylindrical base wall 586 portion of the shell and by the frustoconical base wall 589. The radial distance of base wall 586 from the central axis of the shell is the same for the primary and secondary melt pools and for the rear portion of the final melt pool. Two holes 590 partially drilled into the shoulder 582 of shell 436 each receive the end portion of an anti-rotation pin 591 (see Figs. 31 and 49) which extends through a channel bored in the runner and which serves to locate, and prevent rotation of, the shell.

The cone tip 601 of each of the four nozzle shells 430, 432, 434 and 436 is rounded to a radius of approximately 5 mils (0.13 mm). This makes the tip less susceptible to fracture from melt stream pressure and from damages during handling of the shells and their assembly.

The first shell 436 is telescopingly seated within nozzle cap 438. The rear wall of shoulder 592 of the nozzle cap abuts against the forward wall of the first shell shoulder 582. The inner cylindrical surface 610 of the nozzle cap forms the outer boundary of the primary melt pool 468 and the secondary melt pool 472 and the rear portion of the final melt pool 476. The inner conical wall 593 of the nozzle cap forms the outer boundary of the conical portion 478 of the final melt pool 476. The length of the conical wall 593 of the nozzle cap is longer than any of the frustoconical walls of the shells, and the conical portion of the nozzle cap terminates at its forward end in a nozzle tip 594 having a centrally located channel 595 which communicates directly with the mouth or gate 596 at the forward most tip of the nozzle cap. The diameter of channel 595 is smaller than that of the sprue of the mold cavity. Pin 834, which is included in the nozzle valve means of the present invention, may be received within channel 595, in a close tolerance slip fit, at the end of each injection cycle for the purposes of assisting in preventing the flow of polymer B at the end of each injection cycle and clearing or purging substantially all polymeric material from the nozzle central channel 546 and channel 595 into the injection cavity at the end of each injection cycle.

The nozzle shells are assembled and placed in the injection machine in the following manner. First, the feed block is seated within bore 822 of runner block 288. This is done by first seating piston rings 424 in grooves 425 of the feed block and compressing the rings as the feed block is inserted into bore 822. Next, the feed block is properly oriented within the bore by placing shaft 156' of locator pin 154 within hole 158 in the side of the feed block (see Figs. 29C, and 45-45B). Once the feed block is properly oriented and seated within bore 822, then, "O" rings 597, preferably made of soft copper, are inserted in seats 598 which are cut in the shoulder of each nozzle shell and the nozzle cap. The "O" ring is preferably formed from 22 gauge annealed copper wire having a cross-section 30 mils (0.76 mm) in diameter. Then, a position-alignment locator pin 611 is inserted into the locator pin hole in the rear face of the inner shell 430, the third shell 432 and the second shell 434, and the shells are individually serially inserted into and are seated within a portion of nozzle receiving chamber 380 at the forward end of feed block 294, more particularly, within the portion defined by first shelf 382 and first step 383 (Figs. 41 and 43). Next, pin 611 in third shell 432 is respectively seated within hole 422 in feed block second shelf 384, and then the third shell is seated within the feed block receiving chamber portion formed by second shelf 384 and step 385. Next, pin 611 in second shell 434 is seated within hole 421 in feed block third shelf 386 and the second shell is seated within the chamber portion formed by third shelf 386 and step 387. Pin 611 in first shell 436 is then seated within hole 420 in front face 388 of feed block 294 and the rear face of the first shell is abutted against the front face of the feed block. Next, a sealing ring 597 is seated in a seat in the rear face of nozzle cap 438. The nozzle cap 438 is then slipped over the first shell and moved rearward until its rear face abuts the flange 582 of first shell 436. Next, keeper plate 176 (Figs. 29A, 29A', and 29B) is slipped over the nozzle cap, and, by means of bolts 177 the plate is secured to runner block 288. Bolts 177 are drawn tight to compress seal rings 597 on the first shell and the nozzle cap. This lock up drives the rear face of the nozzle cap against flange 582 of the first shell 436, drives the rear face of that shell against front face 388 of feed block 294, permanently seats the first shell and nozzle cap respectively against fixed shoulder 822' in the runner block, and, as stated seats the first shell against the front face 388 of the feed block. Finally, lock ring 824 is tightened to compress the "O" rings to assure a metal to metal seat abutment between each of the shells, nozzle caps and feed block. Tightening the lock ring also prevents axial movement of the feed block within runner block bore 822.

The nozzle cap and each of the nozzle shells should be formed from a material having dimensional stability at the elevated temperatures to which they are subjected in the operation of the machine, on the order of 400 - 430°F (204 - 221°C). The nozzle cap, the first nozzle shell 436 and the inner shell 430 should be formed from a material which also has high wear resistance. The second and third nozzle shells 434 and 432 should be made from a material which also has good ductility and elongation. Nozzle shells 430, 436 and nozzle cap 438 have been made from steel conforming to Unified Numbering System for Metals and Alloys No. T 30102. Suitable nozzle shells 432 and 434 have been made from Viscount 44 prehardened hot work steel H-13 (Latrobe Steel Co.) having a typical % analysis: C 0.4; Si 1.0; Mn 0.8; Cr 5.0; Mo. 1.2; V 1.0. Most preferably, all the nozzle shells 430, 432, 434 and 436, and nozzle cap 438, are made from VascoMax C-300 steel having a nominal analysis: Ni 18.5%; Co 9.0%; Mo 4.8%; Ti 0.6%; Al 0.1%; Si 0.1% max.; Mn 0.1% max.; C 0.03% max.; S 0.01% max.; P 0.01% max.; Zr 0.01%; B 0.003%. The pin 834 and sleeve 800 should be formed from a material having high wear resistance and dimensional stability. Sleeves have been made from D3 steel conforming to Unified Numbering System No. T 30403. The sleeve is made from D-3 steel, most preferably VascoMax C-250 steel having a nominal analysis: Ni 18.5%; Co 7.5%; Mo 4.8%; Ti 0.4%; Al 0.1%; Si 0.1% max.; Mn 0.1% max.; C 0.03% max.; S 0.01% max.; P 0.01% max.; Zr 0.01%; B 0.003%. Suitable pins are manufactured by D-M-E Co. (2911 Stephenson Hwy., Madison Heights, Michigan 98071) as ejector pins, Cat. No. Ex-11-M18.

Figs. 75, 76 and 77 respectively are a side elevation, a cross-section and an end view of an exemplary nozzle shell showing letter designations corresponding to those of Table I for the dimensions of the stated parts of the preferred embodiment of outer shell 436, second shell 434, third shell 432, inner shell 430 and nozzle cap 438 of nozzle assembly 296. In Table I, all dimensions are in inches except S and T which are degrees and in Table 1A the corresponding metric dimensions are given.

**TABLE I**

| NOZZLE SHELL DIMENSIONS | | | | | |
|---|---|---|---|---|---|
| | Outer Shell | Second Shell | Third Shell | Inner Shell | Nozzle Cap |
| A | 3.1370 | 3.3774 | 3.6979 | 3.9928 | 2.7991 |
| B | 2.2815 | 2.413 | 2.787 | 3.300 | 2.177 |
| C | 1.9640 | 2.3440 | 2.7691 | 3.125 | 1.7017 |
| D | 2.101 | 2.163 | 2.625 | 2.862 | --- |
| E | 1.945 | 2.042 | 2.574 | 2.702 | --- |
| F | 1.745 | 1.843 | 2.275 | 2.452 | --- |
| G | 1.545 | 1.718 | 2.078 | 2.311 | --- |
| H | 0.795 | 1.218 | 1.578 | 1.811 | --- |
| I | 0.6251 | 0.3751 | 0.3751 | 0.3751 | 0.593 |
| J | 0.0255 | 0.0255 | 0.0255 | 0.0255 | --- |
| K | 1.327 | 1.500 | 1.860 | 2.093 | --- |
| L | 1.6251 | 1.1876 | 0.7501 | 0.2504 | 2.0007 |
| M | 2.3989 | 1.7179 | 1.2809 | 0.8439 | 2.436 |
| N | 2.3255 | 1.654 | 1.216 | 0.7795 | --- |
| O | 2.000 | 1.6247 | 1.1872 | 0.7497 | 2.309 |
| P | 1.9000 | 1.500 | 1.0535 | 0.6897 | --- |
| Q | 1.800 | 1.365 | 0.987 | 0.5897 | 0.500 |
| R | 1.800 | 1.365 | 0.907 | 0.5897 | --- |
| S | 33 | 25 | 15.50 | --- | 45 |
| T | 42 | 30 | 22 | 13.50 | 60 |
| U | 0.2504 | 0.2504 | 0.2504 | 0.2504 | 0.1563 |
| V | 0.0295 | 0.0373 | 0.0332 | 0.0173 | --- |
| W | 1.880 | 1.500 | 1.0537 | 0.6647 | --- |
| X | 0.250 | 0.250 | 0.250 | 0.250 | --- |
| Y | 0.093 | 0.125 | 0.1095 | 0.093 | --- |
| Z | 0.9525 | 0.7345 | 0.5145 | 0.2965 | --- |
| AA | 0.462 | 0.375 | 0.281 | 0.344 | --- |
| BB | 0.799 | 0.650 | 0.487 | --- | --- |
| CC | 0.090 | 0.090 | 0.090 | 0.090 | --- |
| DD | 0.003 | 0.003 | 0.003 | 0.003 | --- |
| EE | 0.012 | 0.012 | 0.012 | 0.012 | --- |
| FF | 0.063 | 0.063 | 0.063 | 0.063 | --- |
| GG | 0.0075 | 0.0075 | 0.0075 | 0.0075 | 0.0075 |
| HH | 0.120 | 0.030 | 0.030 | --- | --- |
| | 3 | 1 | 0 | 0 | --- |

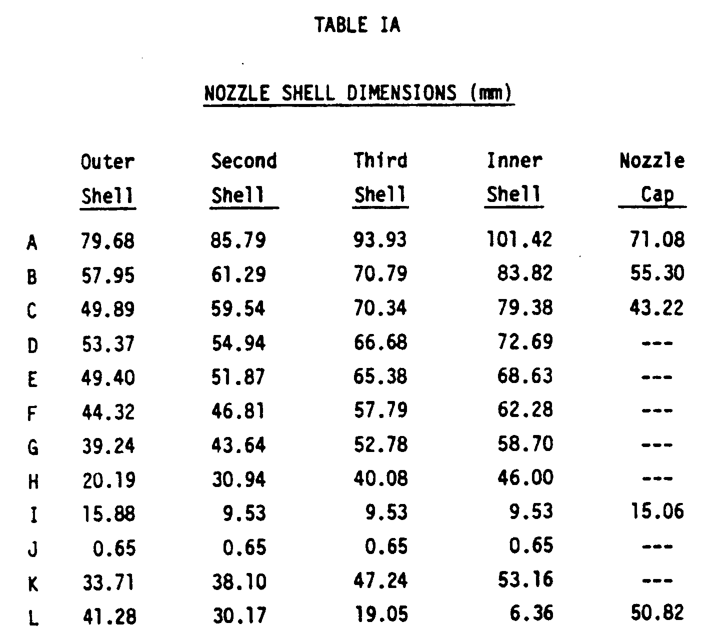

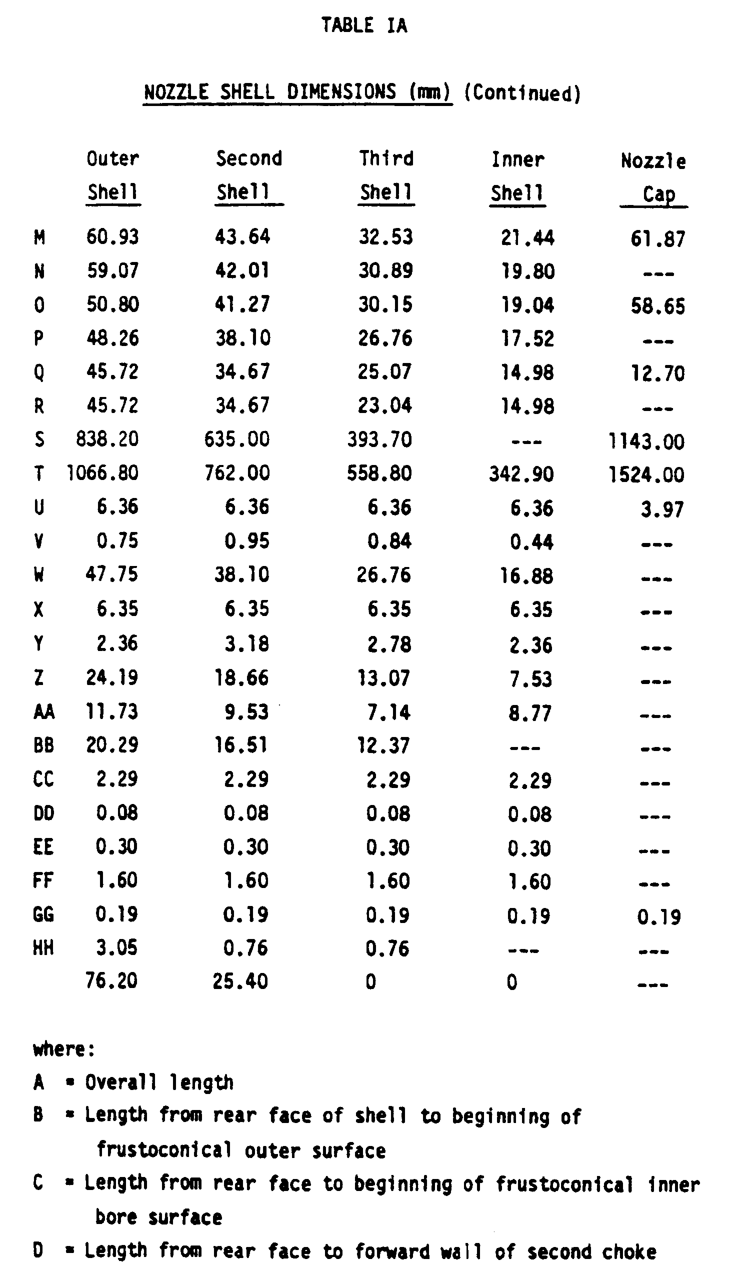

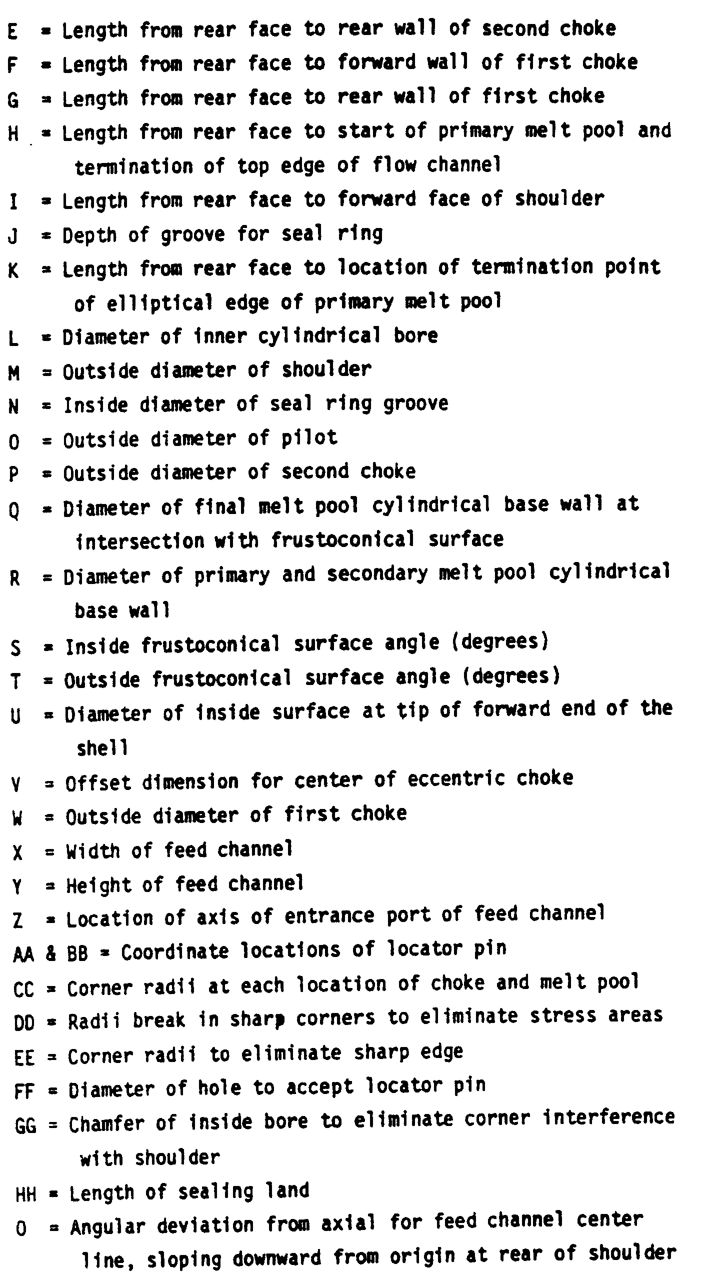

Figure 77A shows that in the preferred embodiment of the nozzle assembly or co-injection nozzle of this invention, an imaginary line drawn from the leading lip to the trailing lip about the circumference of each pair of lips which form each of the respective first, fourth, second, and fifth narrow, fixed, annular exit orifices 462, 482, 502 and 522 (the third orifice for A layer material is not shown) of passageways 460, 480, 500 and 520, forms an imaginary cylinder whose imaginary wall completely surrounds the central channel substantially parallel to the axis of the co-injection nozzle central channel, generally designated 546. Projections of the respective mid-points about the circumference of the imaginary cylindrical surface of each orifice are referred to and shown as center lines 190, 192, 194 and 196 and which, in the preferred embodiments, are perpendicular the axis of the co-injection nozzle. The orifices shown have an axial width which is uniform about the central channel and they have a cross-sectional area no greater than, and preferably less than that of the central channel. The central channel has a portion which coincides with the central channel 540 of inner shell 430, and extends forward through the channel portion of the nozzle assembly defined by the nozzle shell tips and by orifices 522, 502, 482 and 462. The nozzle central channel extends forward to the portion of the leading wall of passageway 460 which is designated 460' and which is shown extending diagonally downward from the leading lip 461 of orifice 462 toward the gate and the axis of the central channel, and the central channel coincides with channel 595 which runs forward through nozzle cap 438 to gate 596. The central channel preferably is cylindrical and has a uniform cross-sectional area throughout its length, or at least from the leading lip 461 of the first orifice to the trailing lip of the second orifice 502 or of the orifice most remote from the gate (other than the third orifice or feed channel for the A layer material). In Fig. 77A, the most remote orifice is the fifth orifice, 522. The nozzle central channel includes what is referred to as the combining area which is that portion of the central channel, preferably cylindrical, extending from the leading lip 461 of the first annular exit orifice 462 to the trailing lip of the annular orifice most remote from the gate, here, trailing lip 523 of fifth annular exit orifice 522. For a co-injection nozzle of a comparable design for co-injecting three layers, the orifice most remote from the gate would be the second orifice 502. In the combining area, the polymer streams combine into a combined flow stream for injection from the nozzle. For forming the thin walled containers and articles of this invention, it is preferred that the combining area be as short as possible, that is, that the orifices be located as close to each other as possible and as close as possible to the gate, given the certain nozzle tip thicknesses and strengths required for nozzle operating temperatures and pressures and given sufficient tip land lengths for sealing purposes, such as to prevent cross channel flow. Wherever it is located, the combining area for a five layer nozzle will usually have an axial length of from about 150 to about 1500 mils (3.81 to 38.1 mm), more often from about 150 to about 500 mils (3.81 to 12.7 mm). With respect to the preferred nozzle assembly schematically shown in Fig. 77A, the "combining area" preferably has a uniform cross-sectional area and has an axial length of from about 150 to about 1500 mils (3.81 to 38.1 mm) measured to trailing lip 523, more preferably, from about 150 to about 500 mils (3.81 to 12.7 mm). When the combining area extends to the trailing lip of the second orifice, preferably its axial length is from about 100 to about 900 mils (2.54 to 22.9 mm), more preferably from about 100 to about 300 mils (2.54 to 7.62 mm). It is believed that the closer the orifices are to each other, the more precise the control will be over the relative annular locations of the respective materials in the combined stream, and the easier it is to knit and encapsulate the C layer material. Although the combining area can be located anywhere in the central channel, for example, more removed from the gate than shown in the drawings, it is preferred that the first, and additionally the fourth, second and fifth orifices be located as close as practically possible to the gate. It is believed that the closer the orifices are to each other and to the gate, the shorter will be the flow travel distance for the combined flow stream to the gate and the greater will be the likelihood that the precise control exerted over the material streams or layers at the orifices and in the combining area will be maintained into the injection cavities and reflected in the relative locations and thicknesses of the respective layers and their leading edges in the formed articles. For forming the thin walled articles of this invention, preferably, the leading lip of the first orifice is within from about 100 to about 900 mils (2.54 to 22.9 mm) of the gate, more preferably within from about 100 to about 300 mils (2.54 to 7.62 mm) of the gate. A suitable orifice arrangement is one wherein the first orifice has its center line within from about 100 to about 350 mils (2.54 to 8.89 mm), preferably about 300 mils (7.62 mm) from the gate, the second orifice has its center line within from about 100 to about 250 mils (2.54 to 6.35 mm) of the center line of the first orifice, and the leading lip of the first orifice and the trailing lip of the second orifice are no greater than about 300 mils (7.62 mm) apart. Another suitable arrangement is that wherein the trailing lip of the second orifice, or of the least proximate orifice relative to the gate, is from about 100 to about 650 mils (2.54 to 16.5 mm) from the gate. Preferably the center line of the second orifice is within from about 100 to about 600 mils of the gate (2.54 to 15.2 mm). The axial length from the leading lip of the fourth orifice to the trailing lip of the fifth orifice is preferably from about 100 to about 900 mils (2.54 to 22.9 mm), more preferably from about 100 to about 300 mils (2.54 to 7.62 mm). It is most desirable to have the fourth, second and fifth orifices as close together as possible. Preferably, the combining area has a volume no greater than about 5% of the volume of the injection cavity into which the combined polymer flow stream is injected from the nozzle. A greater volume renders it difficult to blow a thin bottom container and wastes polymeric material.

It is preferred that one or more of the nozzle passageways of this invention especially those having annular orifices be tapered, especially those whose materials are to be pressurized, to have rapid and uniform onset flow, and to thereafter flow at substantially steady conditions. A tapered passageway adjacent the orifice is also advantageous because it facilitates rearward movement of polymer material in the passageway and therefore it facilitates decompressing and reducing or stopping flow through an orifice when a ram is withdrawn. It is particularly desired to utilize the tapered passageways and narrow annular orifices in cooperation with the valve means of this invention, especially with respect to intermittent flow processes such as those included in this invention, particularly with respect to starting and stopping the flow of an internal barrier layer and intermediate adherent layer materials. It is usually desired that the passageway for internal layer material sometimes referred to as the second passageway, be tapered particularly when the material is a barrier material and the location of its leading edge and its lateral location in the injected article is important. For such applications, it is also desired that the passageway for the outer layer material, sometimes referred to as the first passageway, be tapered since the flow of that material affects the flow, thickness and location of the internal layer material. A tapered passageway here means that the walls which define the confines of the portion of the passageway adjacent the orifice, here the leading or outer and trailing or inner walls which define the final melt pool, converge from a wide gap at an upstream location of the passageway, here at the beginning of the final melt pool, to a narrow gap at the exit orifice. Although it is preferred that the convergence be continuous to the orifice, the taper, as defined above, can be independent of the passageway wall geometry therebetween. Thus, the orifice of a tapered passageway has a smaller cross-sectional gap than an adjacent upstream portion of the passageway. Although the taper may be provided by changing the slope angle of either the passageway outer or inner walls or both, it is to be noted that the taper of the passageway is distinct from the shape of the frustoconical portion of the shell. Employing a tapered passageway and utilizing pressurization of the material in the tapered passageway adjacent the orifice creates a pressurized final melt pool of polymeric melt material such that when the orifice is unblocked, there is a rapid initial flow uniformly over all points of the orifice and there is a sufficient supply of compressed material in the melt pool to substantially attain longer steady flow conditions. The rapidity and degree of uniformity of initial flow would be substantially less and there would be a significant drop-off in the flow volume into the central channel with a constant gap equal to the gap of the orifice determined by a line projected from the trailing lip perpendicularly through the flow passageway. The ability to rapidly stop the flow through a non-tapered, constant gap passageway would be significantly less than with a tapered passageway because the latter would have a substantially narrower gap.

As will be explained in connection with Fig. 77B and the Table below, a tapered, decreasing-diameter, frustoconical passageway enhances the polymeric material melt flow circumferentially around the narrowing conical shell portion and thereby assists in flow balancing the material about the conical tip prior to exiting the orifice.

Fig. 77B, a vertical cross-sectional view through a hypothetical nozzle shows a tapered passageway formed by the leading or outer wall OW and the trailing or inner wall IW, the latter being the outer surface of the frustoconical portion of a nozzle shell, say 436 in Fig. 77A. Fig. 77B shows the passageway axially divided into four sections designated I, II, III and IV and Table B below shows the dimensions from the axial center line of the nozzle to points on the inner wall at the divisions of the sections and the dimensions from the axial center line radially to a point on the same radius and on the outer wall. The dimensions shown in Fig. 77B and a standard parallel plates channel flow equation for an incompressible isothermal purely viscous (non-viscoelastic), non-Newtonian power law fluid known to those in the art, were used to calculate the values shown in Table C below, where:
G = the geometrical factor for the design of the flow passageway. This is an equivalent form of flow resistance.
ΔP = the pressure drop between two points measured either at the midpoints between the sections in the axial direction, or 180° apart in the azimuthal direction within the same section.

**TABLE B**

| Dimensions for Fig. 77A | | |
|---|---|---|
| Dimension | Inches | Millimetres |
| A | 0.8589 | 21.82 |
| B | 1.0002 | 25.41 |
| C | 0.6755 | 17.16 |
| D | 0.7964 | 20.23 |
| E | 0.4921 | 12.50 |
| F | 0.5927 | 15.05 |
| G | 0.3086 | 7.84 |
| H | 0.3890 | 9.88 |
| I | 0.1252 | 3.18 |
| J | 0.0604 | 1.53 |
| K | 0.2037 | 5.17 |
| L | 0.2037 | 5.17 |
| M | 0.2037 | 5.17 |
| N | 0.2037 | 5.17 |

It is known that there is an increase in the resistance to flow of a polymeric melt material as it flows axially forward through either a tapered gap or a constant gap passageway toward an orifice. This applies even though in each case the inner wall of the passageway is the outer surface of a frustoconical portion of a nozzle shell of this invention. This is due to the decreasing diameter of the frustoconical portion which reduces the circumference of the flow passage. Table C below shows that given the small orifice gap, a tapered passageway in cooperation with the inner frustoconical surface enhances the flow of polymer melt material in the circumferential direction about the frustoconical shell portion and provides greater flow balancing of the material than would a constant gap in cooperation with the same inner frustoconical surface and having the dimensions of the orifice. This can be seen by comparing the value of G azimuthal for a tapered passageway with G azimuthal for a passageway having a constant gap of the dimensions of the orifice gap.

**TABLE C**

| | Tapered Passageway | | | | Constant Gap Passageway | | | |
|---|---|---|---|---|---|---|---|---|
| Section | Axial Direction | | Azimuthal Direction | | Axial Direction | | Azimuthal Direction | |
| | G | ΔP | G | ΔP | G | ΔP | G | ΔP |
| I | 28 | 29 | 631 | 513 | 111 | 117 | 2532 | 2059 |
| II | 40 | 42 | 647 | 525 | 122 | 128 | 1938 | 1576 |
| III | 65 | 68 | 637 | 518 | 137 | 144 | 1343 | 1092 |
| IV | 125 | 131 | 552 | 449 | 163 | 170 | 750 | 610 |

In the preferred practice of the invention wherein all polymer streams flow in balance, each of the polymer streams is maintained at a temperature at which the polymer is fluid and can flow rapidly through the apparatus. Although any suitable heating system can be employed to bring and maintain the polymer streams to the desired temperature, preferably the polymers in their flow channels are maintained at the desired temperature by conduction from the metal forming and surrounding the channels. The metal in turn is maintained at its temperature by a hot fluid, such as oil, passing through flow channels suitably located near the polymer flow channels. In the previously-described apparatus, oil which has been heated to an appropriate temperature, preferably in the range of from about 400°F to 420F (204 - 216°C), usually about 410°F (210°C) simultaneously enters the left side of the rear injection manifold and the left side of the forward manifold, passes once horizontally through their respective widths in channels 309 and 311 and exits their right side into a manifold plate (not shown) which directs it to ram block 228. The oil enters the ram block's lower right side, makes three passes through channels 310, and exits through its upper left side. Each pass through the ram block is at a different level and through a different combination of the channels. The exit oil enters a heated reservoir (not shown) for recycling.

The runner system, including the runner extension, has a three-zone oil heating system (see Figs. 29, 30, 31). The first is a one-pass system for the runner extension wherein, at the twelve o'clock position of its central section 279, heated oil transferred from a reservoir through manifold 157 (Fig. 29) and through a pipe 159 connected thereto and to oil retainer sleeve 972, enters the rearmost of annular channels 277, is split and flows clockwise and counter-clockwise downward around the runner extension, and exits at the six o'clock position in the forward direction through a notch 277A into a forward adjoining annular channel 277 where the oil is again split and flows upward to the top and forward through another notch 277A. The oil follows a similar forward path through all channels and exits the bottom of the frontmost one through a pipe 277B (shown broken away) which directs it to an entrance (not shown) in bottom oil manifold 277C bolted to runner 288. From manifold 277C the oil passes upward through the runner out through two holes 277D (Fig. 31) similarly positioned forward of the runner extension front face 952, to a top manifold cover 277E (shown broken away) on top of the runner (see Figs. 29, 29C), which passes the oil to a heater for reheating the recycling through the first zone. The second zone or system is comprised of peripheral oil channels 277F which run along the rear and front faces of the runner block (see Fig. 31). The oil enters bottom oil manifold 277C through a port 160 for a channel 162 which through cross channels (not shown) directs the oil to oil channels 277F which in turn direct the oil upwardly through channels 277F to top oil manifold 277E, which directs it to a reservoir for reheating and from which it is transferred through a pipe (broken away) connected to port 160 for recycling through the second zone. The oil for the third zone or system enters bottom oil manifold 277C through a port 164 for a channel 166 which, through cross channels (not shown) directs the oil to oil channels 277G which in turn (Fig. 30), direct the oil upwardly through the oil channels 277G, to a common discharge (not shown) at the top of runner 288, which directs the oil to a reservoir (not shown) for reheating and from which it is transferred through a pipe (broken away) connected to port 164 for recycling through the third zone.

It will be understood by those skilled in the art that any suitable oil flow path and direction can be employed.

A conventional oil heating system (not shown) is employed in injection cavity bolster plate 950 for heating injection cavities 102.

### The Valve Means, Drive Means and Mounting Means

### The Sleeve

The structure comprising the nozzle valve means or valve means included within the co-injection nozzle means of this invention, and associated drive means for the valve means will now be described in greater detail, having reference to Figs. 78-105. The valve means includes hollow sleeve 800 which is comprised of an elongated tubular member 802 (shown foreshortened), having an internal axial polymer flow passageway or bore 820, having a wall 808 and at least one port 804 in the wall at its forward end portion 806 and communicating with passageway 820, and having a back end portion shown in the form of a frustoconical mounting flange portion 810 which contains pressure relief vent hole 811. Sleeve 800 has a mouth 812 defined by an annular tapered lip 814 at its forward end, and an opening 816 in its rear face 818. The sleeve and mouth are adapted to provide a polymer stream orifice in communication with the central channel at least adjacent the trailing lip of the second or fourth orifices. In the preferred embodiment, the thickness of the wall 808 of the sleeve is 47 mils (1.2 mm), the outer diameter of the sleeve is 250 mils (6.35 mm), the tapered lip 814 is at a 45° angle, and the axial distance from the mouth 812 of the sleeve to the intersection of the taper with the outer surface of the sleeve is 47 mils (1.2 mm). Mouth 812 and opening 816 communicate with axial bore 820 which runs the length of the sleeve. Sleeve 800 is mounted in the apparatus of this invention for reciprocal movement through the respective central channels 390 of feed block 294 and 546 of nozzle assembly 296. There is a close tolerance slip fitting between the internal diameter of the feed block central channel wall 391 and the outer surface of sleeve wall 808 of from about .0005 to about .0013 inch (0.013 to 0.033 mm), and between the internal diameter of the nozzle assembly inner shell central channel 540 and the outer surface of sleeve wall 808 of from about .0002 to about .001 inch (0.005 to 0.025 mm). Slip fitted about the circumference of sleeve 800 and mounted within bore 379 of the axially extending feed block threaded extension 378 are two annular sealing rings 819 (see Fig. 42A) for preventing polymeric material from being dragged rearward on the sleeve and thereby being pulled rearward out of feed block 294 when the sleeve is reciprocated in the rearward direction. Holding sealing rings 819 in place within threaded extension bore 379 is a sealing rind retaining cap 821 threaded onto extension 378. Feed block 294 is retained in axial position in bore 822 of runner block 288 by a lock ring 824 threaded within threaded bore 826 (see Figs. 30, 31). As shown in Fig. 80, the frustoconical mounting flange portion 810 has two holes 828 bored axially therethrough for receiving shoulder screws 830 (Fig. 96) which pass through shims 831 and spatially mount the sleeve rear face 818 onto the forward face of suitable mounting and driving means, herein shown in the preferred form of a sleeve shuttle, generally designated 860 (see Figs. 88-92, 95-97, 99 and 100-103).

### The Pin

Sleeve bore 820 is adapted to carry additional nozzle valve means or valve means, preferably in the form of an elongated solid shut-off pin 834 (shown foreshortened) (Fig. 81), preferably having a pointed tip 836 at the forward end of its shaft 837, and a protruding annular head 838 at the rear end of shaft back end portion 840. In the preferred embodiment, the diameter of shaft 837 of pin 834 is 156 mils (3.96 mm), the tip 836 is conical at a 45° angle, and the axial distance from the point of the tip to the intersection of the conical surface of the tip with the cylindrical surface of shaft 837 is 78 mils (1.98 mm).

Pin 834 is mounted in the apparatus of this invention for reciprocal movement within and through the bore of sleeve 800 by suitable mounting means which comprise a portion of the driving means of this invention. The sleeve is mounted in the nozzle central channel, and the pin is mounted within the sleeve bore in a close tolerance slip fit sufficient to prevent a significant accumulation or passage of polymeric material between the slip fit surfaces. The amount of material in the plane of an orifice or in the port of the sleeve is not considered significant within this context. Pin 834 is adapted to have head 838 seated in a tight slip fit within a seat 842 cut into a suitable mounting and driving means preferably comprising a pin shuttle 844 (shown in Figs. 82-87, and 97). Pin shuttle 844 is a solid rectangular-like member having attached to each of its sides suitable means, such as one of a pair of mounting ears 846 cocked at an angle, for cooperatively providing the shuttle with sliding reciprocal movement within cooperative, angled cam guide slots 848 of pin cam bars 850 (Figs. 85, 85A) which are included within the drive means of this invention.

Each pin cam bar 850 of each pair of pin cam bars has cut through its thickness at its top end portion a hole 851 for connecting the bar to other portions of the drive means for effecting reciprocal movement of the pin cam bar. Each bar has cut through it and along its length, a set of four equally spaced, equally angled, identical cam guide slots 848. Pin shuttle 844 is mounted between and on the pair of spaced, juxtaposed, parallel pin cam bars 850 by ears 846 which are slideably seated within the juxtaposed cooperative slots 848 in each juxtaposed cam bar (Figs. 86, 87). Two pairs of pin cam bars are employed in the apparatus of this invention, one pair positioned rearward of each perpendicular row of four nozzled assemblies. Each pair of juxtaposed slots 848 of the juxtaposed pin cam bars 850 receives the ears of a pin shuttle, which in turn holds a solid shut-off pin 834 which reciprocates within, and acts as valve means for, one of the four nozzle assemblies aligned along one of the perpendicular row of nozzle assemblies in the eight-up nozzle assembly apparatus of this invention. Each set of four solid pin shuttles 844 which straddle each pair of pin cam bars 850 are mounted behind one of sleeve cam bars 856 (Figs. 93A, 94-98 and 100-102), such that each pin 834 passes through a sleeve shuttle 860, through a sleeve cam bar 856 on which the sleeve shuttle is mounted, and through a sleeve 800 which in turn, with the pin in it, passes through a feed block 294 and finally through a nozzle central channel 546. Movement of pin cam bars 850 and sleeve cam bars 856 substantially simultaneously and coordinatedly, vertically up and down in accordance with the preferred embodiment, drives or moves each group of associated sleeve and pin shuttles, and their sleeves and pins, substantially simultaneously as cooperative nozzle valve means and achieves substantially simultaneous valving action for each of the nozzle assemblies with respect to which they operate. This system provides substantially simultaneous, coordinated and controlled, substantially identical valving action with respect to each nozzle assembly in the eight-up nozzle assembly apparatus of this invention.

The mounting and drive means of the injection molding apparatus also includes eight sleeve shuttles. Each sleeve shuttle 860 (Figs. 88-92) is comprised of a cylindrical member having an axial bore 862 extending through it for receiving and allowing reciprocal movement of solid pin 834. Each shuttle 860 includes a vertical slot 864 extending therethrough, defined by a pair of juxtaposed inner walls 866, and a knuckle 868 having the bore 862 running therethrough. Sleeve shuttle forward face 872 has an annular chamber 873 cut axially therein and which communicates with bore 862 which in turn communicates with slot 864. Face 872 also has two holes 867 therein for receiving the shoulder screws 830 (see Figs. 95, 96) which mount the sleeve 800 onto the face of the sleeve shuttle. The sleeve shuttle outer surface has radially and axially extending lubrication reservoirs, generally designated 859 for accumulation grease fed to them and the interior surface of bore 902 in sleeve cam base 900 by grease channels 170 (Fig. 31).

The drive means for the eight-nozzle injection molding apparatus includes two pairs of sleeve cam bars 856. Each sleeve cam bar 856 (Figs. 93, 93A, 94) has four identical angular slots 874 cut through its thickness. Each slot is adapted to receive a sleeve knuckle 868 in it for mounting a sleeve shuttle 860. The sleeve cam bar also has a hole 876 bored through the thickness of its bottom end portion for connecting the bar to other portions of the drive means for effecting reciprocating movement of the sleeve cam bar. Each sleeve cam bar 856 also has four identical, narrow, spaced, longitudinal edge slots 878 cut through the width of the bar from its forward edge 880 to its rear edge 882. Each edge slot 878 is positioned to communicate with an angular slot 874. Referring to Figs. 95 and 96, each sleeve shuttle 860, including its internal knuckle 868, is comprised of two mirror image pieces 858 each mountable onto either side of sleeve cam bar 856 when the knuckle portions of each piece are abuttingly joined to each other within angular slot 874 by suitable means, here by the close tolerance slip fit of the outer peripherial surface of the abuttingly joined pieces 858 and the interior surface restriction of axial bore 902 in sleeve cam base 900. (See Figs. 97, and 99-103). Alternatively, the pieces may be bolted together. Each knuckle portion is preferably machined to be one piece or integral with its shuttle piece. Each whole knuckle is about .010 inch (0.25 mm) wider than the width of the sleeve cam bar on which it is mounted to provide a gap between the side walls of the cam bar and the sleeve's inner walls 866. Each sleeve shuttle 860 is slideably mounted onto sleeve cam bar 856 with its knuckle 868 slideably seated within and operatively engaged with a slot 874. The drive means includes suitable axial travel variation compensation means, here including a spring to compensate for any axial play in the drive means or valve means or between them, and for any deviation in dimensions of the involved structures. Therefore, sleeve 800 is mounted onto sleeve shuttle 860 by positioning a helical compression spring 888 rearwardly into a slip fit within sleeve shuttle annular chamber 873. Spring 888 has an outside diameter of a free length of one inch (2.54 cm) and a scale rate of 193 pounds per tenth of an inch (34.5 kg/mm). The free length of the spring is longer than the axial length of chamber 873 and the width of the gap between sleeve shuttle forward face 872 and sleeve rearface 818. The scale rate is the predictable force per unit length of compression. The spring is pre-loaded with one-hundred pounds (45.4 kg) spring compression when shoulder screws 830 are fully seated in their holes 867. The reason for pre-loading is to compensate for, i.e., eliminate or alleviate any possible axial play between the sleeve shuttle 860 and sleeve 800. For example, it prevents axial play between the sleeve shuttle and sleeve due to plastic pressure exerted on lip 814 of sleeve 800. The shuttle moves forward to seat sleeve tapered lip 814 against the matching angular edge 460' of the inside of nozzle cap 438 (See Fig. 77A), and, once seated, the shuttle continues to move another thirty-second of an inch (0.8 mm) further forward while the sleeve remains stationary, to assure seating of the angular interface and a pressure seal to block and prevent B material from entering the nozzle gate 596. The additional thirty-second of an inch (0.8 mm) movement compresses and is absorbed by the spring 888. The spring had been precompressed to 75 mils (1.9 mm) and maintained in that condition by the assembly of the shoulder screws in their holes 867. Thus, when the sleeve is retracted, the shuttle moves one thirty-second of an inch (0.8 mm) rearward to release the compression before the sleeve itself moves. This provides leeway should there be any slight deviation in the relative lengths of the respective sleeves 800 and/or in the dimensions of the components or shells of the nozzle assemblies. Sleeve rear face 818 is moved backward against the bias of the spring and is bolted to sleeve shuttle forward face 872 by shoulder screws 830 in a manner that leaves a gap between the sleeve rear face and the shuttle forward face (see Fig. 97). This gap allows for the thirty second of an inch (0.8 mm) additional movement of the sleeve. Shims 831 are employed between shoulder screws 830 and frustoconical mounting flange portion 810. The thicknesses of the shims is selected to compensate for dimensional non-uniformities in the valve means and in shuttles and cam bars of the drive means. Solid shut-off pin 834 is mounted to extend through sleeve cam bar edge slot 878, through sleeve shuttle slot 864, knuckle bore 862, annular chamber 873, spring 888, and finally through bore 820 of sleeve 800. The height of edge slot 878 permits sleeve cam bar 856 to reciprocate vertically and thereby drive sleeve shuttle 860 to reciprocate axially on the cam bar through bore 902 of sleeve cam base 900 while pin 834 is extending horizontally through each of them.

The manner in which sleeve shuttle 860, pin shuttle 844 and their respective cam bars 856, 850 are assembled within the apparatus will now be described (Figs. 30, 31, 97-105). Each pin cam bar 850 is inserted for vertical reciprocation within a pin cam bar slot 890 cut vertically through pin cam base 892 and its forward face 893 and through pin cam cover 894 and its rear face 895. In an eight-up multi-polymer nozzle assembly injection molding machine, there are preferably four pin cam bars in two spaced parallel pairs (Figs. 31, 98). Solid pin shuttle 844 is seated for horizontal, reciprocal movement within a horizontal bore 896 cut through both pin cam base 892 and pin cam base cover 894. Each sleeve cam bar 856 is inserted for vertical reciprocation within parallel sleeve cam bar slots 898 cut vertically through the sleeve cam base plate 900. When sleeve cam bar 856 reciprocates vertically, sleeve shuttle 860, having its knuckle 868 seated within sleeve cam bar slot 874, reciprocates horizontally in a close tolerance fit within and through sleeve shuttle bore 902 cut horizontally through the entire depth of sleeve cam base plate 900 and sleeve cam base cover 901. The sleeve cam bar edge slot 878 permits pin 834 to pass through sleeve cam bar 856 as the bar reciprocates vertically. Because sleeve shuttle bore 902 is larger than pin shuttle bore 896, and because sleeve shuttle bore 902, which extends through the sleeve cam base 900 and through sleeve cam base cover 901, is longer than sleeve shuttle 860 itself, there is sufficient clearance to permit horizontal reciprocation of sleeve shuttle 860 through both the sleeve cam base 900 and the base cover 901 such that rearward over-travel of the sleeve shuttle is prevented by the portion of the front face of pin can base cover 894 which surrounds the pin shuttle bore 896. Forward over-travel of the sleeve shuttle is limited by the axial lengths of the cam bar slots.

Any suitable drive means can be employed for independently and simultaneously driving the valve means of this invention, here shown as including solid pin 834, and sleeve 800, in accordance with the method of this invention. The drive means for pins 834 include pin mounting means preferably in the form of pin shuttle 844, and the drive means preferably including pin cam bars 850. As shown in Figs. 29, 29C, 30, 31, 99, 100 and 104, the preferred driving means for simultaneously driving pins 834 and pin shuttles 844 also includes servo-controlled pin drive cylinder 906 attached to mounting bracket 908 and having manifold 907 and servo valve 909 (Fig. 100), and the drive cylinder's connecting members including, and by which it is connected through, cylinder piston rod 910, drive frame 912 whose lower horizontal bracket 913 has a pair of spaced, depending ears 914, through bolts 916 passing through the ears, to the two pairs of spaced pin cam bars 850. Each cam bar 850 of each pair is spaced from the other and extends vertically downward through slots 890 in pin cam base 892 and its cover 894. Programmed, servo-controlled vertical movement of piston rod 910 simultaneously drives each pair of cam bars 850 up and down, and, by means of angled cam guide slots 848, simultaneously drives all shuttles 844, and drives all pins 834 seated therein forward and backward within bores 896 and through the apparatus, particularly through all nozzle assemblies 296 in accordance with the methods of this invention.

Looking now at the bottom of Figs. 29, 29C, 99 and 100, the preferred driving means for simultaneously driving sleeves 800 and sleeve cam bars 856, and their mounting means, preferably in the form of sleeve shuttles 860, further includes servo-controlled sleeve drive cylinder 918 attached to mounting brackets and having a manifold 919 and servo valve 921 (Fig. 100), and the drive cylinder's connecting members including, and by which it is connected through, cylinder piston rod extension 920, bracket 922 and through bolts 924, to each sleeve cam bar 856. Programmed servo-controlled vertical movement of piston rod 920 simultaneously drives each cam bar 856 up and down through cam bar guides, and, by means of angular slots 874 in each cam bar, simultaneously drives all sleeve shuttles 860 forward and backward through their respective bores 902 and simultaneously drives all sleeves connected thereto through the apparatus, particularly through all nozzle assemblies 296 in accordance with the methods of this invention.

In the method of this invention, the operation of the drive means is controlled by the control means, sometimes referred to herein as a control system. By the control means, the drive cylinders 906 and 918, are programmed to operate in a desired independent yet simultaneous mode which includes simultaneous and non-simultaneous operation of all sleeves relative to all pins. The drive means, along with other features of the invention, independently yet simultaneously provide the same valve means action in each of the eight co-injection nozzles or nozzle assemblies. The terms "same" or "identical" as used with respect to the inventions contemplated herein, means as much the same as possible given minor insignificant dimensional variations of structures due for example, to machining of parts. Thus, the terms "same" or "identical" as used in the description and in the claims includes the meaning "substantially the same" or "substantially identical." Likewise, the term "simultaneous" as used in the description and claims includes "substantially simultaneously." This permits the same initiations, flows, terminations and sequences of polymer flow in each nozzle assembly, consequent simultaneous injection of the same multi-polymer streams having the same, balanced characteristics from all eight nozzle orifices and the formation of parisons of the same materials and having the same characteristics in all eight juxtaposed blow mold cavities. Included within the control means, are the servo control drive means and programs and the one or more microprocessors with respect to which the drive means are cooperatively associated. The servo control drive means for driving the drive cylinders 906 and 918 are suitable programmed and operated by a microprocessor to operate the eight sleeves and eight pins independently but simultaneously as discussed, and in the desired mode.

The programmed servo controlled vertical movement of the piston rod 910 for simultaneously driving each pair of pin cam bars 850, as well as the programmed servo controlled vertical movement of piston rod 920 for driving each sleeve cam bar 856 is effected by means of a programmed microprocessor, described in conjunction with the processor control system set forth below. In brief detail, the drive cylinders 906 and 918 are driven by supplying hydraulic fluid to the drive cylinders by means of a servo controlled valve, operating in accordance with pre-programmed instructions in a microprocessor, described hereinabove as the second processor unit, and described In further detail in conjunction with figures set forth hereinafter. More specifically, and as shown in Fig. 29, drive cylinders 906 and 918 are energized by means of hydraulic fluid flow operated and controlled by means of a servo system which opens and closes the valves permitting fluid flow to enter therein. The position of each of the piston rods of drive cylinders 906 and 918 and their associated cam bars 850 and 856, respectively, are monitored by means of position sensing mechanisms, consisting of a position transducer and a velocity transducer, schematically respectively shown as 918A and 918B in Fig. 99, and 906A and 906B in Fig. 104. The precise nature of the movements of the cam bars 850 and 856 requires an accurate means of determining the actual position thereof. As was described hereinabove in conjunction with the ram servo mechanisms, the system is control led in accordance with the first pre-programmed system processor for controlling major machine functions and a second processor pre-programmed to coordinate the movements of the ram servos with the movements of the cam bars. The movement of the cam bars controls the specific sleeve and pin positions for the purpose of allowing polymer melt to enter from the feed channels into the nozzle central channels at the appropriate times for producing the article in accordance with the desired sequence of the present invention. These relative movements, which will be described in further detail below, are pre-established in the second processor for moving the cam bars by driving the hydraulic drive cylinders 906 and 918 in accordance with the predetermined pattern. It is specifically important that the pin and sleeve movements be correlated and coincide with appropriate ram pressures, determined by ram servo energization, so that the desired result in accordance with the invention may be achieved. Specifically, the second processing unit is programmed to simultaneously coordinate all five rams and the cam bar movements, one with the other, in order to achieve the desired flow characteristics through the nozzle channel as has been described hereinabove. The resultant overall effect of the control system is to provide separate control of each ram pressure and of the pin and sleeve in accordance with the predetermined temporal profile for controlling the flows of plastic melt materials at the nozzle output in determined amounts and at determined times from the different supplies.

It will be understood that while the nozzle valve means of the present invention have been described in terms of a preferred pin and sleeve embodiment, other, equivalent structures for the valve means and drive means will be appreciated by those skilled in the art after having read the present description. For example, the valve means may comprise a sleeve 620 (illustrated in Fig. 106) axially moveable back and forth in the nozzle central channel and also rotatable therein, as by suitable rack and pinion drive 622 in which rotation of the pinion or gear wheel 624, attached to or formed as a part of sleeve 620, causes rotation of the sleeve. Rotation of sleeve 620 may also be effected by suitable key-link drive bar structure 626 (Fig. 107). Axial movement of the sleeve selectively blocks and unblocks one or more of the nozzle orifices to selectively prevent or permit flow of polymer streams, for example of polymers B, E, C and D, into the nozzle central channel. Selective rotation movement of the sleeve brings the aperture 804 in the wall of the sleeve out of and into alignment with a nozzle flow passageway, which may be keyhole passageway 440, for a polymer stream, for example of polymer A, to selectively prevent or permit flow of the polymer stream into the nozzle central channel.

In another alternative embodiment (not specifically shown), employing the hollow sleeve of the present invention, the aperture 804 in the wall of the sleeve may be selectively blocked and unblocked by rotation movement, for example by suitable modification of the rack-pinion or key-link means described above, of the adjacent nozzle shell 430 to prevent or permit flow of polymer into the internal axial flow passageway 803 within the sleeve. Alternatively, a check valve 628 (Fig. 108) may be included within the flow passageway 634 for the polymer which flows within the sleeve. The check valve may, for example, comprise a ball 629 urged by one end of a spring 630 against a seat 631 in passageway 803. The opposite end of spring 630 abuts the end of a hollow inner sleeve 632 which is inserted into friction fit engagement within the sleeve 633. In a further alternative embodiment (Fig. 109), employing the sleeve of the present invention and a modified form 636 of the preferred inner shell 430 (Fig. 51), the flow of polymer from channel 637 in shell 636 into the axial passageway 803 within the sleeve is blocked and unblocked by reciprocal movement of a tapered, spring-loaded sliding valve member 638 housed in a channel 640 formed in shell 636 and which member is biased to the closed position by spring 639 and is urged to its open position by a predetermined increase in pressure of the incoming polymeric material.

Yet another alternative embodiment (Fig. 110) employs the sleeve of the present invention and a modified form 642 of the preferred pin 834 (Fig. 81). Modified pin 642 has its forward end portion 643 formed into a flatted shaft having a semi-circular cross-section. Flow of polymeric material through the aperture 804 in the wall of the sleeve 800 into internal flow passageway 803 of the sleeve may be selectively prevented or permitted by selectively blocking or unblocking the aperture 804, by selective rotation of pin 642 within the axial channel 803 of the sleeve, to bring the flatted portion 644 out of, or into, alignment with aperture 804.

In a preferred embodiment, illustrated in Figs. 111-116, the flow of the five polymer streams is selectively controlled by the combination of the sleeve of the present invention with means for blocking the sleeve port here shown as a fixed member, such as solid pin 648. It will be understood that the aperture 650 in the wall of the sleeve is suitably enlarged to permit the hereinafter described flow of polymer streams. It will also be understood that the tip 594 of nozzle cap 438 is modified to enlarge the diameter of a portion 652 of channel 595 to accommodate the thickness of the wall of the sleeve (Fig. 112). Further, in this embodiment fixed pin 648 partially blocks a portion of feed channel 440. In this embodiment, an injection cycle comprises selective movement of the sleeve into six positions or modes to prevent or permit the flow of a selected one or more of polymer streams A through E. In the first position or mode (Fig. 111), the sleeve is in its forwardmost position, blocking orifices 462, 482, 502 and 522 to prevent flow of polymers B, E, C and D, respectively, and blocking the exit of inner feed channel 440 in inner shell 430 to prevent the flow of polymer A. In the second mode (Fig. 112), the sleeve is withdrawn sufficiently to bring aperture 650 into communication with feed channel 440 to permit flow of polymer A into the sleeve's internal axial polymer flow passageway 803 which itself is in the nozzle central channel 546. The orifices remain blocked. In the third mode (Fig. 113), the sleeve is farther withdrawn sufficiently to unblock orifice 462, permitting flew of polymer B Into nozzle central channel 546. Polymer A continues to flow into passageway 803. The sleeve continues to block orifices 482, 502 and 522, preventing flow of polymers E, C and D. In the fourth mode (Fig. 114), the sleeve is farther withdrawn to unblock orifices 482, 502 and 522, permitting the flow of polymers E, C and D into nozzle central channel 546. The flow of polymer A continues. In the fifth mode (Fig. 115), the sleeve is withdrawn farther, such that pin 648 blocks the exit of feed channel 440, preventing flow of polymer A. Orifices 462, 482, 502 and 522 remain unblocked, permitting continued flow of polymers B, E, C and D. Positioning the sleeve in this mode permits knitting or joining together of polymer C, forming a continuous layer of that polymer in the injected article. In the sixth mode (Fig. 116), the sleeve is moved forward to the same position as in the third mode, described above, permitting sufficient flow of polymer B to enable it to knit or join together and form with polymer A a layer which completely encapsulates, among other layers, layer C. In this mode, polymer A flows from feed channel 440 into passageway 803. The injection cycle is completed by moving the sleeve to its forwardmost position, in the first mode, illustrated in Fig. 111 and described previously. It is to be noted that the size of feed channel 440 and the axial position of the aperture or port in the sleeve wall and of the fixed pin in sleeve 800 can be varied by design to provide a variety of desired opening and closing possibilities and sequences.

In another embodiment, employing a solid pin, reciprocal movement of the pin in the nozzle central channel selectively blocks and unblocks inner feed channel 440 in inner shell 430 to prevent or permit flow of a polymer stream, for example polymer A. Flow of polymer streams D, C, E and B is selectively prevented or permitted by selectively blocking and unblocking communication between feed channel exit ports 411, 415, 417 and 418 in feed block 294 (Figs. 41-43), and respectively associated feed channels 442 in inner shell 430 (Figs. 51 and 53A), 444 in third shell 432 (Figs. 57 and 57A), 446 in second shell 434 (Fig. 63) and 448 in first shell 436 (Fig. 70). Referring to Fig. 117, the selective blocking and unblocking of the feed channels, for example illustrative feed channels 654 and 655, may be accomplished by selective rotation of a suitably shaped rotary gate valve member 656 by means, for example, of suitable rack and pinion drive 657. It will be understood that the rear face of valve member 656 is formed to comprise one or more annular shoulders to fit within chamber 380 of the feed block (Figs. 41 and 43) and that the front face of the valve member 656 contains one or more annular grooves to receive the shoulders of the nozzle shells. It will also be understood that valve member 656 contains other, suitably enlarged slots or channels to permit uninterrupted flow of the polymers, whose flow is not being controlled by rotation of valve member 656. Alternatively, the selective blocking and unblocking of the feed channels may be accomplished by selective rotation of a nozzle shell such as second shell 434 by means of a suitable rack and pinion drive (shown in phantom in Fig. 117). In this alternative embodiment, it will be understood that the flow channel for polymer A within the inner shell extends sufficiently far in the circumferential direction around the shell so that rotation of the inner shell to block flow of polymer D still maintains the feed channel exit port for polymer A in the feed block in communication with the entry feed channel for polymer A in the inner shell. In both of these embodiments, the means for preventing or permitting flow of the polymer streams through the nozzle central channel are at a distance from that channel and from the nozzle gate, and the degree of control over the start and stop of flow of the polymer streams may not be as precise as that obtained with the preferred embodiment of pin 834 and sleeve 800, described above.

In a further embodiment, illustrated in Fig. 118, the nozzle valve control means comprises sleeve structure having therein two axial polymer flow passageways. The sleeve structure comprises a cylindrical outer sleeve 660 having two apertures in the wall thereof, one aperture 661 being for flow therethrough of polymer D and the other 662 for flow of polymer A. An inner sleeve 664 has an aperture 665 in the wall thereof for flow of polymer A therethrough. The outer diameter of the forward portion of the inner sleeve is less than the inner diameter of the outer sleeve to form a polymer flow passageway 666. The outer sleeve is adapted for reciprocal axial movement within the nozzle central channel and the inner sleeve is adapted for reciprocal axial movement within the outer sleeve. The internal flow passageway 666 in the outer sleeve has a sealing land 667 of reduced diameter which cooperates with a portion of the outer surface of the forward portion of the inner sleeve to prevent or permit flow of polymer D into the nozzle central channel. Axial reciprocal movement of the inner sleeve brings the aperture 665 in the wall thereof into and out of communication with the aperture 662 in the wall of the outer sleeve to permit or prevent flow of polymer A through the apertures and into the axial channel 668 within the inner sleeve. The flow sequence is as follows. The inner sleeve 664 is withdrawn to bring aperture 665 into communication with the aperture 662 in the wall of the outer sleeve 660 to permit flow of polymer A. Next, both sleeves are withdrawn together as a unit to unblock orifice 462 to permit flow of polymer B. These movements of the sleeve may occur sequentially, as just described, to start the flow of polymer A before polymer B, or, if desired, substantially simultaneously, to start the flows of polymers A and B at substantially the same time. Alternatively, the flow sequence may begin by both sleeves being withdrawn together as a unit to permit flow of polymer B, followed by withdrawal of the inner sleeve sufficiently to permit flow of polymer A. Both sleeves are then further withdrawn to unblock orifices 482 and 502 to permit flow of polymers E and C, and at the same time the inner sleeve is further withdrawn to bring it out of engagement with sealing land 667 to permit flow of polymer D. Flow of polymer A is stopped by rotation of the inner sleeve relative to the outer sleeve to bring aperture 665 out of communication with aperture 662. Forward movement of the inner sleeve brings it into engagement with land 667 to prevent flow of polymer D and forward movement of both sleeves in unison blocks orifices 502 and 482 and stops flow of polymers C and E. Further forward movement of both sleeves in unison blocks orifice 462 and stops flow of polymer B. This embodiment provides semi-independent control of polymer streams A and D.

Fig. 118A schematically shows a sleeve 8000 adapted to provide an orifice cooperative with the central channel orifices for a flow stream passing axially through the sleeve central passageway 8200 from a source (not shown) exterior of the co-injection nozzle. More particularly, Fig. 118A shows co-injection nozzle means similar to that shown in Fig. 121, except that the co-injection nozzle embodiment itself herein designated 750 does not have a third passageway or orifice therein and that port 8040 in the wall sleeve is adapted to communicate with a passageway or channel of a feed block or other structure (not shown) exterior of the nozzle, for providing in the preferred method the polymeric material melt flow stream which is to flow through the sleeve central passageway 8200 when pin 834 is sufficiently withdrawn, and to form the inside structural layer A of the article.

Another embodiment of the nozzle means of this invention is that schematically shown in Fig. 118B, which shows a co-injection nozzle embodiment 752 having a central channel generally designated 1546 comprised of a plurality of communicating stepped cylindrical portions, herein designated 760, 762, 764 and 766, having different diameters and formed and defined in part by the respective tips of the frustoconical portions of nozzle shells 1430, 1432, 1434, and 1436. Sleeve 8000' is mounted in a close tolerance slip fit within the central channel combining area. The sleeve's outer wall has stepped cylindrical portions 761, 763, 765 and 767 respectively joined by interstitial tapered annular walls which abut the passageway outer walls OW of shells 1432, 1434 and 1436 and which cooperate with the stepped cylindrical walls to block the orifices of passageways 480, 500 and 520. The tapered lip 1814 of sleeve 1834 does not abut the outer wall of the first passageway 460. That passageway is shown blocked by the wall of pin 1834. Pin 1834 is mounted in a close tolerance slip fit and is axially moveable within sleeve central passageway 1820. The nose of pin 1834 has an annular tapered wall 1837 which communicates with the radially outermost wall of the pin and which is adapted to abut portion 601' of nozzle cap outer wall OW which forms first passageway 460. Tapered wall 1837 communicates with a cylindrical protruding nose 1835 whose wall is adapted to slip-tolerance fit within channel 595 in nozzle cap 1438. The embodiment shown in Fig. 118B is meant to represent and to include within the scope of this invention, those valve means structures adapted to block to stop and unblock to start the flow of the E, C and D layer materials substantially simultaneously relative to one another.

Fig. 118C schematically shows an enlarged portion of a co-injection nozzle embodiment 754 having internal passageways 1480, 1500 and 1520 and their respective orifices 1482, 1502 and 1522 radially further removed from the central channel and in communication with a main or second passageway 1501 having its main orifice 1503 in communication with the nozzle central channel 546. Orifice 1503 in this embodiment is sometimes referred to, and can be considered as the internal or second orifice. The polymer material melt flow streams which flow from orifices 1482, 1502 and 1522 can combine in main passageway 1501 and flow from orifice 1503 as a combined stream into the central channel. This orifice arrangement can therefore provide the three internal layer materials, that is, internal layer C flanked by intermediate layer materials E and D, as one internal layer or stream for forming a three material internal layer for the articles of this invention. In other embodiments (not shown), the tips of nozzle shells 434' and 432' can be of different radial distances from the axis of the nozzle central channel, and only one of them can be radially removed from the central channel. Preferably, the axial distance from the leading lip of the main orifice to the trailing lip of that orifice is from about 100 to about 900 mils (2.54 to 22.9 mm), more preferably from about 100 to about 300 mils (2.54 to 7.62 mm).

A particular advantage provided by the valve means of this invention relates to the physical arrangement of the orifices. Their very close proximity to each other coupled with the capability of the valve means of very rapidly blocking and unblocking all of the orifices, is highly advantageous because it provides to the process the ability to effect very rapid changes in pressure at the orifices. This, coupled with pressurization, provides to the process the capability of effecting highly desirable rapid onset flows of a material into the central channel. Rapid unblocking and blocking is particularly important with respect to the internal orifices of a five or more layer process with respect to which it would be highly desirable that the initiation of flow of the E, C and D layer materials be effected at the same time, and that the termination of their flows also be effected at the same time. Given the staggered physical arrangement of their orifices in embodiments wherein they individually communicate with the nozzle central channel, the high rapidity of movement of the valve means in positively unblocking and blocking these orifices with pressurization minimizes the effects the arrangement has on opening one orifice before another. The valve means of this invention utilized in a co-injection nozzle having at least first and second orifices, can unblock all of the orifices within a period of about 75 centiseconds, desirably within about 20 centiseconds, and preferably within about 15 centiseconds. With respect to such a co-injection nozzle wherein the first orifice has its center line within about 350 mils (8.90 mm) of the gate, the second orifice has its center line within about 250 mils (6.35 mm) of the center line of the first orifice, and the leading lip of the first orifice and the trailing lip of the second orifice is no greater than about 300 mils (7.62 mm) apart, the valve means of this invention are adapted to move to a position which blocks all orifices and to a position which unblocks all orifices within about 75 centiseconds. With respect to a nozzle embodiment which has at least three fixed orifices, two of them being close to the gate, the first being proximate the gate, the second being adjacent the first orifice, and the third orifice being remote from the gate, wherein each of the first and second orifices are narrow and annular, combining area of the central channel has an axial length of from about 100 to about 900 mils (2.54 to 22.9 mm), and the leading lip of the first orifice is within about 100 to about 900 mils (2.54 to 22.9 mm) of the gate, the valve means of this invention can unblock all orifices within from about 15 to about 300 centiseconds, preferably within from about 15 to about 75 centiseconds. Such rapid unblocking of all orifices can also be effected with respect to a nozzle having at least three orifices wherein the combining area has an axial length of from about 100 to about 900 mils (2.54 to 22.9 mm), the leading lip of the first orifice is within about 100 to about 900 mils (2.54 to 22.9 mm) of the gate, and the center lines of each of the first and second orifices lie substantially perpendicular to the axis of the central channel. With respect to such a co-injection nozzle, the valve means can be utilized such that the elapsed time between the allowing of all materials to flow through the orifices and the subsequent preventing of the flow of all materials from their orifices is from about 60 to about 700 centiseconds, preferably from about 60 to about 250 centiseconds. Further in relation to such co-injection nozzles, and with respect to preventing the flow of polymer material through the second orifice while allowing flow of structural material through the first, the third or both the first and the third orifices, and then for allowing flow of polymer material through the second orifice while allowing material to flow through the third orifice, the valve means of this invention are adapted to effect both of said steps within about 250 centiseconds, preferably in about 100 centiseconds.

The valve means of this invention are physical means for positively physically blocking, partially blocking or unblocking and thereby controlling the flow of polymer melt stream material from co-injection nozzle orifices into the nozzle's central channel. This capability provided by the valve means obtains many advantages, some of which will now be described. The positive control provided by the physical valve means avoids problems that occur without valve means, such as having to synchronize the pressure of all streams or layers at all points in the injection cycle in order to avoid problems of cross-channel flow or back flow from the central channel into one or more of the orifices, or from one orifice into another. It also avoids the problem of premature flow through an orifice of any or all of the respective layers. For example, as can be more easily understood in connection with Figs. 118D and 118E, when the A and B layer materials are flowing in the central channel of a co-injection nozzle, they create a pressure in the central channel, referred herein to as the ambient pressure. The pressure, for example, of internal layer C material at the orifice, absent physical valve means, has to be very carefully controlled to be just equal to or slightly below the pressure of the flowing A and B materials. If the pressure of the C layer material is greater than that of the A and B layer materials, the C layer material will prematurely flow into the channel. If the pressure is too low relative to the pressure of the A and B materials, either or both of the A and B layer materials will back flow into the C orifice. It may be possible to compensate for the back flow of A and/or B material into the C passageway by altering the timing of when the C passageway pressure level is high enough to start flow, that is, by increasing the pressure exerted on the C material earlier than it would be exerted if there were no back flow, to force the A and/or B materials back out of the C orifice, and such that C will enter the central channel at the same time as it would have without the back flow.

Another advantage of the positive control provided by the physical valve means of this invention, is that the valve means physically block the orifices and thereby allow for substantially high prepressurization levels to be obtained prior to injection of one or more of the materials into the central channel, substantially higher levels than would be possible without the valve means. Despite the high prepressurization, physical blocking of the orifices prevents premature flow and back flow. Without valve means, reliance must be placed on the very sensitive and critical control and synchronization of the pressure balancing of the respective materials. The ability to prepressurize one or more of the respective flows with valve means in turn provides additional advantages. For example, as will be explained, prepressurization is essential for obtaining simultaneous and/or uniform, rapid onset or initial flow over all points of an orifice into the central channel and for obtaining a uniform leading edge about the annular flow stream of a material. As will be explained, this is particularly important with respect to the internal layer C material. Another of the many advantages of prepressurization is that given the nozzle design of this invention which provides a primary melt pool of polymer melt material adjacent each orifice, prepressurization overcomes non-uniformities in design or in machine tolerance variations of the nozzles, the runner system, and the flow directing or balancing means, e.g., the chokes. It also helps overcome temperature non-uniformities of the runner system including the nozzle passageways. Without physical valve means for blocking the orifices, the process is limited to the aforementioned synchronized, sensitive, lower levels of prepressurization and there would be differences in the pressure levels obtained at the corresponding respective orifice in each of the plurality of co-injection nozzles of a multi-coinjection nozzle injection blow molding machine. Even with the nozzle design of this invention which provides a primary melt pool adjacent to the orifices, if the polymer melt material in each primary melt pool is not pressurized, it would not provide a rapid onset flow once the orifice is unblocked. Additionally, prepressurization assures that the primary melt pool at each corresponding orifice in each of the respective nozzles will have the same level of pressure prior to initiation of flow; therefore, the injected articles, for example the parisons would, with prepressurization and valve means, tend to be more uniform at each injection cavity than without valve means and/or without higher prepressurization levels.

Still another advantage provided by the physical valve means of this invention is that in providing the capability of physically blocking and unblocking the respective orifices, there is provided an improved capability of starting and stopping the respective flows in the sequence required to permit the formation of articles of very high quality wherein the internal layer is continuous and substantially completely encapsulated. More particularly, the physical valve means are adapted to block physically and to stop cleanly the flow of the layer A polymer flow stream material while the C layer material is flowing. This permits the layer C material to come together and knit in the central channel of the nozzle and be continuous at the sprue of the injected article.

Other advantages provided by the valve means of this invention, especially by the preferred sleeve and axially reciprocable pin embodiment, are that they can be employed to assist in knitting the internal layer (or layers) with itself in the central channel, and/or in encapsulating said layer (or layers) with either or both of the outer B and/or inner A structural or surface layer materials. Preferably, the valve means are used to, in the same operation, assist in both knitting and encapsulating the internal C layer material(s). With respect to knitting, for simplicity, reference will be made to only the internal layer material. To knit it, preferably, the moveable pin blocks the orifice of the A layer material and then the pin moves the A material ahead of it into the central channel while the B and C layer materials are flowing. When the pin stops short of the sleeve lip, the C layer material knits Then the valve means blocks the flow of the C layer material while the B layer material is flowing. To encapsulate, the knit by one method, the sleeve and pin, while flush, are moved forward advancing the knit toward the gate while the B layer material covers it. Finally, the B layer material encapsulates the knit as the knit is pushed through the gate. The preferred method of knitting and encapsulating is to move the sleeve and pin forward with the pin inset upstream within the sleeve, as will be explained with reference to Fig. 77A. That Figure shows the conical nose or tip 836 of pin 834 axially inset upstream within sleeve 800 in the central channel of a co-injection nozzle to provide an area within the sleeve forward end for accumulation of polymer material therein. Prior to or while moving the valve means axially forward through the nozzle combining area towards the gate, polymeric material for example for forming the inside surface layer A from third annular orifice 440, can be accumulated or maintained in the forward inset area in front of the pin tip and within the sleeve, which material can be used to assist in encapsulating the internal layer C material in the combining area of the central channel. Preferably, the pin is moved forward relative to the sleeve to eject most of the material in front of it and thereby enhance the encapsulation of the internal layer. The pin can be inset as desired although if it is inset too little, the knit will be acceptable but there may be an insufficient amount of retained material to completely encapsulate the layer. This may of course be acceptable for certain container applications. Insetting the pin too far may result in a thin knit of the C layer material. The assistance of the valve means and the inset method is most effective when A layer material is accumulated and used for encapsulating, particularly when the A and B layer materials are the same, or when they are interchangeable or compatible.

The valve means can also be used advantageously in combination to flush, clear or purge polymer material from the combining area or from whatever portion or extent of the central channel desired. When the sleeve has moved fully forward through the central channel of the preferred nozzle assembly of this invention, its tapered lip 814 abuts against a matching surface portion 460' of the leading wall of the first passageway 460 (See Fig. 121), and if desired, the pin may be moved further forward into channel 595 of nozzle cap 438 to clear that remaining area of the central channel of polymeric material, say, before or at the termination of an injection cycle.

An important benefit provided by the physical valve means of this invention is for repetitively precisely timing the starting, flowing and stopping of the respective flow streams for each cycle. This in turn provides for uniformly consistent characteristics in the articles formed in each cavity, each cycle. The valve means of this invention are also adapted to block the flow of the respective materials in a sequence which is not the reverse of the unblocking sequence.

It will be understood that the valve means of this invention, especially the preferred dual valve means comprised of the sleeve and moveable shut-off pin, are adapted to and can be modified and utilized to block and unblock some or all of a plurality of co-injection nozzle orifices in a variety of combinations and sequences as desired.

Still another advantage provided by the physical valve means of this invention is that rapid cycle times are obtained, even for long runner systems. A "long runner system" here means one channel or runner, or a plurality of communicating channels or runners through which a polymeric melt material flows to a nozzle and which extend(s) upstream about 15 inches (38 cm) or more from the axis of the nozzle central channel (See Figs. 118F and 118G). As mentioned, the valve means allow for rapid and high levels of prepressurization. This shortens the time required to build up the necessary pressure for initiation of the flow of C, it provides a rapid onset flow and it shortens the actual injection cycle time, as compared to cycle times without valve means and prepressurization. The physical, positive blockage of the respective orifices provides for rapid and precise termination of flow at the end of each injection cycle, prevents leakage or drooling into the channel, and avoids long cycle time delays due to lengthy pressure decays for the termination of flow.

In a long runner multi-cavity injection molding machine without valve means, the long response time and delay of pressure in the eye of the nozzle would make it difficult to knit or encapsulate the C material in the combining area of the central channel without cross flow of one material into the orifice of another material.

Particular reference will now be made to Figs. 118D and 118E which show, for a multi-cavity injection molding machine having a long runner system, a comparison of pressure versus time, in the combining area of co-injection nozzles, with and without valve means operative in the combining area. More particularly, Fig. 118D shows that without valve means there is zero pressure in the nozzle prior to the start of the flow of any of the polymeric materials, and that upon initiation of injection of the A and B layer materials into the central channel due to ram displacement, the ambient pressure due to flow of the A and B materials into the central channel is represented by the curve having short lines of equal length. The pressure and flow of the internal layer material C with or without other internal layers is represented by the curve having long and short dashed lines. It represents a build-up of pressure of C which must be synchronized to the ambient pressure development of the A and B materials but which is at a slightly lesser pressure such that C does not flow into the central channel. At a certain desired point of time represented by the X on the time abscissa, the pressure of the C material is increased such that at a pressure level indicated as P₁, all pressures are equal, and just after that point in time, the C material flows into the central channel while the A and B materials are there flowing. This is represented by the solid line curve in the upper portion of the Figure.

With valve means, prior to opening any orifices, there is a residual pressure in each of the passageways. In Fig. 118E, this pressure is arbitrarily selected to be represented as P_{L} for the A and B layer materials. At time zero, there is no melt in the central channel (the valve means is there blocking the orifices) and thus the ambient pressure is zero. As soon as the valve means opens an orifice (A and/or B), ambient pressure rapidly develops to the level of P_{L}. Due to flow restrictions as the injection cavity is filled, the ambient pressure must gradually increase by appropriate ram displacements in order to maintain the flow of A and B. In the meantime, the internal orifice (here for simplicity, the orifice for the C layer material) is physically blocked with the valve means, the pressure of the C material in the passageway at that orifice (shown as long and short dashed lines) is maintained at (or increased to) the level indicated by P2 in the drawing. At the time represented by point X on the abscissa, the valve means allows C material to start to flow into the central channel combining area. Thereafter, all of the materials A, B and C flow into the central channel and the ambient pressure rises accordingly as indicated by the solid line. A comparison of Figs. 118D and 118E shows that the valve means operative in the nozzle central channel permits the materials in the passageways to be prepressurized, the level of prepressurization can be significantly high, pressurization is easily controlled, (back flow of polymer material, either from the central channel or another orifice into the orifice of a different material is prevented) and the allowance of pressure build up with the valve means, regardless of runner length, eliminates having to closely synchronize the relative pressures of the internal layers with the ambient pressure of the A and B materials flowing in the central channel. A comparison of the Figures also shows that due to the prepressurization of the A, B and C materials, the flow rate of the three materials in Fig. 118E is greater than the now rate of those materials in Fig. 118D.

Figs. 118F and 118G are comparisons of cycle times of multi-cavity injection molding machines having long runner systems, respectively with and without valve means. In Fig. 118F (co-injection nozzles without valve means), after the end of injection (i.e. to the right of the peak X of the curve), the pressure drops and there is very gradual decay of pressure of say about 40 to 50 seconds for a long runner system. This gradual decay delays the start of the next cycle. Without a positive means for blocking the respective orifices, such a long delay is necessary to avoid undesired flow of material from the orifices into the central channel prior to the next injection cycle. This is to be compared with Fig. 118G wherein the same multi-cavity injection molding machine with the same long runner system and co-injection nozzles having operative therein valve means wherein at the end of injection, the respective orifices are immediately and very rapidly blocked to prevent flow of material into the central channel. The valve means close the orifices at point M in the drawing. The positive blockage of the respective orifices permits rapid replenishment of material into the passageways and rapid initiation of repressurization of the system to ready it for the next cycle. Replenishment of the rams and repressurization of the system occur between points M and N in the drawing. Point N represents the moment at which the system is ready for the next injection cycle. Thus, with valve means the time delay between cycles is greatly reduced. Also the overall length of the injection cycle is greatly reduced.

The valve means of this invention are, however, not without limitations. First, there is a limit on the amount of pressure that can be imparted to the blocked material in the nozzle passageway. While this is not a problem at the pressure levels utilized in accordance with this invention, beyond the limit, polymer melt flow material would tend to leak from the orifice into the central channel and might back flow into another orifice. A second limitation is that given the nozzle design wherein the passageways are provided in a certain axial order, the valve means, when combined with high levels of prepressurization, limit the process to a sequence dictated mostly by the design, for example, to opening say the internal orifices for the E, C, and D layer materials in that order, that is, E before C and C before D, and to blocking the orifices in the reverse order. Given the physical locations of and distances between the respective orifices, upon opening of the orifices, the E material will enter the central channel before C, and C before D. Therefore the leading edge of the annular stream of E layer material might tend to slightly axially precede the leading edge of that of the C layer material and likewise the leading edge of the C layer material might tend to slightly axially precede that of the D layer material. With this sequential pattern of initiation of flow into the central channel, in certain circumstances, there may tend to be delamination in the resulting injection molded article between the C layer and the inner structural material layer or less than desired side wall rigidity, should there be no or an inadequate amount of D adhesive adjacent to and interior of the leading edge of the C layer material. This might arise due to the axially offset upstream location of the D layer material leading edge relative to the C layer material leading edge. However, it has been found that in accordance with the methods of this invention, this tendency can be overcome by initiating positive displacement of and prepressurizing the E layer material in its passageway while its orifice is blocked with the valve means. The prepressurization is to a level which creates an abundance of E material at its blocked orifice, which abundance, upon removal of the blockage, initially flows into the central channel in a manner that the leading edge of the C layer stream flows into and through the abundance of E layer material, and such that the E layer material flows radially inward toward the axis of the central channel about the leading edge of and to the interior of the C layer material, and joins with the leading edge of the D adhesive material. This fully encapsulates the leading edge of the C layer material flow stream with intermediate adherent layer material and thereby prevents delamination between the C and A layer materials. It should be noted that without valve means, there is no such sequential limitation dictated by nozzle design. The D layer material flow can be initiated prior to initiation of the C layer material flow and prior to E layer material flow, or all flows can be initiated simultaneously since the means for moving the polymer material, e.g., the rams can be utilized to independently initiate flow of the respective flow streams. Thus without valve means there is no limitation on the sequence of opening and closing of the internal orifices. However, it is felt that the advantages of using valve means by far outweigh the aforementioned limitation and therefore preferred embodiments of this invention employ the valve means of this invention.

### The Pressure Contact Seal

In injection molding machines, it is imperative that during their operation at on-line temperatures, there be an effective pressure contact seal between each sprue orifice and each juxtaposed nozzle orifice, particularly between each injection cavity sprue orifice and juxtaposed injection nozzle orifice. "Effective" herein means that during operation, all of the respective juxtaposed orifices are aligned axial center line to axial center line, and there is a constant, uniform, full, non-leaking pressure contact seal between and about the faces of the juxtaposed sprues and nozzles. "Effective" herein also means operative and that each, any, or all of the aforementioned requirements of alignment, constancy, fullness, non-leakage and uniformity need not be absolutely present but can be substantially present. Misalignment or an improper pressure seal contact causes leakage, loss of pressure, and often improperly formed plastic articles.

In the case of conventional single or unit cavity injection molding machines, obtaining and maintaining an effective pressure contact seal between one injection nozzle orifice with one sprue cavity orifice is not a significant problem. In such machines, the fixed platen is located between the moveable platen and the injection nozzle. The tool set and the injection cavity are comprised of two matching portions, each attached to a juxtaposed face of the moveable and fixed platens. The injection nozzle is moved leftward into the cavity sprue in the right side of the fixed platen and it is sealed thereagainst by hydraulic pressure. Alignment of the cavity sprue orifice and nozzle orifice is not a problem because each is mounted on the axial center line of the machine and because the cavity sprue is a female pocket and the nozzle is a matching male configuration, such as a ball nozzle. Alignment and a pressure contact seal is obtained because the injection nozzle is mounted onto the front face of the extruder which does not deflect and which is hydraulically driven to maintain the pressure contact seal.

However, with respect to multi-cavity, multi-nozzle injection molding machines, obtaining and maintaining proper alignment and a constant, uniform pressure contact seal between all nozzles and sprues has heretofore been attempted to be obtained by thermal expansion of its structure. This has been a significant problem. In one such machine, thermal expansion of the runner was relied on to obtain and maintain an effective pressure contact seal between the multiple injection nozzles and cavity sprues. This meant the machine had to be at high operating temperatures and tended excessively to force and compress the injection nozzles against the cavity sprues with the result that at lower temperatures, there was a gap between the juxtaposed nozzles and sprues caused either by insufficient thermal expansion or by excess metal compression. The resulting gap phenomenon causes polymer leakage and greatly limits to a narrow range the temperatures at which the machines can effectively operate without nozzle leakage or breakage. For one such machine, the operating temperature range was about 450°F. to about 455°F (232 to 235°C). These factors thereby limit the polymer materials utilizable to those which can be employed within the narrow temperature range. Also, in some conventional multi-nozzle injection machines, the runner is attached to the fixed platen by bolts which often break due to a temperature differential between the runner and the bolts, such as when the former is at a higher temperature and thermally expands faster than the bolts. Further, in multi-cavity, multi-nozzle, single-polymer injection machines, the forward injection pressure of polymers from the multitude of injection nozzles during injection and purging cycles, creates a great amount of back pressure which forces the runner and injection nozzles backward and thereby creates a gap or separation and leakage at the injection nozzle cavity sprue interfaces.

This invention does not rely on thermal expansion to obtain and maintain an effective pressure contact seal. This invention overcomes the previously mentioned problems, and provides and maintains through a virtually open range of on-line operating temperatures of at least from about 200°F. to 600°F. (93 to 316°C) and higher, an effective pressure contact seal between all nozzles and sprues, particularly all eight juxtaposed injection nozzle sprues or orifices and injection mold cavity sprue orifices.

### Alignment of Nozzles and Cavity Sprues

Alignment of parts is obtained and maintained by the following, interrelated operating conditions and portions of the structure of the machine. These structural elements and conditions cooperate to achieve and maintain alignment of the injection nozzle and cavity sprue orifices. Initially, there will be described the structures and conditions which relate to the runner block and its components. First, the runner block and all of the components mounted therein are maintained at substantially the same operating temperature. Therefore, all of these structures and components expand and contract together. This permits the apparatus to obtain and maintain on-stream alignment of the center lines of, and the matched seating of, the injection nozzle and cavity sprue orifices, the manifold extension nozzle and runner extension sprue orifices, and the polymer flow channels. Second, because runner block 288 is supported at its center at one end by its pilot pin 951, supported by and through the injection cavity bolster plate, C-standoff, adjusting screws and tie bar, and at the other end by the oil retainer sleeve flange which is supported by and through the fixed platen, and because it has a rectangular shape (Figs. 29, 29A), when the runner block is heated, its center line moves upward to a precisely predictable desired point. Third, as shown in Figs. 29, 29C the runner block and its components can be moved upwardly to a precise desired hold dimension set position for operation by means of front and rear pairs adjusting screws 117, each screw of each pair being horizontally aligned with and parallel to the other of the pair, one screw of each pair being on each side of the runner block. The adjusting screws are threaded through C-standoff horizontal members 128 and bear upon non-moving tie bars 116 which pass through moveable platen 114 and are fixed at their forward ends to a rigid housing which houses the drive means 119, and at their rearward ends to fixed platen 282 (Figs. 11, 12). The pair of adjusting screws at the forward end of the machine is located close to blow mold bolster plate 106 and the rearward pair is positioned just forward of the fixed platen. Since the blow mold bolster plate is bolted by socket head cap bolts 130 to fixed platen 282 through the vertical members 124 and horizontal members 128 of C-standoffs 122, turning the adjusting screws in one direction raises the C-standoffs, and, through the tying together of the respective structures, raises the blow mold bolster plate, injection cavity bolster plate 950, the runner block and the nozzle assemblies mounted therein. Once the adjusting screws are in the hold dimension set position for operation, all twenty-two bolts 130 which are tied to the fixed platen are tightened to a locked position. This locks the entire runner block and the runner extension in a fixed centered position. Upon heating to the desired operational temperature, the rectangular shaped runner block and the runner extension can float radially out from its center during thermal expansion to a predicted, desired hold dimension set position relative to the center point of the moveable platen whereat the injection nozzle and cavity sprue orifices and all flow channels in the various structures are operationally aligned along their axial center lines.

There will now be described a second group of structures which cooperate to provide alignment of the injection nozzle and cavity sprue orifices. Herein are two nozzle assembly-related design features. The first is that the tips of nozzle caps 438 have flat faces 439 which match flat faces on each injection cavity sprue. This provides a flat sliding interface between the respective structures to allow for thermal expansion of the runner and movement of the nozzles and nozzle caps mounted therein without fracturing one or more of the nozzles, sprues or other structures. Conventional round-nosed nozzles and matched concave sprue pockets do not permit such sliding interfacial actions without often breaking or damaging a sprue or nozzle tip or some other structure. The second is that the diameter of the central channel 595 at the orifice of the gate 596 of the injection nozzle is smaller than that of the sprue orifice, whereby the perimeter of the orifice of each channel 595 at the gate will still be encompassed within the diameter of each sprue opening even when there might be a slight misalignment of the axes of channels 595 and juxtaposed sprues, due, for example, to variations of nozzle-sprue dimensional specifications, variations in the operating temperatures of the nozzles or of the runner block at different process conditions, and changes in temperatures required by the injection of different sets of polymers. In the preferred apparatus, the diameter of the orifice of channel 595 in the tip of the nozzle is 0.156 inch (3.96 mm) and the diameter of the sprue is 0.187 inch (4.75 mm). One added advantage which arises from the different diameters is that it promotes breakage of the polymer melt in or at the area of the interface of the nozzle cap and cavity sprue.

### Floatation of the Runner Means

There will now be described a third group of structures and operating conditions which cooperate to obtain and maintain center line alignment of sprue and nozzle orifices. According to this aspect of the invention, the runner means which includes a runner or runner block 288, and runner extension 276 are mounted on, and are free to float axially on the absolute center line of the apparatus. They are mounted by mounting means in a minimum contact, gap-surrounding, free-floating manner which allows them thermally to expand and contract axially and radially from the center line, while maintaining the center line mounting and alignment. In particular, as shown in Figs. 14, 17, 30, 31, 119 and 120, the runner means, including runner block 288 and all of its attached components, including runner extension 276, whose front face is bolted to the runner block by bolts (not shown) which thread into bolt holes 953 in the front face 952 of the runner extension, are freely supported at the forward end of the apparatus by means of pilot pin 951 which is mounted on the axial center line of the runner extension, is totally encapsulated in cut out 970 in the runner extension's forward face, and runs through the front portion of and has its axial center line on and along the axial center line of runner block 288. Pilot pin 951 is anchored and, therefore, not free to move axially relative to the runner assembly. It protrudes forward through a plain bore 945 in the runner block and through a matched diameter axial supporting bore 956 in injection cavity bolster plate 950. Pilot pin 951 rests on or is mounted on and the weight it carries is borne by the lower arcuate wall portion of the injection cavity bolster plate bore 956. The weight of the runner block and its attached components not borne by the pilot pin and the wall of bore 956 is ultimately borne by fixed platen 282. Ribbed middle portion 279 of the runner extension (see Figs. 30, 31) is tolerance-fit mounted within a cylindrical oil retainer sleeve 972 which is bolted by bolts 980 to the runner extension through the sleeve's radially inwardly directed flange 974. The sleeve has a main bore defined by a cylindrical wall whose internal surface 975, in cooperation with runner extension annular fins 281, form the outer boundaries of annular oil flow channels 277, and a secondary bore formed by annular surface 978, whose internal diameter is controlled to contact the outer surface of the runner extension rear end portion 278. The flange's outer surface 980 is piloted to fit within and contact the wall which defines an axial supporting bore or first bore 982 in fixed platen 282. The rear portion 278 of the runner extension extends through fixed platen second bore 984. As seen in Fig. 31, since the only contact between the oil retainer sleeve and any other structure is that between its outer flange and the fixed platen first bore, the weight of the runner means, including the runner block and its components, including the rear portion of the runner extension, which is not borne by pilot pin 951, is borne at that place of contact by the fixed platen. Thus, the entire weight of runner block 288 and all components mounted therein, such as T-splitters 290, Y-splitters 292, feed blocks 294, nozzle assemblies 296, and runner extension 276, is supported by pilot pin 951 and oil retainer sleeve flange 974 and is respectively borne by injection cavity bolster plate 950 and fixed platen 282. The runner means or entire runner block 288 and runner extension 276 are free to float axially as a unit due to thermal expansion or contraction, because of the sliding tolerances between the inside diameter of bore 956 in the injection cavity bolster plate and the outside diameter of the pilot pin, and between oil retainer sleeve flange 974 and the wall of fixed platen first bore 982, and because of the clearance or gap, generally designated G, which surrounds the runner block and its components, including the runner extension. The gaps occur between runner extension rear portion 278 and fixed platen second bore 984, between the forward face of the fixed platen and the rear face of oil retainer sleeve flange 974, between the oil retainer sleeve outer diameter and the common bore 986 running through nozzle shut-off assembly 899 which is comprised of sleeve cam base cover 901, sleeve cam base 900, pin cam base cover 894, and pin cam base 892, between the rear faces of the runner block and of components attached to the runner block, such as annular retainer nut 824, and sleeve cam base cover 901, between the outer sides of runner block 288 and the surrounding structure such as posts 904 and 962, and between runner block forward face 289 and the rear face of injection cavity bolster plate 950. This minimum contact, gap-surrounding arrangement provides a virtually free-floating system which allows the runner block and its components, including the runner extension, to maintain their axial center line mounting while they expand and contract radially and axially, and float virtually freely axially due to changes in operating temperatures. By minimizing contact between the runner block and its components with adjacent or surrounding structure, which are at lower temperatures, the arrangement minimizes heat loss to those structures and helps to obtain and maintain substantial temperature uniformity throughout the runner means, particularly in the runner block and with respect to the plurality of nozzles mounted therein.

Additional structure according to the present invention cooperates with the previously-described structure to assist in providing a total system which establishes and maintains the unique, constant, uniform, full and non-leaking aspects of the effective pressure contact seal between each of the manifold extension nozzles and runner extension female pockets, and particularly at and about the interface between each of the eight injection nozzles and their juxtaposed cavity sprues.

The total system includes structures which in combination absorb or compensate for the total rearward pressure exerted by the clamping force of moveable platen 114, the injection nozzle-cavity sprue separation pressure (also referred to as injection back pressure) caused by the forward injection of polymers under pressure through the eight injection nozzles, and any force due to axial thermal expansion of the runner block and its components, including the runner extension.

### The Rigidized Structure

A main feature of the total system is the support means or "rigidized structure" of the apparatus of the invention. It includes a frame-like structure comprised of second support means including a member or injection cavity bolster plate 950, three standoff systems, a nozzle shut-off assembly, and the first fixed support means, or fixed platen. The components of the rigidized structure are load-bearing members which protect the structure of the apparatus located between moveable platen 114 and fixed platen 282, by themselves bearing, instead of the runner block and its components bearing, the great compressive clamping force, usually between 45 to 500 tons (40.8 to 454 tonnes), exerted in the rearward direction by hydraulic cylinder 120 on the moveable platen when the latter is in its closed position. (See Fig. 11). The rigidized structure uniformly supports and distributes the compressive forces about the injection cavity bolster plate 950, prevents it from breaking, minimizes its deflection and prevents damage to and excessive compression forces from being exerted on the injection nozzles. In doing the above, the rigidized structure maintains the injection cavity bolster plate in a substantially vertical plane and thereby maintains the faces of the injection cavity sprues in a substantially vertical plane. This permits the faces or sprue faces of the nozzle caps, held in a substantially vertical plane by the rigid mass of the runner block, to contact and seat fully, completely, and uniformly against the juxtaposed injection cavity sprue faces.

As shown in Figs. 29, 29A, 29B, 30, 31, and 98, there are three standoff systems in the apparatus of this invention. The first system includes a set of ten large standoffs, each designated 962, and a set of eight small standoffs, each designated 963. Each large standoff is positioned on a bolt 960 and each small standoff is positioned on a bolt 961. Standoffs 962, 963 and bolts 960, 961 run through the runner block, the former extending between the rear face of injection cavity bolster plate 950 and the forward face of sleeve cam base cover 901, and the latter extending through the injection cavity bolster plate 950 and being threadedly fastened to cover 901. The main purpose of these standoffs is to maintain the cavity sprues in a vertical plane and to minimize variation in cavity deflection due to the clamping force. Due to their proximity to the injection nozzles, they also assist in preventing the nozzles from being damaged or crushed by the clamping force.

The second standoff system includes a set of eight posts, each designated 904, which are outside of the runner block and run from the rear face of injection cavity bolster plate 950 to the forward face of sleeve cam base 900 where bolts 905, which run through the posts, screw into threaded holes in sleeve cam base 900.

The third standoff system is comprised of two C-shaped standoffs, each generally designated 122, one positioned on each side of runner block 288. Each one abuts the rear face of blow mold bolster plate 106 and extends to and abuts against the forward face of fixed platen 282. Each C-standoff has three components, a vertical member 124, and upper and lower horizontal members respectively designated 126, 128. Bolts 130 for securing the C-standoffs between blow mold bolster plate 106 and fixed platen 282, pass through the blow mold bolster plate from its forward face, extend through the C-standoffs and are threadedly secured to the fixed platen. The three standoff systems in concert absorb the clamping force and uniformly support and prevent or minimize non-uniform deflection of the injection cavity bolster plate.

It is to be noted that in a unit or single cavity system, there is no need for such an elaborate standoff system because the injection cavity mounted onto the fixed platen, and the nozzle mounted onto the ram block, are each mounted on the center line of the machine. Also, the faces of the platen and ram block are rigid and do not deflect from their vertical planes. In the multi-injection nozzle machine of this invention, such as the one shown in the drawings, wherein there are eight individual injection nozzles mounted in a pattern spread out from the absolute center line of the runner block and machine, wherein each nozzle has a very short combining area in its central channel, and wherein a thin injection cavity bolster plate 950 is needed between the runner block and the injection cavities 102 and injection cavity carrier blocks 104 to carry the cavities and carrier blocks and to prevent or reduce heat loss from the former to the latter, there is a great need that both the injection cavity bolster plate and the entire runner face be protected from the clamping force of the moveable platen relative to or against the fixed platen. Also, in a multi-nozzle machine such as the one shown, wherein there is an operating temperature differential between the injection cavities and the runner block which often varies because they are separate entities and perform different functional process requirements, there is a need for the previously mentioned flat sliding faces on the cavities and nozzle caps, and for the rigidized structure utilized herein which not only bears clamping loads but permits expanding metal of the runner block and its components to freely float within it.

The portion of the rigidized structure through which the mass of expanding metal freely floats is the support means or nozzle shut-off assembly generally designated 899, which is comprised of the sleeve cam base cover 901, sleeve cam base 900, pin cam base cover 894, and pin cam base 892. All are fixed and locked solidly to and between the injection cavity bolster plate 950 and fixed platen 282. As for the manner in which the nozzle shut-off assembly is tied together as a unit, injection cavity bolster plate 950 is rigidized through bolts 960 which extend through the plate and through stand-offs 962 and is threadedly secured to sleeve cam base cover 901. Looking at the upper portion of Fig. 31, sleeve cam base cover 901 is tied by bolts 910 to sleeve cam base 900, which is tied by bolts 970 to pin cam base 894, which in turn, by bolts 971, is tied through cam plate base 892, and threadedly secured to fixed platen 282. In this manner, the injection cavity bolster plate 950 is rigidized and the nozzle shut-off assembly is tied together as a unit. The gap between the front face of sleeve cam base cover 901 and the runner block, and between the main bore 973 carved through the components of the nozzle shut-off assembly and the oil retainer sleeve, permits the runner extension to float through the assembly.

### The Force Compensation System

Another main feature of the total system which provides for the constant, uniform and full aspects of the effective operational pressure contact seal at the injection nozzle-injection cavity sprue interfaces is the force compensating system or apparatus and method of the invention which compensate for or absorb and offset the rearward separation force, which can be about four tons (3.56 tonnes), created by the forward injection of polymers through and back into the multiple injection nozzles during the injection cycle, and any rearward displacement caused by the thermal expansion of the floating runner block and runner extension which may be from about .015 inch to about .025 inch (0.38 to 0.63 mm). The separation force, which alone could cause a separation and leakage at the interface between the injection nozzles and cavity sprues, and any thermal expansion displacement, is transferred axially through the runner block, runner extension, and manifold extension 266 to the entire ram block 245. The separation force of about four tons (3.56 tonnes) is calculated by multiplying the area of a single nozzle gate times the number of nozzles in the injection machine, here eight, times the maximum injection pressure (about 11 tons or 9.98 tonnes). Thermal expansion is allowed to occur and is not relied on to obtain and maintain an effective pressure contact seal between the injection nozzles and cavity sprues. By compensating for and absorbing these rearward forces exerted on the ram block with an appropriate, constant, sufficient or greater forward force, the force compensating structure and method obtain and maintain an on-line constant, effective pressure contact seal of all injection nozzle sprue faces fully against and about the injection cavity sprue faces. The force applied in the forward direction to the apparatus must be and is applied constantly and uniformly so that it does not change with thermal expansion as it does in conventional systems, and so that during operation of the machine, whether or not during an injection cycle, each of the five manifold extension nozzles of the set and each of the eight injection nozzles of the set is respectively on a substantially vertical plane and receives the same, or substantially the same, respective, constant forward force, such that there is a uniform, full and balanced force applied to, and an effective pressure contact seal for, each nozzle of each set. Although the constant, uniform, greater forward force can be applied by any one or more suitable means at one or more locations on an injection molding apparatus, preferably, the means is hydraulic and is comprised of at least one, preferably a plurality, of hydraulic cylinders. For the apparatus shown in the drawings, a plurality of hydraulic cylinders are employed at various strategic locations to apply a constant forward force to or through and along the absolute center line of the overall apparatus, which is the axial center line of each of entire ram block 245, runner extension 276, and runner block 288. In this manner, they provide the uniform force which effects the full and complete pressure contact seal for each nozzle of each set. The hydraulic cylinders employed in the force compensation apparatus and method of this invention include drive cylinder 340, ram block sled drive cylinder 341, and clamp cylinders 986 (See Fig. 98).

Referring to Figs. 11, 12, 14, 18, 98, 119 and 120, during operation of the apparatus, each of the cylinders 208, 210 for respective Extruder Units I, II, and cylinder 212 for Unit III, each driven forward by its own respective hydraulic drive cylinders 341 (for Units I and II) and 340 (for Unit III), maintains a pressure contact seal between their respective nozzles 213, 215 and 248 and rear ram manifold sprues 223, 221 and 249. Drive cylinder 340 exerts its forward force through cylinder 208 and nozzle 215 directly on and along center line of entire ram block 245. Ram block sled drive cylinder 341, fixedly connected to sled bracket 336, in turn tied to ram block 228, pulls the entire ram block 245 forward on its center line. Each clamp cylinder 986 is mounted by suitable means onto the forward face of fixed platen 282 an equal radial distance from and on a plane, here the horizontal one, which runs through the absolute center line of the apparatus. Each clamp cylinder is one of a matched pair and has a cylinder rod and cylinder rod extension generally designated 988 which passes through a bore 990 in the fixed platen and through bore 991 in a side end portion of forward ram manifold 244. A holding pin 992 dropped into a receiving hole in each cylinder rod extension forms a stop against the back edge of the forward ram manifold. The clamp cylinders clamp or pull the entire ram block toward fixed platen 282. They exert their force through the center line of the entire ram block. Thus, the drive and clamp cylinders individually and in combination pull the entire ram block forward on its center line and force manifold extension 266 against runner extension 276. The force applied by the cylinders through the center line of the entire ram block is transferred to, through, and along the center line of the runner extension. This effects and maintains a uniform, full, constant, effective pressure contact seal between manifold extension nozzles 270 and runner extension nozzle pockets 272 and maintains alignment of the center lines of the respective communicating flow channels 220, 222, 250, 257 and 258. The force from these cylinders, applied through the center line of the manifold extension, is transferred through and along the absolute center line, which is common to the center lines of runner extension 276 and runner block 288, to the entire flat face of each injection nozzle tip mounted within the runner block. Since all injection nozzles are of a controlled, matched length and are mounted to substantially the same depth up to a vertical plane within the runner block, all portions of the flat face of the nozzle tip of each injection nozzle which bear against the juxtaposed injection cavity sprue do so with the same uniform, full and balanced pressure. Applying the forward forces other than along the center line at points not substantially equidistant from the center line in an insufficiently rigid runner, would tend to create an unbalanced cantilever effect which would prevent obtaining and maintaining a constant uniform, full, effective contact pressure seal for all manifold extension nozzles and all eight injection nozzles. The structures employed to apply these forces should not create any significant heat loss from the runner block. The center line transferral of force through these structures may, despite the larger size of the runner block, assist in maintaining injection nozzle-cavity sprue center line alignment.

With respect to the actual functioning of the cylinders as compensators during the operation of the apparatus, the rearward injection separation pressures exerted against the injection nozzles and through the floating runner block and runner extension and through the manifold extension, plus any thermal expansion pressure exerted through the runner extension, force the entire ram block and the sled drive bracket 336 to which it is attached, in the rearward direction. While it is not known which of cylinders 340, 341, and 986 absorb what portion of the total rearward pressure, it is believed that the two drive cylinders, while sufficient to handle thermal expansion pressures, are not, because of their size, sufficient to handle the combined rearward pressures and that at least some, perhaps most, of the injection separation pressure is compensated for, absorbed and offset by clamp cylinders 986. As the injection machine operates through repeated injection cycles, the clamp cylinders, acting as shock absorbers, exert a forward pressure which is at least sufficient to compensate for or absorb the rearward pressure changes. For example, if the runner extension is moved rearward and the entire ram block moves rearward, the clamp cylinders react and their cylinder rods retract and pull the entire ram block forward against the runner extension. The cylinders absorb the rearward force and offset it with a greater forward force, keep the manifold extension nozzles and runner extention pockets in seated contact, and impart a forward force against the back end of the runner extension which in turn forces the runner block forward to maintain a constant effective pressure contact seal between all of the injection nozzle tip faces and all of the injection cavity sprue faces.

While displacement clamp cylinders 986 absorb perhaps most of the injection separation pressure, it is to be noted that all of the drive and clamp cylinders cooperate with one another to provide the necessary total force compensating system.

A substantially uniform and full forward force on each of the manifold extension nozzles and at and about each of the eight injection nozzles is obtained due to the strategic, uniform application of force on or through the absolute center line of the apparatus. For the apparatus shown in the drawings it would be difficult to employ only one or two larger, stronger drive cylinders and eliminate the clamp cylinders, because it would be difficult to position such large drive cylinders to enable them to exert their forward force at or through and along the absolute center line. If the force were exerted through a point lower than the center line, a cantilever effect would be created wherein the pressure exerted through nozzles near the bottom of the star pattern of the manifold extension would be greater than through those near the top of the pattern. This could cause leakage through the upper nozzles and inoperability of the injection apparatus. Each clamp cylinder 986 is pressure set so that its pressure, combined with that of the drive cylinders, exert a constant force greater than the separation pressure. The pressure set can be obtained by any suitable means, for example, by a connection onto another pressure line having sufficient pressure or as obtained herein by a conventional hydraulic pressure controlling valve (neither shown). The clamp cylinders are controlled by a conventional flow control valve (not shown) to retract at a slow rate until the set balanced pressure is obtained in each clamp cylinder. If the set balanced pressure were not obtained in each clamp cylinder, there would be a difference in pressure between them which would also provide an undesirable cantilever effect.

### Description of Process

The process begins with the plasticizing of the materials for each of the layers of the injected article. In the preferred embodiment, three separate plastic materials --structural material for the inside and outside surface layers A and B, barrier material for the internal C layer, and adhesive material for internal layers D and E -- are plasticized in three reciprocating screw extruders. Plasticized melt from each of these extruders is rapidly, but intermittently, delivered to five individual ram accumulators. The structural material extruder feeds two rams; the adhesive material extruder feeds two rams; and the barrier material extruder feeds one ram. Each of the five rams then feeds the polymer melt material exiting from it to respective flow channels for each melt stream, as previously described, which lead to each of eight nozzles for eight injection cavities to form eight parisons each of whose walls is formed from five concurrently flowing polymer melt material streams. The process provides precise independent control over five concentric concurrently flowing melt streams of polymeric materials being co-injected into the eight cavities. As is more fully described below, this is accomplished by controlling the relative quantity of, the timing of release of, and the pressure on, each melted polymeric material.

Each of the five separate polymer melt material streams for layers A, B, C, D and E flows through a separate passageway for each stream in each of the eight nozzles. Within each nozzle, each passageway for each of streams A, B, C, D and E terminates at an exit orifice within the nozzle, and the orifices in streams B, C, D and E communicate with the nozzle central channel at locations close to the open end of the channel. The orifice for stream A communicates with the nozzle central channel at a location farther from the channel's open end than the orifices for the other streams. Each nozzle has an associated valve means having at least one internal axial polymer material flow passageway which communicates with the nozzle central channel and which is also adapted to communicate with one of the flow passageways in the nozzle, which in the preferred embodiment contains material for layer A. The valve means is carried in the nozzle central channel and is moveable to selected positions to block and unblock one or more of the exit orifices for the materials of layers A, B, C, D and E. The valve means further comprises means moveable in said axial passageway to selected positions to interrupt and restore communication for polymer flow between the axial passageway and a nozzle passageway. In the preferred embodiment, the valve means comprises a sleeve, which is moveable in the nozzle central channel to block and unblock the orifices for each of the streams B, C, D and E, and a pin which is moveable in the passageway in the sleeve to interrupt and restore communication for flow of the polymer melt material flow stream through the orifice for stream A between the sleeve passageway and a nozzle passageway.

The drive means previously described actuates the preferred sleeve and pin valve means to selected positions or modes for selectively blocking and unblocking the orifices, including the aperture in the sleeve which is regarded as the orifice for the stream of layer A material. In the preferred embodiment, there are six modes. In the first mode, illustrated schematically in Fig. 121, the sleeve 800 blocks all of the exit orifices 462, 482, 502 and 522, and the pin 834 blocks aperture 804 in the sleeve, interrupting communication between the internal axial passageway 803 of the sleeve and the nozzle passageway 440 associated with it. No polymer flows. In the second mode, illustrated schematically in Fig. 122, the sleeve blocks all of the exit orifices and the pin is retracted to establish communication between the axial passageway 803 in the sleeve and the nozzle passageway 440, whereby the material for layer A is permitted to flow from the nozzle passageway through the aperture 804 in the sleeve into the internal axial passageway 803 in the sleeve which is located in the nozzle central channel 546. In the third mode, illustrated schematically in Fig. 123, the sleeve unblocks the orifice 462 most proximate to the open end of the nozzle central channel, allowing the material for layer B to flow into the channel, and the pin does not block the aperture in the wall of the sleeve, permitting continued flow of layer A material. In the fourth mode, illustrated schematically in Fig. 124, the sleeve 800 unblocks three additional orifices 482, 502 and 522, permitting the flow of materials for layers C, D and E into the nozzle central channel 546, and the pin 834 remains in the position which unblocks the aperture 804 in the wall of the sleeve, permitting continued flow of layer A material. In this mode all five of the material streams are allowed to flow into the nozzle central channel. In the fifth mode, illustrated schematically in Fig. 125, the sleeve 800 continues to unblock the orifices for the materials of layers B, C, D and E and the pin 834 blocks the aperture 804 in the wall of the sleeve 800 to interrupt communication between the axial passageway in the sleeve and the nozzle passageway 440, whereby the flow of layer A material into nozzle central channel 546 is blocked. Positioning the pin and sleeve in this mode permits knitting or joining together of the material for layer C, forming a continuous layer of that material in the injected article. In the sixth mode, illustrated schematically in Fig. 126, the pin 834 continues to block the aperture 804 in the wall of the sleeve 800 and the sleeve unblocks the orifice 462 most proximate to the open end of the nozzle central channel 546, whereby only the material for layer B flows into the channel. Positioning the pin and sleeve in this mode permits a sufficient flow of the material for layer B to enable it to knit or join together and form a layer which completely encapsulates, among other layers, a continuous C layer.

In the preferred embodiment, a complete injection cycle takes place when the drive means for the valve means, the pin and sleeve, operate to move the valve means sequentially from the first mode to each of the second through sixth modes and then to the first mode. It is also preferred that the tip of the pin be proximate to the open end of the nozzle central channel when the sleeve and pin are in the first mode. Having the pin at this position substantially clears the nozzle central channel of all polymer material at the end of each injection cycle and causes a small amount of the material of layer A to overlie layer B at the sprue.

Figs. 123 and 124 schematically show the relative location and dimensional relationships among the pin 834, sleeve 800, nozzle cap 438, and the orifices 462, 482, 502 and 522 for polymer flow formed by cap, outer shell 436, second shell 434, third shell 432, and inner shell 430. In these Figures, a "reference" point "O" is the front face 596 of the nozzle cap, "p" is the distance of the tip of the pin from the reference, and "s" is the distance of the tip of the sleeve from the reference. The dimensions indicated in Figs. 123 and 124 by letters a to x are set out in Table II below. The front face 596 of the nozzle cap lies in a plane at the front end of channel 595 in the nozzle cap. The portion of the plane along front face 596 which intersects channel 595 is the gate of the nozzle.

**TABLE II**

| Dimensions Indicated in Figs. 123 and 124 | | | | | |
|---|---|---|---|---|---|
| Dimension | Mils | Millimetres | Dimension | Mils | Millimetres |
| a | 120 | 3.05 | m | 250 | 6.35 |
| b | 16 | 0.41 | n | 222 | 5.64 |
| c | 30 | 0.76 | o | 279 | 7.09 |
| d | 21 | 0.53 | q | 399 | 10.13 |
| e | 30 | 0.76 | r | 415 | 10.54 |
| f | 57 | 1.45 | t | 445 | 11.30 |
| g | 175 | 4.44 | u | 466 | 11.84 |
| h | 104 | 2.64 | v | 496 | 12.60 |
| j | 47 | 1.19 | w | 552 | 14.02 |
| k | 1250 | 31.75 | x | 580 | 14.73 |
| l | 78 | 1.98 | y | 1987 | 50.47 |

Table IIA below gives the positions of the tip of the pin and the tip of the sleeve from the reference as a function of time in centiseconds during a typical injection cycle for the eight-cavity machine previously described. The distances from the reference are quoted in mils, with millimetres being shown in parentheses.

**TABLE IIA**

| POSITION OF PIN AND SLEEVE AS A FUNCTION OF TIME | | |
|---|---|---|
| TIME (Centiseconds) | PIN p | SLEEVE s |
| 0 | 112 (2.845) | 175 (4.445) |
| 20 | 1987 (50.47) | 175 (4.445) |
| 24.4 | 1987 (50.47) | 175 (4.445) |
| 30 | 1987 (50.47) | 270 (6.858) |
| 45 | 1987 (50.47) | 270 (6.858) |
| 49 | 1987 (50.47) | 580 (14.73) |
| 121 | 1987 (50.47) | 580 (14.73) |
| 130 | 612 (15.54) | 580 (14.73) |
| 133 | 587 (14.91) | 320 (8.128) |
| 140.9 | 521 (13.23) | 175 (4.445) |
| 145 | 487 (12.37) | 175 (4.445) |
| 165 | 112 (2.845) | 175 (4.445) |
| 170 | 112 (2.845) | 175 (4.445) |

Fig. 138 and Table III show the timing sequence of polymer melt stream flow into the nozzle central channel, as determined by timed movement of the sleeve and pin to the selected positions or modes previously described, for an injection cycle of the eight-cavity machine previously described. For polymer A, the opening and closing times refer to opening and closing of aperture 804. For polymers B, C, D, and E, the times refer to opening and closing of respective orifices 462, 502, 522, and 482.

**TABLE III**

| POLYMER FLOW TIMING SEQUENCE | | | | |
|---|---|---|---|---|
| | OPENING (Time in centiseconds) | | CLOSING (Time in centiseconds) | |
| POLYMER | STARTS AT | COMPLETE AT | STARTS AT | COMPLETE AT |
| A | 13.2 | 15.8 | 121.0 | 122.5 |
| B | 24.4 | 27.8 | 137.8 | 140.9 |
| C | 46.7 | 46.9 | 131.9 | 132.1 |
| D | 47.3 | 48.0 | 130.9 | 131.5 |
| E | 46.0 | 46.3 | 132.4 | 132.6 |

At the beginning of the injection cycle, the pin and sleeve are in the first mode (Fig. 121). No polymer material flows. The pin is withdrawn from the reference position where its tip was 112 mils (2.84 mm) from the front face of the nozzle cap, opening to the gate of the nozzle a short unpressurized cylindrical channel. The pin continues to be retracted and at 13.2 centiseconds the pin begins to unblock the aperture 804 in the sleeve through which the stream of polymer A material flows, and the opening of that aperture is completed at 15.8 centiseconds. The pin and the sleeve are now in the second mode. The polymer A material is under pressure and immediately fills the unpressurized cylindrical channel (within the sleeve and central channel of the nozzle), flows through the gate and begins to enter the injection cavity. At 20 centiseconds movement of the pin ceases and its tip is located 1.987 inch (50.47 mm) from the reference, as further shown in Fig. 122 and Table IIA. At 24.4 centiseconds withdrawal of the sleeve begins and the sleeve begins to unblock the circumferential orifice 462 for polymer B, and the opening of the polymer B orifice is completed at 27.8 centiseconds. The pin and sleeve are now in the third mode. Being pressurized, the layer B material displaces the outer portion of the cylinder of material A and becomes an advancing annular ring overlying the central strand of A material. The strand of A surrounded by the ring of B fills the gate and begins to enter the injection cavity. At 30 centiseconds, retraction of the sleeve stops and its tip is 270 mils (6.86 mm) from the reference. The next step is the rapid sequential release to the nozzle central channel of the materials for layers E (adhesive), C (barrier) and D (adhesive) as concentric annular rings surrounding the core of A material but within the outer annular ring of layer B material. Thus, at 45 centiseconds the sleeve begins to be further retracted, opening of the orifice 482 for polymer E starts at 46.0 centiseconds and is completed at 46.3 centiseconds, opening of the orifice 502 for polymer C starts at 46.7 centiseconds and is completed at 46.9 centiseconds, and opening of the orifice 522 for polymer D starts at 47.3 centiseconds and is complete at 48 centiseconds. The pin and sleeve are now in the fourth mode. All of polymers A, B, C, D and E are flowing at five concentric streams through the gate of the nozzle and into the injection cavity. The material for layer A (to form the inside structural layer of the injected article) flows as the innermost stream. Surrounding it, in order, are annular streams of the materials for layers D, C, E, and B. Although the rate of flow and thickness of the three streams D, C, and E are each independently controllable, they move in the preferred embodiment generally as though they were a single layer. This multiple-layer stream is positioned between streams A and B so that when the five flowing streams have entered into the injection cavity, the multiple-layer D-C-E stream is located substantially in the center of the overall flowing melt stream, on the fast streamline where the linear flow rate is greatest, and the multiple layer stream displaces part of and travels faster then the two layers, A and B, of container wall structural materials, reaching the flange portion of the injected article by the end of the injection cycle when the flow of all materials in the injection cavity has stopped. Retraction of the sleeve stops at 49 centiseconds at which time its tip is 580 mils (14.73 mm) from the reference (Fig. 124).

The closing sequence of the injection cycle is as follows. At 121 centiseconds, the pin is moved toward the reference and it begins to close the aperture in the sleeve and at 122.5 centiseconds has completely closed the aperture to stop the flow of polymer A into the nozzle central channel. The pin and sleeve are now in the fifth mode (Fig. 125). Polymer B, C, D, and E are flowing. The pin continues to move toward the open end of the nozzle central channel, and at 130 centiseconds, when its tip is 612 mils (15.54 mm) from the reference, its rate of forward movement is decreased. Movement of the sleeve toward the open end of the nozzle central channel commences at 130 centiseconds. At 130.9 centiseconds, the sleeve begins to close the orifice for polymer D and the orifice is completely closed at 131.5 centiseconds. At 131.9 centiseconds, the sleeve begins to close the orifice for polymer C and the orifice is completely closed at 132.1 centiseconds. At 132.4 centiseconds, the sleeve begins to close the orifice for polymer E and the orifice is completely closed at 132.6 centiseconds. The pin and the sleeve are now in the sixth mode (Fig. 126). Only polymer B is flowing into the nozzle central channel. The pin is still moving toward the open end of the nozzle central channel. At 133 centiseconds, when the sleeve is 320 mils (8.13 mm) from the reference, there is a decrease in the rate of forward movement of the sleeve. At 137.8 centiseconds, the sleeve begins to close the orifice for polymer B and the orifice is completely closed at 140.9 centiseconds. Forward movement of the sleeve stops at that time, when its tip is 175 mils (4.44 mm) from the reference. No polymer flows into the nozzle central channel. At 145 centiseconds the rate of forward movement of the pin is increased. Forward movement of the pin stops at 165 centiseconds when its tip is 112 mils (2.84 mm) from the reference. The pin and sleeve have returned to the first mode.

In the preferred practice of the method of this invention, the flow of polymeric material out of the open end of the nozzle central channel into the injection cavity at the beginning of the injection cycle is such that the materials for layers A and B enter the injection cavity at about the same time in the form of a central strand of the material for layer A surrounded by an annular strand of the material for layer B. In the embodiment described above, the material for layer A enters the sprue of the injection cavity in advance of the combined central strand of A surrounded by the annular strand of B. Where, as in the preferred embodiment which forms a very thin wall article, the flow cross-section in the injection cavity is very narrow, the material of layer A which first flows into the cavity will come into contact with the outer wall of the cavity as well as with the core pin within the cavity, causing the formation of a very thin, almost optically invisible, layer of the material on the outside surface of the injection blow molded article. If polymer A and polymer B are the same polymer or are compatible polymeric materials, either one of polymers A or B may sequentially enter the injection cavity, and in that circumstance the small amount of polymer A which may be on the outside surface of the injected article, or the small amount of polymer B which may be on the inside surface of the injected article, will not interfere with the formation of the article or its functioning. However, the present invention provides precise independent control over the flow of those polymer streams so that if it is desired not to have polymer A material be exposed to the external environment or not to have polymer B material exposed to the environment inside of the injected article or the injection blow molded article, such structure may be achieved by the present invention. Therefore, it will be understood that the modes of polymer flow and positions of the valve means, described above, are those for the preferred embodiment, but the invention in its broadest aspect is not limited thereto.

By controlling the location of the internal layer or layers within the thickness of the flowing five-layer plastic melt, the process is able to distribute the internal layers uniformly and consistently throughout each of a plurality of injection cavities and out into the flange of each of a plurality of injection molded parisons while keeping the internal layers generally centered within the outer, structural plastic melt layers.

It is important that internal layer C (and, if present, internal layers D and E) should extend into the marginal end portion of the side wall of the injected molded article, preferably substantially equally, or uniformly at substantially all locations around the circumference of the end portion, especially when layer C comprises an oxygen-barrier material and the article is intended to be a container for an oxygen-sensitive product such as certain foods. This is achieved in part by controlling the initiation of flow of the polymeric melt material flow stream which forms the internal layer. It is desirable to have the flow of the polymer material of that layer commence uniformly around the circumference of the orifice for that polymer. It is also highly desirable to have the mass rate of flow of the respective polymer material flow streams forming the inside (polymer A) and outside (polymer B) structural layers of the article be uniform circumferentially as they are flowing in the nozzle central channel at the time when flow of the polymer stream for internal layer C is commenced. The previously-described nozzle with valve means permits establishment both of the proper flow of the polymer streams forming the inside and outside structural layers, at the time of commencement of flow of the polymer stream forming the internal layer, and of the proper flow of the stream of internal layer polymer itself.

There are two immediate or direct sources of non-uniformity or bias in the extension of the internal layer into the marginal end portion of the side wall of the article. The first source which we shall refer to as "time bias" may be defined as the condition in which the time of commencement of flow of internal polymer melt material C is not uniform circumferentially around the polymer C orifice. Time bias in the flow of the polymer C stream, unless corrected elsewhere in the system or unless accommodated by foldover, as described below, will usually result in a failure of the internal oxygen-barrier layer C to uniformly extend into the marginal end portion of the side wall at substantially all circumferential locations thereof.

Two causes of time bias are non-uniform pressure of polymer C in its conical flow passageway near the C orifice and non-uniform ambient pressure in the nozzle central channel near the C orifice.

Non-uniform pressures of polymer C in its passageway can result primarily from differences among various portions of the flow passageway in time response of the polymer to a ram displacement. In particular, the pressure generated by the ram displacement movement will, in general, be experienced sooner at the circumferential portion of the orifice corresponding to the point of entry of the feed channel than it will on the opposite side of the orifice. Since polymer C will flow into the central channel as soon as its pressure in the orifice exceeds the ambient pressure in the combining area or eye of the nozzle, a difference in time response will result in a circumferential non-uniformity in the time at which polymer C enters the central channel. This difference in initial time response can be mitigated by the design of melt pools and chokes. As discussed elsewhere, melt pools and chokes can also be designed to circumferentially balance the mass flow rate later during the cycle when the flow is fully established. However, it is extremely difficult to design melt pools and chokes which result in complete uniformity of time response and in complete balance of flow later in the cycle. Dimensional tolerances and non-uniform temperatures within the C layer material flow passageway can also affect the uniformity of time response.

If the ambient pressure within the nozzle central channel, proximate to the C orifice, is not uniform around the circumference of the flow stream, this will also result in time bias. If the pressure of C is gradually rising as a result of a ram displacement, C will begin to flow into the central channel sooner in that circumferential area in which the ambient pressure is lower. Non-uniformities in the ambient pressure can have several causes. In particular, non-uniformities in the flows or in the temperatures of the other layers, particularly B, will result in non-uniform ambient pressure in the eye of the nozzle.

The second source of a bias in the extension of the internal layer into the marginal end portion of the side wall of the article shall be referred to as "velocity bias." Velocity bias may be defined as the condition in which the rate of progression of the buried layer toward the leading edge varies around the circumference, resulting in a further advance in some sections than in others.

In understanding this phenomenon it is useful to introduce the concept of streamlines. In laminar flow, one can define a streamline as a line of flow which represents the path which each polymer molecule follows from the time it enters the nozzle central channel until it reaches its final location in the injection molded article. Streamlines will flow at various velocities depending on their radial location, the temperatures of the mold cavity surfaces, the temperature of the various polymer streams, the time of introduction into the eye of the nozzle, and the physical dimensions of the mold cavity. For example, a streamline which is located very close to the mold cavity walls once it passes into the mold cavity will flow slower than an adjacent streamline which is more remote from the mold cavity walls. If the C polymer material enters the nozzle central channel on a faster streamline at one circumferential location than it does at another location, the C polymer material will be more advanced towards the marginal end at the first location. Since the C polymer material is introduced at or near the interface between the A and B layers, the radial location of the C flow streams will be determined by the relative mass flow rates of the A and B layers at each point of the circumference of the flowing stream. Velocity bias will therefore result if the flow of these layers, in particular the B layer, is not circumferentially uniform.

Circumferential non-uniformities in the temperature of the polymer streams or of the mold cavity surfaces can also result in velocity bias. Temperatures affect the velocities of the various streamlines because of the effect of cooling on the polymer viscosity near the mold surfaces. It should be noted that circumferential non-uniformities in the temperatures of the A or B layers, in particular, will affect the position of polymer C near the marginal end.

It should be noted that the various types and causes of bias are algebraically additive; that is, if both time bias and velocity bias are present, the net effect could be either greater than or less than the effect of either type of bias by itself. In particular, if the time bias and velocity bias both tend to result in a retarded flow of C polymer at the same circumferential location, the net bias will be greater. If time bias tends to retard the flow of polymer C at a circumferential location in which velocity bias tends to advance its flow, the net bias will be reduced.

Similarly, one cause of velocity bias could either compensate for the effect of another cause of bias or add to that effect. It will be obvious to one skilled in the art how the effects described above could be arranged so as to have the effects tend to partially compensate for each other. Since such compensation of biases will tend to be very specific to each article shape and choice of polymer, however, the preferred embodiment of this invention is to minimize each cause of bias through features of the apparatus and of the process.

As has been described above, circumferential non-uniformity in the flow of B polymer can cause non-uniformities in the final axial location of layer C through both time bias and velocity bias. The time bias results from the non-uniform ambient pressure in the nozzle central channel and the velocity bias results from the non-uniformity in the radial location of layer C as it is determined by the mass flow rate of layer B.

Circumferential non-uniformities in the flow of B polymer material may be minimized by selection of a choke structure of the nozzle shell 436 for layer B material to make the flow of the layer B material more uniform around the circumference of the orifice. The nozzle shell structure is also made such that a longer and wider primary pool of layer B material is formed, as at 468 at the melt inlet, to obtain a larger flow section in order to reduce the resistance to flow of the polymer material from the entry side of the feed channel to the opposite side. Incorporation of an eccentric choke will assist in balancing the resistance to flow within the nozzle passageway. Interposition of a uniform, large flow restriction close to the orifice will aid by tending to mask any upstream non-uniformities of flow. Further, non-uniform ambient pressure in the nozzle central channel at the moment of commencement of flow of layer C material may be minimized by reducing the pressure on the layer B material, or stopping its flow momentarily, just prior to commencement of the flow of the C material. This may be accomplished by reducing or halting ram movement on the B layer material, and will tend to dampen out pressure non-uniformities in the nozzle central channel caused by non-uniformity of mass flow of layer B and will tend to minimize the variation of pressure of layer B material or layer A material, or both, circumferentially around the nozzle central flow channel at the location where layer C material enters the flow channel.

Non-uniformity of the time of the start of flow of the stream of polymer C material around the circumference of the orifice may be minimized by having the leading edge of the polymer C flow stream penetrate as rapidly as possible into the already-flowing stream of layers B and A and by having the mass rate of flow of layer C material through its orifice uniform around the circumference of the orifice. This may be achieved by valve means in the nozzle central channel which blocks the layer C material orifice until the moment when initiation of flow is desired. Pressurization of the layer C material prior to the time when the valve means unblocks the orifice greatly assists in achieving the desired rapid, uniform initiation of flow of layer C material.

Certain other features of the previously described structure of the present invention assist in minimizing time bias of the flow of the stream of layer C material. The conical, tapered passageway 518 (Fig. 50) for layer C material in the nozzle provides a symmetrical reservoir of pressurized polymer melt material downstream of the concentric choke 506 (Figs. 50 and 55) and adjacent to the orifice. The taper serves continuously to provide a reservoir closer to the orifice. Eccentric choke 504 and concentric choke 506 in combination with primary melt pool 508, secondary melt pool 512 and final melt pool 516 assist in providing uniform flow of the stream of polymer C material around the circumference of its orifice (Fig. 50).

It is desirable that the volume of polymer in the central channel of the nozzle be kept small in order to facilitate ease of control of the start and stop of the flow streams. Accordingly, the diameter of the nozzle central channel should be relatively small. Likewise, the axial distance from the nozzle gate to the farthermost removed polymer entry flow channel into the nozzle central channel should be kept small.

At any given position around the circumference of the orifice for the polymer of the internal layer C, the polymer material will begin to flow when its pressure, P_{C}, is greater than the ambient pressure, P_{amb}, in the channel, which is the combined pressure from that of the stream of polymer of the inside structural layer, P_{A}, and the pressure from the stream of polymer of the outside structural layer, P_{B}. The onset of flow of the stream of polymer C for the internal layer will be uniform, i.e., will start at the same time, at all positions around the circumference of the orifice for layer C, if the pressure of the polymer of that layer, P_{C}, is uniform around the orifice and if the ambient pressure, P_{amb}, in the nozzle central channel of the flowing streams A and B, of the inner and outer structural layers respectively, is constant at all angular positions around the flowing annulus. If P_{amb} is not constant, the onset of flow of layer C will be uniform if the pressure distribution at the leading edge of layer C, as a function of radius and angular location in the nozzle central channel, matches the ambient radial and angular pressure distribution of the already flowing A and B streams at the axial location in the nozzle central channel at which the C layer is introduced.

These conditions are difficult to achieve. When P_{C} is not uniform around the orifice, or when the ambient pressure in the nozzle central channel is not constant, time bias of the leading edge of the entering polymer C flow stream will tend to occur, but it may be minimized by causing a rapid rate of build-up of pressure, dP_{C}/dt, in layer C as it enters the nozzle central channel.

While a rapid ram movement will cause a rapid build-up of pressure near the ram, it has been found that the resulting dP_{C}/dt in the nozzle central channel at the time of introduction of layer C decreases as the runner distance from pressure source to nozzle central channel increases. A high baseline or residual pressure in the runner system has been found to increase dP_{C}/dt in the nozzle central channel. Therefore, to obtain the desired, rapid rate of build-up of pressure in layer C in the nozzle central channel, in response to a rapid pressure build-up at the end of the runner adjacent the pressure source, the length of the runner should be shortened and the residual pressure of C increased. However, relatively long runners are utilized in multi-cavity machines, and there is an upper limit to the pressure of C above which an undesirably large mass of polymer C is obtained at its leading edge. Further, when long runners are employed, as in a multi-cavity machine, the flow rate of polymer into the nozzle central channel is the result both of flow due to physical displacement of a screw or ram at the far end of the runner and flow due to decompression of polymer in the runner and nozzle, if the polymer has been prepressurized. These factors, coupled with the effects of damping in the polymer in the runner, cause a rapid rate of increase of pressure in the polymer at the end of the runner adjacent the pressure source to deteriorate into an undesirable gradual rate of pressure increase at the other end of the runner and at the site of entry of the polymer into the nozzle central channel. (See the discussion regarding Fig. 139.) As a result of these constraints, it is difficult, particularly in a multi-cavity machine, to achieve the desired dP_{C}/dt and even more difficult to achieve substantial uniformity of dP_{C}/dt around the circumference of the orifice of polymer C.

As mentioned above, the desired uniformity is facilitated by the combination of a symmetrical preferably tapered, pressurized reservoir of polymer C material within the nozzle passageway for the material adjacent to the orifice, with valve means which selectively blocks and unblocks the orifice. The pressure P_{C} may be increased to a level which overpowers any radial or angular non-uniformities of pressure distribution in the flowing streams A and B at the location of the layer C orifice in the nozzle central channel. It has been found that the layer C material should be pressurized to a level greater than the materials of layers A or B. The upper limit of pressurization of C material is the level at which there is obtained an undesired mass of C material at the leading edge of its flow stream.

These pressure variations are illustrated in Figs. 127 and 128 in which the P ordinate is pressure, the T abscissa is time, and in which the ambient pressure, Pₐ, of the flowing streams A and B in the nozzle central channel is assumed to be radially and angularly constant at an axial location in the channel about the orifice for layer C.

Fig. 127 illustrates the effects of a relatively slow rate of build-up of pressure in the layer C material as it enters the nozzle central channel and reaches the ambient pressure at different times, t₁ and t₂, at two different angular locations. In Fig. 127, Pc₁, is a plot of the relatively slow pressure build-up of layer C at a first given angular location at the C orifice as a function of time, while Pc₂ is a plot of the relatively slow pressure build-up of layer C at a second given angular location at the C orifice as a function of time. Small non-uniformities of P_{C}, as a function of angular location, result in a relatively large difference in time, t₂ minus t₁, between the onset of flow of layer C at the two respective angular locations, causing a significant time bias of the leading edge of layer C from one angular location to another. Fig. 128 illustrates how the time bias is reduced by increasing the rate of build-up of pressure in layer C. In Fig. 128, Pc₁ is a plot of the relatively faster pressure build-up at the first given angular location as a function of time, while Pc₂ is a plot of the relatively faster pressure build-up at the second given angular location as a function of time. As dP_{C}/dt increases, the difference between t₂ and t₁ decreases.

The relationship among the pressures of the layer A material, the layer B material and the layer C material at the beginning of the injection cycle and during the injection cycle will now be described. In the following description, the term "orifice for layer A material" refers, with regard to the previously-described preferred embodiment employing nozzle assembly 296, and hollow sleeve 800 and shut-off pin 834, to the aperture, slot or port 804 in sleeve 800 (Fig. 50). Likewise, with regard to the preferred embodiment, the term "orifice for layer B material" refers to annular exit orifice 462, and the term "orifice for layer C material" refers to annular exit orifice 502. It will be appreciated that equivalent pressure relationships will exist at equivalent orifices in other embodiments of nozzles and nozzle valve means within the present invention such as, for example, those associated with sleeve 620 (Fig. 107), or with check valve 628 in flow passageway 634 (Fig. 108), or sliding valve member 638 and axial passageway 803 (Fig. 109).

At the beginning of the injection cycle, when the layer A material is flowing in the nozzle central channel 546 past the orifice for layer B material, the pressure of material B in the tapered melt pool 478 (Fig. 50) in the nozzle just prior to unblocking the orifice for layer B material, P(B)ₒ, may be greater or equal or less than the pressure of the flowing stream of layer A material at the orifice for the layer A material, P(AA). In practice, it is believed that P(B)ₒ is greater than P(AA). At the beginning of the injection cycle, when the layer A material is flowing In the nozzle central channel past the orifice for layer B material, P(B)ₒ should be equal to or greater than the average radial pressure, P(AB), of the flowing stream of layer A material in the nozzle central channel at the axial location in the nozzle central channel of the orifice for layer B material in order to prevent cross channel or back flow when the orifice for layer B material is unblocked.

At the next step of the injection cycle, when both the layer A material and the layer B material are flowing in the nozzle central channel, the pressure of material C in tapered melt pool 518 just prior to unblocking the orifice for layer C material, P(C)ₒ, should be at least equal to, and preferably is greater than, the average radial pressure, P(AC), of the flowing stream of layer A material in the nozzle central channel at the axial location in the nozzle central channel of the orifice for the layer C material. P(C)ₒ should be at least equal to P(AC) to prevent back flow when the orifice for layer C material is unblocked. The relationship of P(C)ₒ being preferably greater than P(AC) is important in the achievement of uniformity of location of the leading edge of the annular flowing stream of internal layer C material and, in turn, uniformity of location of the terminal end of layer C in the marginal end portion of the side wall of the injected article at substantially all locations around the circumference of the end portion at the conclusion of polymer flow in the injection cavity. P(C)ₒ should be greater than the pressure of the flowing stream of layer B material as it enters the nozzle central channel at the orifice for layer B material, P(BB). P(C)ₒ may be greater or equal or less than P(AA). It is believed that P(C)ₒ is greater than P(AA). It is believed that in practice, P(C)ₒ is greater than P(B)ₒ.

At a later stage of the injection cycle, when the injection cavity is partially filled with the melt materials, the pressure of the flowing stream of layer C material as it leaves the orifice for layer C material, P(CC), is greater than P(AC), is less than P(AA), and is greater than the pressure of the flowing stream of layer C material in the nozzle central channel at the axial position in the nozzle central channel of the orifice for layer B material, P(CB). At this stage of the injection cycle, P(BB) is greater than P(AB), is less than P(AA) and is greater than P(CB). At the sprue of the injection cavity, at this stage of the injection cycle, the pressures of the flowing streams of layer A material, layer B material and layer C material are almost equal.

At a still later point in the injection cycle, when the flows of the materials for layers A and C from their respective orifices are being terminated, the pressure relationships are as follows. When the flow of material for layer A is terminated, and the materials for layers C and B are still flowing, P(CC) is greater than the residual pressure of layer A material remaining at the orifice for layer C material. This and the continuing flow of layer C material into the nozzle central channel permit knitting of the layer C material to provide a continuous layer of material C at the sprue of the injected article. Next, when the flow of material for layer C is also terminated, and only the material for layer B is still flowing into the nozzle central channel, P(BB) is greater than the residual pressure of layer C material remaining adjacent the orifice for layer B material. This and the continuing flow of layer B material into the nozzle central channel permits knitting of the layer B material to provide encapsulation of layer C by layer B material at the sprue of the injected article.

The above-stated description of the pressure relationships among the flowing melt streams does not take into account small variations of pressure in the radial direction which may be present but which are small in comparison with variations of pressure in the axial direction in the nozzle central channel. It does take into account the larger difference in radial pressure very close to the orifices of C and B required for these streams to enter the central channel, particularly when the knitting of the layer C and layer B materials is considered.

Fig. 129 is a plot of the melt pressure P of each of the polymer flow streams A, B, C, D and E in pounds per square inch and bars as a function of time T during one injection cycle of the eight-cavity machine previously described. The pressure was measured at pressure transducer port 297 in manifold extension 266, approximately thirty-nine inches (1 m) away from the tip of the nozzle (see Fig. 17). It should be noted that the pressures shown in Fig. 129 and Table IV are the pressures as measured approximately thirty-nine inches (1 m) away from the nozzles and thus are not the pressures of the melt materials in the nozzles. However, the pressures and pressure relationships of Fig. 129 and Table IV do function to create the desired pressures and pressure relationship in the nozzle which are described above.

Table IV gives the pressure, in pounds per square inch, and in bars in parentheses, of each of the polymeric materials for layers A, B, C, D and E as a function of time in centiseconds of the injection cycle for the eight-cavity machine previously described. Table IV was prepared from the information in Fig. 129.

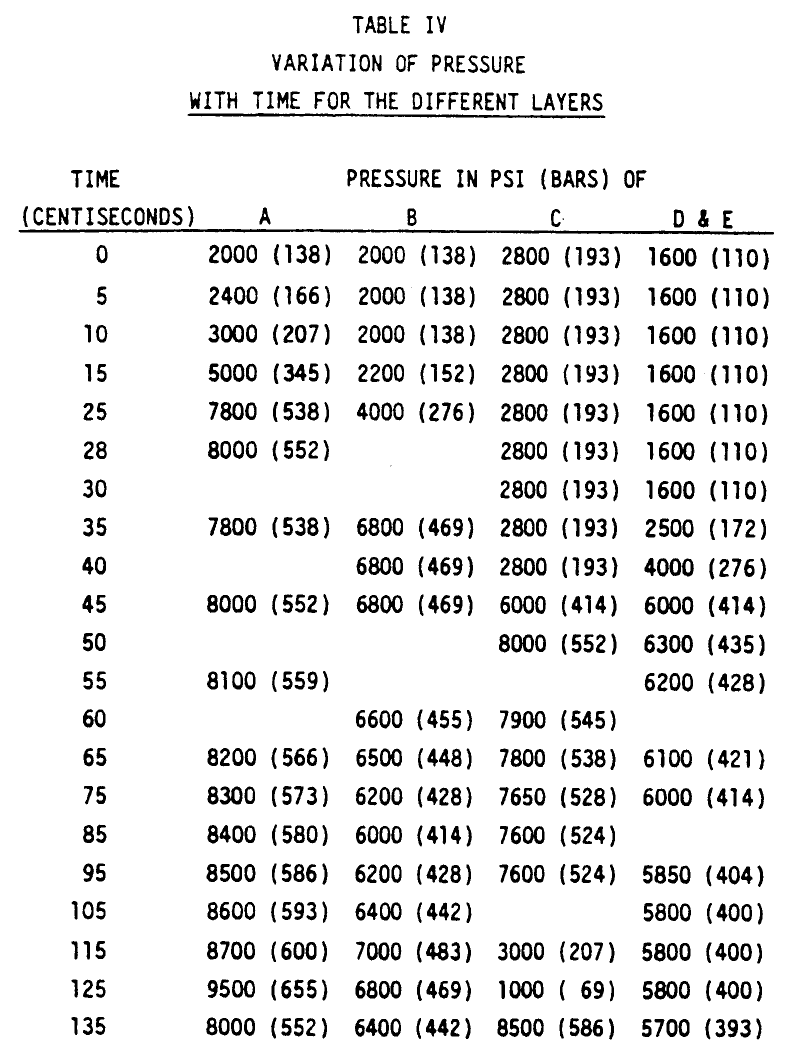

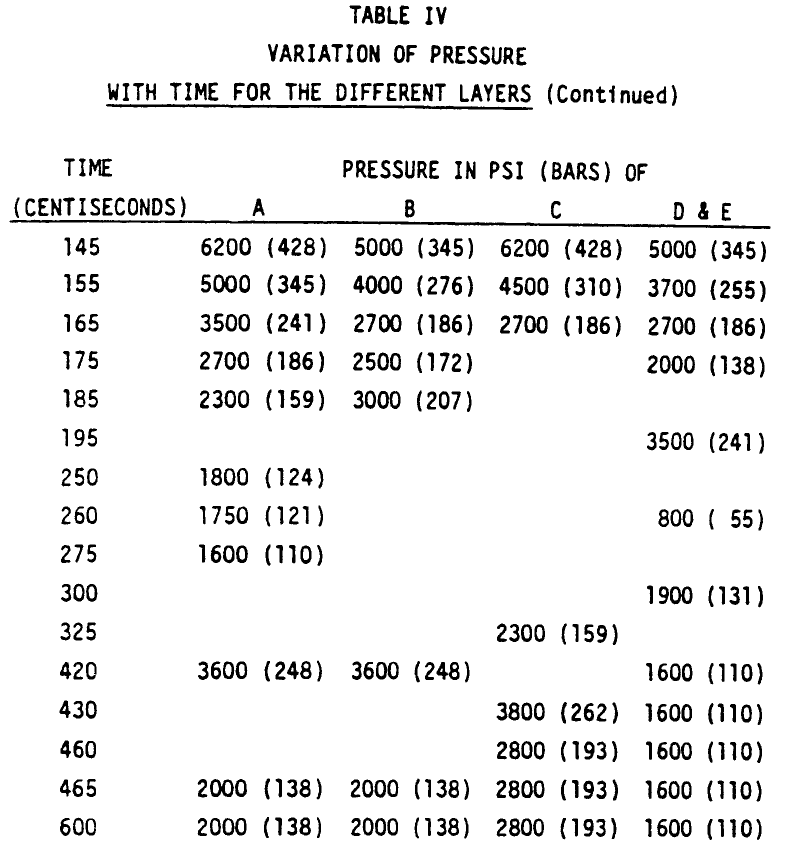

The temperature range within which the melt streams of polymeric materials are to be maintained in accordance with this invention will vary depending upon various factors such as the polymeric materials used, the containers to be formed and as will be explained the products they will contain. Utilizing the preferred materials disclosed herein for forming the preferred five-layer containers for packaging most products including many food products, the polymeric materials are preferably maintained at a temperature in the range of from about 400°F. to about 490°F. (204 to 254°C).

Table V shows estimations of the temperatures of each of the melt streams at different locations in the injection molding apparatus of this invention during a typical run for forming multi-layer plastic containers for packaging hot filled food products, and non-food products, based on the temperature settings of ambient structures through which the melt streams passed, from the extruders to the injection cavity sprues.

**TABLE V**

| | Layer Melt Material Temperature (°F) (Temperature °C) | | |
|---|---|---|---|
| Apparatus Location | Outer(B) and Inner(A) | Internal(C) | Intermediate(D,E) |
| Extruder Exit | 490 ± 10 (254 ± 5.5) | 430 ± 10 (221 ± 5.5) | 450 ± 10 (232 ± 5.5) |
| Runner Block | 435 ± 5 (224 ± 2.8) | 435 ± 5 (224 ± 2.8) | 435 ± 5 (224 ± 2.8) |
| Orifice Entrances to Combining Area of Co-injection Nozzles | 450 ± 15 (232 ± 8.3) | 430 ± 15 (221 ± 8.3) | 440 ± 15 (227 ± 8.3) |
| Co-injection Nozzle - Injection Cavity Interface | 460 ± 15 (238 ± 8.3) | 440 ± 15 (227 ± 8.3) | 450 ± 15 (232 ± 8.3) |

It has been found that when certain polymeric materials such as certain polyethylenes are processed at the higher temperatures within the range, to form containers for packaging certain foods which require sterilization processing at elevated temperatures, the materials may impart an off-flavor taste to those food. For such applications it has been found that these materials should be processed at lower temperatures, within the range from about 400°F. to about 450°F. (204 to 232°C).

It will be understood by those skilled in the art that processing conditions and the temperatures of structures of the apparatus may be adjusted to permit the use of such lower temperatures. An example of such an adjustment would be in raising the temperature of the injection cavity tool set.

Fig. 139 is a graph schematically plotting on the ordinate the melt flow rate (R) of polymer material into an injection cavity as a function of time (T). The ascending dashed curve (4) indicates polymer melt flow due to a linear ram displacement through a non-pressurized runner system which includes a nozzle passageway. The gradual increase of flow rate from zero is an indication of time response delay caused by the compressibility of polymer melt. The ascending solid curve (2) indicates polymer melt flow only due to ram displacement through a pressurized runner and nozzle passageway upon removal of blockage of the orifice. An advantage of the pressurized flow system is that the transient response of the flow curve due to ram displacement is faster for a pressurized runner and nozzle passageway than a non-pressurized runner and nozzle. An additional advantage is that an instantaneous flow of polymer melt upon unblockage of the orifice will result (even the absence of further ram movement) from the decompressing of polymer melt in the runner and nozzle passageway, as indicated by the downwardly descending solid curve (1). The horizontal solid line (3) is the sum of polymer melt flow from decompression of polymer melt and ram displacement of a pressurized runner and nozzle passageway. Thus, Fig. 139 shows that in injection molding machines utilizing one or more co-injection nozzles and having long runner systems, to achieve control over the polymer melt materials in terms of being able to provide an instantaneous and relatively constant melt flow rate of any or all materials injected, physical means preferably operative in the nozzle central channel for preventing or blocking uncontrolled onset of flow from the nozzle orifice to the central channel should be employed with means removed from the orifice for displacing the melt material, and for pressurizing the melt material.

In order to assure the achievement of an instantaneous, simultaneous, uniform high melt flow rate over all points of an orifice in an injection nozzle with long polymer flow stream passageways, either in the nozzle or in the runner or both, it is highly preferred that the orifice be blocked as by the valve means of this invention, and while the orifice is blocked, the polymer flow stream passageway be pressurized. Uniform initial flow simultaneously over all points of the orifice is then achieved by merely unblocking the orifice. Preferably however, the means for displacing the polymer material in the passageway is used to additionally pressurize the material in the passageway just before or upon unblocking of the orifice. This achieves a high pressure level as the material initially flows through the orifice. If it is then desired to further control the flow of the material to achieve and maintain a relatively constant melt flow rate during the injection cycle, the polymer material in the passageway should continue to be displaced by the displacement means during the injection cycle.

The relationships which determine the specific requirements for residual pressure and for ram movements will now be described in greater detail. As has been described previously, it is necessary that the level of prepressurization at the orifice for the C layer material be at least slightly higher than the ambient pressure at all circumferential locations about the flowing material to achieve instantaneous flow through the orifice. This prepressurization, even in the absence of further ram movement, would supply polymer for flow through the decompression of the polymer melt in the tapered conical section, in the rest of its nozzle passageway, and in the rest of the runner system. The compressed polymer nearest the orifice will have a more immediate effect on the polymer flow than will the more remote polymer. It should be appreciated, however, that even a very small amount of flow will considerably decompress this polymer melt and reduce its pressure.

Fig. 139A shows the pressure history at the orifice for a simplified case in which there is no ram movement and no flow of other materials in the nozzle central channel. As soon as the orifice opens at time a, there is flow from the orifice and the pressure starts falling. At time A, when the pressure reaches the ambient pressure (here, zero), melt flow ceases. When the orifice is closed at time b and screw recharge is actuated (screw moved forward) at time d, the melt pressure rises in the runner system and at the orifice, and, assuming sufficient time is allowed, eventually reaches a level equal to that in front of the screw. This residual pressure following completion of recharge, i.e. after time e, remains until it is released in the next injection cycle.

Fig. 139B shows the ambient pressure within the central channel, at the closed C orifice, due to a steady flow of the A and B polymer melt materials. The pressure rises from zero, initially quite rapidly as the melt flow is established, and gradually increases as the injection cavity is filled and the total resistance to flow increases. This Figure also shows that at some point in time the ambient flow is stopped and the valve means clears the melt from the central channel, at which point the pressure is again zero.

Fig. 139C shows the pressure in the C orifice for a simplified case in which there is prepressurization and in which there is ambient pressure (shown by the chain dotted curve) in the combining area of the nozzle from flow of all polymers, but in which there is no movement of the ram which moves the polymer C layer material. Again, as in Fig. 139A, there will be an initial and spontaneous flow of polymer C layer material as soon as the orifice is unblocked at a, but the flow will rapidly diminish and cease at A as the C layer material is partially decompressed by its own flow. This initial flow of C layer material will be very slight and the resulting C layer will be extremely thin in the injected article if the prepressurization level is only slightly higher than the ambient pressure at the time of unblocking. The orifice is closed at b. Screw and ram recharging respectively occur over the time spans d-e and f-g.

Fig. 139D shows a case in which there is prepressurization, ambient flow (shown by the chain dotted curve), and ram movement, but in which the ram movement is initiated somewhat after the orifice is opened at time a. There will be an initial spontaneous flow of polymer C and there will be substantial later flow of polymer C, but there will be an intermediate time, shown in the Figure as the two pressure curves approach each other, in which there will be no or an insubstantial flow of polymer C. In the Figure, A is the point at which the polymer C ceases flowing and B the point at which its flow resumes upon ram injection commencing. Ram injection starts at x and ends at y. The orifice is open over the time span a-b and time spans d-e, f-g again represent screw and ram recharging.

Fig. 139E shows the same case as in Fig. 139D, except that ram movement is started at x, somewhat before the orifice is opened at a. In Case (A), ram movement is relatively gradual such that by the time the major pressure response to the ram movement reaches the orifice, the C orifice has just opened and the initial drop in pressure seen in Fig. 139D is prevented. In Case (B), ram movement is initially very rapid so that by the time the orifice is opened, the melt pressure in the orifice is considerably higher than the residual pressure. As can be seen in Case (B), the pressurization of the C layer material, that is, the pressure difference between the pressure in the C orifice and the ambient pressure in the central channel (shown by the chain dotted curve) is nearly constant, thereby resulting in a more uniform flow and a greater more constant thickness of C throughout the injection cycle. Case (C) is like Case (A) but it illustrates that a slight pressure above the ambient pressure is sufficient to cause flow. With respect to Case (C), the pressure difference at the time of opening of the orifice is relatively small, this could have been mitigated by a higher initial pressure level or by an earlier commencement of the gradual ram movement. Letters a, b, x, y, d, e, f and g have the same significance in this Figure as Fig. 139D.

It should be appreciated that Figs. 139A to 139E are schematic and that certain portions have been exaggerated to show more clearly slight, but important differences in pressures.

The previous paragraphs describe one of the advantages of a high level of prepressurization; that is, to provide spontaneous flow upon unblocking the orifice. It was further described how the initial level of prepressurization, the residual pressure, was preferably combined with a movement of the flow displacement means, the ram, to generate an additional pressure near the orifice prior to or simultaneously with the unblocking of the orifice. There will now more fully be described an additional advantage of pressurization; that is, shortening the time response of the polymer near the orifice to a movement of the ram.

A rapid response time is of great importance to the achievement of the preferred articles of this invention; that is, of multi-layer articles in which a relatively thin buried layer extends uniformly into the marginal end portion or flange and in which the buried layer does not become excessively thin at any location. As was described previously and illustrated in Fig. 139E, a rapid pressure rise as a result of a ram movement is desired near the orifice of C in order to compensate for the rapid pressure drop which results from unblocking the orifice. If the time response is too slow, even a very rapid movement of the ram will result only in a very gradual rise in the pressure at the opposite end of the runner. For that reason, it has been found difficult to develop the desired rate of pressure rise because of the length of the runner systems present in multi-coinjection nozzle injection molding machines, and because of the high compressibility of the material in the runner system. It shall first be described how the geometry of the runner system affects the response time and then the effect of fluid compressibility will be described.

The runner system of a balanced multi-cavity system is necessarily very long to reach from a remote polymer displacement means to each of several nozzles. The fact that the multi-cavity nozzles of this invention are designed to provide a balanced flow of extremely thin layers aggravates the time response problem in that the nozzles are relatively restrictive to the ready flow of material. In particular, the presence of chokes, of the converging conical sections, and of the geometrical restrictions imposed by the flow channels of the other layers tend to result in restricted flow. These restrictions tend to isolate the key portion of the flow passageway, i.e., the orifice, from the greater volume of the rest of the runner system. This makes the nozzle orifice section relatively unresponsive to the pressure in the mass of the runner system, whether that pressure is in the form of a relatively static pressure through prepressurization or of a dynamic pressure being generated by ram movement.

It should also be noted that the co-injection nozzles of this invention may not be completely balanced with respect to time response. That is, the material entering from the rear of the nozzle shell enters a melt pool at one location which will have a quicker time response than will the location in the melt pool 180° from the entry point. As a result of this imbalance, the pressure rise may be faster at one circumferential location of the orifice than it will at another. The effect of such an imbalance would be minimized if the overall response of the system would be faster.

The effect of compressibility on the time response of the runner system will now be described. The response time of a compressible viscous fluid within a closed channel or passageway can be defined as the time required to reach a given pressure as the result of a change in pressure at the opposite end of the fluid flow channel. For a given fluid within a specific channel, the time response is directly related to the compressibility of the fluid. Compressibility is defined as the fractional decrease in unit volume as a function of a one psi increase in hydrostatic pressure. Fig. 139F shows the compressibility of high density polyethylene at a temperature of about 400°F. (204°C) as a function of pressure over the range of zero to 14000 psig (960 bars). High density polyethylene is a material which may be utilized in forming some layers of the articles of this invention. Other polymer melts utilized herein will have similar curves. It is particularly significant that the compressibility is much higher at low pressures than it is at higher pressures. The compressibility at atmospheric pressure is 13.2x10⁻⁶(psi)⁻¹ (1.9x10⁻⁴(bar)⁻¹) while at 8000 psi (551 bars) it is only 6.5x10⁻⁶(psi)⁻¹ (9.4x10⁻⁵(bar)⁻¹). This means that a polymer melt of a material such as polyethylene will respond considerably faster to a given ram displacement if the melt within the runner system is already partially compressed. Stated differently, if one is compressing a polymer melt in a runner from atmospheric pressure to a very high pressure level, the initial portion of the pressurization will be considerably slower than the final portion.

By the preferred method of this invention the initial, slow pressurization is effected as early as possible in order for the entire runner system to be at the partially elevated pressure before that portion of the cycle in which rapid response is most critical. In particular, the initial pressurization occurs as soon as the valve means have closed following the previous injection. The level to which the system is pressurized at this early time may be limited, as has been discussed previously, by mechanical considerations such as leakage and breakage as well as by the possibility of obtaining excessive flow of the buried layer as soon as the orifice is unblocked.

The following will explain a method of this invention utilized for prepressurizing the runner system, which is herein meant to include the feed block and passageways in the nozzle assembly. At the end of an injection cycle when the ram is at its lowest volume, while the orifices in the co-injection nozzle are blocked by the valve means, a forward movement of the reciprocating screw in the extruder is initiated to provide material to and to pressurize the ram and runner system. Shortly before or shortly thereafter, the ram is retracted upward to increase the volume of the runner system. As the rams move upward, the pressure in the system tends to drop while the extruders are filling the expanded volume with polymeric melt material. When the rate of volume expansion in the ram equals the rate of melt replacement, the pressure in the ram runner system tends to remain substantially uniform. However, usually, the ram volume increases at a rate faster than the melt replacement rate and the pressure therefore tends to decrease. Given this dynamic system, there tends to be a pressure distribution or variation throughout the runner system with the lowest pressure usually being adjacent the ram plunger face and the highest pressure near the extruder nozzle. When the ram retracts to its furthest point and stops, the extruder continues to move melt material forward into the runner system. As it does the pressure increases. Once the extruder stops pushing material into the system, and the check valve prevents back flow of material toward the extruder, the pressure in the runner system, at this point, will have a distribution or profile which, given sufficient time, will equilibrate or become substantially uniform throughout. This amount of pressure in the system, whether it be non-uniform or substantially uniform, is herein referred to as the recharge pressure, baseline pressure or residual pressure. Thus, the residual pressure measurements will vary depending on where the measurement is taken in the system and when the measurement is taken. In accordance with the methods of this invention, the residual pressure employed in the runner system of the preferred apparatus of this invention is preferably from about 1000 psi to about 5000 psi (69 to 345 bar), more preferably from about 2000 to 4000 psi (138 to 276 bar). With this apparatus, some slow leakage may tend to begin to occur at some pressure above 4000 psi (276 bar).

In accordance with the above, preferred methods for prepressurization practiced in accordance with this invention involve imparting to the polymer melt material in the runner system while the orifice is blocked by the valve means, a pressure greater than the ambient pressure in the system. Although the pressure imparted can be the residual pressure, preferably the level of pressure is greater than the residual pressure. The pressure is imparted by the means for displacing or moving the polymer material through the runner system. This can be a screw, or a reciprocating device such as a screw or ram. In this invention, the preferred means are the rams. The ram is moved forward to compress the melt and increase the pressure of the melt in the runner system including the nozzle passageway and its orifice. Subjecting a polymer melt material in the runner system, particularly in the passageway and at the blocked orifice, to any pressure greater than the residual pressure in the system can be referred to as further prepressurizing of the material. Further prepressurization can be effected prior to reaching equalization of the residual pressure in the system. It should be noted that the measured or discerned level of residual pressure can be either less than equilibrium or greater than equilibrium depending on where and when the measurement is effected. It is preferred to obtain as high as possible an average residual pressure without causing leakage of the material past the valve means into the central channel and without damaging the nozzle shell cones, particularly their tips, or damaging the plurality of seals throughout the system. The amount of further prepressurization will vary but it should be at a level sufficient to provide a rapid, or substantially simultaneous uniform initial onset flow over all points of the orifice, that is, one which will substantially reduce the time bias of the leading edge of the internal layer or layers in the marginal end portion of the container. It is particularly preferred that the prepressurization be at a level which is greater than that required to cause the polymer melt material in a passageway to flow spontaneously into the central channel once its orifice is unblocked, and that it be at a pressure which will create, when the orifice is unblocked, a sufficient surge of material over all points of the orifice into the central channel when the flow stream is considered relative to a plane perpendicular to the axis of the central channel. Preferably, the level of initial prepressurization is at least about 20% or more greater than the ambient pressure, or, than the level of pressurization necessary to cause the polymer melt material to flow into the central channel once the orifice is unblocked. The prepressurization level desirably is sufficient to densify the material in the passageway adjacent the orifice to a density of from about 2 to about 5% or more greater than atmospheric density. As previously stated, the amount of pressure sufficient to cause the material to flow into the central channel is greater than the ambient pressure of the already flowing materials in the central channel (See Fig. 139E).

It is also preferred that the level of prepressurization is sufficient to overcome any non-uniformities in flow due to imperfections in the uniformity and the symmetry of the designs of the structure of the passageway orifice. The advantages of prepressurization are increasingly significant in multi-coinjection nozzle injection molding machines in that the advantages in overcoming temperature variations and other variations, for example, within tolerances due to machining are increased and are more significant relative to obtaining injected articles from one co-injection nozzle having the same or substantially the same characteristics as the injected articles from each of the other co-injection nozzles. With the preferred methods of prepressurizing a polymer stream, particularly that of the internal layer material(s), as the prepressurized blocked orifice is being unblocked by movement of the valve means, there is included the step of changing the rate of movement of the displacement means, for example, by increasing the rate of displacement of the ram, to attempt to achieve or approach and maintain a substantially steady flow rate of the material through the orifice into the central channel. Preferably, the steady flow rate is the desired design flow rate, and preferably the subsequent pressure is maintained for from about 10 to about 80 preferably to about 40 centiseconds at a pressure level sufficient to provide and maintain a uniform thickness about and along the annulus of the material flowing from the orifice.

This invention includes methods of initiating the flow of a melt stream of polymeric material substantially simultaneously from all portions of an annular passageway orifice into the central channel of a multi-material co-injection nozzle, comprising, providing a polymeric melt material in the passageway while preventing the material from flowing through the orifice into the central channel (preferably with physical means such as the valve means of this invention), flowing a melt stream of one or more polymeric material(s) through the central channel past the orifice, subjecting the melt material in the passageway to pressure which at all points about the orifice is greater than the ambient pressure of the flowing stream at circumferential positons which correspond to the points about the orifice, the pressure being sufficient to obtain a simultaneous onset flow of the pressurized melt material from all portions of the annular orifice, and, allowing the pressurized material to flow through the orifice to obtain said simultaneous onset flow.

This invention also includes methods of initiating a substantially simultaneous flow of a polymeric melt material which will form an internal layer of a multi-layer injection molded article, from an annular passageway orifice such that the internal layer material surrounds another polymeric melt material stream already flowing in the central channel, wherein the co-injection nozzle is part of a multi-coinjection nozzle, multi-polymer injection molding machine having a runner system for polymeric melt materials which extends from sources of polymeric material displacement to the orifices of the co-injection nozzle, comprising, blocking an annular orifice with physical means, and while so blocking the orifice, moving polymeric melt material into the runner system, and while flowing polymeric melt material through the central channel past the blocked orifice, subjecting the polymeric melt material in the runner system to the pressure which at all points about the blocked orifice is greater than the ambient pressure of the flowing melt material stream at circumferential points which correspond to said points about the orifice, wherein the pressure is sufficient to obtain the substantially simultaneous onset flow, and unblocking the orifice to obtain said flow into the central channel. With respect to the aforementioned methods of initiating substantially simultaneous flows, preferably, the material pressurized is that which will form the internal layer of a multi-layer article injected from the nozzle, the subjected pressure is uniform at all points about the orifice, and the orifice has a center line which is substantially perpendicular to the axis of the central channel. During the allowing step there is preferably included the step of continuing to subject the material in the passageway to a pressure sufficient to establish and maintain a substantially uniform and continuous steady flow rate of material simultaneously over all points of the orifice into the central channel. The subjected pressure is sufficient to provide the onset flow of the internal layer material with a leading edge sufficiently thick at every point about its annulus that the internal layer in the marginal end portion of the side wall of the article formed is at least 1% of the total thickness of the side wall at the marginal end portion. In pressurizing the runner system, the pressure subjecting step is preferably effected in two stages, first by providing a residual pressure lower than the desired pressure at which the material is to flow through the blocked orifice to increase the time response of the polymer melt material in the runner system to subsequent movements of the source of polymeric melt material displacement means, and then before or upon effecting the allowing step, raising the level of pressure to the desired pressure at which the internal layer material is to flow through the orifice. The pressure raising step may be executed gradually but preferably rapidly, just prior to or upon effecting the allowing step. A polymer supply source exterior of the runner system such as a reciprocating screw upstream of a check valve can be employed to pressurize the polymeric material in the runner system. In the two stage pressurizing method, the providing of the residual pressure can be effected by reciprocating the source of polymer melt material displacement.

This invention includes methods of prepressurizing the runner system of a unit-cavity or multi-cavity multi-polymer injection molding machine for forming injection molded articles, having a runner system for polymer melt materials which extends from sources of polymer melt material displacement to the orifices of a co-injection nozzle having polymer melt material passageways in communication with the orifices which, in turn, communicate with a central channel in the nozzle, which in some embodiments basically comprises, blocking an orifice with physical means to prevent material in the passageway of the orifice from flowing into the central channel, and, while so blocking the orifice, retracting the polymer melt material displacement means, filling the resulting volume in the runner system with polymer melt material from a source upstream relative to the polymer melt material displacement means and external to the runner system, the amount of retraction and the pressure of the polymer melt with which the volume is filled being calculated to be just sufficient to provide that layer's portion of the next injection molded article and the pressure of the volume-filling melt being designed to generate in the runner system a residual pressure sufficient to increase the time response of the polymer melt material in the runner system to subsequent movements of the source of polymer melt material displacement means, and prior to unblocking the orifice, displacing the polymer melt material displacement means towards the orifice to compress the material further and raise the pressure in the runner system to a level greater than the residual pressure and sufficient to cause when the orifice is unblocked, the simultaneous onset flow. These methods can also be effected while the orifice is blocked, by moving melt material into the portion of the runner system extending to the blocked orifice, discerning the level of residual pressure of the polymer melt material moved into said portion of the runner system, and displacing the melt material in the runner system towards the orifice to compress the material and raise the pressure in the runner system to a level greater than the residual pressure and sufficient to cause the simultaneous and preferably uniformly thick onset flow.

This invention also includes other methods of effecting prepressurization. The invention includes a method of prepressurizing the runner system for a polymer melt material of a multi-cavity multi-polymer injection molding machine, which extends from a source of polymer melt material displacement to the orifice of a co-injection nozzle having a polymer melt material passageway in communication with the orifice which in turn communicate with a central channel in the nozzle, which comprises, blocking the orifice with physical means to prevent polymer melt material in the passageway of the orifice from flowing into the central channel, and, while so blocking the orifices, moving polymer melt material into the runner system, discerning the level of residual pressure of the polymer melt material moved into the runner system, and displacing the polymer melt material in the runner system toward its blocked orifice to compress the material and raise the pressure in the runner system to a level greater than the residual pressure and which is sufficient to cause, when the orifice is unblocked, a simultaneous and uniformly thick onset flow of the prepressurized polymer melt material over all points of the orifice into the central channel. This method can be employed for any or all of the melt materials supplied to a co-injection nozzle, or to a plurality of co-injection nozzles of a multi-cavity multi-polymer injection molding machine.

Other prepressurization methods are those of forming a multi-layer plastic article with a marginal end portion, an outer surface layer, and an inner surface layer and at least one internal layer therebetween, such that the leading edge of the internal layer extends substantially uniformly into and about the marginal end portion of the article or container, wherein the method comprises the same steps as the prepressurization methods of this invention relating to extending the leading edge of the internal layer uniformly into the marginal end portion of an article or parison or container having a side wall.

Another method of prepressurization of this invention is that of forming an open-ended, five layer plastic article having a side wall with a marginal end portion, an outer surface layer, an inner surface layer, an internal layer, and an intermediate layer between the internal layer and each surface layer in an injection cavity of a multi-cavity multi-polymer injection molding machine such that the leading edge of the internal layer extends substantially uniformly into and about the marginal end portion, wherein the multi-cavity injection molding machine has a runner system which extends from sources of polymer melt material displacement to a co-injection nozzle having a polymer melt material flow passageway for each material which is to form a layer of the article, a central channel, and an orifice for each passageway in communication with its passageway and the central channel, means for displacing the polymer melt materials to the orifices and into the central channel of the co-injection nozzle, there being a displacing means for each material which is to form a layer of the article, means for providing polymeric melt materials into the runner system, and physical means for blocking and unblocking the orifices, which comprises, blocking at least the orifices for the materials which are to form the internal and intermediate layers, with physical means to prevent said materials from flowing through their blocked orifices into the central channel, moving polymer melt material into the runner system, discerning the level of residual pressure of the polymer melt materials that have been moved into the runner system, displacing the polymer melt materials for forming the internal layer and the intermediate layers in their passageways towards their blocked orifices to compress the materials and raise the pressure in the system for those materials to a level greater than the residual pressure and sufficient to cause uniform and simultaneous onset flow of each said prepressurized layer materials over all points of their orifices into the central channel when their orifices are unblocked, flowing the inner surface layer material into and through the central channel while preventing the flow of the internal and intermediate layer materials into the central channel, flowing the outer surface layer material through the central channel in the form of an annular flow stream about the flowing stream of inner surface layer material, unblocking the orifices of the prepressurized internal and intermediate layer materials, flowing the prepressurized internal and intermediate layer materials into the central channel into or onto the interface of the flowing inner and outer surface materials such that the internal layer material and the intermediate layer materials respectively have a rapid initial and simultaneous onset flow over all points of their respective orifices into the central channel and each forms an annulus about the flowing inner surface layer material between it and the outer surface layer material, and such that the leading edges of the respective annuluses of the internal layer material and the intermediate layer materials each lie in a plane substantially perpendicular to the axis of the central channel, and, injecting the combined flow stream of the inner, outer, internal layer materials into the injection cavity, in a manner that renders said leading edges substantially uniformly into and about the marginal end portions of the container.

Another method included within the scope of this invention for initiating a substantially uniform onset flow of one or more melt material streams of polymeric materials into the central channel of a nozzle of an injection molding machine for forming one or more internal layers of a multi-layer plastic article injected from the nozzle and having an outer surface layer, an inner surface layer and one or more internal layers therebetween, comprises utilizing one or more condensed phase polymeric materials as the one or more internal layer melt stream or streams of polymeric material(s), flowing the inner layer melt stream into the central channel as a core stream past said at least one orifice, flowing the outer layer melt stream into the central channel to surround the already flowing core stream, providing the combined flowing streams for the outer and inner layers with a selected ambient pressure in the central channel, supplying said one or more internal layer melt streams of condensed polymeric material into their passageways, imparting a selected first pressure to each of said one or more internal layer melt streams at said at least one orifice, said first pressure being below that pressure which, relative to the ambient pressure, would cause the material(s) for the internal layer(s) to flow into the central channel, adjusting the first pressure to a second level equal to or just below the ambient pressure of the materials flowing in the central channel to compress the one or more internal layer melt streams to provide a flow response into the central channel which would be more rapid than without said adjusted first pressure, and to prevent back flow of already flowing material into the at least one internal orifice, and causing the internal layer melt stream or streams to flow rapidly through the at least one orifice into the central channel, by creating a rapid change in the relative pressures between the one or more internal layer materials at said at least one orifice and the ambient pressure in the central channel, such that the pressure of the one or more internal layer material(s) is rapidly changed to a level sufficiently high relative to the ambient pressure that there is established a substantially uniform onset flow of said one or more internal layer material(s) as one or more annular streams substantially simultaneously over all points of said at least one orifice into the central channel. In the aforementioned method, the rapid change in relative pressures can be effected by rapidly increasing the pressure of the one or more internal layer materials, or by decreasing the ambient pressure of the already flowing streams in the central channel, or by a combination of both. This method is applicable to forming five layer articles wherein three internal layers are injected, for example an internal barrier layer having to either of its sides an intermediate adherent layer.

A "condensed phase" material here means a material in which there is no significant gaseous or vapor phase when the material is subjected to atmospheric pressure or higher. A material containing an incidental quantity of dissolved water is herein considered to be a condensed phase material, even though dissolved water in sufficient amounts may cause some foaming somewhat at elevated temperatures and pressures. Foaming would be undesirable It is to be noted that in the processes of this invention, no foaming has been observed. Condensed phase materials are relatively incompressible compared to mixtures or solutions used to make foams, and they have a measurable and substantive change of density with the high pressure levels used in injection processes.

Another method of initiating a substantially uniform flow of a melt stream material over all points of an annular internal passageway orifice into a central channel of a multi-material co-injection nozzle to form an internal layer of a multi-layer injected article involves preventing the internal layer from flowing through its orifice, pressurizing the material in the passageway while continuing to prevent its flow, said pressurization being sufficient to provide a pressure in the internal layer material which is greater than the ambient pressure in the nozzle central channel and greater than the pressure being imparted to the flowing other material, and said pressurization further being sufficient to densify the internal layer material in the passageway adjacent the orifice and to create a high initial rate of flow of internal layer material simultaneously and uniformly through all points around the passageway orifice when the material is permitted to flow therethrough, and permitting said pressurized internal layer material to flow through said orifice in said simultaneous and uniform initial manner. This method can be utilized with respect to forming a three or five layer material wherein the internal layer material surrounds a stream of another melt material already flowing in the central channel and the level of pressure is sufficient to cause the internal layer material to insert itself annularly about the already flowing material from the third nozzle orifice, usually the A layer material, to provide a combined stream which includes a substantially concentric and radially uniform core of material from the third orifice, a next surrounding uniform, substantially concentric layer of material from the second orifice, usually the C layer material, and surrounding that material, an encompassing uniform, substantially concentric layer of material flowing from the first orifice. Preferably this method is effected with tapered passageways for increasing the volume of compressed material adjacent the orifice which will initially flow into the central channel when the orifice is unblocked. Preferably the pressure on the internal layer material is from about 20% or more higher than the ambient pressure of the already flowing materials in the central channel. An additional pressure can be imparted upon the internal layer material once it is allowed to flow to maintain an effective total pressure sufficient to approach and maintain a substantially steady flow rate of the material through the second orifice into the channel. It is advantageous that the internal layer passageway be tapered toward its orifice to increase the volume of compressed material adjacent the orifice which will initially flow when the orifice is unblocked, relative to an untapered passageway having an orifice of the same dimensions.

Still another method of effecting a substantially uniform onset flow simultaneously over all portions of an annular passageway includes imparting a first pressure which is insufficient to cause leakage of the condensed phase materials through the blocked orifices into the central channel or from one orifice into another orifice, yet which would be sufficient to cause the materials to flow into the central channel if their flows were not prevented or their orifices were unblocked, and, prior to allowing them to flow through the passageway orifices, separately and independently subjecting the materials in the passageways to a second pressure greater than the first pressure and sufficient to create, when their orifices are unblocked, a surge of said polymeric materials and uniform onset annular flows thereof into the central channel when the leading edges of the respective flow streams are considered relative to planes perpendicular to the axis of the central channel, said second pressure being of a sufficient level and being imparted for a duration sufficient to establish and maintain the substantially uniform initial flows simultaneously over all points of the orifices into the central channel.

Another method of this invention is that of forming in a co-injection nozzle a multi-layer substantially concentric combined stream of at least three polymeric materials, which includes utilizing valve means in the central channel operative adjacent the orifices to block and unblock the second orifice and to prevent and to allow the flow of internal polymer material through the second orifice and for independently controlling the flow or non-flow of the core material through the third orifice, preventing flow of polymer material from all of the orifices, continuing to prevent flow of polymer material through the second orifice while allowing flow of structural material through one or both of the first and third orifices, then, subjecting the polymer material in the second passageway to a first pressure which would be sufficient to cause the material to flow into the central channel if its orifice was unblocked, prior to allowing flow through the second passageway, subjecting said material in the second passageway to a second pressure greater than the first pressure yet less than that which would cause leakage of polymer material through the orifice past the blocking valve means into the channel, said second pressure being sufficient to create when said orifice is unblocked, a surge of polymer material and a uniform onset annular flow of polymer material into the central channel when the flow stream is considered relative to a plane perpendicular to the axis of the central channel, increasing the rate of movement of said polymer material to approach and maintain a substantially steady flow rate of said material through the second orifice into said channel, preventing the flow of polymer material through the third orifice while allowing the second pressurized flow of material through the second orifice, to knit the intermediate layer material with itself through the core material, preventing the flow of polymer material through the second orifice while allowing flow of polymer material through the first orifice and, either moving the valve means forward to push the knit intermediate layer forward and to substantially encapsulate the knit internal layer with material from the first orifice, or, accumulating material that has flowed from the third orifice at the forward end of the valve means, and moving the valve means forward to substantially encapsulate the knit intermediate layer material with the accumulated material from the third orifice.

The above method can include she steps of subjecting said material in the first passageway to a second pressure greater than the first pressure and sufficient to create when its orifice is unblocked, a surge of polymer material and a uniform onset annular flow of polymer material into the central channel when the flow stream is considered relative to a plane perpendicular to the axis of the central channel, said second pressure being less than that which would cause leakage of polymer material past the blocking valve means into the channel, allowing the flow of material through the first orifice, and increasing the rate of said forward movement of said polymer movement means to attempt to achieve and maintain a substantially steady flow rate of said material through the first orifice into said channel.

The above method can further include the steps of, prior to allowing the flow of core structural material through the third orifice for forming the inner layer of the article, subjecting said material in the third passageway to a second pressure greater than the first pressure and sufficient to prevent any detrimental pressure drop when its orifice is unblocked, and upon unblocking of the orifice, to create an immediate flow response of polymer material into the central channel, said second pressure being less than that which would cause leakage of polymer material past the blocking valve means into the channel, allowing the flow of material through the third orifice, and modifying the rate of said forward movement of said polymer movement means to maintain a modified substantially steady flow rate of said material through the third orifice into said channel.

Another method of this invention is that of forming in a co-injection nozzle a multi-layer substantially concentric combined stream of at least three polymeric material s for injection as a combined stream into a cavity to form a multi-layer article, the combined stream having an outer layer of structural material for forming the outer layer of the article, a core of structural material for forming the inner layer of the article, and one or more intermediate layer(s) of material for forming an internal layer(s) of the article, which comprises, providing the co-injection nozzle means of this invention having at least three polymer flow stream passageways and orifices, valve means operative in the nozzle central channel and a source of polymer movement for each polymer material which is to form a layer of the structure to move each said material to its passageway and its orifice in the co-injection nozzle, preventing flow of polymer material from all of the orifices, continuing to prevent flow of polymer material through the second orifice while allowing flow of structural material through one or both of the first and third orifices, then, prior to allowing flow through the second passageway, subjecting said material in the second passageway to a pressure less than that which would cause leakage of polymer material past the blocking valve means into the channel, and yet sufficient to create when its orifice is unblocked, a surge of polymer material and a uniform onset annular flow of polymer material into the central channel when the flow stream is considered relative to a plane perpendicular to the axis of the central channel, allowing said surge and uniform onset flow of intermediate layer material through the second orifice, maintaining a pressure on said polymer material sufficient to approach and maintain a substantially steady flow rate of said material through the second orifice into said channel, preventing the flow of polymer material through the third orifice while allowing the second pressurized flow of material through the second orifice, to knit the intermediate layer material with itself through the core material, preventing the flow of polymer material through the second orifice while allowing flow of polymer material through the first orifice and, either moving the valve means forward to push the knit intermediate layer forward and to substantially encapsulate the knit internal layer with material from the first orifice, or, accumulating material that has flowed from the third orifice at the forward end of the valve means, and moving the valve means forward to substantially encapsulate the knit intermediate layer material with the accumulated material from the third orifice.

Another method of forming in a co-injection nozzle a multi-layer substantially concentric combined stream of at least three polymeric materials in the aforementioned co-injection nozzle means involves controlling the thickness, uniformity and radial position of the internal layer in the combined stream by providing and utilizing means either in all annular polymer flow stream passageways or at least in the first and second passageways for balancing the flow of the respective polymer flow streams passing through the first and second passageways such that, as the respective streams enter the central channel , each flow stream is substantially uniform in terms of pressure and temperature about its circumference such that in the combining area of the nozzle, each of the respective layers which form the combined stream are substantially concentric relative to each other. Preferably the core structural material is concentric relative to the axis of the central channel when the material for forming the outer layer of the article is introduced into the central channel, and preferably both the core material and the outer layer material are substantially concentric and have their midpoints substantially on the axis of the central channel when the internal layer is introduced between them in the combining area of the central channel.

Yet another method of forming in a co-injection nozzle a multi-layer substantially concentric combined stream of the at least three polymeric materials for injection into a cavity to form a multi-layer article, wherein the article has one or more intermediate layers of material for forming an internal layer of the article, comprises, providing the co-injection nozzle means of this invention having at least three polymer melt flow stream passageways and orifices and, utilizing valve means operative in the nozzle central channel for blocking the first and second orifices, subjecting the polymer materials in the passageways blocked by said valve means to a first pressure sufficient to cause the blocked materials to flow into the central channel if the valve means were not blocking the first and second orifices, subjecting the materials in the passageways to a second pressure greater than the first pressure, said second pressure being sufficient to create a uniform onset annular flow into the central channel having along the onset edge a plane substantially perpendicular to the axis of the central channel, said second pressure being provided while the valve means continues to prevent the respective materials from flowing through the first and second orifices, just before moving the valve means to unblock said first and second orifices, after subjecting the materials in the passageways to said second pressure, unblocking the first and second orifices by moving the valve means to provide a uniform onset annular flow of each of said materials into the central channel, said onset flow in the channel being in a vertical plane relative to the axis of the central channel, and maintaining a pressure on said materials at least for from about 10 to about 80 centiseconds sufficient to maintain a steady flow of said polymer materials through said first and second orifices into the central channel, and to provide and maintain uniform thickness about and along the annulus of the material flowing from the first orifice and the material flowing through the second orifice.

Other methods of prepressurization and methods of utilizing prepressurization to advantage are disclosed elsewhere herein.

The nozzle valve means alone, or, preferably, in combination with the pressurization and polymer flow movement provided by the polymer displacement means, which in the preferred embodiment are the five rams, one for each material which is to form a layer, provides precise independent control over the flow of each of the polymer flow streams and concomitant control over thickness and location of each of the layers of the multi-layer wall of the injected article. Independent control over the flow stream of the inside surface layer A material and over the flow stream of the outside surface layer B material provides control of the layers relative to each other, provides control over the relative thickness of each layer, provides control over the location of the interface between the flowing materials of those layers and thus provides control over the location of the internal layer C or layers C, D, E situated between the surface layers. Likewise, independent control over the flow of the materials of layers D and E can provide control over the location of layer C. Independent control over the flow of the internal layer or layers provides control over the thickness of the layer or layers. Thus, one or more of the internal layers C, D, E can be controlled to be very thin, and its location controlled, which is of substantial economic and technical benefit where, for example, the adhesive layer material is relatively expensive and more so the internal layer C is a relatively expensive polymer functioning as a gas barrier. If the barrier material is adversely sensitive to one or both of the environments inside or outside the injected article, control over the location of the barrier layer within the wall of the article is important in order to maximize the effectiveness of the protection of the barrier layer which is provided by the layer or layers on either side of the barrier layer.

For example, when it is desired to form a container for packaging an oxygen sensitive food product which requires thermal processing in the container at a temperature which sterilizes the packaged food, the injection molded or blow molded container utilized, while preferably having a bottom wall whose average thickness is less than the average thickness of the container side wall, preferably also has a barrier layer which is thicker in the bottom wall relative to the bottom wall total thickness than it is in the side wall relative to the side wall total thickness. Although the total thickness of the bottom wall may be changed relative to the total side wall thickness by changing the geometry of the blow mold tooling used for making the parison from which the container is blown, or the temperature of the tooling or of the melt materials, with the same tooling and without such modifications, the barrier layer may be made thick in the bottom wall relative to its thickness in the side wall by selectively reducing the rates or volumes of flow of the one or both of the structural materials during that portion of the injection profile which forms the bottom portion of the parison, and which when blow molded, forms the bottom wall of the container. This permits thinning one or both of the structural layers A and B in the bottom wall and thickens the C layer in the bottom wall regardless of whether the rate or volume of flow of the barrier layer C is held constant or is increased. Alternatively, during a said injection profile portion which, as disclosed in Fig. 142, can be from about 1.0 to about 1.1 second, the flow rate of each structural layer A, B and of each adhesive material D, E may be held constant while the flow rate of the barrier layer C is rapidly increased. Preferably, the flow rates of both materials A and B are decreased while the flow rate of barrier layer C is increased or held constant. These techniques also thicken the barrier layer C in the bottom wall, relative to that layer's thickness in the side wall.

To move the location of, for example, a moisture sensitive barrier layer in the bottom wall away from the inside surface of the container to provide greater protection to the barrier from moisture in the container, the flow rate of the outer material B is decreased, the flow rate of the inner material A is either increased or held constant, and the flow rate of the barrier layer C is held constant.

Having the ability to provide a thicker internal or barrier layer relative to the total thickness of all layers, in the bottom wall of containers of this invention, provides economic advantages over other containers, for example multi-layer thermoformed plastic containers wherein the internal layer is of a uniform thickness relative to the total thickness throughout the bottom and side wall, each of which are stretched uniformly from a blank during formation of the container. Therefore, providing a thick internal layer in the bottom wall of a thermoformed container requires that the layer be thick in the blank and necessarily means that the layer in the thermoformed container made from the blank will be as thick relative to the total thickness, in the side wall as in the bottom wall.

Another advantage provided by the use of an individual source of polymer displacement and pressurization such as a ram for each layer is that the capability of the valve means to rapidly traverse each and all orifices, particularly when they are narrow and close to each other, minimizes the effect of slight errors in machine tolerances or design of, say, a choke in one or more shells or in one or more but less than all of the eight co-injection nozzles, and minimizes the effect of any such errors in the initiation and termination of flow substantially simultaneously and substantially identically in all co-injection nozzles.

Although the previously discussed preferred embodiment of the process of this invention which provides the aforementioned precise independent control employs a ram for each material which is to form a layer of the article, it is to be appreciated that a less preferred process of this invention uses a single ram for a material which will comprise more than one layer. Though less preferred, this common ram system with the valve means provides sufficient independent control over the layers. More particularly, if the outer layer and the inner layer are of the same material, a single material movement means, displacement means or pressurization source can be employed for both streams. The features of this invention which permit the use of a common source of pressurization for a material which forms two layers of an article, are the valve means of this invention which permits the independent stopping and starting the flow of these layers of common material, even when both are pressurized, and the design of the runner system which provides an equal flow path for each melt stream of material that forms a corresponding layer of the item to be injected. Somewhere between the ram and the nozzle orifices, the flow channel for the common material is split into two flow channels to take the material for the two layers to each co-injection nozzle.

Moreover, in a preferred embodiment of such a common ram system, even the relative flows of the two streams of common material, for example, for the two structural layers can be controlled by moving the pin within the sleeve to partially block and reduce the flow of one of the melt streams, for example, of the A layer material through the sleeve port. To achieve the maximum range of control, it is preferred that, for example, the flow resistance of the melt channel for the inner A layer be less than that forming the outer B layer when the sleeve aperture is fully open. The melt channel in this context is measured from either the pressure source or from the point of splitting or branching into the two flow streams, to the central channel. In this way it will be possible to vary the flow of the inner A layer to be either greater or less than that of the outer B layer by utilizing the valve means for controlling the degree of blockage. This will apply whether the article to be formed is to have three, five or any plural number of layers. In the preferred embodiment of a co-injection nozzle of such a common ram system, wherein the passageway for the A layer material into the central channel is by design larger than the size of the other orifices, with a ram common to a material for the A and B layers, equal flow of the common material can be provided with the valve means by using the pin to partially block the entrance, while the orifice for the B layer is unblocked. As for controlling the radial distribution of layers in a combining area or injection cavity by use of the common ram system, it is effected more by pin manipulation than by ram displacement profile. For example, to decrease the outside structural layer thickness in order to shift the internal barrier layer, or the adhesive and barrier layers, toward the outside of a parison or container, the solid pin is withdrawn to increase the size of the unblocked portion of the entrance of the passageway for the A layer material. This increases the flow of the polymer material for the inside layer, A, and decreases the amount of material available for forming the outside layer, B, and thereby attains the desired radial layer distribution. When using the common ram system with valve means, in knitting the internal layer with itself by moving the pin forward to block the flow of the common material for the A layer through the sleeve port, more of the common material flow is diverted to the passageway for the B layer. This may be undesirable for certain high barrier container applications because it may result in an interruption in the continuity of the internal layer material in the bottom of the container, and in an internal barrier layer being too close to the inside of the container by reason of the increased flow and thickness of the B layer material. However, these results may be minimized or prevented by reducing the displacement of the common ram upon blocking of the entrance for the A layer.

Similarly, in the case of a five, seven or comparable layer article, a common pressure source can be employed for two or more intermediate layer material streams when they are comprised of the same material. In the case of a five layer article of this invention, the flow of the intermediate layer stream, here, D, next to the inner layer stream, here, A, can be modulated by partially blocking its orifice with the sleeve. Again, as previously explained in relation to the A and B layer materials, to achieve the maximum range of control, the resistance to flow in the intermediate layer D stream next to the inner layer stream A should be less than that of the intermediate layer stream, here, E, next to the outer layer stream, B, when both orifices are completely unblocked.

Utilizing the aforementioned common ram system, the previously discussed delamination consideration between the C layer and the inner layer A in five layer injection molded articles can be avoided by using the common ram to prepressurize the common adherent material for the intermediate E and D layers to the same level while their respective fourth and fifth orifices are blocked by the valve means, and withdrawing the sleeve to fully unblock the orifices for the E and C layers but only to partially block the orifice for the D layer. This will cause the desired flow of an abundance of E material into the central channel which is sufficient to flow about the leading edge of the C layer material, join the leading edge of the D layer and fully encapsulate the C layer leading edge with intermediate adherent material. Thus, while the common ram system does not provide the same flexibility and precise degree of control as is available with the preferred individual ram-to-individual layer system, it does provide a suitable alternative.

Another and significant feature of the independent layer control provided by either the single ram-for-each layer system or the common ram-for-two layers system is that they can be used according to the present invention to effect foldover of the terminal end of one or more of the internal layers. The preferred flow of polymer material in the nozzle central injection channel and in the injection cavity is laminar, wherein linear polymer flow velocity is maximum at a fast flow streamline, which, in the injection cavity, usually is at or near the center line of polymer flow and diminishes on either side thereof. The location of the fast flow streamline will, however, be other than the center line if the two wall temperatures are different or if the viscosity of the inside polymer stream is different from the outside stream. The flow of polymeric material in the nozzle injection channel has a flow streamline which corresponds to the fast flow streamline in the injection cavity. By selectively changing the flow of one or more polymer streams on one side of an internal layer, relative to the flow of one or more polymer streams on the other side of that internal layer, during a part of the injection cycle as described below, the location of the internal layer relative to the fast streamline may be selectively varied or moved so as to cause the terminal end of the internal layer to fold over.

If it is present, time bias of initial flow of the internal layer material into the nozzle central channel around its circumference, or velocity bias, can, as stated previously, result in the terminal end of the internal layer having different axial positions at various sections around the circumference of the injected article. Should this flow condition continue, the terminal end of the internal layer would not extend all the way into the end portion of the injected article at all sections around its circumference. Such result of time bias or velocity bias can be substantially reduced by folding over the biased terminal end to provide a substantially unbiased overall leading edge of the internal layer. It may be reduced by folding over at least a portion, preferably the leading portion of the marginal end portion of the internal layer by selective independent control of the location and flow of the polymer streams, as stated above, so as initially to introduce the internal layer at a flow streamline which is not coincident with the fast flow streamline and then moving the layer to a second location which is either relatively more proximate to, or substantially coincident with the fast flow streamline or is across the flow stream, i.e., past the fast flow streamline where the flow velocity is maximum, to a second location on the other side of the fast flow streamline and not too far from it. As a result, at the conclusion of polymer movement in the injection cavity, as illustrated in Fig. 135 the biased terminal ends, here designated 1117 and 1119, of the folded over portion of the internal layer have been folded over along a circumferential fold line so that a folded over part 1121 of the internal layer extends into the marginal end portion of the injected article. Thus, at the conclusion of polymer movement in the injection cavity, the internal layer extends into the end portion of the injected article at substantially all sections around its circumference.

Broadly, foldover is achieved by a method, according to the present invention, of injecting a multi-layer flow stream comprising at least three layers into an injection cavity in which the speed of flow of the layered stream is highest on a fast flow streamline positioned intermediate the boundaries of the layered stream. The method comprises the steps of establishing the flow of material of a first layer of the flow stream and the flow of material of a second layer of the flow stream adjacent to the first layer to form an interface between the flowing materials of the first and second layers. In the preferred embodiment, the first and second layers of the multi-layer flow stream form the inside and outside surface layers of the injected article. The interface between the flowing materials of the first and second layers is positioned at a first location which is not coincident with the fast flow streamline. This is accomplished by selective control over the flow of the first layer material and of the second layer material. The flow of material of a third layer of the flow stream is then interposed between the first and second layers with the location of the third being at a position which is not coincident with the fast flow streamline. As noted above, the third layer material forms an internal layer of the injected article and may be a moisture-sensitive oxygen barrier material. The location of the third layer of the multi-layer flow stream is then moved to a second location which is substantially coincident with the fast flow streamline. Preferably, the third layer is moved to the second location when or shortly after its flow has been interposed between the first and second layers, and, most preferably, when or shortly after the flow of the third layer material has been interposed between the first and second layers at substantially all places across the breadth of the layered stream.

The present foldover invention also broadly encompasses the movement of the location of the third layer of the multi-layer flow stream from a first location on one side of the fast flow streamline to a second location which is intermediate to the first location and the fast flow streamline or more proximate to the fast flow streamline, and which is therefore a faster flow streamline than is the first streamline.

The present foldover invention also broadly encompasses the movement of the location of the third layer of the multi-layer flow stream from a first location on one side of the fast flow streamline, across the fast flow streamline, to a second location which is not coincident with the fast flow streamline. Such movement of the location of the third layer to its second location is preferably carried out when or shortly after the flow of the third layer material has been interposed between the first and second layers, and, most preferably, when or shortly after the flow of the third layer material has been interposed between the first and second layers at substantially all places across the breadth of the layered stream.

More specificially, in carrying out the present method of injecting a multi-layer flow stream to effect foldover, there is established in the injection channel of an injection nozzle the flow of material of a first layer of the flow stream and the flow of material of a second layer of the flow stream adjacent to the first layer to form an interface between the flowing materials of the first and second layers. The multi-layer flow stream in the injection channel of the nozzle has a flow streamline which corresponds to the fast flow streamline in the injection cavity. The rate of flow of the first layer material and the rate of flow of the second layer material are selected to position the interface between them at a first location which is not coincident with the fast flow streamline in the injection cavity, or which is not coincident with the flow streamline in the nozzle injection channel which corresponds to the fast flow streamline in the injection cavity. The flow of material of a third layer of the flow stream is interposed between the first and second layers with the position of the third layer being at a first location which is not coincident with the fast flow streamline in the injection cavity, or which is not coincident with the flow streamline in the nozzle injection channel which corresponds to the fast flow streamline in the injection cavity. The relative rates of flow of the first and second layer materials are then adjusted to move the location of the third layer to a second location. The second location is substantially coincident with the fast flow streamline in the injection cavity, or with the flow streamline in the nozzle injection channel which corresponds to the fast flow streamline in the injection cavity. Alternatively, the relative rates of flow of the first and second layer materials are adjusted to move the location of the third layer from the first location on one side of the fast flow streamline, across the fast flow streamline, to a second location which is not coincident with the fast flow streamline. In terms of the flow streamlines in the nozzle injection channel, the relative rates of flow of the first and second layer materials are adjusted to move the position of the third layer in the nozzle injection channel from a first location on one side of the flow streamline in the channel that corresponds to the fast flow streamline in the injection cavity, across the flow streamline in the channel that corresponds to the fast flow streamline in the injection cavity, to a second location in the channel which is not coincident with the flow streamline in the channel that corresponds to the fast flow streamline in the injection cavity.

Most specifically, in carrying out the present method of injecting a multi-layer flow stream to cause foldover of the leading edge of a flowing annular stream of internal layer material, there is provided a method of injecting, by means of a nozzle having an injection channel, a multi-layer flow stream comprising three layers. The multi-layer flow stream is injected into an injection cavity in which the speed of flow of the stream is highest on a fast flow streamline positioned intermediate the boundaries of the layered stream. The method comprises establishing in the nozzle injection channel the flow of material of a first layer of the flow stream and the flow of material of a second layer of the flow stream adjacent to and around the first layer to form an annular interface between the flowing materials of the first and second layers. The flow stream in the nozzle injection channel has a flow streamline which corresponds to the fast flow streamline in the injection cavity. The rate of flow of the first layer material and the rate of flow of the second layer material are selected to position the annular interface between the flowing first and second layer materials at a first location in the nozzle injection channel which is not coincident with the flow streamline in the channel that corresponds to the fast flow streamline in the injection cavity. The flow of material of a third layer of the flow stream is interposed around the first layer and between the first and second layers with the location of the third layer being at a position which is not coincident with the flow streamline in the nozzle injection channel that corresponds to the fast flow streamline in the injection cavity. When or shortly after the flow of the third layer material has been interposed between the first and second layers at substantially all places around the circumference of the annulus between the first and second layers, the relative rates of flow of the first and second layer materials are adjusted to move the location of the third layer in the nozzle injection channel to a second location in the channel. That second location may either be substantially coincident with the flow streamline in the channel that corresponds to the fast flow streamline in the injection cavity, or that second location may be across the flow streamline in the channel that corresponds to the flow streamline in the injection cavity. In the latter case, the location of the third layer in the injection channel is moved across the flow streamline in the channel that corresponds to the fast flow streamline in the injection cavity to a second location in the injection channel which is not coincident with the flow streamline in the channel that corresponds to the fast flow streamline in the injection cavity.

The preferred method of injecting a multi-layer flow stream to cause foldover of the leading edge of a flowing annular stream of internal layer material will now be described with particular reference to Figs. 130-137 which schematically depict a portion of a simplified form of nozzle assembly 296 adapted, for illustrative purposes, for the flow of a three-layer flow stream. The material of layer A of the flow stream, and which forms the inside layer of the injected article, flows axially through the nozzle central channel 546 which will herein be referred to as the nozzle injection channel or the injection channel. The material of layer B of the flow stream, and which forms the outside layer of the injected article, flows between nozzle cap 438 and outer shell 436 and then through annular orifice 462 into the injection channel. The material of layer C of the flow stream flows, in this illustrative embodiment, between outer shell 436 and inner shell 430 and then through annular orifice 502 into the injection channel 546. In the injection channel, the material flow stream has a flow streamline 1101 (generally designated by a dash line) which corresponds to a fast flow streamline 1103 (generally designated by a dash line) of the material flow stream in the injection cavity 1105, which is bounded, on one side, by the surface 1107 of core pin 1109 and, on the other side, by the surface 1111 of injection mold 1113. The speed of flow of the material flow stream in the injection cavity is highest on fast flow streamline 1103.

Referring to Fig. 130, the first step of the method is establishing in injection channel 546 the flow of material of a first layer of the flow stream, layer A, and the flow of material of a second layer of the flow stream, layer B, adjacent to and around the first layer to form an annular interface 1115 between the flowing materials of the first and second materials, for layers A and B respectively. In the next step, the rate of flow of the layer A material and the rate of flow of the layer B material are selected to position the interface 1115 at a first location in the injection channel 546 which is not coincident with the flow streamline 1101 in the channel that corresponds to the fast flow streamline 1103 in the injection cavity 1105. The first location of interface 1115 is close to, but is offset from, flow streamline 1101. The relative rates of flow of the material of layer A with respect to the material of layer B are initially selected or later adjusted so that, just prior to introducing the layer C material into the nozzle central channel, the interface 1115 between the flowing A layer material and the flowing B layer material is positioned at the location where it is desired to locate the layer C material when it is first introduced into said channel. The first and second steps may take place substantially concurrently. In the illustrated embodiment, the interface 1115 is radially outboard of flow streamline 1101, i.e., radially farther away from the central axis of the flowing material streams. As will be described, this will result in the folded over portion of the third layer material being positioned between fast flow streamline 1103 and the outer surface of the outside layer B. When it is desired to position the folded over portion of the third layer between the fast flow streamline 1103 and the inside surface of the inside layer A, the interface 1115 will be positioned at a first location which is radially inboard of flow streamline 1101, i.e., radially closer to the central axis of the flowing material streams.

Referring to Fig. 131, the third step is interposing the flow of material of a third layer of the flow stream, layer C, around the first (A) layer and between the first (A) and second (B) layers. In the preferred embodiment, the third layer (also referred to herein as an internal layer) is the barrier layer which, for example, may be EVOH. The location of the third layer is at a position which is not coincident with the flow streamline 1101 in the channel 546 that corresponds to the fast flow streamline 1103 in the injection cavity 1105. At the stage of the process depicted in Fig. 131, the flow of the third (C) layer material has been interposed between the first and second layers to the extent that the third layer material is interposed at substantially all places around the circumference of the annulus between the first and second layers. For the purpose of illustrating the benefit of the foldover aspect of the present invention, Fig. 131 shows time bias of initial flow of the internal layer (C) material, into the injection channel 546, around the circumference of the channel. Thus, the terminal end of the internal layer has an axial leading portion 1117 and an axial trailing portion 1119 at different places around the circumference of the annular terminal end.

When, or shortly after, the flow of the third (C) layer material has been interposed between the first and second layers at substantially all places around the circumference of the annulus between the first and second layers, the relative rates of flow of the first (A) and second (B) layer materials into the injection channel 546 are adjusted to move the location of the third layer to a second location in the channel 546 (see Fig. 132). The second location of the third layer is relatively more proximate to, or substantially coincident with the flow streamline 1101 in the injection channel which corresponds to the fast flow streamline 1103 in the injection cavity (see Figs. 136, 137), or the second location is across the flow streamline 1101 (see Figs. 130-135). Because it is sometimes difficult in practice to place the second location of the third layer precisely on flow streamline 1101, it is preferred to move the location of the third layer across streamline 1101 in order to ensure that at least some part 1121 of the material of the third layer is coincident with streamline 1101 at substantially the same axial location in the multi-layer flow stream at substantially all locations 360° around the annulus of the third-layer material flow stream. As will be explained, it is this part 1121 of the third layer material which, by reason of its being located on the flow streamline 1101 (which corresponds to the fast flow streamline 1103 in the injection cavity), will have the highest speed of flow in the injection cavity 1105. Part 1121 will form a fold or "fold line" about which the third layer is folded over. The fold line will become the "leading edge" of the third layer. Because part 1121 of the third layer crossed over the flow streamline 1101 (and thus at that cross-over place became coincident with the streamline 1101) at substantially the same flow stream axial location around substantially all 360° of the circumference of the annulus of third layer material, there will be substantially no axial bias of the fold line and hence substantially no axial bias of the leading edge of the internal (C) layer. As a result, the folded over, leading edge of the internal layer will extend into the marginal end portion 12 of the wall 11 of the injected article at substantially all locations around the circumference of the end portion at the conclusion of polymer material movement in the injection cavity. Thus, the detrimental effect of any time bias of initial flow of the internal layer (C) material will have been overcome.

In the case where there is time bias of initial flow of the third or internal (C) layer, the time when the flow of that material has been interposed between the first and second layers at substantially all places around the circumference of the annular interface between the first and second layers is determined as follows. An injected article or a free injected shot of the multi-layer flow stream is examined and the axial separation between leading portion 1117 and trailing portion 1119 is measured. From the measured axial separation and the known geometry of the nozzle central channel 546 and of the rest of the nozzle assembly, the time interval between entry of leading portion 1117 into the channel 546 and entry of trailing portion 1119 into the channel may be calculated. In the preferred embodiment, the time when leading portion 1117 begins to flow into the nozzle central channel is the time when the sleeve 800 begins to unblock orifice 502. The sum of this time plus the above-calculated time interval is a close approximation of the time when the internal layer has been fully, circumferentially interposed between the first and second layers.

If, just prior to the introduction of the layer C material into the nozzle central channel, the location of the interface between the flowing A layer material and the flowing B layer material is radially farther from the central axis of the flowing melt streams than the location of flow streamline 1101, the previously-described change in A/B flow rates is selected to move the interface location toward the central axis to a second location closer to the central axis of the flowing melt streams. The second location is either coincident with the flow streamline 1101 or the second location is across the streamline 1101 and closer to the central axis of the flowing melt streams. This will cause foldover of the terminal end of the internal layer C material to occur and the folded portion of the layer C material will be located between the remaining, unfolded portion of the layer C material and the outside surface of the injected article at the conclusion of all melt material stream movement in the injection cavity at the end of the injection cycle. Conversely, if, just prior to the introduction of the layer C material into the nozzle central channel, the location of the interface between the flowing A layer material and the flowing B layer material is radially closer to the central axis of the flowing melt streams than the location of flow streamline 1101, the relative flow rates of the layer A material and the layer B material will be subsequently changed to move the interface location across the flow streamline 1101 to a second location which is either coincident with flow streamline 1101 or is across flow streamline 1101 and which is farther from the central axis of the flowing melt streams. This will cause foldover of the terminal end of the internal layer C material to occur, and the folded portion of the layer C material will be located between the remaining, unfolded portion of the layer C material and the inside surface of the injected article at the conclusion of all melt stream movement in the injection cavity at the end of the injection cycle.

Referring to Fig. 132, the relative rates of flow of the first (A) and second (B) layer materials are adjusted (B increased, A decreased) to move the location of the internal layer to a second location 1123 which is across, i.e., on the other side of, the flow streamline 1101 in the injection channel that corresponds to the fast flow streamline 1103 in the injection cavity.

The injection of the multi-layer flow stream is continued, and the part 1121 of the third layer material which was located on flow streamline 1101 in the injection channel is located on fast flow streamline 1103 in the injection cavity. Part 1121 has a speed of flow in the injection cavity which is faster than that of either the axial leading portion 1117 or axial trailing portion 1119 of the terminal end of the internal (C) layer material. As the injection continues, part 1121 forms a fold or "fold line" 1125 (see Fig. 133) which flows faster than portions 1117 and 1119 and overtakes them, and thus becomes the leading edge of the internal layer. In Fig. 133, folded part 1121 has overtaken axial trailing portion 1119; in Fig. 134, the injection has further continued and folded part 1121 has now overtaken axial leading portion 1117. The leading edge of the internal layer is the fold line 1125 of the folded over internal layer at folded part 1121. The leading edge of the internal layer has substantially no axial bias and, as shown in Fig. 135, extends into the flange portion 13 of the injection molded article, here a parison, at substantially all locations around the circumference thereof at the conclusion of polymer material movement in the injection cavity.

As mentioned previously, when or shortly after the flow of the third layer material has been interposed between the first and second layers at substantially all places around the circumference of the annular interface between the first and second layer materials, the relative rates of flow of the first and second layer materials into the injection channel are adjusted to move the location of the third layer to a second location in the channel. Figs. 136, 137, illustrate the second location being substantially coincident with the flow streamline 1101 in the injection channel which corresponds to the fast flow streamline 1103 in the injection cavity.

Referring to Fig. 136, the relative rates of flow of the first (A) and second (B) layer materials are adjusted (B increased, A decreased) to move the location of the internal layer to a second location 1127 which is substantially coincident with the flow streamline 1101 in the injection channel that corresponds to the fast flow streamline 1103 in the injection cavity 1105. Portion 1129 of the third layer material is the part of the third layer material which first became substantially coincident with flow streamline 1101. As the injection of the multi-layer flow stream continues, portion 1129 forms a fold or fold line about which the third layer is folded over. (See Fig. 137) As before, the fold line becomes the leading edge of the third layer. Because part 1129 of the third layer material became substantially coincident with the flow streamline 1101 at substantially the same flow stream axial location around substantially all 360° of the circumference of the annulus of third layer material, there is substantially no axial bias of the fold line and hence substantially no axial bias of the leading edge of the internal (C) layer.

The present foldover invention has particular utility in apparatus and process which, in a multi-nozzle machine, simultaneously injection molds a plurality of multi-layer articles. For example, in an eight-cavity machine there may be a small time bias of initial flow of internal layer material into the injection channel of one of the eight nozzle assemblies, leading to the production of less than optimum articles from that nozzle and associated injection cavity. By utilizing the aspect of the present invention which provides a substantially equal flow and flow path to each nozzle for each separate stream of polymer material, substantially the same relative rates of flow of the first and second layer materials can be obtained in each of the eight nozzle assemblies. Then, by an appropriately-timed change of rate of movement of ram 232 (for layer B material) and ram 234 (for layer A material), there is caused to occur a substantially simultaneous adjustment in each of the eight nozzles of the relative rates of flow of the first (A) and second (B) layer materials. This causes movement, substantially simultaneously in each of the eight nozzles, of the location of the third layer in the injection channel from the first location, previously described, to the second location, also previously described. The movement of the third layer location from the first to the second location is timed to occur when or shortly after the flow of the third layer material has been interposed between the first and second layers at substantially all places around the circumference of the annulus or interface between the first and second layers in all of the nozzles. Thus, the third layer will be concurrently folded over in the articles made in all of the injection cavities and the effect of time bias of initial flow of the internal layer in any one or more of the injection nozzles will be corrected.

It should be appreciated that in the embodiment of the injection mold 1113 shown in Figs. 130-137, surface 1111 of the injection mold extending from and forming the transition from the sprue orifice to the portion of the cavity 1105 which forms the parison wall, has a smooth radius of curvature which provides a greater volume for material than a conventional narrower orifice with a sharper, angular transitional surface juncture. The greater volume permits more inner structural A layer material to form between the surface of the tip of the core pin 1109 and the internal C layer material. This can be advantageous when the C layer material is a moisture sensitive barrier material and it is desired to form a thick layer of inner structural material to protect the internal barrier layer of the finished container from liquid contents.

It should also be appreciated by those skilled in the art reading the present specification that the foldover invention is applicable to a multi-layer flow stream having more than three layers such as, for example, the five-layer flow stream previously described and which consists of layers A, B, C, D and E. With reference to that five-layer flow stream, the terms "internal layer" or "material of a third layer" or "third layer" are to be understood as meaning the three adjacent internal layers (C, D and E) which are caused to flow and to move substantially as a unit from the first location to the second location in the injection channel.

The task sequence, or process flow, for a single cycle is shown in Fig. 140. The time axis of Fig. 140 corresponds to the time axis shown in Figs. 142 and 143. For purposes of explanation, a cycle will be defined as a point tA in time beginning just prior to the clamping operation, effected by means of the hydraulic cylinder 120 (Fig. 11), moving the moveable platen toward and away from the fixed platen, along the tie bars, and ending at a corresponding point in the next cycle. Thus, the beginning of an initial cycle takes place just prior to a clamping operation at time tA. As the cycle progresses, the cylinder 120 begins to move and at time tB the clamping pressure starts to build up. An accurate clamping action occurs by virtue of the process controller opening and closing valves to regulate the oil flow to the hydraulic cylinder. Further, at time tB, the timing cycle for blow molding begins. This consists of a blow air delay followed by a blow air duration of specific time length. The blow air delay allows sufficient time for clamping pressure to reach the desired limit prior to the blow molding operation so as to prevent misshapen articles. At time tC, when the clamp is at full pressure two other timing cycles begin, the first being the injection/recharge cycle, described in Figs. 142 and 143, the second is the ejection cycle. At the end of the blow mold delay, the ejection of the molded article from the blow mold occurs by opening the blow mold and pushing out the base punch. During this same time period starting at tC, in the injection molding operation, after an initial injection delay, the injection profile, which will be described in conjunction with Figs. 142 and 143, takes place. At time tD, the injection operation is completed and a period of time for parison conditioning occurs. Parison conditioning allows the parison to cool to a temperature sufficient for blowing the parison in the blow mold.

At the end of the parison conditioning, at time tF, a signal is provided for cut off of the air blowing cycle in the blow molder if it has not already been turned off by the blow air duration timer. At the same time, the opening of the clamp is initiated. After an initial delay period during which the clamping pressure drops, a further time period allows for the opening of the clamp. When the clamp is opened the core and parison come out of the cavity and withdraw to a position determined by appropriate limit switches. At this moment the shuttle starts to move so that the parison is then transferred to the blowing station and a further set of cores are provided in front of the injection molding station. At this point, the cycle has been completed and the clamp closing following shuttle movement initiates the next successive cycle. Going back to the time tD, at the same time that parison condition begins, the ending of the injection profile also starts a recovery check delay time interval. During the recovery check delay, the position of the screws are monitored to ascertain that the screws have recovered to their correct positions prior to initiating a new screw injection cycle. This is done by monitoring the limit switches which are established on the screws at appropriate positions. If the screws have recovered properly, two actions are initiated. First, screw injection is initiated, and then ram recharge is initiated. During screw injection, the melt in the screw is pressurized and, if the melt pressure in the screw exceeds the melt pressure in the ram/runner system, a check valve opens allowing melt to be transferred from the screw to the ram/runner system. Ram recharge is preceded by a check on which rams need recharging by virtue of their position at this time (tE). If the rams are not at the initial position of the injection profile, they need recharging. The rams needing recharging are then retracted to their initial position. Since this ram movement expands the volume of the ram/runner system, the melt pressure drops, opening the check valve allowing the screws (undergoing screw injection) to transfer melt to the rams, thereby recharging the rams. With the rams now at their initial profile position, a time period is provided to allow the pressure in the runner and ram block to reach equilibrium. At the end of this delay (tG), the hydraulic pressure to the screw is released causing the melt pressure in the screw to drop and thereby closing the check valve trapping the melt in the ram/runner system. Subsequently, screw recovery begins. At this point, time tH, the entire operation has cycled to the equivalent positions with regard to all sequences as occurred at time tA. The cycle then repeats.

The various functions described hereinabove are achieved by means of a suitable system control means, described now in further detail.

In a preferred embodiment, referring to Fig. 141, a general system block diagram for effecting the foregoing operation is illustrated. With reference to Fig. 141, the system processor 2010 is coupled to control and monitor the various machine functions of the operation. Processor 2010 can be a commercially available equipment, e.g. a TI5 process controller available from Texas Instruments. Thus, the system processor 2010 controls the cycling of the clamping mechanism 2012, the shuttle controls 2014, and the blow molding control 2016, and responds to inputs received from various condition monitors and limit switches 2018 which monitor the extent of the movement and operation of the clamp mechanisms, the shuttle control and the blow molding control. It will be understood that the block referred to as clamping control 2012 provides timed sequences resulting in the movements of the platens into and out of relative positioning, an operation involving activating the hydraulic cylinder 120 after a specific time period, measuring its progress by limit switches appropriately positioned, and deactivating the cylinder at the appropriate moment and position. Alarm limits can be set if the appropriate position is not reached within a specific time period. These operations are similarly effected in the shuttle control 2014 and blow molding control 2016 for controlling the sequences as set forth in the task operational sequence of Fig. 142.

In conventional injection molding operations, injection profiles are frequently set or controlled by means of a pin programmer or like device for providing a patterned injection cycle. The present invention makes use of distributed processing for more accurately monitoring and controlling the more complex functions involved in the novel and unique injection processing necessary to create the multi-layer article of the present invention. Thus, a control microprocessor 2020 is provided with appropriate interfaces for receiving and displaying information from a terminal and keyboard unit 2022. The microprocessor 2020 interfaces further with the injection screw control 2024 which, in turn, is used to supply start and stop signals for driving the three injection screw motors 2026, corresponding to motors 214, 216 and 218, shown in Fig. 11. Positions of the screws themselves, see Fig. 11, are position monitored by limit controls 2028 coupled to the screws at appropriate locations (not shown) and which provide input signals to a position sensing control 2030. The sensing control 2030 converts the signals to appropriate logic levels, and feeds them back to the microprocessor 2020 for appropriate error or abort controls. The microprocessor 2020 also interfaces with the ram control 2032 which, in turn, provides drive or command potentials to the ram servos shown representationally as 2034, and more precisely as servos 234(A), 232(B), 252(C), 260(D) and 262(E), e.g, in Fig. 14. The sensors 2036, shown in Fig. 18A, monitor the ram positions and provide input signals to sensing control 2030, indicating improper positioning, thereby initiating error or abort control. The microprocessor 2020 also interfaces with the pin and sleeve servo controls 2040 which in turn provide drive or command potentials to two servos 2042, each of which respectively controls the relative positions of the cam bars 850 and 856, shown in Fig. 30, for the purposes of controlling the pin 834 and the sleeve 800. Positions of the cam bars are monitored by sensor mechanisms 2044 which provide signals to indicate improper positioning, for initiating trial or abort control. All of the data received through the sensing control 2030 is applied to the microprocessor 230 for integration in the overall control sequence. In addition, the microprocessor 2020 is provided with a read only memory 2041 containing the programs controlling the sequences; an arithmatic unit 2043 for calculations, and a random access memory 2045 for performing active storage and data manipulation.

Referring to Figs. 142 and 143, a typical injection profile labelled, A, B, C, D and E (corresponding to rams 234(A), 232(B), 252(C), 260(D) and 262(E) respectively as seen in Fig. 14) represent the time-changing, position-control command signals in millivolts, applied to the servo 2034 for driving the rams which apply pressure to the polymer melt in channels A-E. The curves F and G represent the sleeve and pin displacement command profiles respectively. On the characteristic curves, positions indicated with a dot on curves A-E and with circles on the pin and sleeve curves F, G, represent positions for which the relative sleeve and pin displacements result in an opening of the respective feed channels and the resultant release of polymer melt into the nozzle central channel. Indications of closings on these curves are omitted for clarity since most would be located in the area of the superimposition of the curves. The horizontal slash lines on the pin and sleeve curves represent the points at which those channels are closed as a result of subsequent movements of the sleeve and pin. The specific opening and closing times of Fig. 142 are correlated to Table IIA. In Fig. 142, the time span X is occupied by the injection phase while the time span Y is occupied by the recharging phase. The results of these movements can be see in Fig. 143, which represents measured pressure of the melt (MP) at a fixed reference position, as set forth in the above description, as a function of time T. The variations in pressure MP are a direct result of the variation in ram servo command voltage, pin servo command voltage and sleeve servo command voltage. In Fig. 143, the curves are labelled A to E as in Fig. 142. The time spans X and Z represent the injection profile and the complete operation cycle, the latter being of 6 seconds duration. The inset time spans labelled A-E represent the recharing periods of the rams for polymers A-E.

The microprocessor 2020 is shown in greater detail in Fig. 144. As shown therein the concept of distributed processing is employed for the various functions described. The microprocessor 2020 is designed as a series of circuit boards contained within a card cage having appropriate edge connectors for inter-board connections. A master processor circuit board 2046 interfaces with a Tektronix type 4006 graphics terminal, indicated as unit 2022 in Fig. 141, and a printer. The microprocessor board 2046 is an Intel type 80/20-4 and consists of 8000 bytes of local programmable read only memory (PROM) addressable in hex format from 0000 to 1FFF, and containing the programs needed for operation. The Intel MULTIBUS (TM) system is employed for common databus and addressing, as well as to interface to the master processor board. The slave processor circuit board 2048, which employs the same commercially available Intel microprocessor, is coupled to the MULTIBUS and thus to the system processor 2010. Coupled to the MULTIBUS are a high speed math circuit board 2050 for the master unit 2046, and a high speed math circuit board 2052 for the slave unit 2048. Both math boards are conventional Intel SPC 310 units. Also coupled to the MULTIBUS is an additional 32,000 bytes of PROM/ROM memory on a commercially available circuit board 2054 available from National Semiconductor Co. Model BLC8432, and including hex data addresses 2000 to 8FFF. An additional memory board contains 32,000 bytes of random access memory 2056, and is addressed from 8000 to FFFF The overlap in memory on this board is pre-empted by the PROM board. The board 2056 is coupled to the MULTIBUS for operation with the slave processor board 2048. An I/O board 2057 is provided, Intel type SBC519, of conventional design, and provides drive signals from the microprocessor to the various solenoids used for valve activation to drive the hydraulic motors and cylinders. Opto isolation for buffering these signals from the various solenoids is provided. Opto isolation, for the purposes of electrically buffering signals, is provided to isolate the microprocessor board from high voltage transient or other miscellaneous noise signals which may otherwise be present in the various system sensors or limit switch positions. Further opto isolation is provided for the specific circuit boards 2058 and 2060 for processing input signals and will be described in further detail below. An additional board slot 2062 is provided for any additional circuit boards necessary.

Digital signals applied along the data lines through the MULTIBUS in accordance with commands received from the slave processor circuit board 2048 are provided through the digital to analog conversion circuit board 2064, which is a conventional Burr Brown type MP8304. The signals from this circuit are used to drive rams A, B, C, and D by application to a multi-channel servo loop circuit board 2066 which provides conditioned analog servo signals for the purpose of driving the servo-mechanisms used to position the rams A, B, C, D. An additional digital to analog circuit board 2068, similar to the circuit board 2064, is used to provide conditioned analog servo signals from digital commands to the servo loop circuit board 2066 for the purpose of driving the fifth ram E and the pin F and sleeve G, the multi-channel servo loop circuit board 2066 also providing conditioned analog servo signals for the purpose of driving the servo mechanisms used to position the ram E and the pin F and sleeve G. Analog feedback signals received from the servo mechanisms are converted back into digital signals for use by the microprocessor through an analog to digital circuit board 2070, model No. RTI1202, manufactured by Analog Devices.

With reference to Fig. 145, a circuit representative of circuit boards 2058 and 2060 is shown. Limit switch signals are fed in along appropriate input terminals indicated generally as 2072, and fed through logic circuit 2076. Circuit elements 2077 are opto isolation circuits which act to shield the processor logic from machine noise, transients and the like which are present in limit switch closing and other kinds of machine related interference. These signals are then fed to encoding units 2078, which are multiplexing circuits, which in turn provide appropriate output signals to unit 2080, which is a conventional keyboard controller. The keyboard controller encodes the input position for the purpose of providing a specific digital code along its output line through buffer circuitry 2082 directly on to the data lines described as D0-D7. In operation, when this circuit is addressed along the MULTIBUS, any appropriate data signal indicating a limit switch will be provided along the MULTIBUS. The parts numbers employed in this Figure are commercially available, conventional logic circuitry, and the operation of the circuit will thus be apparent to those skilled in the art.

Referring to Fig. 146, a more specific circuit detail of the servo loop board 2066, shown in Fig. 144, and showing a single channel servo loop, is illustrated. As will be evident, the D-A conversion boards 2064 and 2068 shown in Fig. 144 provide the analog signals to the servo loop board where they pass through the servo amplifier units shown generally as 2090. The output of each of these servo amplifiers provides signals through a terminal connector to drive the servo valves. Position feedback signals are provided from the velocity transducers LVT (such as 184, Fig. 18B) and the position (linear motion) transducers LVDT (such as 185, Fig. 18B) and applied to the inputs of the servo amplifiers 2090.

The position transducers, shown mechanically in Fig. 18A, are potentiometers with their respective arms mechanically coupled to move linearly in accordance with their respective servos positions. Of course, other forms of transducers may be employed. The transducers thus provide both position signals and velocity signals. The velocity signal is employed as a gain adjustment factor to the operational amplifier A791, while the position feedback signal controls the actual servo position in the instrumentation amplifier AD521. The output of amplifier A791 drives the servo valve. The velocity feedback may not be needed if the amplifier range and sensitivity are sufficient. Although only a single loop is shown, it will be understood that a servo loop exists for each servo valve.

Fig. 147 is a flow diagram showing the operation of the processor 2020 of Fig. 144. The beginning point 0 in Fig. 147 represents the time sequence at which the processor program begins its cycle, and the point 81 represents the end reference point of the processor cycle. Points 81 and 0 substantially coincide since the new cycle begins right after point 81. According to the convention adopted in Fig. 147, the diamonds represent information to be supplied or questions asked regarding various logic conditions and the information and answers determine the path to be taken to the next step. Thus, the word "yes" or "no" is written adjacent to the arrows extending from each diamond to indicate the logic condition or how the question contained within the diamond has been answered and the resulting path to be followed. The rectangles in Fig. 147 contain instructions to the various logic or memory elements involved and the instruction is presumed to be carried out at that position in the flow diagram. The arrows on the connecting lines indicate the direction of flow of the steps through the diagram.

With reference now to Fig. 147, the flow chart illustrating the programmed sequence of the injection and recharge cycle controller unit 2020 of Fig. 144 will be described. The microprocessor unit 2020 is capable of two operations, the first being the actual control of the injection and recharge cycles, and the second being a process diagnostic check for analyzing the quality of the melt system referred to as a recharge injection sequence. The diagnostic check is employed to insure the microprocessor's sequences are working properly and provides a test routine whereby the entire processor unit may cycle through but in which the clamp does not operate. An actual operating cycle must include the recharge injection sequence with clamp operation. The recharge injection sequence therefore permits diagnostics to be provided in the processor control prior to actual molding cycles to insure proper operation of the equipment. With reference to Fig. 147, starting at reference point 0, a decision is made at block 2110 to see whether the keyboard operator has indicated a recharge injection sequence or complete mode. If a complete mode is indicated, then at block 2112 a second check is made to determine whether the clamp is to be closed at this point in time, and if so, at block 2114 a safety gate check is made to ascertain whether the switch has been closed indicating that the safety gates surrounding the injection molding machine are secure and in position. After a 50 millisecond delay, the status line indicating an "injection ready" signal is placed into a logic position indicating that the injection ready signal is on. When the injection ready signal is on, the clamp is then allowed to close subject to the appropriate clamp closing conditions, these being that the mold open timer has timed out and that the shuttle limit switch is tripped, indicating that the mold operation previously accomplished has been completed and the shuttle is now in its correct position. Beginning at reference point 6, in block 2118, the various ram positions are read, command values are set, and ram selection is made. These values, as will be explained in further detail below, are calculated from the profile which is previously set into the processor by means of the input terminal 2022, Fig. 141. Calculation of the command values based upon the profile determines the process parameters by which the ultimate article is made, in accordance with these profiled parameters.

At block 2120, the processor actuates the solenoid valve which diverts hydraulic oil to either the screw motor or to a cylinder driving the screw. At this time point, the solenoid shifts into a condition which turns off the screw motor but does not apply pressure to the screw. Then, at block 2122, if the screw recovery check indicates that the screws have not recovered, as indicated by a lack of signal from a screw recovery limit switch, then at block 2124 the screws are again turned on. At block 2126, a delay is provided to allow the screws further time to recover, and at block 2128 the screw positions are checked again. If screw recovery time is longer than the additional 3 seconds provided, in block 2126, the program is automatically aborted with an appropriate message transmitted to the operator terminal. It will be recalled that the plastic pellets are fed from the hopper to the screw. As the screw rotates, pellets are transferred along the screw by virtue of the rotating screw helix. As the pellets travel along the barrel, they are heated by external means such as electricity, hot oil or the like, and as they soften are compressed by the diminishing volume within the screw flights. Further heating occurs by compression and shearing so that the plastic melts. This melt is then forced in front of the screw and, if the melt is unable to exit the barrel by virtue of closed valves, creates a pressure against the front of the screw, forcing it back. Eventually the limit switch trips, activating a valve, and turning off the screw drive. The melt pressure will decay as the screw is forced back further. As the pressure is applied to the back of the screw the melt pressure in front of the screw rises proportionally and will be forced out the barrel, unless the valve blocks the flow. Thus, at block 2120 the screw motor is turned off and screw pressure is set to neutral position where the screw is ready to fill or recharge the rams.

At block 2130, the screw motors are again turned off and at block 2132 pressure is applied to the back of the screw in preparation for ejecting the melt from the extruder. At block 2136, a recharge check is made to determine which rams are to be recharged, an operation taking less than 10 milliseconds, and if any ram is grossly overcharged the system will abort. An abort will provide a message to the operator through the terminal. If any ram is to go through a recharge operation, this operation is initiated at block 2138. The rams are recharged at a prescribed rate, and if the rams are unable to move at that rate (within prescribed error limits) the system will abort. At this point the program continues along the same flow line to delay 2158 which provides time for the melt in the rams, the runners and the screws to come to an equilibrium pressure.

Continuing to block 2160, the screw pressure is now switched to neutral, thereby stopping the screw injection mode. No longer is pressure now being applied to the back of the extruder and thus, the melt pressure in the extruder will begin to drop. As a result, the pressure activated check valve closes, capturing the pressurized melt in the rams. A 50 millisecond delay is provided before turning the screw motor back on at block 2162 starting screw recovery.

At block 2166, ram positions are checked. At block 2170, the processor again checks to see if the system mode is to run complete or to run a recharge injection sequence. A "no" decision indicates the recharge injection sequence has been selected, causing the system flow along flow line 2172 to a point subsequent to the injection ready signal. If the complete mode is indicated, then at 2174 the injection ready logic signal is put on and as a result, the clamp close operation if not previously activated, is now activated, through the system processor operator, and the injection complete signal is turned off. At this point, the microprocessor 2020 waits for the system processor, element 2010 in Fig. 143, to indicate that the clamp, shuttle and blow mold controls have all been appropriately positioned. When positioned, without error, and after an injection delay, the system processor 2010 sends a machine start signal which hands off control of the machine operation from the system processor 2010 to the injection/recharge microprocessor 2020. In block 2176, at time reference point 53, the microprocessor receives its indication from the system processor 2010. At block 2178, the injection ready signal is turned off, indicating that the system is ready to continue. A complete mode check signal is again made in block 2180 in order to allow bypassing of the safety gates if a complete mode is not indicated. If a complete mode is indicated, then the safety gate check is made to insure all appropriate safety conditions are being met prior to actuating an injection sequence. At block 2184, the injection profile now begins. Injection profile consists of a sequence of steps pre-programmed into the microprocessor 2020 for driving the five rams A, B, C, D, and E and the pin and sleeve, F and G, through the desired profile which produce the actual article in accordance with the pre-set command values, as previously set forth. At the completion of this operation, in block 2186 the injection complete signal is turned on. This hands control of the machine functions back to the system processor 2010 at which point the mold close timer is started, which, when timed out, allows the clamp to open. In the meantime, at block 2188, the microprocessor checks to see if a new profile has been entered. If so, in block 2190, the system calculates all of the new command values and places all values in memory to be set during the reference point 8, in block 2118, in the next cycle time. The system is then returned to its initial position, block 2192, and the operation then repeats. It will be evident that the microprocessor flow chart thus described accomplishes the various functions ascribed to the microprocessor in the task sequence described in conjunction with Fig. 140. Variations within the task sequence can produce like variations in the microprocessor flow chart and variations within the flow chart.

The microprocessor board layout indicates the two separate processors employed include both master and slave processor boards. The master processor is in charge of handling operator input and the supervision of the machine for safety, concurrency with the printer, concurrency with the operator and communication with the slave processor. The safety functions monitor temperature, pressure, safety gates, emergency stop switch, and the condition of the shared MULTIBUS. The slave processor controls the rest of the injection and recharge cycles of the equipment along with the three extruders and does this on a multi-task system basis with a 10 millisecond clock for production of error messages. The slave processor produces pointers to error messages which are transmitted along the MULTIBUS to the master processor for relation to the user. The slave processor also performs the injection cycle using the injection profile given to it from the master processor. The operating system employed by the master processor includes commercially available RMX-80, an operating system available from Intel Corporation, a standard FORTRAN library and a standard PLM library. The specific tasks are also provided in the master processor as well as data for FORTRAN and PLM programs.

## Claims

1. A method of forming multi-layer plastics articles wherein said method involves use of a multi-cavity injection molding machine, in which a combined material stream is injected from each of a plurality of co-injection nozzle means (296) of said machine into an associated injection cavity (102) to form each article, and said method including :
- providing polymeric materials to form layers of the articles, and moving streams thereof separately to each of the nozzle means (296),
- forming in the plural nozzle means (296) combined streams which are substantially identical, from the separate material streams, and
- injecting the combined streams to form the multi-layer plastics articles.

2. A method according to claim 1, comprising subjecting corresponding material streams to substantially identical flow conditions, e.g. sufficient to provide the said substantially identical combined streams.

3. A method according to claim 2, wherein the substantially identical flow conditions are obtained by providing flow paths of substantially identical configuration for each corresponding material stream.

4. A method according to claim 2, wherein said substantially identical flow conditions are obtained by providing substantially the same flow path and experience for each corresponding material stream.

5. A method according to any one of claims 1 to 4, wherein the forming step includes effecting substantially simultaneous control of flow and non-flow of the corresponding material streams.

6. A method according to claim 5, wherein said control is effected by operation of positively acting flow control means in each of said nozzle means.

7. A method according to any of claims 1 to 4, wherein the forming step includes positively effecting the initiation and termination of flow of the corresponding material streams substantially simultaneously in said nozzle means.

8. A method according to claim 7, wherein positively acting flow control means (e.g. 800,834) in each of said nozzles means are employed to control the said initiation and termination.

9. A method according to any of claims 1 to 8, for producing articles having at least three layers, comprising the steps of forming each of said combined streams from material streams corresponding to two of said layers while preventing material corresponding to another layer from flowing, raising the pressure of the arrested material to a level above the pressure of the combined two layer stream, and establishing flow of the so pressurized material so that it forms with the other material streams a multi-layer combined stream having at least three layers.

10. A method according to claim 9, including permitting flow of said pressurized material substantially simultaneously in each of the plural nozzle means.

11. A method according to claim 9 or claim 10, wherein each of the corresponding arrested materials to be introduced in the plural nozzle means (296) is subjected to a common pressure.

12. A method according to any of claims 9 to 11, wherein the pressure is imparted by a common pressure source (e.g. 252) while said materials are arrested by a positive blocking thereof, and flow of the so-pressurized materials is effected substantially simultaneously in the nozzles (296) by positive unblocking of said materials.

13. Apparatus for forming a plurality of multi-layer plastics articles, comprising a plurality of injection nozzle means (296), each for injecting materials into an associated one of a plurality of cavities (102) to form the articles, means (208 to 212) for providing streams of materials for injection to form layers of the articles, means (288, 294) associated with the nozzle means to channel the material streams separately from one another to each of the nozzle means (296), means (232,234,252,260,262) for moving the material streams along their respective channels to the respective nozzle means (296), and means (540, 462, 482, 502, 522) for combining in each nozzle means the streams moved thereto, to form combined streams, which are substantially identical, in the said nozzle means (296), for injection into their associated injection cavities (102) to form said articles.

14. Apparatus according to claim 13, wherein the nozzle means (296) has a stream combining area (546) adjacent an exit end thereof and separate passageways (460, 480, 500, 520) for the material streams in communication with the combining area and the channelling means (288, 294).

15. Apparatus according to claim 13 or claim 14, wherein the channeling (288, 294) and moving means (232, 234, 252, 260, 262) are operative to subject corresponding material streams entering the plural nozzle means to substantially identical flow conditions.

16. Apparatus according to claim 15, wherein the said channeling means (288) for corresponding material streams provide flow patterns of substantially identical configuration.

17. Apparatus according to claim 15, wherein the said channeling means (288, 294) are operative to subject the corresponding streams to substantially the same flow paths and experiences.

18. Apparatus according to any of claims 13 to 17, including means (e.g. 800, 860, 856; 834, 844, 850) to effect substantially simultaneous control of the flow or non-flow of the corresponding material streams in the plural nozzle means (296).

19. Apparatus according to claim 18, wherein said control means includes positively-acting, flow-controlling means (800, 834) for each of the nozzle means (296).

20. Apparatus according to any of claims 13 to 17, including means (e.g. 800, 860, 856; 834, 844, 850) operative to effect positive initiation and termination of flow of the corresponding material streams substantially simultaneously in the plural nozzle means (296).

21. Apparatus according to claim 20, wherein the said means comprise positively-acting flow control means (800, 834) in each of the said nozzle means (296).

22. Apparatus according to any of claims 13 to 20, for use to produce articles having at least three layers, wherein each of the nozzle means (296) have, associated therewith, flow controlling means (800, 834) to prevent flow of a corresponding one of the materials (e.g. C) to form a corresponding layer of the articles, and means (252) to raise the pressure of the arrested material to a level above the pressure of the materials (e.g. A, B, etc.) which are to form other corresponding layers of the articles, the flow-controlling means (800, 834) being operable when the said material (C) has been so pressurized to establish flow of the said material for providing the multi-layer combined stream having at least three layers, one of which is formed by the said material (C).

23. Apparatus according to claim 22, wherein the flow-controlling means (e.g. 800, 860, 856; 834, 844, 850) are operative substantially simultaneously for each of the nozzle means (296) to establish simultaneous onset of flow of the said material (e.g. C) in the plural nozzle means (296).

24. Apparatus according to claim 22 or claim 23, including pressurizing means (e.g. 252) effective to exert a common pressure on the material (e.g. C) controlled by the flow controlling means (800, 834) associated with the plural nozzle means (296).

25. Apparatus according to any of claims 13 to 20, wherein said flow controlling means (800, 834) provide positive blocking of the material (e.g. C) controlled thereby while said material is pressurized, and means (850, 856) is provided to operate the flow controlling means (800, 834) for all the plural nozzle means substantially simultaneously to effect a positive unblocking of the pressurized material, thereby to establish onset of flow thereof substantially simultaneously in all the nozzle means (296).

26. Apparatus according to any of claims 22 to 25, wherein the plural nozzle means have flow control means operative to control flow and/or non-flow of at least two material streams.

27. Apparatus according to any of claims 22 to 26, wherein each flow control means is or are substantially identical in the plural nozzle means.

28. A method according to claim 1, further including the steps of:
feeding separately each nozzle means (296) with a melt stream of polymeric material for each layer of the articles to be formed, the separate streams of each material being fed along substantially identical flow paths to the several nozzle means,
positively blocking corresponding melt streams from entering a central combining channel (540) of each nozzle means substantially simultaneously,
pressurizing the positively blocked melt streams in the different nozzle means,
substantially simultaneously removing the blockage to allow the corresponding melt streams to flow substantially simultaneously into the central channels and be injected into the injection cavities (102) juxtaposed with the nozzle means (296), and thereafter
substantially simultaneously positively blocking flow of each corresponding stream substantially simultaneously to terminate the injections and complete the injection operation.

29. A method according to claim 1, wherein substantially identical articles are moulded substantially simultaneously, further including the steps of:
feeding the melt streams to the plurality of nozzle means (296) such that the material streams to form layers in the articles pass along separate, substantially equal flow paths to the nozzle means,
applying (e.g. by 252) substantially identical pressures to the corresponding melt streams to establish substantially identical flows of the corresponding materials to and from each nozzle means (296), positively effecting the initiation, flow and termination of flow of the corresponding materials substantially identically in all the nozzle means by employing substantially identical valve means (800,834) in the nozzle means, and operating all the valve means substantially simultaneously and identically.

30. A method according to claim 28 or claim 29, including a step of establishing substantially identical combined streams in the plural nozzle means.

31. A method according to claim 28, 29, or 30, including a step of pressurizing the corresponding material streams by a common pressure source (e.g. 252).

32. A method according to any of claims 28 to 31, including a step of pressurizing the corresponding material streams substantially simultaneously.

33. A method according to claim 1, adapted to produce at least three layer, e.g. five layer multi-material plastics articles, such as containers having side walls with marginal end portions, and those total side wall thicknesses below the marginal end portions average from 0.010 inch to 0.035 inch (0.25 to 0.89 mm).

34. The method according to claim 1 or claim 33, wherein valve means (800,834) operative in or for each of the nozzle means (296) are used for controlling the combining of the separate streams fed to each nozzle means.

35. The method according to claim 33 or claim 34, wherein valve means (800,834) in a central channel of each nozzle means (296) is employed for positively controlling flow and non-flow of the respective materials into the central channel, there to form the combined multi-material, multi-layer flow stream.

36. The method according to claim 33, 34 or 35, further including a step of establishing substantially the same flow path and flow experience for each of the separate, corresponding flow streams of the same material to the different nozzle means, from initiation of flow advancement to arrival at the nozzle means (296).

37. The method according to claim 33, 34, 35 or 36, further including a step of establishing within all the nozzle means (296) substantially the same flow path and flow experience for each of the separate corresponding polymer flow streams of the same material to the different nozzle means, from initiation of flow advancement to arrival at the nozzle means.

38. The method according to claim 33, 34, 35 or 36, further including a step of establishing within all the nozzle means (296) substantially the same flow path and flow experience for each of the seprate corresponding polymer flow streams which are to form corresponding layers in the articles.

39. The method according to claim 35, 36 or 37, including displacing the melt materials at upstream locations removed from the nozzle means (296) to establish the said advancing flows, and said flows are channelled into separate streams to the nozzle means downstream of means which displace the flows.

40. The method according to claim 39, including splitting the advancing flows and, from the points whereat the flows are split, establishing for all of the separate split flow streams, paths and flow experiences which are substantially identical for the corresponding material streams.

41. The method according to any of claims 33 to 38, wherein the providing of the flow stream travel path and experience is from each stream's origination point of continuous flow in an injection shot, to within each nozzle means (296).

42. The method according to any of claims 33 to 41, further including the step of injection blow molding to form articles, such as containers, whose total side wall thicknesses average from 0.012 inch to 0.030 inch (0.30 to 0.76 mm).

43. The method according to any of claims 33 to 42, involving the use of four co-injection nozzle means (296), one at each corner of a foursided pattern (see e.g. Fig. 29C), and the steps of bringing the separate polymer material streams close to each other in a pattern in substantially the same horizontal and axial plane wherein they are transaxially offset from each other and between the four nozzle means, and directing each flow stream to the respective nozzle means.

44. The method according to any of claims 33 to 42, involving the use of eight nozzle means (296), aligned in a pattern of two rows each having four nozzle means therein, the rows being positioned along respective elongated sides of a rectangle, and the steps of bringing the separate flow streams of polymer material into substantially horizontal alignment along a plane centered in the rectangle between the parallel rows of nozzle means, then into horizontally and axially respectively displaced alignment, then outward towards the narrow ends of the rectangle to the center of each of the upper and lower patterns of four nozzle means, T-splitting at each side center each of the polymer streams into two opposite horizontal streams each of which extends to a point between the point at which the streams were T-split and the respective adjacent two nozzles on either side of the pattern, and, at such latter point Y-splitting (at 292) the respective streams into divergent streams, and directing each stream to a respective one of the eight nozzle means.

45. The method according to any of claims 33 to 44, including bringing the separate flow streams together into combined streams in combining areas (546) of the respective nozzle means (296).

46. A method according to any of claims 33 to 45, comprising establishing the combined streams in the nozzle means (296) such that the combined streams have the same mass flow characteristics.

47. An injection molding apparatus according to claim 13, further comprising
(i) a plurality of injection cavities (102) on a mounting member, a plurality of co-injection nozzle means (296) juxtaposable with the cavities, and
(ii) means for abutting the juxtaposed nozzles and injection cavities,
(iii) a source (202) of polymeric material located upstream of the nozzle means (596) for each material which is to form a layer of the article,
(iv) each of the nozzle means having a central channel (540), and polymer flow stream passageways (450, 460, 480, 500, 520) in communication with the central channel, said central channel having an open end with a gate (596) and a polymer material combining area (546) in communication with the passageways and the gate,
(v) displacing means (232, 234, 252, 260, 262) located upstream of the nozzle means (296) for moving the polymer materials to form the layers of the articles from their sources to respective passageways, via separate flow channels (e.g. 250) for each polymer material, and for pressurizing said material in its passageway,
(vi) flow channel splitter means (290, 292) in each flow channel (e.g. 220) downstream of its associated displacement and pressurizing means, for splitting the flow channel into a plurality of separate branched flow channels (708, 709; 350, 351; 352, 353; 356, 357), there being a separate branched flow channel for each material which is to form a layer of the article,
(vii) means (294) in communication with a branched flow channel for each material for separately feeding each separate polymer material to it associated nozzle means (296), the flow channels, branched flow channels and feeding means providing for each corresponding polymer travel paths to all the nozzle means which are of substantially identical configuration and length,
(viii) valve means (800, 834) cooperatively associated with each of the nozzle means, each valve means being operative in the combining area (546) of the central channel of the associated nozzle means,
(ix) drive means (860, 856; 844, 850) for driving all the valve means substantially simultaneously and substantially identically within the central channels of their respective nozzle means (296) to provide substantially simultaneous and identical control over the initiation, regulation, and termination of the flows of the polymer materials through all the nozzle means, and
(x) control means (2040) connected to the drive means for moving all the valve means (800, 834) in a predetermined mode which provides the substantially identical simultaneous movements of the separate valve means in their respective co-injection nozzle means (296).

48. Apparatus according to claim 47, wherein the valve means is comprised of (a) an open-ended elongated sleeve (800) having a close tolerance slip fit within the nozzle central channel (540) and a port (804) in its wall opening to an elongated central passageway (820) leading to the open end (812), and (b) an elongated pin (834) mounted for relative axial movement within the central channel passageway of the sleeve and having a close tolerance slip fit within the passageway (820) sufficient to prevent any significant accumulation or passage of polymer melt material between the pin and the sleeve, the elongated sleeve being a close tolerance slip fit within the central channel of the nozzle likewise to prevent any significant accumulation or passage of polymer material between the nozzle (296) and the sleeve (800).

49. Apparatus according to claim 47 or claim 48, wherein the drive means (860, 856; 844, 850) actuates the separate valve means sequentially and simultaneously to allow flow of the plurality of material in predetermined combinations into the central channel of each nozzle means (296) whereby flow of the material for any given layer is effected substantially simultaneously in all the co-injection nozzle means.

50. Apparatus according to claim 47, 48 or 49, wherein the combining area (546) of each nozzle means (296) is close to the gate, the combining area has an axial length of from 100 mils to 900 mils (2.54 to 22.9 mm) and the valve means of each nozzle is operative in the combining area thereof.

51. Apparatus according to any of claims 47 to 50, wherein the valve means (800, 834) and drive means (860, 856; 844, 850) are operative at the end of an injection cycle whereby the valve means is moved in the combining areas to clear melt materials therefrom and thereafter block the materials from flowing from the passageways (450, 460, 480, 500, 520) into the central channels (540) of the nozzle means.

52. Apparatus according to any of claims 47 to 50, wherein the flow channels (e.g. 220), branched flow channels, feeding means (232, 234, 252, 260, 262) and nozzle means (296) are adapted to provide substantially the same polymer stream flow path in terms of distance, diameter, restrictions, and pattern of flow for each corresponding material in its corresponding flow channels (e.g. 220), branched channels and nozzle passageways (e.g. 450) for forming a corresponding layer of each multi-layer article injected from each nozzle means (296).

53. Apparatus according to any of claims 47 to 52, wherein said cavities are for molding parisons and said apparatus includes a plurality of blow mold cavities (108) wherein said parisons are inflated into containers.

54. Apparatus according to any of claims 47 to 52, wherein said cavities (102 or 108) are shaped to define articles in the form of containers.

55. Apparatus according to any of claims 47 to 54, wherein each passageway (e.g. 500) of the plurality thereof has an orifice (502) which communicates with the central channel (540) of the associated nozzle means and at least one of the passageways (e.g. 500) is tapered to converge toward its orifice.

56. Apparatus according to claim 13, comprising a plurality of injection cavities (102) on a mounting member (104), a plurality of co-injection nozzles (296) on a juxtaposable mounting member (288), said cavities and nozzles being operative to form containers having side walls with portions below the marginal end portions of the containers which are 0.010 inch to 0.035 inch (0.25 to 0.89 mm), the apparatus further comprising a source (e.g. 202) of polymer material located upstream of the nozzles, for each material which is to form a layer of each multi-layer container, means (232, 234, 252, 260, 261) for each polymer material to form a layer of the container, to move streams of the materials towards the nozzle means, a flow channel (e.g. 220, 222, 250, 257, 258) for each stream of polymer material to form a layer of the container, each flow channel for each stream of material extending from each of the pressurizing and moving means to each nozzle means, the flow channels being separate from one another and providing substantially identical polymer flow stream travel paths and experience for each polymer stream of the same material channelled to each nozzle means (296).

57. The apparatus according to claim 56, wherein there are fewer sources (202, 204,206) than pressurizing and moving means, there are polymer stream flow channels between and communicating with the respective sources and moving means, and wherein the flow channel (e.g. 217) from at least one source (202) is split such that each of the split flow channels (220, 222) communicates with a respective moving means (232, 234), and the paths of the split flow channels for the same material between the sources and respective moving means are substantially the same.

58. The apparatus according to claim 56 or claim 57, comprising a separate passageway (e.g. 500) in each nozzle means (296) for each polymer material (e.g. C), the passageways communicating with the appropriate flow channels (e.g. 250) for the polymer materials which form layers of the containers, and the length of each nozzle passageway and its associated and communicating flow channel extending to the pressurizing and moving means (e.g. 252) for one polymer stream (C) which is to form a layer (C), is substantially the same as that for each other polymer stream of the same material (C) which is to be injected from each other nozzle and which is to form a corresponding layer (C) in each other container.

59. The apparatus according to any of claims 56 to 58, wherein adjacent, between and equidistant from the plurality of nozzle means are means for arranging the respective channels (220, 222, 250, 257, 258) in a linear pattern, means (276, 290, 292) for splitting each linearly-arranged channel into sets of branched flow channels (700 to 709), means (294) for rearranging each set of said linearly-arranged branched flow channels and aligning them in a direction substantially parallel to the axis of each of the nozzle means (296), and means for directing each of said linearly-arranged, axially-aligned branched flow channels toward each of the respective nozzle means (296) so as to communicate therewith.

60. The apparatus according to claim 59, wherein there are eight nozzles (296) arranged in a rectangular pattern of two columns of four equidistant nozzle means in each column with a nozzle means at each corner of said rectangular pattern, the aligned pattern of flow channels is located axially along a line between the middle set of four nozzle means of said rectangular patterns, and, from said vertical axially-aligned and offset pattern which is parallel to the axis of each of the nozzle means, each of said channels is directed to, and the apparatus includes, first splitting means (290) for splitting each of said channels (e.g. 350, 351) into T-split channels (e.g. 352 to 355) flowing in opposite directions and communicating with, and the apparatus includes, second splitting means (292) which Y-split each of the respective T-split channels (e.g. 352) into two diagonally divergent Y-split channels (e.g. 358, 359) one of which communicates with one, and the other of which communicates with the other of the two respective nozzles near the top on each one side, and the opposingly Y-split channels likewise communicating with the two nozzle means on the other side of the lowermost and uppermost nozzle means of the rectangular pattern.

61. The apparatus according to any of claims 56 to 60, including valve means (800, 834) operative in the nozzle means (296) for controlling the flow and non-flow of the polymer materials from the nozzles into the injection cavities (102).

62. The apparatus according to claim 61, wherein the valve means includes an elongated sleeve (800) having a side wall with a port (804) therein, an open end (812), and an elongated central passageway (820) in communication with the port and the open end, and an elongated pin (834) mounted and adapted to axially reciprocate within the sleeve central passageway (820) and having a side wall whose outer surface is adapted to close and open said port and is in a close tolerance slip fit within said central passageway (820).

63. Apparatus according to claim 13, having a plurality of nozzle means (296) each having a gate (596) at one end, and a central channel (540) in communication with the gate, at least three polymeric melt material flow stream passageways (440, 460, 500) in communication with the central channel (540) each through an associated orifice, a first of said orificies (462) being more proximate the gate (596) than the other orifices, and a third of said orifices (440) being disposed more remotely from the gate than the other orifices, and the nozzles further including valve means (800, 834) moveable in the nozzle central channel (540) and operative to block and unblock the orifices and thereby selectively prevent and allow flow of polymeric melt materials through the orifices (462, 502, 440) into the central channel for injection.

64. The apparatus according to claim 63, wherein the valve means is adapted to in one position block said second orifice (502) while it does not block the first (462) or third orifice (440), or both the first and third orifices.

65. The apparatus according to claim 64, wherein the valve means is also adapted in another position to block the first orifice (462) and not block the third orifice (440).

66. The apparatus according to claim 64 or claim 65, wherein the valve means is also adapted in another position to block neither the second orifice (502) nor the first orifice (462).

67. The apparatus according to any of claims 64 to 66, wherein the valve means is also adapted in one position to block the second orifice (502) while all other orifices are not blocked, and in another position to block all orifices except the second orifice.

68. The apparatus according to claim 63, wherein the valve means (800, 834) is adapted in one position to block said second orifice (502) and not block the third (440) or both the first (462) and third orifices, and in a second position to block the first orifice and not block either the second or the third orifice.

69. The apparatus according to claim 68, wherein the valve means is further adapted in one position to block the second orifice (502) while all other orifices are not blocked, and in another position block all orifices except the second orifice.

70. The apparatus according to any of claims 63 to 69, further including means (232, 252, 234) removed from the nozzle for moving polymeric melt material to each of the nozzle passageways (440, 460, 500), and for reducing the flow of polymeric material through the third orifice (440) while the valve means (800, 834) is in a position wherein neither the second nor the third orifice is blocked.

71. The apparatus according to any of claims 63 to 70, wherein the valve means comprises an elongated sleeve (800) having an open end (812) and a port (804) in its wall opening to an elongated central passageway (820) in the sleeve, the sleeve being mounted within the nozzle central channel (540) in a close tolerance slip fit at least adjacent the first orifice (462) and sufficient to prevent significant accumulation or passage of polymeric material therebetween, and an elongated pin (834) is mounted within the sleeve in a close tolerance slip fit within the central passageway (820) of the sleeve sufficient to prevent significant accumulation or passage of melt material between the pin and the sleeve central passageway; the said sleeve being adapted to reciprocate axially within the nozzle central channel (540) and to be operative to block and unblock said first and second orifices (462, 502) and to bring its port (804) into and out of alignment with said third orifice (440) and the pin (834) being adapted to reciprocate axially within the sleeve to block and unblock the said port (804) when the port is aligned with the third orifice.

72. The apparatus according to claim 71, wherein the third orifice is for passage of melt material (A) which is to form the core of a substantially concentric combined stream of melt materials (B, C, A) through the nozzle central channel (540), and the sleeve and pin are positionable to permit melt material (a) to flow through the third orifice (440) while flow of melt material (C) through said second orifice (502) is prevented.

73. The apparatus according to claim 72, wherein the sleeve and pin are positionable to allow melt material (C) to flow through said second orifice (502) while flow of melt material (A) through said third orifice (440) is prevented.

74. The apparatus according to claim 64 or any claim dependent on claim 64, including first, second and third passageways (440, 460, 500) each having an orifice defined by leading and trailing lips (e.g. 461, 523) and communicating with said channel (540), said lips completely encircling the channel and each orifice having its center line substantially perpendicular to the axis of the central channel, the second orifice (502) being axially intermediate the first and third orificies (462, 440), and the valve means being axially and reciprocably mounted within said central channel (540) and positionable (a) to block all of said orifices, (b) while said second orifice (502) is blocked, to unblock the third orifice (440) for flow of melt material (A) into the central channel as a solid stream, (c) to unblock the first orifice (462) to provide a flow of melt material (B) which completely surrounds the solid stream to provide a combined concentric flow stream of two materials (B, A), (d) to unblock the second orifice (502) to allow melt material (C) to flow therethrough to enter between the said two materials and thereby provide a combined stream of three concentric layers (A, B, C), and (e) in turn to block the flow of the respective materials through the orifices in a sequence which is not the reverse of the flow-producing sequence (b) to (d).

75. The apparatus according to claim 74, wherein the valve means (800, 834) is adapted to clear the combined stream of three materials (A, B, C) from the central channel (540) at the end of the injection cycle at least up to the passageway orifice (462) most proximate the gate.

76. The apparatus according to claim 74, wherein the first and second passageway orifices (462, 502) each have an axial width which is uniform about the central channel (540) and is less than the cross-sectional width of the central channel, and the orifices are as proximate as possible to each other and to the gate (596) so as to minimize the time taken by the combined stream of materials to reach the gate.

77. The apparatus according to claim 76, wherein the distance from the trailing lip of the second orifice (502) to the gate (596) is from 100 to 600 mils (2.54 to 15.2 mm).

78. The apparatus according to claim 63, wherein at least the first and second (462, 502) of the orifices completely encircle and open to a melt-combining area of the central channel (540), a leading lip (e.g. 461) of each orifice and the center line of each orifice lying substantially perpendicular to the axis of the central channel (540), the first passageway orifice (462) being the orifice most proximate the gate (596) and the third passageway orifice being most remote from the gate, each of the orifices having a cross-sectional area no greater than the cross-sectional area of the channel (540), and both the first and second orificies (462, 502) being as close as possible to each other and to the gate to minimize the time taken for the combined melt materials to flow to the gate, and the valve means further comprises
(a) an elongated sleeve (800) fitted in a close slip tolerance within said channel to reciprocate therein, the sleeve having an open end (812) which, when the sleeve is in a forwardmost position, is aligned with and communicates with the gate (596), the sleeve having in its side wall a port (804) adapted to communicate with the third passageway orifice, and
(b) an elongated pin (834) fitted in a close slip tolerance in said sleeve for reciprocable movement therein, the pin being moveable to a position which closes said port (804) and being cooperative with said sleeve (800) when they are in a forward position, to purge the combining area of said channel substantially completely, the tolerances between the channel, sleeve and pin being such that melt cannot accumulate between their confronting surfaces, and the valve means being moveable to respective positions whereat
all orifices are blocked,
all orifices are opened,
only the first orifice is unblocked,
only the third orifice is unblocked, and
only the first and second are unblocked.

79. The apparatus according to claim 78, which includes drive means (860, 856; 844, 850; 906, 918) for driving said valve means between said positions.

80. The apparatus according to claim 78, wherein the valve means are adapted to unblock all the orifices within a period of 75 centiseconds, preferably within 20 centiseconds and more preferably within 15 centiseconds.

81. The apparatus according to claim 78, wherein the central channel (540) has a uniform cross-sectional area at least from the first passageway orifice (462) to the second passageway orifice (502).

82. The apparatus according to claim 78, wherein the first passageway (460) has a leading wall (593) which inclines towards the gate (596) and towards the axis of the central channel and extends to the leading lip (461) of the first orifice, the leading lip of the first orifice being closer to the axis of the central channel than the trailing lip of said orifice, and wherein the sleeve (800) has a tapered mouth (812) defining the sleeve open end which is adapted to abut against the said leading wall (593) to limit movement of the sleeve toward the gate (596) and block said first orifice (462).

83. The apparatus according to claim 78, wherein the valve means comprises:
an elongated sleeve (800) fitted in a close slip tolerance within the central channel (540) for reciprocation therein, the sleeve having a central passageway (820), a forward open end (812) adapted to communicate with a portion of the central channel located between the first and second orifices, and there being a port (804) in its wall so that the sleeve can block and unblock the third passageway orifice (440) depending upon registry or misregistry of the port therewith, the sleeve being capable of moving to a position at which it blocks the first and second passageway orificies (462, 502) while port (804) is in registry with the third passageway orifices (462, 502) while port (804) is in registry with the third passageway orifice (440) which is not blocked, and the valve means further includes means for blocking the port when in registry with the third passageway orifice, the port blocking means (834) being adapted to be moved to a port-blocking position at the same time as the first and second orifice (462, 502) are not blocked, and to a port-unblocking position at the same time as the first and third orifices (462, 440) are not blocked and the port (804) is in registry with the third orifice.

84. The apparatus according to claim 83, wherein said sleeve (800) is also positionable such that the first and second orifices (462, 502) are unblocked, while the third orifice (440) is blocked by the port being out of registry therewith and further positionable wherein all three orifices are at the same time blocked.

85. The apparatus according to claim 83 or 84, wherein the sleeve (800) has a rear end portion and the means for blocking the port is a stationary member (648) extending within a rear end portion of the sleeve central passageway (820) partially to block the third orifice, said member (648) being in a close tolerance slip fit within the sleeve central passageway and cooperative with the sleeve such that when the sleeve is withdrawn from a forward position, the sleeve port (804) is aligned with the third orifice (440) but is juxtaposed relative to and partially blocked by the member (648).

86. The apparatus according to any of claims 63 to 65, which further comprises:
sources (e.g. 202, 204, 206) of polymer materials for the layers of the article,
runner means (278, 289) extending downstream of the sources of polymer materials to each of a plurality of the nozzles each of which is mounted in the front of the runner means, said runner means including a plurality of polymer flow stream channels (220, 222, 250, 257, 258) therein each for separately channelling a polymer melt material which is to form a layer of the article, from the source to each of the injection nozzles (296), and
means (232, 234, 252) for moving each stream of polymer material through the flow channels and into the respective nozzles,
the valve means (800, 834) within the respective nozzles being operative to control the flow of the respective polymer melt materials from said passageways into the central channel (540) of the injection nozzles for the injection of combined streams of said materials as simultaneous shots from the nozzles into juxtaposed injection cavities (102).

87. Apparatus according to claim 13, having a plurality of nozzle means (296) each having a central channel (540) with an open end, a gate (596) at the open end, and two polymeric material melt flow stream passageways (440, 450; 460) each having an orifice (440, 462) in communication with the central channel, the apparatus having a channel (220, 222) for each melt flow stream, each channel communicating with a respective passageway,
common means (214, 232, 234) in communication with each passageway for moving both polymeric material melt flow streams through their channels, passageways and orifices, and valve means (800, 834) mounted in the central channel (540) and operative to block, partially block and unblock the orifices.

88. The apparatus according to claim 87, wherein the nozzle has an additional polymeric material melt flow stream passageway (500) with an orifice (502) in communication with the central channel, the additional passageway and orifice being located between the other passageways and orifices, and the valve means is operative to block the additional orifice (502) while the other two orifices (440, 462) are not blocked thereby.

89. Apparatus according to claim 87 for injection molding a plurality of plastics articles each having at least five layers (A to E) laminated together, comprising:
(i) sources (202 to 206) of polymeric material for each polymeric material which is to form one or more layers of the articles, and a plurality of co-injection nozzle means (296) downstream of the sources, each nozzle means including at least five polymer material melt flow stream passageways (440, 460, 480, 500, 520), each communicating by a respective orifice with the central channel (540) to pass a melt flow stream of polymeric material into the central channel, there being a first passageway (460) with its orifice more proximate (462) the gate (596) than the other passageway orifices for passing a melt stream of material (B) into the central channel for forming the outside surface layer (B) of the article, a second passageway (500) for passing a melt stream of material (C) into the central channel for forming an internal layer (C) of the article, a third passageway (440) more remote from the gate than any of the other orifices for introducing into the central channel a melt stream of material (A) for forming the inside surface layer (A) of the article, a fourth passageway (480) between the first and second passageways for passing a melt stream of material (E) into the central channel for forming an intermediate layer (E) between the outer surface layer (B) and the internal layer (C) of the article, and a fifth passageway (520) between the internal passageway (500) and the third passageway (440) for passing a melt stream of material (D) into the central channel for forming an intermediate layer (D) between the internal layer (C) and the inside surface layer (A) of the article,
(ii) valve means (800, 834) operative in each nozzle means (296) adjacent the orifices for controlling the flow of the respective polymeric materials through the orifices and into the central channel, each valve means being adapted in one positional mode to block the associated second orifice (502) while the third orifice (440) is not blocked, in another positional mode not to block the associated first orifice (462) while partially blocking the third orifice (440), and in another positional mode not to block the first, second and fourth orifices (462, 502, 482) while partially blocking the fifth orifice (522),
(iii) the common moving (214) means being associated with both the materials (B, A) to form the outside and inside surfaces for moving them into and through their respective first and third passageways and orifices, and,
(iv) another moving means (218) common to both materials (E, D) to form the intermediate layers for moving each of them into and through the respective fourth and fifth passageways and orifices.

90. The apparatus according to claim 89, wherein each of the valve means includes an axially- reciprocal, elongated sleeve (800) seated in a close tolerance slip fit within the central channel (540) of the associated nozzle means (296), the sleeve having a central passageway (820), a forward open end (812) to communicate with the central channel and a port (804) in its wall to communicate with the third passageway orifice, the sleeve being adapted to block and unblock the first, second, fourth and fifth orifices (462, 502, 482, 522), and is operative in cooperation with another element (e.g. 834 or 648) of the valve means to block the third orifice, the said element cooperatively associated with the sleeve serving to block, partially block or unblock the sleeve port (804).

91. The apparatus according to claim 90, wherein the said element is a stationary member (648) confined to a rear end portion of the sleeve's central passageway, the stationary member making a close tolerance slip fit within the sleeve central passageway.

92. The apparatus according to claim 89, wherein the valve means (800, etc.) operative in each nozzle means (296) includes an elongated axially reciprocable sleeve (800) seated in a close tolerance slip fit within the central channel (540), the sleeve having a central passageway (82), a forward open end (812) to communicate with the central channel and a port (804) in its wall to communicate with the third passageway orifice, the sleeve (800) being adapted to block and unblock the first, second, fourth and fifth orifices (462, 502, 482, 522), and an elongated pin (834) mounted axially reciprocably within the sleeve central passageway (820) in a close tolerance slip fit, said sleeve and pin being cooperatively associated and adapted to be moved to different respective positions, so that in one position, said third passageway orifice (440) is blocked while the first orifice (462) is not blocked, in another position, the third orifice is partially blocked but the first orifice is not blocked, and in yet another position the fourth orifice (482) is blocked but not the first, second and third orifices.

93. Apparatus according to any of claims 87 to 92, wherein the co-injection nozzle means (296) are substantially identical and have passageways (e.g. 440, 450; 460) for plural melt streams (B, A) which are to form corresponding respective layers of a plurality of injection molded articles, the apparatus having means (214, 252) common to and in communication with the passageways for each of at least two melt streams operative to move said at least two melt streams to each of the plural nozzle means (296), and each nozzle means having valve means (800, etc.) to block, unblock, partially block flow through the passageways for said at least two melt streams, said valve means (800, etc.) preferably being substantially identical and preferably operable substantially simultaneously.

94. Apparatus according to claim 13, having a plurality of nozzle means (296), for co-injecting five layer plastic articles, and each having an open end, a gate (596) at the open end, a cylindrical central channel (540) in communication with the gate, and five polymer flow stream passageways (440, 450; 460; 480; 500, 520), each having an orifice (440, 462, 482, 502, 522) in communication with the central channel and each adapted for passing a melt flow stream of polymeric material through the orifice into the central channel for forming a layer of the article, there being a first passageway (460) having its orifice (462) more proximate to the gate (596) than any other orifice, for passing a melt stream of structural material (B) into the central channel for forming the outside surface layer of the article, a second passageway (500) for passing a melt stream of material (C) into the central channel for forming an internal layer of the article, a third passageway having its orifice (440) more remote from the gate (596) than any other orifice for passing a melt stream of structural material (A) into the central channel for forming the inside surface layer of the article, a fourth passageway (480) between the first and second passageways for passing a melt stream of polymeric material (E) into the central channel for forming an intermediate layer between the outside surface layer and the internal layer of the article, and a fifth passageway (520) between the second passageway and the third passageway for passing a melt stream of material (D) into the central channel for forming an intermediate layer between the internal layer and the inside surface layer of the article, and the apparatus further including
valve means (800, etc.) for each nozzle means (296) and operative adjacent at least the second orifice (502) and the third orifice (440) and adapted at the same time to block the second orifice and not block the third orifice.

95. The apparatus according to claim 94, wherein the valve means (800) includes an elongated sleeve (800) having an open end (812), a cylindrical side wall with a port (804) therein, and an elongated axial central passageway (820) in communication with the port and the open end, said sleeve being mounted within the nozzle central channel (540) in a close tolerance slip fit sufficient to prevent significant accumulation or passage of polymeric material therebetween, and an elongated pin (834) is mounted within the sleeve central passageway (820) in a close tolerance slip fit therewith sufficient to prevent signficant accumulation or passage of melt material between the pin side wall outer surface and the sleeve central passageway wall, said sleeve (800) being adapted to reciprocate axially within the nozzle central channel (540) and operative to block and unblock the first and second passageway orifices (462, 502) and to bring its port into and out of alignment with the third passageway orifice (440), and said pin (834) being adapted to reciprocate axially within said sleeve to block and unblock said port (804) when the port is aligned with the third passageway.

96. The apparatus according to claim 94 or 95, wherein each valve means is operative with respect to at least three of the five orifices of the associated nozzle means(296) and is also adapted to block the second passageway orifice (502) while it does not block the first and the third passageway orifices (462, 440).

97. The apparatus according to claim 94 or 95, wherein valve means is operative with respect to all five of the orifices of the associated nozzle means (296) and is adapted to block the second, fourth and fifth passageway orifices (502, 482, 522) while said valve means does not block the third passageway orifice (440).

98. The apparatus according to claim 97, wherein the said valve means is further adapted at the same time to block the second orifice (502) while said valve means does not block the first orifice (462), the third orifice (440), or both the first and third orifices.

99. The apparatus according to any of claims 94 to 98, wherein the first, second, fourth and fifth nozzle passageways (460, 480, 500, 520) of the nozzle means (296) are tapered towards their respective orifices (462, 482, 502, 522) such that each tapered passageway has a greater gap at an adjacent location remote from the orifice and a smaller gap at the orifice.

100. A method according to claim 1, comprising forming a multi-layer combined streams of a plurality of polymer materials in the nozzle means (296) such that leading edges of the respective layers in the combined streams lie in planes in the nozzles which are substantially unbiased when viewed in vertical cross-section, the method involving the use of a plurality of nozzles (296) each having a central channel (540) with a gate (596) at one end, and at least first, second and third passageways(460,500,440), each having an orifice communicating with the central channel (540), there being one passageway for each layer to be formed in the combined stream, the first passageway orifice (462) being more proximate the gate (596) than the other passageway orifices (502,440) for flow of the polymer material to form the outside layer of the combined stream, the third passageway orifice (440) being remote from the gate (596) for flow of the polymer material which will form the inside layer, and one or more second passageway orifices intermediate the first and third passageway orifices for flow of one or more polymer materials to form the internal layer or layers of the stream, each nozzle means (296) further including valve means (800,834) operative in the central channel for blocking the flow of polymer material from the orifices into the central channel, and for independently and selectively controlling the flow of polymer materials from the orifices, and the method further involves the steps of operating the valve means for:
preventing flow from all of the orifices,
preventing the flow of polymer material from the second passageway orifice or orifices, while allowing flow of material from the third orifice, the first orifice, or both the third and first orifices, and
allowing flow of material through the second orifice or orifices while allowing material to flow through the third orifice or both the third and first orifices.

101. The method according to claim 100, further comprising the step of utilizing each valve means for reducing the flow of the polymer material through the third orifice while allowing the flow of polymer material through the second orifice or orifices.

102. The method according to claim 100 or claim 101, further comprising the step of preventing the flow of polymer material through the third orifice while allowing the flow of polymer material through the second orifice or orifices.

103. The method according to claim 102, further comprising the step of terminating the flow of polymer material from the second orifice or orifices.

104. A method according to claim 1, comprising forming substantially concentric combined streams of at least three polymeric materials in the nozzle means (296) and injecting said streams into the associated cavities (102) to form the articles, which have outside, at least one internal and inside layers formed from respective streams of the combined stream, namely an outer melt stream, at least one internal melt stream, and a core melt stream, the method involving use of a plurality of nozzle means each having a gate (596) at one end, a cylindrical central channel (540) in communication with the gate, and at least three polymer passageways each communicating with the central channel by way of respective orifices, namely a first orifice (462) located more proximate the gate than the other orifices, for routing the outer stream into the channel, a third orifice (440) further removed from the gate than the other orifices for routing the core stream into the channel, and at least one second orifice (502) positioned between the first and third orifices, for routing at least one internal stream into the channel, the nozzle means further including valve means (800,834) operative adjacent the orifices and adapted to prevent and to allow the flow of the internal stream(s) through the second orifice(s)(502), and for independently controlling the flow or non-flow of the core stream through the third orifice(440),
the method further including the step of operating the valve means in the nozzle means
(a) preventing flow of the internal stream(s) through the second orifice(s) (502) while allowing flow through the first (462), the third(440), or both the first and third orifices, and then,
(b) allowing flow through the second orifice(s) while allowing flow through the third orifice.

105. The method according to claim 104, further including the step of utilizing the valve means for reducing flow through the third orifice while allowing flow through the second orifice(502).

106. The method according to claim 105, wherein after reducing step there is included a step of utilizing the valve means for terminating the flow through the second orifice (502).

107. The method according to claim 106, wherein after terminating the flow from the second orifice(502,) continued flow is allowed through the first orifice(452), the third orifice or both the first and third orifices (452,440).

108. The method according to any of claims 104 to 107, wherein before the flow preventing step (a), there is included the step of utilizing the valve means for preventing flow of polymeric material from all of the orifices.

109. The method according to claim 108, wherein the nozzle central channel (540) includes a combining area in which the combined stream is formed and wherein after the step of preventing flow of polymeric material from all orifices, the method further includes a step of utilizing the valve means for substantially completely clearing the combining area of polymer material prior to forming the next combined stream of material in the central channel (540).

110. The method according to claim 109, further including use of the valve means to prevent back-up of polymer material from one orifice into another orifice.

111. The method according to any of claims 104 to 110, further including a step of substantially knitting in each nozzle means (296) the internal melt stream material with itself through the core material, and by moving the valve means (800,834) forward through the central channel (540) toward the gate (596) to assist in knitting the internal layer material.

112. The method according to claim 111, including by the step of moving the valve means forward to assist in effecting in the nozzle means the encapsulation in core material of the knitted internal material.

113. The method according to claim 111 or 112, comprising the moving of the valve means forward to move the combined streams through the gates into the injection cavities without disruption of the knitted internal material.

114. The method according to any of claims 104 to 113, wherein after flow-allowing step (b) there is included the steps of utilizing the valve means (800,834) for allowing the flow of materials from all the orifices and then for preventing the flow from all the orifices, and the time elapsed between these allowing and preventing steps is from 60 to 700 centiseconds, preferably from 60 to 250 centiseconds.

115. The method according to claim 104, comprising operating the valve means in the nozzle means (296) for the steps of
(i) preventing flow of polymer material from all of the orifices (452,502,440) of a nozzle means,
(ii) preventing flow of polymer material through the second orifice (502) while allowing flow of structural material through the first (452), the third (440) or both the first and third orifices, then,
(iii) allowing flow of polymer material through the second orifice (502) while allowing material to flow through the third orifice (440),
(iv) restricting the flow of polymer material through the third orifice (440) while allowing the flow of material through the second orifice (502),
(v) restricting the flow of polymer material through the second orifice while allowing flow of polymer material through the first (452) or third (440) orifices or both the first and third orifices to knit the intermediate layer material with itself through the core material and substantially encapsulate the intermediate layer in the combined stream and in the shot.

116. The method according to claim 115, including after step (v), the step of utilizing the valve means (800,834) for clearing all or most of the polymer material from the central channel (540).

117. The method according to claim 116, further including the step of utilizing the valve means (800,834) during said clearing step for preventing back flow of polymer material from the central channel (540) into an orifice, or from one of the orifices into another orifice.

118. The method according to claim 115, 116 or 117, further including the step of moving the valve means (800,834) through the central channel (540) of each nozzle means (296) towards the gate during step (v) to assist in knitting the internal layer material.

119. The method according to claim 118, comprising moving the valve means (800,834) to move the combined streams through the gates (596) into the injection cavities without disruption of the knit.

120. The method according to any of claims 115 to 119, wherein during step (iii) material is allowed to flow through the first orifices, and steps (ii) and (iii) are performed within 250 centiseconds, preferably within 100 centiseconds.

121. The method according to claim 104, comprising operating the valve means (800,834) in the nozzles (296) for forming the combined stream by the steps of:
(i) preventing flow of polymer material through the second orifices while allowing flow of polymer material through the first orifices, the third orifices or both the first and third orifices,
(ii) then allowing flow of polymer material through the second orifices while allowing polymer material to flow through the third orifices,
(iii) reducing the flow of polymer material through the third orifices while allowing polymer material to flow through the second orifices,
(iv) terminating the flow of polymer material through the second orifices, and
(v) allowing flow of polymer material only through the first orifices while preventing flow of polymer material from the second and third orifices to substantially encapsulate the intermediate polymer material(s) in the combined streams.

122. The method according to claim 121, wherein after step (v) there is included a step of substantially completely purging the polymer materials from the nozzle central channels prior to the next injection cycle.

123. A method according to any of claims 104 to 122, further including a step of forming combined streams wherein the leading edge of the one or more internal layer(s) is substantially unbiased relative to a vertical plane drawn perpendicularly and transaxially through the shot.

124. The method according to any of claims 100 to 123, wherein the nozzle means includes valve means which are substantially identical and are preferably operable substantially simultaneously.

125. A method according to claim 1, for producing articles such as parisons, having a wall composed of at least three layers, wherein melt material streams to form said layers are injected into mold cavities through a plurality of nozzles (296) each having a central channel( 540), at least three melt stream passageways each with an orifice which communicates with the central channel, the nozzles further containing valve means (800,834) in the central channels, and the method involves the steps of moving the valve means to first positions to prevent flow of the melt material streams into the nozzle central channels, moving the valve means to second positions to permit the flow of first material streams into the nozzle central channels, moving the valve means to third positions to permit continued flow of said first material streams and to permit flow of second material streams into the nozzle central channels, and moving the valve means to fourth positions to permit continued flow of said first and second streams, and to permit flow of third material streams into the nozzle central channels between the first and second streams.

126. A method according to claim 125, wherein the second material streams are admitted as annular flows around the first streams and the third material streams are admitted as annular flows between the first and second material streams.

127. The method according to claim 125 or claim 126, further comprising imparting pressure to at least the third material streams prior to or concurrently with moving the valve means to the fourth position.

128. The method according to claim 125 or claim 126, further comprising imparting pressure to the third streams in passageways (440) and to at least one of the first and second streams in the central channels (540), and, prior to or concurrent with moving the valve means to the fourth positions, adjusting the pressure of one or more of the said streams so that the pressure of the third streams is then greater than the pressure of either one of the first and second streams in the central channels.

129. The method according to claim 125 or claim 126, further comprising imparting pressure to the third streams and to the first and/or the second streams, and, prior to or concurrent with moving the valve means to the fourth positions, adjusting the pressure of one or more of the said streams so that the pressure of the third streams is greater than the pressure of the first and second streams.

130. The method according to claim 129, further comprising imparting pressure to the said first, second and third streams, and, prior to or concurrently with moving the valve means to the fourth positions, increasing the pressure of the third streams and reducing the pressure of the first and/or the second streams.

131. Apparatus according to claim 13, which has a plurality of nozzle means (296) for co-injecting at least three streams of melt materials to form multi-layer articles and each having a cylindrical central channel (546) open at one end with a gate (596) at the open end and in communication with the central channel, the nozzle means having at least two passageways (460, 500) each with an annular orifice (462, 502) close to the gate (596) and a third passageway (440, 450) with an orifice (440) remote from the gate, all said passageways being in communication with the central channel (546) by way of their orifices, the first orifice (462) being proximate the gate, and the second orifice (502) being adjacent the first orifice, each of these orifices having its center line in a plane substantially perpendicular to the axis of the central channel and each of these orifices being defined by a leading lip (e.g. 461) close to the open end and a trailing lip remote from the open end, and the nozzle central channel (1546) having two cylindrical portions, the first portion (595) extending from the gate (596) to the leading lip of the first orifice (462), and the second portion (766) extending from the trailing lip of the first orifice in an upstream direction to at least the trailing lip of the second orifice, said first portion (595) being of smaller diameter than the second portion, and the nozzle means further including valve means in operative association with the nozzle central channel and the orifices, the valve means including:
(i) an elongated sleeve (8000') having an open end (812), a port (804) in its side wall and an elongated central passageway (1820) in communication with the port and the open end, the sleeve being mounted within the nozzle central channel (1540) in a close tolerance slip fit within the second portion (766) of the central channel sufficient to prevent significant accumulation or passage of polymer material, the said sleeve further having an outer surface portion (1835) of a diameter which provides a close tolerance slip fit within the first portion (595) of the nozzle central channel, and the sleeve being capable of blocking each of the first and second orifices (462,502), and
(ii) an elongated pin (1834) mounted within the central passageway (1820) of the sleeve (8000') in a close tolerance slip fit within the central passageway of the sleeve sufficient to prevent significant accumulation or passage of melt material between the pin and the sleeve, the sleeve being adapted to reciprocate axially within the nozzle central channel (1540) to block and unblock said first and second orifices (462, 502) and to bring said port (804) into and out of alignment with said third orifice (440) and the valve means being capable of clearing the central channel first portion (595) of polymer melt material at the end of an injection cycle and to prevent back flow of polymer material into the said orifices.

132. The apparatus according to claim 131, wherein the passageway (460) with the first orifice (462) has a leading wall (OW) which is inclined towards the gate and the axis of the nozzle central channel and extends to the leading lip (461) of the first orifice, which is closer to the axis of the central channel than the trailing lip of the first orifice, and the sleeve wall (1814) has a tapered mouth defining the sleeve open end which is adapted to abut against the leading wall (OW) to limit movement of the sleeve (8000') toward the gate and to block the first orifice.

133. The apparatus according to claim 131 or claim 132, wherein the pin (1834) is adapted to move forwardly into the first central channel portion (595).

134. The apparatus according to any of claims 131 to 133, wherein the said valve means are adapted to move forward toward the gate (596) sufficiently to clear a combining area of the associated nozzle of polymer material, and the pin (1834) and sleeve (8000') are such that said pin is capable of being positioned with its forward end axially offset upstream from the forward end of the sleeve and further characterised in that the pin and sleeve together are axially moveable forward through the central channel, with the offset position of said pin forward end providing an accumulation area in the forward end of the sleeve for accumulation of polymer melt material, for pushing said material forward through the channel when said channel is cleared by the clearing action of said pin and sleeve.

135. Apparatus according to claim 13, having a plurality of nozzle means (296) each comprising a central channel, an open end with a gate at the open end, and including:
(i) at least three passageways (460, 480, 500) each having an orifice (462, 482, 502) for discharging melt material into the central channel (1546), each orifice being annular and encircling the periphery of the central channel, a leading edge of each orifice and the center line for each orifice being perpendicular to the axis of the central channel, the first passageway orifice (462) being most proximate the gate, the third passageway orifice (502) being most proximate the gate, the third passageway orifice (502) being most remote from the gate, and the second passageway orifice (482) being intermediate the first and third orifices,
(ii) the central channel has stepped, cylindrical sections (760, 762, 764, 766) having different diameters, and
(iii) valve means comprising
(a)an elongated sleeve (8000') seated within and axially reciprocable within the central channel, the sleeve having a central passageway (1820), a forward open end to communicate with a portion (766) of the central channel located between the first and second orifices, and a port (8040) in its wall to coact with a passageway orifice (440) remote from the open end of the central channel and to block and unblock the said remote passageway orifice, the sleeve wall having radially stepped cylindrical surface portions (761, 763, 765, 767), each adapted to block one or more of the nozzle passageways when the sleeve is fully forward in the central channel, and,
(b) an elongated pin (1834) mounted in the sleeve central passageway (1820) in a close tolerance slip fit sufficient to prevent significant accumulation or passage of melt material between the pin and the sleeve central passageway, the pin (1834) being reciprocal axially within said sleeve to block and unblock the said port (8040') when the sleeve is positioned with the port and the said remote orifice are aligned.

136. The apparatus according to claim 135, wherein the sleeve (8000') and pin (1834) are adapted to be positioned and to cooperate such that at the same time the third orifice (440) is not blocked by the valve means while the second orifice (500) is blocked.

137. The apparatus according to claim 135 or 136, wherein each said nozzle means includes five nozzle passageways, a fourth passageway (1480) being intermediate the second passageway (1500) and the first passageway (1460), and a fifth passageway (1520) being intermediate the second passageway and the third passageway.

138. The apparatus according to claim 137, wherein the fourth and fifth passageways (1480, 1520) communicate with the central channel through the second orifice (1500).

139. The apparatus according to any of claims 135 to 138, wherein the central channel has a combining area extending from the leading edge of the first orifice (462) to a trailing edge of the second orifice (502) and said combining area has an axial length of from 100 to 900 mils. (2.54 to 22.9 mm), for example 100 to 300 mils (2.54 to 7.62 mm).

140. The apparatus according to claim 137, wherein the axial length from a leading lip of the fourth orifice (482) to a trailing lip of the fifth orifice (522) is from 100 to 900 mils (2.54 to 22.9 mm), for example 100 to 300 mils (2.54 to 7.62 mm).

141. Apparatus according to claim 13, which has a plurality of nozzles (296) each having a plurality of orifices (462, 482, 502, 522, etc.) in communication with a central channel (540) and valve means comprising
(i) an elongated sleeve (800) having a side wall with a port (804) therein, an open end (812), and an elongated central passageway (820) in communication with the port and the open end, and
(ii) an elongated pin (834) for relative axial reciprocal motion in the sleeve mounted in a close tolerance slip fit with the central passageway (820), said pin having a side wall whose outer surface is adapted to close and open said port, the said nozzle central channel (540) and sleeve (800) having between them no area for significant accumulation of injection material therein or passage of injection material therethrough.

142. The apparatus according to claim 141, wherein the elongated sleeve (800) is mounted in a close tolerance slip fit within the central channel (540) of the nozzle (296) thereby to prevent any significant accumulation or passage of injection material between the channel and the sleeve.

143. The apparatus according to claim 141 or claim 142, wherein said pin and said sleeve central passageway (820) each has a uniform cross-section.

144. The apparatus according to any of claims 141 to 143, wherein the elongated pin (834) has a greater axial length than the sleeve (800).

145. Apparatus according to claim 13 arranged for selectively controlling the flow of at least three melt material streams for injection molding multi-layer plastics articles from the melt materials, the apparatus including a plurality of nozzles (296) each having a central channel (540) open at one end, a flow passageway in the nozzle for each of a plurality of material streams, at least two of the nozzle passageways (460, 500, etc.) terminating at a respective exit orifice (462, 502), each of which communicates with the nozzle central channel (540) preferably adjacent the open end, and by sleeve valve means (800) having an axial material flow passageway (820) communicating with the nozzle central channel (540) and adapted to communicate with a flow passageway (440) for conveying a material stream to the nozzle central channel, the sleeve means (800) being carried in the central channel (540) and being moveable to selected positions to block and unblock one or more of said orifices and to bring the said axial passageway (820) into and out of communication with the said flow passageway (440).

146. The apparatus according to claim 145, wherein each nozzle (296) of said plurality thereof has a flow passageway (460, 500) for each of at least two of said material streams, and the sleeve means (800) is adapted to communicate with a flow passageway (440) external of the nozzle, and is moveable to bring said internal axial passageway (820) into and out of communication with one or more of said nozzle passageways (460, 500).

147. The apparatus according to claim 145 or claim 146, wherein the sleeve has said axial passageway (820) formed in or by the interior thereof.

148. The apparatus according to claim 145, 146 or 147, wherein communication from the internal axial passageway (820) of the sleeve means (800) to the said flow passageway (440) is through a port or aperture (804) in the wall of the sleeve means.

149. The apparatus according to claim 148, wherein the sleeve means (800) is moveable axially, rotationally or both in the central channel (540) of the nozzle (296) to selected positions, thereby to block and unblock one or more of the orifices and to bring said port or aperture (804) into and out of alignment with the said flow passageway (440).

150. The apparatus according to any of claims 145 to 149, wherein the sleeve means (800) is moveable to selected positions to block and unblock at least two of the said orifices.

151. The apparatus according to any of claims 145 to 150, wherein the exit orifices (462, 502) completely surround the nozzle central channel (540).

152. The apparatus according to any of claims 145 to 151, wherein the sleeve means (800) fits closely within the nozzle central channel (540) whereby there is no substantial cavity for polymer accumulation between the sleeve means and the central channel.

153. The apparatus according to any of claims 145 to 152, wherein the plane of at least one of the said orifices (462, 502) is perpendicular to the axis of the central channel (540).

154. The apparatus according to any of claims 145 to 152, wherein the nozzle means have a plurality of further flow passageways for a plurality of further material streams, and the sleeve means have a plurality of axial flow passageways (666, 668) therefor.

155. The apparatus according to any of claims 145 to 154, further including means (860, 856) to actuate and move the sleeve means (800) between first, second, third, fourth, fifth and sixth modes, wherein in said first mode the sleeve means blocks all of the said orifices (e.g. 462, 482, 502, 522) and said axial passageway (820) is out of communication with the said flow passageway (440), in said second mode the sleeve means blocks all of the orificies and said axial passageway (820) is in communication with the said flow passageway (440), in said third mode the sleeve means does not block the orifice (462) most proximate to the open end of the nozzle central channel (540) and said axial passageway is in communication with the said flow passageway, in said fourth mode the sleeve means does not block at least two orifices, one of which is the orifice (462) most proximate to the open end of said nozzle central channel, and said axial passageway is in communication with the said flow passageway, in said fifth mode the sleeve means does not block at least two orifices, one of which is the orifice (462) most proximate to the open end of said nozzle central channel, and said axial passageway is out of communication with the said flow passageway, and in said sixth mode the sleeve means does not block the orifice (462) most proximate to the open end of said nozzle central channel and said axial passageway is out of communication with the said flow passageway.

156. The apparatus according to claim 155, wherein the actuating means is operative to move the sleeve means sequentially from said first position to each of said second to sixth positions and then to said first position.

157. The apparatus according to any of claims 145 to 156, adapted to control five material streams.

158. The apparatus according to claim 157, wherein each of the plurality of nozzles includes four exit orifices (462, 482, 502, 522) communicating with the nozzle central channel (540) and the sleeve means has one internal flow passageway (820) and one aperture (804) in the wall thereof.

159. The apparatus according to claim 157, wherein each nozzle of the plurality thereof includes three exit orifices (462, 482, 502) communicating with the nozzle central channel and the sleeve means includes two internal material flow passageways (660, 680) and has two apertures (661, 662) in the wall thereof each communicating with said nozzle passageway (660, 640).

160. Apparatus according to any of claims 145 to 159, including pin means (834) moveable, by actuating means (844, 850) therefor, in the axial passageway (820) of the sleeve means to selected positions to block or permit communication between said internal axial passageway (820) and the or a flow passageway (440).

161. The apparatus according to claim 160 when dependent on claim 156, wherein the actuating means (844, 850; 856, 860) for both the sleeve means (800) and the pin means (834) are operative to move them sequentially from said first mode to each of said second to sixth modes and then to said first mode.

162. The apparatus according to claim 160 or claim 161, wherein one end of the pin means (834) is proximate to the open end (595) of the nozzle central channel (540) when the sleeve means and the pin means are in said first mode.

163. The apparatus according to any of claims 145 to 162, further including material flow directing means (e.g. 464, 466) associated with each nozzle of said plurality thereof for balancing the flow of at least one material stream (B) around the nozzle passageway (460) and exit orifice (462) through which the stream flows.

164. The apparatus according to any of claims 145 to 163 further including means for pressurizing at least one material stream.

165. The apparatus according to any of claims 145 to 164, wherein each nozzle of said plurality thereof further includes material flow directing means (e.g. 464, 466) in at least one of said nozzle passageways (460) for balancing the flow of the associated material stream (B) around said passageway and the exit orifice (462) through which it flows, and the apparatus has means (232) for pressurizing said stream to produce a pressurized reservoir of material in said nozzle passageway between said flow directing means and said orifice, whereby, when the sleeve means (800) unblocks said orifice (462), the start of flow of said material through said orifice is substantially uniform around the orifice.

166. The apparatus according to claim 165, wherein the said at least one nozzle passageway (e.g. 500) is tapered toward its associated orifice (502) from a wide gap remote from the orifice to a narrow gap at the orifice.

167. The apparatus according to any of claims 145 to 166, wherein each said nozzle has four, five or more passageways with orifices (e.g. 462, 482, 502, 522) communicating with the central channel (540) at locations close to the open end (595).

168. Apparatus according to any of claims 145 to 167 for co-injecting at least three melt material streams through the nozzles (296) into the associated cavities (102) to form thin wall multi-layer plastic articles each having at least one thin internal layer having a terminal end, wherein each nozzle (296) of said plurality thereof has material flow directing means (524, 526) for balancing the flow of the material stream (C) which forms the said internal layer around the nozzle passageway (500) and exit orifice (502) through which that stream flows, the flow directing means being operative to locate the terminal end of the internal layer substantially uniformly in the injected article at the conclusion of polymer movement in the associated injection cavity.

169. The apparatus according to claim 168, further including means (252) for pressurizing at least the internal layer material stream.

170. The apparatus according to claim 169, wherein the said material flow directing means (524, 526) is located in the nozzle passageway (500) for the material to form said internal layer, the said passageway providing for a pressurized reservoir of the material therein located between said flow directing means and the exit orifice (502) of the said passageway to said central channel (540), whereby, when the said orifice is unblocked, the start of flow of the pressurized internal layer material into said central channel is substantially uniform around the channel.

171. The apparatus according to claim 170, wherein the said nozzle passageway for the material to form the internal layer is tapered (at 518) and has a wider gap remote from its exit orifice (502) and has a narrower gap at the orifice.

172. Apparatus according to any of claims 145 to 171, for co-injecting at least three melt material streams through the nozzles into associated cavities (102) to form thin wall multi-layer plastic articles each having an outer layer having a terminal end, wherein each nozzle (296) of said plurality thereof has material flow directing means (464, 468) for balancing the flow of the material stream (B) which forms said outer layer around the nozzle passageway (460) and exit orifice (462) through which that stream flows, the flow directing means being operative to locate the terminal end of said outer layer substantially uniformly in the injected article at the conclusion of polymer movement in the associated injection cavity.

173. The apparatus according to claim 172, further including means (232) for pressurizing the outer layer material stream.

174. The apparatus according to claim 173, wherein the said material flow directing means (464, 466) is located in the nozzle passageway (460) for the material to form said outer layer, the said passageway providing for a pressurized reservoir of the material therein located between said flow directing means and the exit orifice of the said passageway to said central channel, whereby, when the said orifice is unblocked, the start of flow of the pressurized outer layer material into said central channel is substantially uniform around the channel.

175. The apparatus according to claim 174, wherein the said nozzle passageway for the material to form the outer layer is tapered (at 478) and has a wider gap remote from its associated orifice (462) and has a narrower gap at the orifice.

176. Apparatus according to claims 168, 169, or 170 and 172, 173 or 174, wherein the material streams to form both the internal and the outer layers of the articles are subjected to flow directing means (524, 526; 464, 466) operative to balance the flows of the material streams (B, C) which form said outer and internal layers and to locate around the nozzle passageways and exit orifices through which said streams flow, to locate the terminal ends of each of these layers substantially uniformly in the injected articles at the conclusion of polymer movement in the injection cavities.

177. Apparatus according to any of claims 145 to 176, including means for selectively controlling the flow of at least three melt material streams through the nozzles (296) for co-injecting the materials into associated cavities (102) to form thin wall multi-layer plastic articles having an outer layer and at least one thin internal layer, wherein each nozzle (296) of said plurality thereof has a central channel (540) open at one end, a flow passageway in the nozzle for each material stream, at least two of the nozzle passageways (460, 500) terminating at an exit orifice (462, 502), each of said orifices communicating with the nozzle central channel (540) at locations close to the open end (596), sleeve means (800) having at least one internal axial flow passageway (820) communicating with the nozzle central channel and adapted to communicate with one of the flow passageways (e.g. 440) in the nozzle, said sleeve being carried in said nozzle central channel (540) and being moveable to selected positions to block and unblock one or more of said orifices, pin means (834) moveable in the axial passageway (820) of the sleeve means to selected positions to block and establish communication between said internal axial passageway (820) and said nozzle passageway (440), and material flow directing means (464, 466; 524, 526) associated with the nozzle for balancing the flows of the material streams (B, C) which form said outer layer and the internal layer around the respective nozzle passageways and exit orifices through which said streams flow, whereby the locations of the terminal ends of said outer layer and said internal layer are substantially uniform in each injected article at the conclusion of polymer movements in said injection cavity.

178. Apparatus according to claim 13 arranged for selectively controlling the flow of at least three melt material streams for co-injecting the materials into cavities to form thin wall multi-layer plastics articles each having at least one thin layer having a terminal end, wherein each nozzle (296) of a plurality thereof has a central channel (540) open at one end, a flow passageway (e.g. 460, 500) in the nozzle for each of a plurality of material streams (B, C), valve means (800) in the central channel moveable to selected positions to block and unblock one or more orifices (e.g. 462, 502) by which said passageways open to the central channel, to bring said passageways (460, 500) into and out of communication with said central channel, and material flow directing means (464, 466 and/or 524, 526) associated with the nozzle (296) for balancing the flow of the material stream which forms said one layer (B or C) around the nozzle passageway through which that stream flows, the flow directing means being operative to locate the terminal end of said one layer substantially uniformly in the injected article at the conclusion of the polymer movement in the asociated injection cavity.

179. The apparatus according to claim 178, wherein there are five passageways (460, 480, 500, 520, 440) which preferably terminate at exit orifices (e.g. 462, 482, 502, 522) close to the open end of the central channel.

180. Apparatus according to claim 178 or claim 179, wherein said nozzle passageway (500) with which the flow directing means (524, 526) is associated serves to deliver a stream to form an internal layer (C) of the injected article.

181. Apparatus according to claim 178, 179 or 180, including material flow directing means (524, 526) associated with each said nozzle for balancing the flow of the material stream (B) to form the outer layer of the article around the nozzle passageway (500) through which the outer layer stream flows, the flow directing means being operative to locate the terminal end of said outer layer substantially uniformly in the injected article at the conclusion of the injection operation.

182. The apparatus according to claim 180, further including means (252) for pressurizing the internal layer material stream (C).

183. The apparatus according to claim 181, further including means (232) for pressurizing the outer layer stream (B).

184. The apparatus according to any of claims 178 to 183, wherein the or each material flow directing means is located in the nozzle passageway (500 or 460) for the flow stream (C or B) of the material to form the respective internal or outer layer, the said passageway providing a pressurized reservoir (at 518 or 478) of the material in the nozzle passageway between the said flow directing means and the exit orifice of said passageway to said central channel of each said valve, whereby, when the valve means unblocks the said passageway, the start of flow of the material in the said passageway into said central channel is substantially uniform around the channel.

185. The apparatus according to any of claims 178 to 184, wherein the nozzle passageway (500, 460) for the flow stream to form either or both the internal layer and the outer layer is tapered (at 518, 478) such that it has a wider gap remote from its associated orifice and has a narrower gap at the orifice.

186. Apparatus according to any of claims 178 to 185, further including material flow directing means (464, 466; 524, 526) associated with each said nozzle for balancing the flows of both the material streams (B, C) to form said outer layer and internal layer around the nozzle passageways (460, 500) through which each stream flows, whereby the location of the terminal ends of each of said outer layer and said internal layer are substantially uniform in the injected article at the conclusion of polymer movement in said injection cavity.

187. Apparatus according to claim 13, having a plurality of nozzle means (296) for co-injecting at least three streams of melt materials to form multi-layer articles therefrom, wherein each nozzle means (296) of said plurality thereof has an axially extending central channel (540), a gate (596) in communication with the central channel, and comprises at least two polymer stream passageways (460, 500) each having an annular orifice (462, 502), the first of said orifices (462) being proximate the gate (596), the second of said orifices (502) being adjacent the first orifice, and either or both of the first and second passageways (460, 500) has a tapered portion (478, 518) adjacent its respective orifice such that each orifice has a smaller cross-sectional gap than an upstream adjacent portion of its respective passageway, the nozzle preferably having a third passageway (440) with an orifice opening to the central channel at a location more remote from the gate than the other orifices.

188. The apparatus according to claim 187, including valve means (800) for each of said nozzle means operative in the central channel for blocking and unblocking the orifices of three passageways (e.g. 460, 480, 440) and adapted in one position to block the second orifice (502) while the third orifice (440) is not blocked by said valve means.

189. The apparatus according to claim 188, wherein the valve means (800) is also adapted in another position to block the third orifice (440) while the first orifice (462) is not blocked by the valve means.

190. The apparatus according to claim 188 or 189, wherein the valve means includes a sleeve (800) having a central axial passageway (820), an open end (812) in communication with the axial passageway and a port (804) in the sleeve wall, and an elongated pin (834) axially moveable within the sleeve and adapted to block and unblock said port (804).

191. The apparatus according to any of claims 187 to 190, wherein each nozzle means of said plurality thereof has five polymer stream passageways each having an annular orifice, the fourth passageway orifice (482) being intermediate the first and second orifices (462, 502), and the fifth passageway orifice (522) being intermediate the second (502) and third orifices (440).

192. Apparatus according to claim 187, further including
valve means (800) operative in the nozzle central channel (540) for blocking and unblocking the orifices of each said nozzle means (296), and
means (232, 234, 260, 262) for displacing polymer melt material through each passageway and passageway orifice, and for pressurizing a melt material in a tapered passageway (478, 498, 518 or 538) while its orifice is blocked by the valve means (800).

193. The apparatus according to claim 192, wherein the means (232, 234, 260, 262) for displacing and pressurizing includes a ram.

194. The apparatus according to claim 192 or 193, wherein for each material stream there is means for displacing and pressurizing melt material, and each means is adapted to pressurize the melt material in its passageway in each said nozzle means while its passageway orifice is blocked by said valve means (800).

195. The apparatus according to claim 192, 193 or 194, wherein the valve means (800) of each said nozzle means is adapted to control flow through the orifices of three passageways and in one position to block the orifice of the second passageway (500) while the orifice (440) of the third passageway is not blocked by the valve means.

196. The apparatus according to any of claims 192 to 195, wherein at least the passageway (460) in communication with the first orifice (462) has in cooperative association therewith means (464, 466) for balancing the flow of the melt stream material (B) through that passageway.

197. The apparatus according to claim 196, wherein the flow balancing means includes an eccentric choke (464 or 466) which protrudes into the passageway (460) from one of the walls thereof.

198. Apparatus according to any of claims 192 to 197, wherein each nozzle means (296) of said plurality thereof has five passageways, for five melt streams, each with a respective orifice opening to the central channel, wherein each of the first, second, fourth and fifth passageways (460, 500, 480, 520) has a tapered portion (478, 518, 498, 538) adjacent its respective orifice such that each orifice has a smaller cross-sectional gap than an upstream adjacent portion of its respective passageway, and the valve means (800) operative in the central channel (540) is adapted to block the fourth, second and fifth orifices (482, 502, 522) while the third orifice (440) is not blocked by the valve means.

199. Apparatus according to claim 198, including means (464, 466; 504, 506; 484, 486; 524, 526) in cooperative association with each tapered passageway (478, 518, 498, 538) for balancing the flow of melt material through each of the tapered passageways.

200. The apparatus according to claim 187, wherein each orifice (462, 482, 502, 522) of each nozzle means of said plurality thereof is fixed and defined by leading and trailing lips (e.g. 461, 523), and each has a center line (190 to 196) which lies substantially perpendicular to the axis of the central channel (540), the first orifice (462) having its center line within 350 mils (8.89 mm) of the gate (596), the second orifice (502) having its center line within 250 mils (6.35 mm) of the center line of the first orifice, and the leading lip of the first orifice and the trailing lip of the second orifice being no greater than 300 mils (7.62 mm) apart.

201. The apparatus according to claim 200, including valve means (800) in cooperative association with the central channel (540), and adapted to block and unblock the orifices.

202. The apparatus according to claim 200, including valve means (800) in cooperative association with the central channel (540), the valve means including an elongated sleeve (800) having a mouth (812) adapted to provide a third polymer stream orifice in communication with the central channel area at least adjacent the trailing lip of the second orifice (500).

203. The apparatus according to claim 201 or 202, wherein the said nozzle means includes drive means (860, 856 etc.) for driving the valve means (800), and the valve means are adapted to move to a position which blocks all orifices and to a position which unblocks all orifices, within a time period of about 75 centiseconds.

204. The apparatus according to claim 202 or 203, wherein the valve means includes an elongated pin (834) axially moveable within the sleeve (800) and adapted to have a close tolerance slip fit throughout most of the operative length of the sleeve which prevents a significant accumulation of molding material between the sleeve and pin.

205. The apparatus according to any of claims 200 to 204, wherein said nozzle means has third, fourth and fifth passageways (440, 480, 520) and respective orifices for delivering melt streams to the central channel, and wherein the axial distance between a leading lip of the fourth orifice (482) and a trailing lip of the fifth orifice (522) is from 100 to 900 mils (2.54 to 22.9 mm), e.g. 100 to 300 mils (2.54 to 7.62 mm).

206. The apparatus according to claim 187 or claim 200, wherein each said nozzle means has five polymer stream passageways (460, 480, 500, 520, 440), each having an orifice in communication with the central channel (540) and each adapted for passing a polymeric material melt stream through the orifice into the central channel for forming a layer of the article injected by said nozzle means, there being a first passageway (460) having its orifice (462) more proximate to the gate (596) than any other orifice, for passing a melt stream (B) of structural material into the central channel for forming the outside surface layer of the article, a second passageway (500) for passing a melt stream (C) of material into the central channel for forming an internal layer of the article, a third passageway (440) having its orifice more remote from the gate (596) than the other orifices for passing a melt stream (A) of structural material into the central channel for forming the inside surface layer of the article, a fourth passageway (480) between the first and second passageways (460, 500) for passing a melt stream (E) of polymeric material into the central channel for forming an intermediate layer between the outer surface layer and the internal layer of the article, and a fifth passageway (520) between the second passageway (500) and the third passageway (440) for passing a melt stream (D) of material into the central channel for forming an intermediate layer between the internal layer and the inside surface layer of the article, and wherein of the first, second, fourth, and fifth nozzle passageways at least the first and second (460, 500) are tapered towards their respective orifices (462, 502) such that each tapered passageway has a greater gap at an adjacent location remote from the orifice and a smaller gap at the orifice, the nozzle further including valve means (800 etc.) operative adjacent at least the second orifice (502) and the third orifice (440) and adapted at the same time to block the second orifice and not block the third orifice.

207. The apparatus according to claim 206, wherein the valve means includes an elongated sleeve (800) having an open end (812), a cylindrical side wall with a port (804) therein, and an elongated axial central passageway (820) in communication with the port and the open end, said sleeve being mounted within the nozzle central channel (540) in a close tolerance slip fit sufficient to prevent significant accumulation or passage of polymeric material between their confronting surfaces, and an elongated pin (834) mounted within the sleeve central passageway (820) in a close tolerance slip fit therewith sufficient to prevent significant accumulation or passage of melt material between the pin side wall outer surface and the sleeve central passageway wall, said sleeve being adapted to reciprocate axially within the nozzle central channel and operative to block and unblock the first and second passageway orifices (462, 502) and to bring its port (804) into and out of alignment with the orifice of the third passageway (440), and said pin being adapted to reciprocate axially within said sleeve to block and unblock said port when the port is aligned with the third passageway.

208. The apparatus according to claim 206, wherein the valve means is operative with respect to at least three of the five orifices, and is also adapted to block the second passageway orifice (502) while it does not block the first and the third passageway orifices (462, 440).

209. The apparatus according to claim 206, wherein the valve means is operative with respect to all five of the orifices and is adapted to block the second, fourth and fifth orifices (502, 482, 522) while it does not block the third orifice (440).

210. The apparatus according to claim 209, wherein the valve means is further adapted at the same time to block the second orifice (502) while it does not block the first orifice (462), the third orifice (440), or both the first and third orifices.

211. Apparatus according to claim 13, which has a plurality of co-injection nozzles each having a central channel with an open end for co-injecting at least three melt material streams to form a multi-layer article, each nozzle being an assembly (296) comprising at least two interfitting shells (434, 436) and a nozzle cap (438) enclosing at least a portion of the outermost one (436) of said interfitting shells, one of the shells (e.g. 436) containing a feed channel (460) for flow of melt material therethrough, which channel leads to an associated annular flow passageway (478) having an orifice (462) opening to the nozzle central channel (540), the said annular flow passageway being bounded on one side by a portion (589) of the outer surface of the shell containing the feed channel and on the other side by a portion (593) of the inner surface of an adjacent one of the interfitting shells or of the nozzle cap, a portion of the said outer surface having a symmetrical, frustoconical shape and a portion of the said inner surface having a symmetrical, frustoconical shape, the outer and inner symmetrical, frustoconical surface portions (589, 593) together defining a tapered, symmetrical, frustoconical portion of the said annular flow passageway (478).

212. Apparatus according to claim 211, wherein each shell (430; 432; 434; 436) contains a feed channel (440, 450; 520; 500; 480; 460) for flow of a melt material therethrough, at least two of said feed flow channels (460, 500) leading to a respective annular flow passageway (478, 518), each of which has an orifice (462, 502) opening to the central channel and each of which is bounded on one side by a portion (578, 566) of the outer surface of a shell (434, 432) and on the other side by a portion (593, 603) of the inner surface of an adjacent one of the interfitting shells (434) or of the nozzle cap (438), all the confronting surface portions having symmetrical, frustoconical shapes whereby the pairs of confronting surfaces define tapered, symmetrical, frustoconical portions of the annular passageways (478, 518).

213. Apparatus according to claim 211 or claim 212, wherein the said annular flow passageway or at least one thereof contains means for directing the flow of melt material through said passageway.

214. Apparatus according to claim 213, wherein said directing means comprises choke means, for example eccentric choke means (464, 466) or concentric choke means (506).

215. Apparatus according to claim 211 or claim 212, including means for providing a balanced flow of melt material around the said annular flow passageway or around at least one thereof.

216. Apparatus according to claim 215, wherein said means for providing balanced flow comprises choke means, for example eccentric choke means (464, 466) or concentric choke means (506).

217. Apparatus according to any of claims 211 to 216, wherein the or an orifice (e.g. 462) is located close to the open end (596) of the nozzle central channel (540).

218. Apparatus according to claim 13, which has a plurality of co-injection nozzle means each having a central channel with an open end, for co-injecting at least three streams of melt materials to form a multi-layer article having an outside layer, an inside layer, and at least one internal layer between said outside layer and said inside layer, said nozzle means (296) having a flow passageway for each stream of melt material, and at least two of the passageways, e.g. for the streams to form an outside and an internal layer, terminate at annular orifices (462, 502) communicating with the central channel (540) at locations close to the open end (596), at least the passageway (500) for the material stream (C) to form the internal layer having means (504, 506) therein for providing a balanced flow of material through and around said passageway, this passageway further having a symmetrical, tapered portion (518) between the balancing means and the passageway orifice (502) to provide a symmetrical, tapered pool for the melt material adjacent the orifice for balanced flow therethrough into said central channel (540).

219. Apparatus according to claim 218, wherein the flow balancing means comprises choke means, for example eccentric choke means (504) or concentric choke means (506).

220. Apparatus according to any of claims 211 to 219, further including means (800) in each of said nozzle means (296) selectively moveable to prevent or permit flow into said central channel of the melt material (C) to form the said internal layer.

221. Apparatus according to claim 13, having a plurality of co-injection nozzle means each for co-injecting at least three streams of melt materials to form a multi-layer article therefrom, wherein each co-injection nozzle means (296) has an axially extending cylindrical central channel (540), a gate (596) in communication with the central channel, and at least three polymer stream passageways each having an orifice, the first (462) of said orifices being proximate or close to the gate (596), the second (502) of said orifices being adjacent the first orifice, and the third orifice (e.g. 440) being remote from said gate, each of the first and second (462, 502) of said orifices being annular and defined by a leading lip (e.g. 461) and a trailing lip (e.g. 523), said central channel (540) having a combining area which is a cylindrical portion of the central channel extending from the forward lip of the first orifice (462) to the trailing lip of the annular orifice most remote from the gate (596) in which area all polymer streams combine into a combined flow stream for injection from the nozzle, said combining area having an axial length of from 100 to 900 mils (2.54 to 22.9 mm), e.g. 100 to 300 mils (2.54 to 7.62 mm), and preferably the second orifice, and more preferably the first and second orifices, being fixed relative to the central channel.

222. Apparatus according to claim 13, having a plurality of co-injection nozzle means each for co-injecting at least three streams of melt materials into a given cavity to form a multi-layer article therefrom, wherein each nozzle means (296) has an axially extending cylindrical central channel (540), a gate (596)in communication with the central channel, and at least three polymer stream passageways (e.g. 460, 500, 440) each having an orifice preferably fixed relative to the central channel (540), there being two of said at least three orifices close to the gate, the first (462) of said orifices being proximate the gate (596), the second (502) of said orifices being adjacent the first orifice, and the third orifice (e.g. 440) being remote from said gate, each of said first and second orifices (462, 502) being narrow, annular and defined by a leading lip (e.g. 461) and a trailing lip (e.g. 523), said central channel (540) having a combining area which is a cylindrical portion defined at either end by the forward lip of the first orifice (462) and the trailing lip of the annular orifice most remote from the gate in which area all polymer streams combine into a combined flow stream for injection from the nozzle, and wherein said combining area has a volume no greater than about 5% of the volume of the injection cavity (102) into which the combined polymer flow stream is injected from the nozzle (296).

223. Apparatus according to claim 221 or 222, wherein the nozzle means (296) includes means (800) axially moveable forward through the combining area towards the gate (596) for clearing the combined polymer flow stream from the combining area.

224. Apparatus according to claim 223, wherein the clearing means includes valve means (800, 834) adapted at its forward end to provide an area for accumulating polymer material prior to effecting its clearing action.

225. Apparatus according to claim 221, wherein there is also included valve means (800, 834) adapted to be placed in a position in the combining area wherein the valve means block and prevent the flow of polymer material through at least all of the orifices (e.g. 462, 502) communicating with the combining area.

226. Apparatus according to claim 221, wherein the passageway (460) having the first orifice (462) has a leading wall (OW) which extends diagonally towards the gate and towards the axis of the central channel and communicates with the leading lip (461) of the first orifice, such that the end portion of the leading wall is closer to the axis of the central channel (540) than the trailing lip of said orifice, and wherein the valve comprises a sleeve (800) which has a tapered mouth which defines the sleeve open end and is adapted to abut against the end portion of said leading wall (OW) to prevent further forward movement of the sleeve in the central channel toward the gate (596) and to block said first orifice (462).

227. Apparatus according to any of claims 221 to 226, wherein the leading lip (461) of the first orifice (462) is within 100 to 900 mils (2.54 to 22.9 mm), e.g. 100 to 300 mils (2.54 to 7.62 mm) of the gate (596).

228. Apparatus according to claim 224 or any claim dependent on claim 224, including drive means cooperatively associated with the valve means (800,834) for driving the valve means, and wherein the valve means (800, 834) and drive means (918, 860, 856; 850, 844, 906) are adapted to enable the valve means to unblock all orifices within 15 to 300 centiseconds, e.g. 15 to 75 centiseconds.

229. Apparatus according to any of claims 221 to 228, wherein the center lines (190, 194) of each of the first and second orifices (462, 502) lie substantially perpendicular to the axis of the central channel (540).

230. Apparatus according to any of claims 221 to 229, wherein each of the first and second passageways (460, 500) has a tapered portion (478, 518) adjacent its orifice (462, 502) such that each orifice has a smaller cross-sectional gap than an adjacent upstream portion of its respective passageway.

231. Apparatus according to any of claims 221 to 230, wherein those orifices, irrespective of their number, which communicate with the combining area, are fixed relative to the central channel (540).

232. Apparatus according to claim 222 or any claim dependent on claim 222, wherein the combining area of the central channel (540) has a uniform cross-sectional area.

233. Apparatus according to any of claims 221 to 232, wherein there are at least three passageways (e.g. 460, 480, 500) with annular orifices (e.g. 462, 482, 502), preferably each fixed relative to the central channel (540) and preferably at least two of them (462, 502) open to the combining area.

234. A method of injection molding according to claim 1, comprising controlling the relative flow rates of two polymeric material melt flow streams to be co-molded and including the steps of providing two polymeric material melt flow streams and feeding them to a plurality of co-injection nozzle means (296) each having a central channel with an open end, a gate (596) thereat and a polymer flow stream passageway for each polymeric material melt flow stream, each passageway (e.g. 462,502) having an orifice opening to the central channel,
conducting each of the two polymeric material melt flow streams to common moving means (232,234,260,262) for moving each stream to its respective passageway, and
utilizing the common moving means to move the material streams through their passageways while positively partially blocking the flow of one of the flow streams and not blocking the flow of the other stream.

235. The method according to claim 234, wherein the blocking is effected at the orifices and, while positively partially blocking one of the orifices (e.g. 502), there is included the step of retarding the action of the moving means for reducing the flow of polymeric material to each of the orifices.

236. The method according to claim 234 or 235, comprising feeding into said co-injection nozzle means an additional melt flow stream via a passageway and orifice located between the said two passageways and orifices, and positively blocking the additional orifice while partially blocking the said one of the two first-mentioned flow streams.

237. A method according to claim 234, comprising providing five melt flow streams and feeding them into the central channel (540) of each of said plurality of nozzle means (296), each of which has five melt flow stream passageways, each having an orifice opening to the central channel, wherein
(i) the first orifice (462) is located closer to the open end than the other orifices for routing material to the channel for forming an outside surface layer (B) of the article,
(ii) the third orifice (440) is farther from the open end than the other orifices for routing material to the channel for forming the inside surface layer (A) of the article,
(iii) the second orifice (502) is located between the first and third orifices for routing a polymeric material to the channel for forming an internal layer of the article,
(iv) a fourth orifice (482) is located intermediate the first and second orifices (462,502) for routing a polymeric material to the channel for forming an intermediate layer between the first and the internal layer of the article, and
(v) a fifth orifice (522) is located intermediate the second and third orifices (502,440) for routing a polymeric material to the channel for forming an intermediate layer between the internal layer and the inside surface layer of the article,
the method further comprising actuating valve means (800,834) in each nozzle means central channel (540) for blocking, unblocking and controlling the flow and non-flow of the respective materials from their respective five orifices into the central channel, operating a common moving means associated with both of the outside and inside surface materials for moving them into and through their respective passageways and orifices, operating a common moving means associated with both of the intermediate materials for moving them into and through their respective passageways and orifices, and
moving the melt flow streams through the first and third passageways at a first rate of flow while utilizing the valve means for not blocking the first orifice (462) and for partially blocking the third orifice (440), and/or
moving the melt flow stream through the fourth and fifth passageways at a first rate of flow while utilizing the valve means for not blocking the fourth orifice (482) and for partially blocking the fifth orifice (522).

238. The method according to claim 237, wherein during moving of the melt flow streams through the first and third orifices (462,440), there is included the step of utilizing the moving means to reduce the flow rate to a level which is less than the first flow rate.

239. The method according to claim 237 or 238, comprising
utilizing the valve means (800,832) in said co-injection nozzle means for injecting a combined stream of the materials to form the five layered article, by
(i) preventing flow of polymeric material through the fourth, second and fifth orifices (482,502,522) while allowing flow of polymer material through the third orifice (440),
(ii) then also allowing the flow of polymeric material through the first orifice (462) while continuing to prevent flow through the fourth, second and fifth orifices (482,502,522),
(iii) allowing the flow of polymeric material through the fourth, second and fifth orifices while allowing polymeric material to flow through the first and third orifices (462,440),
(iv) reducing the flow of polymeric material through the third orifice (440) by partially blocking said third orifice while utilizing the common moving means associated with said orifice to reduce the flow of polymer material to the first and third orifices, and while allowing polymeric material to flow through the fourth, second and fifth orifices,
(v) reducing the flow of polymeric material through the fifth orifice (522) by partially blocking the fifth orifice and utilizing the common moving means associated with said orifice for reducing the flow of polymeric material to the fourth and fifth orifice,
(vi) terminating the flow of polymeric material through the second orifice (502) and then through the fourth orifice (482), and
(vii) restricting the flow of polymeric material through the second orifice (502) while allowing flow of polymeric material through the first or third orifices or both the first and third orifices to knit the internal layer material with itself through the inside layer material and to substantially encapsulate the internal layer within the inside and/or outside layer material.

240. A method according to any of claims 234 to 239, for co-molding a plurality of articles from at least two of said melt flow streams, comprising injection molding using a plurality of substantially identical co-injection nozzle means (296), and utilizing common moving means (232,234,260,262) operative to move the at least two melt streams to each of the nozzle means, and blocking, unblocking or partially blocking the at least two melt streams in each of the nozzle means (296) by valve means (800,832) therein, said valve means preferably being substantially identical and preferably operable substantially simultaneously.

241. A method according to claim 1 of injection molding multi-layer plastics articles by creating multi-layer substantially concentric combined streams of at least three polymeric materials and co-injecting the combined streams into cavities to form the multi-layer articles, the combined streams having an outer structural material layer for forming the outer layer of each article, a core of structural material for forming the inner layer of the article, and one or more intermediate layer(s) of material for forming an internal layer(s) of the article, the method including the use of a plurality of co-injection nozzle means each having a gate (596) at one end, a cylindrical central channel (540) opening to the gate, and a plurality of at least three polymer passageways communicating with the central channel, of which at least the first and second passageways are annular and have annular orifices (462,502) opening to the central channel, the first orifice (462) being located closer to the gate than the other orifices for routing the outer layer structural material into the channel, the third orifice (440) being farther from the gate (596) than said first or second orifices for routing the core material into the channel, and the second orifice (462) being positioned adjacent to the first orifice for routing intermediate layer material into the channel, and the method further including controlling the thickness, uniformity and radial position of the internal layer in the combined stream by providing and utilizing means either in all the annular polymer flow stream passageways or at least in the first and second passageways for balancing the flow of the respective polymer flow streams passing through the said passageways such that, as the respective streams enter the central channel (540), each is substantially uniform in terms of pressure and temperature about its circumference and in the combining area of the nozzle means (296), the respective layers which form the combined stream are substantially concentric relative to each other, the respective polymer streams preferably being condensed phase polymeric materials.

242. The method according to claim 241, wherein the core structural material to form the inner layer of the article is disposed concentric relative to the axis of the central channel (540) when the material to form the outer layer of the article is introduced into the central channel, and preferably the inner and outer layers are disposed substantially centered on the axis of the central channel when the internal layer material is introduced between them in the combining area of the central channel.

243. A method according to claim 1 of injection molding articles such as a parisons formed of a plurality of layers of plastics materials and including at least an inner structural layer, an internal layer, and an outer structural layer, the method comprising displacing each polymeric material to form a layer of the article from a respective source thereof to a plurality of co-injection nozzle means (296) each having a central channel (540) with a polymer stream combining area, and having a passageway and associated orifice for each layer to be formed, the passageway orifices (e.g. 462,502,440) opening to the central channel (540), and, to control the final lateral location of an internal layer in an article, in the course of its injection:
separately channelling the streams of the displaced polymer materials each to a passageway in each nozzle,
continuously controlling the displacement of each polymeric material, and
controlling the radial location of the internal layer within the combining area of the central channel, by positively controlling the flow and non-flow of the streams to form the outer and internal layers through their respective orifices by moving the streams past flow balancing means (e.g.464,466,506) operative in their respective passageways for selectively providing desired design flows for each of the said streams, and
displacing the outer and internal layer materials and the inner layer material(s) through their respective passageways to achieve their respective desired design flows, thereby to place annular streams of the respective materials uniformly radially in the combining area, and to control the radial location of the internal layer material in the combined flow stream in the combining area of the nozzle means (296).

244. The method according to claim 243, comprising introducing the outer structural material to each central channel (540) at an angle relative to the central channel combining area, and introducing the innermost structural material axially as a solid stream into the combining area, and wherein the method also includes the steps of physically blocking the orifices of the outer and internal layer materials and prepressurizing these layers in their passageways while their orifices are blocked, thereby to minimize the transient times required to reach the desired design flows and to control the volumetric flows of the outer and internal structural materials into the combining area.

245. The method according to claim 243, comprising introducing the outer structural material to each central channel (540) at an angle relative to the central channel material combining area, and by introducing the inner structural material axially as a solid stream into the combining area, and wherein the method includes the steps of pressurizing the polymer melt material for the outer layer in its passageway while blocking its orifice (462), then unblocking said orifice, and then as part of the displacing step, effecting a uniform onset of the flow of the outer structural material from all points of its passageway orifice (462) into the nozzle central channel (540).

246. The method according to claims 243 to 245, wherein the displacing step includes leaving the orifices (462) for the outer material unblocked for a time sufficient to obtain a continuous, uniform rate and volume of flow of the outer material during 90% of the injection cycle.

247. The method according to any of claims 243 to 246, further including the steps of pressurizing the internal layer material or this material and the inner layer material while the orifice (440) therefor is blocked, and then unblocking the orifice and effecting a uniform initial flow rate of the or each material across its passageway orifice at the start of the injection cycle, and maintaining a continuous flow in terms of velocity and volumetric rate of all materials during most of the injection cycle.

248. The method according to claim 244, wherein the pressurizing step is effected during the displacing step to subject the polymer melt material for the outer layer while it is in its passageway and its orifice (e.g. 462) is blocked to a first pressure which would be sufficient to cause the material to flow into the central channel (540) if its orifice (462) was unblocked, and, prior to allowing flow of the outer layer material through its orifice, operating means (232) to displace the said outer layer material in its passageway and thereby raise it to a second pressure greater than the first pressure and sufficient to create, when its orifice (462) is unblocked, a surge of said material as an onset annular flow from all points of its orifice into the central channel (540), the resulting flow stream being uniform when considered relative to a plane perpendicular to the axis of the central channel, the said second pressure being less than that which would cause leakage of the outer layer material past the flow-blocking means (800,832) into the channel, and, during and after the unblocking of the outer layer orifice (462), increasing the rate of polymer displacement to approach and maintain a desired design substantially steady flow rate of the said material through the orifice (462) therefor into the central channel (540).

249. A method according to claim 1, involving use of a plurality of nozzle means (296), each of which has an open end with a gate (596) thereat, an axially extending cylindrical central channel (540) in communication with the gate, and a passageway with an annular orifice (e.g. 502) in communication with the nozzle central channel, and feeding at least first and second polymeric materials to each nozzle means for co-injection therefrom, the method further including the steps of
(a) providing the second polymeric melt material in the passageway and preventing the material from flowing through the orifice (502) into the central channel (540),
(b) flowing a melt stream of the first polymeric material through the central channel (540) past the orifice (502),
(c) while the first polymeric material is flowing through the central channel and while continuing to prevent the second material from flowing through the orifice (502), subjecting the second material in the passageway to pressure which at all points around the orifice is greater than the ambient pressure of the first material stream at circumferential positions which correspond to the said points, the applied pressure, for example being uniform at all points around the annular orifice, and
(d)after pressurizing the second material, permitting it to flow into the channel (540) via the orifice (502), the pressure applied to the second material being sufficient to establish onset of flow of the second material from all points around the orifice substantially simultaneously.

250. The method according to claim 249, wherein during step (d), pressure is maintained on the second material in the passageway sufficient to establish and maintain a substantially uniform and continuing steady rate of flow simultaneously from all points around the orifice (502) into the central channel (540).

251. The method according to claim 249 or claim 250, wherein preventing and permitting flow of the second material are effected by utilizing valve means (800,834) operative in the central channel (540) of the nozzle means (296).

252. The method according to claim 249, 250, or 251, wherein the annular orifice (502) has a center line substantially perpendicular to the axis of the central channel.

253. The method according to any of claims 249 to 252 for producing multi-layer injected articles having internal layers, wherein one or more melt materials are caused to flow along the central channel (540) of each nozzle means (296) and the second material, to form the internal layer of the article, is pressurised to a pressure greater than the ambient pressure of the already flowing one or more materials and thereafter caused to flow substantially simultaneously from all points around the orifice (502) so as to form a layer surrounding the polymeric melt material already flowing in the central channel.

254. The method according to claim 253, wherein the applied pressure is sufficient to establish onset of flow of the internal layer material and provide it with an annular leading edge sufficiently thick at every point therearound that the internal layer in a marginal end portion of the injected article is at least 1% of the total thickness of the article at said marginal end portion.

255. The method of claim 254 wherein the permitting step includes the step of continuing to subject the material to a pressure sufficient to maintain a substantially uniformly thick and continuing steady flow rate of internal layer material simultaneously over all points of the orifice into the central channel (540).

256. The method according to claim 253, 254 or 255, wherein each co-injection nozzle means is part of a multi-polymer injection molding machine having a runner system to convey polymeric melt materials from sources thereof via melt displacing means (232,234,252) to the nozzle means, and the method including physically blocking the annular orifice (502) of each nozzle means and, while so blocking the orifice, moving polymeric melt material for one or more layers into the runner system and, while flowing polymeric melt material for one or more layers other than the internal layer through the central channel (540) past the blocked orifice (502), subjecting the polymeric melt material to form the internal layer in the runner system to a pressure which at all points about the blocked orifice is greater than the ambient pressure of the melt material flowing in the central channel (540) at circumferential points which correspond to said points about the orifice, and unblocking said orifice to obtain onset of flow into the central channel of the internal layer material from all points around the orifice simultaneously.

257. The method according to claim 256, wherein the blocked orifice (502) is substantially perpendicular to the axis of the central channel (540) and physically blocking and unblocking flow through the orifice is performed by operating valve means (800,832) located in the central channel (540) of the nozzle means (296).

258. The method according to claim 256 or 257, wherein the pressure subjecting step is effected by operation of a polymer supply means (252), exterior of the runner system, for the internal layer material.

259. The method according to any of claims 256 to 258, wherein the pressure subjecting step is effected in two stages, first by providing a residual pressure on the internal layer material lower than the desired pressure at which it is to flow through the blocked orifice (502), and then before or upon effecting the allowing or unblocking step, raising the pressure to said desired pressure at which the internal layer material is to flow through the orifice.

260. The method according to claim 259 wherein the pressure raising step is effected rapidly, at a rate of 500 to 1000 for instance 700 psi/centisecond (34.5-68.9,f.i. 48.2 bar/centisecond).

261. The method according to claim 259, wherein the residual pressure is established by reciprocating melt displacing means (252) for the internal layer material.

262. A method according to claim 1, involving use of a multi-polymer injection molding machine having means (e.g. 232,234,252) to displace polymer melt materials from sources thereof along runners (e.g. in 288) to passageways and associated orifices of a plurality of co-injection nozzle means (296), for delivery to a central channel (540) in each nozzle means, the method further including the steps of blocking an orifice (502) of a nozzle means physically to prevent polymer melt material in the passageway leading to that orifice from flowing into the central channel (540) and, while so blocking the orifice, retracting the displacement means (e.g. 252) for the said polymer melt material to accommodate fresh polymer melt material from the source thereof upstream of the displacement means and external to the runner system, the pressure of the fresh melt generating in the runner therefor a residual pressure sufficient to increase the rate of time response of the polymer melt material in the runner (in 288) to subsequent movements of the displacement means (252), and the amount of retraction and the pressure cooperatively providing for a sufficient quantity of fresh melt for the corresponding layer of the article to be injection molded; and then, prior to unblocking the orifice (502), actuating the displacement means (252) towards the orifice to compress the melt material further and raise the pressure in the runner to a level greater than the residual pressure, and sufficiently elevated that, when the orifice (502) is unblocked, flow of the prepressurized polymer melt material commences substantially simultaneously from all points in the orifice into the central channel (540).

263. The method according to claim 262, wherein the elevated pressure is sufficient to establish an onset of flow whereby the melt material has a leading edge thickness of a magnitude at every point about its periphery such that in a marginal end portion of the article, the said layer is at least 1% of the total thickness of the marginal end portion.

264. The method according to claim 262 or 263, comprising, after unblocking the orifice (502), continuing to subject the material to a pressure sufficient to maintain a substantially uniformly thick flow thereof at a continuing steady rate of flow from all points around the orifice into the central channel (540).

265. A method according to claim 1, involving use of a multi-polymer injection molding machine, which has a runner system (e.g. in 288) extending from displacement means (e.g. 252) for at least one polymer melt material to a plurality of co-injection nozzle means (296) each having a corresponding passageway for said polymer melt material and an orifice (502) which in turn communicates the passageway with a central channel (540) in the nozzle, the method further including the steps, for the at least one polymer material, of blocking the orifice (502) of a nozzle (596) physically to prevent the polymer melt material in the passageway from flowing into the central channel (540) and, while so blocking the orifice, moving polymer melt material into that portion of the runner system extending to said blocked orifice (502), discerning the level of residual pressure of polymer melt material moved into said portion of the runner system, and displacing the polymer melt material in the runner system towards the orifice (502) to compress the material and elevate the pressure in the runner system to a level greater than the first-mentioned pressure and which is sufficiently elevated that, upon unblocking the orifice (502), onset of flow of the prepressurized polymer melt material occurs substantially simultaneously and uniformly from all points of the orifice into the central channel (540).

266. A method according to claim 265 comprising establishing an onset of flow which is uniformly thick.

267. A method according to claim 1 of forming multi-layer plastics articles each having a marginal edge portion, first and second surface layers (B,A), and at least one internal layer (D) therebetween, comprising use of an injection molding machine having a runner system (e.g. in 288) to convey polymer melt materials to a plurality of co-injection nozzle means (296) each having a flow passageway for each melt material to form a layer of the article, a central channel (540), and an orifice for each passageway in communication with the central channel, means (e.g. 232,234,252) for displacing each of the melt materials to the orifices (e.g. 464,502,440) and into the nozzle central channel, means for supplying the melt materials into the runner system, and means (800,832) for physically blocking and unblocking the orifices, the method further including the steps of blocking at least the orifice (502) for the material to form the internal layer to prevent flow thereof into the central channel (540), moving polymer melt materials into the runner system, discerning the level of residual pressure of the polymer melt materials that have been moved into the runner system, displacing the internal layer melt material (C) in its passageway towards its orifice (502) to compress the material and raise the pressure of that material to a level greater than the first discerned pressure, flowing the first surface layer material (A) into and along the central channel (540) while preventing flow of the internal layer material (C) into the central channel, flowing the second surface layer material (B) into and along the central channel as an annular stream about the flowing first surface layer material (A), unblocking the orifice (502) of the prepressurized internal layer material (C) to admit it into the central channel and into the interface between the flowing inner and outer surface materials (A,B), the level of pressure of the internal layer material (C) upon unblocking its orifice (502) being such that its onset of flow occurs rapidly and substantially simultaneously and uniformly, e.g. uniformly thickly from all points of its orifice into the central channel (540) to form an annular layer between the flowing first and second surface layer materials and such that the leading edge of the flowing internal layer material (C) lies in a plane substantially perpendicular to the axis of the central channel whereby, injection of the combined flow stream into the injection cavity (102) associated with the said nozzle (296), results in the internal layer material extending substantially uniformly into and about the marginal edge portion of the article.

268. A method according to claim 267, for forming an open-ended, five layer plastics article having between the said surface layers, one internal layer (C), and two intermediate layers (D,E) respectively between the internal layer and each surface layer (A,B), wherein the injection molding machine has a plurality of co-injection nozzle means (296) each having a polymer melt material flow passageway for each of said materials and associated orifices (462,482,502,522,440) opening to the central channel (540), means (232,234,252,260,262) for displacing each of the polymer melt materials fed into the runner system to the orifices and into the central channel of each co-injection nozzle, and means (800,834) for physically blocking and unblocking at least the orifices for the materials to form the internal and intermediate layers (C,D,E), the method comprising blocking these orifices to prevent the internal (C) and intermediate (D,E) materials from flowing into the central channel (540) of each said nozzle means, moving polymer melt materials into the runner system and discerning the level of residual pressure of the polymer melt materials that have been moved into the runner system, thereafter displacing the polymer melt materials for the internal (C) and intermediate (D,E) layers towards their blocked orifices (502,522,482) to compress the materials and raise the pressure in the system for those materials to a level greater than the first discerned level such that upon unblocking the orifices (502,522,482) of the prepressurized internal and intermediate layer materials, the onset of flow of each of the internal layer (C) and intermediate (D,E) layer materials occurs, preferably annularly, substantially simultaneously and uniformly from their respective orifices into the central channel (540) of each nozzle means and, upon injection, the internal layer material (C) and the intermediate layer materials (D,E) terminate substantially uniformly in and about the terminal portion of each article and each terminates in a plane substantially perpendicular to a central axis of the article.

269. The method according to claim 267 or 268, further including the step of increasing the rate of displacement of the melt material or any selected number of melt materials to form a layer or layers between the surface layers (A, B) as the orifice therefor is unblocked, to approach and maintain substantially steady flow rate of the said material(s) into the channel (540).

270. A method according to claim 1 of injection molding multi-layer plastics articles each having an outer surface layer (B), an inner surface layer (A) and one or more internal layers (C,D,E) therebetween, which involves use of a molding machine furnished with a plurality of co-injection nozzle means (296) each having an open end with a gate (596), an axially-extending cylindrical central channel (540)in communication with the gate, a passageway for each polymeric material stream to form a layer of the article, the passageway for the or an internal layer stream (C,D,E) communicating via an annular orifice (502,522,482) with the central channel, the said annular orifice having a center line substantially perpendicular to the axis of the central channel, and the passageway for the outer surface layer stream (B) also having an annular orifice (464) in communication with the central channel at a location between the gate (596) and the orifice or orifices (502,522,482) for the internal layer stream or streams, the outer layer orifice (464) having its center line substantially perpendicular to the axis of the central channel, and the machine including means (234) for providing a flow of the material to form the inner surface layer (A) into the central channel (540) from a location more remote from the gate (596) than any of the aforesaid orifices, the method further including the steps of:
utilizing one or more condensed phase polymeric materials as the or an internal layer melt stream,
flowing the inner layer melt stream (A) into the central channel (540) as a core stream past the or each internal melt stream orifice (502,522,482),
flowing the outer layer melt stream (B) into the central channel to surround the core stream flowing therein,
providing the combined flowing streams for the outer and inner layers (B,A) with a selected ambient pressure in the central channel,
supplying the or an internal layer melt stream (C,D or E) into the passageway therefor,
imparting a selected first pressure to the or an internal layer melt stream (C,D or E) at the orifice therefor, the said first pressure being below that pressure which, relative to the ambient pressure, would cause the said internal layer material to flow into the central channel (540),
adjusting the first pressure to a level equal to or just below the said ambient pressure to compress the said internal layer melt stream to provide said stream with an enhanced flow response when onset of flow into the central channel (540) is activated and to prevent back flow of the already flowing materials (B,A) into the said internal layer orifice, and
activating rapid onset flow of the said internal layer melt stream (C,D or E) through the orifice therefor into the central channel by creating a sudden change in the relative pressures between the said internal layer material (C,D or E) at the said orifice and the ambient pressure in the central channel, whereby the pressure of the said internal layer material is rapidly changed to a level sufficiently high relative to the ambient pressure that its onset of flow as an annular stream into the central channel occurs substantially simultaneously from all points around the said orifice (502,522,482).

271. The method according to claim 270, wherein the relative pressure change is effected either by rapidly increasing the pressure of the said internal layer material or by decreasing the ambient pressure of the streams (B,A) already flowing in the central channel (540) or by a combination of the pressure-increasing and pressure-decreasing expedients.

272. The method according to claim 270 or 271, comprising injecting three internal layer materials (C,D and E) for each of which there is in each nozzle (296) a passageway with its own annular orifice (502,522,482) communicating with the central channel (540), the orifices being located axially closely adjacent each other, and the method involves flowing each internal layer material as an independent stream into the central channel of the nozzle.

273. The method according to claim 270 or 271, comprising injecting three internal layer materials (C,D and E) for each of which there is a passageway, and the passageways communicate with the at least one annular orifice, and the method involves pressurizing each of the internal materials and causing them to flow simultaneously through the orifice into the central channel (540) as a combined internal layer stream.

274. A method according to claim 1, wherein a melt stream of polymeric material is admitted via annular orifices into the central channels (540) of a plurality of co-injection nozzle means, each nozzle means (296) having an open end with a gate (596) thereat, an axially extending, e.g. cylindrical central channel (540) in communication with the gate, and a passageway (500) opening via an annular orifice (e.g. 502) to the nozzle central channel, the orifice (502) having a center line substantially perpendicular to the central channel axis, and the method further including the steps of
(a) providing a melt stream of a preferably condensed phase polymeric material in the passageway while preventing it from flowing through the orifice (502),
(b) while continuing to prevent it from flowing through the orifice (502), subjecting the melt material in the passageway to an initial pressure which is at least sufficient to cause the material to flow into the central channel (540), and
(c)permitting the pressurized material to flow through the orifice whereby its initial flow occurs substantially uniformly and simultaneously from all portions of the annular passageway (500) into the central channel (540).

275. The method according to claim 274, wherein the polymeric material is subjected to the initial pressure which is at least 20% greater than the minimum necessary for the material to flow into the central channel (540).

276. The method according to claim 274 or 275, wherein the initial pressure is sufficient to densify the material in the passageway adjacent the orifice (502) to a density of 2 to 5% or more greater than its atmospheric density.

277. The method according to any of claims 274 to 276, wherein step (c) involves maintaining a pressure on the material sufficient to establish and maintain a substantially uniform initial and continuing steady rate of flow simultaneously from all points of the orifice (502) into the central channel (540).

278. A method according to any of claims 269 to 277, for introducing the material (e.g. C) from the said annular internal passageway orifice (502) into the central channel (540) of each nozzle means (296) so as to surround a stream of another melt material (e.g. A) already flowing in the central channel, comprising
flowing the other melt material (A) through the nozzle central channel (540) from a location upstream of the annular orifice (502) while preventing flow of the first material (C) into the central channel from the orifice (502),
pressurizing the first material (C) in the passageway (500), while continuing to prevent its flow, to raise the first material to a pressure sufficiently greater than the ambient pressure in the nozzle central channel (540) and sufficiently greater than the pressure imparted to the said other flowing material (A), as to densify the first material (C) in the passageway adjacent the orifice (502) and ensure that the initial flow of the first material occurs simultaneously and uniformly from all points around the passageway orifice therefor when the material is permitted to flow therethrough.

279. The method according to claim 278, wherein the first material (C) is fed into the nozzle (296) from a first passageway (500) and associated annular orifice (502), the said other material (A) is fed into the nozzle via an orifice (440) located more remote from the gate than the first orifice (502), and a further melt material (B) is fed into the nozzle via a further passageway (460) and associated annular orifice (464) which is positioned between the first orifice (502) and the gate, and, prior to allowing flow of the first material through the first orifice (502), the further melt material is flowed through the further passageway (460) and orifice (464) so as to surround the already flowing stream of the said other material which has passed through the orifice (440) therefor, and the pressurized first material (C) from the first orifice (502) is admitted to the nozzle (296) at a pressure sufficient to cause the first material to flow and distribute itself annularly about the already flowing other material (A) thereby to provide a substantially concentric combined stream comprising a radially uniform core of the already flowing other material from the orifice (440) therefor, an intervening uniform layer (C) surrounding the said core from the first orifice (502), and an encompassing uniform layer (B) of material from the further orifice (464).

280. The method according to claim 279, wherein the pressure imparted to the first material is at least 20% higher than the pressure of the already flowing other and further materials.

281. The method according to any of claims 274 to 280, comprising imparting an additional pressure upon the internal material (C) once it is allowed to flow to maintain an effective total pressure sufficient to approach and maintain a substantially steady flow rate of said material through the second orifice into said channel (540).

282. The method according to claim 274 or 279, wherein each said nozzle means (296) has passageways (e.g. 460,480,500,520) and orifices (464,482,502,522) for conveying a plurality of melt materials (e.g. B,E,C,D) into the central passage (540) thereof, and the method further includes feeding a polymeric melt stream preferably of condensed phase polymeric material to each passageway while the materials are prevented from flowing through the orifices (482,502,522) and, while continuing to prevent the materials from flowing through the orifices, subjecting the materials in their passageways to first pressures which are insufficient to cause leakage of the materials through their orifices into the central channel or from one orifice into another orifice, yet which would be sufficient to cause the materials to flow into the central channel if their flows were not prevented, and prior to allowing the materials to flow through their orifices, separately and independently raising the materials in the passageways to second pressures greater than the first pressures and sufficient to create, when their orifices are unblocked, a surge of the materials and uniform onset annular flows thereof into the central channel when leading edges of the respective flow streams are considered relative to planes perpendicular to the axis of the central channel, the second pressures being of sufficient magnitude and being imparted for a duration of time sufficient to ensure the uniform onset flows of the materials (e.g. E,C,D) occur simultaneously from all points of their orifices.

283. The method according to claim 282, comprising imparting a subsequent pressure on the polymeric materials as each flows through its orifice to maintain an effective driving force thereon sufficient for it to approach and maintain a substantially steady rate of flow through the orifice and into said channel.

284. A method according to claim 1 of injection molding multi-layer plastics articles by creating multi-layer substantially concentric combined streams of at least three polymer materials (e.g. B,C,A) and injecting the combined streams into cavities to form the multi-layer articles, each combined stream having an outer structural material layer (B) for forming the outer layer of the article, a core of structural material for forming the inner layer (A) of the article, and one or more intermediate layer(s) (C) for forming one or more internal layer(s) of the article, the method involving the use of a plurality of nozzle means (296) each having a gate (596) at one end, and a cylindrical central channel (540) opening to the gate, the nozzle means further including at least three polymer passageways communicating with the central channel, of which at least the first and second passageways (460,500) open to the channel via annular orifices (464,502) whose center line lie substantially perpendicular to the axis of the central channel, the first orifice being located closer to the gate than the other orifices for routing the outer structural material (B) into the channel, the third orifice (e.g. 440) being farther from the gate than said first and second orifices for routing the core material (A) into the channel, and the second orifice (502) being positioned adjacent the first orifice for routing intermediate layer material (C) into the channel, there being in the nozzle central channel valve means (800,834) operative adjacent the orifices and adapted to block and unblock the second orifice (502) for controlling flow of the intermediate polymer material (C) therethrough and for independently controlling flow or non-flow of the core material (A) through the third orifice (440), and the method further comprising the steps of
(1) preventing flow of polymer material from all of the orifices,
(2) continuing to prevent flow of polymer material (C) through the second orifice (502) while allowing flow of structural material through one or both of the first and third orifices (464,440),
(3) prior to unblocking the second orifice, subjecting the material in the second passageway (500) to a pressure sufficient to cause the material to flow into the central channel (540) if its orifice (502) was unblocked, yet less than that which would cause leakage of the material through the second orifice past the blocking valve means (800,834), the pressure being sufficient, upon unblocking the second orifice, to create a surge of the polymer material through the orifice so that the onset of flow into the central channel is established as an annular flow stream which is uniform when considered relative to a plane perpendicular to the axis of the central channel,
(4) after unblocking the second orifice (502), increasing the rate of movement of the material to obtain a substantially steady rate of flow thereof through the second orifice,
(5) preventing flow of polymer material through the third orifice (440) while allowing the pressurized material to flow through the second orifice (502), to knit the pressurized intermediate layer material (C) with itself through the core material, and
(6) preventing the flow through the second orifice (502) while allowing flow through the first orifice (464) and, either moving the valve means (800,834) forward to push the knit intermediate layer forward and substantially encapsulate the knit internal layer with material (B) from the first orifice (464), or accumulating material (A) that has flowed from the third orifice (440) at a forward end of the valve means, and moving the valve means forward to substantially encapsulate the knit intermediate layer material (C) with the accumulated material (A) from the third orifice.

285. Apparatus according to claim 284, comprising subjecting the polymer material in the second passage-way (500) to a first pressure which would be sufficient to cause the material to flow into the central channel (540) if its orifice (502) was unblocked, and
prior to allowing flow through the second passageway (500), subjecting said material in the second passageway to a second pressure greater than the first pressure yet less than that which would cause leakage of the material through the orifice (502) past the blocking valve means (800,834), the said second pressure being sufficient to create when said orifice is unblocked, a surge of the polymer material and a uniform onset annular flow of polymer material into the central channel (540) when the flow stream is considered relative to a plane perpendicular to the axis of the central channel.

286. The method according to claim 284 or 285, comprising subjecting the intermediate layer (C) material in the second passageway (500) to a first pressure sufficient to cause it to flow if the second orifice (502) were unblocked and thereafter subjecting the said material to an increased pressure which is less than that which would cause the said leakage, the said material when so pressurized being caused to surge through the second orifice (502) into the central channel (540).

287. The method according to claim 284, 285 or 286, further comprising, prior to allowing flow through the first orifice (464), the steps of subjecting the material in the first passageway (460) to a pressure greater than the first pressure and sufficient when its orifice (464) is unblocked to create a surge of the material through the orifice so that the onset of its flow into the central channel (540) is uniform when the resulting flow stream is considered relative to a plane perpendicular to the axis of the central channel, the said pressure being less than that which would cause leakage of the material through the first orifice (464) past the blocking valve means (800,834) into the channel, and after allowing the flow of material through the first orifice, increasing the rate of flow therethrough to obtain a substantially steady rate of flow through the first orifice.

288. The method according to claim 284, 285, 286 or 287, further comprising, prior to allowing the flow of core structural material (A) through the third orifice (440), the steps of subjecting the core material in the third passageway to a pressure greater than the first pressure and sufficient to prevent any detrimental pressure drop when its orifice (440) is unblocked, and upon unblocking of the orifice, to create an immediate flow response of the core material into the central channel (540), the pressure being less than that which would cause leakage of the core material (A) through the third orifice (440) past the blocking valve means (800,834) into the channel (540), and after allowing the flow of core material through the third orifice (440), modifying the rate of flow therethrough to obtain a substantially steady rate of flow through the third orifice.

289. A method according to claim 1 of injection molding multi-layer plastics articles by creating multi-layer substantially concentric combined streams of at least three polymeric materials and injecting the streams into cavities to form the articles, the combined streams having an outer structural material layer (B) for forming the outer layer of the article, a core of structural material (A) for forming the inner layer of the article, and one or more intermediate layers (e.g. E,C,D) of material for forming an internal layer(s) of the article, involving the use of a plurality of co-injection nozzle means (296) each having a gate (596) at one end and a cylindrical central channel (540) opening to the gate, the nozzle means further including at least three polymer passageways (460,500,440) communicating with the central channel, of which at least the first and second passageways open via an annular orifice (464,502) to the central channel and each orifice having a center line in a plane substantially perpendicular to the axis of the central channel, the first orifice (464) being located closer to the gate than the other orifices for routing the outer layer structural material (B) into the channel (540), the third orifice (440) being farther than said first or second orifices (464,502) from the gate for routing the core material (A) into the channel, and the second orifice (502) being positioned adjacent to the first orifice (464) for routing intermediate layer material (C) into the channel, the nozzle means further including valve means (800,834) operative in the nozzle central channel adjacent the orifices to prevent and allow flow of polymer materials through the first, second and third orifices, and the method further including the steps of:
utilizing the valve means (800,834) for blocking the first and second orifices (464,502),
subjecting the polymer materials (B,C) in the passageways blocked by said valve means to a first pressure which would be sufficient to cause the blocked materials to flow into the central channel (540) if the valve means were not blocking the first and second orifices,
just before moving the valve means (800,834) to unblock said first and second orifices (464,502), subjecting the materials (B,C) in the said passageways (460,500) to a second pressure greater than the first pressure, the second pressure being sufficient to establish a uniform onset annular flow of the said materials into the central channel (540) when the valve means is moved, each flow having an onset or leading edge in a plane substantially perpendicular to the axis of the central channel,
after subjecting the materials in the said passageways to the second pressure, unblocking the first and second orifices (464,502) by moving the valve means to provide the uniform onset annular flows, into the central channel,
and maintaining a pressure on the said materials at least for 10 to 80 centiseconds so as to obtain a steady flow of said materials through said first and second orifices (464,502) and thereby maintain uniform thickness about the annular material flows from the first and second orifice, the materials subjected to pressurization preferably being condensed phase polymeric materials.

290. A method according to claim 1, of injection molding to produce multi-layer article such as parisons the walls of which have inside layers (A), outside layers (B) and at least one internal layer (C) between said inside and outside layers, the method comprising the use of a plurality of co-injection nozzle means (296) each having a central channel (540) and means (800,834) in the nozzle means moveable to selected positions to prevent and to permit flow into said channel of at least the material to comprise said internal layer (C), and further comprising the steps of moving the said means (800,834) to a first position preventing flow into said channel (540) of the material to comprise said internal layer (C), commencing the flow into said channel of the material to comprise said outside layer (B) while maintaining a flow of the material to comprise said inside layer (A), raising the pressure of said internal layer material (C) to a level greater than the pressure in said channel of either of the materials to comprise said inside layer and said outside layer, and moving the said means (800,834) to a second position to permit flow into the channel of the material to comprise said internal layer (C), the materials preferably being caused to enter the channel so as flow therealong concentrically with respect to one another.

291. A method according to any of claims 249 to 290, further comprising introducing outer structural material (B) to the central channel (540) at an angle relative to the central channel and introducing innermost structural material (A) axially as a solid stream into central channel, wherein the method also including the steps of physically blocking the orifices (464,440) of the outer and internal layer materials and prepressurizing these layers (B,C) in their passageways while their orifices are blocked, thereby to minimize the transient times required to reach the desired design flows and to control the volumetric flows of the outer and internal structural materials into the combining area (540).

292. The method according to any of claims 249 to 290, comprising introducing the outer structural material (B) to the central channel (540) at an angle relative to the central channel, and by introducing the inner structural material (A) axially as a solid stream into the combining area, the method including the steps of pressurizing the polymer melt material for the outer layer (B) in its passageway (460) while blocking its orifice (464), then unblocking said orifice, and then as part of a displacing step, effecting a uniform onset of the flow of the outer structural material (B) from all points of its passageway orifice (464) into the nozzle central channel.

293. The method according to claims 291 or 292, wherein the displacing step includes leaving the orifice (464) for the outer material (B) unblocked for a time sufficient to effect and maintain a continuous, uniform rate and volume of flow of the outer material during 90% of the injection cycle.

294. The method according to any of claims 291 to 293, further including the steps of pressurizing the internal layer material (C) or this material and an inner layer material (A) while the orifice therefor is blocked, and then unblocking the orifice and effecting a uniform initial flow rate of the said material across its passageway orifice at the start of the injection cycle, and maintaining a continuous flow in terms of velocity and volumetric rate of all materials during most of the injection cycle.

295. The method according to any of claims 291 to 294, wherein the pressurizing step is effected during a displacing step to subject the polymer melt material for the outer layer (B) while it is in its passageway (460) and its orifice (464) is blocked to a first pressure which would be sufficient to cause the material to flow into the central channel (540) if its orifice was unblocked, and, prior to allowing flow of the outer layer material (B) through its orifice, operating means to displace the said outer layer material in its passageway (460) and thereby raise it to a second pressure greater than the first pressure and sufficient to create, when its orifice (464) is unblocked, a surge of said material as an onset annular flow from all points of its orifice into the central channel (540), the resulting flow stream being uniform when considered relative to a plane perpendicular to the axis of the central channel, the said second pressure being less than that which would cause leakage of the outer layer material (B) past flow-blocking means (800,834) into the channel, and, during and after the unblocking of the outer orifice layer (B), increasing the rate of polymer displacement to a desired design, substantially steady flow rate of the said material through the orifice therefor into the central channel (540).

296. A method according to claim 1 of injection molding, involving injecting a multi-layer flow streams comprising three layers into the injection cavities, wherein the speed of flow of each layered stream is highest on a fast flow streamline positioned intermediate the boundaries of said layered stream, and including the steps of:
establishing flows of materials for a first layer (A) and a second layer (B) of the flow stream and forming an interface between the flowing first and second layers,
positioning the interface at a first location which is not coincident with said fast flow streamline,
interposing flow of material for a third layer (C) of the flow stream between said first and second layers, the third layer being at a position which is not coincident with said fast flow streamline, and either (i) moving the third layer (C) to a second location which is closer to, or substantially coincident with, or proximate said fast flow streamline, or (ii) moving the third layer (C) across the fast flow streamline to a second location not coincident therewith.

297. The method according to claim 296, comprising moving the flow of said third layer material (C) substantially immediately upon interposing it between said first and second layers (A,B).

298. The method according to claim 297, comprising moving the third layer (C) to said second location when or shortly after the flow of said third layer material has been interposed between said first and second layers (A,B) at substantially all places across the breadth of or at all places around the annulus of the layered stream.

299. The method according to claim 296, 297 or 298, comprising adjusting the relative rates of flow of said first and second layer materials (A,B) to move the location of said third layer (C).

300. The method according to claim 296, 297, 298 or 299, comprising selecting the rate of flow of the first layer material (A) and the rate of flow of the second layer material (B) to position said interface at the first location not coincident with the fast flow streamline.

301. The method according to any of claims 296 to 300, wherein each layered flow stream is formed in a corresponding nozzle (296) having an injection channel (540), e.g. centrally located, and then is injected into an associated injection cavity (102), the flow stream formed in said channel having a flow streamline which corresponds to the fast flow streamline in the injection cavity, and the first location of the interface in said channel (540) is not coincident with the flow streamline in said channel that corresponds to the fast flow streamline in the injection cavity, the third layer (C) being interposed between said first and second layers (A,B) at a position which is not coincident with the said flow streamline in the channel (540) that corresponds to the fast flow streamline in the injection cavity, and the third layer (C) either is moved to a second location in said channel which is closer to or substantially coincident with the flow streamline in said channel that corresponds to the fast flow streamline in the injection cavity, or is moved across the said flow streamline to the non-coincident second location.

302. The method according to any of claims 296 to 301, comprising forming the multi-layer flow stream comprising three layers for injection into an injection cavity into an annular or tubular layered stream, in which the second layer material (B) is formed around the first layer (A) material to establish an annular or tubular interface between the flowing materials of said first and second layers, the interface being positioned between the flowing materials of said first and second layers at the first location which is not coincident with said fast flow streamline, the latter being annular for preference.

303. The method according to any of claims 296 to 302, comprising forming the third layer (C) for interposition between the first and second layers as a plural layer composite from a plurality of constituent materials.

304. A method according to claim 1 or claim 102, wherein for overcoming bias of a portion of the terminal end of the internal layer of each multi-layer injection blow molded article or container, the method comprises folding over the biased terminal end portion to provide the internal layer with a substantially unbiased overall leading or terminal edge.

305. A method according to claim 1 for forming injection molded multi-layer rigid plastic parisons for forming blow molded containers wherein the side wall (26) of each parison has an internal layer (C) therein, characterised by injecting a multi-layer stream into an injection cavity, and during the injection step, causing a portion of the marginal end portion of the internal layer to fold over as the said portion moves into the cavity, to form a parison in said cavity having a portion (33) of the internal layer folded over within the marginal end portion (28,29) of the side wall (26).

306. The method according to claim 305, further including the step of causing the folded over portion (44) and the terminal end and unfolded portion of the marginal end portion of the internal layer (C) to be finally positioned in a substantially unbiased plane relative to the axis of the container.

307. Apparatus according to any of claims 13 to 27 or 47, including runner means (276, 288) having a forward end with a plurality of co-injection nozzle means (296) mounted therein, means (950, 282) for supporting the runner means, and means (956, 951; 974, 982) mounting the runner means on the support means to allow the runner means (276, 288) to float axially, or both axially and radially, on the support means while the apparatus is in operation.

308. The apparatus according to claim 307, wherein the runner means (276, 288) is mounted and supported on its axial center line.

309. The apparatus according to claim 307 or claim 308, further including compensating means (340, 341, 986) for providing to the runner means (276, 288) a forward force sufficient to offset any rearward force from axial floatation of the runner means, resulting for example from injection back pressure and/or to thermal expansion during operation.

310. The apparatus according to claim 309, wherein the force compensating means includes at least one hydraulic cylinder (340, 341, 986) positioned such that the forward force is applied through and along the axial center line of the runner means, which axial center is, for example, coincident with the axial center line of the machine.

311. The apparatus according to claim 309 or claim 310, wherein the co-injection nozzle means (296) have exposed sprue faces adjacent the runner means (276, 288) forward end, and that there is a juxtaposed cavity member (104) having a plurality of injection cavities (102) each having a sprue face (439) for coaction with an associated juxtaposed nozzle sprue face, and wherein the force compensating means is operative to exert sufficient force to provide and maintain an effective pressure contact seal between the nozzle sprue faces and the cavity sprue faces during operation.

312. The apparatus according to any of claims 307 to 311, wherein portions of the runner means (276, 288) are mounted within structure of the apparatus with a clearance (G) between the runner means and the said structure to ensure freedom of the runner means to float axially, or both axially and radially, within the structure.

313. The apparatus according to claim 311 or claim 312, further including
a moveable platen (114),
support means in the form of a first fixed support means (282) spaced from the moveable platen and second support means, the runner means (276, 288) having the nozzle means (296) mounted therein being positioned between the moveable platen (114) and the fixed support means (282) and the second support means including the cavity (104) member positioned adjacent the forward face of the runner means for juxtaposition of the injection cavities (102) each with an associated nozzle means (296), the second support means being positioned between the first support means and the moveable platen, and serving to maintain the injection cavities (102) substantially in a common plane parallel to the nozzle faces (439) and to protect the runner means (288) against damage due to a clamping force exerted by the moveable platen (114) relative to the fixed support means (282), the runner means, fixed support means and second support means each being adapted to allow the runner means (276, 288) to float axially or both axially and radially relative to the support means due to injection back pressure and/or thermal expansion of the runner means (288).

314. The apparatus according to claim 313, wherein the cavity member (104) is an injection cavity bolster plate (950, 106) positioned adjacent the runner, between it and the moveable platen (114).

315. The apparatus according to claim 314, wherein the support means includes standoffs (122, 962, 963) extending from the bolster plate (950, 106) to the second support means.

316. The apparatus according to claim 315, wherein the support means (282) includes a bore (982) which extends therethrough for allowing the runner means (276) to float axially through the support means.

317. The apparatus according to any of claims 307 to 315, wherein the support means includes axial supporting bores (945, 982), one adjacent each of the forward and rearward ends of the runner means (288, 276), and the runner means includes axially extending elongated members (951, 276) mounted on the axial center line of the runner means, one at the forward end and one at its rearward end, each member being adapted to be seated in one of the respective axial supporting bores (945, 982) for supporting the runner means at each end, each member and associated bore being configured to allow the runner means to float within the support means.

318. The apparatus according to claim 317 when dependent on claim 314, wherein the forward axial supporting bore (945) is in the injection cavity bolster plate (950) and the rearward axial supporting bore is in the fixed support means (282).

319. A method according to any of claims 1 to 12, wherein a plurality of polymer material streams are fed along a runner means (276, 288) to each of the nozzle means (296), mounting the runner means (276, 288) on an axial center line thereof to allow it to float axially, radially or both axially and radially, due to thermal expansion and injection back pressure, and compensating for the rearward force exerted through the runner means during said axial floatation, by exerting on the runner means through and along its axial center line a forward force sufficient to compensate for the rearward force and sufficient to provide an effective pressure contact seal between the nozzles and the cavities during operation of the machine.

320. Apparatus according to any of claims 13 to 27 or 47, further including an elongated feeding device for redirecting and feeding polymer flow streams from a runner block to an injection nozzle (296) of the apparatus, wherein the device (294) is designed to receive a plurality of separate polymer flow streams from the runner block and, while maintaining the flow streams separate, to redirect them so as to flow axially out of a forward end of the device for entry into said nozzle, the device having a plurality of inlets (392 to 396) cut radially into its periphery, each for receiving one of the plurality of separate polymer flow streams from the runner block, a plurality of separate feed channels, each communicating with a respective inlet and having an inwardly directed portion (404, 408, 412) leading toward the central axis of the device and an axial portion (406, 412, 416, 414) leading axially forwards through the device to an associated exit hole (407, 411, 417, 415) in a forward end portion (388) of the device, the plurality of exit holes being disposed in the forward end portion, preferably in a circumferentially and radially staggered pattern for feeding the polymers as separate flow streams into the rear of the said nozzle.

321. Apparatus according to claim 320, comprising
a plurality of first inlets (392 to 395) and a second inlet (396) each cut radially into the periphery of the device, the first and second inlets being axially-spaced and aligned along the device,
a plurality of first feed throats (398-401) and a second feed throat (402) each cut radially into the periphery of the device, each first feed throat being in communication with a respective first inlet, running about a portion of the periphery of the device and having a terminal end portion, the second feed throat being in communication with the second inlet, and running axially along a portion of the periphery of the device, the terminal end portion of each first feed throat opening to an associated first feed channel having a radial portion extending inwards toward the central axis of the device and an axial portion in communication with the radial portion and running axially forwards through the device, a forward end portion of the device having a plurality of first exit holes (407, 411, 415, 417) communicating with the axial portion of the respective first feed channels, and a second exit hole (418) in communication with the second feed throat (402).

322. Apparatus according to claim 320 or claim 321, wherein the feeding device has a central feed channel (379) extending along its central axis.

323. Apparatus according to claim 321, wherein the feeding device has a central flow channel (390) which extends along its central axis and the axial portion of one of the first feed channels (404) communicates along a portion of its axial length with, and its first exit hole (407) communicates with, the central feed channel (390).

324. Apparatus according to claim 323, wherein the second inlet of the device is the inlet (396) most proximate to the forward end, and the first inlet which communicates with the central feed channel, is the inlet (392) least proximate to the forward end of the device.

325. Apparatus according to claim 320 or 321, including a co-injection nozzle receiving chamber (380) formed in the forward end of the device.

326. Apparatus according to claim 321, 323 or 324, wherein formed in its forward end the feeding device has a stepped chamber (380) adapted to receive a co-injection nozzle, the chamber having axially-spaced first (382), second (384), and third shelves (386), each extending transaxially and having a first exit hole (407, 411, 415, 417) therein.

327. Apparatus according to claim 326, wherein a first exit hole (407), which communicates with a central feed channel, is located in the axially innermost exit shelf (382), and the second exit hole (418) of the device is located in the front face (388) of the device.

328. Apparatus according to any of claims 320 to 327, wherein the exit holes of the feeding device are radially spaced from each other and there is an arc of 60° between most of the exit holes and an arc of 120° between two of the exit holes.

329. Apparatus according to any of preceding claims 320 to 328, including isolation means (424) for maintaining the polymer flow streams directed radially at the feeding device isolated from one another, wherein the isolation means preferably includes a plurality of annular grooves (425) cut into the periphery of the device, each one being located between two inlets, and an expandable piston ring (424) seated in each annular groove.

330. Apparatus according to claim 329, further including a runner block (288) having a support such as a bore for feeding the device, and there are sealing means (424) positioned upstream of the inlet (392) least proximate the front face and cooperative with the runner block support for preventing polymer material from flowing axially upstream of the sealing means (424).

331. Apparatus according to claim 330, wherein the sealing means includes an annular groove (425) cut into the periphery of the feeding device and an expandable piston ring (424) seated in the groove.

332. Apparatus according to any of claims 13 to 27 or 47, further including an elongated flow stream splitter device (e.g. 276) for use in a runner block of the apparatus, the splitter device including a polymer flow stream entrance zone (278), a plurality of flow stream exit zones (344, 346), a plurality of spaced flow channels (220, 222, 250, 257, 258) extending through a portion of the device, and a plurality of spaced entrance ports at the entrance zone (278) communicating with the flow channels (220, 222, 250, 275, 258), each of the flow channels having a portion (715 to 720) which branches at a branch point (342) within the device whereat it splits into first and second exit branches (e.g. 700, 701) of substantially equal length which lead to respective first and second exit ports, the plurality of the first exit ports (344) and the plurality of second exit ports (346) being arranged as longitudinally-aligned rows of spaced exit ports, for communication with corresponding flow channel entrances of the runner block (288).

333. Apparatus according to claim 332, wherein the entrance zone (278) is at one end thereof and the flow channels (220, 222, 250, 257, 258) communicating with the entrance zone extend generally longitudinally therefrom to their branch points (342A to E).

334. Apparatus according to claim 332, wherein the entrance and exit zones are longitudinally-extending portions of the surface of the device (290 or 292), and in each of said portions the ports (364, 366, 366'; 371, 372, 372') thereof are spaced apart in a longitudinally-extending row.

335. Apparatus according to claim 332, 333 or 334, wherein the peripheral arc extending from the axial center line of each entrance port (e.g. 364) to the axial center line of each of its associated exit ports (e.g. 366, 366') is about 90° or greater, e.g. 90° to 120°, and the branch point of the first and second exit branches is configured to prevent flow stagnation thereat.

336. Apparatus according to any of claims 332 to 335, wherein the axial center line of the entrance flow channel (e.g. 250; 367; 373) intersects the axial center line of each of its associated branched exit flow channels (704, 705; 368, 368'; 374, 374') at a point on the axial center line of the splitter device.

337. Apparatus according to claim 332 or claim 334, wherein the splitter device (290, 292) is cylindrical and the flow channels (367, 373) entering the device are directed towards the axis, e.g. radially.

338. Apparatus according to any of claims 332 to 337, wherein the first and second exit branches (e.g. 374, 374') extend in opposite directions, at an angle of less than 90° relative to each other, and at angles of greater than 90° relative to the flow channel (373) from which they branch.

339. Apparatus according to claim 333, wherein each flow channel (e.g. 222) has an axial portion (715), and a connecting channel portion (710, 710'') connected between the axial portion of the flow channel and its branch point (342B', 342B'').

340. Apparatus according to any of claims 332 to 339, wherein each branch point (e.g. 342) and its associated first and second exit ports (344, 346) are in a common plane.

341. Apparatus according to any of claims 332 to 339, wherein each flow channel (e.g. 250), its branch point (342C) and its first and second exit branches (704, 705) and the associated first and second exit ports (344, 346) are in a common plane.

342. Apparatus according to any of claims 332 to 341, wherein the first and second exit branches (700'', 701'') lie in planes perpendicular to the longitudinal axis of the splitter device (276'').

343. Apparatus according to any of claims 332 to 342, wherein the respective first and second exit ports are on opposed surface portions of the splitter device (276, 290, 292).

344. Apparatus according to any of claims 332 to 343, further including means for isolating the respective polymer flow streams which exit the splitter device through the first and second branched exit ports (344, 346) having a common branch point (e.g. 342C), from the other flow streams which exit the device through other first and second branched exit ports having other common branch points.

345. Apparatus according to claim 344, including means for isolating from one another the respective flow streams directed at the entrance ports (e.g. 364, 371).

346. Apparatus according to claim 344, wherein the respective isolation means include a plurality of annular grooves (349, 370, 376) cut into the periphery of the splitter device (276, 290, 292) and housing sealing rings (348, 369, 376), a groove and sealing rings positioned to isolate ports having a common branch point from other ports having other common branch points.

347. Apparatus according to claim 345, wherein the splitter device (276, 290 or 292) is adapted to be seated within a bore (e.g. 286) in a runner block (288), and includes sealing means (348, 369, 375) downstream of a foremost entrance port and of the first and second branched exit ports, and upstream of the rearmost of the entrance port and of the first and second exit ports, for preventing polymer material which enters and exits the ports from leaking axially in the bore (286) respectively downstream of the foremost sealing means and upstream of the rearmost sealing means.

348. Apparatus according to claim 332, wherein the flow channels (220, 222, 250, 257, 258) extend in directions generally lengthwise of the splitter device (276) to their branch points in a forward end portion (284) of the device, the flow channels being arranged in an overall pattern which, when viewed on transverse planes through the device, and by virtue of redirection of the channels as they extend forward through the device, changes from a radial pattern at the rearward end of the device where each channel passes through a common plane, to an axially and substantially horizontally spaced pattern of branch points (342A to E) in said forward end portion where the branch points are located in different transverse planes, and each flow channel being split into equal length first and second exit branches (700, 701, etc.) which are inclined at an angle relative to the flow channel and which terminates at the respective first and second exit ports (344A to E, 346A to E) in different portions of the periphery of the forward end portion (278), each of the first exit ports being in a transverse plane different from the others and the second exit ports likewise being in different transverse planes, and the plurality of first exit ports and the plurality of second exit ports being arranged as a longitudinally extending pattern of exit ports in the respective peripheral surface portions of the device.

349. Apparatus according to claim 332, wherein the separate flow channels comprise a central axial flow channel (250), and a plurality of other flow channels (220, 222, 257, 258), all extending generally longitudinally through a portion of the splitter device, the axial flow channel (250) having an end portion (717) with a branch point (342C') which splits the axial flow channel into first and second exit branches (704', 705') in a forward end portion of the device, each of the other flow channels having an end portion, a branch point which splits the flow channel into first and second exit branches (e.g. 700', 701'), and a substantially transverse connecting channel portion (e.g. 710, 711) between the end portion and the branch point, the end portions, connecting channel portions and branch points for all said flow channels being located in the forward end portion (284') of the device (276'), and the flow channels being arranged in an overall pattern which, when viewed on transverse planes through the device, and by virtue of redirection of the flow channels as they extend forward through the device, changes from a radial pattern at the rearward end (278') of the device where each channel passes through a common transverse plane, to a substantially coplanar arrangement including axially-spaced connecting channel portions and a substantially coplanar arrangement of axially-spaced branch points, and wherein the first and second exit branches (e.g. 700', 701') split from the same flow channel (e.g. 703') are substantially equal in length and terminate at the respective first and second exit ports (344, 346) which are located in different portions of the periphery of the forward end portion, each of the first exit ports being in a different transverse plane from the others and the second exit ports likewise being in different transverse planes, and wherein the plurality of the first exit ports (344) and the plurality of second exit ports (346) are arranged in respective longitudinally-aligned rows of spaced exit ports in the respective peripheral portions.

350. Apparatus according to claim 349, wherein the connecting channel portion (e.g. 710), branch point (342) and first and second exit ports (344, 346) are in the same transverse plane for each of the said other flow channels, and the first and second exit ports (344C', 346C') for the axial flow channel (250) are in the same transverse plane.

351. Apparatus according to claim 332, wherein the flow channels (220, 222, 250, 257, 258) are substantially aligned and extend axially through a portion of the splitter device (276''), the flow channels each having an end portion (715 to 720), a branch point (342A'' to E'') which splits the flow channel into first and second exit branches (e.g. 704'', 705'') and a substantially transversely-directed connecting channel portion (e.g. 713'') between its end portion and branch point, the end portions, connecting channel portions and branch points for all the flow channels being located in a forward end portion of the device, and the flow channels being arranged in an overall pattern which, when viewed on transverse planes through the device, and by virtue of the redirection of the channels as they extend axially forward through the device, changes from an aligned pattern at the rearward end of the device wherein each channel passes through a common transverse plane, to an axially and transversely spaced pattern of connecting points between the connecting channels and their flow channels, an axially-spaced pattern of connecting channels and an axially-spaced pattern of branch points, and the first and second exit branches (e.g. 704'', 705'') split from the same axial flow channels are substantially equal in length and terminate at respective first and second exit ports (344, 346) located on a common transverse plane in different portions of the periphery of the forward end portion, the plurality of first exit ports (344) and the plurality of second exit ports (346) being arranged in respective axially-aligned patterns of exit ports in the different peripheral portions.

352. Apparatus according to claim 332, having a plurality of spaced, substantially radially or transaxially-directed flow channels (367, 373) extending through a portion of the splitter device (290, 292), and a plurality of spaced, axially-aligned entrance ports (364, 371) positioned along the entrance zone, communicating with the flow channels, and being in different transverse planes, each of the flow channels (367, 373) having a branch point within the device whereat the flow channel is split into first and second exit branches (368, 368'; 374, 374') of substantially equal length and which communicate with and terminate at the respective first and second exit ports (366, 366'; 372, 372') positioned in the different exit zones, and the plurality of first exit ports (366, 372) and the plurality of second exit ports (366', 372') are arranged in respective arrays of spaced exit ports in the respective exit zones, each entrance port and its associated exit port for example lying in a common transverse plane.

353. Apparatus according to any of claims 348 to 352, wherein the forward end portion of the device includes isolation means for maintaining flow streams which exit from the exit ports (344, 346) isolated from one another.

354. Apparatus according to claim 353, wherein the isolation means includes a plurality of grooves cut into the periphery of the device (276''), each located between two exit ports (344, 346), and each for receiving a sealing means preferably in the form of an expandable piston ring.

355. Apparatus according to claim 354, wherein the isolation means also includes a metal strip seated in each groove.

356. Apparatus according to any of claims 348 to 355, wherein the forward end portion of the splitter device is adapted to be seated within a conformingly-shaped hole (e.g. 286) in a runner block (288), and includes sealing means adjacent to and downstream of the foremost pair of first and second exit ports (344, 346-B) and adjacent to and upstream of the rearmost pair of first and second exit ports (344, 346-A), for substantially preventing flow streams which exit the exit ports from flowing axially in said hole downstream past the foremost sealing means and upstream past the rearmost sealing means.

357. Apparatus according to claim 352, wherein the axial center line of each flow channel (e.g. 367) intersects the axial center line of each of its associated exit branches (368, 368') at a point offset from the axial center line of the device in the direction of the entrance port, and at an angle of from 100° to 110°, e.g. 105°.

358. Apparatus according to claims 352 or 357, wherein the peripheral arc from the center of each entrance port to the center of each of its associated exit ports is about 90°.

359. Apparatus according to any of claims 352, 357, or 358, wherein each flow channel and the branch point, first and second exit branches, and first and second exit ports associated therewith are in the same transverse plane.

360. Apparatus according to any of claims 352 and 357 to 359, wherein the first and second exit branches (374, 374') of a flow channel (373) extend in opposite directions at an angle of less than 90° relative to each other and each is at an angle greater than 90° to the flow channel.

361. Apparatus according to claim 352, wherein the peripheral arc from the center of each entrance port (364, 371) to the center of each of its associated exit ports (366, 366'; 372, 372') is 90° or greater, e.g. 90° to 120°, and each branch point is configured to prevent flow stagnation at the branch point.

362. Apparatus according to any of claims 352 and 357 to 361, including isolation means for isolating from one another flow streams which are directed at and enter through the entrance ports (364, 371), and for isolating the flow streams which leave the splitter device through the first and second exit ports (366, 366'; 372, 372') having a common branch point, from the other flow streams which leave the device through their respective first and second exit ports having other branch points.

363. Apparatus according to claim 362, wherein the isolation means includes a plurality of annular grooves cut into the periphery of the device (290, 292), there being grooves positioned to isolate the ports having one common branch point from other ports having other branch points, and an expandable piston ring is seated in each annular groove.

364. Apparatus according to claim 362, including sealing means adjacent to and downstream of the foremost of the entrance port and of its first and second exit ports, and sealing means adjacent to and upstream of the rearmost of the entrance port and its first and second exit ports, for substantially preventing flows which enter and exit the ports from flowing axially along a bore, in which the device is to be installed, past the said sealing means.

365. Apparatus according to claim 13, for simultaneously injection molding a plurality of articles having a plurality of layers and formed from streams of at least two molding materials having different compositions, comprising a plurality of molding nozzles (296) and a plurality of supply duct means (220, 222, 250, 257, 258) corresponding to the number of layers in the structures, and further characterised by means (e.g. 276, 290, 292) connecting said supply duct means with said nozzles, said means comprising a series of branched channels (e.g. 700, 701; 368, 368'; 374, 374') extending from each of the supply duct means, the length and branch angles of the channels connecting with any one supply duct means being substantially equal, thereby to insure identical treatment of each molding material being delivered to the several molding nozzles.

366. Apparatus according to claim 365, including first splitting means (290) connecting with each of said ducts for receiving a stream of molding material therefrom and dividing said stream into a plurality of branches, and second splitting means (292) connecting with each of said branches for receiving a stream of molding material therefrom and dividing it into sub-branches, the angle between each branch and its associated duct being substantially the same at any first splitting means (290), the angle between each sub-branch and its associated branch at any second splitting means (292) being substantially the same, and the length of each branch of each splitting means (290) and of each the second splitting means (292) being equal, thereby to promote the said equal treatment.

367. Apparatus according to claim 13, for simultaneously injection molding a plurality of articles each having a plurality of layers formed from streams of molding materials having compositions required by layers of said article, comprising a plurality of molding nozzles (296), a plurality of essentially parallel supply duct means (220, 250, 222, 257, 258) for directing the flow of said molding materials, and means connecting said nozzles with said duct means, and further characterised by the connecting means comprising runner extension means (276) for dividing the stream of molding material from each of said ducts and reorienting said divided streams for further division, said runner extension means comprising an elongated, e.g. cylindrical, block having a plurality of primary channels (220, 222, 250, 257, 258) each connecting with a respective supply duct means, said channels having portions extending generally axially of the block and being of different lengths, and the channels connecting to a plurality of branches (e.g. 700, 701) extending therefrom to the surface of the block, the branches extending from each channel being of the same length and each making substantially the same angle with the channel.

368. The apparatus according to claim 367, wherein the branches from the said channels meet the surface of the block along a line approximately parallel to the axis of the block.

369. The apparatus according to claim 367 or claim 368, wherein the runner extension means (276) are located within a runner block means (288) having channels therein, at least one runner block channel being connected to a branch of the runner extension means by an arcuate conduit in the surface of said runner extension means.

370. The apparatus according to claim 367, 368 or 369, wherein the block (276) fits within a bore (286) in a runner block means (288) which has channels (e.g. 350, 351) connecting with each branch of the runner extensions means, and each of said runner block channels terminates in a first dividing means (290) for dividing the stream of molding material in that runner block channel into a plurality of sub-streams, and preferably each of the sub-streams terminates in a second dividing means (292) for splitting the substreams into a plurality of end streams (e.g. 356A, 357A).

371. A method according to any of claims 1 to 12, which comprises establishing a plurality of streams, e.g. parallel streams, of molding material of compositions required of the layers of said articles, for delivery to the molding nozzles (296), dividing each of said streams into a plurality of branches a plurality of times, the angle between each branch and the stream prior to branching, at any point of branching (e.g. 342), being substantially the same for each branch, and the distance between points of branching after the first branching, being substantially the same for each branch, whereby each given molding material in its travel to a molding nozzle (296) follows a path substantially identical to the path followed to every other nozzle.

372. A method according to any of claims 1 to 12, which comprises establishing a plurality of substantially parallel streams of molding material of compositions required of the layers of said articles, angularly directing each of said streams to first division points (e.g. 342A), splitting each of said streams at said first division points into two branches (708, 709), each of the branches at any division point making substantially the same angle with the stream from which it originated as any other branch, conveying each of said branches to second division points (290), splitting each of said branches into two sub-branches (352A, 353A), each of said sub-branches being at approximately a right angle to the branch (350A, 351A) from which it originated, conveying each of said sub-branches to third division points (292), splitting each of said sub-branches into two end lines (356A, 357A), each of the end lines at a third division point making the same angle with the sub-branch (352A) from which it originated as any other end line, and conveying each of the end lines to a respective nozzle (296), to a respective nozzle feed block means (294) located between the end line and the nozzle, or to a fourth division point, the length of each branch, sub-branch and end line for the molding material of a layer of the multi-layered article being substantially the same as every other respective branch, sub-branch and end line for that material.

373. Apparatus according to claim 13, comprising a plurality of identical valve means (e.g. 800) one in each nozzle means (296) for identically initiating, regulating and terminating the flow of polymer materials through the respective nozzles; drive means adapted for simultaneously and identically driving the plurality of valve means, and including common moving means (e.g. 856) to which each of the valve means (e.g. 800) is cooperatively associated in a manner that simultaneously provides identical movements of all the valve means within the co-injection nozzle means within which they operate to provide simultaneous and identical control over the initiation, regulation and termination of the flows of polymer materials through all the co-injection nozzle means (296); and control means (2040) connected to the common moving means (e.g. 856), for moving the common moving means in a desired mode to provide the identical simultaneous movements of the valve means and said identical simultaneous flow controls.

374. The apparatus according to claim 373, wherein the drive means includes a plurality of shuttles (e.g. 860), each moveably connected to the common moving means (e.g. 856), and each of the valve means includes an elongated member (800) having a forward end portion operable within its co-injection nozzle means (296) and a back end connected to a shuttle (860), each shuttle having means (e.g. 868, 878) in association and cooperative with the moving means such that the movement of the common moving means identically and simultaneously moves each of the shuttles (e.g. 860) and each of the valve means connected thereto.

375. The apparatus according to claim 374, wherein the valve means includes an elongated pin (834) and the common moving means includes an elongated pin shuttle cam bar (850).

376. The apparatus according to claim 374 or claim 375, wherein the valve means includes an elongated sleeve (800) and the common moving means includes an elongated sleeve shuttle cam bar (856).

377. Apparatus according to claim 373, wherein each nozzle means (296) has a central channel receiving the valve means, and wherein the valve means (800, 834) comprises: a plurality of identical first valve means (800), one for each of the co-injection nozzle means (296) and communicating with the central channel (540) thereof, and each adapted to operate therewithin to identically initiate, regulate, and terminate the flow of polymer materials therethrough, and a plurality of identical second valve means (834), each reciprocally mounted within a respective one of the first valve means (800) and each adapted to operate therewithin to identically initiate, regulate and terminate the flow of a polymer material through the first valve means; the apparatus further including: first drive means (860) seated within a housing (902) for movement therein for simultaneously and identically driving the first valve means (800), said first drive means including first common moving means (856) to which each of the first valve means is cooperatively associated in a manner that simultaneously provides identical movements of each first valve means (800) within the co-injection nozzle means (296) within which it operates, and including second drive means (844) seated within the housing for movement therein, for simultaneously and identically driving the plurality of second valve means (834), said second valve means including common moving means (850) to which each of the second valve means is connected in a manner that simultaneously provides identical movements of each second valve means within the co-injection nozzle means within which it operates, and said drive means provides, in each co-injection nozzle means, simultaneous, identical control over the initiation, regulation, and termination of the flow of polymer materials through each of the co-injection nozzle means,
first control means (918, 2040) connected to the first common moving means for moving the first common means in a desired mode which provides said identical simultaneous movements and said identical simultaneous flow controls,
second control means (906, 2040) connected to the second common moving means (850) for moving the second common means in a desired mode which provides said identical, simultaneous movements and said identical simultaneous flow controls.

378. The apparatus according to claim 377, further including common control means (2040) connected to each of the first control means (918, 2040) and the second control means (906, 2040) for moving the respective first and second common moving means in a common desired mode which provides independent, simultaneous and non-simultaneous movements of said first and second common moving means.

379. The apparatus according to claim 377 or claim 378, wherein the first drive means also includes a plurality of first shuttles (860), each moveably connected to the first common moving means (856), and each of the first valve means includes an elongated member (800) having a forward end portion operable within its associated nozzle means and a back end connected to an associated first shuttle, each first shuttle (856) having means (868) in cooperative association with the first moving means (856) such that the movement of the first common moving means (918) identically and simultaneously moves each of the shuttles and each of the first valve means (800) connected thereto.

380. The apparatus according to claim 378 or 379, wherein the second drive means also includes a plurality of second shuttles (844), each moveably connected to the second common moving means (850), and each of the second valve means includes an elongated member (834) having a forward end portion operable within its associated nozzle means (296) and a back end connected to an associated second shuttle, each second shuttle having means (846) in cooperative association with the second moving means (850) such that the movement of the second common moving means identically and simultaneously moves each of the shuttles and each of the second valve means connected thereto.

381. The apparatus according to claim 379 or 380, wherein each second valve means includes an elongated pin (834), and the first common moving means includes an elongated pin shuttle cam bar (850).

382. The apparatus according to claim 379, 380 or 381, wherein each first valve means (800) includes an elongated ported sleeve and the second common moving means includes an elongated sleeve shuttle cam bar (856).

383. The apparatus according to any of claims 373 to 382, wherein the drive means includes compensating means associated with the valve means, e.g. each of the first valve means, to compensate for axial play in the drive means, the valve means or both, and for dimensional deviations in associated structures, the compensating means e.g. including a compression spring (888) mounted between the valve means and the common moving means.

384. The apparatus according to claim 379 or claim 383, wherein the compensating means (888) is associated with each first valve means (800) and each first shuttle (860) for compensating for axial play in the drive means and/or the first valve means and for any dimensional deviations in associated structures, the compensating means e.g. including a compression spring (888) mounted between each first valve means (803) and each first shuttle (856).

## Patentansprüche

1. Verfahren zur Bildung mehrschichtiger Kunststoffartikel, wobei das Verfahren den Gebrauch einer Mehrfachform-Spritzgußmaschine umfaßt, in die ein kombinierter Werkstoffstrom aus jedem einzelnen einer Vielzahl von Ko-Einspritzdüsenmitteln (296) der Maschine in eine zugehörige Spritzform (102) eingespritzt wird, um den jeweiligen Artikel zu bilden, und das Verfahren die folgenden Schritte umfaßt:
- polymere Werkstoffe bereitstellen, um Artikelschichten zu bilden, und Ströme davon getrennt zu jedem einzelnen der Düsenmittel (296) zu bewegen,
- in jedem einzelnen der mehreren Düsenmittel (296) aus den getrennten Werkstoffströmen kombinierte Ströme bilden, die im wesentlichen identisch sind, und
- die kombinierten Ströme einspritzen, um die mehrschichtigen Kunststoffartikel zu bilden.

2. Verfahren nach Anspruch 1, das das Unterwerfen entsprechender Materialströme im wesentlichen identischen Fließbedingungen umfaßt, die z.B. ausreichend sind, um die im wesentlichen identischen kombinierten Ströme zu liefern.

3. Verfahren nach Anspruch 2, bei dem die im wesentlichen identischen Fließbedingungen erhalten werden, indem Fließwege von im wesentlichen identischer Konfiguration für jeden korrespondierenden Materialstrom geschaffen werden.

4. Verfahren nach Anspruch 2, bei dem die im wesentlichen identischen Fließbedingungen erhalten werden, indem im wesentlichen der gleiche Fließweg und die gleiche Praxis für jeden korrespondierenden Materialstrom eingesetzt werden.

5. Verfahren nach einem der Ansprüche 1 bis 4, bei dem der Ausbildungsschritt das Bewirken im wesentlichen simultaner Steuerung des Fließens und Nicht-Fließens der korrespondierenden Materialströme umfaßt.

6. Verfahren nach Anspruch 5, bei dem diese Steuerung durch Betätigen positiv wirkender Fließsteuereinrichtungen in jeder der Düseneinrichtungen bewirkt wird.

7. Verfahren nach einem der Ansprüche 1 bis 4, bei dem der Ausbildungsschritt positives Bewirken des Beginns und der Beendigung von Fließen der korrespondierenden Materialströme im wesentlichen simultan in diesen Düseneinrichtungen umfaßt.

8. Verfahren nach Anspruch 7, bei dem positiv wirkende Fließsteuereinrichtungen (z.B. 800,834) in jeder der Düseneinrichtungen verwendet werden, um den Beginn und die Beendigung zu steuern.

9. Verfahren nach einem der Ansprüche 1 bis 8 zum Herstellen von Gegenständen mit wenigstens drei Schichten, das die Schritte des Ausbildens eines jeden der kombinierten Ströme aus Materialströmen entsprechend zwei dieser Schichten, während verhindert wird das Material entsprechend einer weiteren Schicht fließt, des Erhöhens des Druckes des angehaltenen Materials auf ein Niveau oberhalb des Druckes des kombinierten Zweischichtenstromes und des Sorgens für Fließen des so unter Druck stehenden Materials, so daß es mit den anderen Materialströmen einen mehrschichtigen kombinierten Strom mit wenigstens drei Schichten bildet, umfaßt.

10. Verfahren nach Anspruch 9, umfassend, daß Fließen des unter Druck stehenden Materials im wesentlichen gleichzeitig in jeder der Mehrfachdüsen-Einrichtungen gestattet wird.

11. Verfahren nach Anspruch 9 oder 10, bei dem jedes der korrespondierenden angehaltenen Materialien, die in die Mehrfachdüsen-Einrichtung (296) eingeführt werden sollen, einem gemeinsamen Druck unterworfen wird.

12. Verfahren nach einem der Ansprüche 9 bis 11, bei dem der Druck durch eine gemeinsame Druckquelle (z.B.252) beaufschlagt wird, während diese Materialien durch eine positive Blockierung angehalten werden, und das Fließen der so unter Druck stehenden Materialien im wesentlichen gleichzeitig in den Düsen (296) durch positives Lösen des Blockierens der Materialien bewirkt wird.

13. Gerät zur Bildung einer Vielzahl mehrschichtiger Kunststoffartikel, bestehend aus einer Vielzahl von Einspritzdüsenmitteln (296), jeweils zum Einspritzen von Werkstoffen in eine zugehörige Form einer Vielzahl von Formen (102), um die Artikel zu bilden, aus Mitteln (208 bis 212) zur Bereitstellung von Einspritzwerkstoffströmen, um die Artikelschichten zu bilden, aus zu den Düsenmitteln gehörigen Mitteln (288, 294), um die Werkstoffströme von einander getrennt zu jedem einzelnen der Düsenmittel (296) zu kanalisieren, aus Mitteln (232, 234, 252, 260, 262) um die Werkstoffströme entlang der entsprechenden Kanäle bis zu den jeweiligen Düsenmitteln (296) zu bewegen, und aus Mitteln (540, 462, 482, 502, 522) um in jedem Düsenmittel die dahin bewegten Ströme zu kombinieren, um kombinierte Ströme zu bilden, die in den Düsenmitteln (296) im wesentlichen identisch sind, zur Einspritzung in ihre zugehörigen Einspritzformen (102), um die Artikel zu bilden.

14. Vorrichtung nach Anspruch 13, bei der die Düseneinrichtung (296) einen Stromkombinierungsbereich (546) angrenzend an ein Ausgangsende von ihr und getrennte Durchgangswege (460,480,500,520) für die Materialströme in Kommunikation mit dem Kombinierungsbereich und den Kanalisierungseinrichtungen (288,294) aufweist.

15. Vorrichtung nach Anspruch 13 oder Anspruch 14, bei der die Kanalisierungs- (288,294) und Bewegungseinrichtungen (232,234,252,260,262) ihrem Betrieb nach wirken, um entsprechende Materialströme, die in die Mehrfachdüsen-Einrichtung eintreten, im wesentlichen identischen Fließbedingungen zu unterwerfen.

16. Vorrichtung nach Anspruch 15, bei der die Kanalisierungseinrichtung (288) für korrespondierende Materialströme Fließmuster von im wesentlichen identischer Konfiguration liefert.

17. Vorrichtung nach Anspruch 15, bei der die Kanalisierungseinrichtung (288,294) betriebsmäßig wirkt, um die korrespondierenden Ströme im wesentlichen den gleichen Fließwegen und Praktiken zu unterwerfen.

18. Vorrichtung nach einem der Ansprüche 13 bis 17, die Einrichtungen (z.B.800,860,856; 834,844,850) zum Bewirken im wesentlichen simultaner Steuerung des Fließens oder Nicht-Fließens der korrespondierenden Materialströme in der Mehrfachdüsen-Einrichtung (296) umfaßt.

19. Vorrichtung nach Anspruch 18, bei der diese Steuereinrichtung positiv wirkende, flußsteuernde Einrichtungen (800,834) für jede der Düseneinrichtungen (296) umfaßt.

20. Vorrichtung nach einem der Ansprüche 13 bis 17, die Einrichtungen (z.B.800,860,856; 834,844,850), die betriebsmäßig positiven Beginn und Beendigung von Fließen der entsprechenden Materialströme im wesentlichen simultan in der Mehrfachdüsen-Einrichtung (296) bewirken, umfaßt.

21. Vorrichtung nach Anspruch 20, bei der diese Einrichtung positiv wirkende Flußsteuereinrichtungen (800, 834) in jeder der Düseneinrichtungen (296) umfaßt.

22. Vorrichtung nach einem der Ansprüche 13 bis 20 für die Verwendung zum Herstellen von Gegenständen mit wenigstens drei Schichten, bei der jede der Düseneinrichtungen (296) dieser zugeordnet flußsteuernde Einrichtungen (800,834), um Fließen eines korrespondierenden der Materialien (z.B.C) zu verhindern,das eine korrespondierende Schicht der Gegenstände bilden soll, und Einrichtungen (252) zum Anheben des Druckes des angehaltenen Materials auf ein Niveau oberhalb des Druckes der Materialien (z.B. A,B, usw.), die andere korrespondierende Schichten der Gegenstände bilden sollen, aufweist, wobei die flußsteuernden Einrichtungen (800, 834) betätigbar sind, wenn dieses Material (C) so unter Druck gesetzt worden ist, um Fließen dieses besagten Materials zum Liefern des kombinierten Stromes für die Mehrfachschichten mit wenigstens drei Schichten, von denen eine aus dem besagten Material (C) gebildet wird, in Gang zu setzen.

23. Vorrichtung nach Anspruch 22, bei der die flußsteuernden Einrichtungen (z.B.800,860,856; 834,844,850) im wesentlichen gleichzeitig für jede der Düseneinrichtungen (296) betriebsmäßig wirken können, um gleichzeitiges Einsetzen des Fließens des besagten Materials (z.B.C) in der Mehrfachdüsen-Einrichtung (296) in Gang zu setzen.

24. Vorrichtung nach Anspruch 22 oder 23, die Druckerzeugungsmittel (z.B.252) umfaßt, die wirksam sind, um einen gemeinsamen Druck auf das Material (z.B.C), gesteuert durch die flußsteuernden Einrichtungen (800, 834), die mit den Mehrfachdüsen-Einrichtungen (296) verbunden sind, auszuüben.

25. Vorrichtung nach einem der Ansprüche 13 bis 20, bei der die flußsteuernden Einrichtungen (800,834) positives Blockieren des Materials (z.B.C), das durch sie gesteuert wird, liefern, während das besagte Material unter Druck gesetzt wird, und Einrichtungen (850,856) vorhanden sind, um die flußsteuernden Einrichtungen (800,834) für all die Mehrfachdüsen-Einrichtungen im wesentlichen gleichzeitig zu betätigen, um ein positives Lösen der Blockierung des unter Druck stehenden Materials zu bewirken, um dadurch dessen Fließeinsatz im wesentlichen gleichzeitig in all den Düseneinrichtungen (296) in Gang zu setzen.

26. Vorrichtung nach einem der Ansprüche 22 bis 25, bei der die Mehrfachdüsen-Einrichtungen Flußsteuereinrichtungen aufweisen, die betriebsmäßig wirken, um Fließen und/oder Nicht-Fließen von wenigstens zwei Materialströmen zu steuern.

27. Vorrichtung nach einem der Ansprüche 22 bis 26, bei der jede Flußsteuereinrichtung im wesentlichen identisch in der Mehrfachdüsen-Einrichtung ist.

28. Verfahren nach Anspruch 1, das weiterhin die Schritte umfaßt:
getrenntes Beschicken jeder Düseneinrichtung (296) mit einem Schmelzstrom aus polymerem Material für jede Schicht der Gegenstände, die ausgeformt werden sollen, wobei die getrennten Ströme aus jedem Material entlang im wesentlichen identischer Fließwege zu den verschiedenen Düseneinrichtungen geführt werden,
im wesentlichen gleichzeitiges positives Blockieren korrespondierender Schmelzströme gegen Eintreten in einen zentralen Kombinierungskanal (540) jeder Düseneinrichtung,
unter Drucksetzen der positiv blockierten Schmelzströme in den verschiedenen Düseneinrichtungen,
im wesentlichen gleichzeitiges Lösen der Blockade um zu gestatten, daß die korrespondierenden Schmelzströme im wesentlichen gleichzeitig in die zentralen Kanäle einfließen und in die Einspritzhohlräume (102), die neben den Düseneinrichtungen (296) liegen, eingespritzt werden,und danach
im wesentlichen gleichzeitiges positives Blockieren des Fließens von jedem korrespondierenden Strom, um im wesentlichen gleichzeitig die Einspritzungen zu beenden und den Einspritzbetrieb abzuschließen,

29. Verfahren nach Anspruch 1, bei dem im wesentlichen identische Gegenstände im wesentlichen gleichzeitig ausgeformt werden, das weiterhin die Schritte umfaßt:
Einspeisen der Schmelzströme zu der Vielzahl von Düseneinrichtungen (296) derart, daß die Materialströme zum Ausformen von Schichten in den Gegenständen entlang getrennter, im wesentlichen gleicher Fließwege zu den Düseneinrichtungen geführt werden,
Anwenden (z.B. durch 252) im wesentlichen identischer Drücke auf die korrespondierenden Schmelzströme, um im wesentlichen identische Ströme aus den korrespondierenden Materialien zu und von jeder Düseneinrichtung (296) einzustellen, positives Bewirken des Beginns, des Fließens und der Beendigung des Fließens der korrespondierenden Materialien im wesentlichen identisch in all den Düseneinrichtungen durch Anwenden von im wesentlichen identischen Ventilgliedern (800,834) in den Düseneinrichtungen und Betätigen all der Ventilglieder im wesentlichen gleichzeitig und identisch.

30. Verfahren nach Anspruch 28 oder Anspruch 29, das einen Schritt des Einrichtens im wesentlichen identischer kombinierter Ströme in den Mehrfachdüsen-Einrichtungen umfaßt.

31. Verfahren nach Anspruch 28,29 oder 30, das einen Schritt des unter Drucksetzens der korrespondierenden Materialströme durch eine gemeinsame Druckquelle (z.B. 252) umfaßt.

32. Verfahren nach einem der Ansprüche 28 bis 31, das einen Schritt des im wesentlichen gleichzeitigen unter Drucksetzens der korrespondierenden Materialströme umfaßt.

33. Verfahren nach Anspruch 1, das angewendet wird zum Herstellen von wenigstens dreischichtigen, z.B. fünfschichtigen Mehrfach-Material-Kunststoffgegenständen wie Behältern mit Seitenwänden mit Randendabschnitten und den Gesamtseitenwanddicken unterhalb der Randendabschnitte im Mittel von 0,010 Zoll bis 0,035 Zoll (0,25 bis 0,89 mm).

34. Das Verfahren nach Anspruch 1 oder Anspruch 33, bei dem Ventilglieder (800,834), die in oder für jede der Düseneinrichtungen (296) wirksam sind, zum Steuern des Kombinierens der getrennten Ströme, die den einzelnen Düseneinrichtungen zugeführt werden, verwendet werden.

35. Verfahren nach Anspruch 33 oder Anspruch 34, bei dem ein Ventilglied (800,834) in einem zentralen Kanal von jeder Düseneinrichtung (296) zum positiven Steuern von Fließen und Nicht-Fließen der jeweiligen Materialien in den zentralen Kanal verwendet wird, um dort den kombinierten Mehrfachmaterial-, Mehrschichten-Fließstrom zu bilden.

36. Verfahren nach Anspruch 33, 34 oder 35, das weiterhin einen Schritt des Einrichtens im wesentlichen des gleichen Fließweges und der gleichen Fließpraxis für jeden der getrennten, korrespondierenden Fließströme des gleichen Materials zu den unterschiedlichen Düseneinrichtungen von der Initiierung des Flußvorschubs bis zum Ankommen an den Düseneinrichtungen (296) umfaßt.

37. Verfahren nach Anspruch 33, 34, 35 oder 36, das weiterhin einen Schritt des Einrichtens innerhalb all der Düseneinrichtungen (296) im wesentlichen des gleichen Fließweges und der gleichen Fließpraxis für jeden der getrennten korrespondierenden Polymer-Fließströme aus dem gleichen Material zu den unterschiedlichen Düseneinrichtungen von der Initiierung des Flußvorschubs bis zum Ankommen an den Düseneinrichtungen umfaßt.

38. Verfahren nach Anspruch 33,34,35 oder 36, das weiterhin einen Schritt des Einrichtens innerhalb all der Düseneinrichtungen (296) im wesentlichen des gleichen Fließweges und der gleichen Fließpraxis für jeden der getrennten korrespondierenden Polymer-Fließströme, die korrespondierende Schichten in den Gegenständen bilden sollen, umfaßt.

39. Verfahren nach Anspruch 35,36 oder 37, das das Verdrängen der Schmelzmaterialien an stromaufwärts gelegenen Stellen, entfernt von den Düseneinrichtungen (296) umfaßt, um die besagten sich vorwärts bewegenden Flüsse einzustellen, und bei dem diese Flüsse in separate Ströme zu den Düseneinrichtungen stromabwärts von Einrichtungen, die die Flüsse verdrängen,kanalisiert werden.

40. Verfahren nach Anspruch 39, das das Aufspalten der sich vorwärtsbewegenden Flüsse und von den Punkten an, bei denen die Flüsse aufgespalten sind, das Einstellen für alle der getrennten aufgespaltenen Fließströme von Wegen und Fließpraktiken, die im wesentlichen identisch sind, für die korrespondierenden Materialströme umfaßt.

41. Verfahren nach einem der Ansprüche 33 bis 38, bei dem das Einstellen des Fließstromdurchlaufweges und der Fließpraxis vom Ursprungspunkt des kontinuierlichen Fließens eines jeden Stromes in einer Spritzung bis innerhalb jeder Düseneinrichtung (296) geschieht.

42. Verfahren nach einem der Ansprüche 33 bis 41 , das weiterhin den Schritt des Spritzblasformens zur Formung von Gegenständen wie Behältern umfaßt, deren Gesamtseitenwanddicken im Mittel von 0,012 Zoll bis 0,030 Zoll (0,30 bis 0,76 mm) betragen.

43. Verfahren nach einem der Ansprüche 33 bis 42, das die Verwendung von vier Coinjektions-Düseneinrichtungen (296), eine an jeder Ecke von einem vierseitigen Muster (siehe z.B. Fig. 29C) umfaßt und die Schritte umfaßt, daß die getrennten Polymermaterialströme nahe aneinander gebracht werden in einem Muster in im wesentlichen der gleichen horizontalen und axialen Ebene, in der sie transaxial gegeneinander versetzt sind und zwischen den vier Düseneinrichtungen sind, und jeder Fließstrom zu der entsprechenden Düseneinrichtung gerichtet wird.

44. Verfahren nach einem der Ansprüche 33 bis 42, das die Verwendung von acht Düseneinrichtungen (296) umfaßt, die in einem Muster von zwei Reihen ausgerichtet sind, von denen jede in sich vier Düseneinrichtungen aufweist, wobei die Reihen entlang jeweiliger längerer Seiten eines Rechteckes angeordnet sind, und das die Schritte umfaßt, daß die getrennten Fließströme aus Polymermaterial in im wesentlichen horizontale Ausrichtung entlang einer Ebene, zentriert in dem Rechteck zwischen den parallelen Reihen von Düseneinrichtungen, gebracht werden, dann in horizontal und axial jeweils verschobene Ausrichtung, dann nach außen in Richtung auf die schmalen Enden des Rechtecks zu dem Mittelpunkt von jedem der oberen und unteren Muster von vier Düseneinrichtungen gebracht werden, an jeder Seitenmitte jeder der Polymerströme in zwei entgegengesetzte horizontale Ströme T-aufgespalten werden, von denen jeder sich zu einem Punkt zwischen dem Punkt, bei dem die Ströme T-aufgespalten wurden, und den entsprechenden benachbarten zwei Düsen auf jeder Seite des Musters erstreckt, und an solch einem letztgenannten Punkt die jeweiligen Ströme in divergente Ströme Y-aufgespalten werden (bei 292) und jeder Strom zu einer entsprechenden von den acht Düseneinrichtungen gerichtet wird.

45. Verfahren nach einem der Ansprüche 33 bis 44, das das Zusammenbringen der getrennten Fließströme zu kombinierten Strömen in Kombinierungsbereichen (546) der jeweiligen Düseneinrichtungen (296) umfaßt.

46. Verfahren nach einem der Ansprüche 33 bis 45, umfassend, daß die kombinierten Ströme in den Düseneinrichtungen (296) derart eingerichtet werden, daß die kombinierten Ströme die gleichen Massefluß-Charakteristiken aufweisen.

47. Eine Spritzgußvorrichtung nach Anspruch 13, die außerdem folgendes umfaßt:
(i) eine Vielzahl von Einspritzhohlräumen (102) auf einem Aufspannglied, eine Vielzahl von Coinjektions-Düseneinrichtungen (296), die in Nachbarschaft mit den Hohlräumen angeordnet werden können, und
(ii) Mittel zum Aneinanderstoßenlassen der benachbart angeordneten Düsen und Einspritzhohlräume,
(iii) eine Quelle (202) aus polymerem Material, die stromaufwärts von den Düseneinrichtungen (296) für jedes Material, das eine Schicht des Gegenstandes bilden soll, gelegen ist, und
(iv) jede der Düseneinrichtungen einen zentralen Kanal (540) und Polymer-Fließstromdurchgangswege (450, 460,480,500,520) in Kommunikation mit dem zentralen Kanal aufweist, wobei der zentrale Kanal ein offenes Ende mit einem Anschnitt (596) aufweist und ein Polymermaterial-Kombinierungsbereich (546) in Kommunikation mit den Durchgangswegen und dem Anschnitt steht,
(v) Verdrängungseinrichtungen (232,234,252,260,262), die stromaufwärts von den Düseneinrichtungen (296) gelegen sind, zum Bewerten der Polymermaterialien zum Bilden der Schichten der Gegenstände von ihren Quellen zu jeweiligen Durchgangswegen durch getrennte Fließkanäle (z.B. 250) für jedes Polymermaterial und zum unter Drucksetzen dieses Materials in seinem Durchgangsweg,
(vi) Fließkanal-Aufspalteinrichtungen (290,292) in jedem Fließkanal (z.B. 220) stromabwärts von seiner zugeordneten Verdrängungs- und Druckerzeugungseinrichtung zum Aufspalten des Fließkanals in eine Vielzahl von getrennten verzweigten Fließkanälen (708,709; 350,351; 352,353; 356,357), wobei es einen getrennten verzweigten Fließkanal für jedes Material, das eine Schicht des Gegenstandes bilden soll, gibt,
(vii) Mittel (294) in Kommunikation mit einem verzweigten Fließkanal für jedes Material zum getrennten Einspeisen jedes getrennten Polymermaterials zu seiner zugehörigen Düseneinrichtung (296), wobei die Fließkanäle, die verzweigten Fließkanäle und die Zuführungseinrichtungen für jedes korrespondierende Polymer Fließwege zu all den Düseneinrichtungen liefern, die von im wesentlichen identischer Konfiguration und Länge sind,
(viii) Ventilglieder (800,834), die kooperativ mit jeder der Düseneinrichtungen verbunden sind, wobei jedes Ventilglied in dem Kombinierungsbereich (546) des zentralen Kanals der zugeordneten Düseneinrichtungen betriebsmäßig wirkt,
(ix) Antriebseinrichtungen (860,856; 844,850) zum Antreiben all der Ventilglieder im wesentlichen gleichzeitig und im wesentlichen identisch innerhalb der zentralen Kanäle ihrer jeweiligen Düseneinrichtungen (296), um im wesentlichen gleichzeitige und identische Steuerung über den Beginn (die Initiierung), die Regulierung und die Beendigung de Fließens von den Polymermaterialien durch all die Düseneinrichtungen zu liefern, und
(x) Steuereinrichtungen (2040), die mit den Antriebseinrichtungen Verbunden sind, zum Bewegen all der Ventilglieder (800,834) auf eine vorherbestimmte Weise, die die im wesentlichen identischen gleichzeitigen Bewegungen der getrennten Ventilglieder in ihren jeweiligen Coinjektionsdüsen-Einrichtungen (296) liefern.

48. Vorrichtung nach Anspruch 47, bei dem das Ventilglied aus (a) einer offenendigen langgestreckten Manschette (800) mit einer engtolerierten Gleitpassung innerhalb des Düsenzentralkanals (540) und einer Öffnung (804) in ihrer Wandöffnung zu einem langgestreckten zentralen Durchgangsweg (820), der zu dem offenen Ende (812) führt, und (b) einem langgestreckten Stift (834) besteht, der für relative axiale Bewegung innerhalb des zentralen Kanaldurchgangsweges der Manschette angebracht ist und eine engtolerierte Gleitpassung innerhalb des Durchgangsweges (820) aufweist, die ausreichend ist, um jegliche signifikante Ansammlung oder Durchgang von Polymerschmelzmaterial zwischen dem Stift und der Manschette zu verhindern, wobei die langgestreckte Manschette eine engtolerierte Gleitpassung innerhalb des zentralen Kanals der Düse hat, um in gleicher Weise jegliche signifikante Ansammlung oder Durchgang von Polymermaterial zwischen der Düse (296) und der Manschette (800) zu verhindern.

49. Vorrichtung nach Anspruch 47 oder Anspruch 48, bei der die Antriebseinrichtung (860,856; 844,850) das getrennte Ventilglied sequentiell und simultan betätigt, um Fluß der Vielzahl von Materialien in vorherbestimmten Kombinationen in den zentralen Kanal der jeweiligen Düseneinrichtung (296) zu gestatten, wodurch Fluß des Materials für irgendeine vorgegebene Schicht im wesentlichen gleichzeitig in all den Coinjektionsdüsen-Einrichtungen bewirkt wird.

50. Vorrichtung nach Anspruch 47, 48 oder 49, bei der der Kombinierungsbereich (546) jeder Düseneinrichtung (296) nahe an dem Anschnitt liegt, der Kombinierungsbereich eine axiale Länge von 100 Mils bis 900 Mils (100·10⁻³ Zoll bis 900·10⁻³ Zoll; 2,54 bis 22,9 mm) aufweist und das Ventilglied jeder Düse in dem Kombinierungsbereich derselben betriebsmäßig arbeitet.

51. Vorrichtung nach einem der Ansprüche 47 bis 50, bei der das Ventilglied (800,834) und die Antriebseinrichtung (860,856; 844,850) an dem Ende eines Injektionszyklus wirken, wodurch das Ventilglied in den Kombinierungsbereich bewegt wird, um Schmelzmaterialien davon zu entfernen, und danach die Materialien gegen Fließen von den Durchgangswegen (450,460,480, 500,520) in die Zentralkanäle (540) der Düseneinrichtungen blockiert.

52. Vorrichtung nach einem der Ansprüche 47 bis 50, bei der die Fließkanäle (z.B.220), die verzweigten Fließkanäle, die Zuführungseinrichtungen (232,234,252,260, 262) und die Düseneinrichtungen (296) ausgelegt sind, um im wesentlichen den gleichen Polymerstromfließweg in Werten der Entfernung, des Durchmessers, Verengungen und des Fließmusters für jedes korrespondierende Material in seinen korrespondierenden Fließkanälen (z.B.220), verzweigten Kanälen und Düsendurchgangswegen (z.B.450) zum Bilden einer korrespondierenden Schicht eines jeden mehrschichtigen Gegenstandes, die von jeder Düseneinrichtung (296) gespritzt wird, zu liefern.

53. Vorrichtung nach einem der Ansprüche 47 bis 52, bei der die Hohlräume zum Ausformen von Vorformlingen bestimmt sind und die Vorrichtung eine Vielzahl von Blasformhohlräumen (108) umfaßt, in denen die Vorformlinge zu Behältern aufgeblasen werden.

54. Vorrichtung nach einem der Ansprüche 47 bis 52, bei der diese Hohlräume (102 oder 108) geformt sind, um Gegenstände in der Form von Behältern festzulegen.

55. Vorrichtung nach einem der Ansprüche 47 bis 54, bei der jeder Durchgangsweg (z.B.500) ihrer Vielzahl eine Öffnung (502) aufweist, die mit dem zentralen Kanal (540) der zugeordneten Düseneinrichtungen kommuniziert, und wenigstens einer der Durchgangswege (z.B.500) sich verjüngt, um in Richtung auf seine Öffnung zu konvergieren.

56. Vorrichtung nach Anspruch 13, die eine Vielzahl von Einspritzhohlräumen (102) auf einem Aufspannglied (104), eine Vielzahl von Coinjektionsdüsen (296) auf einem anstoßenden Aufspannglied (288) umfaßt, wobei die Hohlräume und die Düsen betriebsmäßig wirken, um Behälter mit Seitenwänden mit Abschnitten unterhalb der Randendbereiche der Behälter zu bilden, die 0,010 Zoll bis 0,035 Zoll (0,25 bis 0,89 mm) sind, wobei die Vorrichtung weiterhin eine Quelle (z.B.202) von Polymermaterial, die stromaufwärts von den Düsen gelegen ist, für jedes Material, das eine Schicht eines jeweiligen mehrschichtigen Behälters bilden soll, Einrichtungen (232, 234, 252,260,261) für jedes Polymermaterial, das eine Schicht des Behälters bilden soll, um Ströme von den Materialien in Richtung auf die Düseneinrichtungen zu bewegen, einen Fließkanal (z.B. 220,222,250,257,258) für jeden Strom aus Polymermaterial, das eine Schicht des Behälters bilden soll, umfaßt, wobei jeder Fließkanal für jeden Strom von Material sich von jeder der Druck- und Bewegungseinrichtungen zu jeder Düseneinrichtung erstreckt, die Fließkanäle voneinander getrennt sind und im wesentlichen identische Polymerstromfließbewegungswege und -praxis für jeden Polymerstrom aus dem gleichen Material, das zu jeder Düseneinrichtung (296) kanalisiert ist, liefern.

57. Die Vorrichtung nach Anspruch 56, bei der weniger Quellen (202,204,206) als Druck- und Bewegungseinrichtungen vorhanden sind, Polymerstromfließkanäle dazwischen vorhanden sind und mit den jeweiligen Quellen und Bewegungseinrichtungen kommunizieren, und bei der der Fließkanal (z.B.217) von wenigstens einer Quelle (202) derart aufgespalten ist, daß jeder der aufgespaltenen Fließkanäle (220,222) mit einer entsprechenden Bewegungseinrichtung (232,234) kommuniziert, und die Wege der aufgespaltenen Fließkanäle für das gleiche Material zwischen den Quellen und den entsprechenden Bewegungseinrichtungen im wesentlichen die gleichen sind.

58. Die Vorrichtung nach Anspruch 56 oder Anspruch 57, die einen getrennten Durchgangsweg (z.B.500) in jeder Düseneinrichtung (296) für jedes Polymermaterial (z.B. C) umfaßt, wobei die Durchgangswege mit den geeigneten Fließkanälen (z.B.250) für die Polymermaterialien kommunizieren, die Schichten der Behälter bilden, und die Länge von jedem Düsendurchgangsweg und seinem zugeordneten und kommunizierenden Fließkanal, der sich zu den Druck- und Bewegungseinrichtungen (z.B.252) für einen Polymerstrom (C), der eine Schicht (C) bilden soll, erstreckt, im wesentlichen die gleiche wie die für jeden anderen Polymerstrom des gleichen Materials (C) ist, das von jeder anderen Düse eingespritzt werden soll und das eine entsprechende Schicht (C) in jedem anderen Behälter bilden soll.

59. Vorrichtung nach einem der Ansprüche 56 bis 58, bei der benachbart, zwischen und gleich beabstandet von der Vielzahl von Düseneinrichtungen Einrichtungen zum Anordnen der entsprechenden Kanäle (220,222,250,257,258) in einem linearen Muster, Einrichtungen (276,290,292) zum Aufspalten jedes linear angeordneten Kanals in Sets von verzweigten Fließkanälen (700bis 709), Einrichtungen (294) zum Umordnen jedes Sets aus diesen besagten linear angeordneten verzweigten Fließkanälen und Ausrichten derselben in einer Richtung, die im wesentlichen parallel zu der Achse von jeder der Düseneinrichtungen (296) verläuft, und Einrichtungen zum Richten von jedem der linear angeordneten, axial ausgerichteten verzweigten Fließkanäle in Richtung auf jeder der entsprechenden Düseneinrichtungen (296), um so mit dieser zu kommunizieren, vorhanden sind.

60. Vorrichtung nach Anspruch 59, bei der acht Düsen (296) in einem rechteckigen Muster von zwei Reihen aus vier gleich beabstandeten Düseneinrichtungen in jeder Reihe mit einer Düseneinrichtung an jeder Ecke von diesem rechteckigen Muster angeordnet sind, das ausgerichtete Muster von Fließkanälen axial entlang einer Linie zwischen dem mittleren Set von vier Düseneinrichtungen dieses rechteckigen Musters und von diesem vertikalen axial ausgerichteten und versetzten Muster liegt, das parallel zu der Achse von jeder der Düseneinrichtungen ist, zu der jeder dieser Kanäle hingerichtet ist, und die Vorrichtung umfaßt erste Aufspalteinrichtungen (290) zum Aufspalten jedes dieser Kanäle (z.B.350,351) in T-aufgespaltene Kanäle (z.B.352 bis 355), die in entgegengesetzte Richtungen fließen und damit kommunizieren, und die Vorrichtung umfaßt zweite Aufspalteinrichtungen (292), die jeden der entsprechenden T-aufgespalteten Kanäle (z.B.352) in zwei diagonal divergente Y-aufgespaltete Kanäle (z.B.358, 359) Y-aufspalten, von denen einer mit einer und von denen der andere mit der anderen der zwei entsprechenden Düsen nahe des oberen Teils auf jeder einen Seite kommunizieren und die entgegengesetzt Y-aufgespalteten Kanäle in gleicher Weise mit den zwei Düseneinrichtungen auf der anderen Seite der untersten und der obersten Düseneinrichtungen des rechteckigen Musters kommunizieren.

61. Vorrichtung nach einem der Ansprüche 56 bis 60, die Ventilglieder (800,834) umfaßt, die in der Düseneinrichtung (296) wirken, um das Fließen und Nicht-Fließen der Polymermaterialien von den Düsen in die Einspritzhohlräume (102) zu steuern.

62. Vorrichtung nach Anspruch 61, bei der das Ventilglied eine langgestreckte Manschette (800) mit einer Seitenwand mit einer Öffnung (804) darin, ein offenes Ende (812) und einen langgestreckten zentralen Durchgangsweg (820) in Kommunikation mit der Öffnung und dem offenen Ende und einen langgestreckten Stift (834) umfaßt, der angebracht und so ausgelegt ist, daß er sich innerhalb des zentralen Manschettendurchgangsweges (820) axial hin- und herbewegt und eine Seitenwand aufweist, dessen äußere Oberfläche ausgelegt ist, um die besagte Öffnung zu schließen und zu öffnen, und in engtolerierter Gleitpassung innerhalb des besagten zentralen Durchgangsweges (820) steht.

63. Vorrichtung nach Anspruch 13 mit einer Vielzahl von Düseneinrichtungen (296), von denen jede einen Anschnitt (596) an einem Ende aufweist, und einem zentralen Kanal (540) in Kommunikation mit dem Anschnitt, wenigstens drei Fließdurchgangswegen (440,460,500) für polymere Schmelzmaterialströme in Kommunikation mit dem zentralen Kanal (540), jeweils durch eine zugeordnete Öffnung, wobei eine erste dieser Öffnungen (462) näher dem Anschnift (596) als die anderen Öffnungen ist und eine dritte dieser Öffnungen (440) weiter entfernt von dem Anschnitt als die anderen Öffnungen angeordnet ist, und wobei die Düsen weiterhin Ventilglieder (800,834) umfassen, die in dem Düsenzentralkanal (540) bewegbar sind und betriebsmäßig wirken, um die Öffnungen zu blockieren und freizugeben um dadurch selektiv zu verhindern und zu gestatten, daß polymere Schmelzmaterialien durch die Öffnungen (462,502,440) in den zentralen Kanal zum Spritzen fließen.

64. Vorrichtung nach Anspruch 63, bei der das Ventilglied so ausgelegt ist, daß es in einer Stellung die besagte zweite Öffnung (502) blockiert, während es die erste (462) oder dritte Öffnung (440) oder sowohl die erste als auch die dritte Öffnung nicht blockiert.

65. Vorrichtung nach Anspruch 64, bei der das Ventilglied auch angepaßt ist, um in einer anderen Stellung die erste Öffnung (462) zu blockieren und die dritte Öffnung (440) nicht zu blockieren.

66. Vorrichtung nach Anspruch 64 oder Anspruch 65, bei der das Ventilglied auch angepaßt ist, um in einer anderen Stellung weder die zweite Öffnung (502) noch die erste Öffnung (462) zu blockieren.

67. Vorrichtung nach einem der Ansprüche 64 bis 66, bei der das Ventilglied auch angepaßt ist, um in einer Stellung die zweite Öffnung (502) zu blockieren, während alle anderen Öffnungen nicht blockiert werden, und in einer anderen Stellung alle Öffnungen mit Ausnahme der zweiten Öffnung zu blockieren.

68. Vorrichtung nach Anspruch 63, bei der das Ventilglied (800,834) angepaßt ist, um in einer Stellung die zweite Öffnung (502) zu blockieren und die dritte (440) oder sowohl die erste (462) als auch die dritte Öffnung nicht zu blockieren, und in einer zweiten Stellung die erste Öffnung zu blockieren und weder die zweite noch die dritte Öffnung zu blockieren.

69. Vorrichtung nach Anspruch 68, bei der das Ventilglied weiterhin angepaßt ist, um in einer Stellung die zweite Öffnung (502) zu blockieren, während alle anderen Öffnungen nicht blockiert sind, und in einer anderen Stellung alle Öffnungen mit Ausnahme der zweiten Öffnung zu blockieren.

70. Vorrichtung nach einem der Ansprüche 63 bis 69, die weiterhin Einrichtungen (232,252,234) entfernt von der Düse umfaßt zum Bewegen von polymerem Schmelzmaterial zu jedem der Düsendurchgangswege (440,460, 500) und zum Reduzieren des Fließens von polymerem Material durch die dritte Öffnung (440), während sich die Ventilglieder (800,834) in einer Stellung befinden, in der weder die zweite noch die dritte Öffnung blockiert ist.

71. Vorrichtung nach einem der Ansprüche 63 bis 70, bei der das Ventilglied eine langgestreckte Manschette (800) mit einem offenen Ende (812) und einer Öffnung (804) in ihrer Wand umfaßt, die sich zu einem langgestreckten zentralen Durchgangsweg (820) in der Manschette öffnet, wobei die Manschette innerhalb des Düsenzentralkanals (540) in einer engtolerierten Gleitpassung wenigstens benachbart der ersten Öffnung (462) und ausreichend, um signifikante Ansammlung oder Durchgang von polymerem Material dazwischen zu verhindern, angebracht ist und ein langgestreckter Stift (834) innerhalb der Manschette in engtolerierter Gleitpassung innerhalb des zentralen Durchgangsweges (820) der Manschette angebracht ist, was ausreichend ist, um signifikante Ansammlung oder Durchgang von Schmelzmaterial zwischen dem Stift und dem zentralen Manschettendurchgangsweg zu verhindern; wobei diese Manschette so ausgelegt ist, daß sie sich innerhalb des Düsenzentralkanals (540) axial hin- und herbewegen kann und betriebsmäßig wirken kann, um die erste und die zweite Öffnung (462,502) zu blockieren und freizugeben und ihre Öffnung (804) in eine und aus einer Ausrichtung mit der dritten Öffnung (440) zu bringen, und der Stift (834) so ausgelegt ist, daß er sich innerhalb der Manschette axial hin- und herbewegen kann, um diese besagte Öffnung (804) zu blockieren und freizugeben, wenn die Öffnung mit der dritten Öffnung ausgerichtet ist.

72. Vorrichtung nach Anspruch 71, bei der die dritte Öffnung für Durchgang von Schmelzmaterial (A), das den Kern eines im wesentlichen konzentrischen kombinierten Stromes aus Schmelzmaterialien (B,C,A) bilden soll, durch den Düsenzentralkanal (540) bestimmt ist und die Manschette und der Stift so positionierbar sind, um zu gestatten, daß Schmelzmaterial (A) durch die dritte Öffnung (440) fließt, während Fließen von Schmelzmaterial (C) durch die besagte zweite Öffnung (502) verhindert wird.

73. Vorrichtung nach Anspruch 72, bei der die Manschette und der Stift so positionierbar sind, daß sie gestatten, daß Schmelzmaterial (C) durch die besagte zweite Öffnung (502) fließt, während Fließen von Schmelzmaterial (A) durch die besagte dritte Öffnung (440) verhindert wird.

74. Vorrichtung nach Anspruch 64 oder einem der Ansprüche, die von Anspruch 64 abhängen, die erste, zweite und dritte Durchgangswege (440,460,500) umfaßt, von denen jeder eine Öffnung aufweist, die durch voreilende und nacheilende Lippen (z.B.461,523) bestimmt ist und mit dem besagten Kanal (540) kommuniziert, wobei diese Lippen den Kanal vollständig umgeben und jede Öffnung ihre Mittellinie im wesentlichen rechtwinklig zu der Achse des zentralen Kanals aufweist, die zweite Öffnung (502) axial zwischen der ersten und der dritten Öffnung (462,440) gelegen ist und das Ventilglied axial und hin- und herbewegbar innerhalb des besagten zentralen Kanals (540) angebracht ist und positionierbar ist, (a) um all diese Öffnungen zu blockieren, (b) während die besagte zweite Öffnung (502) blockiert ist, die dritte Öffnung (440) nicht zu blockieren für Fließen von Schmelzmaterial (A) in den zentralen Kanal als ein fester Strom, (c) die erste Öffnung (462) nicht zu blockieren, um Fließen von Schmelzmaterial (B) zu liefern, das vollständig den festen Strom umgibt, um einen kombinierten konzentrischen Fließstrom von zwei Materialien (B,A) zu liefern, (d) die zweite Öffnung (502) nicht zu blockieren, um zu gestatten, daß Schmelzmaterial (C) dort hindurchfließt, um zwischen den besagten zwei Materialien einzutreten und dadurch einen kombinierten Strom von drei konzentrischen Schichten (A,B,C) zu liefern, und (e) andererseits das Fließen der entsprechenden Materialien durch die Öffnungen in einer Folge zu blockieren, die nicht das Umgekehrte der flußerzeugenden Folge ((b) bis (d))ist.

75. Vorrichtung nach Anspruch 74, bei der das Ventilglied (800,834) angepaßt ist, um den kombinierten Strom von drei Materialien (A,B,C) von dem zentralen Kanal (540) an dem Ende des Spritzzyklus wenigstens bis zu der Durchgangswegöffnung (462), die dem Anschnitt am nächsten liegt, wegzuräumen.

76. Vorrichtung nach Anspruch 74, bei der die ersten und die zweiten Durchgangswegöffnungen (462,502) jeweils eine axiale Breite aufweisen, die gleichmäßig über den zentralen Kanal (540) ist und kleiner als die Querschnittsbreite des zentralen Kanals ist, und die Öffnungen so nahe wie möglich aneinander und an dem Anschnitt (596) sind, um so die Zeit zu minimalisieren, die von dem kombinierten Strom von Materialien benötigt wird, um den Anschnitt zu erreichen.

77. Vorrichtung nach Anspruch 76, bei der der Abstand von der nacheilenden Lippe der zweiten Öffnung (502) bis zu dem Anschnitt (596) 100 bis 600°10⁻³ Zoll (2,54 bis 15,2 mm) beträgt.

78. Vorrichtung nach Anspruch 63, bei der wenigstens die erste und zweite (462,502) der Öffnungen vollständig einen Schmelzen kombinierenden Bereich des zentralen Kanals (540) einkreisen und sich dorthin öffnen, eine voreilende Lippe (z.B.461) jeder Öffnung und die Mittellinie jeder Öffnung im wesentlichen rechtwinklig zu der Achse des zentralen Kanals (540) liegen, die erste Durchgangswegöffnung (462) die Öffnung ist, die dem Anschnitt (596) am nächsten liegt und die dritte Durchgangswegöffnung am weitesten entfernt von dem Anschnitt ist, jede der Öffnungen einen Querschnittsbereich aufweist, der nicht größer als der Querschnittsbereich des Kanals (540) ist, und sowohl die erste als auch die zweite Öffnung (462,502) so nahe wie möglich beieinander und an dem Anschnitt sind, um die Zeit zu minimalisieren, die die kombinierten Schmelzmaterialien benötigen, um zu dem Anschnitt zu fließen, und wobei das Ventilglied weiterhin umfaßt:
(a) eine langgestreckte Manschette (800), die mit einer engen Gleittoleranz in diesen Kanal eingepaßt ist, um sich darin hin- und herzubewegen, wobei die Manschette ein offenes Ende (812) hat, das, wenn sich die Manschette in einer am weitesten vorne gelegenen Stellung befindet, mit dem Anschnitt (596) ausgerichtet ist und damit kommuniziert, und die Manschette in ihrer Seitenwand eine Öffnung (804) aufweist, die so ausgelegt ist, daß sie mit der dritten Durchgangswegöffnung kommuniziert, und
(b) einen langgestreckten Stift (834), der in einer engen Gleittoleranz in diese Manschette eingepaßt ist für eine Hin- und Herbewegung darin, wobei der Stift zu einer Stellung bewegbar ist, die die Öffnung (804) verschließt, und mit der Manschette (800) zusammenarbeitet, wenn sie sich in einer vorderen Stellung befinden, um den Kombinierungsbereich dieses Kanals im wesentlichen vollständig zu reinigen, wobei die Toleranzen zwischen dem Kanal, der Manschette und dem Stift derart sind, daß sich keine Schmelze zwischen ihren sich gegenüberliegenden Oberflächen ansammeln kann, und das Ventilglied zu jeweiligen Positionen bewegbar ist, bei denen
alle Öffnungen blockiert sind,
alle Öffnungen offen sind,
nur die erste Öffnung nicht blockiert ist,
nur die dritte Öffnung nicht blockiert ist und
nur die erste und die zweite nicht blockiert sind.

79. Vorrichtung nach Anspruch 78, die Antriebseinrichtungen (860,856; 844,850; 906,918) zum Antreiben des Ventilglieds zwischen diesen Positionen umfaßt.

80. Die Vorrichtung nach Anspruch 78, bei der die Ventilglieder ausgelegt sind, um all die Öffnungen innerhalb einer Periode von 75 Hundertstelsekunden, vorzugsweise innerhalb 20 Hundertstelsekunden, und noch mehr vorzuziehen innerhalb 15 Hundertstelsekunden, zu öffnen.

81. Die Vorrichtung nach Anspruch 78, bei der der zentrale Kanal (540) einen gleichmäßigen Querschnittsbereich wenigstens von der ersten Durchgangswegöffnung (462) bis zu der zweiten Durchgangswegöffnung (502) aufweist.

82. Die Vorrichtung nach Anspruch 78, bei der der erste Durchgangsweg (460) eine voreilende Wand (593) aufweist, die sich in Richtung auf den Anschnitt (596) und in Richtung auf die Achse des zentralen Kanals neigt und sich zu der voreilenden Lippe (461) der ersten Öffnung erstreckt, wobei die voreilende Lippe der ersten Öffnung näher an der Achse des zentralen Kanals als die nacheilende Lippe dieser Öffnung ist, und bei der die Manschette (800) einen sich verjüngenden Mund (812) aufweist, der das offene Ende der Manschette definiert und der ausgelegt ist, um gegen die besagte voreilende Wand (593) anzustoßen, um die Bewegung der Manschette in Richtung auf den Anschnitt (596) zu begrenzen und diese erste Öffnung (462) zu blockieren.

83. Vorrichtung nach Anspruch 78, bei der das Ventilglied umfaßt:
eine langgestreckte Manschette (800), die mit einer engen Gleittoleranz in den zentralen Kanal (540) eingepaßt ist, um sich darin hin- und herzubewegen, wobei die Manschette einen zentralen Durchgangsweg (820), ein nach vorn offenes Ende (812), das so ausgelegt ist, um mit einem Abschnitt des zentralen Kanals zu kommunizieren, der zwischen der ersten und der zweiten Öffnung gelegen ist, aufweist und eine Öffnung (804) in ihrer Wand vorhanden ist, so daß die Manschette die dritte Durchgangswegöffnung (440) in Abhängigkeit von genauer Einstellung der Öffnung damit oder Fehlen derselben blockieren oder freigeben kann, die Manschette in der Lage ist, sich zu einer Position zu bewegen, bei der sie die erste und die zweite Durchgangswegöffnung (462,502) blockiert, während die Öffnung (804) sich in Ausrichtung mit der dritten Durchgangswegöffnung (462,502) befindet, wobei die Öffnung (804) in Ausrichtung mit der dritten Durchgangswegöffnung (440) steht, die nicht blockiert ist, und das Ventilglied weiterhin Einrichtungen zum Blockieren der Öffnung umfaßt, wenn sie mit der dritten Durchgangswegöffnung ausgerichtet ist, wobei die Öffnungsblockierungseinrichtung (834) so ausgelegt ist, daß sie zu einer die Öffnung blockierenden Position zur gleichen Zeit bewegt werden kann, wenn die erste und die zweite Öffnung (462,502) nicht blockiert sind, und zu einer die Öffnung freigebenden Position zu der gleichen Zeit bewegt werden kann, wenn die erste und die dritte Öffnung (462,440) nicht blockiert sind und die Öffnung (804) in Ausrichtung mit der dritten Öffnung steht.

84. Vorrichtung nach Anspruch 83, bei der die Manschette (800) auch derart positionierbar ist, daß die erste und die zweite Öffnung (462,502) nicht blockiert sind, während die dritte Öffnung (440) blockiert ist, weil die Öffnung nicht in Ausrichtung damit steht, und weiter positionierbar ist, wobei alle drei Öffnungen zur gleichen Zeit blockiert sind.

85. Vorrichtung nach Anspruch 83 oder 84, bei der die Manschette (800) einen hinteren Endabschnitt aufweist und die Einrichtung zum Blockieren der Öffnung ein ortsfestes Glied (648) ist, das sich innerhalb eines hinteren Endabschnittes des zentralen Manschettendurchgangsweges (820) erstreckt, um teilweise die dritte Öffnung zu blockieren, wobei dieses Glied (648) in einer engtolerierten Gleitpassung innerhalb des zentralen Manschettendurchgangsweges steht und mit der Manschette derart zusammenwirkt, daß dann, wenn die Manschette von einer Vorwärtsstellung zurückgezogen wird, die Manschettenöffnung (804) mit der dritten Öffnung (440) ausgerichtet ist, aber relativ zu dem Glied (648) anstoßend gelegen ist und teilweise von diesem blockiert wird.

86. Vorrichtung nach einem der Ansprüche 63 bis 65, die weiterhin umfaßt:
Quellen (z.B.202,204,206) von Polymermaterialien für die Schichten des Gegenstandes,
Angußverteilereinrichtungen (278,289), die sich stromabwärts von den Quellen von Polymermaterialien zu jeder der Vielzahl der Düsen erstrecken, von denen jede vor den Angußverteilereinrichtungen angebracht ist, wobei diese Angußverteilereinrichtungen eine Vielzahl von Polymerstromfließkanälen (220,222,250,257,258) in sich umfassen, jede für getrenntes Kanalisieren eines Polymerschmelzmaterials, das eine Schicht des Gegenstandes bilden soll, von der Quelle zu jeder der Einspritzdüsen (296) und
Einrichtungen (232,234,252) zum Bewegen jedes Stroms aus Polymermaterial durch die Fließkanäle und in die jeweiligen Düsen,
wobei die Ventilglieder (800,834) innerhalb der jeweiligen Düsen wirken, um den Strom der jeweiligen Polymerschmelzmaterialien von den Durchgangswegen in den Zentralkanal (540) der Einspritzdüsen für die Injektion von kombinierten Strömen aus diesen Materialien als gleichzeitige Spritzungen von den Düsen in direkt anstoßende Einspritzhohlräume (102) zu steuern.

87. Vorrichtung nach Anspruch 13 mit einer Vielzahl von Düseneinrichtungen (296), von denen jede einen Zentralkanal (540) mit einem offenen Ende, einen Anschnitt (596) an dem offenen Ende und zwei Fließdurchgangswege (440,450; 460) für polymere Materialschmelzströme, von denen jeder eine Öffnung (440,462) aufweist in Kommunikation mit dem Zentralkanal, umfaßt, und die Vorrichtung einen Kanal (220,222) für jeden Schmelzfließstrom aufweist, wobei jeder Kanal mit einem entsprechenden Durchgangsweg kommuniziert,
und gemeinsame Einrichtungen (214,232,234) in Kommunikation mit jedem Durchgangsweg zum Bewegen von beiden Fließströmen aus polymerer Materialschmelze durch ihre Kanäle, Durchgangswege und Öffnungen und Ventilglieder (800,834) in dem Zentralkanal (540) angebracht sind und wirken, um die Öffnungen zu blockieren, teilweise zu blockieren und freizugeben.

88. Vorrichtung nach Anspruch 87, bei der die Düse einen zusätzlichen Fließstromdurchgangsweg für polymere Materialschmelze (500) mit einer Öffnung (502) in Kommunikation mit dem Zentralkanal aufweist, wobei der zusätzliche Durchgangsweg und die Öffnung zwischen den anderen Durchgangswegen und Öffnungen gelegen sind, und das Ventilglied wirkt, um die zusätzliche Öffnung (502) zu blockieren, während die anderen zwei Öffnungen (440,462) dadurch nicht blockiert werden.

89. Vorrichtung nach Anspruch 87 zum Spritzgießen einer Vielzahl von Kunststoffgegenständen, von denen jeder wenigstens fünf Schichten (A bis E), die aneinander laminiert sind, aufweist, umfassend:
(i) Quellen (202 bis 206) von polymerem Material für jedes polymere Material, das eine oder mehrere Schichten der Gegenstände bilden soll , und eine Vielzahl von Coinjektionsdüseneinrichtungen (296) stromabwärts Von den Quellen, wobei jede Düseneinrichtung wenigstens fünf Fließstromdurchgangswege für Polymermaterialschmelze (440,460,480,500,520) umfaßt, von denen jeder über eine entsprechende Öffnung mit dem Zentralkanal (540) kommuniziert, um einen Schmelzflußstrom aus polymerem Material in den zentralen Kanal passieren zu lassen, wobei ein erster Durchgangsweg (460) mit seiner Öffnung näher (462) an dem Anschnitt (596) als die anderen Durchgangswegöffnungen zum Durchlassen eines Schmelzstromes von Material (B) in den Zentralkanal zum Bilden der äußeren Oberflächenschicht (B) des Gegenstandes liegt, ein zweiter Durchgangsweg (500) zum Passierenlassen eines Schmelzstromes aus Material (C) in den Zentralkanal zum Bilden einer inneren Schicht (C) des Gegenstandes, ein dritter Durchgangsweg (440) weiter entfernt von dem Anschnitt als irgendeine der anderen Öffnungen zum Einführen in den Zentralkanal eines Schmelzstromes aus Material (A) zum Bilden der inneren Oberflächenschicht (A) des Gegenstandes liegt, ein vierter Durchgangsweg (480) zwischen dem ersten und dem zweiten Durchgangsweg zum Passierenlassen eines Schmelzstromes aus Material (E) in den Zentralkanal zum Bilden einer Zwischenschicht (E) zwischen der äußeren Oberflächenschicht (B) und der inneren Schicht (C) des Gegenstandes liegt, und ein fünfter Durchgangsweg (520) zwischen dem inneren Durchgangsweg (500) und dem dritten Durchgangsweg (440) zum Hindurchleiten eines Schmelzstromes aus Material (D) in den Zentralkanal zum Bilden einer Zwischenschicht (D) zwischen der inneren Schicht (C) und der inneren Oberflächenschicht (A) des Gegenstandes liegt,
(ii) Ventilglieder(800,834), die in jeder Düseneinrichtung (296) benachbart zu den Öffnungen zum Steuern des Fließens der jeweiligen polymeren Materialien durch die Öffnungen und in den Zentralkanal wirken, wobei jedes Ventilglied so ausgelegt ist, daß es in einer Positionsmode die zugehörige zweite Öffnung (502) blockiert, während die dritte Öffnung (440) nicht blockiert ist, in einer anderen Positionsmode nicht die zugehörige erste Öffnung (462)blockiert, während es teilweise die dritte Öffnung (440) blockiert, und in einer weiteren Positionsmode nicht die erste, zweite und vierte Öffnung (462,502,482) blockiert, während es die fünfte Öffnung (522) teilweise blockiert,
(iii) wobei die gemeinsame Bewegungseinrichtung (214) den beiden Materialien (B,A) zum Bilden der außenseitigen und der innenseitigen Oberflächen zugeordnet ist, um sie in und durch ihre jeweiligen ersten und zweiten Durchgangswege und Öffnungen zu bewegen, und
(iv) eine weitere Bewegungseinrichtung (218), die beiden Materialien (E,D) zum Bilden der Zwischenschichten zur Bewegung von jedem von ihnen in und durch die jeweiligen vierten und fünften Durchgangswege und Öffnungen gemeinsam ist.

90. Die Vorrichtung nach Anspruch 89, bei der jedes der Ventilglieder eine axial hin- und hergehende, langgestreckte Manschette (800) umfaßt, die in einer engtolerierten Gleitpassung innerhalb des Zentralkanals (540) der zugeordneten Düseneinrichtung (296) sitzt, die Manschette einen zentralen Durchgangsweg (820), ein vorwärts offenes Ende (812) zur Kommunizierung mit dem zentralen Kanal und eine Öffnung (804) in ihrer Seitenwand zur Kommunikation mit der dritten Durchgangswegöffnung aufweist, die Manschette ausgelegt ist, um die ersten, zweiten, vierten und fünften Öffnungen (462,502,482,522) zu blockieren und freizugeben, und in Zusammenwirken mit einem anderen Element (z.B.834 oder 648) des Ventilgliedes ausgelegt ist, um die dritte Öffnung zu blockieren, und das besagte Element arbeitsmäßig der Manschette zugeordnet ist, um zum Blockieren, teilweisen Blockieren oder Freigeben der Manschettenöffnung (804) zu dienen.

91. Vorrichtung nach Anspruch 90, bei der das besagte Element ein ortsfestes Glied (648) ist, das zu dem hinteren Endabschnitt des zentralen Durchgangsweges der Manschette geschlossen ist, wobei das stationäre Glied innerhalb des zentralen Manschettendurchgangsweges eine engtolerierte Gleitpassung macht.

92. Vorrichtung nach Anspruch 89, bei der das in jeder Düseneinrichtung (296) arbeitende Ventilglied (800, usw.) eine langgestreckte axial hin- und herbewegbare Manschette (800) umfaßt, die in einer engtolerierten Gleitpassung innerhalb des zentralen Kanals (540) sitzt,die Manschette einen zentralen Durchgangsweg (820), ein nach vorn offenes Ende (812) zum Kommunizieren mit dem zentralen Kanal und eine Öffnung (804) in ihrer Wand zum Kommunizieren mit der dritten Durchgangswegöffnung aufweist, die Manschette (800) ausgelegt ist, um die erste, zweite, vierte und fünfte Öffnung (462,502,482,522) zu blockieren und freizugeben, und ein langgestreckter Stift (834) axial hin- und herbewegbar innerhalb des zentralen Manschettendurchgangsweges (820) in einer engtolerierten Gleitpassung angebracht ist, wobei die Manschette und der Stift arbeitsmäßig einander zugeordnet sind und so ausgelegt sind, daß sie in unterschiedliche jeweilige Stellungen bewegt werden können, so daß in einer Stellung die besagte dritte Durchgangswegöffnung (440) blockiert ist, während die erste Öffnung (462) nicht blockiert ist, in einer anderen Stellung die dritte Öffnung teilweise blockiert ist, aber die erste Öffnung nicht blockiert ist, und in einer noch weiteren Stellung die vierte Öffnung (482) blockiert ist, aber nicht die erste, zweite und dritte Öffnung blockiert sind.

93. Vorrichtung nach einem der Ansprüche 87 bis 92, bei der die Coinjektionsdüsen-Einrichtungen (296) im wesentlichen identisch sind und Durchgangswege (z.B.440, 450; 460) für Mehrfachschmelzströme (B,A) aufweisen, die korrespondierende entsprechende Schichten einer Vielzahl von Spritzgußgegenständen bilden sollen, wobei die Vorrichtung Einrichtungen (214, 252) gemeinsam für die und in Kommunikation mit den Durchgangswegen für jeden von wenigstens zwei Schmelzströmen aufweist, die betriebsmäßig arbeiten, um die besagten wenigstens zwei Schmelzströme zu jeder der Mehrfachdüsen-Einrichtungen (296) zu bewegen, und jede Düseneinrichtung Ventilglieder (800, usw.) aufweist, um Fluß durch die Durchgangswege für die besagten wenigstens zwei Schmelzströme zu blockieren, freizugeben oder teilweise zu blockieren, und diese Ventilglieder (800, usw.) vorzugsweise im wesentlichen identisch sind und vorzugsweise im wesentlichen simultan betätigbar sind,

94. Vorrichtung nach Anspruch 13 mit einer Vielzahl von Düseneinrichtungen (296) für Coinjektion von fünfschichtigen Kunststoffgegenständen, von denen jede ein offenes Ende, einen Anschnitt (596) an dem offenen Ende, einen zylindrischen Zentralkanal (540) in Kommunikation mit dem Anschnitt aufweist, und mit fünf Polymerstrom-Fließdurchgangswegen (440,450; 460; 480; 500,520), von denen jeder eine Öffnung (440,462,482, 502,522) in Kommunikation mit dem Zentralkanal aufweist und jeder für den Durchgang eines Schmelzfließstromes aus polymerem Material durch die Öffnung in den Zentralkanal zum Bilden einer Schicht des Gegenstandes ausgelegt ist, wobei ein erster Durchgangsweg (460) seine Öffnung (462) näher an dem Anschnitt (596) als jede andere Öffnung zum Hindurchlassen eines Schmelzstromes aus Strukturmaterial (B) in den Zentralkanal zum Bilden der äußeren Oberflächenschicht des Gegenstandes besitzt, ein zweiter Durchgangsweg (500) zum Hindurchleiten eines Schmelzstromes aus Material (C) in den Zentralkanal zum Bilden einer inneren Schicht des Gegenstandes, ein dritter Durchgangsweg mit seiner Öffnung (440) von dem Anschnitt (596) weiter entfernt als irgendeine andere Öffnung zum Hindurchleiten eines Schmelzstromes aus Strukturmaterial (A) in den Zentralkanal zum Bilden der inneren Oberflächenschicht des Gegenstandes, ein vierter Durchgangsweg (480) zwischen dem ersten und zweiten Durchgangsweg zum Hindurchleiten eines Schmelzstromes aus polymerem Material (E) in den Zentralkanal zum Bilden einer zwischengelegenen Schicht zwischen der äußeren Oberflächenschicht und der inneren Schicht des Gegenstandes und ein fünfter Durchgangsweg (520) zwischen dem zweiten Durchgangsweg und dem dritten Durchgangsweg zum Hindurchleiten eines Schmelzstromes aus Material (D) in den Zentralkanal zum Bilden einer zwischengelegenen Schicht zwischen der inneren Schicht und der inneren Oberflächenschicht des Gegenstandes vorgesehen sind, und die Vorrichtung weiterhin Ventilglieder (800, usw.) für jede Düseneinrichtung (296) umfaßt, die arbeitsmäßig wenigstens der zweiten Öffnung (502) und der dritten Öffnung (440) nahegelegen sind und ausgelegt sind, um zur gleichen Zeit die zweite Öffnung zu blockieren und die dritte Öffnung nicht zu blockieren.

95. Vorrichtung nach Anspruch 94, bei der das Ventilglied (800) eine langgestreckte Manschette (800) mit einem offenen Ende (812), einer zylindrischen Seitenwand mit einer Öffnung (804) darin und einem langgestreckten axialen zentralen Durchgangsweg (820) in Kommunikation mit der Öffnung und dem offenen Ende umfaßt, wobei die Manschette innerhalb des Düsenzentralkanals (540) in einer engtolerierten Gleitpassung, die ausreichend ist, um signifikante Ansammlung oder Durchgang von polymerem Material dazwischen zu verhindern, angebracht ist und ein langgestreckter Stift (834) innerhalb des Manschettenzentralkanals (820) in einer engtolerierten Gleitpassung damit, die ausreichend ist, um signifikante Ansammlung oder Durchgang von Schmelzmaterial zwischen der äußeren Oberfläche der Stiftseitenwand und der Manschettenzentraldurchgangswegwand zu verhindern, angebracht ist und die Manschette (800) so ausgelegt ist, daß sie axial innerhalb des Düsenzentralkanals (540) hin- und hergehen kann und arbeitet, um die erste und die zweite Durchgangswegöffnung (462,502) zu blockieren und freizugeben und ihre Öffnung in und aus der Ausrichtung mit der dritten Durchgangswegöffnung (440) zu bringen, und der besagte Stift (834) angepaßt ist, um sich axial innerhalb der Manschette hin- und herzubewegen, um die besagte Öffnung (804) zu blockieren und freizugeben, wenn die Öffnung mit dem dritten Durchgangsweg ausgerichtet ist.

96. Vorrichtung nach Anspruch 94 oder 95, bei der jedes Ventilglied in Bezug auf wenigstens drei von den fünf Öffnungen der zugehörigen Düseneinrichtungen (296) arbeitet und auch angepaßt ist, um die zweite Durchgangswegöffnung (502) zu blockieren, während es die erste und die dritte Durchgangswegöffnung (462,440) nicht blockiert.

97. Vorrichtung nach Anspruch 94 oder 95, bei der das Ventilglied in Bezug auf alle fünf der Öffnungen der zugehörigen Düseneinrichtungen (296) arbeitet und so ausgelegt ist, daß es die zweite, vierte und fünfte Durchgangswegöffnung (502,482,522) blockiert, während es die dritte Durchgangswegöffnung (440) nicht blockiert.

98. Vorrichtung nach Anspruch 97, bei der das Ventilglied weiterhin so ausgelegt ist, daß es zur gleichen Zeit die zweite Öffnung (502) blockiert, während es die erste Öffnung (462), die dritte Öffnung (440) oder sowohl die erste als auch die dritte Öffnung nicht blockiert.

99. Vorrichtung nach einem der Ansprüche 94 bis 98, bei der die ersten, zweiten, vierten und fünften Düsendurchgangswege (460,480,500,520) der Düseneinrichtungen (296) in Richtung auf ihre jeweiligen Öffnungen (462,482,502,522) derart verjüngt sind, daß jeder verjüngte Durchgangsweg eine größere Öffnungsfläche an einer benachbarten Stelle entfernt von der Öffnung und eine kleinere Öffnungsfläche an der Öffnung selbst aufweist.

100. Verfahren nach Anspruch 1, das das Ausbilden eines kombinierten Mehrschichtenstromes einer Vielzahl von Polymermaterialien in den Düseneinrichtungen (296) umfaßt derart, daß voreilende Flanken der jeweiligen Schichten in den kombinierten Strömen in Ebenen in den Düsen liegen, die im wesentlichen nicht vorgespannt sind, wenn in vertikalem Querschnitt gesehen wird, wobei das Verfahren die Verwendung einer Vielzahl von Düsen (296) umfaßt, von denen jede einen Zentralkanal (540) mit einem Anschnitt (596) an einem Ende und wenigstens erste, zweite und dritte Durchgangswege (460,500,440) aufweist, jede eine Öffnung in Kommunikation mit dem Zentralkanal (540) besitzt, ein Durchgangsweg für jede auszuformende Schicht in dem kombinierten Strom vorhanden ist, die erste Durchgangswegöffnung (462) näher an dem Anschnitt (596) als die anderen Durchgangswegöffnungen (502,440) für das Fließen des Polymermaterials zum Bilden der äußeren Schicht des kombinierten Stromes liegt, die dritte Durchgangswegöffnung (440) entfernt von dem Anschnitt (596) für den Fluß von Polymermaterial, das die innere Schicht bilden wird, liegt und eine oder mehrere zweite Durchgangswegöffnungen zwischen der ersten und der dritten Durchgangswegöffnung zum Fließen von einem oder mehreren Polymermaterialien zum Bilden der inneren Schicht oder von inneren Schichten des Stromes gelegen sind, jede Düseneinrichtung (296) weiterhin Ventilglieder (800, 834) umfaßt, die in dem Zentralkanal zum Blockieren des Flusses aus Polymermaterial von den Öffnungen in den Zentralkanal und zum unabhängigen und selektiven Steuern des Flusses von Polymermaterialien von den Öffnungen arbeiten, und wobei das Verfahren weiterhin die Schritte der Betätigung der Ventilglieder umfaßt, um:
Fluß von all den Öffnungen zu verhindern,
den Fluß von Polymermaterial von der zweiten Durchgangswegöffnung oder -öffnungen zu verhindern, während Fluß von Material von der dritten Öffnung, der ersten Öffnung oder sowohl der dritten als auch der ersten Öffnung gestattet wird, und
Fluß von Material durch die zweite Öffnung oder Öffnungen zu gestatten, während Material durch die dritte Öffnung oder sowohl die dritte als auch die erste Öffnung fließen kann.

101. Verfahren nach Anspruch 100, das weiterhin den Schritt umfaßt, daß jedes Ventilglied zum Reduzieren des Flusses aus dem Polymermaterial durch die dritte Öffnung verwendet wird, während der Fluß von Polymermaterial durch die zweite Öffnung oder Öffnungen gestattet wird.

102. Verfahren nach Anspruch 100 oder Anspruch 101, das weiterhin den Schritt der Verhinderung des Flusses von Polymermaterial durch die dritte Öffnung umfaßt, während der Fluß von Polymermaterial durch die zweite Öffnung oder Öffnungen gestattet wird.

103. Verfahren nach Anspruch 102, das weiterhin den Schritt der Beendigung des Flusses von Polymermaterial von der zweiten Öffnung oder Öffnungen umfaßt.

104. Verfahren nach Anspruch 1, das das Ausbilden im wesentlichen konzentrischer kombinierter Ströme aus wenigstens drei polymeren Materialien in den Düseneinrichtungen (296) und das Einspritzen dieser Ströme in die zugeordneten Hohlräume (102) zum Bilden der Gegenstände, die Außenseiten-, wenigstens eine innengelegene und Innenseitenschichten, gebildet aus jeweiligen Strömen des kombinierten Stromes, und zwar eines äußeren Schmelzstromes, wenigstens eines inneren Schmelzstromes und eines Kernschmelzstromes, aufweisen, umfaßt, wobei das Verfahren die Verwendung einer Vielzahl von Düseneinrichtungen einschließt, von denen jede einen Anschnitt (596) an einem Ende, einen zylindrischen Zentralkanal (540) in Kommunikation mit dem Anschnitt und wenigstens drei Polymerdurchgangswege besitzt, von denen jeder mit dem Zentralkanal mittels entsprechender Öffnungen kommuniziert, und zwar einer ersten Öffnung (462), die näher an dem Anschnitt als die anderen Öffnungen gelegen ist, zum Leiten des äußeren Stromes in den Kanal, einer dritten Öffnung (440), die weiter entfernt von dem Anschnitt als die anderen Öffnungen ist, zum Leiten des Kernstromes in den Kanal und wenigstens einer zweiten Öffnung (502), die zwischen der ersten und der dritten Öffnung gelegen ist, zum Leiten wenigstens eines inneren Stromes in den Kanal, wobei die Düseneinrichtungen weiterhin Ventilglieder (800,834) umfassen, die nahe der Öffnungen arbeiten und so ausgelegt sind, daß sie das Fließen des inneren Stromes (der inneren Ströme) durch die zweite Öffnung(en) (502) verhindern und gestatten und zum unabhängigen Steuern des Fließens oder Nicht-Fließens des Kernstromes durch die dritte Öffnung (440), wobei das Verfahren weiterhin den Schritt der Betätigung der Ventilglieder in den Düseneinrichtungen umfaßt, um
(a) Fluß des inneren Stromes (der inneren Ströme) durch die zweite Öffnung(en) (502) zu verhindern, während Fluß durch die erste (462), die dritte (440) oder sowohl die erste als auch die dritte Öffnung gestattet wird und dann
(b) Fluß durch die zweite Öffnung(en) zu gestatten, während Fluß durch die dritte Öffnung gestattet wird.

105. Verfahren nach Anspruch 104, das weiterhin den Schritt des Ausnutzens der Ventilglieder zum Reduzieren von Fluß durch die dritte Öffnung umfaßt, während Fluß durch die zweite Öffnung (502) gestattet wird,

106. Verfahren nach Anspruch 105, bei dem nach dem Reduzierungsschritt ein Verfahrensschritt des Ausnutzens der Ventilglieder zum Beenden des Fließens durch die zweite Öffnung (502) erfolgt.

107. Verfahren nach Anspruch 106, bei dem nach Beendigung des Fließens von der zweiten Öffnung (502) fortgesetztes Fließen durch die erste Öffnung (452), die dritte Öffnung oder sowohl die erste als auch die dritte Öffnung (452,440) gestattet wird.

108. Verfahren nach einem der Ansprüche 104 bis 107, bei dem vor dem Flußverhinderungsschritt (a) der Schritt des Ausnutzens der Ventilglieder zum Verhindern von Fluß von polymerem Material von all den Öffnungen erfolgt.

109. Verfahren nach Anspruch 108, bei dem der Düsenzentralkanal (540) einen Kombinierungsbereich umfaßt, in dem der kombinierte Strom gebildet wird und in dem nach dem Schritt des Verhinderns von Fließen des polymeren Materials von all den Öffnungen das Verfahren weiterhin einen Schritt des Benutzens der Ventilglieder umfaßt, um im wesentlichen vollständig den Kombinierungsbereich von Polymermaterial vor dem Bilden des nächsten kombinierten Stromes von Material in dem Zentralkanal (540) zu reinigen.

110. Verfahren nach Anspruch 109, das weiterhin die Verwendung der Ventilglieder zum Verhindern von Rückströmen von Polymermaterial von einer Öffnung in eine andere Öffnung umfaßt.

111. Verfahren nach einem der Ansprüche 104 bis 110, das weiterhin einen Schritt des im wesentlichen Verstrickens in jeder Düseneinrichtung (296) des innengelegenen Schmelzstrommaterials mit sich selbst durch das Kernmaterial und durch Bewegen des Ventilgliedes (800,834) vorwärts durch den Zentralkanal (540) in Richtung auf den Anschnitt (596), um das Verstricken des Innenschichtmaterials zu unterstützen, umfaßt.

112. Verfahren nach Anspruch 111, das den Schritt des Bewegens der Ventilglieder vorwärts umfaßt, um zu unterstützen, daß in den Düseneinrichtungen die Einkapselung im Kernmaterial des verstrickten inneren Materials bewirkt wird.

113. Verfahren nach Anspruch 111 oder 112, das das Bewegen der Ventilglieder vorwärts umfaßt, um die kombinierten Ströme durch die Anschnitte in die Injektionshohlräume ohne Ünterbrechung des verstrickten inneren Materials zu bewegen.

114. Verfahren nach einem der Ansprüche 104 bis 113, bei dem nach dem Flußgestattungsschritt (b) die Schritte eingeschlossen sind, daß die Ventilglieder (800,834) ausgenutzt werden, um das Fließen von Materialien von all den Öffnungen zu gestatten und dann das Fließen von all den Öffnungen zu verhindern und daß die Zeit, die zwischen diesen Schritten des Gestattens und des Verhinderns vergeht, von 60 bis 700 Centisekunden, vorzugsweise von 60 bis 250 Centisekunden, beträgt.

115. Verfahren nach Anspruch 104, das das Betätigen der Ventilglieder in den Düseneinrichtungen (296) für die Verfahrensschritte umfaßt, daß
(i) Fluß von Polymermaterial von all den Öffnungen (452,502,440) einer Düseneinrichtung verhindert wird,
(ii) Fluß von Polymermaterial durch die zweite Öffnung (502) verhindert wird, während Fluß von Strukturmaterial durch die erste (452), die dritte (440) oder sowohl die erste als auch die dritte Öffnung gestattet wird, dann
(iii) Fluß von Polymermaterial durch die zweite Öffnung (502) gestattet wird, während Material durch die dritte Öffnung (440) fließen kann,
(iv) der Fluß von Polymermaterial durch die dritte Öffnung (440) beschränkt wird, während der Fluß von Material durch die zweite Öffnung (502) fließen kann,
(v) der Fluß von Polymermaterial durch die zweite Öffnung beschränkt wird, während Fluß von Polymermaterial durch die erste (452) oder dritte (440) Öffnung oder sowohl die erste als auch die dritte Öffnung gestattet wird, um das Zwischenschichtmaterial mit sich selbst durch das Kernmaterial zu verstricken und im wesentlichen die Zwischenschicht in dem kombinierten Strom und in der Spritzung einzukapseln.

116. Verfahren nach Anspruch 115, das nach dem Schritt (v) den Schritt umfaßt, daß die Ventilglieder (800, 834) zum Entfernen von dem gesamten oder dem größten Teil des Polymermaterials von dem Zentralkanal (540) ausgenutzt werden.

117. Verfahren nach Anspruch 116, das weiterhin den Schritt umfaßt, daß die Ventilglieder (800,834) während des besagten Reinigungsschrittes zur Verhinderung von Rückfluß von Polymermaterial von dem Zentralkanal (540) in eine Öffnung oder von einer der Öffnungen in eine andere Öffnung ausgenutzt werden.

118. Verfahren nach Anspruch 115, 116 oder 117, das weiterhin den Schritt umfaßt, daß die Ventilglieder (800,834) durch den Zentralkanal (540) jeder Düseneinrichtung (296) in Richtung auf den Anschnitt während des Schrittes (v) bewegt werden, um das Verstricken des Innenschichtmaterials zu unterstützen.

119. Verfahren nach Anspruch 118, das das Bewegen der Ventilglieder (800,834) umfaßt, um die kombinierten Ströme durch die Anschnitte (596) in die Injektionshohlräume ohne Unterbrechung des Verstrickens zu bewegen.

120. Verfahren nach einem der Ansprüche 115 bis 119, bei dem während des Schrittes (iii) Material durch die ersten Öffnungen fließen kann, und die Schritte (ii) und (iii) innerhalb von 250 Centisekunden, vorzugsweise innerhalb von 100 Centisekunden, durchgeführt werden.

121. Verfahren nach Anspruch 104, das das Betätigen der Ventilglieder (800,834) in den Düsen (596) zum Bilden des kombinierten Stromes durch die Verfahrensschritte umfaßt, daß
(i) Fluß von Polymermaterial durch die zweiten Öffnungen verhindert wird, während Fluß von Polymermaterial durch die ersten Öffnungen, die dritten Öffnungen oder sowohl die ersten als auch die dritten Öffnungen gestattet wird,
(ii) dann Fluß von Polymermaterial durch die zweiten Öffnungen gestattet wird, während Polymermaterial durch die dritten Öffnungen fließen kann,
(iii) der Fluß von Polymermaterial durch die dritten Öffnungen reduziert wird, während Polymermaterial durch die zweiten Öffnungen fließen kann,
(iv) der Fluß von Polymermaterial durch die zweiten Öffnungen beendet wird und
(v) Fluß von Polymermaterial nur durch die ersten Öffnungen gestattet wird, während Fluß von Polymer-Material von den zweiten und dritten Öffnungen verhindert wird, um das (die) zwischengelegene(n) Polymermaterial(ien) in den kombinierten Strömen im wesentlichen einzukapseln.

122. Verfahren nach Anspruch 121, bei dem nach Schritt (v) ein Schritt eingeschlossen ist, daß die Polymermaterialien im wesentlichen vollständig von den Düsenzentralkanälen vor dem nächsten Injektionszyklus abgeführt (herausgereinigt) werden.

123. Verfahren nach einem der Ansprüche 104 bis 122, das weiterhin einen Schritt der Bildung kombinierter Ströme umfaßt, bei denen die vorlaufende Flanke der einen oder mehrerer inneren Schicht(en) im wesentlichen relativ zu einer vertikalen, rechtwinklig und transaxial durch die Spritzung gezogenen Ebene unvorgespannt und nicht schräggestellt ist.

124. Verfahren nach einem der Ansprüche 100 bis 123, bei dem die Düseneinrichtung Ventilglieder umfaßt, die im wesentlichen identisch sind und vorzugsweise im wesentlichen gleichzeitig betätigbar sind.

125. Verfahren nach Anspruch 1 zum Herstellen von Gegenständen wie Vorformlingen oder Blasrohlingen mit einer Wand, die aus wenigstens drei Schichten besteht, bei dem Schmelzmaterialströme, die diese Schichten bilden sollen, in Formhohlräume durch eine Vielzahl von Düsen (296) eingespritzt werden, von denen jede einen Zentralkanal (540), wenigstens drei Schmelzstromdurchgangswege, jeder mit einer Öffnung, die mit dem Zentralkanal kommuniziert, eingespritzt werden, wobei die Düsen weiterhin Ventilglieder (800,834) in den Zentralkanälen enthalten und das Verfahren die Verfahrensschritte umfaßt, daß die Ventilglieder zu ersten Stellungen bewegt werden, um Fluß der Schmelzmaterialströme in die Düsenzentralkanäle zu verhindern, die Ventilglieder zu zweiten Stellungen bewegt werden, um Fluß von ersten Materialströmen in die Düsenzentralkanäle zu gestatten, die Ventilglieder zu dritten Stellungen bewegt werden, um fortgesetzten Fluß der besagten ersten Materialströme zu gestatten und Fluß von zweiten Materialströmen in die Düsenzentralkanäle zu gestatten, und die Ventilglieder zu vierten Stellungen bewegt werden, um fortgesetzten Fluß der besagten ersten und zweiten Ströme zu gestatten und Fluß von dritten Materialströmen in die Düsenzentralkanäle zwischen den ersten und zweiten Strömen zu gestatten.

126. Verfahren nach Anspruch 125, bei dem die zweiten Materialströme als Ringströme um die ersten Ströme zugeführt werden und die dritten Materialströme als Ringströme zwischen den ersten und zweiten Materialströmen zugeführt werden.

127. Verfahren nach Anspruch 125 oder Anspruch 126, das weiterhin das Anwenden von Druck auf wenigstens die dritten Materialströme vor oder gleichzeitig mit dem Bewegen der Ventilglieder zu der vierten Stellung umfaßt.

128. Das Verfahren nach Anspruch 125 oder Anspruch 126, das weiterhin das Anwenden von Druck auf die dritten Ströme in Durchgangswegen (440) und auf wenigstens einen der ersten und zweiten Ströme in den Zentralkanälen (540) und vor oder gleichzeitig mit dem Bewegen der Ventilglieder zu den vierten Stellungen, das Einstellen des Druckes auf einen oder mehrere der besagten Ströme, so daß der Druck der dritten Ströme größer als der Druck von jedem einen der ersten und zweiten Ströme in den Zentralkanälen ist, umfaßt.

129. Verfahren nach Anspruch 125 oder Anspruch 126, das weiterhin das Anlegen von Druck an die dritten Ströme und an die ersten und/oder zweiten Ströme und vor oder gleichzeitig mit dem Bewegen der Ventilglieder zu den vierten Stellungen, das Einstellen des Druckes auf einen oder mehrere der besagten Ströme, so daß der Druck der dritten Ströme größer als der Druck der ersten und zweiten Ströme ist, umfaßt.

130. Verfahren nach Anspruch 129, das weiterhin das Beaufschlagen mit Druck der besagten ersten, zweiten und dritten Ströme und vor oder gleichzeitig mit dem Bewegen der Ventile zu den vierten Stellungen, das Erhöhen des Druckes der dritten Ströme und das Reduzieren des Druckes der ersten und/oder der zweiten Ströme umfaßt.

131. Vorrichtung nach Anspruch 13, die eine Vielzahl von Düseneinrichtungen (296) zur Coinjektion von wenigstens drei Strömen von Schmelzmaterialien zur Bildung von mehrschichtigen Gegenständen aufweist, wobei jede dieser Düseneinrichtungen (296) einen zylindrischen Zentralkanal (546) der an einem Ende offen ist, mit einem Anschnitt (596) an dem offenen Ende und in Kommunikation mit dem Zentralkanal aufweist, die Düseneinrichtungen wenigstens zwei Durchgangswege (460,500) aufweisen, wobei jeder mit einer ringförmigen Öffnung (462,502), die zu dem Anschnitt (596) geschlossen ist, und einem dritten Durchgangsweg (440,450) mit einer Öffnung (440) entfernt von dem Anschnitt versehen ist, alle diese Durchgangswege in Kommunikation mit dem Zentralkanal (546) durch ihre Öffnungen sind, die erste Öffnung (462) nahe dem Anschnitt ist und die zweite Öffnung (502) benachbart der ersten öffnung ist, jede dieser Öffnungen ihre Mittellinie in einer Ebene hat, die im wesentlichen rechtwinklig zu der Achse des Zentralkanals ist, und jede dieser Öffnungen durch eine vorlaufende Lippe (z.B.461) nahe an dem offenen Ende und eine nachlaufende Lippe entfernt von dem offenen Ende definiert ist und der Düsenzentralkanal (1546) zwei zylindrische Abschnitte aufweist, wobei sich der erste Abschnitt (595) von dem Anschnitt (596) zu der vorlaufenden Lippe der ersten Öffnung (462) erstreckt und sich der zweite Abschnitt (766) von der nachlaufenden Lippe der ersten Öffnung in einer Stromaufwärtsrichtung zu wenigstens der nachlaufenden Lippe der zweiten Öffnung erstreckt, der besagte erste Abschnitt (595) von kleinerem Durchmesser als der zweite Abschnitt ist und die Düseneinrichtungen weiterhin Ventilglieder in betriebsmäßiger Zuordnung zu dem Düsenzentralkanal und den Öffnungen umfassen, und wobei das Ventilglied umfaßt:
(i) eine langgestreckte Manschette (8000') mit einem offenen Ende (812), eine Öffnung (804) in ihrer Seitenwand und einen langgestreckten zentralen Durchgangsweg (1820) in Kommunikation mit der Öffnung und dem offenen Ende, wobei die Manschette innerhalb des Düsenzentralkanals (1540) in einer engtolerierten Gleitpassung innerhalb des zweiten Abschnittes (766) des Zentralkanals ist, die ausreichend ist, um signifikante Ansammlung oder Durchgang von Polymermaterial zu verhindern, angebracht ist, die besagte Manschette weiterhin einen äußeren Oberflächenabschnitt (1835) mit einem Durchmesser aufweist, der für eine engtolerierte Gleitpassung innerhalb des ersten Abschnitts (595) des Düsenzentralkanals sorgt, und die Manschette in der Lage ist, jede der ersten und der zweiten Öffnungen (462, 502) zu blockieren, und
(ii) einen langgestreckten Stift (1834), der innerhalb des zentralen Durchgangsweges (1820) der Manschette (8000') in einer engtolerierten Gleitpassung innerhalb des zentralen Durchgangsweges der Manschette, die ausreichend ist, um signifikantes Ansammeln oder Durchgang von Schmelzmaterial zwischen dem Stift und der Manschette zu verhindern, angebracht ist, wobei die Manschette ausgelegt ist, um sich axial innerhalb des Düsenzentralkanals (1540) hin- und herzubewegen, um die besagten ersten und zweiten Öffnungen (462,502) zu blockieren und freizugeben und die besagte Öffnung (804) in die und aus der Ausrichtung mit der besagten dritten Öffnung (440) zu bringen, und das Ventilglied in der Lage ist, den ersten Abschnitt (595) des Zentralkanals von Polymerschmelzmaterial am Ende eines Injektionszyklus zu reinigen und Rückfluß von Polymermaterial in die besagten Öffnungen zu verhindern.

132. Vorrichtung nach Anspruch 131, bei der der Durchgangsweg (460) mit der ersten Öffnung (462) eine vorlaufende Wand (OW) aufweist, die gegen den Anschnitt und die Achse des Düsenzentralkanals geneigt ist und sich zu der vorlaufenden Lippe (461) der ersten Öffnung erstreckt, die näher an der Achse des Zentralkanals als die nachlaufende Lippe der ersten Öffnung ist,und wobei die Manschettenwand (1814) einen sich verjüngenden Mund aufweist, der das offene Ende der Manschette definiert, das so angepaßt ist, daß es gegen die vorlaufende Wand (OW) anstößt, um die Bewegung der Manschette (8000') in Richtung auf den Anschnitt zu begrenzen und die erste Öffnung zu blockieren.

133. Vorrichtung nach Anspruch 131 oder Anspruch 132, bei der der Stift (1834) ausgelegt ist, um sich vorwärts in den ersten Zentralkanalabschnitt (595) hineinzubewegen.

134. Vorrichtung nach einem der Ansprüche 131 bis 133, bei der die besagten Ventilglieder ausgelegt sind, um sich vorwärts in Richtung auf den Anschnitt (596) ausreichend zu bewegen, um einen Kombinierungsbereich der zugeordneten Düse von Polymermaterial zu reinigen, und der Stift (1834) und die Manschette (8000') so sind, daß der Stift mit seinem vorwärts gerichteten Ende axial versetzt stromaufwärts von dem vorwärts gerichteten Ende der Manschette positioniert werden kann, und die weiterhin dadurch gekennzeichnet ist, daß der Stift und die Manschette zusammen axial vorwärts durch den Zentralkanal bewegbar sind, wobei die versetzte Stellung des nach vorwärts gerichteten Endes des Stiftes einen Ansammlungsbereich in dem vorwärts gerichteten Ende der Manschette zum Ansammeln von Polymerschmelzmaterial schafft, um dieses Material vorwärts durch den Kanal zu stoßen, wenn dieser Kanal durch die Reinigungswirkung des Stiftes und der Manschette gereinigt wird.

135. Vorrichtung nach Anspruch 13 mit einer Vielzahl von Düseneinrichtungen (296), von denen jede einen zentralen Kanal, ein offenes Ende mit einem Anschnitt an dem offenen Ende enthält und die folgendes umfaßt:
(i) wenigstens drei Durchgangswege (460,480,500), jeder mit einer Öffnung (462,482,502) zum Ablassen von Schmelzmaterial in den Zentralkanal (1546), wobei jede Öffnung ringförmig ist und den Umfang des Zentralkanals umgibt, eine vorlaufende Kante von jeder Öffnung und die Mittellinie für jede Öffnung rechtwinklig zu der Achse des Zentralkanals stehen, die erste Durchgangswegöffnung (462) dem Anschnitt am nächsten liegt, die dritte Durchgangswegöffnung (502) von dem Anschnitt am weitesten entfernt ist und die zweite Durchgangswegöffnung (482) zwischen der ersten und der dritten Öffnung liegt,
(ii) der Zentralkanal abgestufte, zylindrische Abschnitte (760,762,764,766) mit unterschiedlichen Durchmessern aufweist und
(iii) Ventilglieder, umfassend:
(a) eine langgestreckte Manschette (8000'), die innerhalb und axial hin- und herbewegbar innerhalb des Zentralkanals sitzt, wobei die Manschette einen zentralen Durchgangsweg (1820), ein nach vorwärts offenes Ende zum Kommunizieren mit einem Abschnitt (766) des Zentralkanals, der zwischen der ersten und der zweiten Öffnung gelegen ist, und eine Öffnung (8040) in ihrer Wand aufweist, um mit einer Durchgangswegöffnung (440), die von dem offenen Ende des Zentralkanals entfernt ist, zusammenzuarbeiten und die besagte entfernte Durchgangswegöffnung zu blockieren und freizugeben, und wobei die Manschettenwand radial abgestufte zylindrische Oberflächenabschnitte (761, 763,765,767) aufweist, von denen jeder ausgelegt ist, um eine oder mehrere der Düsendurchgangswege zu blockieren, wenn die Manschette sich vollständig vorn in dem Zentralkanal befindet, und
(b) einen langgestreckten Stift (1834), der in dem Manschettenzentraldurchgangsweg (1820) in einer engtolerierten Gleitpassung angebracht ist, die ausreichend ist, um signifikantes Ansammeln oder Durchgang von Schmelzmaterial zwischen dem Stift und dem Manschettenzentraldurchgangsweg zu verhindern, und der Stift (1834) axial innerhalb der Manschette hin- und herbewegbar ist, um die besagte Öffnung (8040') zu blockieren und freizugeben, wenn die Manschette mit der Öffnung und der besagten entfernten Öffnung ausgerichtet positioniert ist.

136. Die Vorrichtung nach Anspruch 135, bei der die Manschette (8000') und der Stift (2834) ausgelegt sind, um so positioniert zu werden und zusammenzuarbeiten, daß zu der Zeit die dritte Öffnung (440) nicht durch das Ventilglied blockiert ist, wenn die zweite Öffnung (500) blockiert ist.

137. Vorrichtung nach Anspruch 135 oder 136, bei der jede der besagten Düseneinrichtungen fünf Düsendurchgangswege umfaßt, ein vierter Durchgangsweg (1480) zwischen dem zweiten Durchgangsweg (1500) und dem ersten Durchgangsweg (1460) gelegen ist und ein fünfter Durchgangsweg (1520) zwischen dem zweiten Durchgangsweg und dem dritten Durchgangsweg angeordnet ist.

138. Die Vorrichtung nach Anspruch 137, bei der der vierte und der fünfte Durchgangsweg (1480,1520) mit dem Zentralkanal durch die zweite Öffnung (1500) kommunizieren.

139. Vorrichtung nach einem der Ansprüche 135 bis 138, bei der der Zentralkanal einen Kombinierungsbereich aufweist, der sich von der voreilenden Kante der ersten Öffnung (462) zu einer nacheilenden Kante der zweiten Öffnung (502) erstreckt, und der Kombinierungsbereich eine axiale Länge von 100 bis 900 x 10⁻³ Zoll (2,54 bis 22,9 mm), z.B. 100 bis 300 x 10⁻³ Zoll (2,54 bis 7,62 mm) aufweist.

140. Vorrichtung nach Anspruch 137, bei der die axiale Länge von einer vorlaufenden Lippe der vierten Öffnung (482) zu einer nachlaufenden Lippe der fünften Öffnung (522) von 100 bis 900 x 10⁻³ Zoll (2,54 bis 22,9 mm), z.B. 100 bis 300 x 10⁻³ Zoll (2,54 bis 7,62 mm), beträgt.

141. Vorrichtung nach Anspruch 13, die eine Vielzahl von Düsen (296), von denen jede eine Vielzahl von Öffnungen (462,482,502,522,usw.) in Kommunikation mit einem Zentralkanal (540) hat, und Ventilglieder aufweist, die folgendes umfaßt:
(i) eine langgestreckte Manschette (800) mit einer Seitenwand mit einer Öffnung (804) darin, einem offenen Ende darin (812) und einem langgestreckten zentralen Durchgangsweg (820) in Kommunikation mit der Öffnung und dem offenen Ende und
(ii) einen langgestreckten Stift (834) für relative axiale Hin- und Herbewegung in der Manschette, der in einer engtolerierten Gleitpassung innerhalb des zentralen Durchgangsweges (820) angebracht ist, wobei der Stift eine Seitenwand aufweist, deren äußere Oberfläche angepaßt ist, um die besagte Öffnung zu schließen und zu öffnen, der besagte Düsenzentralkanal (540) und die Manschette (800) zwischen sich keinen Bereich für signifikante Ansammlung von Spritzmaterial darin oder Durchgang von Spritzmaterial durch ihn hindurch aufweisen.

142. Die Vorrichtung nach Anspruch 141, bei der die langgestreckte Manschette (800) in einer engtolerierten Gleitpassung innerhalb des Zentralkanals (540) der Düse (296) angebracht ist, um dadurch jegliche signifikante Ansammlung oder Durchgang von Spritzmaterial zwischen dem Kanal und der Manschette zu verhindern.

143. Vorrichtung nach Anspruch 141 oder 142, bei der der Stift und der Manschettenzentraldurchgangsweg (820) jeweils gleichmäßigen Querschnitt aufweisen.

144. Vorrichtung nach einem der Ansprüche 141 bis 143, bei der der langgestreckte Stift (834) eine größere axiale Länge als die Manschette (800) aufweist.

145. Vorrichtung nach Anspruch 13, die für selektives Steuern des Flusses von wenigstens drei Schmelzmaterialströmen zum Spritzgießen von mehrschichtigen Kunststoffgegenständen aus den Schmelzmaterialien ausgelegt ist, wobei die Vorrichtung eine Vielzahl von Düsen (296) umfaßt, von denen jede einen an einem Ende offenen Zentralkanal (540) aufweist, einen Fließdurchgangsweg in der Düse für jeden einer Vielzahl von Materialströmen aufweist, wenigstens zwei der Düsendurchgangswege (460,500,usw.)bei einer entsprechenden Ausgangsöffnung (462,502) enden, von denen jeder mit dem Düsenzentralkanal (540), vorzugsweise benachbart dem offenen Ende, kommuniziert, und durch die Manschettenventilglieder (800) einen axialen Materialflußdurchgangsweg (820)besitzen, der mit dem Düsenzentralkanal (540) kommuniziert und ausgelegt ist, um mit einem Flußdurchgangsweg (440) zum Befördern eines Materialstromes zu dem Düsenzentralkanal zu kommunizieren, die Manschettenglieder (800) in dem Zentralkanal (540) getragen werden und zu ausgewählten Stellungen bewegbar sind, um eine oder mehrere der Öffnung zu blockieren und freizugeben und den besagten axialen Durchgangsweg (820) in und aus Kommunikation mit dem besagten Flußdurchgangsweg (440) zu bringen.

146. Vorrichtung nach Anspruch 145, bei der jede Düse (296) ihrer besagten Vielzahl einen Flußdurchgangsweg (460,500) für jeden von wenigstens zwei der Materialströme aufweist und das Manschettenglied (800) ausgelegt ist, um mit einem Flußdurchgangsweg (440) extern von der Düse zu kommunizieren, und bewegbar ist, um diesen inneren axialen Durchgangsweg (820) in und aus Kommunikation mit einem oder mehreren der Düsendurchgangswege (460,500) zu bringen.

147. Vorrichtung nach Anspruch 145 oder Anspruch 146, bei der die Manschette den besagten axialen Durchgangsweg (820) in ihrem Inneren oder durch ihr Inneres ausgeformt aufweist.

148. Vorrichtung nach Anspruch 145,146 oder 147, bei der die Kommunikation von dem inneren axialen Durchgangsweg (820) des Manschettengliedes (800) zu dem besagten Flußdurchgangsweg (440) durch eine Öffnung oder einen offenen Bereich (804) in der Wand des Manschettengliedes erfolgt.

149. Vorrichtung nach Anspruch 148, bei der das Manschettenglied (800) zu ausgewählten Stellungen axial, durch Drehen oder beides in dem Zentralkanal (540) der Düse (296) bewegbar ist, um dadurch eine oder mehrere der Öffnungen zu blockieren und freizugeben und diese Öffnung oder den offenen Bereich (804) in die und aus der Ausrichtung mit dem besagten Flußdurchgangsweg (440) zu bringen.

150. Vorrichtung nach einem der Ansprüche 145 bis 149, bei der das Manschettenglied (800) zu ausgewählten Stellungen bewegbar ist, um wenigstens zwei der besagten Öffnungen zu blockieren und freizugeben.

151. Vorrichtung nach einem der Ansprüche 145 bis 150, bei der die Ausgangsöffnungen (462,502) den Düsenzentralkanal (540) vollständig umgeben.

152. Vorrichtung nach einem der Ansprüche 145 bis 151, bei der das Manschettenglied (800) eng in den Düsenzentralkanal (540) paßt, wodurch kein wesentlicher Hohlraum für Polymeransammlung zwischen dem Manschettenglied und dem Zentralkanal verbleibt.

153. Vorrichtung nach einem der Ansprüche 145 bis 152, bei der die Ebene von wenigstens einer der besagten Öffnungen (462,502) rechtwinklig zu der Achse des Zentralkanals (540) ist.

154. Vorrichtung nach einem der Ansprüche 145 bis 152, bei der die Düseneinrichtungen eine Vielzahl von weiteren Flußdurchgangswegen für eine Vielzahl von weiteren Materialströmen aufweisen und das Manschettenglied eine Vielzahl von axialen Flußdurchgangswegen (666, 668) dafür besitzt.

155. Vorrichtung nach einem der Ansprüche 145 bis 154, die weiterhin Einrichtungen (860,856) zum Betätigen und Bewegen des Manschettengliedes (800) zwischen ersten, zweiten, dritten,vierten, fünften und sechsten Moden umfaßt, wobei in dieser ersten Mode das Manschettenglied all die besagten Öffnungen (z.B.462,482,502,522) blockiert und der besagte axiale Durchgangsweg (820) nicht in Kommunikation mit dem besagten Flußdurchgangsweg (440) ist, in der zweiten Mode das Manschettenglied all die Öffnungen blockiert und der axiale Durchgangsweg (820) in Kommunikation mit dem besagten Flußdurchgangsweg (440) steht, in der dritten Mode das Manschettenglied die am nächsten dem offenen Ende des Düsenzentralkanals (540) gelegene Öffnung (462) nicht blockiert und der besagte axiale Durchgangsweg in Kommunikation mit dem besagten Flußdurchgangsweg steht, in der vierten Mode das Manschettenglied wenigstens zwei Öffnungen nicht blockiert, von denen eine die Öffnung (462) ist, die dem offenen Ende des Düsenzentralkanals am nächsten liegt, und der besagte axiale Durchgangsweg in Kommunikation mit dem besagten Flußdurchgangsweg steht, in der fünften Mode das Manschettenglied wenigstens zwei Öffnungen nicht blockiert, von denen eine die Öffnung (462) ist, die dem offenen Ende des Düsenzentralkanals am nächsten liegt, und der besagte axiale Durchgangsweg nicht in Kommunikation mit dem besagten Flußdurchgangsweg steht, und in der sechsten Mode das Manschettenglied die Öffnung (462), die dem offenen Ende des Düsenzentralkanals am nächsten liegt, nicht blockiert und der axiale Durchgangsweg nicht mit dem besagten Flußdurchgangsweg in Kommunikation steht.

156. Vorrichtung nach Anspruch 155, bei der die Betätigungseinrichtung arbeitet, um das Manschettenglied der Reihe nach von der ersten Stellung zu jeder der zweiten bis sechsten Stellung und dann zu der ersten Stellung zu bewegen.

157. Vorrichtung nach einem der Ansprüche 145 bis 156, die der Steuerung von fünf Materialströmen angepaßt ist.

158. Vorrichtung nach Anspruch 157, bei der jede der Vielzahl der Düsen vier Ausgangsöffnungen (462,482,502, 522) umfaßt, die mit dem Düsenzentralkanal (540) kommunizieren, und das Manschettenglied einen inneren Flußdurchgangsweg (820) und einen offenen Bereich (804) in ihrer Wand aufweist.

159. Vorrichtung nach Anspruch 157, bei der jede Düse der Vielzahl derselben drei Ausgangsöffnungen (462,482, 502) aufweist, die mit dem Düsenzentralkanal kommunizieren, und das Manschettenglied zwei innere Materialflußdurchgangswege (660,680) umfaßt und zwei offene Bereiche (661,662) in ihrer Wand enthält, von denen jeder mit dem besagten Düsendurchgangsweg (660, 640) kommuniziert.

160. Vorrichtung nach einem der Ansprüche 145 bis 159, die Stiftglieder (834) umfaßt, die durch Betätigungseinrichtungen (844,850) für sie in dem axialen Durchgangsweg (820) des Manschettengliedes zu ausgewählten Stellungen bewegbar sind, um Kommunikation zwischen dem inneren axialen Durchgangsweg (820) und dem oder einem Flußdurchgangsweg (440) zu blockieren oder zu gestatten.

161. Vorrichtung nach Anspruch 160, wenn dieser von Anspruch 156 abhängt, bei der die Betätigungseinrichtungen (844,850; 856,860) sowohl für das Manschettenglied (800) als auch das Stiftglied (834) arbeiten, um diese der Reihe nach von der ersten Mode zu jeder der zweiten bis sechsten Mode und dann zu der ersten Mode zu bewegen.

162. Vorrichtung nach Anspruch 160 oder Anspruch 161, bei der ein Ende des Stiftgliedes (834) nahe dem offenen Ende (595) des Düsenzentralkanals (540) ist, wenn das Manschettenglied und das Stiftglied sich in der ersten Mode befinden.

163. Vorrichtung nach einem der Ansprüche 145 bis 162, die weiterhin Materialfluß-Richtungseinrichtungen (z.B.464,466) umfaßt, die jeder Düse ihrer Vielzahl zugeordnet sind, zum Abgleichen des Flusses von wenigstens einem Materialstrom (B)rund um den Düsendurchgangsweg (460) und die Ausgangsöffnung (462), durch die der Strom fließt.

164. Vorrichtung nach einem der Ansprüche 145 bis 163, die weiterhin Einrichtungen zum Beaufschlagen wenigstens eines Materialstroms mit Druck umfaßt.

165. Vorrichtung nach einem der Ansprüche 145 bis 164, bei der jede Düse ihrer Vielzahl weiterhin Materialfluß-Richtungseinrichtungen (z.B.464,466) in wenigstens einem der besagten Düsendurchgangswege (460) zum Abgleichen des Flusses des zugehörigen Materialstromes (B) rund um den Durchgangsweg und die Ausgangsöffnung (462), durch die er fließt, umfaßt, und wobei die Vorrichtung Mittel (232) zum Beaufschlagen des besagten Stromes mit Druck umfaßt, um ein unter Druck stehendes Reservoir von Material in dem Düsendurchgangsweg zwischen der Flußrichtungseinrichtung und der Öffnung herzustellen, wodurch dann, wenn das Manschettenglied (800) die Öffnung (462) nicht blockiert, der Start des Fließens dieses Materials durch die besagte Öffnung im wesentlichen gleichmäßig um die Öffnung herum erfolgt.

166. Vorrichtung nach Anspruch 165, bei der der besagte wenigstens eine Düsendurchgangsweg (z.B.500) sich in Richtung auf seine zugehörige Öffnung (502) von einer breiten Öffnungsfläche entfernt von der Öffnung zu einer schmalen Öffnungsfläche an der Öffnung selbst verjüngt

167. Vorrichtung nach einem der Ansprüche 145 bis 166, bei der jede Düse vier, fünf oder mehr Durchgangswege mit Öffnungen (z.B.462,482,502,522), die mit dem Zentralkanal (540) an Stellen nahe dem offenen Ende (595) kommunizieren, besitzt.

168. Vorrichtung nach einem der Ansprüche 145 bis 167 für Coinjektion von wenigstens drei Schmelzmaterialströmen durch die Düsen (296) in die zugeordneten Hohlräume (102), um dünnwandige mehrschichtige Kunststoffgegenstände zu bilden, von denen jeder wenigstens eine dünne innere Schicht mit einem begrenzenden Ende hat, wobei jede Düse (296) der Vielzahl derselben Materialfluß-Richtungseinrichtungen (524, 526) zum Abgleichen des Fließens des Materialstroms (C), der die besagte innere Schicht bildet, rund um den Düsendurchgangsweg (500) und die Ausgangsöffnung (502), durch die dieser Strom fließt, aufweist und die Flußrichtungseinrichtung arbeitet, um das begrenzende Ende der inneren Schicht im wesentlichen gleichmäßig in dem gespritzten Gegenstand am Ende der Polymerbewegung in dem zugeordneten Injektionshohlraum zu lokalisieren.

169. Vorrichtung nach Anspruch 168, die weiterhin Mittel (252) zum Beaufschlagen wenigstens des Materialstromes für die innere Schicht mit Druck umfaßt.

170. Vorrichtung nach Anspruch 169, bei der die Materialfluß-Richtungseinrichtung (524,526) in dem Düsendurchgangsweg (500) für das Material zum Bilden der inneren Schicht angeordnet ist, der besagte Durchgangsweg, der für ein unter Druck stehendes Reservoir aus dem Material darin sorgt, zwischen dieser Flußrichtungseinrichtung und der Ausgangsöffnung (502) des Durchgangsweges zu dem Zentralkanal (540) gelegen ist, wodurch dann, wenn die besagte Öffnung nicht blockiert ist, der Start des Fließens des unter Druck stehenden Materials für die innere Schicht in den Zentralkanal im wesentlichen gleichmäßig um den Kanal erfolgt.

171. Vorrichtung nach Anspruch 170, bei der der besagte Düsendurchgangsweg für das Material zum Bilden der inneren Schicht verjüngt (bei 518) ist und eine breitere Öffnungsfläche entfernt von seiner Ausgangsöffnung (502) aufweist und eine schmalere Öffnungsfläche an der Öffnung selbst besitzt.

172. Vorrichtung nach einem der Ansprüche 145 bis 171 für Coinjektion von wenigstens drei Schmelzmaterialströmen durch die Düsen in zugeordnete Hohlräume (102), um dünnwandige mehrschichtige Kunststoffgegenstände zu bilden, von denen jeder eine äußere Schicht mit einem begrenzenden Ende besitzt, bei der jede Düse (296) der Vielzahl derselben Materialfluß-Richtungseinrichtungen (464,468) zum Ausgleichen des Fließens des Materialstromes (B), der diese äußere Schicht bildet, um den Düsenausgangsweg (460) herum und die Ausgangsöffnung (462), durch die dieser Strom fließt, aufweist, wobei die Flußrichtungseinrichtung arbeitet, um das begrenzende Ende dieser äußeren Schicht im wesentlichen gleichmäßig in dem gespritzten Gegenstand beim Abschluß der Polymerbewegung in dem zugeordneten Injektionshohlraum auszubilden.

173. Vorrichtung nach Anspruch 172, die weiterhin Mittel (232) zum Beaufschlagen des Materialstromes für die äußere Schicht mit Druck umfaßt.

174. Vorrichtung nach Anspruch 173, bei der die Materialfluß-Richtungseinrichtung (464,466) in dem Düsendurchgangsweg (460) für das Material, das diese äußere Schicht bilden soll, gelegen ist, der Durchgangsweg, der für ein unter Druck stehendes Reservoir aus dem darin befindlichen Material sorgt, zwischen der Flußrichtungseinrichtung und der Ausgangsöffnung dieses Durchgangswegs zu dem Zentralkanal gelegen ist, wodurch dann, wenn diese Öffnung nicht blockiert ist, der Start von Fließen des unter Druck stehenden Materials der äußeren Schicht in den Zentralkanal im wesentlichen gleichmäßig um den Kanal erfolgt.

175. Vorrichtung nach Anspruch 174, bei der der Düsendurchgangsweg für das Material, das die äußere Schicht bilden soll, sich verjüngt (bei 478) und eine breitere Öffnungsfläche entfernt von seiner zugeordneten Öffnung (462) besitzt und eine schmalere Öffnungsfläche an der Öffnung selbst aufweist.

176. Vorrichtung nach Ansprüchen 168,169 oder 170 und 172, 173 oder 174, bei der die Materialströme, die die beiden inneren und äußeren Schichten der Gegenstände bilden sollen, Flußrichtungseinrichtungen (524,526;464,466) unterworfen werden, die arbeiten, um die Flüsse aus den Materialströmen (B,C), die die äußeren und inneren Schichten bilden sollen, abzugleichen und um die Düsendurchgangswege und Ausgangsöffnungen, durch die diese Ströme fließen, herum zu lokalisieren, um die begrenzenden Enden jede dieser Schichten im wesentlichen gleichmäßig in den gespritzten Gegenständen beim Abschließen der Polymerbewegung in den Injektionshohlräumen auszubilden.

177. Vorrichtung nach einem der Ansprüche 145 bis 176, die Mittel zum selektiven Steuern des Fließens von wenigstens drei Schmelzmaterialströmen durch die Düsen (296) für Coinjektion der Materialien in zugeordnete Hohlräume (102) zum Bilden dünnwandiger mehrschichtiger Kunststoffgegenstände mit einer äußeren Schicht und wenigstens einer dünnen inneren Schicht umfaßt, wobei jede Düse (296) der Vielzahl derselben einen an einem Ende offenen Zentralkanal (540) aufweist, ein Flußdurchgangsweg in der Düse für jeden Materialstrom vorhanden ist, wenigstens zwei der Düsendurchgangswege (460,500) an einer Ausgangsöffnung (462,502) enden, jede der besagten Öffnungen mit dem Düsenzentralkanal (540) an Stellen nahe des offenen Endes (596) kommunizieren, ein Manschettenglied (800) mit wenigstens einem inneren axialen Flußdurchgangsweg (820), der mit dem Düsenzentralkanal kommuniziert und ausgelegt ist, um mit einem der Flußdurchgangswege (z.B.440) in der Düse zu kommunizieren, vorgesehen ist, wobei diese Manschette in dem Düsenzentralkanal (540) getragen wird und zu ausgewählten Stellungen bewegbar ist, um eine oder mehrere dieser Öffnungen zu blockieren und freizugeben, ein Stiftglied (834) in dem axialen Durchgangsweg (820) des Manschettengliedes zu ausgewählten Stellungen bewegbar ist, um Kommunikation zwischen dem inneren axialen Durchgangsweg (820) und dem besagten Düsendurchgangsweg (440) zu blockieren oder einzurichten, und Materialfluß-Richtungseinrichtungen (464,466; 524,526) der Düse zugeordnet sind zum Abgleichen des Fließens der Materialströme (B,C), die die äußere und die innere Schicht bilden sollen, um die jeweiligen Düsendurchgangswege herum und die Ausgangsöffnungen, durch die diese Ströme fließen, wodurch die Lokalisierungen der begrenzenden Enden der äußeren Schicht und der inneren Schicht im wesentlichen gleichmäßig in jedem gespritzten Gegenstand beim Abschluß der Polymerbewegungen in dem Injektionshohlraum sind.

178. Vorrichtung nach Anspruch 13, die für selektives Steuern des Fließens von wenigstens drei Schmelzmaterialströmen für Coinjektion der Materialien in Hohlräume zur Bildung dünnwandiger mehrschichtiger Kunststoffgegenstände, von denen jeder wenigstens eine dünne Schicht mit einem begrenzenden Ende aufweist, ausgelegt ist, bei der jede Düse (296) einer Vielzahl derselben einen an einem Ende offenen Zentralkanal (540), einen Flußdurchgangsweg (z.B. 460,500) in der Düse für jeden der Vielzahl von Materialströmen (B,C), Ventilglieder (800) in dem Zentralkanal, die zu ausgewählten Stellungen bewegbar sind, um eine oder mehrere Öffnungen (z.B.462, 502), durch die sich die Durchgangswege zu dem Zentralkanal öffnen, zu blockieren und freizugeben, um die Durchgangswege (460,500) in und aus Kommunikation mit dem Zentralkanal zu bringen, und Materialfluß-Richtungseinrichtungen (464,466 und/oder 524,526) hat, die mit der Düse (296) zum Abgleichen des Flusses aus dem Materialstrom, der diese eine Schicht (B oder C) bildet, um den Düsendurchgangsweg, durch den der Strom fließt, verbunden sind, wobei die Flußrichtungseinrichtung arbeitet, um das begrenzende Ende der besagten einen Schicht im wesentlichen gleichförmig in dem gespritzten Gegenstand beim Abschluß der Polymerbewegung in den zugeordneten Injektionshohlraum auszubilden.

179. Vorrichtung nach Anspruch 178, bei der es fünf Durchgangswege (460,480,500,520,440) gibt, die vorzugsweise an Ausgangsöffnungen (z.B.462,482,502,522) nahe dem offenen Ende des Zentralkanals enden.

180. Vorrichtung nach Anspruch 178 oder Anspruch 179, bei der der Düsendurchgangsweg (500), mit dem die Flußrichtungseinrichtung (524,526) verbunden ist, dazu dient, einen Strom abzulassen, der eine innere Schicht (C) des gespritzten Gegenstandes bilden soll.

181. Vorrichtung nach Anspruch 178,179 oder 180, die Materialfluß-Richtungseinrichtungen (524,526) umfaßt, die jeder der Düsen zugeordnet sind, zum Abgleichen des Flusses aus dem Materialstrom (B) zum Bilden der äußeren Schicht des Gegenstandes rund um den Düsenausgangsweg (500) herum, durch den der äußere Schichtstrom fließt, wobei die Flußrichtungseinrichtung arbeitet, um das begrenzende Ende der besagten äußeren Schicht im wesentlichen gleichmäßig in dem gespritzten Gegenstand beim Abschluß des Spritzbetriebes auszubilden.

182. Vorrichtung nach Anspruch 180, die weiterhin Mittel (252) zum Beaufschlagen des Materialstromes (C) für die innere Schicht mit Druck umfaßt.

183. Die Vorrichtung nach Anspruch 181, die weiterhin Mittel (232) zum Beaufschlagen des Stromes (B) für die äußere Schicht mit Druck umfaßt.

184. Vorrichtung nach einem der Ansprüche 178 bis 183, bei der die oder jede Materialfluß-Richtungseinrichtung in dem Düsendurchgangsweg (500 oder 460) für den Fließstrom (C oder B) aus dem Material zum Bilden der entsprechenden inneren oder äußeren Schicht gelegen ist, der besagte Durchgangsweg ein unter Druck stehendes Reservoir (bei 518 oder 478) von dem Material in dem Düsendurchgangsweg zwischen der Flußrichtungseinrichtung und der Ausgangsöffnung dieses Durchgangsweges zu dem Zentralkanal von jedem Ventil liefert, wodurch dann, wenn das Ventilglied den Durchgangsweg freigibt, der Start des Fließens von dem Material in dem Durchgangsweg in den Zentralkanal im wesentlichen gleichmäßig um den Kanal herum erfolgt.

185. Vorrichtung nach einem der Ansprüche 178 bis 184, bei der der Düsendurchgangsweg (500,460) für den Fließstrom zum Bilden einer der beiden oder sowohl der einen als auch der anderen inneren Schicht und äußeren Schicht verjüngt ist (bei 518,478) derart, daß er eine breitere Öffnungsfläche entfernt von seiner zugeordneten Öffnung aufweist und eine schmalere Öffnungsfläche an der Öffnung selbst besitzt.

186. Vorrichtung nach einem der Ansprüche 178 bis 185, die weiterhin Materialfluß-Richtungseinrichtungen (464,466; 524,526) umfaßt, die mit jeweils der Düse verbunden sind, zum Abgleichen der Flüsse der beiden Materialströme (B,C) zum Bilden der äußeren Schicht und der inneren Schicht um die Düsendurchgangswege (460,500) herum, durch die jeder Strom fließt, wobei die Lokalisierung der begrenzenden Enden jeweils von der äußeren Schicht und von der inneren Schicht im wesentlichen gleichmäßig in dem gespritzten Gegenstand beim Abschluß der Polymerbewegung in dem Injektionshohlraum ist.

187. Vorrichtung nach Anspruch 13, mit einer Vielzahl von Düseneinrichtungen (296) für Coinjektion von wenigstens drei Strömen aus Schmelzmaterialien zum Bilden mehrschichtiger Gegenstände daraus, bei der jede Düseneinrichtung (296) der Vielzahl derselben einen sich axial erstreckenden Zentralkanal (540), einen Anschnitt (596) in Kommunikation mit dem Zentralkanal aufweist und wenigstens zwei Polymerstromdurchgangswege (460,500) umfaßt, von denen jeder eine ringförmige Öffnung (462,502) hat, die erste dieser Öffnungen (462) nahe dem Anschnitt (596) gelegen ist, die zweite dieser Öffnungen (502) angrenzend an die erste Öffnung gelegen ist und entweder einer oder beide von dem ersten und dem zweiten Durchgangsweg (460,500) einen verjüngten Abschnitt (478,518) angrenzend an seine jeweilige Öffnung derart aufweist, daß jede Öffnung eine kleinere Querschnittsöffnungsfläche als ein stromaufwärts gelegener benachbarter Abschnitt seines jeweiligen Durchgangsweges aufweist, und die Düse vorzugsweise einen dritten Durchgangsweg (440) besitzt mit einer Öffnung, die sich zu dem Zentralkanal an einer Stelle öffnet, die weiter entfernt von dem Anschnitt als die anderen Öffnungen liegt.

188. Vorrichtung nach Anspruch 187, die ein Ventilglied (800) für jede der Düseneinrichtungen enthält, das in dem Zentralkanal zum Blockieren und Freigeben der Öffnungen von drei Durchgangswegen (z.B.460, 480,440) arbeitet und so ausgelegt ist, daß es in einer Stellung die zweite Öffnung (502) blockiert, während die dritte Öffnung (440) nicht durch das Ventilglied blockiert ist.

189. Vorrichtung nach Anspruch 188, bei der das Ventilglied (800) auch ausgelegt ist, um in einer anderen Stellung die dritte Öffnung (440) zu blockieren, während die erste Öffnung (462) nicht durch das Ventilglied blockiert ist.

190. Vorrichtung nach Anspruch 188 oder 189, bei der das Ventilglied eine Manschette (800) mit einem zentralen axialen Durchgangsweg (820), einem offenen Ende (812) in Kommunikation mit dem axialen Durchgangsweg und einer Öffnung (804) in der Manschettenwand und einen langgestreckten Stift (834) umfaßt, der innerhalb der Manschette axial bewegbar ist und ausgelegt ist, um diese Öffnung (804) zu blockieren und freizugeben.

191. Vorrichtung nach einem der Ansprüche 187 bis 190, bei der jede Düseneinrichtung der Vielzahl derselben fünf Polymerstromdurchgangswege besitzt, von denen jeder eine ringförmige Öffnung aufweist, wobei die vierte Durchgangswegöffnung (482) zwischen der ersten und der zweiten Öffnung (462,502) gelegen ist und die fünfte Durchgangswegöffnung (522) zwischen der zweiten (502) und der dritten Öffnung (440) gelegen ist.

192. Vorrichtung nach Anspruch 187, die weiterhin ein Ventilglied (800), das in dem Düsenzentralkanal (540) zum Blockieren und Freigeben der Öffnungen von jeder der Düseneinrichtungen (296) arbeitet, und Einrichtungen (232,234,260,262) zum Verdrängen von Polymerschmelzmaterial durch jeden Durchgangsweg und jede Durchgangswegöffnung und zum Beaufschlagen eines Schmelzmaterials in einem verjüngten Durchgangsweg (478,498,518 oder 538) mit Druck, während seine Öffnung durch das Ventilglied (800) blockiert ist, umfaßt.

193. Vorrichtung nach Anspruch 192, bei der die Einrichtungen (232,234,260,262) zum Verdrängen und zum unter Drucksetzen einen Druckkolben umfaßt.

194. Vorrichtung nach Anspruch 192 oder 193, bei der für jeden Materialstrom Mittel zum Verdrängen und unter Drucksetzen von Schmelzmaterial vorgesehen sind und jedes Mittel so ausgelegt ist, daß es das Schmelzmaterial in seinem Durchgangsweg in jeder der Düseneinrichtungen mit Druck beaufschlagt, während seine Durchgangswegöffnung durch das Ventilglied (800) blockiert ist.

195. Vorrichtung nach Anspruch 192, 193 oder 194, bei der das Ventilglied (800) jeder Düseneinrichtung ausgelegt ist, um Fluß durch die Öffnungen von drei Durchgangswegen zu steuern und in einer Stellung die Öffnung des zweiten Durchgangsweges (500) zu blockieren, während die Öffnung (440) des dritten Durchgangsweges nicht durch das Ventilglied blockiert ist.

196. Vorrichtung nach einem der Ansprüche 192 bis 195, bei der wenigstens der Durchgangsweg (460) in Kommunikation mit der ersten Öffnung (462) mit ihm wirkungsmäßig verbundene Einrichtungen (464,466) zum Abgleichen des Fließens des Schmelzstrommaterials (B) durch diesen Durchgangsweg aufweist.

197. Vorrichtung nach Anspruch 196, bei der die Flußabgleicheinrichtung eine exzentrische Drosselklappe (464 oder 466) aufweist, die in den Durchgangsweg (460) von einer seiner Wände hereinragt.

198. Vorrichtung nach einem der Ansprüche 192 bis 197, bei der jede Düseneinrichtung (296) der Vielzahl derselben fünf Durchgangswege für fünf Schmelzströme besitzt, jeder mit einer jeweiligen Öffnung, die sich zu dem Zentralkanal öffnet, wobei jeder von den ersten, zweiten, vierten und fünften Durchgangswegen (460,500,480,520) einen sich verjüngenden Abschnitt (478,518,498,538) angrenzend an seine jeweilige Öffnung derart aufweist, daß jede Öffnung eine kleinere Querschnittsöffnungsfläche als ein stromaufwärts angrenzender Abschnitt seines jeweiligen Durchgangsweges aufweist, und das Ventilglied (800), das in dem Zentralkanal (540) arbeitet, ausgelegt ist, um die vierte, zweite und fünfte Öffnung (482,502,522) zu blockieren, während die dritte Öffnung (440) nicht durch das Ventilglied blockiert ist.

199. Vorrichtung nach Anspruch 198, die Einrichtungen (464,466; 504,506; 484,486; 524,526) in zugeordneter Wirkverbindung mit jedem sich verjüngenden Durchgangsweg (478,518,498,538) zum Abgleichen des Fließens von Schmelzmaterial durch jeden der verjüngten Durchgangswege umfaßt.

200. Vorrichtung nach Anspruch 187, bei der jede Öffnung (462,482,502,522) von jeder Düseneinrichtung der Vielzahl derselben ortsfest ist und durch voreilende und nacheilende Lippen (z.B.461,523) definiert ist und jede eine Mittellinie (190 bis 196) aufweist, die im wesentlichen rechtwinklig zu der Achse des Zentralkanals (540) liegt, wobei die erste Öffnung (462) ihre Mittellinie innerhalb 350 x 10⁻³ Zoll (8,89 mm) von dem Anschnitt (596) hat, die zweite Öffnung (502) ihre Mittellinie innerhalb 250 x 10⁻³ Zoll (6,35 mm) von der Mittellinie der ersten Öffnung hat und die voreilende Lippe der ersten Öffnung und die nacheilende Lippe der zweiten Öffnung nicht weiter als 300 x 10⁻³ Zoll (7,62 mm) entfernt sind.

201. Vorrichtung nach Anspruch 200, die Ventilglieder (800) enthält, die in zugeordneter Wirkverbindung mit dem Zentralkanal (540) stehen und zum Blockieren und Freigeben der Öffnungen ausgelegt sind.

202. Vorrichtung nach Anspruch 200, die Ventilglieder (800) enthält, die in zugeordneter Wirkverbindung mit dem Zentralkanal (540) stehen, wobei ein Ventilglied eine langgestreckte Manschette (800) mit einem Mund (812) umfaßt, der so angepaßt ist, daß er eine dritte Polymerstromöffnung in Kommunikation mit dem Zentralkanalbereich wenigstens angrenzend an die nacheilende Lippe der zweiten Öffnung (500) liefert.

203. Vorrichtung nach Anspruch 201 oder 202, bei der die Düseneinrichtung Antriebseinrichtungen (860,856,usw.) zum Antreiben der Ventilglieder (800) umfaßt und die Ventilglieder ausgelegt sind, um sich zu einer Stellung, die alle Öffnungen blockiert, und zu einer Stellung, die alle Öffnungen freigibt, innerhalb einer Zeitperiode von etwa 75 Centisekunden zu bewegen.

204. Vorrichtung nach Anspruch 202 oder 203, bei der das Ventilglied einen langgestreckten Stift (834) enthält, der axial innerhalb der Manschette (800) bewegbar ist und so ausgelegt ist, daß er eine engtolerierte Gleitpassung über den größten Teil der Arbeitslänge der Manschette besitzt, die eine signifikante Ansammlung von Schmelzmaterial zwischen der Manschette und dem Stift verhindert.

205. Vorrichtung nach einem der Ansprüche 200 bis 204, bei der die Düseneinrichtung dritte, vierte und fünfte Durchgangswege (440,480,520) und jeweilige Öffnungen zum Abgeben von Schmelzströmen an den Zentralkanal besitzt und bei der der axiale Abstand zwischen einer voreilenden Lippe der vierten Öffnung (482) und einer nacheilenden Lippe der fünften Öffnung (522) von 100 bis 900 x 10⁻³ Zoll (2,54 bis 22,9 mm), z.B. 100 bis 300 x 10⁻³ Zoll (2,54 bis 7,62 mm) beträgt.

206. Vorrichtung nach Anspruch 187 oder Anspruch 200, bei der jede Düseneinrichtung fünf Polymerstromdurchgangswege (460,480,500,520,440) aufweist, von denen jeder eine Öffnung in Kommunikation mit dem Zentralkanal (540) besitzt und jeder ausgelegt ist, um polymeren Materialschmelzstrom durch die Öffnung in den Zentralkanal zum Bilden einer Schicht des Gegenstandes, der durch die Düseneinrichtungen gespritzt wird, passieren zu lassen, wobei ein erster Durchgangsweg (460) mit seiner Öffnung (462) näher dem Anschnitt (596) als irgendeine andere Öffnung gelegen ist, um einen Schmelzstrom (B) aus Strukturmaterial in den Zentralkanal zum Bilden der äußeren Oberflächenschicht des Gegenstandes durchzulassen, ein zweiter Durchgangsweg (500) zum Hindurchlassen eines Schmelzstromes (C) aus Material in den Zentralkanal zum Bilden einer inneren Schicht des Gegenstandes vorgesehen ist, ein dritter Durchgangsweg (440) mit seiner Öffnung weiter entfernt von dem Anschnitt (596) als die anderen Öffnungen zum Hindurchlassen eines Schmelzstromes (A) aus Strukturmaterial in den Zentralkanal zum Bilden der inneren Oberflächenschicht des Gegenstandes vorgesehen ist, ein vierter Durchgangsweg (480) zwischen dem ersten und dem zweiten Durchgangsweg (460,500) zum Hindurchleiten eines Schmelzstromes (E) aus polymerem Material in den Zentralkanal zum Bilden einer Zwischenschicht zwischen der äußeren Oberflächenschicht und der inneren Schicht des Gegenstandes und ein fünfter Durchgangsweg (520) zwischen dem zweiten Durchgangsweg (500) und dem dritten Durchgangsweg (440) zum Hindurchleiten eines Schmelzstromes (D) aus Material in den Zentralkanal zur Bildung einer Zwischenschicht zwischen der inneren Schicht und der inneren Oberflächenschicht des Gegenstandes vorgesehen sind, und wobei von dem ersten, zweiten, vierten und fünften Düsendurchgangsweg wenigstens der erste und der zweite (460,500) in Richtung auf ihre jeweiligen Öffnungen (462,502) derart verjüngt sind, daß jeder verjüngte Durchgangsweg eine größere Öffnungsfläche an einer angrenzenden Stelle entfernt von der Öffnung und eine kleinere Öffnungsfläche an der Öffnung selbst aufweist, die Düse weiterhin Ventilglieder (800 usw.) aufweist, die angrenzend wenigstens an die zweite Öffnung (502) und die dritte Öffnung (440) wirksam sind und ausgelegt sind, um zur gleichen Zeit die zweite Öffnung zu blockieren und die dritte Öffnung nicht zu blockieren.

207. Vorrichtung nach Anspruch 206, bei der das Ventilglied eine langgestreckte Manschette (800) mit einem offenen Ende (812), eine zylindrische Seitenwand mit einer Öffnung (804) darin und einen langgestreckten axialen zentralen Durchgangsweg (820) in Kommunikation mit der Öffnung und dem offenen Ende aufweist, wobei die Manschette innerhalb des Düsenzentralkanals (540) in einer engtolerierten Gleitpassung angebracht ist, die ausreichend ist, um signifikantes Ansammeln oder Durchgang von polymerem Material zwischen ihren sich gegenüberliegenden Flächen zu verhindern, und ein langgestreckter Stift (834) innerhalb des Manschettenzentraldurchgangsweges (820) in engtolerierter Gleitpassung damit angebracht ist, die ausreichend ist, um signifikantes Ansammeln oder Durchgang von Schmelzmaterial zwischen der äußeren Oberfläche der Stiftseitenwand und der Wand des Manschettenzentraldurchgangsweges zu verhindern, die Manschette ausgelegt ist, um axial innerhalb des Düsenzentralkanals hin- und herzugehen und zu wirken, um die erste und die zweite Durchgangswegöffnung (462,502) zu blockieren und freizugeben und ihre Öffnung (804) in und aus Ausrichtung mit der Öffnung des dritten Durchgangsweges (440) zu bringen, und der besagte Stift angepaßt ist, um sich innerhalb der Manschette axial hin- und herzubewegen, um die besagte Öffnung zu blockieren und freizugeben, wenn die Öffnung mit dem dritten Durchgangsweg ausgerichtet ist.

208. Vorrichtung nach Anspruch 206, bei der das Ventilglied in Bezug auf wenigstens drei der fünf Öffnungen arbeitsmäßig wirksam ist und auch ausgelegt ist um die zweite Durchgangswegöffnung (502) zu blockieren, während es die erste und die dritte Durchgangs-wegöffnung (462,440) nicht blockiert.

209. Die Vorrichtung nach Anspruch 206, bei der das Ventilglied in Bezug auf alle fünf der Öffnungen arbeitsmäßig wirksam ist und ausgelegt ist, um die zweite, vierte und fünfte Öffnung (502,482,522) zu blockieren, während es die dritte Öffnung (440) nicht blockiert.

210. Vorrichtung nach Anspruch 209, bei der das Ventilglied weiterhin ausgelegt ist, um zur gleichen Zeit die zweite Öffnung (502) zu blockieren, während es die erste Öffnung (462), die dritte Öffnung (440) oder sowohl die erste als auch die dritte Öffnung nicht blockiert.

211. Vorrichtung nach Anspruch 13, die eine Vielzahl von Coinjektionsdüsen aufweist, von denen jede einen zentralen Kanal mit einem offenen Ende für Coinjektion von wenigstens drei Schmelzmaterialströmen zum Bilden eines mehrschichtigen Gegenstandes besitzt, wobei jede Düse ein Zusammenbau (296) ist, der wenigstens zwei ineinander passende Mäntel (434,436) und eine Düsenabschlußkappe (438), die wenigstens einen Teil des äußersten (436) dieser ineinander passenden Mäntel umschließt, umfaßt, einer der Mäntel (z.B.436) einen Zuführungskanal (460) für Fluß von Schmelzmaterial durch ihn hindurch enthält, welcher Kanal zu einem zugeordneten ringförmigen Fließdurchgangsweg (478) mit einer Öffnung (462), die sich zu dem Düsenzentralkanal (540) öffnet, führt, der besagte ringförmige Fließdurchgangsweg an einer Seite durch einen Abschnitt (589) der äußeren Oberfläche des Mantels, der den Zuführungskanal enthält, und auf der anderen Seite durch einen Abschnitt (593) der inneren Oberfläche eines benachbarten der ineinander passenden Mäntel oder der Düsenabschlußkappe begrenzt ist, ein Teil der besagten äußeren Oberfläche eine symmetrische, kegelstumpfförmige Gestalt aufweist und ein Teil der besagten inneren Oberfläche eine symmetrische, kegelstumpfförmige Gestalt aufweist, und die äußeren und inneren symmetrischen, kegelstumpfförmigen Oberflächenabschnitte (589,593) zusammen einen sich verjüngenden, symmetrischen, kegelstumpfförmigen Abschnitt des besagten ringförmigen Fließdurchgangsweges (478) bilden.

212. Vorrichtung nach Anspruch 211, in der jeder Mantel (430;432;434;436) einen Zuführungskanal (440,450; 520;500;480;460) für Fließen von einem Schmelzmaterial durch ihn hindurch enthält, wobei wenigstens zwei dieser Zuführungsflußkanäle (460,500) zu einem entsprechenden ringförmigen Flußdurchgangsweg (478, 518) führen, von denen jeder eine Öffnung (462,502) aufweist, die sich zu dem Zentralkanal öffnet, und von denen jeder an einer Seite an einen Abschnitt (578,566) der äußeren Oberfläche eines Mantels (434, 432) grenzt und an der anderen Seite an einen Abschnitt (593,603) der inneren Oberfläche eines benachbarten der ineinander passenden Mäntel (434) oder der Düsenabschlußkappe (438) grenzt, alle der gegenüberliegenden Oberflächenabschnitte symmetrische, kegelstumpfförmigen Gestalten aufweisen, wodurch die Paare gegenüberliegender Oberflächen sich verjüngende, symmetrische, kegelstumpfförmige Abschnitte der ringförmigen Durchgangswege (478,518) entstehen lassen.

213. Vorrichtung nach Anspruch 211 oder Anspruch 212, bei der der ringförmige Flußdurchgangsweg oder wenigstens einer derselben Mittel zum Richten des Flusses aus Schmelzmaterial durch den Durchgangsweg enthält.

214. Vorrichtung nach Anspruch 213, bei der die Richtungsmittel Drosselklappeneinrichtungen, z.B.exzentrische Drosselklappeneinrichtungen (464,466) oder konzentrische Drosselklappeneinrichtungen (506) umfassen.

215. Vorrichtung nach Anspruch 211 oder Anspruch 212, die Mittel zum Schaffen eines abgeglichenen Fließens von Schmelzmaterial um die ringförmigen Flußdurchgangswege herum oder um wenigstens einen derselben umfaßt.

216. Vorrichtung nach Anspruch 215, bei der diese Mittel zum Schaffen abgeglichenen Fließens Drosselklappeneinrichtungen, z.B. exzentrische Drosselklappeneinrichtungen (464,466) oder konzentrische Drosselklappeneinrichtungen (506) umfassen.

217. Vorrichtung nach einem der Ansprüche 211 bis 216, bei der die oder eine Öffnung (z.B.462) nahe dem offenen Ende (596) des Düsenzentralkanals (540) gelegen ist.

218. Vorrichtung nach Anspruch 13, die eine Vielzahl von Coinjektionsdüsen-Einrichtungen, von denen jede einen Zentralkanal mit einem offenen Ende enthält, für Coinjektion von wenigstens drei Strömen aus Schmelzmaterialien zum Bilden eines mehrschichtigen Gegenstandes mit einer außenseitigen Schicht, einer innenseitigen Schicht und wenigstens einer innen gelegenen Schicht zwischen dieser Außenschicht und der Innenschicht umfaßt, wobei die Düseneinrichtungen (296) einen Flußdurchgangsweg für jeden Strom aus Schmelzmaterial aufweisen und wenigstens zwei der Durchgangswege, z.B. für die Ströme, die eine außenseitige und eine innere Schicht bilden sollen, bei ringförmigen Öffnungen (462,502) enden, die mit dem Zentralkanal (540) an Stellen nahe des offenen Endes (596) kommunizieren,wenigstens der Durchgangsweg (500) für den Materialstrom (C) zum Bilden der innen gelegenen Schicht Einrichtungen (504,506) in sich aufweist, um einen abgeglichenen Fluß von Material durch und um den Durchgangsweg herum zu liefern, dieser Durchgangsweg weiterhin einen symmetrischen, sich verjüngenden Abschnitt (518) zwischen den Abgleicheinrichtungen und der Durchgangswegöffnung (502) aufweist, um einen symmetrischen, sich verjüngenden Pool (ein Becken) für das Schmelzmaterial an der Öffnung für abgeglichenes Fließen durch diese hindurch in den Zentralkanal (540) zu liefern.

219. Vorrichtung nach Anspruch 218, bei der die Flußabgleicheinrichtung Drosselklappeneinrichtungen, z.B. exzentrische Drosselklappeneinrichtungen (504) oder konzentrische Drosselklappeneinrichtungen (506) umfaßt.

220. Vorrichtung nach einem der Ansprüche 211 bis 219, die weiterhin Glieder (800) in jeder der Düseneinrichtungen (296) enthält, die selektiv bewegbar sind, um Fluß in den Zentralkanal von dem Schmelzmaterial (C), der die innere Schicht bilden soll, zu verhindern oder zu gestatten.

221. Vorrichtung nach Anspruch 13 mit einer Vielzahl von Coinjektionsdüsen-Einrichtungen, jede für Coinjektion von wenigstens drei Strömen aus Schmelzmaterialien zum Bilden eines mehrschichtigen Gegenstandes daraus, bei der jede Coinjektionsdüsen-Einrichtung (296) einen sich axial erstreckenden zylindrischen Zentralkanal (540), einen Anschnitt (596) in Kommunikation mit dem Zentralkanal und wenigstens drei Polymerstromdurchgangswege, von denen jeder eine Öffnung aufweist, umfaßt, wobei die erste (462) dieser Öffnungen in der Nähe oder dicht bei dem Anschnitt (596) liegt, die zweite (502) dieser Öffnungen der ersten Öffnung benachbart ist und die dritte Öffnung (z.B.440) entfernt von dem Anschnitt ist, jede der ersten und der zweiten (462,502) dieser Öffnungen ringförmig ist und durch eine voreilende Lippe (z.B.461) und eine nacheilende Lippe (z.B.523) definiert ist, der Zentralkanal (540) einen Kombinierungsbereich aufweist, der ein zylindrischer Abschnitt des Zentralkanals ist, der sich von der vorwärts gerichteten Lippe der ersten Öffnung (462) zu der nacheilenden Lippe der ringförmigen Öffnung , die von dem Anschnitt (596) am weitesten entfernt ist, erstreckt, wobei sich in diesem Bereich alle Polymerströme zu einem kombinierten Fließstrom für die Injektion von der Düse kombinieren und dieser Kombinierungsbereich eine axiale Länge von 100 bis 900 x 10⁻³ Zoll (2,54 bis 22,9 mm), z.B. 100 bis 300 x 10⁻³ Zoll (2,54 bis 7,62 mm) aufweist, und vorzugsweise die zweite Öffnung,und noch stärker zu bevorzugen die erste und die zweite Öffnung relativ zu dem Zentralkanal ortsfest sind.

222. Vorrichtung nach Anspruch 13 mit einer Vielzahl von Coinjektionsdüsen-Einrichtungen, jede für Coinjektion von wenigstens drei Strömen aus Schmelzmaterialien in einen vorgegebenen Hohlraum zur Bildung eines mehrschichtigen Gegenstandes daraus, bei der jede Düseneinrichtung (296) einen sich axial erstreckenden zylindrischen Zentralkanal (540), einen Anschnitt (596) in Kommunikation mit dem Zentralkanal und wenigstens drei Polymerstromdurchgangswege (z.B. 460,500,440) umfaßt, von denen jeder eine Öffnung aufweist, die vorzugsweise relativ zu dem Zentralkanal (540) fixiert ist, wobei zwei dieser besagten wenigstens drei Öffnungen nahe dem Anschnitt liegen, die erste (462) dieser Öffnung nahe dem Anschnitt (596) ist, die zweite (502) dieser Öffnungen nahe an der ersten Öffnung ist und die dritte Öffnung (z.B.440) entfernt von diesem Anschnitt ist, jede dieser ersten und zweiten Öffnungen (462,502) eng, ringförmig und begrenzt von einer voreilenden Lippe (z.B.461) und einer nacheilenden Lippe (z.B.523) ist, der Zentralkanal (540) einen Kombinationsbereich aufweist, der ein zylindrischer Abschnitt ist, der an den jeweiligen Enden durch die voreilende Lippe der ersten Öffnung (462) und die nacheilende Lippe der ringförmigen Öffnung, die am weitesten entfernt von dem Anschnitt ist, begrenzt ist, in welchem Bereich sich alle Polymerströme zu einem kombinierten Fließstrom für Injektion von der Düse kombinieren, und wobei dieser Kombinierungsbereich ein Volumen besitzt, das nicht größer als etwa 5% des Volumens des Injektionshohlraums (102) ist, in den der kombinierte Polymerfließstrom von der Düse (296) injiziert wird.

223. Vorrichtung nach Anspruch 221 oder 222, bei der die Düseneinrichtung (296) Glieder (800) umfaßt, die axial vorwärts durch den Kombinierungsbereich in Richtung auf den Anschnitt (596) bewegbar sind zum Austreiben des kombinierten Polymerfließstromes aus dem Kombinierungsbereich.

224. Vorrichtung nach Anspruch 223, bei der die Reinigungseinrichtung Ventilglieder (800,834) umfaßt, die an ihrem vorwärts gerichteten Ende so ausgelegt sind, daß sie einen Bereich zum Ansammeln von Polymermaterial vor dem Bewirken ihrer Reinigungsaktion liefern.

225. Vorrichtung nach Anspruch 221, bei der auch Ventilglieder (800,834) enthalten sind, die so ausgelegt sind, daß sie in eine Stellung in dem Kombinierungsbereich gebracht werden können, in der die Ventilglieder den Fluß aus Polymermaterial durch wenigstens alle die Öffnungen (z.B.462,502), die mit dem Kombinierungsbereich kommunizieren, blockieren und verhindern.

226. Vorrichtung nach Anspruch 221, bei der der Durchgangsweg (460) mit der ersten Öffnung (462) eine voreilende Wand (OW) aufweist, die sich diagonal in Richtung auf den Anschnitt und in Richtung der Achse des Zentralkanals erstreckt und mit der voreilenden Lippe (461) der ersten Öffnung derart kommuniziert, daß der Endabschnitt der voreilenden Wand dichter an der Achse des Zentralkanals (540) als die nacheilende Lippe dieser Öffnung ist, und bei der das Ventil eine Manschette (800) umfaßt, die einen sich verjüngenden Mund aufweist, der das offene Ende der Manschette definiert und angepaßt ist, um gegen den Endabschnitt der besagten voreilenden Wand (OW) anzustoßen, um weitere Vorwärtsbewegung der Manschette in dem Zentralkanal in Richtung auf den Anschnitt (596) zu verhindern und die erste Öffnung (462) zu blockieren.

227. Vorrichtung nach einem der Ansprüche 221 bis 226, bei der die voreilende Lippe (461) der ersten Öffnung (462) innerhalb 100 bis 900 x 10⁻³ Zoll (2,54 bis 22,9 mm), z.B. 100 bis 300 x 10⁻³ Zoll (2,54 bis 7,62 mm) des Anschnitts (596)liegt.

228. Vorrichtung nach Anspruch 224 oder irgendeinem Anspruch, der von Anspruch 224 abhängt, die Antriebseinrichtungen einschließt, die wirkungsmäßig mit den Ventilgliedern (800,834) zum Antreiben der Ventilglieder verbunden sind, und bei der die Ventilglieder (800,834) und Antriebseinrichtungen (918, 860,856; 850,844,906) ausgelegt sind, um die Ventilglieder in die Lage zu versetzen, alle Öffnungen innerhalb von 15 bis 300 Centisekunden, z.B. 15 bis 75 Centisekunden, freizugeben.

229. Vorrichtung nach einem der Ansprüche 221 bis 228, bei der die Mittellinien (190,194) jeweils der ersten und der zweiten Öffnungen (462,502) im wesentlichen rechtwinklig zu der Achse des Zentralkanals (540) liegen.

230. Vorrichtung nach einem der Ansprüche 221 bis 229, bei der jeder der ersten und zweiten Durchgangswege (460,500) einen sich verjüngenden Abschnitt (478,518) angrenzend an seine Öffnung (462,502) derart aufweist, daß jede Öffnung eine kleinere Querschnittsöffnungsfläche als ein benachbarter stromaufwärts gelegener Abschnitt ihres entsprechenden Durchgangsweges aufweist.

231. Vorrichtung nach einem der Ansprüche 221 bis 230, bei der diejenigen Öffnungen, unabhängig von ihrer Nummer, die mit dem Kombinierungsbereich kommunizieren, relativ zu dem Zentralkanal (540) fest sind.

232. Vorrichtung nach Anspruch 222 oder irgendeinem Anspruch, der von Anspruch 222 abhängt, bei der der Kombinierungsbereich des Zentralkanals (540) eine gleichmäßige Querschnittsfläche aufweist.

233. Vorrichtung nach einem der Ansprüche 221 bis 232, bei der es wenigstens drei Durchgangswege (z.B.460, 480,500) mit ringförmigen Öffnungen (z.B.462,482, 502) gibt, die vorzugsweise jeweils relativ zu dem Zentralkanal (540) fest sind und von denen vorzugsweise wenigstens zwei (462,502) zu dem Kombinierungsbereich offen sind.

234. Verfahren zum Spritzgießen gemäß Anspruch 1, das das Steuern der relativen Fließraten von zwei polymeren Materialschmelzströmen, die gleichzeitig ausgeformt (coinjiziert) werden sollen, umfaßt und die Verfahrensschritte einschließt, daß zwei polymere Materialschmelzfließströme geschaffen werden und diese einer Vielzahl von Coinjektionsdüsen-Einrichtungen (296) zugeführt werden, von denen jede einen Zentralkanal mit einem offenen Ende, einen Anschnitt (596) daran und einen Polymerfließstromdurchgangsweg für jeden polymeren Materialschmelzfließstrom aufweist, wobei jeder Durchgangsweg (z.B.462,502) eine Öffnung besitzt, die sich zu dem Zentralkanal öffnet, jeder der zwei polymeren Materialschmelzfließströme zu gemeinsamen Bewegungseinrichtungen (232,234, 260,262) geführt werden zum Bewegen jedes Stromes zu seinem entsprechenden Durchgangsweg und die gemeinsamen Bewegungseinrichtungen ausgenutzt werden, um die Materialströme durch ihre Durchgangswege zu bewegen, während der Fluß von einem der Fließströme positiv teilweise blockiert wird und der Fluß des anderen Stromes nicht blockiert wird.

235. Verfahren nach Anspruch 234, bei dem das Blockieren an den Öffnungen bewirkt wird und, während eine der Öffnungen (z.B.502) positiv teilweise blockiert wird, der Verfahrensschritt des Verzögerns der Wirkung der Bewegungseinrichtungen zum Reduzieren des Flusses von polymerem Material für jede der Öffnungen eingeschlossen ist.

236. Verfahren nach Anspruch 234 oder 235, das das Zuführen in die Coinjektionsdüsen-Einrichtungen eines zusätzlichen Schmelzfließstromes durch einen Durchgangsweg und Öffnung, die zwischen den besagten zwei Durchgangswegen und Öffnungen gelegen sind, und positives Blockieren der zusätzlichen Öffnung, während der besagte eine der zwei zuerst erwähnten Fließströme teilweise blockiert wird, umfaßt.

237. Verfahren nach Anspruch 234, das das Vorsehen von fünf Schmelzfließströmen und deren Zuführung in den Zentralkanal (540) von jeder der Vielzahl von Düseneinrichtungen (296) umfaßt, von denen jede fünf Schmelzfließstromdurchgangswege aufweist, von denen jeder eine Öffnung besitzt, die sich zu dem Zentralkanal öffnet, wobei
(i) die erste Öffnung (462) näher an dem offenen Ende gelegen ist als die anderen Öffnungen zum Führen von Material zu dem Kanal für die Bildung einer Oberflächenschicht (B) der Außenseite des Gegenstandes,
(ii) die dritte Öffnung (440) weiter von dem offenen Ende als die anderen Öffnungen entfernt ist zum Leiten von Material zu dem Kanal für das Ausbilden der Obenflächenschicht (A) der Innenseite des Gegenstandes,
(iii) die zweite Öffnung (502) zwischen der ersten und der dritten Öffnung gelegen ist zum Leiten eines polymeren Materials zu dem Kanal zum Bilden einer inneren Schicht des Gegenstandes,
(iv) eine vierte Öffnung (482) zwischen der ersten und der zweiten Öffnung (462,502) gelegen ist zum Leiten eines polymeren Materials zu dem Kanal für das Ausbilden einer Zwischenschicht zwischen der ersten und der inneren Schicht des Gegenstandes und
(v) eine fünfte Öffnung (522) zwischen der zweiten und der dritten Öffnung (502,440) gelegen ist zum Leiten eines polymeren Materials zu dem Kanal zum Ausbilden einer Zwischenschicht zwischen der inneren Schicht und der Oberflächenschicht der Innenseite des Gegenstandes,
und das Verfahren weiterhin umfaßt, daß Ventilglieder (800,834) in jedem Düseneinrichtungszentralkanal (540) betätigt werden zum Blockieren, Freigeben und Steuern des Fließens und Nicht-Fließens der entsprechenden Materialien von ihren entsprechenden fünf Öffnungen in den Zentralkanal, eine gemeinsame Bewegungseinrichtung, die sowohl den Oberflächenmaterialien für die Außenseite als auch für die Innenseite zugeordnet ist, betätigt wird, um sie in und durch ihre entsprechenden Durchgangswege und Öffnungen zu bewegen, eine gemeinsame Bewegungseinrichtung, die den beiden Zwischenschichtmaterialien zugeordnet ist, betätigt wird, um diese in und durch ihre entsprechenden Durchgangswege und Öffnungen zu bewegen, und
die Schmelzfließströme durch die ersten und dritten Durchgangswege mit einer ersten Fließrate bewegt werden, während die Ventilglieder dazu verwendet werden, die erste Öffnung (462) nicht zu blockieren und die dritte Öffnung (440) teilweise zu blockieren, und/oder
der Schmelzfließstrom durch den vierten und den fünften Durchgangsweg mit einer ersten Fließrate zu bewegen, während die Ventilglieder verwendet werden, um die vierte Öffnung (482) nicht zu blockieren und die fünfte Öffnung (522) teilweise zu blockieren.

238. Verfahren nach Anspruch 237, bei dem während der Bewegung der Schmelzfließströme durch die erste und die dritte Öffnung (462,440) der Verfahrensschritt der Verwendung der Bewegungseinrichtungen erfolgt, um die Fließrate auf ein Niveau zu reduzieren, das niedriger als die erste Fließrate ist.

239. Verfahren nach Anspruch 237 oder 238, das das Anwenden der Ventilglieder (800,832) in der Coinjektionsdüsen-Einrichtung zum Injizieren eines kombinierten Stromes aus den Materialien zum Bilden des fünfschichtigen Gegenstandes umfaßt, um
(i) Fließen von polymerem Material durch die vierte, zweite und fünfte Öffnung (482,502,522) zu verhindern, während Fließen von Polymermaterial durch die dritte Öffnung (440) gestattet wird,
(ii) dann auch das Fließen von polymerem Material durch die erste Öffnung (462) zu gestatten, während weiterhin Fließen durch die vierte, zweite und fünfte Öffnung (482,502,522) verhindert wird,
(iii) Fließen von polymerem Material durch die vierte, zweite und fünfte Öffnung gestattet wird, während polymeres Material durch die erste und dritte Öffnung (462,440) fließen kann,
(iv) das Fließen von polymerem Material durch die dritte Öffnung (440) reduziert wird, indem die besagte dritte Öffnung teilweise blockiert wird, wobei die gemeinsame Bewegungseinrichtung, die der Öffnung zugeordnet ist, verwendet wird, um das Fließen von Polymermaterial zu der ersten und der dritten Öffnung zu reduzieren, und während polymeres Material durch die vierte, zweite und fünfte Öffnung fließen kann,
(v) den Fluß von polymerem Material durch die fünfte Öffnung durch teilweises Blockieren der fünften Öffnung zu reduzieren und die gemeinsame Bewegungseinrichtung, die dieser Öffnung zugeordnet ist, für das Reduzieren des Flusses aus polymerem Material zu der vierten und fünften Öffnung verwendet wird,
(vi) das Fließen von polymerem Material durch die zweite Öffnung (502) und dann durch die vierte Öffnung (482) zu beenden und
(vii) das Fließen von polymerem Material durch die zweite Öffnung (502) zu beschränken, während Fluß von polymerem Material durch die erste oder dritte Öffnung oder sowohl die erste als auch die dritte Öffnung gestattet wird, um das Material für die innere Schicht mit sich selbst durch das Material für die Innenseitenschicht zu verstricken und die innere Schicht innerhalb des Innenseiten- und/oder Außenseiten-Schichtmaterial im wesentlichen einzukapseln.

240. Verfahren nach einem der Ansprüche 234 bis 239 für Mehrkomponentenformung einer Vielzahl von Gegenständen aus wenigstens zwei dieser Schmelzfließströme, das Injektionsspritzen unter Verwendung einer Vielzahl von im wesentlichen identischen Coinjektionsdüsen-Einrichtungen (296) und Verwendung gemeinsamer Bewegungseinrichtungen (232,234,260,262), die wirken, um die im wesentlichen zwei Schmelzströme zu jeder der Düseneinrichtungen zu fördern, und Blockieren, Freigeben oder teilweises Blockieren der wenigstens zwei Schmelzströme in jede der Düseneinrichtungen (296) durch Ventilglieder (800, 832) darin umfaßt, wobei diese Ventilglieder vorzugsweise im wesentlichen identisch sind und vorzugsweise im wesentlichen gleichzeitig betätigbar sind.

241. Verfahren nach Anspruch 1 für Injektionsspritzen von mehrschichtigen Kunststoffgegenständen durch Schaffung mehrschichtiger im wesentlichen konzentrischer kombinierter Ströme aus wenigstens drei polymeren Materialien und Coinjizieren der kombinierten Ströme in Hohlräume, um die mehrschichtigen Gegenstände zu bilden, wobei die kombinierten Ströme eine äußere Strukturmaterialschicht zur Bildung der äußeren Schicht eines jeden Gegenstandes, einen Kern aus Strukturmaterial zur Bildung der inneren Schicht des Gegenstandes und eine oder mehrere Zwischenschicht(en) aus Material zur Bildung einer inneren Schicht(en) des Gegenstandes aufweisen, wobei das Verfahren die Verwendung einer Vielzahl von Coinjektionsdüsen-Einrichtungen umfaßt, von denen jede einen Anschnitt (596) an einem Ende, einen zylindrischen Zentralkanal (540), der sich zu dem Anschnitt hin öffnet, und eine Vielzahl von wenigstens drei Polymerdurchgangswegen, die mit dem Zentralkanal kommunizieren, umfaßt, von denen wenigstens der erste und der zweite Durchgangsweg ringförmig sind und ringförmige Öffnungen (462,502), die sich zu dem Zentralkanal öffnen, aufweisen, wobei die erste Öffnung (462) näher an dem Anschnitt als die anderen Öffnungen gelegen ist, zum Leiten des Strukturmaterials für die äußere Schicht in den Kanal, die dritte Öffnung (440) weiter entfernt von dem Anschnitt (596) als die erste oder zweite Öffnung gelegen ist, zum Leiten des Kernmaterials in den Kanal und die zweite Öffnung (462) angrenzend an die erste Öffnung gelegen ist, zum Leiten des Materials für die Zwischenschicht in den Kanal, und das Verfahren weiterhin das Steuern der Dicke, Gleichmäßigkeit und radialen Stellung der inneren Schicht in dem kombinierten Strom umfaßt, indem Mittel entweder in all den ringförmigen Polymerfließstromdurchgangswegen oder wenigstens in dem ersten und zweiten Durchgangsweg vorgesehen und verwendet werden zum Abgleichen des Fließens der entsprechenden Polymerfließströme, die durch die Durchgangswege hindurchgehen, derart, daß dann, wenn die entsprechenden Ströme in den Zentralkanal (540) eintreten, jeder im wesentlichen gleichförmig in Bezug auf die Werte von Druck und Temperatur um seinen Umfang herum und in dem Kombinierungsbereich der Düseneinrichtungen (296) ist, die entsprechenden Schichten, die den kombinierten Strom bilden, im wesentlichen konzentrisch relativ zueinander sind und wobei die entsprechenden Polymerströme vorzugsweise polymere Materialien in kondensierter Phase sind.

242. Verfahren nach Anspruch 241, bei dem das Kernstrukturmaterial zum Bilden der inneren Schicht des Gegenstandes konzentrisch relativ zu der Achse des Zentralkanals (540) angeordnet ist, wenn das Material zum Bilden der äußeren Schicht des Gegenstandes in den Zentralkanal eingeführt wird, und vorzugsweise die innere und die äußere Schicht im wesentlichen zentriert auf der Achse von dem Zentralkanal angeordnet sind, wenn das innere Schichtmaterial zwischen ihnen in dem Kombinierungsbereich des Zentralkanals eingeführt wird.

243. Verfahren nach Anspruch 1 zum Injektionsspritzen von Gegenständen wie Blasvorformlingen, die aus einer Vielzahl von Schichten aus Kunststoffmaterialien gebildet sind und wenigstens eine innere Strukturschicht, eine innen gelegene Schicht und eine äußere Strukturschicht enthalten, wobei das Verfahren das Verdrängen jedes polymeren Materials zur Bildung einer Schicht des Gegenstandes von einer entsprechenden Quelle desselben zu einer Vielzahl von Coinjektionsdüsen-Einrichtungen (296), von denen jede einen Zentralkanal (540) mit einem Polymerstromkombinierungsbereich aufweist und einen Durchgangsweg und eine zugehörige Öffnung für jede zu bildende Schicht aufweist, und die Durchgangswegöffnungen (z.B.462,502,440) sich zu dem Zentralkanal (540) öffnen, und zum Steuern der endgültigen seitlichen Lage einer innen gelegenen Schicht in einem Gegenstand im Verlauf ihrer Spritzung umfaßt:
getrenntes Kanalisieren der Ströme der verdrängten Polymermaterialien jeweils zu einem Durchgangsweg in jeder Düse,
kontinuierliches Steuern der Verlagerung von jedem polymeren Material und
Steuern der radialen Lage der innen gelegenen Schicht innerhalb des Kombinierungsbereichs des Zentralkanals durch positives Steuern des Fließens und Nicht-Fließens der Ströme zum Bilden der äußeren und innen gelegenen Schichten durch ihre entsprechenden Öffnungen, indem die Ströme an Fließabgleicheinrichtungen (z.B.464,466,506) vorbei bewegt werden, die in ihren entsprechenden Durchgangswegen betriebsmäßig arbeiten, um selektiv gewünschte Fließmuster für jeden der besagten Ströme zu schaffen, und
Verlagern der äußeren und innen gelegenen Schichtmaterialien und des bzw. der Innenschichtmaterial(ien) durch ihre entsprechenden Durchgangswege zum Erreichen ihrer entsprechenden gewünschten Fließmuster, um dadurch ringförmige Ströme aus den entsprechenden Materialien gleichmäßig radial in dem Kombinierungsbereich anzuordnen und die radiale Lage des inneren Schichtmaterials in dem kombinierten Fließstrom in dem Kombinierungsbereich der Düseneinrichtungen (296) zu steuern.

244. Verfahren nach Anspruch 243, das das Einführen des äußeren Strukturmaterials für jeden Zentralkanal (540) in einem Winkel relativ zu dem Zentralkanal-Kombinierungsbereich und Einführen des innersten Strukturmaterials axial als ein fester Strom in den Kombinierungsbereich umfaßt und wobei das Verfahren auch die Verfahrensschritte umfaßt, daß die Öffnungen der äußeren und innen gelegenen Schichtmaterialien körperlich blockiert werden und diese Schichten in ihren Durchgangswegen mit Druck beaufschlagt werden, während ihre Öffnungen blockiert sind, um dadurch die Übergangszeiten, die erforderlich sind, um die gewünschten Fließmuster zu erreichen und die volumenmäßigen Flüsse der äußeren und inneren Strukturmaterialien in den Kombinierungsbereich zu steuern, zu minimalisieren.

245. Verfahren nach Anspruch 243, das das Einführen des äußeren Strukturmaterials zu jedem Zentralkanal (540) in einem Winkel relativ zu dem Zentralkanal-Materialkombinierungsbereich und durch Einführen des inneren Strukturmaterials axial als ein fester Strom in den Kombinierungsbereich umfaßt und wobei das Verfahren die Schritte enthält, daß das Polymerschmelzmaterial für die äußere Schicht in seinem Durchgangsweg mit Druck beaufschlagt wird, während seine Öffnung (462) blockiert wird, dann diese Öffnung freigegeben wird und dann als Teil des Verdrängungsschrittes ein gleichmäßiges Einsetzen des Fließens des äußeren Strukturmaterials von allen Punkten einer Durchgangswegöffnung (462) in den Düsenzentralkanal (540) bewirkt wird.

246. Verfahren nach Ansprüchen 243 bis 245, bei dem der Verdrängungsschritt umfaßt, daß die Öffnungen (462) für das äußere Material über eine Zeit, die ausreichend ist, um eine kontinuierliche, gleichmäßige Rate und gleichmäßiges Volumen des Flusses des äußeren Materials während 90% des Spritzzyklus zu erhalten, unblockiert gelassen werden.

247. Verfahren nach einem der Ansprüche 243 bis 246, das weiterhin die Schritte umfaßt, daß das innen gelegene Schichtmaterial oder dieses Material und das Innenschichtmaterial mit Druck beaufschlagt wird, während die Öffnung (440) dafür blockiert ist, und dann die Öffnung freigegeben wird und eine gleichmäßige Anfangsfließrate von dem oder jedem Material über seine Durchgangswegöffnung beim Beginn des Spritzzyklus bewirkt wird und ein kontinuierliches Fließen in Werten der Geschwindigkeit und der volumetrischen Rate aller Materialien während des größten Teils des Spritzzyklus aufrechterhalten werden.

248. Verfahren nach Anspruch 244, bei dem der Schritt des Beaufschlagens mit Druck während des Verdrängungsschrittes durchgeführt wird, um das Polymerschmelzmaterial für die äußere Schicht, während es sich in seinem Durchgangsweg befindet und seine Öffnung (z.B.462) blockiert ist, einem ersten Druck zu unterwerfen, der ausreichend wäre um zu bewirken, daß das Material in den Zentralkanal (540) fließt, wenn seine Öffnung (462) unblockiert wäre, und vor dem Fließenlassen des äußeren Schichtmaterials durch seine Öffnung Einrichtungen (232) betätigt werden,um das äußere Schichtmaterial in seinem Durchgangsweg zu verlagern und es dadurch auf einen zweiten Druck anzuheben, der größer als der erste Druck ist und ausreicht, um, wenn seine Öffnung (462) nicht blockiert ist, ein Herausquellen dieses Materials als ein Einsetzen von ringförmigem Fluß von allen Punkten seiner Öffnung in den Zentralkanal (540) zu erzeugen, wobei der entstehende fließende Strom gleichmäßig ist, wenn er relativ zu einer Ebene rechtwinklig zu der Achse des Zentralkanals betrachtet wird, der zweite Druck geringer als der ist, der Lecken des äußeren Schichtmaterials vorbei an den Flußblockierungsgliedern (800,832) in den Kanal erzeugen würde, und während und nach dem Freigeben der äußeren Schichtöffnung (462) die Rate der Polymerverlagerung erhöht wird, um ein gewünschtes Muster einer konstanten Fließrate des Materials durch die für es vorgesehene Öffnung (462) in den Zentralkanal (540) anzunähern und aufrecht zu erhalten.

249. Verfahren nach Anspruch 1, das die Verwendung einer Vielzahl von Düseneinrichtungen (296) beinhaltet, von denen jede ein offenes Ende mit einem Anschnitt (596) daran, einen sich axial erstreckenden zylindrischen Zentralkanal (540) in Kommunikation mit dem Anschnitt und einen Durchgangsweg mit einer ringförmigen Öffnung (z.B.502) in Kommunikation mit dem Düsenzentralkanal aufweist, und das Zuführen von wenigstens ersten und zweiten polymeren Materialien zu jeder Düseneinrichtung für Coinjektion von diesen umfaßt, wobei das Verfahren weiterhin die Verfahrensschritte umfaßt, daß
(a) das zweite polymere Schmelzmaterial in dem Durchgangsweg zur Verfügung gestellt und verhindert wird, daß das Material durch die Öffnung (502) in den Zentralkanal (540) fließt,
(b) ein Schmelzstrom aus dem ersten polymeren Material durch den Zentralkanal (540) durch die Öffnung (502) fließt,
(c) während das erste polymere Material durch den Zentralkanal fließt und während weiterhin verhindert wird, daß das zweite Material durch die Öffnung (502) fließt, das zweite Material in dem Durchgangsweg Druck ausgesetzt wird, der an allen Punkten um die Öffnung herum größer als der Umgebungsdruck des ersten Materialstromes an Umfangsstellungen, die diesen Punkten entsprechen, ist, wobei der angewendete Druck beispielsweise gleichmäßig an allen Punkten um die ringförmige Öffnung herum ist, und
(d) nach Beaufschlagen des zweiten Materials mit Druck gestattet wird, daß es in den Kanal (540) durch die Öffnung (502) fließt, wobei der auf das zweite Material angewendete Druck ausreichend ist, um für Einsetzen des Fließens des zweiten Materials von allen Punkten um die Öffnung herum im wesentlichen zur gleichen Zeit zu sorgen.

250. Verfahren nach Anspruch 249, bei dem während des Schrittes (d) Druck auf dem zweiten Material in dem Durchgangsweg aufrechterhalten wird, der ausreichend ist, um für eine im wesentlichen gleichmäßige und kontinuierlich anhaltende Fließrate gleichzeitig von allen Punkten um die Öffnung (502) herum in den Zentralkanal (540) zu sorgen und diese aufrecht zu erhalten.

251. Verfahren nach Anspruch 249 oder Anspruch 250, bei dem das Verhindern und Gestatten von Fließen des zweiten Materials bewirkt wird, indem Ventilglieder (800,834) verwendet werden, die in dem Zentralkanal (540) der Düseneinrichtung (296) arbeiten.

252. Verfahren nach Anspruch 249,250 oder 251, bei dem die ringförmige Öffnung (502) eine Mittellinie aufweist, die im wesentlichen rechtwinklig zu der Achse des Zentralkanals ist.

253. Verfahren nach einem der Ansprüche 249 bis 252 zum Herstellen von mehrschichtigen gespritzten Gegenständen mit inneren Schichten, bei dem ein oder mehrere Schmelzmaterialien entlang des Zentralkanals (540) jeder Düseneinrichtung (296) fließen gelassen werden und das zweite Material zum Bilden der inneren Schicht des Gegenstandes mit Druck beaufschlagt wird auf einen Druck, der größer als der Umgebungsdruck des bereits fließenden einen oder der mehreren Materialien ist, und danach im wesentlichen gleichzeitig von allen Punkten um die Öffnung (502) herum so fließen gelassen wird, daß es eine Schicht bildet, die das polymere Schmelzmaterial, das schon in dem Zentralkanal fließt, umgibt.

254. Verfahren nach Anspruch 253, bei dem der angelegte Druck ausreichend ist, um für Einsetzen des Fließens des inneren Schichtmaterials zu sorgen und dieses mit einer ringförmigen voreilenden Flanke zu versorgen, die ausreichend dick an jedem Punkt um diese herum ist, daß die innere Schicht in einem Randendbereich des gespritzten Gegenstandes wenigstens 1% der Gesamtdicke des Gegenstandes an dem Randendbereich ausmacht.

255. Verfahren nach Anspruch 254, bei dem der Gestattungsschritt den Schritt umfaßt, daß das Material weiterhin einem Druck ausgesetzt wird, der ausreichend ist, um eine im wesentlichen gleichmäßig dicke und weiter fortgesetzt konstante Fließrate des inneren Schichtmaterials gleichzeitig über alle Punkte der Öffnung in den Zentralkanal (540) aufrechtzuhalten.

256. Verfahren nach Anspruch 253, 254 oder 255, bei dem jede Coinjektionsdüsen-Einrichtung ein Teil einer Mehrfach-Polymerinjektions-Spritzmaschine mit einem Angußverteiler-System zum Führen von polymeren Schmelzmaterialien von ihren Quellen durch Schmelze-Verschiebungseinrichtungen (232,234,252) zu den Düseneinrichtungen ist und wobei das Verfahren umfaßt, daß die ringförmige Öffnung (502) jeder Düseneinrichtung körperlich blockiert wird und während einer derartigen Blockierung der Öffnung polymeres Schmelzmaterial für eine oder mehrere Schichten in das Angußverteiler-System bewegt wird und während polymeres Schmelzmaterial für eine oder mehrere andere Schichten als die innere Schicht durch den Zentralkanal (540) an der blockierten Öffnung (502) vorbei fließt, das polymere Schmelzmaterial zum Bilden der inneren Schicht in dem Angußverteiler-System einem Druck unterworfen wird, der an allen Punkten um die blockierte Öffnung größer als der Umgebungsdruck des Schmelzmaterials, das in dem Zentralkanal (540) fließt, an Umfangspunkten ist, die diesen Punkten um die Öffnung entsprechen, und daß diese Öffnung freigegeben wird, um Einsetzen von Fließen in den Zentralkanal des inneren Schichtmaterials von allen Punkten um die Öffnung zur gleichen Zeit zu erreichen.

257. Verfahren nach Anspruch 256, bei dem die blockierte Öffnung (502) im wesentlichen rechtwinklig zu der Achse des Zentralkanals (540) verläuft und das körperliche Blockieren und Freigeben des Flusses durch die Öffnung durch Betätigen von Ventilgliedern (800,832) durchgeführt wird, die in dem Zentralkanal (540) der Düseneinrichtungen (296) gelegen sind.

258. Verfahren nach Anspruch 256 oder 257, bei dem der Druckbeaufschlagungsschritt durchgeführt wird durch Betätigen einer Polymerzuführungseinrichtung (252) außerhalb des Angußverteiler-Systems für das Innenschichtmaterial.

259. Verfahren nach einem der Ansprüche 256 bis 258, bei dem der Druckbeaufschlagungsschritt in zwei Stufen bewirkt wird, zuerst durch Vorsehen eines Restdruckes auf dem Innenschichtmaterial, der tiefer als der gewünschte Druck ist, bei dem es durch die unblockierte Öffnung (502) fließen soll, und dann vor oder beim Bewirken des Fließenlassens- oder Freigabeschrittes durch Anheben des Druckes auf den gewünschten Druck, bei dem das innere Schichtmaterial durch die Öffnung fließen soll.

260. Verfahren nach Anspruch 259, bei dem der Druckanhebungsschritt schnell bewirkt wird mit einer Rate von 500 bis 1000 z.B. 700 psi/Centisekunde (34,5 bis 68,9, z.B. 48,2 bar/Centisekunde).

261. Verfahren nach Anspruch 259, bei dem der Restdruck durch hin- und hergehende Schmelzverschiebungseinrichtungen (252) für das innere Schichtmaterial eingestellt wird.

262. Verfahren nach Anspruch 1, das die Verwendung einer Mehrfachpolymer-Injektionsspritzmaschine mit Einrichtungen (z.B.232,234,252) zum Verschieben von Polymerschmelzmaterialien von ihren Quellen entlang Angußverteilern (z.B. in 288) zu Durchgangswegen und zugeordneten Öffnungen einer Vielzahl von Coinjektionsdüsen-Einrichtungen (296) für die Abgabe an einen Zentralkanal (540) in jeder Düseneinrichtung einschließt, wobei das Verfahren weiterhin die Schritte umfaßt, daß eine Öffnung (502) einer Düseneinrichtung körperlich blockiert wird um zu verhindern, daß Polymerschmelzmaterial in dem Durchgangsweg, der zu der Öffnung führt, in den Zentralkanal (540) fließt, und daß, während die Öffnung so blockiert ist, die Verschiebungseinrichtung (z.B.252) für das besagte Polymerschmelzmaterial zurückgezogen wird, um frisches Polymerschmelzmaterial von seiner Quelle stromaufwärts von der Verschiebungseinrichtung und außerhalb von dem Angußverteiler-System eingebracht wird, wobei der Druck der frischen Schmelze, der in dem Angußverteiler dafür erzeugt wird, ein Restdruck ist, der ausreichend ist, um die Rate des Zeitansprechens des Polymerschmelzmaterials in dem Angußverteiler (in 288) auf nachfolgende Bewegung der Verschiebungseinrichtung (252) zu erhöhen, und der Betrag des Zurückziehens und der Druck im Zusammenwirken für eine ausreichende Menge frischer Schmelze für die entsprechende Schicht des Gegenstandes, der spritzgeformt werden soll, sorgen; und daß dann vor dem Freigeben der Öffnung (502) die Verschiebungseinrichtung (252) in Richtung auf die Öffnung betätigt wird, um das Schmelzmaterial weiter zusammenzudrücken und den Druck in dem Angußverteiler auf ein Niveau anzuheben, so daß er größer als der Restdruck ist und ausreichend erhöht ist, damit dann, wenn die Öffnung (502) freigegeben ist, Fließen des unter Druck stehenden Polymerschmelzmaterials im wesentlichen gleichmäßig von allen Punkten in der Öffnung in den Zentralkanal (540) beginnt.

263. Verfahren nach Anspruch 262, bei dem der erhöhte Druck ausreichend ist, um ein Einsetzen von Fließen zu bewirken, wodurch das Schmelzmaterial eine voreilende Kantendicke von einer Größenordnung an jedem Punkt um seinen Umfang herum derart aufweist, daß in einem Randendbereich des Gegenstandes die besagte Schicht wenigstens 1% der Gesamtdicke des Randendabschnittes ist.

264. Verfahren nach Anspruch 262 oder 263, umfassend, daß nach dem Freigeben der Öffnung (502) fortgesetzt wird, das Material einem Druck auszusetzen, der ausreichend ist, um einen im wesentlichen gleichmäßig dicken Fluß desselben bei einer fortgesetzt gleichen Rate des Flusses von allen Punkten um die Öffnung in den Zentralkanal (540) aufrechtzuerhalten.

265. Verfahren nach Anspruch 1, das die Verwendung einer Mehrfachpolymer-Injektionsspritzmaschine einschließt, die ein Angußverteiler-System (z.B. in 288), das sich von den Verschiebungseinrichtungen (z.B.252) erstreckt, für wenigstens ein Polymerschmelzmaterial zu einer Vielzahl von Coinjektionsdüsen-Einrichtungen (296) umfaßt, von denen jede einen entsprechenden Durchgangsweg für das Polymerschmelzmaterial und eine Öffnung (502) aufweist, die ihrerseits den Durchgangsweg mit einem Zentralkanal (540) in der Düse verbindet, wobei das Verfahren weiterhin die Schritte umfaßt, daß für das wenigstens eine Polymermaterial die Öffnung (502) einer Düse (596) körperlich blockiert wird, um zu verhindern, daß Polymerschmelzmaterial in dem Durchgangsweg in den Zentralkanal (540) fließt, und während die Öffnung so blockiert ist, Polymerschmelzmaterial in diesen Abschnitt des Angußverteiler-Systems, das sich zu der blockierten Öffnung (502) erstreckt, bewegt wird, wobei das Niveau von Restdruck des in diesen Abschnitt des Angußverteiler-Systems bewegten Polymerschmelzmaterials erkannt wird, und das Polymerschmelzmaterial in dem Angußverteiler-System in Richtung auf die Öffnung (502) verschoben wird, um das Material zu komprimieren und den Druck in dem Angußverteiler-System auf ein Niveau anzuheben, so daß er größer als der zuerst genannte Druck ist und daß er ausreichend angehoben ist, damit beim Freigeben der Öffnung (502) Einsetzen von Fließen des vorher unter Druck gesetzten Polymerschmelzmaterials im wesentlichen gleichzeitig und gleichmäßig von allen Punkten der Öffnung in den Zentralkanal (540) eintritt.

266. Verfahren nach Anspruch 265, das das Einstellen eines Einsetzens von Fluß, der gleichmäßig ist, umfaßt.

267. Verfahren nach Anspruch 1 zum Bilden mehrschichtiger Kunststoffgegenstände, von denen jeder einen Randkantenabschnitt, erste und zweite Oberflächenschichten (B,A) und wenigstens eine innere Schicht (D) dazwischen aufweist, das das Verwenden einer Spritzformmaschine umfaßt mit einem Angußverteiler-System (z.B. in 288) zum Fördern von Polymerschmelzmaterialien zu einer Vielzahl von Coinjektionsdüsen-Einrichtungen (296), von denen jede einen Fließdurchgangsweg für jedes Schmelzmaterial zum Bilden einer Schicht des Gegenstandes, einen Zentralkanal (540) und eine Öffnung für jeden Durchgangsweg in Kommunikation mit dem Zentralkanal, Einrichtungen (z.B.232,234,252) zum Verschieben jedes der Schmelzmaterialien zu den Öffnungen (z.B. 464,502,440) und in den Düsenzentralkanal, Einrichtungen zum Einführen der Schmelzmaterialien in das Angußverteiler-System und Glieder (800,832) zum körperlichen Blockieren und Freigeben der Öffnungen besitzt, wobei das Verfahren weiterhin die Schritte umfaßt, daß wenigstens die Öffnung (502) für das Material zur Bildung der inneren Schicht blockiert wird, um Fließen desselben in den Zentralkanal (540) zu verhindern, Polymerschmelzmaterialien in das Angußverteiler-System bewegt werden, das Niveau von Restdruck der Polymerschmelzmaterialien, die in das Angußverteiler-System bewegt worden sind, erkannt wird, das Schmelzmaterial (C) für die innere Schicht in seinem Durchgangsweg in Richtung auf seine Öffnung (502) verschoben wird, um das Material zu komprimieren und den Druck dieses Materials auf ein Niveau anzuheben, daß er größer als der zuerst erkannte Druck ist, daß das Material (A) für die erste Oberflächenschicht in und entlang des Zentralkanals (540) fließen gelassen wird, während Fluß des Materials (C) für die Innenschicht in den Zentralkanal verhindert wird, daß das Material (B) für die zweite Oberflächenschicht in und entlang des Zentralkanals als ein ringförmiger Strom um den Fluß des Materials (A) für die erste Oberflächenschicht fließen gelassen wird, die Öffnung (502) des vorher unter Druck gesetzten Materials (C) für die innere Schicht freigegeben wird, um dieses Material in den Zentralkanal und in den Zwischenraum zwischen die fließenden inneren und äußeren Oberflächenmaterialien (A,B) einzulassen, das Niveau des Druckes des inneren Schichtmaterials (C) beim Freigeben seiner Öffnung (502) derart ist, daß sein Einsetzen von Fließen schnell und im wesentlichen gleichzeitig und gleichmäßig, z.B. gleichmäßig dick von allen Punkten seiner Öffnung in den Zentralkanal (540) eintritt, um eine ringförmige Schicht zwischen den fließenden ersten und zweiten Oberflächenschichtmaterialien zu bilden, und derart, daß die voreilende Kante des fließenden inneren Schichtmaterials (C) in einer Ebene im wesentlichen rechtwinklig zu der Achse des Zentralkanals liegt, wodurch das Spritzen des kombinierten Fließstromes in den Injektionshohlraum (102), der mit der besagten Düse (296) verbunden ist, dazu führt, daß das innere Schichtmaterial sich im wesentlichen gleichmäßig in und um den Randkantenabschnitt des Gegenstandes erstreckt.

268. Verfahren nach Anspruch 267 zum Bilden eines offenendigen, fünfschichtigen Kunststoffgegenstandes, der zwischen den Oberflächenschichten eine innere Schicht (C) und zwei Zwischenschichten (D,E) entsprechend jeweils zwischen der inneren Schicht und jeder Oberflächenschicht (A,B) aufweist, wobei die Injektionsspritzmaschine eine Vielzahl von Coinjektionsdüsen-Einrichtungen (296) besitzt, von denen jede einen Polymerschmelzmaterial-Fließdurchgangsweg für jedes dieser Materialien und zugehörige Öffnungen (462,482,502,522,440), die sich zu dem Zentralkanal (540) öffnen, Einrichtungen (232,234, 252,260,262) zum Verschieben jedes der Polymerschmelzmaterialien, das in das Angußverteiler-System eingeführt wird, zu den Öffnungen und in den Zentralkanal von jeder Coinjektionsdüse und Glieder (800,834) zum körperlichen Blockieren und Freigeben von wenigstens den Öffnungen für die Materialien zum Bilden der inneren und der Zwischenschichten (C,D,E) aufweist, wobei das Verfahren umfaßt, daß diese Öffnungen blockiert werden, um das Fließen der inneren (C) und Zwischenschicht(D,E)Materialien in den Zentralkanal (540) jeder der Düseneinrichtungen zu verhindern, Polymerschmelzmaterialien in das Angußverteiler-System bewegt werden und das Niveau von Restdruck der Polymerschmelzmaterialien, die in das Angußverteiler-System bewegt worden sind, erkannt wird, danach die Polymerschmelzmaterialien für die innere Schicht (C) und die Zwischenschichten (D,E) in Richtung auf ihre blockierten Öffnungen (502,522, 482) verdrängt werden, um die Materialien zu komprimieren und den Druck in dem System für diese Materialien auf ein Niveau anzuheben, daß er größer als der zuerst erkannte Druck ist und zwar derart, daß beim Freigeben der Öffnungen (502,522,482) der vorher unter Druck gesetzten inneren und Zwischenschichtmaterialien das Einsetzen des Fließens jeweils des Innenschicht- (C) und der Zwischenschicht-(D,E) Materialien vorzugsweise ringförmig, im wesentlichen gleichzeitig und gleichmäßig von ihren entsprechenden Öffnungen in den Zentralkanal (540) jeder Düseneinrichtung eintritt, und beim Spritzen das Innenschichtmaterial (C) und die Zwischenschichtmaterialien (D,E) im wesentlichen gleichmäßig in und um den Endabschnitt jedes Gegenstandes enden und jedes in einer Ebene im wesentlichen rechtwinklig zu einer Mittelachse des Gegenstandes endet.

269. Verfahren nach Anspruch 267 oder 268, das weiterhin den Schritt umfaßt, daß die Rate der Verschiebung von Schmelzmaterial oder einer beliebig ausgewählten Anzahl von Schmelzmaterialien zur Bildung einer Schicht oder von Schichten zwischen den Oberflächenschichten (A,B), wenn die Öffnung dafür freigegeben ist, erhöht wird, um im wesentlichen konstante Fließrate des Materials bzw. der Materialien in den Kanal (540) zu erreichen und aufrecht zu erhalten.

270. Verfahren nach Anspruch 1 zum Spritzgießen mehrschichtiger Kunststoffgegenstände, von denen jeder eine äußere Oberfläche (B), eine innere Oberfläche (A) und eine oder mehrere innere Schichten (C,D,E) dazwischen aufweist, das die Verwendung einer Spritzmaschine umfaßt, die mit einer Vielzahl von Coinjektionsdüsen-Einrichtungen (296) ausgestattet ist, von denen jede ein offenes Ende mit einem Anschnitt (296), einen sich axial erstreckenden zylindrischen Zentralkanal (540) in Kommunikation mit dem Anschnitt, einen Durchgangsweg für jeden polymeren Materialstrom zur Bildung einer Schicht des Gegenstandes besitzt, wobei der Durchgangsweg für den oder einen inneren Schichtstrom (C,D,E) über eine ringförmige Öffnung (502, 522,482) mit dem Zentralkanal kommuniziert, die ringförmige Öffnung eine Mittellinie im wesentlichen rechtwinklig zu der Achse des Zentralkanals aufweist und der Durchgangsweg für den äußeren Oberflächenschichtstrom (B) auch eine ringförmige Öffnung (464) in Kommunikation mit dem Zentralkanal an einer Stelle zwischen dem Anschnitt (596) und der Öffnung oder den Öffnungen (502,522,482) für den inneren Schichtstrom oder die inneren Schichtströme aufweist, die äußere Schichtöffnung (464) ihre Mittellinie im wesentlichen rechtwinklig zu der Achse des Zentralkanals besitzt und die Maschine Einrichtungen (234) zum Schaffen eines Flusses aus dem Material zur Bildung der inneren Oberflächenschicht (A) in dem Zentralkanal (540) von einer Stelle weiter entfernt von dem Anschnitt (596) als irgendeine der vorgenannten Öffnungen umfaßt, und wobei das Verfahren weiterhin die Schritte umfaßt, daß:
ein oder mehrere polymere Materialien kondensierter Phase als der oder ein Innenschichtschmelzstrom verwendet wird,
der innere Schichtschmelzstrom (A) in den Zentralkanal (540) als ein Kernstrom vorbei an der oder jeder inneren Schmelzstromöffnung (502,522,482) fließen gelassen wird,
der äußere Schichtschmelzstrom (B) in den Zentralkanal fließen gelassen wird, um den darin fließenden Kernstrom zu umgeben,
die kombinierten fließenden Ströme für die äußere und die innere Schicht (B,A) mit einem ausgewählten Umgebungsdruck in dem Zentralkanal beaufschlagt werden,
der oder ein Innenschichtschmelzstrom (C,D oderE) in den Durchgangsweg dafür eingelassen wird, mit einem ausgewählten ersten Druck der oder ein Innenschichtschmelzstrom (C,D oder E) an der Öffnung dafür beaufschlagt wird, wobei der erste Druck unterhalb des Druckes liegt, der relativ zu dem Umgebungsdruck bewirken würde, daß das Innenschichtmaterial in den Zentralkanal (540) fließt,
der erste Druck auf ein Niveau eingestellt wird, das gleich oder etwas unterhalb des besagten Umgebungsdruckes ist, um den Innenschichtschmelzstrom zu komprimieren, um diesen Strom mit einem erhöhten Fließansprechen auszustatten, wenn Einsetzen von Fließen in den Zentralkanal (540) in Gang gesetzt wird, und um Rückströmen der schon fließenden Materialien (B,A) in die besagte Innenschichtöffnung zu verhindern, und
schnelles Einsetzen von Fließen des besagten Innenschichtschmelzstromes (C,D oder E) durch die dafür vorgesehene Öffnung in den Zentralkanal in Gang gesetzt wird, indem eine plötzliche Änderung in den relativen Drücken zwischen dem Innenschichtmaterial (C,D oder E) an der besagten Öffnung und dem Umgebungsdruck in dem Zentralkanal erzeugt wird, wodurch der Druck des Innenschichtmaterials schnell auf ein Niveau verändert wird, das ausreichend hoch relativ zu dem Umgebungsdruck ist, so daß das Einsetzen von Fließen als ein Ringstrom in den Zentralkanal im wesentlichen gleichzeitig von allen Punkten um diese besagte Öffnung (502,522,482) herum eintritt.

271. Verfahren nach Anspruch 270, bei dem die relative Druckänderung entweder durch schnelles Erhöhen des Druckes des besagten Innenschichtmaterials oder durch Senken des Umgebungsdruckes der Ströme (B,A), die bereits in den Zentralkanal (540) fließen, oder durch eine Kombination der Druckerhöhungs- und Drucksenkungsmaßnahmen bewirkt wird.

272. Verfahren nach Anspruch 270 oder 271, das das Spritzen von drei Innenschichtmaterialien (C,D und E) umfaßt, wobei es für jedes derselben in jeder Düse (296) einen Durchgangsweg mit seiner eigenen ringförmigen Öffnung (502,522,482) gibt, die mit dem Zentralkanal (540) kommuniziert, die Öffnungen axial einander dicht benachbart liegen, und das Verfahren das Fließenlassen jedes Innenschichtmaterials als ein unabhängiger Strom in den Zentralkanal der Düse umfaßt.

273. Verfahren nach Anspruch 270 oder 271, das das Spritzen von drei Innenschichtmaterialien (C,D u. E) umfaßt, wobei es für jedes derselben einen Durchgangsweg gibt und die Durchgangswege mit der wenigstens einen ringförmigen Öffnung kommunizieren, und das Verfahren das mit Druck Beaufschlagen jedes der inneren Materialien und Bewirken, daß sie gleichzeitig durch die Öffnung in den Zentralkanal (540) als ein kombinierter Innenschichtstrom fließen, umfaßt.

274. Verfahren nach Anspruch 1, bei dem ein Schmelzstrom aus polymerem Material durch ringförmige Öffnungen in die Zentralkanäle (540) einer Vielzahl von Coinjektionsdüsen-Einrichtungen eingelassen wird, wobei jede Düseneinrichtung (296) ein offenes Ende mit einem Anschnitt (596) daran, einen sich axial erstreckenden, z.B. zylindrischen Zentralkanal (540) in Kommunikation mit dem Anschnitt und einen Durchgangsweg (500), der sich durch eine ringförmige Öffnung (z.B. 502) zu dem Düsenzentralkanal öffnet, umfaßt, die Öffnung (502) eine Mittellinie im wesentlichen rechtwinklig zu der Zentralkanal-Achse aufweist und das Verfahren weiterhin die Schritte umfaßt, daß
(a) ein Schmelzstrom aus einem polymeren Material in vorzugsweise kondensierter Phase in dem Durchgangsweg bereitgestellt wird, während verhindert wird, daß er durch die Öffnung (502) fließt,
(b) das Schmelzmaterial, während weiterhin verhindert wird, daß es durch die Öffnung (502) fließt, in dem Durchgangsweg einem Anfangsdruck unterworfen wird, der wenigstens ausreichend ist um zu bewirken, daß das Material in den Zentralkanal (540) fließt, und
(c) das unter Druck stehende Material durch die Öffnung fließen gelassen wird, wobei sein anfängliches Fließen im wesentlichen gleichmäßig und gleichzeitig von allen Punkten des ringförmigen Durchgangsweges (500) in den Zentralkanal (540) eintritt.

275. Verfahren nach Anspruch 274, bei dem das polymere Material mit einem Anfangsdruck beaufschlagt wird, der wenigstens 20% größer als das Minimum ist, das notwendig ist, damit das Material in den Zentralkanal (540) fließt.

276. Verfahren nach Anspruch 274 oder 275, bei dem der Anfangsdruck ausreichend ist, um das Material in dem Durchgangsweg angrenzend an die Öffnung (502) auf eine Dichte von 2 bis 5% oder um noch mehr höher, als es seiner atmosphärischen Dichte entspricht, zu verdichten.

277. Verfahren nach einem der Ansprüche 274 bis 276, bei dem Schritt (c) umfaßt, daß ein Druck auf dem Material aufrechterhalten wird, der ausreichend ist, um einen im wesentlichen gleichmäßigen Anfangsfluß und fortgesetzte konstante Fließrate gleichzeitig von allen Punkten der Öffnung (502) in den Zentralkanal (540) einzustellen und aufrechtzuerhalten.

278. Verfahren nach einem der Ansprüche 269 bis 277 zum Einführen des Materials (z.B.C) von der besagten ringförmigen inneren Durchgangswegöffnung (502) in den Zentralkanal (540) jeder Düseneinrichtung (296) so, daß es einen Strom aus einem anderen Schmelzmaterial (z.B.A), der bereits in dem Zentralkanal fließt, umgibt, umfassend:
daß das andere Schmelzmaterial (A) durch den Düsenzentralkanal (540) von einer Stelle stromaufwärts von der ringförmigen Öffnung (502) fließen gelassen wird, während Fließen des ersten Materials (C) in den Zentralkanal von der Öffnung (502) verhindert wird, Beaufschlagen des ersten Materials (C) in dem Durchgangsweg (500) mit Druck, während weiterhin sein Fließen verhindert wird, um das erste Material mit einem Druck zu beaufschlagen, der hinreichend größer als der Umgebungsdruck in dem Düsenzentralkanal (540) ist und hinreichend größer als der Druck ist, der dem besagten anderen fließenden Material (A) mitgeteilt worden ist, um so das erste Material (C) in dem Durchgangsweg angrenzend an die Öffnung (502) zu verdichten und sicherzustellen, daß der Anfangsfluß des ersten Materials gleichzeitig und gleichmäßig von allen Punkten um die dafür vorgesehene Durchgangswegöffnung herum eintritt, wenn das Material dort hindurch fließen gelassen wird.

279. Verfahren nach Anspruch 278, bei dem das erste Material (C) in die Düse (296) von einem ersten Durchgangsweg (500) und zugeordneter ringförmiger Öffnung (502) zugeführt wird, das besagte andere Material (A) in die Düse durch eine Öffnung (440) eingeführt wird, die weiter entfernt von dem Anschnitt als die erste Öffnung (502) gelegen ist, und ein weiteres Schmelzmaterial (B) in die Düse durch einen weiteren Durchgangsweg (460) und zugeordnete ringförmige Öffnung (464), die zwischen der ersten Öffnung (502) und dem Anschnitt gelegen ist, zugeführt wird und vor dem Fließenlassen des ersten Materials durch die erste Öffnung (502) das weitere Schmelzmaterial durch den weiteren Durchgangsweg (460) und die Öffnung (464) so fließen gelassen wird, daß es den bereits schon fließenden Strom aus dem besagten anderen Material, das durch die dafür vorgesehene Öffnung (440) geströmt ist, umgibt, und das unter Druck stehende erste Material (C) von der ersten Öffnung (502) zu der Düse (296) bei einem Druck eingelassen wird, der ausreichend ist um zu bewirken, daß das erste Material um das schon fließende andere Material (A) fließt und sich darum ringförmig verteilt, um dadurch einen im wesentlichen konzentrischen kombinierten Strom zu schaffen, der einen radial gleichmäßigen Kern aus dem bereits fließenden anderen Material von der dafür vorgesehenen Öffnung (440), eine zwischengeschaltete gleichmäßige Schicht (C), die diesen Kern von der ersten Öffnung (502) umgibt, und eine umschließende gleichmäßige Schicht (B) aus Material von der weiteren Öffnung (464) umfaßt.

280. Verfahren nach Anspruch 279, bei dem der Druck, mit dem das erste Material beaufschlagt wird, wenigstens 20% höher als der Druck der bereits fließenden anderen und weiteren Materialien ist.

281. Verfahren nach einem der Ansprüche 274 bis 280, umfassend, daß das innere Material (C), wenn es fließengelassen wird, mit einem zusätzlichen Druck beaufschlagt wird, um einen effektiven Gesamtdruck aufrecht zu erhalten, der ausreichend ist, um eine im wesentlichen konstante Fließrate des besagten Materials durch die zweite Öffnung in den Kanal (540) einzustellen und aufrecht zu erhalten.

282. Verfahren nach Anspruch 274 oder 279, bei dem jede Düseneinrichtung (296) Durchgangswege (z.B.460,480, 500,520) und Öffnungen (464,482,502,522) zum Fördern einer Mehrzahl von Schmelzmaterialien (z.B. B,E,C,D) in deren Zentraldurchgangsweg (540) aufweist und das Verfahren weiterhin umfaßt, daß ein polymerer Schmelzstrom, vorzugsweise aus polymerem Material in kondensierter Phase, zu jedem Durchgangsweg geführt wird, während die Materialien am Fließen durch die Öffnungen (482,502,522) gehindert werden, und die Materialien, während die Materialien weiterhin am Fließen durch die Öffnungen gehindert werden, in ihren Durchgangswegen ersten Drücken unterworfen werden, die nicht ausreichen, um Lecken der Materialien durch ihre Öffnungen in den Zentralkanal oder von einer Öffnung in eine andere Öffnung zu verursachen, jedoch ausreichend wären, das Fließen der Materialien in den Zentralkanal zu bewirken, wenn ihr Fließen nicht gehindert wäre, und bevor gestattet wird, daß die Materialien durch ihre Öffnungen fließen, die Materialien in ihren Durchgangswegen getrennt und unabhängig mit zweiten Drücken beaufschlagt werden, die größer als die ersten Drücke sind und ausreichend sind, um ein Herausquellen der Materialien, wenn ihre Öffnungen freigegeben sind, zu erzeugen und für gleichmäßiges Einsetzen von ringförmigen Flüssen der Materialien in den Zentralkanal zu sorgen, wenn voreilende Flanken der entsprechenden Fließströme relativ zu Ebenen senkrecht zu der Achse des Zentralkanals betrachtet werden, wobei die zweiten Drücke von so ausreichender Größe sind und über solch eine Zeitdauer angelegt werden, die ausreichen um sicherzustellen, daß das gleichmäßige Einsetzen von Fließen der Materialien (z.B. E,C,D) gleichzeitig von allen Punkten ihrer Öffnungen eintritt.

283. Verfahren nach Anspruch 282, umfassend, daß die polymeren Materialien mit einem nachfolgenden Druck beaufschlagt werden, wenn sie durch ihre Öffnungen strömen, um eine wirksame Antriebskraft auf sie auszuüben, die ausreicht, um für eine im wesentlichen konstante Fließrate durch die Öffnung und in den besagten Kanal zu sorgen und diese aufrechtzuerhalten.

284. Verfahren nach Anspruch 1 zum Spritzformen mehrschichtiger Kunststoffgegenstände durch Schaffung mehrschichtiger im wesentlichen konzentrischer kombinierter Ströme von wenigstens drei Polymermaterialien (z.B. B,C,A) und Einspritzen der kombinierten Ströme in Hohlräume zum Bilden der mehrschichtigen Gegenstände, wobei jeder kombinierte Strom eine äußere Strukturmaterialschicht (B) zum Bilden der äußeren Schicht des Gegenstandes, einen Kern aus Strukturmaterial zum Bilden der inneren Schicht (A) des Gegenstandes und eine oder mehrere Zwischenschicht(en) (C) zum Bilden einer oder mehrerer innen gelegener Schicht(en) des Gegenstandes aufweist, wobei das Verfahren die Verwendung einer Vielzahl von Düseneinrichtungen (296) umfaßt, von denen jede einen Anschnitt (596) an einem Ende und einen zylindrischen Zentralkanal (540), der sich zu dem Anschnitt hin öffnet, einschließt, die Düseneinrichtung weiterhin wenigstens drei Polymerdurchgangswege enthält, die mit dem Zentralkanal kommunizieren, von denen wenigstens der erste und der zweite Durchgangsweg (460, 500) sich zu dem Kanal durch ringförmige Öffnungen (464,502) öffnen, deren Mittellinie im wesentlichen rechtwinklig zu der Achse des Zentralkanals liegt, die erste Öffnung näher an dem Anschnitt als die anderen Öffnungen gelegen ist zum Leiten des äußeren Strukturmaterials (B) in den Kanal, die dritte Öffnung (z.B.440) weiter entfernt von dem Abschnitt als die erste und die zweite Öffnung gelegen ist zum Leiten des Kernmaterials (A) in den Kanal und die zweite Öffnung (502) angrenzend an die erste Öffnung gelegen ist zum Leiten von Zwischenschichtmaterial (C) in den Kanal, und in dem Düsenzentralkanal Ventilglieder (800,834) vorgesehen sind, die angrenzend an die Öffnungen arbeiten und so ausgelegt sind, daß sie die zweite Öffnung (502) blockieren und freigeben zum Steuern des Fließens des Zwischenschichtpolymermaterials (C) durch diese hindurch und zum unabhängigen Steuern von Fließen oder Nicht-Fließen des Kernmaterials (A) durch die dritte Öffnung (440), und wobei das Verfahren weiterhin die Schritte umfaßt, daß
(1) Fließen von Polymermaterial von all den Öffnungen verhindert wird,
(2) weiterhin Fließen von Polymermaterial (C) durch die zweite Öffnung (502) verhindert wird, während Fließen von Strukturmaterial durch eine oder beide der ersten und der dritten Öffnungen (464,440) gestattet wird,
(3) vor dem Freigeben der zweiten Öffnung das Material in dem zweiten Durchgangsweg (500) einem Druck unterworfen wird, der ausreicht um zu bewirken, daß das Material in den Zentralkanal (540) fließt, wenn seine Öffnung (502) nicht blockiert ist, jedoch geringer ist als der Druck, der Lecken des Materials durch die zweite Öffnung an den Blockierungsventilgliedern (800,834) vorbei verursachen würde, wobei der Druck ausreichend ist, um beim Freigeben der zweiten Öffnung ein Herausquellen des Polymermaterials durch die Öffnung derart zu erzeugen, daß das Einsetzen von Fließen in den Zentralkanal als ein ringförmiger Fließstrom erfolgt, der gleichmäßig ist, wenn man dies relativ zu einer Ebene rechtwinklig zu der Achse des Zentralkanals betrachtet,
(4) nach dem Freigeben der zweiten Öffnung (502) die Rate der Bewegung des Materials erhöht wird, um eine im wesentlichen konstante Fließrate des Materials durch die zweite Öffnung zu erhalten,
(5) Fließen von Polymermaterial durch die dritte Öffnung (440) verhindert wird, während gestattet wird, daß das unter Druck stehende Material durch die zweite Öffnung (502) fließt, um das unter Druck stehende Zwischenschichtmaterial (C) mit sich selbst durch das Kernmaterial zu verstricken, und
(6) das Fließen durch die zweite Öffnung (502) verhindert wird, während Fließen durch die erste Öffnung (464) gestattet wird, und entweder die Ventilglieder (800,834) vorwärts bewegt werden, um die verstrickte Zwischenschicht vorwärts zu stoßen und im wesentlichen die verstrickte innere Schicht mit Material (B) von der ersten Öffnung (464) im wesentlichen einzuhüllen, oder Material (A), das von der dritten Öffnung (440) geflossen ist, an einem vorwärts gerichteten Ende der Ventilglieder anzusammeln, und die Ventilglieder nach vorwärts bewegt werden, um das verstrickte Zwischenschichtmaterial (C) mit dem angesammelten Material (A) von der dritten Öffnung im wesentlichen einzuhüllen.

285. Verfahren nach Anspruch 284, umfassend, daß das Polymermaterial in dem zweiten Durchgangsweg (500) einem ersten Druck unterworfen wird, der ausreichend wäre um zu verursachen, daß das Material in den Zentralkanal (540) fließt, wenn seine Öffnung (502) nicht blockiert wäre, und
das Material vor seinem Fließenlassen durch den zweiten Durchgangsweg (500) in dem zweiten Durchgangsweg mit einem zweiten Druck beaufschlagt wird, der größer als der erste Druck ist, jedoch geringer als der ist, der Lecken des Materials durch die Öffnung (502) vorbei an den Blockierungsventilgliedern (800,834) bewirken würde, wobei der zweite Druck ausreichend ist, um,wenn diese Öffnung freigegeben wird, ein Herausquellen des Polymermaterials und ein gleichmäßiges Einsetzen von ringförmigem Fluß von Polymermaterial in den Zentralkanal (540) zu bewirken, wenn der Fließstrom relativ zu einer Ebene rechtwinklig zu der Achse des Zentralkanals betrachtet wird.

286. Verfahren nach Anspruch 284 oder 285, umfassend, daß das Zwischenschicht-(C)material in dem zweiten Durchgangsweg (500) mit einem ersten Druck beaufschlagt wird, der ausreicht, um sein Fließen zu bewirken, wenn die zweite Öffnung (502) nicht blockiert wäre, und danach dieses Material mit einem erhöhten Druck beaufschlagt wird, der geringer als der ist, der das besagte Lecken bewirken würde, wobei das besagte Material, wenn es so unter Druck steht, gezwungen wird, durch die zweite Öffnung (502) in den Zentralkanal (540) auszutreten.

287. Verfahren nach Anspruch 284,285 oder 296, das vor dem Beginn des Flusses durch die erste Öffnung (464) die Schritte umfaßt, daß das Material in dem ersten Durchgangsweg (460) mit einem Druck beaufschlagt wird, der größer als der erste Druck ist und ausreicht, um, wenn seine Öffnung (464) nicht blockiert ist, ein Herausquellen des Materials durch die Öffnung derart zu erzeugen, daß das Einsetzen seines Flusses in den Zentralkanal (540) gleichmäßig ist, wenn der entstehende Fließstrom relativ zu einer Ebene rechtwinklig zu der Achse des Zentralkanals betrachtet wird, und daß der Druck geringer als der ist, der Lecken des Materials durch die erste Öffnung (464) vorbei an den Blockierungsventilgliedern (800,834) in den Kanal bewirken würde, und daß nach dem Fließenlassen des Materials durch die erste Öffnung die Rate des Flusses dort hindurch erhöht wird, um eine im wesentlichen konstante Fließrate durch die erste Öffnung zu erhalten.

288. Verfahren nach Anspruch 284, 285,286 oder 287, das vor dem Fließenlassen von Kernstrukturmaterial (A) durch die dritte Öffnung (440) weiterhin die Schritte umfaßt, daß das Kernmaterial in dem dritten Durchgangsweg mit einem Druck beaufschlagt wird, der größer als der erste Druck ist und ausreicht, um jeglichen schädlichen Druckabfall zu verhindern, wenn seine Öffnung (440) freigegeben wird, und beim Freigeben der Öffnung ein sofortiges Fließansprechen des Kernmaterials in den Zentralkanal (540) zu schaffen, wobei der Druck kleiner als der ist, der Lecken des Kernmaterials (A) durch die dritte Öffnung (440) vorbei an den Blockierungsventilgliedern (800,834) in den Kanal (540) bewirken würde, und daß nach dem Fließenlassen des Kernmaterials durch die dritte Öffnung (440) die Fließrate dort hindurch modifiziert wird, um eine im wesentlichen konstante Fließrate durch die dritte Öffnung zu erhalten.

289. Verfahren nach Anspruch 1 zum Spritzgießen von mehrschichtigen Kunststoffgegenständen durch Schaffung mehrschichtiger im wesentlichen konzentrischer kombinierter Ströme von wenigstens drei polymeren Materialien und Einspritzen der Ströme in Hohlräume zur Bildung der Gegenstände, wobei die kombinierten Ströme eine äußere Strukturmaterialschicht (B) zur Bildung der äußeren Schicht des Gegenstandes, einen Kern aus Strukturmaterial (A) zur Bildung der inneren Schicht des Gegenstandes und eine oder mehrere Zwischenschichten (z.B. E,C,D) aus Material zur Bildung einer inneren Schicht(en) des Gegenstandes aufweisen, wobei die Verwendung einer Vielzahl von Coinjektionsdüsen-Einrichtungen (296) eingeschlossen ist, von denen jede einen Anschnitt (596) an einem Ende und einen zylindrischen Zentralkanal (540), der sich zu dem Anschnitt hin öffnet, aufweist und die Düseneinrichtung weiterhin wenigstens drei Polymerdurchgangswege (460,500,440) umfaßt, die mit dem Zentralkanal kommunizieren und von denen sich wenigstens der erste und der zweite Durchgangsweg durch eine ringförmige Öffnung (464,502) zu dem Zentralkanal öffnen und jede Öffnung eine Mittellinie in einer Ebene im wesentlichen rechtwinklig zu der Achse des Zentralkanals aufweist, die erste Öffnung (464) näher an dem Anschnitt als die anderen Öffnungen gelegen ist zum Leiten des äußeren Schichtstrukturmaterials (B) in den Kanal (540), die dritte Öffnung (440) weiter entfernt als die erste oder zweite Öffnung (464,502) von dem Anschnitt ist zum Leiten des Kernmaterials (A) in den Kanal und die zweite Öffnung (502) angrenzend an die erste Öffnung (464) gelegen ist zum Leiten von Zwischenschichtmaterial (C) in den Kanal, die Düseneinrichtung weiterhin Ventilglieder (800,834) enthält, die in dem Düsenzentralkanal benachbart der Öffnungen wirken, um Fließen von Polymermaterialien durch die erste, zweite und dritte Öffnung zu verhindern und zu gestatten, und wobei das Verfahren außerdem die Schritte umfaßt, daß:
die Ventilglieder (800,834) zum Blockieren der ersten und der zweiten Öffnung (464,502) verwendet werden,
die Polymermaterialien (B,C) in den durch die Ventilglieder blockierten Durchgangswegen mit einem ersten Druck beaufschlagt werden, der ausreichen würde, die blockierten Materialien in den Zentralkanal (540) fließen zu lassen, wenn die Ventilglieder nicht die erste und die zweite Öffnung blockieren würden,
kurz vor dem Bewegen der Ventilglieder (800,834) zum Freigeben der ersten und der zweiten Öffnung (464,502) die Materialien (B,C) in den besagten Durchgangswegen (460,500) mit einem zweiten Druck beaufschlagt werden, der größer als der erste Druck ist, wobei der zweite Druck ausreicht, um für ein gleichmäßiges Einsetzen von ringförmigem Fluß der Materialien in den Zentralkanal (540) zu sorgen, wenn das Ventilglied bewegt wird, wobei jeder Fluß ein Einsetzen oder eine voreilende Flanke in einer Ebene im wesentlichen rechtwinklig zu der Achse des Zentralkanals aufweist,
nach dem Beaufschlagen der Materialien in diesen Durchgangswegen mit dem zweiten Druck die erste und die zweite Öffnung (464,502) durch Bewegen der Ventilglieder freigegeben werden, um für das gleichmäßige Einsetzen von ringförmigen Flüssen in den Zentralkanal zu sorgen, und
ein Druck auf den besagten Materialien über wenigstens 10 bis 80 Centisekunden aufrechterhalten wird, um so ein stationäres Fließen der Materialien durch die erste und die zweite Öffnung (464,502) zu erhalten und dadurch gleichmäßige Dicke um die ringförmigen Materialflüsse von der ersten und der zweiten Öffnung aufrechtzuerhalten, wobei die der Druckerhöhung unterworfenen Materialien vorzugsweise polymere Materialien in kondensierter Phase sind.

290. Verfahren nach Anspruch 1 zum Spritzformen zum Herstellen mehrschichtiger Gegenstände wie Vorformlinge oder Blasrohlinge, deren Wände innenseitige Schichten (A), außenseitige Schichten (B) und wenigstens eine innere Schicht (C) zwischen der innenseitigen und der außenseitigen Schicht aufweisen, wobei das Verfahren die Verwendung einer Vielzahl von Coinjektionsdüsen-Einrichtungen (296) umfaßt, von denen jede einen Zentralkanal (540) und Glieder (800,834) in den Düseneinrichtungen besitzt, die zu ausgewählten Stellungen bewegbar sind, um Fluß in den Kanal von wenigstens dem Material, das die innere Schicht (C) bilden soll, zu verhindern und zu gestatten, und das weiterhin die Schritte umfaßt, daß die Glieder (800,834) zu einer ersten Stellung bewegt werden, die Fluß in den Kanal (540) des Materials, das die Innenschicht (C) bilden soll, verhindert, der Fluß in den Kanal aus dem Material, das die außenseitige Schicht (B) bilden soll, beginnt, während ein Fluß des Materials, das die innenseitige Schicht (A) bilden soll, aufrechterhalten wird, der Druck des Innenschichtmaterials (C) auf ein Niveau erhöht wird, so daß er größer als der Druck in dem Kanal von jedem der Materialien, die die innenseitige Schicht und die außenseitige Schicht bilden sollen, ist, und die Glieder (800, 834) zu einer zweiten Stellung bewegt werden, um Fluß in den Kanal des Materials, das die Innenschicht (C) bilden soll, zu gestatten, wobei vorzugsweise dafür gesorgt wird, daß die Materialien als Fluß konzentrisch in Bezug aufeinander dort entlang in den Kanal eintreten.

291. Verfahren nach einem der Ansprüche 249 bis 290, weiterhin umfassend, daß äußeres Strukturmaterial (B) zu dem Zentralkanal (540) mit einem Winkel relativ zu dem Zentralkanal eingeführt wird und das innerste Strukturmaterial (A) axial als ein fester Strom in den Zentralkanal eingeführt wird, wobei das Verfahren auch die Schritte umfaßt, daß die Öffnungen (464,440) der äußeren und inneren Schichtmaterialien körperlich blockiert werden und diese Schichten (B,C) in ihren Durchgangswegen mit Druck beaufschlagt werden, während ihre Öffnungen blockiert sind, um dadurch die Übergangszeiten, die zum Erreichen der gewünschten Fließmuster erforderlich sind, zu minimalisieren und die volumetrischen Flüsse der äußeren und inneren Strukturmaterialien in den Kombinierungsbereich (540) zu steuern.

292. Verfahren nach einem der Ansprüche 249 bis 290, umfassend, daß das äußere Strukturmaterial (B) in den Zentralkanal (540) unter einem Winkel relativ zu dem Zentralkanal eingeführt wird und das innere Strukturmaterial (A) axial als ein fester Strom in den Kombinierungsbereich eingeführt wird, wobei das Verfahren die Schritte enthält, daß das Polymerschmelzmaterial für die äußere Schicht (B) in seinem Durchgangsweg (460) mit Druck beaufschlagt wird, während seine Öffnung (464) blockiert wird, dann die besagte Öffnung freigegeben wird und dann als Teil eines Verschiebungsschrittes ein gleichmäßiges Einsetzen des Fließens des äußeren Strukturmaterials (B) von allen Punkten seiner Durchgangswegöffnung (464) in den Düsenzentralkanal bewirkt wird.

293. Verfahren nach den Ansprüchen 291 oder 292, bei dem der Verschiebungsschritt umfaßt, daß die Öffnung (464) für das äußere Material (B) über eine Zeit nicht blockiert bleibt, die ausreichend ist, um eine kontinuierliche, gleichmäßige Rate und ein kontinuierliches, gleichmäßiges Volumen des Flusses aus dem äußeren Material während 90% des Spritzzyklus zu bewirken und aufrechtzuerhalten.

294. Verfahren nach einem der Ansprüche 291 bis 293, das weiterhin die Schritte umfaßt, daß das Innenschichtmaterial (C) oder dieses Material und ein innenseitiges Schichtmaterial (A) mit Druck beaufschlagt werden, während die Öffnung dafür blockiert wird, und dann die Öffnung freigegeben und eine gleichmäßige Anfangsfließrate des besagten Materials über seine Durchgangswegöffnung beim Beginn des Spritzzyklus bewirkt wird und ein kontinuierliches Fließen in Werten der Geschwindigkeit und der Volumenrate von allen Materialien während des größten Teils des Spritzzyklus aufrechterhalten wird.

295. Verfahren nach einem der Ansprüche 291 bis 294, bei dem der Druckbeaufschlagungsschritt während eines Verschiebungsschrittes durchgeführt wird, um das Polymerschmelzmaterial für die äußere Schicht (B), während es sich in seinem Durchgangsweg (460) befindet und seine Öffnung (464) blockiert ist, mit einem ersten Druck zu beaufschlagen, der ausreichend wäre, um das Material in den Zentralkanal (540) fließen zu lassen, wenn seine Öffnung nicht blockiert wäre, und vor dem Fließenlassen des äußeren Schichtmaterials (B) durch seine Öffnung Glieder betätigt werden, um das äußere Schichtmaterial in seinem Durchgangsweg (460) zu verschieben und es dadurch auf einen zweiten Druck anzuheben, der größer als der erste Druck ist und ausreicht um, wenn seine Öffnung (464) nicht blockiert ist, ein Herausquellen dieses Materials als ein Einsetzen von ringförmigem Fluß von allen Punkten seiner Öffnung in den Zentralkanal (540) zu erzeugen, wobei der entstehende Fließstrom gleichmäßig ist, wenn er relativ zu einer Ebene rechtwinklig zu der Achse des Zentralkanals betrachtet wird, der zweite Druck geringer als der ist, der Lecken des Außenschichtmaterials (B) an den Flußblockierungsgliedern (800,834) vorbei in den Kanal bewirken würde, und während und nach dem Freigeben der Öffnung für die äußere Schicht (B) die Rate der Polymerverschiebung zu einer gewünscht ausgelegten, im wesentlichen konstanten Fließrate des besagten Materials durch die dafür vorgesehene Öffnung in den Zentralkanal (540) erhöht wird.

296. Verfahren nach Anspruch 1 zum Spritzformen, das das Einspritzen eines mehrschichtigen Fließstromes, der drei Schichten umfaßt, in die Injektionshohlräume einschließt, wobei die Geschwindigkeit des Fließens von jedem geschichteten Strom am höchsten auf einer festen Fließstromlinie ist, die zwischen den Grenzen des geschichteten Stromes liegt, und das die Verfahrensschritte umfaßt, daß
Flüsse von Materialien für eine erste Schicht (A) und eine zweite Schicht (B) des Fließstromes geschaffen werden und eine Zwischenschicht zwischen der fließenden ersten und der fließenden zweiten Schicht gebildet wird,
die Zwischenschicht an einer ersten Stelle positioniert wird, die nicht mit der festen Fließstromlinie zusammenfällt,
Fluß aus Material für eine dritte Schicht (C) des Fließstromes zwischen die erste und die zweite Schicht eingeschoben wird, wobei sich die dritte Schicht an einer Stelle befindet, die nicht mit der besagten festen Fließstromlinie zusammenfällt und entweder (i) die dritte Schicht (C) zu einer zweiten Stelle bewegt wird, die näher an oder im wesentlichen mit ihr zusammenfallend oder nahe der besagten festen Fließstromlinie liegt, oder (ii) die dritte Schicht (C) über die feste Fließstromlinie zu einer zweiten Stelle bewegt wird, die nicht mit ihr zusammenfällt.

297. Verfahren nach Anspruch 296, umfassend, daß der Fluß aus dem dritten Schichtmaterial (C) im wesentlichen sofort nach ihrem Zwischenlegen zwischen die erste und die zweite Schicht (A,B) bewegt wird.

298. Verfahren nach Anspruch 297, umfassend, daß die dritte Schicht (C), wenn oder kurz nachdem der Fluß des dritten Schichtmaterials zwischen die erste und die zweite Schicht (A,B) eingeschoben worden ist, im wesentlichen an allen Stellen über die Breitenausdehnung oder an allen Stellen um den ringförmigen Querschnitt des geschichteten Stromes zu der zweiten Stelle bewegt wird,

299. Verfahren nach Anspruch 296, 297 oder 298, das das Einstellen der relativen Fließraten der ersten und zweiten Schichtmaterialien (A,B) zum Bewegen der Stelle der besagten dritten Schicht (C) umfaßt.

300. Verfahren nach Anspruch 296,297,298 oder 299, das das Auswählen der Fließrate des ersten Schichtmaterials (A) und der Fließrate des zweiten Schichtmaterials (B), um die Zwischenschicht an die erste Stelle, die nicht mit der festen Fließstromlinie zusammenfällt, zu positionieren, umfaßt.

301. Verfahren nach einem der Ansprüche 296 bis 300, bei dem jeder geschichtete Fließstrom in einer entsprechenden Düse (296) mit einem Injektionskanal (540), der z.B. zentral liegt, gebildet wird und dann in einen zugeordneten Injektionshohlraum (102) eingespritzt wird, wobei der in dem besagten Kanal gebildete Fließstrom eine Fließstromlinie aufweist, die der festen Fließstromlinie in dem Injektionshohlraum entspricht, und die erste Stelle der Zwischenschicht in diesem Kanal (540) nicht mit der Fließstromlinie in dem besagten Kanal zusammenfällt, die der festen Fließstromlinie in dem Injektionshohlraum entspricht, die dritte Schicht (C) zwischen die erste und die zweite Schicht (A,B) an einer Stelle eingeschoben wird, die nicht mit der besagten Fließstromlinie in dem Kanal (540) zusammenfällt, die der festen Fließstromlinie in dem Injektionshohlraum entspricht, und die dritte Schicht (C) entweder zu einer zweiten Stelle in dem Kanal bewegt wird, die näher an oder im wesentlichen zusammenfallend mit der Fließstromlinie in dem besagten Kanal liegt, die der festen Fließstromlinie in dem Injektionshohlraum entspricht, oder über die besagte Fließstromlinie zu der besagten nicht zusammenfallenden zweiten Stelle bewegt wird.

302. Verfahren nach einem der Ansprüche 296 bis 301, umfassend, daß der mehrschichtige Fließstrom, der drei Schichten für Einspritzung in einen Injektionshohlraum zu einem ringförmigen oder rohrförmigen geschichteten Strom ausgeformt wird, in dem das zweite Schichtmaterial (B) um das Material der ersten Schicht (A) herum geformt wird, um eine ringförmige oder röhrenförmige Zwischenschicht zwischen den fließenden Materialien der ersten und der zweiten Schicht auszubilden, wobei die Zwischenschicht zwischen den fließenden Materialien der ersten und der zweiten Schicht an der ersten Stelle positioniert wird, die nicht mit der besagten festen Fließstromlinie zusammenfällt, und wobei die letztere vorzugsweise ringförmig ist.

303. Verfahren nach einem der Ansprüche 296 bis 302, das das Bilden der dritten Schicht (C) zum Zwischenschieben zwischen die erste und die zweite Schicht als eine mehrschichtige Verbundschicht aus einer Vielzahl von Bestandteilsmaterialien umfaßt.

304. Verfahren nach Anspruch 1 oder Anspruch 102, bei dem zur Überwindung von Vorspannung eines Abschnitts des Abschlußendes der innen gelegenen Schicht von jedem mehrschichtigen durch Spritzblasen geformten Gegenstand oder Behälter das Verfahren das Überfalten des vorgespannten Abschlußendabschnittes umfaßt, um die innen gelegene Schicht mit einer im wesentlichen nicht vorgespannten gesamten voreilenden oder Abschlußkante zu versehen.

305. Verfahren nach Anspruch 1 zum Herstellen von durch Spritzguß ausgeformten mehrschichtigen steifen Kunststoffblasrohlingen zum Bilden geblasener ausgeformter Behälter, wobei die Seitenwand (26) jedes Blasrohlings eine Innenschicht (C) enthält, gekennzeichnet durch Einspritzen eines mehrschichtigen Stromes in einen Injektionshohlraum und Bewirken, daß während des Injektionsschrittes ein Teil des Randendabschnittes der Innenschicht umgefaltet wird, wenn sich dieser Teil in den Hohlraum bewegt, um einen Blasrohling in diesem Hohlraum zu bilden, der ein Teil (33) der Innenschicht aufweist, das innerhalb des Randendabschnittes (28,29) der Seitenwand (26) umgefaltet ist.

306. Verfahren nach Anspruch 305, das außerdem den Schritt umfaßt, daß bewirkt wird, daß das umgefaltete Teil (44) und der Randend- und ungefaltete Abschnitt des Randendabschnittes der Innenschicht (C) in einer im wesentlichen nicht schrägen Ebene relativ zu der Achse des Behälters endgültig positioniert wird.

307. Vorrichtung nach einem der Ansprüche 13 bis 27 oder 47, die Angußverteilereinrichtungen (276,288) mit einem vorwärtigen Ende mit einer Vielzahl von darin angeordneten Coinjektionsdüsen-Einrichtungen (296), Einrichtungen (950,282) zum Haltern der Angußverteilereinrichtungen und Einrichtungen (956,951; 974,982), die in den Angußverteilereinrichtungen auf den Halterungseinrichtungen angebracht sind, die gestatten, daß die Angußverteilereinrichtungen (276,288) axial oder sowohl axial als auch radial auf den Halterungseinrichtungen schwimmen (d.h. sich frei bewegen können), wenn die Vorrichtung in Betrieb ist, umfaßt.

308. Vorrichtung nach Anspruch 307, bei der die Angußverteilereinrichtung (276,288) auf ihrer axialen Mittellinie angebracht und gehaltert ist.

309. Vorrichtung nach Anspruch 307 oder Anspruch 308, die weiterhin Kompensationseinrichtungen (340,341, 986) umfaßt, um den Angußverteilereinrichtungen (276,288) eine vorwärtsgerichtete Kraft zu verleihen, um irgendeine rückwärtige Kraft von axialem Schwimmen der Angußverteilereinrichtung abzufangen, die z.B. von Injektionsrückdruck und/oder thermischer Ausdehnung während des Betriebs herrührt.

310. Vorrichtung nach Anspruch 309, bei der die Kraftkompensationseinrichtung wenigstens einen hydraulischen Zylinder (340,341,986) umfaßt, der so positioniert ist, daß die vorwärtsgerichtete Kraft durch und entlang der axialen Mittellinie der Angußverteilereinrichtung angelegt wird, wobei die axiale Mitte z.B. mit der axialen Mittellinie der Maschine zusammenfällt.

311. Vorrichtung nach Anspruch 309 oder Anspruch 310, bei der die Coinjektionsdüsen-Einrichtungen (296) freiliegende Einlaßtrichteransatzflächen oder Anschnittsflächen angrenzend an das vorwärtige Ende der Angußverteilereinrichtungen (276,288) besitzen und daß es ein anliegendes Hohlraumglied (104) mit einer Vielzahl von Injektionshohlräumen (102) gibt, von denen jeder eine Anschnittsfläche (439) für Zusammenwirken mit einer zugeordneten anliegenden Düsenanschnittfläche aufweist, und bei der die Kraftkompensationseinrichtung wirkt, um ausreichende Kraft auszuüben, um eine effektive Druckkontaktdichtung zwischen den Düsenanschnittsflächen und den Hohlraumanschnittflächen während des Betriebs zu erzeugen und aufrechtzuerhalten.

312. Vorrichtung nach einem der Ansprüche 307 bis 311, bei der Abschnitte der Angußverteilereinrichtungen (276,288) innerhalb des Aufbaues der Vorrichtung mit einem Freiraum (G) zwischen der Angußverteilereinrichtung und dem besagten Aufbau angebracht sind, um Freiheit der Angußverteilereinrichtungen für axiales Schwimmen oder Floating axial oder sowohl axial als auch radial innerhalb des Aufbaues zu gewährleisten.

313. Vorrichtung nach Anspruch 311 oder Anspruch 312, weiterhin umfassend:
eine bewegliche Platte (114),
Halterungseinrichtungen in der Form einer ersten festen Halterungseinrichtung (282), die von der beweglichen Platte beabstandet ist, und zweite Halterungseinrichtungen, wobei die Angußverteilereinrichtungen (276,288) mit den darin angebrachten Düseneinrichtungen (296) zwischen der beweglichen Platte (114) und der festen Halterungseinrichtung (282) positioniert sind und die zweite Halterungseinrichtung das Hohlraum-(104)glied enthält, das angrenzend an die vorwärts gerichtete Fläche der Angußverteilereinrichtung positioniert ist für benachbartes Positionieren der Injektionshohlräume (102) jeweils mit einer zugeordneten Düseneinrichtung (296), die zweite Halterungseinrichtung zwischen der ersten Halterungseinrichtung und der bewegbaren Platte positioniert ist und dazu dient, die Injektionshohlräume (102) im wesentlichen in einer gemeinsamen Ebene parallel zu den Düsenflächen (439) zu halten und die Angußverteilereinrichtung (288) gegen Beschädigung aufgrund einer Festklemmkraft zu schützen, die durch die bewegliche Platte (114) relativ zu der festen Halterungseinrichtung (282) ausgeübt wird, und die Angußverteilereinrichtung, die feste Halterungseinrichtung und die zweite Halterungseinrichtung jeweils so ausgelegt sind, daß sie das Schwimmen oder Floating der Angußverteilereinrichtungen (276,288) axial oder sowohl axial als auch radial relativ zu der Halterungseinrichtung aufgrund von Injektionsrückdruck und/oder thermischer Ausdehnung der Angußverteilereinrichtung (288) gestatten.

314. Vorrichtung nach Anspruch 313, bei der das Hohlraumglied (104) eine Injektionshohlraumrahmenplatte (950,106) ist, die angrenzend an den Angußverteiler zwischen diesem und der beweglichen Platte (114) positioniert ist.

315. Vorrichtung nach Anspruch 314, bei der die Halterungseinrichtung Abstandsstützen (122,962,963) einschließt, die sich von der Rahmenplatte (950, 106) zu der zweiten Halterungseinrichtung erstrecken.

316. Vorrichtung nach Anspruch 315, bei der die Halterungseinrichtung (282) eine Bohrung (982) enthält, die sich durch sie hindurch erstreckt, um zu gestatten, daß die Angußverteilereinrichtung (276) axial durch die Halterungseinrichtung schwimmt.

317. Vorrichtung nach einem der Ansprüche 307 bis 315, bei der die Halterungseinrichtung axiale Halterungsbohrungen (945,982) enthält, eine benachbart jeder der vorwärtigen und rückwärtigen Enden der Angußverteilereinrichtungen (288,276) und die Angußverteilereinrichtung sich axial erstreckende , langgestreckte Glieder (951,276) umfaßt, die auf der axialen Mittellinie der Angußverteilereinrichtungen angebracht sind, eines an dem vorwärtigen Ende und eines an seinem rückwärtigen Ende, wobei jedes Glied ausgelegt ist, damit es in einer der entsprechenden axialen Halterungsbohrungen (945,982) zum Haltern der Angußverteilereinrichtung an jedem Ende eingesetzt werden kann, und jedes Glied und die zugeordnete Bohrung so konfiguriert sind, daß sie das Schwimmen der Angußverteilereinrichtung innerhalb der Halterungseinrichtung gestatten.

318. Vorrichtung nach Anspruch 317, wenn dieser von Anspruch 314 abhängt, bei der die vorwärtige axiale Halterungsbohrung (945) in der Injektionshohlraumrahmenplatte (950) und die rückwärtige axiale Halterungsbohrung in der festen Halterungseinrichtung (282) vorgesehen sind.

319. Verfahren nach einem der Ansprüche 1 bis 12, bei dem eine Vielzahl von Polymermaterialströmen entlang einer Angußverteilereinrichtung (276,288) zu jeder der Düseneinrichtungen (296) geführt wird, die Angußverteilereinrichtung (276,288) auf ihrer axialen Mittellinie montiert wird, um zu gestatten, daß sie axial, radial oder sowohl axial als auch radial bei thermischer Expansion und Injektionsrückstoß schwimmt, und die rückwärtige Kraft, die durch die Angußverteilereinrichtung während dieses axialen Schwimmens oder Floatings kompensiert wird, indem auf die Angußverteilereinrichtung durch die und entlang ihrer axialen Mittellinie eine nach vorn gerichtete Kraft ausgeübt wird, die ausreicht, um die rückwärts gerichtete Kraft zu kompensieren, und ausreicht, um für eine wirksame Druckkontaktdichtung zwischen den Düsen und den Hohlräumen während des Betriebs der Maschine zu sorgen.

320. Vorrichtung nach einem der Ansprüche 13 bis 27 oder 47, die weiterhin eine langgestreckte Zuführungseinrichtung zum nochmaligen Richten und Zuführen von Polymerfließströmen von einem Angußverteilerblock zu einer Injektionsdüse (296) der Vorrichtung umfaßt, wobei die Einrichtung (294) ausgelegt ist, um eine Vielzahl getrennter Polymerfließströme von dem Angußverteilerblock zu empfangen und diese, während die Fließströme getrennt gehalten werden, nochmals so zu richten, daß sie axial aus einem vorwärtsgerichteten Ende der Einrichtung für den Eintritt in die Düse fließen, die Einrichtung eine Vielzahl von Einlässen (392 bis 396) aufweist, die radial in ihren Umfang eingeschnitten sind und jeder zum Empfangen eines der Vielzahl getrennter polymerfließströme von dem Angußverteilerblock bestimmt ist, eine Vielzahl von getrennten Zuführungskanälen, von denen jeder mit einem entsprechenden Einlaß kommuniziert und einen nach innen gerichteten Abschnitt (404,408,412), der in Richtung auf die Mittelachse der Einrichtung führt,und einen axialen Abschnitt (406,412,416,414) hat, der axial vorwärts durch die Einrichtung zu einem zugehörigen Ausgangsloch (407,411,417,415) in einem vorwärtigen Endabschnitt (388) der Einrichtung führt, und wobei die Vielzahl von Ausgangslöchern in dem vorwärtigen Endabschnitt vorzugsweise in einem umfangsmäßig und radial versetzten Muster angeordnet ist zum Zuführen der Polymeren als getrennte Fließströme in den hinteren Teil der besagten Düse.

321. Vorrichtung nach Anspruch 320, umfassend eine Vielzahl erster Einlässe (392 bis 395) und einen zweiten Einlaß (396), von denen jeder radial in den Umfang der Einrichtung geschnitten ist und wobei die ersten und zweiten Einlässe axial beabstandet und ausgerichtet entlang der Einrichtung sind, und eine Vielzahl erster Zuführungsauslaufstutzen (398 bis 401) und einen zweiten Zuführungsauslaufstutzen (402), von denen jeder radial in den Umfang der Einrichtung geschnitten ist, wobei jeder erste Zuführungsauslaufstutzen in Kommunikation mit einem jeweiligen ersten Einlaß steht und um einen Abschnitt des Umfangs der Einrichtung läuft und einen Abschlußendabschnitt aufweist, der zweite Zuführungsauslaufstutzen in Kommunikation mit dem ersten Einlaß steht und axial entlang eines Abschnitts des Umfangs der Einrichtung läuft, der Abschlußendabschnitt des ersten Zuführungsauslaufstutzens sich zu einem zugeordneten ersten Zuführungskanal öffnet, der einen radialen Abschnitt, der sich nach innen in Richtung auf die Mittelachse der Einrichtung erstreckt, und einen axialen Abschnitt in Kommunikation mit dem radialen Abschnitt aufweist,der axial nach vorwärts durch die Einrichtung läuft, ein vorderer Endabschnitt der Einrichtung eine Vielzahl von ersten Ausgangslöchern (407,411,415,417), die mit dem axialen Abschnitt der jeweiligen ersten Zuführungskanäle kommunizieren, und ein zweites Ausgangsloch (418) in Kommunikation mit dem zweiten Zuführungsausgangsstutzen (402) aufweist.

322. Vorrichtung nach Anspruch 320 oder Anspruch 321, bei der die Zuführungseinrichtung einen zentralen Zuführungskanal (379) aufweist, der sich entlang ihrer Mittelachse erstreckt.

323. Vorrichtung nach Anspruch 321, bei der die Zuführungseinrichtung einen Zentralfließkanal (390) aufweist, der sich entlang ihrer Mittelachse erstreckt, und bei der der axiale Abschnitt eines der ersten Zuführungskanäle (404) entlang eines Abschnitts seiner axialen Länge mit und sein erstes Ausgangsloch (407) mit dem zentralen Zuführungskanal (390) kommunizieren.

324. Vorrichtung nach Anspruch 323, bei der der zweite Einlaß der Einrichtung der Einlaß (396) ist, der dem vorderen Ende am nächsten liegt, und der erste Einlaß, der mit dem zentralen Zuführungskanal kommuniziert, der Einlaß (392) ist, der dem vorderen Ende der Einrichtung am wenigsten nahe liegt.

325. Vorrichtung nach Anspruch 320 oder 321, die eine Coinjektionsdüsen-Empfangskammer (380) einschließt, die in dem vorderen Ende der Einrichtung ausgeformt ist.

326. Vorrichtung nach Anspruch 321, 323 oder 324, bei der in ihrem vorderen Ende die Zuführungseinrichtung eine abgestufte Kammer (380) ausgeformt hat, die so ausgelegt ist, daß sie eine Coinjektionsdüse empfängt, wobei die Kammer axial beabstandete erste (382), zweite (384) und dritte Stufenaufbauten (386) ausweist, von denen sich jede transaxial erstreckt und in sich ein erstes Ausgangsloch (407,411,415, 417) aufweist.

327. Vorrichtung nach Anspruch 326, bei der ein erstes Ausgangsloch (407), das mit einem zentralen Zuführungskanal kommuniziert, in dem axial am weitesten innen gelegenen Stufenaufbau (480) gelegen ist und das zweite Ausgangsloch (418) der Einrichtung in der Frontfläche (388) der Einrichtung liegt.

328. Vorrichtung nach einem der Ansprüche 320 bis 327, bei der die Ausgangslöcher der Zuführungseinrichtung radial voneinander beabstandet sind und es einen Bogen von 60° zwischen den meisten der Ausgangslöchern und einen Bogen von 120° zwischen zwei der Ausgangslöcher gibt.

329. Vorrichtung nach einem der vorhergehenden Ansprüche 320 bis 328, die Isolationseinrichtungen (424) zum isoliert voneinander Halten der Polymerfließströme, die an der Zuführungseinrichtung radial gerichtet sind, einschließt und bei der die Isolationseinrichtung vorzugsweise eine Vielzahl von ringförmigen Nuten (425) umfaßt, die in den Umfang der Einrichtung eingeschnitten sind, wobei jede zwischen zwei Einlässen und einem expandierbaren Kolbenring (424) gelegen sind, der in jeder ringförmigen Nut sitzt.

330. Vorrichtung nach Anspruch 329, die weiterhin einen Angußverteilerblock (288) mit einer Halterung wie einer Bohrung zum Beschicken der Einrichtung einschließt und bei der es Dichtungseinrichtungen (424) gibt, die stromaufwärts von dem Einlaß (392), der am wenigsten nahe der Frontfläche liegt, gelegen sind und die mit der Angußverteilerblockhalterung zusammenwirken um zu verhindern, daß Polymermaterial axial stromaufwärts von den Dichtungseinrichtungen (424) fließt.

331. Vorrichtung nach Anspruch 330, bei der die Dichtungseinrichtung eine ringförmige Nut (425) einschließt, die in den Umfang der Zuführungseinrichtung geschnitten ist und einen expandierbaren Kolbenring (424) aufweist, der in der Nut sitzt.

332. Vorrichtung nach einem der Ansprüche 13 bis 27 oder 47, die weiterhin eine langgestreckte Fließstromteilereinrichtung (z.B.276) für die Verwendung in einem Angußverteilerblock der Vorrichtung einschließt, wobei die Teilereinrichtung eine Polymerfließstromeintrittszone (278), eine Vielzahl von Fließstromausgangszonen (344,346), eine Vielzahl beabstandeter Fließkanäle (220,222,250,257,258), die sich durch einen Abschnitt der Einrichtung erstrecken, und eine Vielzahl von beabstandeten Eintrittsöffnungen an der Eintrittszone (278), die mit den Fließkanälen (220,222,250,257,258) kommunizieren, umfaßt, jeder der Fließkanäle einen Abschnitt (715 bis 720) aufweist, der sich an einem Verzweigungspunkt (342) innerhalb der Einrichtung verzweigt, an dem er sich in erste und zweite Ausgangszweige (z.B. 700,701) von im wesentlichen gleicher Länge aufteilt, die zu jeweiligen ersten und zweiten Ausgangsöffnungen führen, und die Vielzahl der ersten Ausgangsöffnungen (344) und die Vielzahl der zweiten Ausgangsöffnungen (346) als in Längsrichtung ausgerichtete Reihen von beabstandeten Ausgangsöffnungen angeordnet sind für Kommunikation mit entsprechenden Fließkanaleingängen des Angußverteilerblocks (288).

333. Vorrichtung nach Anspruch 332, bei der die Eingangszone (278) an ihrem einen Ende liegt und die Fließkanäle (220,222,250,257,258), die mit der Eingangszone kommunizieren, sich allgemein in Längsrichtung hiervon zu ihren Verzweigungspunkten (342A bis E) erstrecken.

334. Vorrichtung nach Anspruch 332, bei der die Eingangs- und Ausgangszonen sich in Längsrichtung erstreckende Abschnitte der Oberfläche der Einrichtung (290 oder 292) sind und in jedem der Abschnitte die Öffnungen (364,366, 366'; 371,372,372') derselben in einer sich in Längsrichtung erstreckenden Reihe voneinander beabstandet sind.

335. Vorrichtung nach Anspruch 332,333 oder 334, bei der der Umfangsbogen, der sich von der axialen Mittellinie jeder Eingangsöffnung (z.B.364) zu der axialen Mittellinie von jeder ihrer zugeordneten Ausgangsöffnungen (z.B.366,366') erstreckt, etwa 90° oder größer ist, z.B. 90° bis 120° ist, und der Verzweigungspunkt der ersten und zweiten Ausgangszweige so konfiguriert ist, daß Flußstagnierung darin verhindert wird.

336. Vorrichtung nach einem der Ansprüche 332 bis 335, bei der die axiale Mittellinie des Eingangsfließkanals (z.B.250;367;373) die axiale Mittellinie von jedem seiner zugeordneten verzweigten Ausgangsfließkanäle (704,705;368,368';374,374') an einem Punkt auf der axialen Mittellinie der Teilereinrichtung schneidet.

337. Vorrichtung nach Anspruch 332 oder Anspruch 334, bei der die Teilereinrichtung (290,292) zylindrisch ist und die Fließkanäle (367,373), die in die Einrichtung eintreten, in Richtung auf die Achse, z.B. radial, gerichtet sind.

338. Vorrichtung nach einem der Ansprüche 332 bis 337, bei der die ersten und zweiten Ausgangszweige (z.B. 374,374') sich in entgegengesetzte Richtungen unter einem Winkel von weniger als 90° relativ zueinander und unter Winkeln von mehr als 90° relativ zu dem Fließkanal (373), von dem sie abzweigen, erstrecken.

339. Vorrichtung nach Anspruch 333, bei der jeder Fließkanal (z.B.222) einen axialen Abschnitt (715) und einen Verbindungskanalabschnitt (710, 710''), der zwischen dem axialen Abschnitt des Fließkanals und seinem Verzweigungspunkt (342B', 342B'') verbunden ist, aufweist.

340. Vorrichtung nach einem der Ansprüche 332 bis 339, bei der jeder Verzweigungspunkt (z.B.342) und seine zugeordneten ersten und zweiten Ausgangsöffnungen (344,346) in einer gemeinsamen Ebene liegen.

341. Vorrichtung nach einem der Ansprüche 332 bis 339, bei der jeder Fließkanal (z.B.250), sein Verzweigungspunkt (342C) und seine ersten und zweiten Ausgangszweige (704,705) und die zugehörigen ersten und zweiten Ausgangsöffnungen (344,346) in einer gemeinsamen Ebene liegen.

342. Vorrichtung nach einem der Ansprüche 332 bis 341, bei der die ersten und zweiten Ausgangszweige (700'', 701'') in Ebenen liegen, die rechtwinklig zu der Längsachse der Teilereinrichtung (276'') sind.

343. Vorrichtung nach einem der Ansprüche 332 bis 342, bei der die jeweiligen ersten und zweiten Ausgangsöffnungen auf gegenüberliegenden Oberflächenabschnitten der Teilereinrichtung (276,290,292) liegen.

344. Vorrichtung nach einem der Ansprüche 332 bis 343, die weiterhin Einrichtungen zum Isolieren der entsprechenden Polymerfließströme, die aus der Teilereinrichtung durch die ersten und zweiten verzweigten Ausgangsöffnungen (344,346) mit einem gemeinsamen Verzweigungspunkt (z.B.342C) austreten, gegen die anderen Fließströme, die aus der Einrichtung durch andere erste und zweite verzweigte Ausgangsöffnungen mit anderen gemeinsamen Verzweigungspunkten austreten, umfaßt.

345. Vorrichtung nach Anspruch 344, die Einrichtungen zum Isolieren der jeweiligen Fließströme, die zu den Eingangsöffnungen (z.B.364,371) hin gerichtet sind, gegeneinander umfaßt.

346. Vorrichtung nach Anspruch 344, bei der die jeweiligen Isolierungseinrichtungen eine Mehrzahl von ringförmigen Nuten (349,370,376) umfassen, die in den Umfang der Teilereinrichtung (276,290,292) geschnitten sind und Dichtungsringe (348,369,376) aufnehmen, wobei jeweils eine Nut und ein Dichtungsring so positioniert ist, daß sie Öffnungen mit einem gemeinsamen Verzweigungspunkt gegen Öffnungen mit anderen gemeinsamen Verzweigungspunkten isolieren.

347. Vorrichtung nach Anspruch 345, bei der die Teilereinrichtung (276,290 oder 292) so ausgelegt ist, daß sie in eine Bohrung (z.B.286) in einem Angußverteilerblock (288) eingesetzt werden kann, und Dichtungseinrichtungen (348,369,375) stromabwärts von einer am weitesten vorn gelegenen Eintrittsöffnung und von den ersten und zweiten verzweigten Ausgangsöffnungen und stromaufwärts von der am meisten hinten gelegenen Eintrittsöffnung und von den ersten und zweiten Ausgangsöffnungen umfaßt zum Verhindern, daß Polymermaterial, das in die Öffnungen eintritt und aus ihnen austritt axial in der Bohrung (286) entsprechend stromabwärts der vordersten Dichtungseinrichtungen und stromaufwärts von der hintersten Dichtungseinrichtung lecken.

348. Vorrichtung nach Anspruch 332, bei der die Fließkanäle (220,222,250,257,258) sich in Richtungen allgemein der Länge nach von der Teilereinrichtung (276) zu ihren Verzweigungspunkten in einem vorwärtsgelegenen Endabschnitt (284) der Einrichtung erstrecken, die Fließkanäle in einem Gesamtmuster angeordnet sind, welches sich, wenn man auf transversale Ebenen durch die Einrichtung schaut, und kraft der Nachrichtung der Kanäle, wie sie sich nach vorwärts durch die Einrichtung erstrecken, von einem radialen Muster an dem rückwärtigen Ende der Einrichtung, wo jeder Kanal durch eine gemeinsame Ebene passiert, zu einem axial und im wesentlichen horizontal beabstandeten Muster von Verzweigungspunkten (342A bis E) in dem besagten vorwärtsgelegenen Endabschnitt, wo die Verzweigungspunkte in unterschiedlichen transversalen Ebenen gelegen sind, ändert und jeder Fließkanal aufgeteilt wird in gleich lange erste und zweite Ausgangszweige (700,701, usw.), die um einen Winkel relativ zu dem Fließkanal geneigt sind und die bei den entsprechenden ersten und zweiten Ausgangsöffnungen (344A bis E, 346A bis E) in unterschiedlichen Abschnitten des Umfangs des vorderen Endabschnittes (278) enden, wobei jede der ersten Ausgangsöffnungen in einer transversalen Ebene unterschiedlich von den anderen ist und die zweiten Ausgangsöffnungen in gleicher Weise in unterschiedlichen transversalen Ebenen sind und die Vielzahl der ersten Ausgangsöffnungen und die Vielzahl der zweiten Ausgangsöffnungen als ein sich in Längsrichtung erstreckendes Muster von Ausgangsöffnungen in den entsprechenden Umfangsoberflächenabschnitten der Einrichtung angeordnet sind.

349. Vorrichtung nach Anspruch 332, bei der die getrennten Fließkanäle einen zentralen axialen Fließkanal (250) und eine Vielzahl anderer Fließkanäle (220,222, 257,258) umfassen, die sich alle allgemein in Längsrichtung durch einen Abschnitt der Teilereinrichtung erstrecken, wobei der axiale Fließkanal (250) einen Endabschnitt (717) mit einem Verzweigungspunkt (342C') aufweist, der den axialen Fließkanal in erste und zweite Ausgangszweige (704',705') in einem vorwärtsgerichteten Endabschnitt der Einrichtung aufteilen, jeder der anderen Fließkanäle einen Endabschnitt, einen Verzweigungspunkt, der den Fließkanal in erste und zweite Ausgangszweige (z.B. 700', 701') aufteilt, und einen im wesentlichen transversalen Verbindungskanalabschnitt (z.B.710,711) zwischen dem Endabschnitt und dem Verzweigungspunkt aufweist, die Endabschnitte, Verbindungskanalabschnitte und Verzweigungspunkte für alle diese Fließkanäle in dem vorwärtsgerichteten Endabschnitt (284') der Einrichtung (276') gelegen sind, und die Fließkanäle in einem Gesamtmuster angeordnet sind, welches sich, gesehen auf transversale Ebene durch die Einrichtung und kraft der Nachrichtung der Fließkanäle, wie sie sich nach vorwärts durch die Einrichtung erstrecken, von einem radialen Muster an dem hinteren Ende (278') der Einrichtung, wo jeder Kanal durch eine gemeinsame transversale Ebene passiert, zu einer im wesentlichen koplanaren Anordnung ändert, die axial beabstandete Verbindungskanalabschnitte und eine im wesentlichen koplanare Anordnung von axial beabstandeten Verzweigungspunkten umfaßt, und bei der die ersten und zweiten Ausgangszweige (z.B.700',701'), die von dem gleichen Fließkanal (z.B.703') abgeteilt sind, im wesentlichen gleich in der Länge sind und an den jeweiligen ersten und zweiten Ausgangsöffnungen (344,346) enden, die in unterschiedlichen Abschnitten des Umfangs des vorwärtsgerichteten Endabschnittes gelegen sind, wobei jede der ersten Ausgangsöffnungen in einer unterschiedlichen transversalen Ebene von den anderen und die zweiten Ausgangsöffnungen in gleicher Weise in unterschiedlichen transversalen Ebenen liegen und wobei die Vielzahl der ersten Ausgangsöffnungen (344) und die Vielzahl der zweiten Ausgangsöffnungen (346) in entsprechenden in Längsrichtung ausgerichteten Reihen von beabstandeten Ausgangsöffnungen in den entsprechenden Umfangsabschnitten angeordnet sind.

350. Vorrichtung nach Anspruch 349, bei der der Verbindungskanalabschnitt (z.B.710), der Verzweigungspunkt (342) und die ersten und zweiten Ausgangsöffnungen (344,346) sich in der gleichen transversalen Ebene für jeden der besagten anderen Fließkanäle befinden und die ersten und zweiten Ausgangsöffnungen (344C', 346C') für den axialen Fließkanal (250) in der gleichen transversalen Ebene liegen.

351. Vorrichtung nach Anspruch 332, bei der die Fließkanäle (220,222,250,257,258) im wesentlichen ausgerichtet sind und sich axial durch einen Abschnitt der Teilereinrichtung (276'') erstrecken, die Fließkanäle jeweils einen Endabschnitt (715 bis 720), einen Verzweigungspunkt (342A'' bis E''), der den Fließkanal in erste und zweite Ausgangszweige (z.B. 704'', 705'') aufteilt, und einen im wesentlichen transversal gerichteten Verbindungskanalabschnitt (z.B.713'') zwischen ihrem Endabschnitt und Verzweigungspunkt aufweisen, wobei die Endabschnitte, Verbindungskanalabschnitte und Verzweigungspunkte für all die Fließkanäle in einem vorderen Endabschnitt der Einrichtung gelegen sind und die Fließkanäle in einem Gesamtmuster angeordnet sind, das sich, wenn man auf transversale Ebenen durch die Einrichtung schaut und kraft der Nachrichtung der Kanäle, wie sie sich axial vorwärts durch die Einrichtung erstrecken, von einem ausgerichteten Muster an dem rückwärtigen Ende der Einrichtung, bei dem jeder Kanal durch eine gemeinsame transversale Ebene passiert, zu einem axial und transversal beabstandeten Muster von Verbindungspunkten zwischen den Verbindungskanälen und ihren Fließkanälen, einem axial beabstandeten Muster von Verbindungskanälen und einem axial beabstandeten Muster von Verzweigungspunkten ändert, und die ersten und zweiten Ausgangszweige (z.B.704'', 705''), die sich von den gleichen axialen Fließkanälen abteilen, im wesentlichen gleich in der Länge sind und an entsprechenden ersten und zweiten Ausgangsöffnungen (344,346) enden, die auf einer gemeinsamen transversalen Ebene in unterschiedlichen Abschnitten des Umfangs des vorwärtigen Endabschnittes gelegen sind, wobei die Vielzahl erster Ausgangsöffnungen (344) und die Vielzahl zweiter Ausgangsöffnungen (346) in jeweiligen axial ausgerichteten Mustern von Ausgangsöffnungen in den unterschiedlichen Umfangsabschnitten angeordnet sind.

352. Vorrichtung nach Anspruch 332 mit einer Vielzahl von beabstandeten, im wesentlichen radial oder transaxial gerichteten Fließkanälen (367,373), die sich durch einen Abschnitt der Teilereinrichtung (290,292) erstrecken, und einer Vielzahl von beabstandeten, axial ausgerichteten Eintrittsöffnungen (364,371), die entlang der Eintrittszone positioniert sind, mit den Fließkanälen kommunizieren und sich in unterschiedlichen transversalen Ebenen befinden, wobei jeder der Fließkanäle (367,373) einen Verzweigungspunkt innerhalb der Einrichtung besitzt, bei dem der Fließkanal in erste und zweite Ausgangszweige (368, 368'; 374,374') von im wesentlichen gleicher Länge aufgeteilt wird, die kommunizieren mit und enden bei den jeweiligen ersten und zweiten Ausgangsöffnungen (366,366'; 372,372'), die in den verschiedenen Ausgangszonen positioniert sind, und die Vielzahl der ersten Ausgangsöffnungen (366,372) und die Vielzahl der zweiten Ausgangsöffnungen (366',372') in jeweiligen Anordnungen von beabstandeten Ausgangsöffnungen in den betreffenden Ausgangszonen angeordnet sind, wobei jede Eingangsöffnung und ihre zugeordnete Ausgangsöffnung z.B. in einer gemeinsamen transversalen Ebene liegen.

353. Vorrichtung nach einem der Ansprüche 348 bis 352, bei der der vorwärtsgerichtete Endabschnitt der Einrichtung Isolationseinrichtungen enthält, um Fließströme, die von den Ausgangsöffnungen (344, 346) austreten, voneinander isoliert zu halten.

354. Vorrichtung nach Anspruch 353, bei der die Isolationseinrichtung eine Vielzahl von Nuten umfaßt, die in den Umfang der Einrichtung (276'') eingeschnitten sind, von denen jede zwischen zwei Ausgangsöffnungen (344,346) gelegen ist und jede für die Aufnahme eines Dichtungsgliedes, vorzugsweise in Form eines expandierbaren Kolbenringes, bestimmt ist.

355. Vorrichtung nach Anspruch 354, bei der die Isolationseinrichtung auch einen Metallstreifen umfaßt, der in jeder Nut sitzt.

356. Vorrichtung nach einem der Ansprüche 348 bis 355, bei der der vorwärtsgerichtete Endabschnitt der Teilereinrichtung ausgelegt ist, damit er in ein formgleich gestaltetes Loch (z.B.286) in einem Angußverteilerblock (288) eingesetzt werden kann, und die Dichtungsglieder angrenzend an und stromabwärts von dem am weitesten vorn gelegenen Paar erster und zweiter Ausgangsöffnungen (344,346-B) und benachbart zu und stromaufwärts von dem am weitesten hinten gelegenen Paar erster und zweiter Ausgangsöffnungen (344, 346-A) umfaßt, um im wesentlichen zu verhindern, daß Fließströme, die aus den Ausgangsöffnungen austreten, axial in dem besagten Loch stromabwärts vorbei an den am weitesten vorn gelegenen Dichtungsgliedern und stromaufwärts vorbei an den am weitesten hinten gelegenen Dichtungsgliedern fließen.

357. Vorrichtung nach Anspruch 352, bei der die axiale Mittellinie jedes Fließkanals (z.B.367) die axiale Mittellinie von jedem seiner zugeordneten Ausgangszweige (368,368') an einem Punkt, der gegen die axiale Mittellinie der Einrichtung in der Richtung der Eingangsöffnung versetzt ist, und unter einem Winkel von 100° bis 110°, z.B. 105°, schneidet.

358. Vorrichtung nach Anspruch 352 oder 357, bei der der Umfangsbogen von der Mitte von jeder Eingangsöffnung zu der Mitte von jeder ihrer zugehörigen Ausgangsöffnungen etwa 90° ist.

359. Vorrichtung nach einem der Ansprüche 352,357 oder 358, bei der jeder Fließkanal und der Verzweigungspunkt, erste und zweite Ausgangszweige und diesen zugeordnete erste und zweite Ausgangsöffnungen in der gleichen transversalen Ebene liegen.

360. Vorrichtung nach einem der Ansprüche 352 und 357 bis 359, bei der die ersten und zweiten Ausgangszweige (374,374') eines Fließkanals (373) sich in entgegengesetzten Richtungen unter einem Winkel von weniger als 90° relativ zueinander erstrecken und jeder zu dem Fließkanal bei einem Winkel liegt, der größer als 90° ist.

361. Vorrichtung nach Anspruch 352, bei der der Umfangsbogen von der Mitte jeder Eingangsöffnung (364,371) zu der Mitte von jeder ihrer zugeordneten Ausgangsöffnungen (366,366'; 372,372') 90° oder größer, z.B. 90° bis 120°, ist und jeder Verzweigungspunkt so konfiguriert ist, daß Flußstagnation an dem Verzweigungspunkt verhindert wird.

362. Vorrichtung nach einem der Ansprüche 352 und 357 bis 361, die Isolationsglieder zum Isolieren von Fließströmen, die durch die Eingangsöffnungen (364, 371) gerichtet sind und durch diese hindurchtreten, gegeneinander und zum Isolieren der Fließströme, die die Teilereinrichtung durch die ersten und zweiten Ausgangsöffnungen (366,366'; 372,372') mit einem gemeinsamen Verzweigungspunkt verlassen, gegen die anderen Fließströme, die die Einrichtung durch ihre jeweiligen ersten und zweiten Ausgangsöffnungen mit anderen Verzweigungspunkten verlassen, umfaßt.

363. Vorrichtung nach Anspruch 362, bei der die Isolationsglieder eine Vielzahl ringförmiger Nuten umfassen, die in den Umfang der Einrichtung (290,292) eingeschnitten sind, wobei Nuten so liegen, daß sie die Öffnungen mit einem gemeinsamen Verzweigungspunkt gegen andere Öffnungen mit anderen Verzweigungspunkten isolieren, und ein expandierbarer Kolbenring in jede ringförmige Nut eingesetzt ist.

364. Vorrichtung nach Anspruch 362, die Dichtungsglieder benachbart zu und stromabwärts von der am weitesten vorn gelegenen Eingangsöffnung und von ihren ersten und zweiten Ausgangsöffnungen und Dichtungsglieder benachbart zu und stromaufwärts von der am weitesten hinten gelegenen Eingangsöffnung und ihren ersten und zweiten Ausgangsöffnungen umfaßt, um im wesentlichen zu verhindern, daß Flüsse, die in diese Öffnungen eintreten und aus diesen austreten, axial entlang einer Bohrung fließen, in der die Einrichtung eingebaut werden soll, vorbei an den besagten Dichtungsgliedern.

365. Vorrichtung nach Anspruch 13 zum gleichzeitigen Spritzgießen einer Vielzahl von Gegenständen mit einer Vielzahl von Schichten, die aus Strömen aus wenigstens zwei Spritzmaterialien mit unterschiedlichen Zusammensetzungen gebildet sind, die eine Vielzahl von Spritzdüsen (296) und eine Vielzahl von Zuführungsleitungseinrichtungen (220,222,250,257, 258) entsprechend der Anzahl von Schichten in den Aufbauten umfaßt und die weiterhin gekennzeichnet ist durch Einrichtungen (z.B.276,290,292), die die Zuführungsleitungseinrichtungen mit den Düsen verbinden, wobei die Einrichtungen eine Reihe von verzweigten Kanälen (z.B.700,701; 368,368'; 374,374') umfassen, die sich von jeder der Zuführungsleitungseinrichtungen erstrecken, wobei die Länge und die Verzweigungswinkel der Kanäle, die für Verbindung mit einer beliebigen Zuführungsleitungseinrichtung sorgen, im wesentlichen gleich sind, um dadurch identische Behandlung jedes Spritzmaterials, das an die verschiedenen Spritzdüsen abgegeben wird, zu gewährleisten.

366. Vorrichtung nach Anspruch 365, die erste Teilereinrichtungen (290), die für Verbindung mit jeder der besagten Leitungen zum Empfangen eines Stromes aus Spritzmaterial von dieser sorgen und den besagten Strom in eine Vielzahl von Zweigen teilen, und zweite Teilereinrichtungen (292) umfaßt, die für Verbindung mit jedem der besagten Zweige zur Aufnahme eines Stromes aus Spritzmaterial von diesem sorgen und ihn in Unterzweige teilen, wobei der Winkel zwischen jedem Zweig und seiner zugeordneten Leitung im wesentlichen der gleiche bei irgendeiner ersten Teilereinrichtung (290) ist, der Winkel zwischen jedem Unterzweig und seinem zugeordneten Zweig an irgendeiner zweiten Teilereinrichtung (292) im wesentlichen der gleiche ist, und die Länge jedes Zweiges der Teilereinrichtung (290) und von jeder der zweiten Teilereinrichtungen (292) gleich sind, um dadurch die besagte gleiche Behandlung zu erreichen.

367. Vorrichtung nach Anspruch 13 zum gleichzeitigen Injektionsspritzen einer Vielzahl von Gegenständen. von denen jeder eine Vielzahl von Schichten aufweist, die aus Strömen von Spritzmaterialien mit Zusammensetzungen, wie sie durch die Schichten des Gegenstandes erforderlich sind, gebildet werden, die eine Vielzahl von Spritzdüsen (296), eine Vielzahl von im wesentlichen parallelen Zuführungsleitungseinrichtungen (220,250,222,257,258) zum Richten des Flusses aus den Spritzmaterialien und Einrichtungen, die die Düsen mit den Leitungseinrichtungen verbinden, umfaßt, und die weiterhin gekennzeichnet ist durch die Verbindungseinrichtungen, die Angußverteiler-Verlängerungseinrichtungen (276) zum Teilen des Stromes aus Spritzmaterial von jeder der besagten Leitungen und Reorientierung der geteilten Ströme für weitere Teilung umfassen, wobei die Angußverteiler-Verlängerungseinrichtung einen langgestreckten, z.B. zylindrischen, Block mit einer Vielzahl von primären Kanälen (220,222,250,257,258) umfaßt, von denen jeder für Verbindung mit einer entsprechenden Zuführungsleitungseinrichtung sorgt, diese Kanäle Abschnitte aufweisen, die sich allgemein axial von dem Block erstrecken und von verschiedener Länge sind und die Kanäle, die eine Vielzahl von Zweigen verbinden (z.B.700,701), sich von diesen zu der Oberfläche des Blockes erstrecken und die Zweige, die sich von jedem Kanal erstrecken, von der gleichen Länge sind und jeweils im wesentlichen den gleichen Winkel mit dem Kanal bilden.

368. Vorrichtung nach Anspruch 367, bei der die Zweige von den Kanälen die Oberfläche des Blockes entlang einer Linie treffen, die angenähert parallel zu der Achse des Blockes ist.

369. Vorrichtung nach Anspruch 367 oder Anspruch 368, bei der die Angußverteiler-Verlängerungseinrichtungen (276) innerhalb einer Angußverteilerblockeinrichtung (288) mit Kanälen darin gelegen sind, wobei wenigstens ein Angußverteilerblockkanal mit einem Zweig der Angußverteiler-Verlängerungseinrichtung durch eine bogenförmige Leitung in der Oberfläche der Angußverteiler-Verlängerungseinrichtung verbunden ist.

370. Vorrichtung nach Anspruch 367, 368 oder 369, bei der der Block (276) in eine Bohrung (286) in einer Angußverteilerblockeinrichtung (288) paßt, die Kanäle (z.B.350,351) hat, die für Verbindung mit jedem Zweig der Angußverteiler-Verlängerungseinrichtung sorgt, und jeder der Angußverteilerblockkanäle in einer ersten Teilereinrichtung (290) endet zum Teilen des Stromes aus Spritzmaterial in diesem Angußverteilerblockkanal in eine Vielzahl von Unterströmen und vorzugsweise jeder der Unterströme in einer zweiten Teilereinrichtung (292) zum Teilen der Unterströme in eine Vielzahl von Endströmen (z.B.356A, 357A) endet.

371. Verfahren nach einem der Ansprüche 1 bis 12, das das Einrichten einer Vielzahl von Strömen, z.B. parallelen Strömen, aus Spritzmaterial mit Zusammensetzungen gemäß den Erfordernissen der Schichten der Gegenstände für die Abgabe an die Spritzdüsen (296), Teilen jedes dieser Ströme in eine Vielzahl von Zweigen und zwar mehrfach, wobei der Winkel zwischen jedem Zweig und dem Strom vor dem Verzweigen an jedem Punkt der Verzweigung (z.B.342) im wesentlichen der gleiche für jeden Zweig ist und der Abstand zwischen Punkten der Verzweigung nach dem ersten Verzweigen im wesentlichen der gleiche für jeden Zweig ist, wodurch jedes vorgegebene Spritzmaterial auf seinem Weg zu einer Spritzdüse (296) einem Weg folgt, der im wesentlichen identisch zu dem Weg ist, der zu jeder anderen Düse führt.

372. Verfahren nach einem der Ansprüche 1 bis 12, das das Einrichten einer Vielzahl von im wesentlichen parallelen Strömen aus Spritzmaterial mit Zusammensetzungen, wie sie für die Schichten der Gegenstände erforderlich sind, winkelmäßiges Richten jedes dieser Ströme zu ersten Teilungspunkten (z.B.342A), Teilen jeden dieser Ströme bei diesen ersten Teilungspunkten in zwei Zweige (708,709), wobei jeder der Zweige an irgendeinem Teilungspunkt im wesentlichen den gleichen Winkel mit dem Strom, von dem er herrührt, wie jeder andere Zweig bildet, Führen jeden dieser Zweige zu zweiten Teilungspunkten (290), Teilen jeden dieser Zweige in zwei Unterzweige (352A, 353A), wobei jeder dieser Unterzweige näherungsweise unter einem rechten Winkel zu dem Zweig (350A, 351A), von dem er herrührt, steht, Führen jeden dieser Unterzweige zu dritten Teilungspunkten (292), Teilen jeden dieser Unterzweige in zwei Endlinien (356A, 357A), wobei jede der Endlinien bei einem dritten Teilungspunkt den gleichen Winkel mit dem Unterzweig (352A), von dem er herrührt, wie irgndeine andere Endlinie bildet, und Führen jede der Endlinien zu einer entsprechenden Düse (296), zu einer entsprechenden Düsenzuführungsblockeinrichtung (294), die zwischen der Endlinie und der Düse gelegen ist, oder zu einem vierten Teilungspunkt, wobei die Länge von jedem Zweig, Unterzweig und der Endlinie für das Spritzmaterial einer Schicht des mehrschichtigen Gegenstandes im wesentlichen die gleiche wie für jeden anderen entsprechenden Zweig, Unterzweig und die Endlinie für das Material ist.

373. Vorrichtung nach Anspruch 13, die eine Vielzahl von identischen Ventilgliedern (z.B.800), und zwar eines in jeder Düseneinrichtung (296), für identisches Beginnen, Regeln und Beenden des Flusses aus Polymermaterialien durch die jeweiligen Düsen; Antriebseinrichtungen, die für gleichzeitiges und identisches Antreiben der Vielzahl von Ventilgliedern ausgelegt sind und gemeinsame Bewegungseinrichtungen (z.B.856) umfassen, mit denen jedes der Ventilglieder (z.B.800) wirkungsmäßig auf eine Weise verbunden ist, die gleichzeitig identische Bewegungen all der Ventilglieder innerhalb der Coinjektionsdüsen-Einrichtung, innerhalb der sie arbeiten, liefert, um für gleichzeitige und identische Steuerung über den Beginn, Regelung und Beendigung des Fließens von Polymermaterialien durch alle die Coinjektionsdüsen-Einrichtungen (296) zu sorgen; und Steuereinrichtungen (2040) umfaßt, die mit den gemeinsamen Bewegungseinrichtungen (z.B. 856) verbunden sind, zum Bewegen der gemeinsamen Bewegungseinrichtungen in einer gewünschten Mode, um die identischen gleichzeitigen Bewegungen der Ventilglieder und die besagten identischen gleichzeitigen Fließsteuerungen zu bewirken.

374. Vorrichtung nach Anspruch 373, bei der die Antriebseinrichtungen eine Vielzahl von Pendelschlitten (z.B.860) umfaßt, von denen jeder bewegbar mit der gemeinsamen Bewegungseinrichtung (z.B.856) verbunden ist und jedes der Ventilglieder ein langgestrecktes Glied (800) enthält, das einen vorderen Endabschnitt aufweist, der innerhalb seiner Coinjektionsdüsen-Einrichtung (296) arbeiten kann, und ein hinteres Ende aufweist, das mit einem Pendelschlitten (860) verbunden ist, wobei jeder Pendelschlitten Einrichtungen (z.B.868,878) in Zuordnung und Wirkverbindung mit der Bewegungseinrichtung derart aufweist, daß die Bewegung der gemeinsamen Bewegungseinrichtung jeden der Pendelschlitten (z.B.860) und jedes der damit verbundenen Ventilglieder identisch und gleichzeitig bewegt.

375. Vorrichtung nach Anspruch 374, bei der das Ventilglied einen langgestreckten Stift (834) umfaßt und die gemeinsame Bewegungseinrichtung eine langgestreckte Stiftpendelnockenstange (850) enthält.

376. Vorrichtung nach Anspruch 374 oder Anspruch 375, bei der das Ventilglied eine langgestreckte Manschette (800) umfaßt und die gemeinsame Bewegungseinrichtung eine langgestreckte Manschettenpendelnockenstange (856) umfaßt.

377. Vorrichtung nach Anspruch 373, bei der jede Düseneinrichtung (296) einen die Ventilglieder aufnehmenden Zentralkanal aufweist und bei der die Ventilglieder (800,834) umfassen: Eine Vielzahl identischer erster Ventilglieder (800), wobei eines für jede der Coinjektionsdüsen-Einrichtungen (296) vorgesehen ist und mit deren Zentralkanal (540) kommuniziert und jedes ausgelegt ist, um darin identisch das Fließen von Polymermaterialien dort hindurch in Gang zu setzen, zu regulieren und zu beenden, und eine Vielzahl identischer zweiter Ventilglieder (834), von denen jedes hin- und herbewegbar innerhalb eines entsprechenden der ersten Ventilglieder (800) angebracht ist und jedes ausgelegt ist, um darin identisch das Fließen von Polymermaterial durch das erste Ventilglied in Gang zu setzen, zu regulieren und zu beenden; wobei die Vorrichtung außerdem umfaßt: Erste Antriebseinrichtungen (860), die innerhalb eines Gehäuses (902) sitzen, für Bewegung darin zum simultanen und identischen Antreiben der ersten Ventilglieder (800), wobei eine erste Antriebseinrichtung erste gemeinsame Bewegungseinrichtungen (856) umfaßt, mit der jedes der ersten Ventilglieder in Wirkverbindung auf eine Weise verbunden ist, die gleichzeitig identische Bewegungen von jedem ersten Ventilglied (800) innerhalb der Coinjektionsdüsen-Einrichtung (296), innerhalb der es arbeitet, erzeugt, und zweite Antriebseinrichtungen (844) enthält, die innerhalb des Gehäuses zur Bewegung darin sitzen, für gleichzeitiges und identisches Antreiben der Vielzahl der zweiten Ventilglieder (834), wobei die zweiten Ventilglieder eine gemeinsame Bewegungseinrichtung (850) besitzen, mit der jedes der zweiten Ventilglieder auf eine Weise verbunden ist, auf die gleichzeitig identische Bewegungen jedes zweiten Ventilgliedes innerhalb der Coinjektionsdüsen-Einrichtung, innerhalb derer es arbeitet, erfolgen, und die Antriebseinrichtung in jeder Coinjektionsdüsen-Einrichtung gleichzeitige, identische Steuerung über den Beginn, die Regelung und die Beendigung des Fließens von Polymermaterialien durch jede der Coinjektionsdüsen-Einrichtungen erzeugt,
erste Steuereinrichtungen (918,2040), die mit der ersten gemeinsamen Bewegungseinrichtung verbunden sind, um die erste gemeinsame Einrichtung in einer gewünschten Mode zu bewegen, durch die identische gleichzeitige Bewegungen und die besagten identischen gleichzeitigen Flußsteuerungen erzeugt werden,
zweite Steuereinrichtungen (906,2040), die mit der zweiten gemeinsamen Bewegungseinrichtung (850) verbunden sind, um die zweite gemeinsame Einrichtung in einer gewünschten Mode zu bewegen, durch die identische, gleichzeitige Bewegungen und die besagten identischen, gleichzeitigen Flußsteuerungen erzeugt werden.

378. Vorrichtung nach Anspruch 377, die außerdem gemeinsame Steuereinrichtungen (2040) umfaßt, die mit jeder der ersten Steuereinrichtungen (918,2040) und der zweiten Steuereinrichtungen (906,2040) verbunden sind, um die jeweiligen ersten und zweiten gemeinsamen Bewegungseinrichtungen in einer gemeinsamen gewünschten Mode zu bewegen, durch die unabhängige, gleichzeitige und nichtgleichzeitige Bewegungen der ersten und zweiten gemeinsamen Bewegungseinrichtungen erzeugt werden.

379. Vorrichtung nach Anspruch 377 oder Anspruch 378, bei der die erste Antriebseinrichtung auch eine Vielzahl erster Pendelglieder (860) enthält, von denen jedes mit der ersten gemeinsamen Bewegungseinrichtung (856) bewegbar verbunden ist, und jedes der ersten Ventilglieder ein langgestrecktes Glied (800) enthält, das einen vorwärtigen Endabschnitt, der innerhalb seiner zugeordneten Düseneinrichtung arbeitet, und ein hinteres Ende, das mit einem zugeordneten ersten Pendelglied verbunden ist, aufweist, wobei jedes erste Pendelglied (856 ) Einrichtungen (868) in Wirkverbindung mit der ersten Bewegungseinrichtung (856) derart aufweist, daß die Bewegung der ersten gemeinsamen Bewegungseinrichtung (918) jedes der Pendelglieder und jedes der ersten damit verbundenen Ventilglieder (800) identisch und gleichzeitig bewegt.

380. Vorrichtung nach Anspruch 378 oder 379, bei der die zweite Antriebseinrichtung auch eine Vielzahl zweiter Pendelglieder (844) enthält, von denen jedes bewegbar mit der zweiten gemeinsamen Bewegungseinrichtung (850) verbunden ist, und jedes der zweiten Ventilglieder ein langgestrecktes Glied (834) enthält, das einen vorwärtigen Endabschnitt, der innerhalb seiner zugehörigen Düseneinrichtung (296) arbeiten kann, und ein hinteres Ende, das mit einem zugehörigen zweiten Pendelglied verbunden ist, aufweist, wobei jedes zweite Pendelglied Einrichtungen (846) in Wirkverbindung mit der zweiten Bewegungseinrichtung (850) derart besitzt, daß die Bewegung der zweiten gemeinsamen Bewegungseinrichtung jedes der Pendelglieder und jedes der zweiten damit verbundenen Ventilglieder identisch und gleichzeitig bewegt.

381. Vorrichtung nach Anspruch 379 oder 380, bei der jedes zweite Ventilglied einen langgestreckten Stift (834) umfaßt und die erste gemeinsame Bewegungseinrichtung eine langgestreckte Stiftpendelnockenstange (850) umfaßt.

382. Vorrichtung nach Anspruch 379, 380 oder 381, bei der jedes erste Ventilglied (800) eine langgestreckte mit Öffnung versehene Manschette aufweist und die zweite gemeinsame Bewegungseinrichtung eine langgestreckte Manschettenpendelnockenstange (856) umfaßt.

383. Vorrichtung nach einem der Ansprüche 373 bis 382, bei der die Antriebseinrichtung Kompensationseinrichtungen enthält, die mit den Ventilgliedern, z.B. jedem der ersten Ventilglieder, verbunden sind, um axiales Spiel in der Antriebseinrichtung, in den Ventilgliedern oder in beiden und Dimensionsabweichungen in zugeordneten Bauteilen zu kompensieren, wobei die Kompensationseinrichtung z.B. eine Druckfeder (888) umfaßt, die zwischen den Ventilgliedern und der gemeinsamen Bewegungseinrichtung angebracht ist.

384. Vorrichtung nach Anspruch 379 oder Anspruch 383, bei der die Kompensationseinrichtung (888) jedem ersten Ventilglied (800) und jedem ersten Pendelglied (860) zugeordnet ist, um axiales Spiel in der Antriebseinrichtung und/oder dem ersten Ventilglied und gegebenenfalls auftretende Dimensionsabweichungen in zugeordneten Bauteilen zu kompensieren, wobei die Kompensationseinrichtung z.B. eine Druckfeder (888) umfaßt, die zwischen jedem ersten Ventilglied (800) und jedem ersten Pendelglied (856) angebracht ist.

## Revendications

1. Procédé pour former des articles en matière plastique multicouche, dans lequel ledit procédé implique l'utilisation d'une machine de moulage par injection multicavité, dans laquelle un flux de matière combiné est injecté à partir de chacun d'une pluralité de moyens de buse de co-injection (296) de ladite machine dans une cavité d'injection associée (102) pour former chaque article, et ledit procédé comprend les étapes consistant à :
- fournir des matières polymères pour former des couches d'articles, et déplacer des flux de celles-ci séparément vers chacun des moyens de buse (296),
- former dans chacun de plusieurs moyens de buse (296) des flux combinés qui sont substantiellement identiques, à partir des flux de matière séparés, et
- injecter les flux combinés pour former les articles en matière plastique multicouche.

2. Procedé suivant la revendication 1 caractérisé en ce qu'on soumet des courants de matières correspondantes à des conditions d'écoulement sensiblement identiques, par exemple suffisantes pour fournir les courants combinés sensiblement identiques.

3. Procédé suivant la revendication 2 caractérisé en ce que les conditions d'écoulement sensiblement identiques sont obtenues en prévoyant des trajets d'écoulement ayant une configuration sensiblement identique pour chaque courant de matière correspondant.

4. Procédé suivant la revendication 2 caractérisé en ce que les conditions d'écoulement sensiblement identiques sont obtenues en prévoyant pratiquement le même trajet d'écoulement et les mêmes conditions d'écoulement pour chaque courant de matière correspondant.

5. Procédé suivant l'une quelconque des revendications 1 à 4 caractérisé en ce que l'étape de formation des courants combinés comprend la réalisation d'une commande pratiquement simultanée de l'écoulement et de l'absence d'écoulement des courants de matières correspondants.

6. Procédé suivant la revendication 5 caractérisé en ce que la commande est effectuée par la mise en oeuvre d'un moyen de commande de l'écoulement, agissant positivement, dans chacune des buses.

7. Procédé suivant l'une quelconque des revendications 1 à 4 caractérisé en ce que l'étape de formation des courants combinés comprend la réalisation, d'une manière positive, du départ et de l'arrêt de l'écoulement des courants de matières correspondants, pratiquement en même temps, dans les buses.

8. Procédé suivant la revendication 7 caractérisé en ce que des moyens de commande de l'écoulement (par exemple 800,834), agissant d'une manière positive, sont utilisés, dans chacune des buses, pour commander le début et la fin de l'écoulement.

9. Procédé suivant l'une quelconque des revendications 1 à 8, pour produire des articles comportant au moins trois couches, caractérisé en ce qu'il comprend les étapes consistant à former chacun des courants combinés à partir de courants de matières correspondant à deux des couches, tout en empêchant que la matière correspondant à une autre couche ne s'écoule, à augmenter la pression de la matière arrêtée jusqu'à un niveau supérieur à la pression du courant combiné des deux couches, et à établir un écoulement de la matière ainsi mise sous pression de telle façon qu'elle forme, avec les autres courants de matières, un courant combiné à plusieurs couches comportant au moins trois couches.

10. Procédé suivant la revendication 9 caractérisé en ce qu on permet l'écoulement de la matière mise sous pression pratiquement en même temps dans chacune des différentes buses.

11. Procédé suivant la revendication 9 ou la revendication 10 caractérisé en ce que chacune des matières arrêtées correspondantes, devant être introduites dans les différentes buses (296), est soumise à une pression commune.

12. Procédé suivant l'une quelconque des revendications 9 à 11 caractérisé en ce que la pression est fournie par une source de pression commune (par exemple 252), tandis que les matières sont arrêtées par suite d'un blocage positif de celles-ci, et l'écoulement des matières ainsi mises sous pression est réalisé, pratiquement simultanément, dans les buses (296), par un déblocage positif de ces matières.

13. Dispositif pour former une pluralité d'articles en matière plastique multicouche, comprenant une pluralité de moyens de buse d'injection (296), chacun pour injecter des matières dans une cavité associée d'une pluralité de cavités (102) pour former les articles, des moyens (208 à 212) pour fournir des flux de matières destinés à l'injection pour former des couches d'articles, des moyens (288, 294) associés aux moyens de buse pour canaliser les flux de matière séparément les uns des autres vers chacun des moyens de buse (296), des moyens (232, 234, 252, 260, 262) pour déplacer les flux de matière le long de leurs canaux respectifs jusqu'aux moyens de buse respectifs (296), et des moyens (540, 462, 482, 502, 522) pour conbiner dans chaque moyen de buse les flux déplacés vers celui-ci, pour former des flux combinés, qui sont substantiellement identiques dans lesdits moyens de buse (296), destinés à l'injection dans leurs cavités d'injection associées (102) pour former lesdits articles.

14. Appareil suivant la revendication 13 caractérisé en ce que la buse (296) a une zone de combinaison de courants (546) voisine d'une extrémité de sortie de cette buse et des passages séparés (460, 480, 500, 520) pour les courants de matières, lesquels communiquent avec la zone de combinaison et les moyens de canalisation (288, 294).

15. Appareil suivant la revendication 13 ou la revendication 14 caractérisé en ce que les moyens de canalisation (288, 294) et les moyens de mise en mouvement (232, 234, 252, 260, 262) interviennent pour soumettre des courants de matières correspondants, pénétrant dans les différentes buses, à des conditions d'écoulement sensiblement identiques.

16. Appareil suivant la revendication 15 caractérisé en ce que les moyens de canalisation (288) pour des courants de matières correspondants assurent des types d'écoulement ayant une configuration sensiblement identique.

17. Appareil suivant la revendication 15 caractérisé en ce que les moyens de canalisation (288, 294) interviennent pour soumettre les courants correspondants aux mêmes trajets d'écoulement et aux mêmes conditions d'écoulement.

18. Appareil suivant l'une quelconque des revendications 13 à 17 caractérisé en ce qu'il comporte un moyen (par exemple 800, 860, 856; 834, 844, 850) afin d'effectuer une commande pratiquement simultanée de l'écoulement ou de l'absence d'écoulement des courants de matières correspondants dans les différentes buses (296).

19. Appareil suivant la revendication 18 caractérisé en ce que le moyen de commande comporte un moyen de commande d'écoulement (800, 834), agissant d'une manière positive, pour chacune des buses (296).

20. Appareil suivant l'une quelconque des revendications 13 à 17 caractérisé en ce qu'il comporte des moyens (par exemple 800, 860, 856; 834, 844, 850) intervenant pour réaliser un départ et un arrêt positifs de l'écoulement des courants de matières correspondants, pratiquement en même temps, dans les différentes buses (296).

21. Appareil suivant la revendication 20 caractérisé en ce que lesdits moyens comprennent un moyen de commande d'écoulement (800, 834), agissant d'une manière positive, dans chacune des buses (296).

22. Appareil suivant l'une quelconque des revendications 13 à 20, destiné à être utilisé pour la production d'articles ayant au moins trois couches, caractérisé en ce que chacune des buses (296) est associée à un moyen de commande de l'écoulement (800, 834) pour empêcher l'écoulement de l'une des matières (par exemple C) destinée à former une couche correspondante des articles, et un moyen (252) pour élever la pression de la matière arrêtée à un niveau supérieur à la pression des matières (A, B, etc...) qui doivent former les autres couches correspondantes des articles, le moyen (800, 834) de commande de l'écoulement pouvant intervenir lorsque ladite matière (C) a été ainsi mise sous pression, pour établir l'écoulement de la matière, afin de produire le courant combiné à plusieurs couches comportant au moins trois couches dont l'une est formée par la matière (C).

23. Appareil suivant la revendication 22 caractérisé en ce que les moyens de commande de l'écoulement (par exemple 800, 860, 856; 834, 844, 850) sont actifs pratiquement en même temps pour chacune des buses (296), afin d'établir simultanément le départ de l'écoulement de la matière (par exemple C) dans les différentes buses (296).

24. Appareil suivant la revendication 22 ou la revendication 23 caractérisé en ce qu'il comporte un moyen de mise en pression (par exemple 252) qui intervient pour exercer une pression commune sur la matière (par exemple C) commandée par les moyens de commande d'écoulement (800, 834) associés aux différentes buses (296).

25. Appareil suivant l'une quelconque des revendications 13 à 20 caractérisé en ce que les moyens de commande de l'écoulement (800, 834) assurent un blocage positif de la matière (par exemple C) qui est commandés par eux tandis que cette matière est mise sous pression, et un moyen (850, 856) est prévu pour faire fonctionner, pratiquement en même temps, les moyens de commande d'écoulement (800, 834) pour la totalité des différentes buses, afin de réaliser un déblocage positif de la matière mise en pression et à d'établir ainsi le départ de l'écoulement de cette, matière pratiquement en même temps, dans toutes les buses (296).

26. Appareil suivant l'une quelconque des revendications 22 à 25 caractérisé en ce que les différentes buses comportent des moyens de commande d'écoulement intervenant pour commander l'écoulement et/ou l'absence d'écoulement d'au moins deux courants de matières.

27. Appareil suivant l'une quelconque des revendications 22 à 26 caractérisé en ce que chaque moyen de commande d'écoulement est ou sont sensiblement identiques dans les différentes buses.

28. Procédé suivant la revendication 1 caractérisé en ce qu'il comporte en outre les étapes consistant à alimenter séparément chaque buse (296) avec un courant de matière du type polymère en fusion, pour chaque couche des articles devant être produits , les courants séparés de chaque matière étant alimentés, suivant des trajets d'écoulement sensiblement identiques, vers les différentes buses, à empêcher positivement que des courants de matières en fusion correspondants ne pénètrent, pratiquement en même temps, dans un canal central de combinaison (540) de chaque buse, à mettre en pression les courants de matières en fusion, bloqués positivement, dans les différentes buses, a supprimer sensiblement en même temps le blocage afin de permettre aux courants de matières en fusion correspondants de s'écouler , sensiblement en même temps, dans les canaux centraux et à d'être injectés dans les empreintes d'injection (102) juxtaposées aux buses (296), et à interrompre ensuite positivement, pratiquement en même temps, l'écoulement de chaque courant correspondant, pratiquement simultanément, afin de terminer les injections et d'achever l'opération d'injection.

29. Procédé suivant la revendication 1, dans lequel des articles sensiblement identiques sont moulés pratiquement simultanément, caractérisé en ce qu'il comporte en outre les étapes consistant à alimenter les courants de matières en fusion en direction d'une pluralité de buses (296) de telle façon que les courants de matières, destinés à former les couches dans les articles, passent, le long de trajets d'écoulement séparés sensiblement égaux, en direction des buses, à appliquer (par exemple par/252) des pressions sensiblement identiques aux courants de matières en fusion correspondants, afin d'établir des écoulements, sensiblement identiques, des matières correspondantes en direction de chaque buse (296) et à partir de celle-ci, à réaliser positivement le départ, le déroulement et l'arrêt de l'écoulement des matières correspondantes, d'une manière sensiblement identique, dans toutes les buses, en utilisant des vannes (800, 834) sensiblement identiques dans les buses, et à faire fonctionner toutes les vannes d'une manière sensiblement simultanée et identique.

30. Procédé suivant la revendication 28 ou la revendication 29 caractérisé en ce qu'il comporte une étape consistant à établir des courants combinés sensiblement identiques dans les différentes buses.

31. Procédé suivant la revendication 28,29 ou 30 caractérisé en ce qu'il comporte une étape de mise en pression des courants de matières correspondants par une source de pression commune (par exemple 252).

32. Procédé suivant l'une quelconque des revendications 28 à 31 caractérisé en ce qu'il comporte une étape de mise en pression, pratiquement en même temps, des courants de matières correspondants.

33. Procédé suivant la revendication 1 caractérisé en ce qu'il est adapté à la production d'articles en matière plastique à au moins trois couches, par exemple à cinq couches, en plusieurs matières, tels que des conteneurs ayant des parois latérales avec des parties extrêmes marginales, les épaisseurs totales des parois latérales, en-dessous des parties extrêmes marginales, allant en moyenne de 0,010 pouce à 0,035 pouce (0,25 à 0,89 millimètre).

34. Procédé suivant la revendication 1 ou la revendication 33 caractérisé en ce que les vannes (800, 834) intervenant dans ou pour chacune des buses (296) sont utilisées pour commander la combinaison des courants séparés fournis à chaque buse.

35. Procédé suivant la revendication 33 ou la revendication 34 caractérisé en ce que la vanne (800, 834), prévue dans un canal central de chaque buse (296), est utilisée pour commander positivement l'écoulement et l'absence de l'écoulement des matières respectives vers et dans le canal central, afin de former ainsi le courant d'écoulement combiné à plusieurs matières et à plusieurs couches.

36. Procédé suivant la revendication 33,34 ou 35 caractérisé en ce qu'il comprend en outre une étape consistant à établir pratiquement le même trajet d'écoulement et les mêmes conditions d'écoulement pour chacun des courants d'écoulement correspondants séparés de la même matière en direction des différentes buses, à partir du départ de l'avancement de l'écoulement jusqu'à l'arrivée à l'endroit de la buse (296).

37. Procédé suivant la revendication 33,34,35 ou 36 caractérisé en ce qu'il comporte en outre une étape consistant à établir, dans toutes les buses (296), pratiquement le même trajet d'écoulement et les mêmes conditions d'écoulement pour chacun des courants d'écoulement correspondants séparés du polymère de la même matière en direction des différentes buses, à partir du départ de l'avancement de l'écoulement jusqu'à l'arrivée à l'endroit de la buse.

38. Procédé suivant la revendication 33,34,35 ou 36 caractérisé en ce qu'il comporte en outre une étape consistant à établir, dans toutes les buses (296), pratiquement le même trajet d'écoulement et les mêmes conditions d'écoulement pour chacun des courants d'écoulement correspondants séparés de polymères qui doivent former des couches correspondantes dans les articles.

39. Procédé suivant la revendication 35,36 ou 37 caractérisé en ce qu'il comporte l'étape consistant à déplacer les matières en fusion en des emplacements amont éloignés des buses (296), afin d'établir les écoulements avançant , et ces écoulements sont canalisés en courants séparés vers les buses, en aval des moyens assurant le déplacement des écoulements.

40. Procédé suivant la revendication 39 caractérisé en ce qu'il comporte l'étape consistant à séparer les écoulements avançant et à établir, à partir des points où les écoulements sont séparés, pour tous les courants d'écoulement séparés, des trajets et des conditions d'écoulement qui sont pratiquement identiques pour les courants de matières correspondants.

41. Procédé suivant l'une quelconque des revendications 33 à 38 caractérisé en ce que la prévision du trajet et des conditions de déplacement du courant d'écoulement est établie à partir de chaque point d'origine du courant de l'écoulement continu, dans un coup d'injection, jusque dans chaque buse (296).

42. Procédé suivant l'une quelconque des revendications 33 à 41 caractérisé en ce qu'il comporte en outre l'étape de moulage par injection-soufflage pour la production d'articles, tel que des conteneurs, dont les épaisseurs totales de la paroi latérale va en moyenne de 0,012 pouce à 0,030 pouce (0,30 à 0,76 millimètre).

43. Procédé suivant l'une quelconque des revendications 33 à 42 caractérisé en ce qu'il met en oeuvre quatre buses de co-injection (296), réparties à raison d'une buse à l'endroit de chaque angle d'un quadrilatère (voir par exemple la figure 29 C), et en ce qu'il comprend les étapes consistant à amener les courants séparés de polymères à proximité les uns des autres suivant un tracé dans pratiquement le même plan horizontal et axial, dans lequel ils sont décalés transversalement les uns par rapport aux autres et entre les quatre buses, et à diriger chaque courant d'écoulement vers la buse respective.

44. Procédé suivant l'une quelconque des revendications 33 à 42 caractérisé en ce qu'il met en oeuvre huit buses (296), alignées suivant une disposition de deux rangées comportant chacune quatre buses, les rangées étant situées le long de grands côtés respectifs d'un rectangle, et en ce qu'il comporte les étapes consistant à amener les courants d'écoulement séparés de polymères à un alignement sensiblement horizontal le long d'un plan centré dans le rectangle entre les rangées parallèles de buses, puis à un alignement dans le sens horizontal mais avec un décalage dans le sens axial, puis vers l'extérieur en direction des petits côtés du rectangle, vers le centre de chacun des ensembles supérieur et inférieur de quatre buses chacun, à séparer en T, de chaque côté, chacun des courants de polymère en deux courant horizontaux opposés dont chacun s'étend jusqu'à un point situé entre l'endroit où les courants sont séparés en T et les deux buses voisines respectives disposées des deux côtés de l'ensemble, et a séparer en Y (en 292), en ce dernier point, les courants respectifs en courants divergents et à diriger chacun de ces derniers courants vers une buse respective parmi les huit buses.

45. Procédé suivant l'une quelconque des revendications 33 à 44 caractérisé en ce qu'il comporte en outre l'étape consistant à rassembler les courants d'écoulement séparés en des courants combinés, dans des zones de combinaison (546) des buses respectives (296).

46. Procédé suivant l'une quelconque des revendications 33 à 45 caractérisé en ce qu'il comprend l'étape consistant à établir les courants combinés, dans les buses (296), de telle façon que les courants combinés aient les mêmes caractéristiques de débit massique.

47. Appareil de moulage par injection suivant la revendication 13 caractérisé en ce qu'il comprend en outre :
(i) une pluralité d'empreintes d'injection (102) sur un élément de montage, une pluralité de buses de co-injection (296) juxtaposables avec les empreintes, et
(ii) des moyens pour mettre en butée les buses et les empreintes d'injection juxtaposées,
(iii) une source (202) de polymère située en amont des buses (296) pour chaque matière devant former une couche de l'article,
(iv) chacune des buses ayant un canal central (540) et des passages de courants d'écoulement de polymères (450, 460, 480, 500, 520) communiquant avec le canal central, ce canal central ayant une extrémité ouverte avec un orifice d'injection (596) et une zone de combinaison des polymères (546) communiquant avec les passages et l'orifice d'injection, (v) des moyens de déplacement (232, 234, 252, 260, 262) disposés en amont des buses (296) afin de mettre en mouvement les polymères, destinés à former les couches des articles, à partir de leurs sources et en direction des passages respectifs, par l'intermédiaire de canaux d'écoulement séparés (par exemple 250) pour chaque polymère, et pour mettre en pression cette matière dans son passage,
(vi) des moyens séparateurs de canal d'écoulement (290, 292) dans chaque canal d'écoulement (par exemple 220), en aval de ses moyens de mise en mouvement et de mise en pression associés, pour séparer le canal d'écoulement en une pluralité de canaux d'écoulement séparés en dérivation (708, 709; 350, 351; 352, 353; 356, 357), à raison d'un canal d'écoulement séparé en dérivation pour chaque matière devant former une couche de l'article,
(vii) des moyens (294), en communication avec un canal d'écoulement en dérivation pour chaque matière, pour alimenter séparément chaque polymère séparé à sa buse associée (296), les canaux d'écoulement, les canaux d'écoulement en dérivation et les moyens d'alimentation déterminant, pour chaque polymère correspondant, des trajets en direction de toutes les buses, trajets qui ont sensiblement la même configuration et la même longueur,
(viii) une vanne (800, 834) associée opérationnellement à chacune des buses, chaque vanne étant active dans la zone de combinaison (546) du canal central de la buse associée,
(ix) des moyens d'actionnement (860, 856; 844, 850) pour actionner, pratiquement en même temps et d'une manière identique, toutes les vannes dans les canaux centraux de leurs buses respectives (296), afin de commander, pratiquement en même temps et d'une manière identique, le début, la régulation et l'achèvement des écoulements des polymères à travers toutes les buses, et
(x) des moyens de commande (2040) connectés aux moyens d'actionnement afin de déplacer toutes les vannes (800, 834) suivant un mode prédéterminé qui assure des mouvements pratiquement simultanés et identiques des vannes séparées dans leurs buses respectives de co-injection (296).

48. Appareil suivant la revendication 47 caractérisé en ce que la vanne est constituée (a) d'un manchon allongé (800) à extrémité ouverte, ajusté étroitement à coulissement dans le canal central (540) de la buse et présentant une lumière (804) dans sa paroi, cette lumière débouchant dans un passage central allongé (820) conduisant à l'extrémité ouverte (812), et (b) d'une tige allongée (834) montée de manière à pouvoir se déplacer axialement dans le passage central du manchon et étant ajustée étroitement à coulissement dans le passage (820), suffisamment pour empêcher toute accumulation ou tout passage notable de polymère en fusion entre la tige et le manchon, le manchon allongé étant également ajusté étroitement à coulissement dans le canal central de la buse de manière à empêcher toute accumulation ou tout passage notable de polymère entre la buse (296) et le manchon (800).

49. Appareil suivant la revendication 47 ou la revendication 48 caractérisé en ce que les moyens d'actionnement (860, 856; 844, 850) actionnent successivement et simultanément les différentes vannes afin de permettre l'écoulement des différentes matières, suivant des combinaisons prédéterminées, dans le canal central de chaque buse (296), si bien que l'écoulement de la matière prévue pour une couche quelconque donnée s'effectue pratiquement en même temps dans toutes les buses de coinjection.

50. Appareil suivant la revendication 47,48 ou 49 caractérisé en ce que la zone de combinaison (546) de chaque buse (296) est proche de l'orifice d'injection, la zone de combinaison a une longueur axiale allant de 100 mils à 900 mils (2,54 à 22,9 millimètres) et la vanne de chaque buse est active dans la zone de combinaison de celle-ci.

51. Appareil suivant l'une quelconque des revendications 47 à 50 caractérisé en ce que la vanne (800, 834) et les moyens d'actionnement (860, 856; 844, 850) sont actifs à la fin d'un cycle d'injection de telle façon que la vanne soit déplacée dans la zone de combinaison pour nettoyer celle-ci des matières fondues et pour empêcher ensuite que les matières ne s'écoulent à partir des passages (450, 460, 480, 500, 520) vers et dans les canaux centraux (540) des buses.

52. Appareil suivant l'une quelconque des revendications 47 à 50 caractérisé en ce que les canaux d'écoulement ( par exemple 220), les canaux d'écoulement en dérivation, les moyens d'alimentation (232, 234, 252, 260, 262) et les buses (296) sont adaptés de manière à donner pratiquement le même trajet d'écoulement des courants de polymères en termes de distance, diamètre, étranglement et répartition de l'écoulement pour chaque matière correspondante dans ses canaux d'écoulement (par exemple 220), dans ses canaux en dérivation et dans ses passages de buse (par exemple 450) correspondants, pour former une couche correspondante de chaque article à plusieurs couches injecté à partir de chaque buse (296).

53. Appareil suivant l'une quelconque des revendications 47 à 52 caractérisé en ce que les empreintes sont prévues pour le moulage de paraisons et l'appareil comporte une pluralité d'empreintes (108) de moule de soufflage dans lesquelles ces paraisons sont gonflées sous la forme de conteneurs.

54. Appareil suivant l'une quelconque des revendications 47 à 52 caractérisé en ce que les empreintes (102 ou 108) ont une forme prévue pour définir des articles réalisant des conteneurs.

55. Appareil suivant l'une quelconque des revendications 47 à 54 caractérisé en ce que chaque passage (par exemple 500) de la pluralité de passages a un orifice (502) qui communique avec le canal central (540) de la buse associée et l'un au moins des passages (par exemple 500) a une forme conique de manière à converger vers son orifice.

56. Appareil suivant la revendication 13 caractérisé en ce qu'il comprend une pluralité d'empreintes d'injection (102) sur un élément de montage (104), une pluralité de buses de co-injection (296) sur un élément de montage juxtaposable (288), ces empreintes et ces buses intervenant pour former des conteneurs ayant des parois latérales pourvues de parties, situées en-dessous des parties extrêmes marginales des conteneurs, ayant une épaisseur allant de 0,010 pouce à 0,035 pouce (0,25 à 0,89 millimètre), et en ce qu'il comprend en outre une source (par exemple 202) de polymère située en amont des buses, pour chaque matière devant former une couche de chaque conteneur à plusieurs couches, des moyens (232, 234, 252, 260, 261), pour chaque polymère devant former une couche du conteneur, pour mettre en mouvement des courants de matières en direction des buses, un canal d'écoulement (par exemple 220, 222, 250, 257, 258) pour chaque courant de polymère devant former une couche du conteneur, chaque canal d'écoulement pour chaque courant de matière s'étendant à partir de chacun des moyens de mise en mouvement et de mise en pression, en direction de chaque buse, les canaux d'écoulement étant séparés les uns des autres et assurant des trajets et des conditions d'écoulement pratiquement identiques pour chaque courant de polymère de la même matière canalisé en direction de chaque buse (296).

57. Appareil suivant la revendication 56 caractérisé en ce qu'il y a moins de sources (202, 204, 206) que de moyens de mise en pression et de mise en mouvement, il y a des canaux d'écoulement de courants de polymères entre les sources et les moyens de mise en mouvement respectifs et communiquant avec ceux-ci, et en ce que le canal d'écoulement (par exemple 217) provenant d'au moins une source (202) est séparé de telle façon que chacun des canaux d'écoulement séparés (220, 222) communique avec un moyen de mise en mouvement respectif (232, 234) et les trajets des canaux d'écoulement séparés pour la même matière, entre les sources et les moyens de mise en mouvement respectifs, sont pratiquement les mêmes.

58. Appareil suivant la revendication 56 ou la revendication 57 caractérisé en ce qu'il comprend un passage séparé (par exemple 500), dans chaque buse (296), pour chaque polymère (par exemple C), les passages communiquant avec les canaux d'écoulement appropriés (par exemple 250) pour les polymères qui forment les couches des conteneurs, et la longueur de chaque passage de buse et de son canal d'écoulement associé qui communique avec lui, s'étendant jusque au moyens de mise en pression et de mise en mouvement (par exemple 252), pour un courant de polymère (C) destiné à former une couche (C), est pratiquement la même que la longueur pour chaque autre courant de polymère de la même matière (C) qui doit être injectée à partir de chaque autre buse et qui doit former une couche correspondante (C) dans chaque autre conteneur.

59. Appareil suivant l'une quelconque des revendications 56 à 58 caractérisé en ce qu'au voisinage de la pluralité de buses, entre celles-ci et à une même distance d'elles sont prévus des moyens pour disposer les canaux respectifs (220, 222, 250, 257, 258) suivant une répartition linéaire, des moyens (276, 290, 292) pour séparer chaque canal disposé linéairement en ensembles de canaux d'écoulement en dérivation (700 à 709), des moyens (294) pour réagencer chaque ensemble de canaux d'écoulement en dérivation, disposés linéairement, et pour les aligner dans une direction pratiquement parallèle à l'axe de chacune des buses (296), et des moyens pour diriger chacun des canaux d'écoulement en dérivation, disposés linéairement et alignés axialement, vers chacune des buses respectives (296), de manière à communiquer avec celles-ci.

60. Appareil suivant la revendication 59 caractérisé en ce qu'il comprend huit buses (296) agencées suivant une disposition rectangulaire de deux colonnes de quatre buses équidistantes dans chaque colonne, avec une buse à l'endroit de chaque angle de cette disposition rectangulaire, l'ensemble des canaux d'écoulement alignés est situé axialement le long d'une ligne s'étendant entre l'ensemble médian de quatre buses de la disposition rectangulaire et, à partir de cet ensemble vertical aligné axialement et décalé qui est parallèle à l'axe de chacune des buses, chacun des canaux est dirigé vers et l'appareil comporte des premiers moyens de séparation (290) pour séparer chacun des canaux (par exemple 350, 351) en des canaux séparés en T (par exemple 352 à 355), s'étendant dans des directions opposées et communiquant avec des seconds moyens de séparation (292) qui séparent en Y chacun des canaux respectifs déjà séparés en T (par exemple 352), pour donner deux canaux séparés en Y (par exemple 358, 359), divergents en diagonale, dont l'un communique avec l'une des deux buses respectives voisines du sommet de chaque côté, tandis que l'autre communique avec l'autre de ces deux buses respectives, et les canaux séparés en Y se trouvant à l'opposé communiquent de la même façon avec les deux buses situées de l'autre côté des buses les plus basses et les plus hautes de la disposition rectangulaire.

61. Appareil suivant l'une quelconque des revendications 56 à 60 caractérisé en ce qu'il comporte une vanne (800, 834) active dans chaque buse (296) pour commander l'écoulement et l'absence d'écoulement des polymères, à partir des buses, vers et dans les empreintes d'injection (102).

62. Appareil suivant la revendication 61 caractérisé en ce que la vanne comporte un manchon allongé (800) ayant une paroi latérale pourvue d'une lumière (804) dans cette paroi, une extrémité ouverte (812) et un passage central allongé (820) communiquant avec la lumière et l'extrémité ouverte, et une tige allongée (834) montée et adaptée de manière à pouvoir être déplacée axialement et alternativement dans le passage central (820) du manchon et ayant une paroi latérale dont la surface externe est adaptée de manière à fermer et ouvrir la lumière et est ajustée étroitement à glissement dans le passage central (820).

63. Appareil suivant la revendication 13 caractérisé en ce qu'il comporte une pluralité de buses (296) comportant chacune un orifice d'injection (596), à une extrémité, et un canal central (540) communiquant avec l'orifice d'injection, au moins trois passages de courants d'écoulement de polymères en fusion (440, 460, 500) communiquant avec le canal central (540), chacun d'eux à travers un orifice associé, un premier de ces orifices (462) étant plus proche de l'orifice d'injection (596) que les autres orifices, et un troisième de ces orifices (440) étant plus éloignés de l'orifice d'injection que les autres orifices, et en ce que chaque buse comporte en outre une vanne (800, 834) mobile dans le canal central (540) de la buse et intervenant pour obturer et libérer les orifices et pour empêcher et autoriser ainsi sélectivement l'écoulement de polymères en fusion à travers les orifices (462, 502, 440) vers et dans le canal central, en vue de l'injection.

64. Appareil suivant la revendication 63 caractérisé en ce que la vanne est adaptée de manière à obturer, dans une position, le deuxième orifice (502) tout en n'obturant pas le premier orifice (462) ou le troisième orifice (440), ou bien à la fois les premier et troisième orifices.

65. Appareil suivant la revendication 64 caractérisé en ce que la vanne est également adaptée, dans une autre position, de manière à obturer le premier orifice (462) et à ne pas obturer le troisième orifice (440).

66. Appareil suivant la revendication 64 ou la revendication 65 caractérisé en ce que la vanne est également adaptée, dans une autre position, de manière à n'obturer ni le deuxième orifice (502) ni le premier orifice (462).

67. Appareil suivant l'une quelconque des revendications 64 à 66 caractérisé en ce que la vanne est également adaptée, dans une position, de manière à obturer le deuxième orifice (502) tandis que tous les autres orifices sont pas obturés, et, dans une autre position, de manière à obturer tous les orifices à l'exception du deuxième orifice.

68. Appareil suivant la revendication 63 caractérisé en ce que la vanne (800, 834) est adaptée, dans une position, de manière à obturer le deuxième orifice (502) et à ne pas obturer le troisième orifice (440) ou à la fois le premier orifice (462) et le troisième orifice, et, dans une seconde position, de manière à obturer le premier orifice et à ne pas obturer ni le deuxième ni le troisième orifice.

69. Appareil suivant la revendication 68 caractérisé en ce que la vanne est en outre adaptée, dans une position, de manière à obturer le deuxième orifice (502) tandis que tous les autres orifices ne sont pas obturés, et, dans une autre position, de manière à obturer tous les orifices à l'exception du deuxième orifice.

70. Appareil suivant l'une quelconque des revendications 63 à 69 caractérisé en ce qu'il comporte en outre des moyens (232, 252, 234), éloignés de la buse, pour mettre en mouvement le polymère en fusion vers chacun des passages (440, 460, 500) de la buse, et pour réduire l'écoulement du polymère à travers le troisième orifice (440) tandis que la vanne (800, 834) se trouve dans une position dans laquelle ni le deuxième ni le troisième orifice n'est obturé.

71. Appareil suivant l'une quelconque des revendications 63 à 70 caractérisé en ce que la vanne comprend un manchon allongé (800) ayant une extrémité ouverte (812) et une lumière (804) dans sa paroi laquelle débouche dans un passage central allongé (820) dans le manchon, ce manchon étant ajusté étroitement à glissement dans le canal central (540) de la buse, au moins au voisinage du premier orifice (462), d'une manière suffisante pour empêcher une accumulation ou un passage notable de polymère entre eux, et une tige allongée (834) est montée dans le manchon en étant ajustée étroitement à glissement dans le passage central (820) du manchon, d'une manière suffisante pour empêcher une accumulation ou un passage notable de matière en fusion entre la tige et le passage central du manchon, le manchon étant adapté de manière à pouvoir se déplacer alternativement, dans le sens axial, dans le canal central (540) de la buse et à intervenir pour obturer et libérer les premier et deuxième orifices (462, 502) et pour amener sa lumière (804) à l'alignement avec le troisième orifice (440) et à l'écart de celui-ci, la tige (834) étant adaptée de manière à pouvoir se déplacer alternativement, dans le sens axial, dans le manchon afin d'obturer et de libérer la lumière (804) lorsque cette lumière est alignée avec le troisième orifice.

72. Appareil suivant la revendication 71 caractérisé en ce que le troisième orifice prévu pour le passage d'une matière fondue (A) qui doit former le noyau d'un courant combiné, sensiblement concentrique de matières en fusion (B, C, A) à travers le canal central (540) de la buse, et le manchon et la tige peuvent être mis en position de manière à permettre à la matière en fusion (A) de s'écouler à travers le troisième orifice (440) tandis que l'écoulement de la matière en fusion (C) à travers le deuxième orifice (502) est empêché.

73. Appareil suivant la revendication 72 caractérisé en ce que le manchon et la tige peuvent être mis en position de manière à permettre à la matière en fusion (C) de s'écouler à travers le deuxième orifice (502) tandis que l'écoulement de la matière en fusion (A) à travers le troisième orifice (440) est empêché.

74. Appareil suivant la revendication 64 ou n'importe quelle revendication dépendant de la revendication 64, caractérisé en ce qu'il comporte des premier, deuxième et troisième passages (440, 460, 500) dont chacun présente un orifice défini par des lèvres antérieure et postérieure (par exemple 461, 523) et communiquant avec le canal (540), ces lèvres entourant totalement le canal et chaque orifice ayant son axe pratiquement perpendiculaire à l'axe du canal central, le deuxième orifice (502) étant situé en position intermédiaire, dans le sens axial, entre les premier et troisième orifices (462, 440), la vanne étant montée, dans le canal central (540), de manière à pouvoir se déplacer alternativement, dans le sens axial, et pouvant être mise en position de manière (a) à obturer tous les orifices, (b) à libérer, tandis que le deuxième orifice (502) est obturé, le troisième orifice (440) pour permettre l'écoulement de la matière en fusion (A) vers et dans le canal central, sous la forme d'un courant solide, (c) à libérer le premier orifice (462) de manière à fournir un écoulement de matière en fusion (B) qui entoure complètement le courant solide, afin de donner un courant d'écoulement concentrique combiné des deux matières (B, A), (d) à libérer le deuxième orifice (502) pour permettre à la matière en fusion (C) de s'écouler à travers lui pour pénétrer entre les deux matières précitées, afin de donner ainsi un courant combiné de trois couches concentriques (A, B, C,) et (e) à bloquer à son tour l'écoulement des matières respectives à travers les orifices suivant une séquence qui n'est pas l'inverse de la séquence de production des écoulements (b) à (d).

75. Appareil suivant la revendication 74 caractérisé en ce que la vanne (800, 834) est adaptée de manière à faire éliminer le courant combiné des trois matières (A, B, C) du canal central (540), à la fin du cycle d'injection, au moins jusqu'à l'orifice (462) du passage qui est le plus proche de l'orifice d'injection.

76. Appareil suivant la revendication 74 caractérisé en ce que les premier et deuxième orifices (462, 502) des passages ont chacun une largeur axiale qui est uniforme autour du canal central (540) et qui est inférieur à la largeur de la section transversale du canal central, et les orifices sont aussi proche que possible l'un de l'autre et de l'orifice d'injection (596) de manière à réduire au minimum le temps mis par le courant combiné de matières pour atteindre l'orifice d'injection.

77. Appareil suivant la revendication 76 caractérisé en ce que la distance entre la lèvre postérieure du deuxième orifice (502) et l'orifice d'injection (596) va de 100 à 600 mils (2,54 à 15,2 millimètres).

78. Appareil suivant la revendication 63 caractérisé en ce qu'au moins les premier et deuxième orifices (462, 502) entourent complètement une zone de combinaison des matières en fusion du canal central (540) et débouchent dans cette zone, une lèvre antérieure (par exemple 461) de chaque orifice et l'axe de chaque orifice étant sensiblement perpendiculaire à l'axe du canal central (540), le premier orifice (462) de passage étant l'orifice le plus proche de l'orifice d'injection (596) tandis que le troisième orifice de passage est le plus éloigné de l'orifice d'injection, chacun des orifices ayant une aire de section transversale qui n'est pas supérieure à l'aire de la section transversale du canal (540), les premier et deuxième orifices (462, 502) étant aussi proches que possible l'un de l'autre et de l'orifice d'injection afin de réduire au minimum le temps mis par les matières en fusion combinées pour s'écouler jusqu'à l'orifice d'injection, et en ce que la vanne comprend en outre :
(a) un manchon allongé (800) emboîté étroitement à glissement dans le canal de manière à pouvoir se déplacer alternativement dans celui-ci, ce manchon ayant une extrémité ouverte (812) qui, lorsque le manchon se trouve dans une position située le plus en avant, est alignée et communique avec l'orifice d'injection (596), le manchon ayant, dans sa paroi latérale, une lumière (804) adaptée manière à communiquer avec le troisième orifice de passage, et
(b) une tige allongée (834) emboîtée étroitement à glissement dans le manchon de manière à pouvoir se déplacer alternativement dans celui-ci, cette tige pouvant être déplacée vers une position qui entraîne la fermeture de la lumière (804) et coopérant avec le manchon (800), lorsqu'ils se trouvent dans une position antérieure, de manière à purger la zone de combinaison du canal pratiquement totalement, les tolérances entre le canal, le manchon et la tige étant telles que de la matière en fusion ne peut pas s'accumuler entre leurs surfaces en regard, la vanne pouvant être déplacée dans des positions respectives telles que :
tous les orifices sont obturés,
tous les orifices sont ouverts,
seul le premier orifice est libéré,
seul le troisième orifice est libéré, et
seuls les premier et deuxième orifices sont libérés.

79. Appareil suivant la revendication 78 caractérisé en ce qu'il comporte des moyens d'actionnement (860, 856; 844, 850; 906, 918) pour actionner la vanne entre lesdites positions.

80. Appareil suivant la revendication 78 caractérisé en ce que les vannes sont adaptées de manière à libérer tous les orifices dans une période de 75 centièmes de seconde, de préférence en 20 centièmes de seconde et ce qui est encore plus préférable en 15 centièmes de seconde.

81. Appareil suivant la revendication 78 caractérisé en ce que le canal central (540) a une aire de section transversale uniforme au moins à partir du premier orifice (462) de passage jusqu'au deuxième orifice (502) de passage.

82. Appareil suivant la revendication 78 caractérisé en ce que le premier passage (460) a une paroi antérieure (593) qui est inclinée dans la direction de l'orifice d'injection (596) et en direction de l'axe du canal central et qui s'étend vers la lèvre antérieure (461) du premier orifice, cette lèvre postérieure du premier orifice étant plus proche de l'axe du canal central que la lèvre de fuite cet orifice, et en ce que le manchon (800) a une embouchure convergente (812) définissant l'extrémité ouverte du manchon qui est adaptée de manière à venir buter contre la paroi antérieure (593), pour limiter le mouvement du manchon en direction de l'orifice d'injection (596) et obturer le premier orifice (462).

83. Appareil suivant la revendication 78 caractérisé en ce que la vanne comprend un manchon allongé (800) emboîté étroitement à glissement dans le canal central (540) de manière à pouvoir se déplacer alternativement dans celui-ci, ce manchon comportant un passage central (820), une extrémité antérieure ouverte (812) adaptée de manière à communiquer avec une partie du canal central située entre les premier et deuxième orifices, une lumière (804) étant prévue dans la paroi du manchon de manière que ce manchon puisse obturer et libérer le troisième orifice (440) de passage suivant que la lumière coïncide ou non avec cet orifice, le manchon étant capable d'être déplacé vers une position dans laquelle il obture les premier et les deuxième orifices (462, 502) de passages tandis que la lumière (804) se trouve en regard du troisième orifice (440) de passage qui n'est pas obturé, et en ce que la vanne comporte en outre un moyen pour obturer la lumière lorsqu'elle se trouve en regard du troisième orifice de passage, le moyen (834) d'obturation de la lumière étant adapté de manière à être déplacé vers une position d'obturation de la lumière en même temps que les premier et deuxième orifices (462, 502) ne sont pas obturés, et vers une position de libération de la lumière en même temps que les premier et troisième orifices (462, 440) ne sont pas obturés et que la lumière (804) se trouve en regard du troisième orifice.

84. Appareil suivant la revendication 83 caractérisé en ce que le manchon (800) peut être également mis dans une position telle que les premier et deuxième orifices (462, 502) soient libérés tandis que le troisième orifice (440) est obturé du fait que la lumière n'est pas située en regard de lui, et il peut être mis en outre dans une position dans laquelle les trois orifices sont tous obturés en même temps.

85. Appareil suivant la revendication 83 ou la revendication 84 caractérisé en ce que le manchon (800) a une portion extrême arrière et le moyen d'obturation de la lumière est constitué par un organe fixe (648) s'étendant dans une partie extrême arrière du passage central (820) du manchon afin d'obturer partiellement le troisième orifice, cet organe (648) étant emboîté étroitement à glissement dans le passage central du manchon et coopérant avec ce manchon de telle façon que, lorsque le manchon est reculé à partir d'une position antérieure, la lumière (804) du manchon soit alignée avec le troisième orifice (440) mais qu'elle soit juxtaposée par rapport à l'organe (648) et partiellement obturée par celui-ci.

86. Appareil suivant l'une quelconque des revendications 63 à 65 caractérisé en ce qu'il comprend en outre des sources (par exemple 202, 204, 206) de polymères destinés à constituer des couches des articles, un canal principal (278, 289) s'étendant vers l'aval, à partir des sources de polymères, en direction de chaque buse d'une pluralité de buses dont chacune est montée en avant du canal principal, ce canal principal comportant, à l'intérieur, une pluralité de canaux pour des courants d'écoulement de polymères (220, 222, 250, 257, 258), chacun de ces canaux canalisant séparément un polymère en fusion destiné former une couche de l'article, en provenance de la source et vers chacune des buses d'injection (296), et des moyens (232, 234, 252) pour mettre en mouvement chaque courant de polymère à travers les canaux d'écoulement, vers et dans les buses respectives, les vannes (800, 834) dans les buses respectives intervenant pour commander l'écoulement des polymères en fusion respectifs, à partir des passages, vers et dans le canal central (540) des buses d'injection, en vue de l'injection de courants combinés desdites matières sous la forme de coups d'injection simultanés, à partir des buses, vers et dans des empreintes d'injection juxtaposées (102).

87. Appareil suivant la revendication 13 caractérisé en ce qu'il comporte une pluralité de buses (296) dont chacune présente un canal central (540) ayant une extrémité ouverte, un orifice d'injection (596) à l'extrémité ouverte, et deux passages de courants d'écoulement de polymères en fusion (440, 450; 460), dont chacun comporte un orifice (440, 462) communiquant avec le canal central, l'appareil ayant un canal (220, 222) pour chaque courant d'écoulement de matière en fusion, chaque canal communiquant avec un passage respectif, des moyens de mise en mouvement communs (214, 232, 234) communiquant avec chaque passage pour mettre en mouvement les deux courants d'écoulement de polymères en fusion à travers leurs canaux, passages et orifices, et une vanne (800, 834) montée dans le canal central (540) et intervenant pour obturer totalement, obturer partiellement ou libérer les orifices.

88. Appareil suivant la revendication 87 caractérisé en ce que la buse comporte un passage de courant d'écoulement d'un polymère en fusion additionnel (500) pourvu d'un orifice (502) communiquant avec le canal central , le passage et l'orifice additionnels étant disposés entre les autres passages et orifices, et la vanne intervient pour obturer l'orifice additionnel (502) tandis que les deux autres orifices (440, 462) ne sont pas obturés par cette vanne.

89. Appareil suivant la revendication 87, destiné au moulage par injection d'une pluralité d'articles en matière plastique comportant au moins cinq couches (A à E) laminées conjointement, caractérisé en ce qu'il comprend :
(i) des sources (202 à 206) de polymères pour chaque polymère devant former une ou plusieurs couche des articles, et une pluralité de buses de co-injection (296) disposées en aval des sources, chaque buse comportant au moins cinq passages (440, 460, 480, 500, 520) pour des courants d'écoulement de polymères en fusion, chaque passage communiquant, par un orifice respectif, avec le canal central (540) afin de faire passer un courant d'écoulement de polymère en fusion vers et dans le canal central, ces passages comprenant un premier passage (460), dont l'orifice (462) est plus proche de l'orifice d'injection (596) que les orifices des autres passages, pour faire passer un courant de matière (B) en fusion vers et dans le canal central, afin de former la couche superficielle externe (B) de l'article, un deuxième passage (500) pour faire passer un courant de matière (C) en fusion vers et dans le canal central, afin de former une couche interne (C) de l'article, un troisième passage, dont l'orifice plus éloigné de l'orifice d'injection que n'importe lequel des autres orifices, pour introduire, dans le canal central, un courant de matière (A) en fusion, afin de former la couche superficielle interne (A) de l'article, un quatrième passage (480), situé entre les premier et deuxième passages, pour faire passer un courant de matière (E) en fusion vers et dans le canal central, afin de former une couche intermédiaire (E) entre la couche superficielle externe (B) et la couche interne (C) de l'article, et un cinquième passage (520) entre le second passage (500) et le troisième passage (440), afin de faire passer un courant de matière (D) en fusion vers et dans le canal central, afin de former une couche intermédiaire (D) entre la couche interne (C) et la couche superficielle interne (A) de l'article,
(ii) une vanne (800, 834) active dans chaque buse (296), adjacente aux orifices pour commander l'écoulement des polymères respectifs à travers les orifices, vers et dans le canal central, chaque vanne étant adaptée, lorsqu'elle se trouve dans un mode de position, de manière à obturer le deuxième orifice associé (502) tandis que le troisième orifice (440) n'est pas obturé, lorsqu'elle se trouve dans un autre mode de position, de manière à ne pas obturer le premier orifice associé (462) tout en obturant partiellement le troisième orifice (440), et lorsqu'elle se trouve dans un autre mode de position différent, de manière à ne pas obturer les premier, deuxième et quatrième orifices (462, 502, 482), tout en obturant partiellement le cinquième orifice (522),
(iii) les moyens de mise en mouvement communs (214) étant associés aux deux matières (B) et (A) destinés à former les couches superficielles externe et interne, afin de les faire passer dans et à travers leurs premiers et troisièmes passages et orifices respectifs, et,
(iv) d'autres moyens de mise en mouvement (218) communs aux deux matières (E,D) destinés à former les couches intermédiaires, afin de faire passer chacune de ces matières dans et à travers les quatrièmes et cinquièmes passages et orifices respectifs.

90. Appareil suivant la revendication 89 caractérisé en ce que chacune des vannes comporte un manchon allongé (80) emboîté étroitement à glissement dans le canal central (540) de la buse associée (296), pouvant se déplacer alternativement dans le sens axial, ce manchon ayant un passage central (820), une extrémité antérieure ouverte (812) destinée à communiquer avec le canal central et une lumière (804) dans sa paroi laquelle est destinée à communiquer avec l'orifice du troisième passage, le manchon étant adapté de manière à obturer et à libérer les premier, deuxième, quatrième et cinquième orifices (462, 502, 482, 522) et intervenant, en coopération avec un autre élément (par exemple 834 ou 648) de la vanne pour obturer le troisième orifice, cet élément, associé opérationnellement au manchon, servant à obturer totalement, à obturer partiellement ou à libérer la lumière (804) du manchon.

91. Appareil suivant la revendication 90 caractérisé en ce que l'élément est un organe stationnaire (648) confiné à une partie extrême arrière du passage central du manchon, l'organe stationnaire étant emboîté étroitement à glissement dans le passage central du manchon.

92. Appareil suivant la revendication 89 caractérisé en ce que la vanne (800 etc...), active dans chaque buse (296), comporte un manchon allongé (800 etc...) emboîté étroitement à glissement dans le canal central (540), pouvant se déplacer alternativement dans le sens axial, ce manchon ayant un passage central (820), une extrémité antérieure ouverte (812) destinée à communiquer avec le canal central et une lumière (804) dans sa paroi laquelle est destinée à communiquer avec l'orifice du troisième passage, le manchon étant adapté de manière à obturer et à libérer les premier, deuxième, quatrième et cinquième orifices (462, 502, 482, 522) et une tige allongée (834) emboîtée étroitement à glissement dans le passage central (820) du manchon, pouvant se déplacer alternativement dans le sens axial, ce manchon et cette tige étant associés opérationnellement et adaptés de manière à être déplacés vers différentes positions respectives de telle façon que dans une position, le troisième orifice de passage (440) soit obturé tandis que le premier orifice (462) n'est pas obturé, dans une autre position le troisième orifice soit obturé partiellement tandis que le premier orifice n'est pas obturé et dans une autre position différente le quatrième orifice (482) soit obturé tandis que les premier, deuxième et troisième orifices ne le sont pas.

93. Appareil suivant l'une quelconque des revendications 87 à 92 caractérisé en ce que les buses de co-injection (296) sont pratiquement identiques et comportent des passages (par exemple 440, 450; 460) pour plusieurs courants de matières en fusion (B, A) qui sont destinés à former des couches respectives correspondantes d'une pluralité d'articles moulés par injection, l'appareil comportant des moyens (214, 252) communs à au moins deux courants de matières en fusion et en communication avec les passages pour chacun de ces courants, ces moyens intervenant pour déplacer ces au moins deux courants de matières en fusion en direction de chacune des différentes buses (296), chaque buse comportant une vanne (800 etc...) pour bloquer totalement, débloquer ou bloquer partiellement l'écoulement, à travers les passages, des au moins deux courants de matières en fusion, les vannes (800 etc...) étant de préférence sensiblement identiques et pouvant fonctionner de préférence pratiquement en même temps.

94. Appareil suivant la revendication 13 caractérisé en ce qu'il comporte une pluralité de buses (296) pour co-injecter des articles en matière plastique à cinq couches, chaque buse ayant une extrémité ouverte, un orifice d'injection (596) à l'extrémité ouverte, un canal central cylindrique (540) communiquant avec l'orifice d'injection, et cinq passages de courants d'écoulement de polymères (440, 450; 460; 480; 500, 520), chacun d'eux ayant un orifice (440, 462, 482, 502, 522) communiquant avec le canal central et étant adapté de manière à laisser passer un courant d'écoulement de polymère en fusion à travers l'orifice, vers et dans le canal central, en vue de la formation d'une couche de l'article, ces passages comprenant un premier passage (460), dont l'orifice (462) est plus proche de l'orifice d'injection (596) que n'importe quel autre orifice, pour faire passer un courant de matière structurale (B) en fusion vers et dans le canal central, afin de former la couche superficielle externe de l'article, un deuxième passage (500) pour faire passer un courant de matière (C) en fusion vers et dans le canal central, afin de former une couche interne (C) de l'article, un troisième passage, dont l'orifice plus éloigné de l'orifice d'injection (596) que n'importe quel autre orifice, pour introduire, dans le canal central, un courant de matière structurale (A) en fusion, afin de former la couche superficielle interne de l'article, un quatrième passage (480), situé entre les premier et deuxième passages, pour faire passer un courant de polymère (E) en fusion vers et dans le canal central, afin de former une couche intermédiaire (E) entre la couche superficielle externe (B) et la couche interne (C) de l'article, et un cinquième passage (520) entre le deuxième passage et le troisième passage, afin de faire passer un courant de matière (D) en fusion vers et dans le canal central, afin de former une couche intermédiaire (D) entre la couche interne (C) et la couche superficielle interne de l'article, et en ce que l'appareil comporte en outre une vanne (800 etc...) pour chaque buse (296), cette vanne étant active au voisinage au moins du deuxième orifice (502) et du troisième orifice (440) et étant adaptée pour obturer le deuxième orifice et de ne pas obturer le troisième orifice en même temps.

95. Appareil suivant la revendication 94 caractérisé en ce que la vanne (800) comporte un manchon allongé (800) ayant une extrémité ouverte (812), une paroi latérale cylindrique dans laquelle est formée une lumière (804) et un passage central (820), allongé dans le sens axial, communiquant avec la lumière et l'extrémité ouverte, ce manchon étant ajusté étroitement à glissement dans le canal central (540) de la buse d'une manière suffisante pour empêcher une accumulation ou un passage notable de polymère entre eux, et une tige allongée (834) est emboîtée étroitement à glissement dans le passage central (820) du manchon, d'une manière suffisante pour empêcher une accumulation ou un passage notable de matière en fusion entre la surface externe de la paroi latérale de la tige et la paroi du passage central du manchon, ce manchon (800) étant adapté de manière à pouvoir se déplacer alternativement dans le sens axial, à l'intérieur du canal central (540) de la buse, et intervenant pour obturer et libérer les premier et second orifices (462, 502) des passages, et pour amener sa lumière en regard du troisième orifice de passage (440) et à l'écart de celui-ci, la tige (834) étant adaptée de manière à se déplacer alternativement, dans le sens axial, à l'intérieur du manchon, afin d'obturer et de libérer la lumière (804) lorsque cette lumière est alignée avec le troisième passage.

96. Appareil suivant la revendication 94 ou la revendication 95 caractérisé en ce que la vanne est active vis à vis d'au moins trois des cinq orifices de la buse associée (296) et elle est également adaptée de manière à obturer le deuxième orifice de passage (502) tandis qu'elle n'obture pas les premier et troisième orifices de passage (462, 440).

97. Appareil suivant la revendication 94 ou la revendication 95 caractérisé en ce que la vanne est active vis à vis de tous les cinq orifices de la buse associée (296) et elle est adaptée de manière à obturer les deuxième, quatrième et cinquième orifices de passage (502, 482, 522) tandis que cette vanne n'obture pas le troisième orifice de passage (440).

98. Appareil suivant la revendication 97 caractérisé en ce que la vanne est en outre adaptée de manière à obturer le deuxième orifice (502) tout en n'obturant pas, en même temps, le premier orifice (462), le troisième orifice (440) ou à la fois les premier et troisième orifices.

99. Appareil suivant l'une quelconque des revendications 94 à 98 caractérisé en ce que les premier, deuxième, quatrième et cinquième passages (460, 480, 500, 520) de la buse (296) sont convergents en direction de leurs orifices respectifs (462, 482, 502, 522) si bien que chaque passage convergent a une largeur plus grande en un emplacement éloigné de l'orifice et une largeur plus petite à l'endroit de l'orifice.

100. Procédé suivant la revendication 1 caractérisé en ce qu'il comprend les étapes consistant à former, dans les buses (296), des courants combinés à plusieurs couches d'une pluralité de polymères de telle façon que les bords antérieurs des couches respectives, dans les courants combinés, se trouvent dans des plans, dans les buses, qui ne sont pratiquement pas en biais, lorsqu'on les observe en coupe verticale, le procédé mettant en oeuvre l'utilisation d' une pluralité de buses (296) ayant chacune un canal central (540) pourvu d'un orifice d'injection (596) à une extrémité et au moins des premier, deuxième et troisième passages (460, 550, 440) ayant chacun un orifice communiquant avec le canal central (540), à raison d'un passage pour chaque couche devant être formée dans le courant combiné, l'orifice (462) du premier passage étant plus proche de l'orifice d'injection (596) que les orifices (502, 440) des autres passages, pour permettre l'écoulement du polymère destiné à constituer la couche superficielle externe du courant combiné, l'orifice (440) du troisième passage étant éloigné de l'orifice d'injection (596) pour permettre l'écoulement du polymère destiné à former la couche superficielle interne, et un ou plusieurs orifices de deuxième passage, placés en position intermédiaire entre les orifices des premier et troisième passages, pour permettre l'écoulement d'un ou plusieurs polymères destiné à former la ou les couches internes du courant, chaque buse (296) comportant en outre une vanne (800, 834) intervenant, dans le canal central, pour bloquer l'écoulement des polymères à partir des orifices, vers et dans le canal central, et pour commander indépendamment et sélectivement l'écoulement des polymères à partir des orifices, ce procédé comprenant en outre les étapes de commande du fonctionnement de la vanne pour empêcher l'écoulement à partir de tous les orifices, empêcher l'écoulement du polymère provenant du ou des orifices de deuxième passage, tout en autorisant l'écoulement de la matière à partir du troisième orifice, du premier orifice ou à la fois des troisième et premier orifices, et pour permettre l'écoulement de matière à travers le ou les orifices de deuxième passage tout en autorisant la matière à s'écouler à travers le troisième orifice ou à la fois à travers les troisième et premier orifices.

101. Procédé suivant la revendication 100 caractérisé en ce qu'il comprend en outre l'étape consistant à utiliser chaque vanne pour réduire l'écoulement du polymère à travers le troisième orifice tout en autorisant l'écoulement du polymère à travers le ou les deuxièmes orifices.

102. Procédé suivant la revendication 100 ou la revendication 101 caractérisé en ce qu'il comprend en outre l'étape consistant à empêcher l'écoulement du polymère à travers le troisième orifice tout en autorisant l'écoulement du polymère à travers le ou les deuxièmes orifices.

103. Procédé suivant la revendication 102 caractérisé en ce qu'il comprend en outre l'étape consistant à achever l'écoulement du polymère à partir du ou des deuxièmes orifices.

104. Procédé suivant la revendication 1 caractérisé en ce qu'il comprend les étapes consistant à former, dans les buses (296), des courants combinés sensiblement concentriques d'au moins trois polymères et à injecter ces courants dans les empreintes associées (102), afin de produire les articles qui ont une couche superficielle externe, au moins d'une couche interne et une couche superficielle interne formées à partir de courants respectifs du courant combiné, à savoir un courant en fusion externe, au moins un courant en fusion interne et un courant en fusion ou de noyau, le procédé mettant en oeuvre l'utilisation d'une pluralité de buses comportant chacune un orifice d'injection (596) à une extrémité, un canal central cylindrique (540) communiquant avec l'orifice d'injection, et au moins trois passages de polymères communiquant chacun avec le canal central, par l'intermédiaire d'orifices respectifs, à savoir un premier orifice (462) situé plus près de l'orifice d'injection que les autres orifices, pour diriger le courant externe vers et dans le canal, un troisième orifice (440) davantage éloigné de l'orifice d'injection que les autres orifices, pour diriger le courant de noyau vers et dans le canal, et au moins un deuxième orifice (502) situé entre les premier et troisième orifices, pour diriger au moins un courant interne vers et dans le canal, la buse comportant en outre une vanne (800, 834) active à proximité immédiate des orifices et adaptée de manière à empêcher et à permettre l'écoulement du ou des courants internes à travers le ou les deuxièmes orifices (502), et pour commander indépendamment l'écoulement ou l'absence d'écoulement du courant de noyau à travers le troisième orifice (440), le procédé comprenant en outre l'étape consistant à faire fonctionner la vanne dans la buse de manière à:
(a) empêcher l'écoulement du ou des courants internes à travers le ou les deuxièmes orifices (502), tout en autorisant l'écoulement à travers le premier orifice (462), à travers le troisième orifice (440) ou à la fois à travers les premier et troisième orifices, et ensuite
(b) autoriser l'écoulement à travers le ou les deuxièmes orifices tout en autorisant l'écoulement à travers le troisième orifice.

105. Procédé suivant la revendication 104 caractérisé en ce qu'il comprend en outre l'étape consistant à utiliser la vanne pour réduire l'écoulement à travers le troisième orifice tout en autorisant l'écoulement à travers le deuxième orifice (502).

106. Procédé suivant la revendication 105 caractérisé en ce qu'après l'étape de réduction on prévoit une étape d'utilisation de la vanne pour arrêter l'écoulement à travers le deuxième orifice (502).

107. Procédé suivant la revendication 106 caractérisé en ce qu'après l'arrêt de l'écoulement à partir du deuxième orifice (502), la poursuite de l'écoulement est autorisée à travers le premier orifice (462), à travers le troisième orifice ou à la fois à travers les premier et troisième orifices (462, 440).

108. Procédé suivant l'une quelconque des revendications 104 à 107 caractérisé en ce que avant l'étape (a) de blocage de l'écoulement, il est prévu l'étape consistant à utiliser la vanne pour empêcher l'écoulement de polymère à partir de tous les orifices.

109. Procédé suivant la revendication 108 caractérisé en ce que le canal central (540) de la buse comporte une zone de combinaison dans laquelle le courant combiné est formé, et en ce que, après l'étape de blocage de l'écoulement des polymères à partir de tous les orifices, il comporte en outre une étape consistant à utiliser la vanne pour nettoyer pratiquement totalement la zone de combinaison des polymères, avant de former le courant combiné suivant de matières dans le canal central (540).

110. Procédé suivant la revendication 109 caractérisé en ce qu'il comprend en outre l'utilisation de la vanne pour empêcher un retour de polymère d'un orifice vers et dans un autre orifice.

111. Procédé suivant l'une quelconque des revendications 104 à 110 caractérisé en ce qu'il comporte en outre une étape consistant à "accoler", dans chaque buse (296), la matière du courant interne en fusion avec elle-même, par l'intermédiaire de la matière du noyau, et en déplaçant la vanne (800, 834) vers l'avant, à travers le canal central (540), en direction de l'orifice d'injection (596), afin de contribuer à l'accolement de la matière de la couche interne.

112. Procédé suivant la revendication 111 caractérisé en ce qu'il comporte l'étape consistant à déplacer la vanne vers l'avant pour contribuer à la réalisation, dans la buse, à l'encapsulation, dans la matière du noyau, de la matière centrale accolée.

113. Procédé suivant la revendication 111 ou la revendication 112 caractérisé en ce qu'il comprend l'étape consistant à déplacer la vanne vers l'avant afin de déplacer les courants combinés à travers les orifices d'injection, vers et dans les empreintes d'injection, sans qu'il y ait rupture de la matière centrale accolée.

114. Procédé suivant l'une quelconque des revendications 104 à 113 caractérisé en ce qu'après l'étape (b) d'autorisation de l'écoulement il est prévu l'étape consistant à utiliser la vanne (800, 834) pour autoriser l'écoulement des matières à partir de tous les orifices et pour empêcher ensuite l'écoulement à partir de tous les orifices, le temps s'écoulant entre ces étapes d'autorisations et ces étapes d'empêchement de l'écoulement allant de 60 à 700 centièmes de seconde et de préférence de 60 à 250 centièmes de seconde.

115. Procédé suivant la revendication 104 caractérisé en ce qu'il comprend l'étape de mise en fonctionnant de la vanne, dans la buse (296), pour la réalisation des étapes consistant à :
(i) empêcher l'écoulement de polymère à partir de tous les orifices (462, 502, 440) d'une buse,
(ii) empêcher l'écoulement de polymère à travers le deuxième orifice (502) tout en autorisant l'écoulement de matière structurale à travers le premier orifice (462), à travers le troisième orifice (440) ou à la fois à travers des premier et troisième orifices, puis,
(iii) autoriser l'écoulement de polymère à travers le deuxième orifice (502) tout en autorisant la matière à s'écouler à travers le troisième orifice (440),
(iv) restreindre l'écoulement de polymère à travers le troisième orifice (440) tout en autorisant l'écoulement de matière à travers le deuxième orifice (502),
(v) restreindre l'écoulement de polymère à travers le deuxième orifice tout en autorisant l'écoulement de polymère à travers le premier orifice (462) ou le troisième orifice (440) ou à la fois à travers les premier et troisième orifices, de matière à accoler la matière de la couche intermédiaire avec elle-même, par l'intermédiaire de la matière du noyau, et à encapsuler pratiquement la couche intermédiaire dans le courant combiné et dans le coup d'injection.

116. Procédé suivant la revendication 115 caractérisé en ce qu'il comprend, après l'étape (v), l'étape consistant à utiliser la vanne (800, 834) pour nettoyer la totalité ou la plus grande partie du polymère à partir du canal central (540).

117. Procédé suivant la revendication 116 caractérisé en ce qu'il comprend en outre l'étape consistant à utiliser la vanne (800, 834), pendant cette étape de nettoyage, afin d'empêcher un écoulement inverse du polymère à partir du canal central (540) vers et dans un orifice ou bien encore à partir de l'un des orifices vers et dans un autre orifice.

118. Procédé suivant la revendication 115, 116 ou 117 caractérisé en ce qu'il comprend en outre l'étape consistant à déplacer la vanne (800, 834), à travers le canal central (540) de chaque buse (296), en direction de l'orifice d'injection, pendant l'étape (v), pour contribuer à l'accolement de la matière de la couche interne.

119. Procédé suivant la revendication 118 caractérisé en ce qu'on déplace les vannes (800, 834) afin de faire passer les courants combinés à travers les orifices d'injection (596), vers et dans les empreintes d'injection, sans rupture de l'accolement.

120. Procédé suivant l'une quelconque des revendications 115 à 119 caractérisé en ce que, pendant l'étape (iii), la matière est autorisée à s'écouler à travers les premiers orifices et les étapes (ii) et (iii) sont exécutées en 250 centièmes de seconde et de préférence en 100 centièmes de seconde.

121. Procédé suivant la revendication 104 caractérisé en ce qu'on fait fonctionner les vannes (800, 834) dans les buses (296), pour former les courants combinés, en suivant les étapes consistant :
(i) à empêcher l'écoulement de polymère à travers les deuxièmes orifices tout en autorisant l'écoulement de polymère à travers les premiers orifices, les troisièmes orifices ou à la fois les premiers et troisièmes orifices,
(ii) à permettre ensuite l'écoulement de polymère à travers les deuxièmes orifices tout en permettant l'écoulement de polymère à travers les troisièmes orifices,
(iii) à réduire l'écoulement de polymère à travers les troisièmes orifices tout en permettant au polymère de s'écouler à travers les deuxièmes orifices,
(iv) à achever l'écoulement de polymère à travers les deuxièmes orifices, et
(v) à permettre l'écoulement de polymère uniquement à travers les premiers orifices, tout en empêchant l'écoulement de polymère à partir des deuxièmes et troisièmes orifices, afin d'encapsuler pratiquement le ou les polymères intermédiaires dans les courants combinés.

122. Procédé suivant la revendication 121 caractérisé en ce qu'il comprend, après l'étape (v), une étape consistant à purger pratiquement totalement les polymères à partir des canaux centraux des buses, avant le cycle d'injection suivant.

123. Procédé suivant l'une quelconque des revendications 104 à 122 caractérisé en ce qu'il comprend en outre une étape consistant à former des courants combinés dans lesquels le bord antérieur d'une ou plusieurs couches internes n'est pratiquement pas incliné ou en biais par rapport à un plan vertical tracé perpendiculairement et transversalement à travers le coup d'injection.

124. Procédé suivant l'une quelconque des revendications 100 à 123 caractérisé en ce que les buses comportent des vannes qui sont sensiblement identiques et qui peuvent fonctionner de préférence pratiquement en même temps.

125. Procédé suivant la revendication 1, pour produire des articles tels que des paraisons, ayant une paroi composée d'au mois trois couches, caractérisé en ce que des courants de matières en fusion, destinés à former ces couches, sont injectés dans des empreintes d'un moule, à travers une pluralité de buses (296) dont chacune comprend un canal central (540) et au moins passages de courants de matières en fusion, chacun de ces passages ayant un orifice qui communique avec le canal central, les buses contenant en outre des vannes (800, 834) dans les canaux centraux, et en ce que le procédé comprend les étapes consistant à déplacer les vannes vers des premières positions, afin d'empêcher l'écoulement des courants de matières en fusion vers et dans les canaux centraux des buses, à déplacer les vannes vers des secondes positions afin de permettre l'écoulement de premiers courants de matières vers et dans les canaux centraux des buses, à déplacer les vannes vers des troisième positions afin de permettre la poursuite de l'écoulement des premiers courants de matières et de permettre l'écoulement de deuxièmes courants de matières vers et dans les canaux centraux des buses, et à déplacer les vannes vers des quatrièmes positions afin de permettre la poursuite des écoulements des premiers et deuxièmes courants et de permettre l'écoulement de troisièmes courants de matières vers et dans les canaux centraux des buses, entre les premiers et deuxièmes courants.

126. Procédé suivant la revendication 125 caractérisé en ce que les deuxièmes courants de matières sont admis sous la forme d'écoulements annulaires autour des premiers courants et les troisième courants de matières sont admis sous la forme d'écoulement annulaires entre les premier et deuxièmes courants de matières.

127. Procédé suivant la revendication 125 ou la revendication 126 caractérisé en ce qu'il comprend en outre l'étape consistant à appliquer une pression au moins aux troisièmes courants de matière avant le déplacement des vannes vers les quatrièmes positions ou en même temps que ce déplacement.

128. Procédé suivant la revendication 125 ou la revendication 126 caractérisé en ce qu'il comprend en outre l'étape consistant à appliquer une pression aux troisièmes courants dans des passages (440) et à l'un au moins des premiers et deuxièmes courants dans les canaux centraux (540) et à ajuster, avant le déplacement des vannes vers les quatrième positions ou en même temps que ce déplacement, la pression d'un ou plusieurs de ces courants de telle façon que la pression des troisièmes courants soit ensuite supérieure à la pression de l'un quelconque des premiers et deuxièmes courants dans les canaux centraux.

129. Procédé suivant la revendication 125 ou la revendication 126 caractérisé en ce qu'il

130. Procédé suivant la revendication 129 caractérisé en ce qu'il comprend l'étape consistant à appliquer une pression aux premiers, aux deuxièmes et aux troisièmes courants et à augmenter, avant le déplacement des vannes vers les quatrièmes positions ou en même temps que ce déplacement, la pression des troisièmes courants tout en réduisant la pression des premiers et/ou des deuxièmes courants.

131. Appareil suivant la revendication 13 caractérisé en ce qu'il comporte une pluralité de buses (296) pour la co-injection d'au moins trois courants de matières en fusion, afin de former des articles à plusieurs couches, chaque buse ayant un canal central cylindrique (546) ouvert à une extrémité, avec un orifice d'injection (596) à l'extrémité ouverte et en communication avec le canal central, la buse comportant au moins deux passages (460, 500) dont chacun présente un orifice annulaire (462, 502) proche de l'orifice d'injection (596), et un troisième passage (440, 450) avec un orifice (440) éloigné de l'orifice d'injection, tous ces passages étant en communication avec le canal central (546) par l'intermédiaire de leurs orifices, le premier orifice (462) étant proche de l'orifice d'injection et le deuxième orifice (502) étant voisin du premier orifice, chacun de ces orifices ayant sa ligne centrale située dans un plan sensiblement perpendiculaire à l'axe du canal central et chacun de ces orifices étant défini par une lèvre antérieure (par exemple 461) proche de l'extrémité ouverte et une lèvre postérieure éloignée de l'extrémité ouverte, le canal central (1546) de la buse comportant deux parties cylindriques, la première partie (595) s'étendant à partir de l'orifice d'injection (596) jusqu'à la lèvre antérieure du premier orifice (462) tandis que la seconde partie (766) s'étend à partir de la lèvre postérieure du premier orifice, dans la direction amont, jusqu'à au moins la lèvre postérieure du deuxième orifice, la première partie (595) ayant un plus petit diamètre que la seconde partie, la buse comportant en outre une vanne associée opérationnellement au canal central de la buse et aux orifices, cette vanne comportant:
(i) un manchon allongé (8000') ayant une extrémité ouverte (812), une lumière (804) dans sa paroi latérale et un passage central allongé (1820) communiquant avec la lumière et l'extrémité ouverte, le manchon étant monté de manière à pouvoir coulisser, dans la seconde partie (766) du canal central (1540) et ajusté étroitement suffisamment pour empêcher une accumulation ou un passage notable de polymère, ce manchon ayant en outre une surface externe (1835) d'un diamètre qui assure un ajustement étroit, à glissement, dans la première partie (595) du canal central de la buse, le manchon étant capable d'obturer chacun des premier et deuxième orifices (462, 502) et
(ii) une tige allongée (1834) montée dans le passage central (1820) du manchon (8000'), ajustée étroitement à glissement dans ce passage central du manchon, suffisamment pour empêcher une accumulation ou un passage notable de matière fondue entre la tige et le manchon, le manchon étant adapté de manière à pouvoir se déplacer alternativement, dans le sens axial, dans le canal central (1540) de la buse, afin d'obturer et de libérer les premier et deuxième orifices (462, 502) et d'amener la lumière (804) à l'alignement avec le troisième orifice (440) et à l'écart de cet alignement, la vanne étant capable de nettoyer la première partie (595) du canal central du polymère fondu, à la fin d'un cycle d'injection, et d'empêcher un écoulement inverse du polymère en direction des orifices.

132. Appareil suivant la revendication 131 caractérisé en ce que le passage (460) avec le premier orifice (462) comprend une paroi antérieure (OW) qui est inclinée en direction de l'orifice d'injection et de l'axe du canal central de la buse et qui s'étend jusqu'à la lèvre antérieure (461) du premier orifice, qui est plus proche de l'axe du canal central que la lèvre postérieure du premier orifice, et la paroi (1814) du manchon présente une embouchure convergente définissant l'extrémité ouverte du manchon qui est adaptée de manière à venir buter contre la paroi antérieure (OW), afin de limiter le mouvement du manchon (8000') en direction de l'orifice d'injection et d'obturer le premier orifice.

133. Appareil suivant la revendication 131 ou la revendication 132 caractérisé en ce que la tige (1834) est adaptée de manière à pouvoir être déplacée vers l'avant dans la première partie (595) du canal central.

134. Appareil suivant l'une quelconque des revendications 131 à 133 caractérisé en ce que les vannes sont adaptées de manière à pouvoir se déplacer vers l'avant, en direction de l'orifice d'injection (596), suffisamment pour nettoyer une zone de combinaison de la buse associée et enlever le polymère, et la tige (1834) et le manchon (8000') sont tels que la tige peut être mise en position avec son extrémité antérieure décalée axialement en amont de l'extrémité antérieure du manchon, et il est en outre caractérisé en ce que la tige et le manchon peuvent être déplacés conjointement vers l'avant, dans le sens axial, à travers le canal central, la position décalée de l'extrémité antérieure de la tige créant une zone d'accumulation dans la partie extrême antérieure du manchon, pour l'accumulation de polymère en fusion, afin de repousser cette matière vers l'avant, à travers le canal, lorsque ce canal est nettoyé par suite de l'action de nettoyage de la tige et du manchon.

135. Appareil suivant la revendication 13 caractérisé en ce qu'il comprend une pluralité de buses (296) dont chacune comporte un canal central, une extrémité ouverte avec un orifice d'injection à cette extrémité ouverte, et en ce qu'il comprend :
(i) au moins trois passages (460, 480, 500) ayant chacun un orifice (462, 482, 502) pour décharger une matière en fusion vers et dans le canal central (1546), chaque orifice étant annulaire et entourant la périphérie du canal central, un bord antérieur de chaque orifice et la ligne centrale de chaque orifice étant perpendiculaires à l'axe du canal central, le premier orifice de passage (462) étant le plus proche de l'orifice d'injection, le troisième orifice de passage (502) étant le plus éloigné de l'orifice d'injection et le deuxième orifice de passage (482) étant en position intermédiaire entre les premier et deuxième orifices,
(ii) un canal central comprenant des sections cylindriques étagées (760, 762 764, 766) ayant des diamètres différents, et
(iii) une vanne comprenant
(a) un manchon allongé (8000') logé dans le canal central et pouvant se déplacer alternativement dans celui-ci, dans le sens axial, le manchon ayant un passage central (1820), une extrémité ouverte antérieure afin de communiquer avec une partie (766) du canal central qui est située entre les premier et deuxième orifices, et une lumière (8040) dans sa paroi laquelle coopère avec un orifice de passage (440), éloigné de l'extrémité ouverte du canal central, afin d'obturer et de libérer cet orifice de passage situé à distance, la paroi du manchon ayant des parties de surface cylindriques étagées dans le sens radial (761, 763, 765, 767), dont chacune est adaptée de manière à obturer un ou plusieurs passages de la buse lorsque le manchon est engagé totalement vers l'avant dans le canal central, et
(b) une tige allongée (1834) montée dans le passage central (1820) du manchon, avec un ajustement étroit à glissement suffisant pour empêcher une accumulation ou un passage notable de matière en fusion entre la tige et le passage central du manchon, la tige (1834) pouvant se déplacer alternativement, dans le sens axial, dans le manchon de manière à obturer et à libérer la lumière (8040') lorsque le manchon est placé dans une position telle que la lumière et l'orifice éloigné se trouvent être alignés.

136. Appareil suivant la revendication 135 caractérisé en ce que le manchon (8000') et la tige (1834) sont adaptés de manière à être mis en position et à coopérer de telle façon qu'en même temps le troisième orifice (440) n'est pas obturé par la vanne tandis que le deuxième orifice (500) est obturé.

137. Appareil suivant la revendication 135 ou la revendication 136 caractérisé en ce que la buse comporte cinq passages de buse, un quatrième passage (1480) étant situé entre le deuxième passage (1500) et le premier passage (1460), et un cinquième passage (1520) étant situé entre le deuxième passage et le troisième passage.

138. Appareil suivant la revendication 137 caractérisé en ce que les quatrième et cinquième passages (1480, 1520) communiquent avec le canal central à travers l'orifice du deuxième passage (1500).

139. Appareil suivant l'une quelconque des revendications 135 à 138 caractérisé en ce que le canal central comporte une zone de combinaison s'étendant à partir du bord antérieur du premier orifice (462) jusqu'à un bord postérieur du deuxième orifice (502) et cette zone de combinaison a une longueur axiale allant de 100 à 900 mils (2,54 à 22,9 millimètres), et par exemple de 100 à 300 mils (2,54 à 7,69 millimètres).

140. Appareil suivant la revendication 137 caractérisé en ce que la longueur axiale allant d'une lèvre antérieure du quatrième orifice (482) jusqu'à une lèvre postérieure du cinquième orifice (522) va de .....

141. Appareil suivant la revendication 13 caractérisé en ce qu il comporte une pluralité de buses (296) ayant chacune une pluralité d'orifices (462, 482, 502, 522, etc...) communiquant avec un canal central (540), et une vanne comprenant :
(i) un manchon allongé (800) ayant une paroi latérale percée d'une lumière (804), une extrémité ouverte (812) et un passage central allongé (820) communiquant avec la lumière et l'extrémité ouverte, et
(ii) une tige allongée (834), pouvant être animée d'un mouvement alternatif axial relatif dans le manchon, ajustée étroitement à glissement dans le passage central (820), cette tige ayant une paroi latérale dont la surface externe est adaptée de manière à fermer et ouvrir la lumière, le canal central (540) de la buse et le manchon (800) ne laissant entre eux aucune zone permettant une accumulation notable de la matière d'injection ou un passage de matière d'injection à travers elle.

142. Appareil suivant la revendication 141 caractérisé en ce que le manchon allongé (800) est monté, en étant ajusté étroitement à glissement, dans le canal central (540) de la buse (296) de manière à empêcher toute accumulation ou tout passage notable de matière d'injection entre le canal et le manchon.

143. Appareil suivant la revendication 141 ou la revendication 142 caractérisé en ce que la tige et le passage central (820) du manchon ont chacun une section transversale uniforme.

144. Appareil suivant l'une quelconque des revendications 141 à 143 caractérisé en ce que la tige allongée (834) a une longueur axiale plus grande que le manchon (800).

145. Appareil suivant la revendication 13, agencé pour commander sélectivement l'écoulement d'au moins trois courants de matières en fusion, en vue du moulage par injection d'articles en matière plastique à plusieurs couches à partir des matières en fusion, caractérisé en ce qu'il comporte une pluralité de buses (296) ayant chacune un canal central (540) ouvert à une extrémité, un passage d'écoulement dans la buse pour chaque courant d'une pluralité de courants de matières, au moins deux passages de la buse (460, 500, etc...) se terminant à l'endroit d'orifices de sortie respectifs (462, 502) dont chacun communique avec le canal central (540) de la buse, de préférence au voisinage de l'extrémité ouverte, et un élément de vanne du type manchon (800) ayant un passage axial (820) pour l'écoulement de la matière, lequel communique avec le canal central (540) de la buse et est adapté de manière à pouvoir communiquer avec un passage d'écoulement (440) pour transmettre un courant de matière vers le canal central de la buse, le manchon (800) étant logé dans le canal central (540) et pouvant être déplacé vers des positions sélectionnées afin de d'obturer et de libérer un ou plusieurs des orifices et d'établir ou de couper une communication entre le passage axial (820) et le passage d'écoulement (440).

146. Appareil suivant la revendication 145 caractérisé en ce que chaque buse (296) de la pluralité de buses comporte un passage d'écoulement (460, 500) pour chacun d'au moins deux courants de matières et le manchon (800) est adapté de manière à communiquer avec un passage d'écoulement (440) extérieur à la buse et il peut être déplacé de manière à établir et à couper une communication entre le passage axial interne (820) et un ou plusieurs des passages (460, 500) de la buse.

147. Appareil suivant la revendication 145 ou la revendication 146 caractérisé en ce que le passage axial (820) du manchon est formé à l'intérieur de ce manchon ou par son intérieur.

148. Appareil suivant la revendication 145,146 ou 147 caractérisé en ce que la communication entre le passage axial interne (820) du manchon (800) et le passage d'écoulement (440) s'effectue à travers une lumière ou ouverture (804) prévue dans la paroi du manchon.

149. Appareil suivant la revendication 148 caractérisé en ce que le manchon (800) est mobile axialement ou/en rotation ou les deux à la fois, dans le canal central (540) de la buse (296), jusqu'à des positions sélectionnées, de manière à obturer et libérer un ou plusieurs des orifices et à amener la lumière ou ouverture (804) à l'alignement avec le passage d'écoulement (440) ou à l'écart de cet alignement.

150. Appareil suivant l'une quelconque des revendications 145 à 149 caractérisé en ce que le manchon (800) peut être déplacé vers des positions sélectionnées de manière à obturer et à libérer au moins deux des orifices.

151. Appareil suivant l'une quelconque des revendications 145 à 150 caractérisé en ce que les orifices de sortie (462, 502) entourent complètement le canal central (540) de la buse.

152. Appareil suivant l'une quelconque des revendications 145 à 151 caractérisé en ce que le manchon (800) est ajusté étroitement dans le canal central (540) de la buse de manière qu'il n'y ait aucune cavité notable pour une accumulation de polymères entre le manchon et le canal central.

153. Appareil suivant l'une quelconque des revendications 145 à 152 caractérisé en ce que le plan d'au moins un des orifices (462, 502) est perpendiculaire à l'axe du canal central (540).

154. Appareil suivant l'une quelconque des revendications 145 à 152 caractérisé en ce que la buse comporte une pluralité de passages d'écoulement additionnels pour une pluralité de courants de matières additionnels et le manchon présente une pluralité de passages d'écoulement axiaux (666, 668) pour ces courants.

155. Appareil suivant l'une quelconque des revendications 145 à 154 caractérisé en ce qu'il comporte en outre des moyens (860, 856) pour actionner et déplacer le manchon (800) entre des premier, deuxième, troisième, quatrième, cinquième et sixième modes, dans le premier mode le manchon obture tous les orifices (par exemple 462, 482, 502, 522) et le passage axial (820) n'est pas en communication avec le passage d'écoulement (440), dans le deuxième mode le manchon obture tous les orifices et le passage axial (820) est en communication avec le passage d'écoulement (440), dans le troisième mode le manchon n'obture pas l'orifice (462) le plus proche de l'extrémité ouverte du canal central (540) de la buse et le passage axial communique alors avec ledit passage d'écoulement, dans le quatrième mode le manchon n'obture pas au moins deux orifices dont l'un est l'orifice (462) le plus proche de l'extrémité ouverte du canal central de la buse, et le passage axial est en communication avec ledit passage d'écoulement, dans le cinquième mode le manchon n'obture pas au moins deux orifices dont l'un est l'orifice (462) le plus proche de l'extrémité ouverte du canal central de la buse, et le passage axial ne communique pas avec ledit passage d'écoulement, et dans le sixième mode le manchon n'obture pas l'orifice (462) le plus proche de l'extrémité ouverte du canal central de la buse et le passage axial ne communique pas avec ledit passage d'écoulement.

156. Appareil suivant la revendication 155 caractérisé en ce que le moyen d'actionnement est actif pour déplacer le manchon successivement à partir de la première position jusqu'à chacune des positions, de la deuxième à la sixième, puis vers la première position.

157. Appareil suivant l'une quelconque des revendications 145 à 156 caractérisé en ce qu'il est adapté pour commander cinq courants de matières.

158. Appareil suivant la revendication 157 caractérisé en ce que chaque buse de la pluralité de buses comporte quatre orifices de sortie (462, 482, 502, 522) communiquant avec le canal central (540) de la buse et le manchon comprend un passage d'écoulement interne (820) et une ouverture (804) dans sa paroi.

159. Appareil suivant la revendication 157 caractérisé en ce que chaque buse de la pluralité de buses comporte trois orifices de sortie (462, 482, 502) communiquant avec le canal central de la buse et le manchon comporte deux passages d'écoulement de matières internes (660, 680) et deux ouvertures (661, 662) dans sa paroi, lesquelles communiquent chacune avec le passage (660, 640) de la buse.

160. Appareil suivant l'une quelconque des revendications 145 à 159 caractérisé en ce qu'il comporte une tige (864) pouvant être déplacée, par des moyens d'actionnement (844, 850) de cette tige, dans le passage axial (820) du manchon, vers des positions sélectionnées afin de couper et d'établir une communication entre le passage axial interne (820) et le ou un passage d'écoulement (440).

161. Appareil suivant la revendication 160, lorsqu'elle dépend de la revendication 156, caractérisé en ce que les moyens d'actionnement (844, 850; 856, 860) à la fois pour le manchon (800) et pour la tige (834) interviennent pour les déplacer successivement à partir du premier mode vers chacun des deuxième à sixième modes puis vers le premier mode.

162. Appareil suivant la revendication 160 ou la revendication 161 caractérisé en ce qu'une extrémité de la tige (834) est proche de l'extrémité ouverte (595) du canal central (540) de la buse lorsque le manchon et la tige se trouvent dans le premier mode.

163. Appareil suivant l'une quelconque des revendications 145 à 162 caractérisé en ce qu'il comporte en outre des moyens de direction de l'écoulement de matière (par exemple 464, 466) associés à chaque buse de la pluralité de buses, afin d'équilibrer l'écoulement d'au moins un courant de matière (B) autour du passage (460) de la buse et de l'orifice de sortie (462) à travers lequel s'écoule le courant.

164. Appareil suivant l'une quelconque des revendications 145 à 163 caractérisé en ce qu'il comporte en outre des moyens pour mettre en pression au moins un courant de matière.

165. Appareil suivant l'une quelconque des revendications 145 à 164 caractérisé en ce que chaque buse de la pluralité de buses comporte en outre des moyens de direction de l'écoulement de matière (par exemple 464, 466) dans au moins un des passages (460) de la buse, afin d'équilibrer l'écoulement du courant de matière associé (B) autour du passage et de l'orifice de sortie (462) à travers lequel il s'écoule, et en ce qu'il comprend un moyen (232) pour mettre en pression ce courant afin de produire un réservoir de matière sous pression dans le passage de la buse, entre les moyens de direction de l'écoulement et l'orifice, si bien que, lorsque le manchon (800) libère l'orifice (462), le départ de l'écoulement de la matière à travers l'orifice est pratiquement uniforme autour de cet orifice.

166. Appareil suivant la revendication 165 caractérisé en ce que le ou les passages de la buse (par exemple 500) sont convergents en direction de leur orifice associé (502), à partir d'une grande largeur à distance de l'orifice jusqu'à une petite largeur à l'endroit de l'orifice.

167. Appareil suivant l'une quelconque des revendications 145 à 166 caractérisé en ce que chaque buse comprend quatre ou cinq passages ou davantage ayant des orifices (par exemple 462, 482, 502, 522) communiquant avec le canal central (540) en des emplacements proches de l'extrémité ouverte (596).

168. Appareil suivant l'une quelconque des revendications 145 à 167, pour la co-injection d'au moins trois courants de matières en fusion à travers les buses (296), vers et dans les empreintes associées (102), afin de former des articles en matière plastique à plusieurs couches, à paroi mince, ayant chacun au moins une couche interne mince ayant une extrémité terminale, caractérisé en ce que chaque buse (296) de la pluralité de buses comprend des moyens de direction de l'écoulement de matière (524, 526) pour équilibrer l'écoulement du courant de matière (C), qui forme la couche interne, autour du passage (500) de la buse et de l'orifice de sortie (502) à travers lequel ce courant s'écoule, les moyens de direction de l'écoulement intervenant pour placer l'extrémité terminale de la couche interne d'une manière sensiblement uniforme dans l'article injecté, lors de l'achèvement du mouvement du polymère dans l'empreinte d'injection associée.

169. Appareil suivant la revendication 168 caractérisé en ce qu'il comporte en outre des moyens (252) pour mettre en pression au moins le courant de matière constituant la couche interne.

170. Appareil suivant la revendication 169 caractérisé en ce que les moyens de direction de l'écoulement de matière (524, 526) sont logés dans le passage (500) de la buse prévu pour la matière destinée à constituer la couche interne, ce passage constituant, à l'intérieur, un réservoir de matière sous pression situé entre les moyens de direction de l'écoulement et l'orifice de sortie (502) du passage en direction du canal central (540), si bien que, lorsque cet orifice est libéré, le départ de l'écoulement, vers et dans le canal central, de la matière sous pression destinée à constituer la couche interne est pratiquement uniforme autour du canal.

171. Appareil suivant la revendication 170 caractérisé en ce que le passage de la buse prévu pour la matière destinée à former la couche interne est convergent (en 518) et il est plus large à distance de son orifice de sortie (502) et plus étroit à l'endroit de cet orifice.

172. Appareil suivant l'une quelconque des revendications 145 à 171 pour la co-injection d'au moins trois courants de matières en fusion à travers les buses (296), vers et dans les empreintes associées (102), afin de former des articles en matière plastique à plusieurs couches, à paroi mince, ayant chacun une coluche externe ayant une extrémité terminale, caractérisé en ce que chaque buse (296) de la pluralité de buses comprend des moyens de direction de l'écoulement de matière (464, 468) pour équilibrer l'écoulement du courant de matière (B), qui forme la couche externe, autour du passage (460) de la buse et de l'orifice de sortie (462) à travers lequel ce courant s'écoule, les moyens de direction de l'écoulement intervenant pour placer l'extrémité terminale de la couche externe d'une manière sensiblement uniforme dans l'article injecté, lors de l'achèvement du mouvement du polymère dans l'empreinte d'injection associée.

173. Appareil suivant la revendication 172 caractérisé en ce qu'il comporte en outre des moyens (232) pour mettre en pression le courant de matière constituant la couche externe.

174. Appareil suivant la revendication 173 caractérisé en ce que les moyens de direction de l'écoulement de matière (464, 466) sont logés dans le passage (460) de la buse prévu pour la matière destinée à constituer la couche externe, ce passage constituant, à l'intérieur, un réservoir de matière sous pression situé entre les moyens de direction de l'écoulement et l'orifice de sortie du passage en direction du canal central, si bien que, lorsque cet orifice est libéré, le départ de l'écoulement, vers et dans le canal central, de la matière sous pression destinée à constituer la couche externe est pratiquement uniforme autour du canal.

175. Appareil suivant la revendication 174 caractérisé en ce que le passage de la buse prévu pour la matière destinée à former la couche externe est convergent (en 478) et il est plus large à distance de son orifice associé (462) et plus étroit à l'endroit de cet orifice.

176. Appareil suivant les revendications 168,169 ou les revendications 170 et 172, 173 ou 174 caractérisé en ce que les courants des matières destinées à former à la fois la couche interne et la couche superficielle externe des articles sont soumis à des moyens de direction de l'écoulement (524, 526; 464, 466) intervenant pour équilibrer les écoulements des courants de matières (B, C) qui forment les couches interne et superficielle externe, pour les localiser autour des passages de la buse et des orifices de sortie à travers lesquels s'écoulent ces courants, et pour placer les extrémités terminales de chacune de ces couches, d'une manière pratiquement uniforme, dans les articles injectés, lors de l'achèvement du mouvement des polymères dans les empreintes d'injection.

177. Appareil suivant l'une quelconque des revendications 145 à 176 caractérisé en ce qu'il comporte des moyens pour commander sélectivement l'écoulement d'au moins trois courants de matières en fusion à travers les buses (296), afin de co-injecter les matières dans des empreintes associées 102), pour former des articles en matière plastique à plusieurs couches, à paroi mince, ayant une couche superficielle externe et au moins une couche interne mince, chaque buse (296) de la pluralité de buses ayant un canal central (540) ouvert à une extrémité, un passage d'écoulement dans la buse pour chaque courant de matière, au moins deux des passages (460, 500) de la buse se terminant à l'endroit d'un orifice de sortie (462, 502), chacun de ces orifices communiquant avec le canal central (540) de la buse en des emplacements proches de l'extrémité ouverte (596), un manchon (800) ayant au moins un passage d'écoulement axial interne (820) communiquant avec le canal central de la buse et adapté de manière à communiquer avec l'un des passages d'écoulement (par exemple 440) dans la buse, ce manchon étant logé dans le canal central (540) de la buse et pouvant être déplacé vers des positions sélectionnées afin d'obturer et de libérer un ou plusieurs des orifices, une tige (834) mobile dans le passage axial (820) du manchon, vers des positions sélectionnées, afin de couper et d'établir une communication entre le passage axial interne (820) et le passage (440) de la buse, et des moyens de direction de l'écoulement de matière (464, 466; 524, 526), associés à la buse, pour équilibrer les écoulements des courants de matières (B, C) qui forment la couche superficielle externe et la couche interne, autour des passages de buses et des orifices de sortie respectifs à travers lesquels s'écoulent ces courants, si bien que les emplacements des extrémités terminales de la couche superficielle externe et de la couche interne sont pratiquement uniformes dans chaque article injecté, à l'achèvement des mouvements des polymères dans l'empreinte d'injection.

178. Appareil suivant la revendication 13, agencé de manière à commander sélectivement l'écoulement d'au moins trois courants de matières en fusion, afin de co-injecter ces matières dans des empreintes pour produire des articles en matière plastique, à plusieurs couches, à paroi mince, ayant chacun au moins une couche mince présentant une extrémité terminale, caractérisé en ce que chaque buse (296) de la pluralité de buses a un canal central (540) ouvert à une extrémité, un passage d'écoulement (par exemple 460, 500) dans la buse pour chaque courant d'une pluralité de courants de matières (B, C) une vanne (800), dans le canal central, pouvant être déplacée vers des positions sélectionnées afin d'obturer et de libérer un ou plusieurs orifices (par exemple 462, 502) par lesquels les passages débouchent dans le canal central, afin d'établir et de couper une communication entre ces passages (460, 500) et le canal central, et des moyens de direction de l'écoulement de matière (464, 466 et/ou 524, 526), associés à la buse (296), pour équilibrer l'écoulement du courant de matière, qui forme la couche (B ou C), autour du passage de buse à travers lequel le courant s'écoule, ces moyens de direction de l'écoulement intervenant pour placer l'extrémité terminale de la couche d'une manière pratiquement uniforme dans l'article injecté à l'achèvement du mouvement du polymère dans l'empreinte d'injection associée.

179. Appareil suivant la revendication 178 caractérisé en ce qu'il y a cinq passages (460, 480, 500, 520, 440) qui se terminent de préférence à l'endroit d'orifices de sortie (par exemple 462, 482, 502, 522) proches de l'extrémité ouverte du canal central.

180. Appareil suivant la revendication 178 ou la revendication 179 caractérisé en ce que le passage de buse (500) auquel sont associés les moyens de direction de l'écoulement (524, 526), sert à fournir un courant destiné à former une couche interne (C) de l'article injecté.

181. Appareil suivant la revendication 178,179 ou 180 caractérisé en ce qu'il comporte un moyen de direction de l'écoulement de matière (524, 526) associé à chaque buse afin d'équilibrer l'écoulement du courant de matière (B), destinée à former la couche superficielle externe de l'article, autour du passage de buse (500) à travers lequel passe le courant de la couche superficielle externe, le moyen de direction de l'écoulement intervenant pour placer l'extrémité terminale de la couche superficielle externe d'une manière pratiquement uniforme dans l'article injecté, à l'achèvement de l'opération d'injection.

182. Appareil suivant la revendication 180 caractérisé en ce qu'il comporte en outre un moyen (252) pour mettre sous pression le courant de matière (C) destinée à constituer la couche interne.

183. Appareil suivant la revendication 181 caractérisé en ce qu'il comporte en outre un moyen (232) pour mettre sous pression le courant de matière (B) destinée à constituer la couche superficielle externe.

184. Appareil suivant l'une quelconque des revendications 178 à 183 caractérisé en ce que le ou chaque moyen de direction de l'écoulement de matière est situé dans le passage de buse (500 ou 460) prévu pour le courant d'écoulement (C ou B) de la matière destinée à former la couche respective interne ou superficielle externe, ce passage constituant un réservoir sous pression (en 518 ou 478) de matière dans le passage de buse, entre le moyen de direction de l'écoulement et l'orifice de sortie du passage vers le canal central de chaque vanne, si bien que, lorsque la vanne libère le passage, le départ de l'écoulement de la matière se trouvant dans le passage, vers et dans le canal central, est pratiquement uniforme autour du canal.

185. Appareil suivant l'une quelconque des revendications 178 à 184 caractérisé en ce que le passage de buse (500, 460) prévu pour le courant d'écoulement de la matière destinée à former soit la couche interne soit la couche superficielle externe, soit ces deux couches, est convergent (en 518, 478) si bien qu'il est plus large à distance de son orifice associé et plus étroit à l'endroit de l'orifice.

186. Appareil suivant l'une quelconque des revendications 178 à 185 caractérisé en ce qu'il comporte en outre un moyen de direction de l'écoulement de matière (464, 466; 524, 526) associé à chaque buse afin d'équilibrer les écoulements des deux courants de matières (B, C) destinées à former la couche superficielle externe et la couche interne, autour des passages de buse (460, 500) à travers lesquels passe chaque courant, si bien que l'emplacement des extrémités terminales de chacune des couches interne et superficielle externe, est sensiblement uniforme dans l'article injecté à l'achèvement du mouvement du polymère dans l'empreinte d'injection.

187. Appareil suivant la revendication 13 caractérisé en ce qu'il comporte une pluralité de buses (296) pour co-injecter au moins trois courants de matières en fusion, afin de produire des articles à plusieurs couches à partir de ces courants, chaque buse (296) de la pluralité de buses ayant un canal central (540) s'étendant axialement, un orifice d'injection (596) communiquant avec le canal central, et au moins deux passages de courants de polymères (460, 500), ayant chacun un orifice annulaire (462, 502), le premier de ces orifices (462) étant proche de l'orifice d'injection (596), le deuxième de ces orifices (502) étant voisin du premier orifice et l'un ou l'autre des premier et deuxième passages (460, 500) ou ces deux passages ayant une partie convergente (478, 518) adjacente à son orifice respectif de telle façon que chaque orifice ait une aire de section transversale plus petite qu'une partie voisine amont de son passage respectif, la buse comprenant de préférence un troisième passage (450) ayant un orifice débouchant dans le canal central en un emplacement plus éloigné de l'orifice d'injection que les autres orifices.

188. Appareil suivant la revendication 187 caractérisé en ce qu'il comporte une vanne (800) pour chacune des buses, cette vanne intervenant dans le canal central afin d'obturer et de libérer les orifices de trois passages (par exemple 460, 480, 450) et étant adaptée, dans une position, pour obturer le deuxième orifice (502) tandis que le troisième orifice (440) n'est pas obturé par la vanne.

189. Appareil suivant la revendication 188 caractérisé en ce que la vanne (800) est également adaptée de manière à obturer, dans une autre position, le troisième orifice (440) tandis que le premier orifice (462) n'est pas obturé par la vanne.

190. Appareil suivant la revendication 188 ou la revendication 189 caractérisé en ce que la vanne comporte un manchon (800) ayant un passage axial central (820), une extrémité ouverte (812) communiquant avec le passage axial et une lumière (804) dans la paroi du manchon, et une tige allongée (834) mobile axialement dans le manchon et adaptée de manière à obturer et libérer la lumière (804).

191. Appareil suivant l'une quelconque des revendications 187 à 190 caractérisé en ce que chaque buse de la pluralité de buses comprend cinq passages de courants de polymères ayant chacun un orifice annulaire, le quatrième orifice de passage (482) étant en position intermédiaire entre les premier et deuxième orifices (462, 502) tandis que le cinquième orifice de passage (522) est en position intermédiaire entre le deuxième orifice (502) et le troisième orifice (440).

192. Appareil suivant la revendication 187 caractérisé en ce qu'il comporte en outre une vanne (800) intervenant dans le canal central (540) de la buse pour obturer et libérer les orifices de chaque buse (296) et des moyens (232, 234, 260, 262) pour déplacer les polymères en fusion à travers chaque passage et chaque orifice de passage, et pour mettre en pression une matière en fusion dans un passage convergent (478, 498, 518 ou 538) tandis que son orifice est obturé par la vanne (800).

193. Appareil suivant la revendication 192 caractérisé en ce que les moyens (232, 234, 260, 262) prévus pour déplacer et mettre en pression la matière fondue comportent une presse à piston.

194. Appareil suivant la revendication 192 ou la revendication 193 caractérisé en ce qu'il est prévu, pour chaque courant de matière, un moyen pour déplacer et mettre en pression la matière en fusion et chaque moyen est adapté de manière à mettre en pression la matière en fusion dans son passage et un de ces moyens est adapté de manière à mettre en pression la matière en fusion dans son passage, dans chaque buse, tandis que l'orifice de ce passage est obturé par la vanne (800).

195. Appareil suivant la revendication 192,193 ou 194 caractérisé en ce que la vanne (800) de chaque buse est adaptée de manière à commander l'écoulement à travers les orifices de trois passages et à obturer, dans une position, l'orifice du deuxième passage (500) tandis que l'orifice (440) du troisième passage n'est pas obturé par la vanne.

196. Appareil suivant l'une quelconque des revendications 192 à 195 caractérisé en ce qu'au moins le passage (460) communiquant avec le premier orifice (462) comprend un moyen (464, 466), associé en coopération avec ce passage, pour équilibrer l'écoulement du courant de matière en fusion (B) à travers ce passage.

197. Appareil suivant la revendication 196 caractérisé en ce que le moyen d'équilibrage de l'écoulement comporte un étranglement excentré (464 ou 466) qui fait saillie dans le passage (460) à partir de l'une des parois de celui-ci.

198. Appareil suivant l'une quelconque des revendications 192 à 197 caractérisé en ce que chaque buse (296) de la pluralité de buses comprend cinq passages pour cinq courants de matières en fusion, ayant chacun un orifice respectif débouchant dans le canal central, chacun des premier, deuxième, quatrième et cinquième passages (460, 500, 480, 520) ayant une partie convergente (478, 518, 498, 538) voisine de son orifice respectif de telle façon que chaque orifice ait une aire de section transversale plus petite qu'une partie voisine amont de son passage respectif, et la vanne (800) intervenant dans le canal central (540) est adaptée de manière à obturer les quatrième, deuxième et cinquième orifices (482, 502, 522) tandis que le troisième orifice (440) n'est pas obturé par la vanne.

199. Appareil suivant la revendication 198 caractérisé en ce qu il comprend des moyens (464, 466; 504, 506; 484, 486; 524, 526) qui sont associés opérationnellement avec chaque passage convergent (478, 518, 498, 538) pour équilibrer l'écoulement de matière en fusion à travers chacun des passages convergents.

200. Appareil suivant la revendication 187 caractérisé en ce que chaque orifice (462, 482, 502, 522) de chaque buse de la pluralité de buses est fixe et défini par des lèvres antérieure et postérieure (par exemple 461, 523) et chacun d'eux a une ligne centrale (190 à 196) qui est sensiblement perpendiculaire à l'axe du canal central (540), le premier orifice (462) ayant sa ligne centrale située à 350 mils (8,89 millimètres) de l'orifice d'injection (596), le deuxième orifice (502) ayant sa ligne centrale située à 250 mils (6,35 millimètres) de la ligne centrale du premier orifice, et la lèvre antérieure du premier orifice et la lèvre postérieure du deuxième orifice étant espacées d'une distance qui n'est pas supérieure à 300 mils (7,62 millimètres).

201. Appareil suivant la revendication 200 caractérisé en ce qu'il comporte une vanne (800) qui est associée opérationnellement au canal central (540) et qui est adaptée de manière à obturer et à libérer les orifices.

202. Appareil suivant la revendication 200 caractérisé en ce qu'il comporte une vanne (800) qui est associée opérationnellement au canal central (540), cette vanne comportant un manchon allongé (800) ayant une embouchure (812) adaptée de manière à constituer un troisième orifice de courant de polymère communiquant avec la zone du canal central qui est au moins adjacente à la lèvre postérieure du deuxième orifice (500).

203. Appareil suivant la revendication 201 ou la revendication 202 caractérisé en ce que la buse comporte des moyens d'actionnement (860, 856 etc...) pour actionner la vanne (800) et les vannes sont adaptées de manière à pouvoir se déplacer vers une position dans laquelle elles obturent tous les orifices et vers une autre position dans laquelle elles libèrent tous les orifices, et ce dans une période de temps d'environ 75 centièmes de seconde.

204. Appareil suivant la revendication 202 ou la revendication 203 caractérisé en ce que la vanne comporte une tige allongée (834) mobile axialement dans le manchon (800) et adaptée de manière à être ajustée étroitement à glissement sur la plus grande partie de la longueur opérationnelle du manchon, ce qui empêche une accumulation notable de matière de moulage entre le manchon et la tige.

205. Appareil suivant l'une quelconque des revendications 200 à 204 caractérisé en ce que la buse comporte des troisième, quatrième et cinquième passages (440, 480, 520) et des orifices respectifs pour fournir des courants de matières en fusion au canal central, et en ce que la distance axiale entre une lèvre antérieure du quatrième orifice (482) et une lèvre postérieure du cinquième orifice (522) va de 100 à 900 mils (2,54 à 22,9 millimètres), et elle va par exemple de 100 à 300 mils (2,54 à 7,62 millimètres).

206. Appareil suivant la revendication 187 ou la revendication 200 caractérisé en ce que chacune des buses comprend cinq passages de courants de polymères (460, 480, 500, 520, 440), chacun de ces passages ayant un orifice communiquant avec le canal central (540) et étant adapté de manière à faire passer un courant de polymère en fusion à travers l'orifice, vers et dans le canal central, pour former une couche de l'article devant être injecté par la buse, un premier passage (460) a son orifice (462) qui est plus proche de l'orifice d'injection (596) que n'importe quel autre orifice, afin de faire passer un courant de matière structurale (B) en fusion vers et dans le canal central, pour former la couche superficielle externe de l'article, un deuxième passage (500) fait passer un courant de matière en fusion (C) vers et dans le canal central, pour former une couche interne de l'article, un troisième passage (440), ayant son orifice qui est plus éloigné de l'orifice d'injection (596) que les autres orifices, fait passer un courant de matière structurale en fusion (A) vers et dans le canal central, pour former la couche superficielle interne de l'article, un quatrième passage (480), se trouvant entre les premier et deuxième passages (460, 500), fait passer un courant de polymère en fusion (E) vers et dans le canal central, pour former une couche intermédiaire entre la couche superficielle externe et la couche interne de l'article, et un cinquième passage (520), se trouvant entre le deuxième passage (500) et le troisième passage (440), fait passer un courant de matière en fusion (D) vers et dans le canal central, pour former une couche intermédiaire entre la couche interne et la couche superficielle interne de l'article, et en ce que parmi les premier, deuxième, quatrième et cinquième passages de buse au moins les premier et deuxième passages (460, 500) sont convergents en direction de leurs orifices respectifs (462, 502) de telle façon que chaque passage convergent soit plus large en un emplacement éloigné de l'orifice et plus étroit à l'endroit de l'orifice, la buse comportant en outre une vanne (800 etc...) intervenant en étant adjacente au deuxième orifice (502) et au troisième orifice (440) au moins et adaptée de manière à obturer le deuxième orifice et à ne pas obturer, en même temps, le troisième orifice.

207. Appareil suivant la revendication 206 caractérisé en ce que la vanne comporte un manchon allongé (800) ayant une extrémité ouverte (812), une paroi latérale cylindrique avec une lumière (804) ménagée dans cette paroi, et un passage central axial allongé (820) communiquant avec la lumière et avec l'extrémité ouverte, ce manchon étant monté dans le canal central (540) de la buse en étant ajusté étroitement à glissement, suffisamment pour empêcher une accumulation ou un passage notable de polymère entre leurs surfaces en regard, et une tige allongée (834) montée dans le passage central (820) du manchon en étant ajustée étroitement à glissement, suffisamment pour empêcher une accumulation ou un passage notable de matière en fusion entre la surface externe de la paroi latérale de la tige et la paroi du passage central du manchon, ce manchon étant adapté de manière à pouvoir se déplacer alternativement, dans le sens axial, dans le canal central de la buse et intervenant pour obturer et libérer les premier et deuxième orifices de passage (462, 502) et à amener sa lumière (804) à l'alignement avec l'orifice du troisième passage (440) et à l'écart de cet alignement, cette tige étant adaptée de manière à se déplacer alternativement dans le sens axial, à l'intérieur du manchon, de manière à obturer et libérer la lumière lorsque celle-ci se trouve alignée avec le troisième passage.

208. Appareil suivant la revendication 206 caractérisé en ce que la vanne est active vis-à-vis d'au moins trois des cinq orifices et elle est également adaptée de manière à obturer le deuxième orifice de passage (502) tandis qu'elle n'obture pas les premier et troisième orifices de passage (462, 440).

209. Appareil suivant la revendication 206 caractérisé en ce que la vanne est active vis-à-vis de la totalité des cinq orifices et elle est adaptée de manière à obturer les deuxième, quatrième et cinquième orifices (502, 482, 522) tandis qu'elle n'obture pas le troisième orifice (440).

210. Appareil suivant la revendication 209 caractérisé en ce que la vanne est en outre adaptée de manière à obturer le deuxième orifice (502) tandis qu'elle n'obture pas, en même temps, le premier orifice (462), le troisième orifice (440) ou à la fois ces premier et troisième orifices.

211. Appareil suivant la revendication 13 caractérisé en ce qu'il comporte une pluralité de buses de co-injection ayant chacune un canal central à extrémité ouverte, pour la co-injection d'au moins trois courants de matières en fusion, en vue de la production d'un article à plusieurs couches, chaque buse étant un ensemble (296) comprenant au moins deux coquilles (434, 436), emboîtées l'une dans l'autre, et un capuchon de buse (438) enfermant au moins une partie de la coquille (436) située le plus à l'extérieur parmi les deux coquilles emboîtées, l'une des coquilles (par exemple 436) contenant un canal d'alimentation (460) pour l'écoulement d'une matière en fusion à travers ce canal qui conduit à un passage d'écoulement annulaire associé (478) ayant un orifice (462) débouchant dans le canal central (540) de la buse, ce passage d'écoulement annulaire étant délimité, d'un côté, par une partie (589) de la surface externe de la coquille contenant le canal d'alimentation et, de l'autre côté, par une partie (593) de la surface interne d'une coquille adjacente parmi les coquilles emboîtées ou du capuchon de buse, une partie de cette surface externe ayant une forme tronconique symétrique et une partie de cette surface interne ayant une forme tronconique symétrique, les parties de surface externe et interne (589, 593), symétriques et tronconiques, définissant conjointement une partie tronconique, symétrique et convergente du passage d'écoulement annulaire (478).

212. Appareil suivant la revendication 211 caractérisé en ce que chaque coquille (430; 432; 434; 436) contient un canal d'alimentation (440, 450; 520; 500; 480; 460) pour l'écoulement d'une matière en fusion à travers lui, au moins deux de ces canaux d'alimentation (460, 500) aboutissant à un passage d'écoulement annulaire respectif (478, 518) dont chacun a un orifice (462, 502) débouchant dans le canal central et qui est délimité, d'un côté, par une partie (578, 566) de la surface externe d'une coquille (434, 432) et, de l'autre côté, par une partie (593, 603) de la surface interne d'une coquille adjacente (434) parmi les coquilles emboîtées ou du capuchon de buse (438), toutes les parties de surfaces en regard ayant des formes tronconiques symétriques si bien que les paires de surfaces en regard définissent des parties convergentes, symétriques et tronconiques, des passages annulaires (478, 518).

213. Appareil suivant la revendication 211 ou la revendication 212 caractérisé en ce que les passages d'écoulement annulaires ou au moins l'un d'entre eux contiennent des moyens pour diriger l'écoulement d'une matière en fusion à travers le passage.

214. Appareil suivant la revendication 213 caractérisé en ce que les moyens de direction de l'écoulement comprennent un moyen d'étranglement tel que, par exemple, un moyen d'étranglement excentrique (464, 466) ou un moyen d'étranglement concentrique (506).

215. Appareil suivant la revendication 211 ou la revendication 212 caractérisé en ce qu'il comporte un moyen pour établir un écoulement équilibré de matières en fusion autour des passages d'écoulement annulaires ou autour d'au moins l'un d'entre eux.

216. Appareil suivant la revendication 215 caractérisé en ce que le moyen pour établir un écoulement équilibré comprend un moyen d'étranglement tel que, par exemple, un moyen d'étranglement excentrique (464, 466) ou un moyen d'étranglement concentrique (506).

217. Appareil suivant l'une quelconque des revendications 211 à 216 caractérisé en ce que le ou un orifice (par exemple 462) est situé à proximité de l'extrémité ouverte (596) du canal central (540) de la buse.

218. Appareil suivant la revendication 13 caractérisé en ce qu'il comporte une pluralité de buses de co-injection ayant chacune un canal central avec une extrémité ouverte, pour co-injecter au moins trois courants de matières en fusion afin de produire un article à plusieurs couches ayant une couche superficielle externe, une couche superficielle interne et au moins une couche interne entre les couches superficielles interne et externe, cette buse (296) ayant un passage d'écoulement pour chaque courant de matière en fusion, et en ce qu'au moins deux des passages, par exemple ceux prévus pour les courants destinés à former une couche superficielle externe et une couche interne, se terminent à l'endroit d'orifices annulaires (462, 502) communiquant avec le canal central (540) en des emplacements proches de l'extrémité ouverte (596), au moins le passage (500) prévu pour le courant de matière (C) destiné à former la couche interne comprenant, à l'intérieur, un moyen (504, 506) pour établir un écoulement équilibré de matière à travers le passage et autour de celui-ci, ce passage comprenant additionnellement une partie convergente symétrique (518) entre le moyen d'équilibrage de l'écoulement et l'orifice (502) du passage, afin de constituer un bain convergent symétrique de matière en fusion adjacent a l'orifice, en vue d'un écoulement équilibré à travers cet orifice, vers et dans le canal central (540).

219. Appareil suivant la revendication 218 caractérisé en ce que le moyen pour établir un écoulement équilibré comprend un moyen d'étranglement tel que, par exemple, un moyen d'étranglement excentrique (504) ou un moyen d'étranglement concentrique (506).

220. Appareil suivant l'une quelconque des revendications 211 à 219 caractérisé en ce qu'il comprend en outre un moyen (800), dans chacune des buses (296), qui peut être déplacé sélectivement afin d'empêcher ou de permettre l'écoulement, vers et dans le canal central, de la matière en fusion (C), destinée à former la couche interne.

221. Appareil suivant la revendication 13 caractérisé en ce qu'il comporte une pluralité de buses de co-injection dont chacune assure la co-injection d'au moins trois courants de matières en fusion, afin de produire, à partir de ces courants, un article à plusieurs couches, chaque buse de co-injection (296) a un canal central cylindrique (540), s'étendant axialement, un orifice d'injection (596) communiquant avec le canal central et au moins trois passages de courants de polymères ayant chacun un orifice, le premier (462) de ces orifices étant proche de l'orifice d'injection (596), le deuxième (502) de ces orifices étant voisin du premier orifice tandis que le troisième orifice (par exemple 440) est éloigné de l'orifice d'injection, chacun des premier et deuxième orifices (462, 502) étant annulaire et défini par une lèvre antérieure (par exemple 461) et une lèvre postérieure (par exemple 523), le canal central (540) ayant une zone de combinaison qui est une partie cylindrique du canal central s'étendant à partir de la lèvre antérieure du premier orifice (462) jusqu'à la lèvre postérieure de l'orifice annulaire le plus éloigné de l'orifice d'injection (596), zone dans laquelle tous les courants de polymères se combinent en un courant d'écoulement combiné pour l'injection à partir de la buse, cette zone de combinaison ayant une longueur axiale allant de 100 à 900 mils (2,54 à 22,9 millimètres), par exemple de 100 à 300 mils (2,54 à 7,62 millimètres), de préférence le deuxième orifice et, ce qui est encore plus préférable, le premier et le deuxième orifices étant fixes par rapport au canal central.

222. Appareil suivant la revendication 13 caractérisé en ce qu'il comporte une pluralité de buses de co-injection dont chacune assure la co-injection d'au moins trois courants de matières en fusion, afin de produire, à partir de ces courants, un article à plusieurs couches, chaque buse de co-injection (296) a un canal central cylindrique (540), s'étendant axialement, un orifice d'injection (596) communiquant avec le canal central et au moins trois passages de courants de polymères ayant chacun un orifice de préférence fixe par rapport au canal central (540), deux des au moins trois orifices étant proches de l'orifice d'injection, le premier (462) de ces orifices étant proche de l'orifice d'injection (596), le deuxième (502) de ces orifices étant voisin du premier orifice et le troisième orifice (par exemple 440) étant éloigné de l'orifice d'injection, chacun des premier et deuxième orifices (462, 502) étant étroit, annulaire et défini par une lèvre antérieure (par exemple 461) et par une lèvre postérieure (par exemple 523), le canal central (540) ayant une zone de combinaison qui est une partie cylindrique définie, à ses deux extrémités, par la lèvre antérieure du premier orifice (462) et par la lèvre postérieure de l'orifice annulaire le plus éloigné de l'orifice d'injection, zone dans laquelle tous les courants de polymères se combinent en un courant d'écoulement combiné pour l'injection à partir de la buse, et en ce que la zone de combinaison a un volume qui n'est pas supérieur de plus de 5% environ au volume de l'empreinte d'injection (102) dans laquelle le courant d'écoulement de polymère combiné est injecté à partir de la buse (296).

223. Appareil suivant la revendication 221 ou la revendication 222 caractérisé en ce que la buse (296) comporte un moyen (800) mobile axialement vers l'avant, à travers la zone de combinaison, en direction de l'orifice d'injection (596), pour éliminer le courant d'écoulement de polymère combiné à partir de la zone de combinaison, en nettoyant cette zone.

224. Appareil suivant la revendication 223 caractérisé en ce que le moyen de nettoyage comporte une vanne (800, 834) adaptée, à son extrémité antérieure, de manière à constituer une zone pour l'accumulation de polymère, avant d'effectuer son action de nettoyage.

225. Appareil suivant la revendication 221 caractérisé en ce qu'il comprend également une vanne (800, 834) adaptée de manière à être placée dans une position, dans la zone de combinaison, dans laquelle la vanne bloque et empêche l'écoulement de polymère à travers au moins tous les orifices (par exemple 462, 502) communiquant avec la zone de combinaison.

226. Appareil suivant la revendication 221 caractérisé en ce que le passage (460) ayant le premier orifice (462) a une paroi antérieure (OW) qui s'étend en diagonale en direction de l'orifice d'injection et en direction de l'axe du canal central et qui communique avec la lèvre antérieure (461) du premier orifice de telle façon que la partie extrême de la paroi antérieure soit plus proche de l'axe du canal central (540) que la lèvre postérieure de cet orifice, et en ce que la vanne comprend un manchon (800) qui a une embouchure convergente qui définit l'extrémité ouverte du manchon et qui est adaptée de manière à venir buter contre la partie extrême de la paroi antérieure (OW), afin d'empêcher tout mouvement additionnel vers l'avant du manchon dans le canal central, en direction de l'orifice d'injection (596), et d'obturer ainsi le premier orifice (462).

227. Appareil suivant l'une quelconque des revendications 221 à 226 caractérisé en ce que la lèvre antérieure (461) du premier orifice (462) est située à une distance de l'orifice d'injection (596) qui va de 100 à 900 mils (2,54 à 22,9 millimètres) et par exemple de 100 à 300 mils (2,54 à 7,62 millimètres).

228. Appareil suivant la revendication 224 ou n'importe quelle revendication dépendant de la revendication 224 caractérisé en ce qu'il comporte des moyens d'actionnement qui sont associés opérationnellement à la vanne (800, 834) afin d'actionner cette vanne, et en ce que la vanne (800, 834) et les moyens d'actionnement (918, 860, 856; 850, 844, 906) sont adaptés de manière à permettre à la vanne de libérer tous les orifices dans une période de temps allant de 15 à 300 centièmes de seconde et par exemple de 15 à 75 centièmes de seconde.

229. Appareil suivant l'une quelconque des revendications 221 à 228 caractérisé en ce que les lignes centrales (190, 194) de chacun des premier et deuxième orifices (462, 502) s'étendent sensiblement perpendiculairement à l'axe du canal central (540).

230. Appareil suivant l'une quelconque des revendications 221 à 229 caractérisé en ce que chacun des premier et second passages (460, 500) a une partie convergente (478, 518) adjacente de son orifice (462, 502) de telle façon que chaque orifice a une aire de section transversale plus petite qu'une partie amont adjacente de son passage respectif.

231. Appareil suivant l'une quelconque des revendications 221 à 230 caractérisé en ce que les orifices, indépendamment de leur nombre, qui communiquent avec la zone de combinaison, sont fixes par rapport au canal central (540).

232. Appareil suivant la revendication 222 ou n'importe quelle revendication dépendant de la revendication 222 caractérisé en ce que la zone de combinaison du canal central (540) a une aire de section transversale uniforme.

233. Appareil suivant l'une quelconque des revendications 221 à 232 caractérisé en ce qu'il y a au moins trois passages (par exemple 460, 480, 500) avec des orifices annulaires (par exemple 462, 482, 502) dont chacun est de préférence fixe par rapport au canal central (540) et dont de préférence au moins deux (462, 502) débouchent dans la zone de combinaison.

234. Procédé de moulage par injection suivant la revendication 1, dans lequel on commande les débits relatifs de deux courants d'écoulement de polymères en fusion devant être moulés conjointement, caractérisé en ce qu'il comprend les étapes consistant à fournir deux courants d'écoulement de polymères en fusion et à les alimenter vers une pluralité de buses de co-injection (296) dont chacune a un canal central avec une extrémité ouverte, un orifice d'injection (596) à l'endroit de cette extrémité et un passage de courant d'écoulement de polymère pour chaque courant de polymère en fusion, chaque passage (par exemple 462, 502) ayant un orifice débouchant dans le canal central, à canaliser chacun des courants d'écoulement de polymères en fusion en direction de moyens de mise en mouvement communs (232, 234, 260, 262), afin de déplacer chaque courant vers son passage respectif, et à utiliser les moyens de mise en mouvement communs pour déplacer les courants de matières à travers leurs passages tout en interrompant partiellement, d'une manière positive, l'écoulement de l'un des courants d'écoulement, sans interrompre l'écoulement de l'autre courant d'écoulement.

235. Procédé suivant la revendication 234 caractérisé en ce que l'interruption de l'écoulement est réalisée à l'endroit des orifices et il est prévu, tout en obturant partiellement, d'une manière positive, l'un des orifices (par exemple 502), l'étape consistant à retarder l'action des moyens de mise en mouvement afin de réduire l'écoulement de polymère en direction de chacun des orifices.

236. Procédé suivant la revendication 234 ou la revendication 235 caractérisé en ce qu il comprend l'étape consistant à alimenter, dans la buse de co-injection, un courant d'écoulement de matière en fusion additionnel à travers un passage et un orifice disposés entre les deux passages et orifices précités, et à obturer de manière positive l'orifice additionnel tout en bloquant partiellement le premier courant en question parmi les deux courants d'écoulement précités.

237. Procédé suivant la revendication 234 caractérisé en ce qu'il comprend l'étape consistant à prévoir cinq courants d'écoulement de matières en fusion et à les alimenter dans le canal central (540) de chaque buse de la pluralité de buses (296), chacune de ces buses ayant cinq passages de courants d'écoulement de matières en fusion dont chacun a un orifice débouchant dans le canal central, et en ce que :
(i) le premier orifice (462) est situé plus près de l'extrémité ouverte que les autres orifices, afin de diriger la matière vers le canal en vue de constituer une couche superficielle externe (B) de l'article,
(ii) le troisième orifice (440) est plus éloigné de l'extrémité ouverte que les autres orifices, afin de diriger vers le canal la matière destinée à former la couche superficielle interne (A) de l'article,
(iii) le deuxième orifice (502) est situé entre les premier et troisième orifices, afin de diriger vers le canal un polymère destiné à former une couche interne de l'article.
(iv) un quatrième orifice (482) est situé entre les premier et deuxième orifices (462, 502), pour diriger vers le canal un polymère destiné à constituer une couche intermédiaire entre la couche superficielle externe et la couche interne de l'article, et
(v) un cinquième orifice (522) est situé entre les deuxième et troisième orifices (502, 440), pour diriger un polymère vers le canal, afin de former une couche intermédiaire entre la couche interne et la couche superficielle interne de l'article, et en ce qu'il comprend en outre l'étape consistant à actionner la vanne (800, 834) dans chaque canal central (540) de la buse afin de bloquer, de débloquer et de commander l'écoulement et l'absence d'écoulement des matières respectives, à partir de leurs cinq orifices respectifs, vers et dans le canal central, à faire fonctionner un moyen de mise en mouvement commun associé au deux matières des couches superficielles externe et interne, afin de les déplacer vers, dans et à travers leurs passages et orifices respectifs, à faire fonctionner un moyen de mise en mouvement commun associé aux deux matières des couches intermédiaires afin de les déplacer vers, dans et à travers leurs passages et orifices respectifs, à faire se mouvoir les courants d'écoulement de matières en fusion, à travers les premier et troisième passages, avec un premier débit, en utilisant la vanne de manière à ne pas obturer le premier orifice (462) et à obturer partiellement le troisième orifice (440), et/ou à faire se mouvoir le courant d'écoulement de la matière en fusion à travers les quatrième et cinquième passages, à un premier débit, en utilisant la vanne de manière à ne pas obturer le quatrième orifice (482) et à obturer partiellement le cinquième orifice (522).

238. Procédé suivant la revendication 237 caractérisé en ce qu'il comprend, pendant la mise en mouvement des courants d'écoulement de matières en fusion à travers les premier et troisième orifices (462, 440), l'étape consistant à utiliser les moyens de mise en mouvement pour réduire le débit à un niveau inférieur au premier débit.

239. Procédé suivant la revendication 237 ou la revendication 238 caractérisé en ce qu'il comprend l'étape consistant à utiliser la vanne (800, 832), dans la buse de co-injection, pour injecter un courant combiné de matières, afin de produire l'article à cinq couches, et ce :
(i) en empêchant l'écoulement de polymères à travers les quatrième, deuxième et cinquième orifices (482, 502, 522), tout en permettant l'écoulement de polymère à travers le troisième orifice (440),
(ii) en permettant ensuite également l'écoulement de polymère à travers le premier orifice (462) tout en continuant à empêcher l'écoulement à travers les quatrième, deuxième et cinquième orifices (482, 502, 522),
(iii) en permettant l'écoulement de polymères à travers les quatrième, deuxième et cinquième orifices tout en permettant aux polymères de s'écouler à travers les premier et troisième orifices (462, 440),
(iv) en réduisant l'écoulement de polymére à travers le troisième orifice (440), en obturant partiellement ce troisième orifice, tout en utilisant le moyen de mise en mouvement commun associé à cet orifice pour réduire l'écoulement de polymère vers les premier et troisième orifices et en permettant aux polymères de s'écouler à travers les quatrième, deuxième et cinquième orifices,
(v) en réduisant l'écoulement de polymère à travers le cinquième orifice (522), en obturant partiellement le cinquième orifice, et en utilisant le moyen de mise en mouvement commun associé à cet orifice pour réduire l'écoulement de polymères vers les quatrième et cinquième orifices,
(vi) en achevant l'écoulement de polymère à travers le deuxième orifice (502) et ensuite à travers le quatrième orifice (482), et
(vii) en restreignant l'écoulement de polymère à travers le deuxième orifice (502) tout en permettant l'écoulement de polymère à travers le premier ou le troisième orifice ou à la fois à travers les premier et troisième orifices, afin d'accoler la matière de la couche interne à elle-même, par l'intermédiaire de la matière de la couche superficielle interne, et d'encapsuler pratiquement la couche interne dans la matière de la couche superficielle interne et/ou externe.

240. Procédé suivant l'une quelconque des revendication 234 à 239, pour mouler conjointement une pluralité d'articles à partir d'au moins deux courants d'écoulement de matières en fusion, caractérisé en ce qu'il comprend les étapes consistant à effectuer un moulage par injection en utilisant une pluralité de buses de co-injection (296) sensiblement identiques, et à utiliser des moyens de mise en mouvement communs (232, 234, 260, 262) intervenant pour mettre en mouvement au moins deux courants de matières en fusion en direction de chacune des buses, et à bloquer, débloquer ou bloquer partiellement les au moins deux courants de matières en fusion, dans chacune des buses (296), au moyen d'une vanne (800, 832) contenue dans cette buse, ces vannes étant de préférence sensiblement identiques et pouvant fonctionner de préférence sensiblement en même temps.

241. Procédé suivant la revendication 1, pour le moulage par injection d'articles en matière plastique à plusieurs couches, en créant des courants combinés à plusieurs couches, sensiblement concentriques, d'au moins trois polymères et en injectant conjointement les courants combinés dans des empreintes, afin de produire les articles à plusieurs couches, les courants combinés ayant une couche de matière structurale externe pour former la couche superficielle externe de chaque article, un noyau de matière structurale pour former la couche superficielle interne de l'article et une ou plusieurs couches intermédiaires de matière pour former une ou plusieurs couches internes de l'article, caractérisé en ce qu'il comprend les étapes consistant à utiliser une pluralité de buses de co-injection ayant chacune un orifice d'injection (596) à une extrémité, un canal central cylindrique (540) débouchant dans l'orifice d'injection, et une pluralité d'au moins trois passages de polymères communiquant avec le canal central, au moins le premier et le deuxième de ces passages étant annulaires et ayant des orifices annulaires (462, 502) débouchant dans le canal central, le premier orifice (462) étant situé plus près de l'orifice d'injection que les autres orifices, afin de canaliser, vers et dans le canal central, la matière structurale pour la couche superficielle externe, le troisième orifice (440) étant plus éloigné de l'orifice d'injection (596) que le premier ou deuxième orifice afin de canaliser la matière du noyau vers et dans le canal central, le deuxième orifice (462) étant situé au voisinage du premier orifice afin de canaliser la matière de la couche intermédiaire vers et dans le canal central, et à commander l'épaisseur, l'uniformité et la position radiale de la couche interne, dans le courant combiné, en prévoyant et en utilisant des moyens soit dans la totalité des passages des courants d'écoulement annulaires de polymères soit dans au moins les premier et deuxième passages, pour équilibrer l'écoulement des courants d'écoulement de polymères respectifs passant à travers ces passages de telle façon que, lorsque les courants respectifs pénètrent dans le canal central (540), chacun d'eux est sensiblement uniforme en ce qui concerne la pression et la température, autour de sa circonférence et dans la zone de combinaison de la buse (296) les couches respectives qui forment le courant combiné, sont sensiblement concentriques les unes par rapport aux autres, les courants de polymères respectifs étant de préférence des polymères en phase condensée.

242. Procédé suivant la revendication 241 caractérisé en ce que la matière structurale du noyau destiné à former la couche superficielle interne de l'article est disposée concentriquement par rapport à l'axe du canal central (540) lorsque la matière destinée à former la couche superficielle externe de l'article est introduite dans le canal central, et de préférence les couches superficielles interne et externe sont disposées en étant sensiblement centrées sur l'axe du canal central lorsque la matière de la couche interne est introduite entre elles, dans la zone de combinaison du canal central.

243. Procédé suivant la revendication 1, pour le moulage par injection d'articles, tels qu'une paraison, formés d'une pluralité de couches de matières plastiques et comportant au moins une couche structurale interne, une couche intermédiaire et une couche structurale externe, caractérisé en ce qu'il comprend les étapes consistant a déplacer chaque polymère, destiné à former une couche de l'article, à partir d'une source respective de ce polymère, en direction d'une pluralité de buses de co-injection (296) dont chacune comporte un canal central (540) avec une zone de combinaison de courants de polymères, et un passage et un orifice associé pour chaque couche devant être formée, les orifices (par exemple 462, 502, 440) des passages débouchant dans le canal central (540), et, pour commander l'emplacement latéral final d'une couche interne dans un article, au cours de son injection, à canaliser séparément chacun des courants de polymères mis en mouvement en direction d'un passage dans chaque buse, à commander continuellement le déplacement de chaque polymère, et à commander l'emplacement radial de la couche interne, dans la zone de combinaison du canal central, en commandant positivement l'écoulement et l'absence d'écoulement des courants, afin de former la couche interne et la couche structurale externe à travers leurs orifices respectifs, en faisant passer les courants le long de moyens d'équilibrage de l'écoulement (par exemple 464, 466, 506) intervenant, dans leurs passages respectifs, pour fournir sélectivement des écoulements d'un type désiré pour chacun des courants, et à déplacer les matières de la couche interne, de la couche structurale externe et la ou les matières de la couche structurale interne à travers leurs passages respectifs, afin d'obtenir les écoulements ayant les types désirés respectifs, afin de former des courants annulaires des matières respectives d'une manière uniforme, dans le sens radial, dans la zone de combinaison, et de commander l'emplacement radial de la matière de la couche interne dans le courant d'écoulement combiné, dans la zone de combinaison de la buse (296).

244. Procédé suivant la revendication 243 caractérisé en ce qu'il comprend les étapes consistant à introduire la matière structurale externe, dans chaque canal central (540), suivant un angle par rapport à la zone de combinaison du canal central, et à introduire axialement la matière structurale située le plus à l'intérieur, sous la forme d'un courant solide, vers et dans la zone de combinaison, et également les étapes consistant à obturer physiquement les orifices des matières constituant la couche structurale externe et la couche interne et à mettre en pression préalablement ces couches, dans leurs passages, tandis que leurs orifices sont obturés, afin de réduire ainsi au minimum les temps transitoires exigés pour atteindre les écoulements du type désiré et pour commander les débits volumétriques des matières structurales externe et interne, vers et dans la zone de combinaison.

245. Procédé suivant la revendication 243 caractérisé en ce qu'il comprend les étapes consistant à introduire la matière structurale externe, dans chaque canal central (540), suivant un angle par rapport à la zone de combinaison des matières du canal central, et à introduire axialement la matière structurale interne, sous la forme d'un courant solide, vers et dans la zone de combinaison, et également les étapes consistant à mettre en pression le polymère fondu destiné à constituer la couche structurale externe, dans son passage, tout en obturant son orifice (462), puis en libérant cet orifice et en réalisant ensuite, en tant que partie de l'étape de mise en mouvement, un départ uniforme de l'écoulement de la matière structurale externe à partir de tous les points de son orifice de passage (462), vers et dans le canal central (540) de la buse.

246. Procédé suivant l'une quelconque des revendications 243 à 245 caractérisé en ce que l'étape de mise en mouvement comprend l'étape consistant à laisser les orifices (462), prévus pour la matière structurale externe, libérés pendant une période de temps suffisante pour permettre d'obtenir un débit et un volume d'écoulement uniformes et continus de la matière structurale externe pendant 90% du cycle d'injection.

247. Procédé suivant l'une quelconque des revendications 243 à 246 caractérisé en ce qu'il comporte en outre les étapes consistant à mettre sous pression la matière de la couche interne ou bien cette matière et la matière de la couche structurale interne, tout en obturant leur orifice (440), puis à libérer l'orifice et à produire un débit initial uniforme de la ou de chaque matière à travers son orifice de passage, au départ du cycle d'injection, et à maintenir un écoulement continu, en termes de vitesse et de débit volumétrique, de toutes les matières, pendant la plus grande partie du cycle d'injection.

248. Procédé suivant la revendication 244 caractérisé en ce que l'étape de mise en pression est effectuée pendant l'étape de mise en mouvement afin de soumettre le polymère fondu pour la couche structurale externe, tandis qu'il se trouve dans son passage et que son orifice (par exemple 462) est obturé, à une première pression qui serait suffisante pour amener la matière a s'écouler vers et dans le canal central (540) si son orifice (462) était libéré, et, avant de permettre l'écoulement de la matière de la couche structurale externe à travers son orifice, à actionner un moyen (232) pour mettre en mouvement la matière de la couche structurale externe dans son passage et pour la porter ainsi à une seconde pression supérieure à la première pression et suffisante pour créer, lorsque son orifice (462) est libéré, un jaillissement de ladite matière, en tant qu'écoulement annulaire de départ, à partir de tous les points de son orifice, vers et dans le canal central (540), le courant d'écoulement résultant étant uniforme si on le considère par rapport à un plan perpendiculaire à l'axe du canal central, cette seconde pression étant inférieure à celle qui provoquerait une fuite de la matière de la couche structurale externe à travers le moyen d'interruption de l'écoulement (800, 832) vers et dans le canal, et à augmenter, pendant et après la libération de l'orifice (462) de la couche structurale externe, la vitesse du mouvement du polymère afin d'approcher et de maintenir un débit désiré sensiblement permanent, de la matière à travers son orifice (462), vers et dans le canal central (540).

249. Procédé suivant la revendication 1 caractérisé en ce qu'il met en oeuvre l'utilisation d'une pluralité de buses (296) dont chacune a une extrémité ouverte avec un orifice d'injection (596) à l'endroit de cette extrémité, un canal central cylindrique (540), s'étendant axialement, communiquant avec l'orifice d'injection, et un passage avec un orifice annulaire (par exemple 502), communiquant avec le canal central de la buse, et on alimente au moins des premier et deuxième polymères en direction de chaque buse, pour réaliser une co-injection à partir de cette buse, et en ce qu'il comprend en outre les étapes consistant :
(a) à fournir le deuxième polymère en fusion dans le passage et à empêcher que cette matière ne s'écoule à travers l'orifice (502), vers et dans le canal central (540),
(b) à faire s'écouler un courant en fusion du premier polymère à travers le canal central (540), en regard de l'orifice (502),
(c) tandis que le premier polymère se trouve s'écouler à travers le canal central et que l'on continue à empêcher le deuxième polymère de s'écouler à travers l'orifice (502), à soumettre la deuxième matière, dans son passage, à une pression qui, en tous les points autour de l'orifice, est supérieure à la pression ambiante du courant de la première matière, en des positions circonférentielles qui correspondent à ces points, la pression appliquée étant, par exemple, uniforme en tous les points autour de l'orifice annulaire, et
(d), après la mise en pression de la deuxième matière, à permettre son écoulement vers et dans le canal (540) à travers l'orifice (502), la pression appliquée à la deuxième matière étant suffisante pour établir le départ de l'écoulement de la deuxième matière pratiquement en même temps a partir de tous les points autour de l'orifice.

250. Procédé suivant la revendication 249 caractérisé en ce que pendant l'étape (d) la pression est maintenue, sur la deuxième matière se trouvant dans son passage, a une valeur suffisante pour établir et maintenir un débit sensiblement uniforme et permanent en même temps à partir de tous les points autour de l'orifice (502), vers et dans le canal central (540).

251. Procédé suivant la revendication 249 ou la revendication 250 caractérisé en ce que le blocage et l'autorisation de l'écoulement de la deuxième matière sont réalisés en utilisant une vanne (800, 834) intervenant dans le canal central (540) de la buse (296).

252. Procédé suivant la revendication 249,250 ou 251 caractérisé en ce que l'orifice annulaire (502) a une ligne centrale sensiblement perpendiculaire à l'axe du canal central.

253. Procédé suivant l'une quelconque des revendication 249 à 252, pour la production d'articles injectés à plusieurs couches comportant des couches internes, caractérisé en ce qu'une ou plusieurs matières en fusion sont amenées à s'écouler le long du canal central (540) de chaque buse (296) et la deuxième matière, destinée à former la couche interne de l'article, est portée à une pression supérieure à la pression ambiante de la ou des matières s'écoulant déjà et est ensuite amenée à s'écouler pratiquement en même temps à partir de tous les points autour de l'orifice (502), de manière à former une couche entourant le polymère en fusion qui se trouve déjà en train de s'écouler dans le canal central.

254. Procédé suivant la revendication 253 caractérisé en ce que la pression appliquée est suffisante pour provoquer le départ de l'écoulement de la matière de la couche interne et pour établir cette couche avec un bord antérieur annulaire suffisamment épais, en chaque point tout autour de cette couche, pour que la couche interne représente à l'endroit d'une partie extrême marginale de l'article injecté, au moins 1% de l'épaisseur totale de l'article à l'endroit de cette partie extrême marginale.

255. Procédé suivant la revendication 254 caractérisé en ce que l'étape d'autorisation de l'écoulement comporte l'étape consistant à continuer de soumettre la matière à une pression suffisante pour maintenir un débit de la matière de la couche interne qui soit d'une épaisseur sensiblement uniforme et permanent, et ce en même temps sur tous les points de l'orifice, vers et dans le canal central (540).

256. Procédé suivant la revendication 253,254 ou 255 caractérisé en ce que chaque buse de co-injection est une partie d'une machine de moulage par injection de plusieurs polymères, comportant un système de canal principal pour transporter des polymères en fusion, à partir de sources de ces polymères, par l'intermédiaire de moyens de mise en mouvement (232, 234, 252) des matières en fusion, en direction des buses, et en ce qu'il comprend les étapes consistant à obturer physiquement l'orifice annulaire (502) de chaque buse et, tandis que cet orifice est obturé, à mettre en mouvement le polymère en fusion pour une ou plusieurs couches, dans le système de canal principal, et, tandis que le polymère en fusion pour une ou plusieurs couches autres que la couche interne s'écoule à travers le canal central (540) en regard de l'orifice obturé (502), à soumettre le polymère en fusion, destiné à former la couche interne, dans le système de canal principal, à une pression qui, en tous les points autour de l'orifice obturé, est supérieure à la pression ambiante de la matière en fusion s'écoulant dans le canal central (540), en des points de la circonférence qui correspondent aux points précités autour de l'orifice, et à libérer cet orifice de manière à provoquer le départ de l'écoulement, vers et dans le canal central, de la matière de la couche interne, en même temps à partir de tous les points autour de l'orifice.

257. Procédé suivant la revendication 256 caractérisé en ce que l'orifice obturé (502) est sensiblement perpendiculaire à l'axe du canal central (540) et l'opération de blocage et de déblocage, physiquement, de l'écoulement à travers l'orifice est réalisée en actionnant une vanne (800, 832) logée dans le canal central (540) de la buse (296).

258. Procédé suivant la revendication 256 ou la revendication 257 caractérisé en ce que l'étape d'application de la pression est réalisée par l'intervention d'un moyen d'alimentation en polymère (252), extérieur au système de canal principal, pour la matière de la couche interne.

259. Procédé suivant l'une quelconque des revendication 256 à 258 caractérisé en ce que l'étape d'application de la pression est effectuée en deux temps, à savoir en premier lieu en appliquant, à la matière de la couche interne, une pression résiduelle inférieure à la pression désirée à laquelle elle doit s'écouler à travers l'orifice obturé (502), et ensuite en second lieu, avant la réalisation de l'étape d'autorisation ou de déblocage ou lors de cette étape, en augmentant la pression pour la porter à la pression désirée à laquelle la matière de la couche interne doit s'écouler à travers l'orifice.

260. Procédé suivant la revendication 259 caractérisé en ce que l'étape d'élévation de la pression est effectuée rapidement, à une vitesse allant de 500 à 1000 et par exemple de 700 psi par centième de seconde (34,5 à 68,9 et par exemple de 48,2 bars par centième de seconde).

261. Procédé suivant la revendication 259 caractérisé en ce que la pression résiduelle est établie en déplaçant alternativement le moyen (252) de mise en mouvement de la matière fondue prévue pour la matière de la couche interne.

262. Procédé suivant la revendication 1 caractérisé en ce qu'il met en oeuvre l'utilisation d'une machine de moulage par injection de plusieurs polymères comportant des moyens (par exemple 232, 234, 252) pour déplacer des polymères en fusion à partir de sources de ces polymères, le long de canaux principaux (par exemple dans 288), en direction de passages et d'orifices associés d'une pluralité de buses de co-injection (296), en vue de leur alimentation vers un canal central (540) dans chaque buse, et en ce qu'il comporte en outre les étapes consistant à obturer physiquement un orifice (502) d'une buse afin d'empêcher que le polymère en fusion, se trouvant dans le passage aboutissant à cet orifice, ne s'écoule vers et dans le canal central (540) et, tout en obturant ainsi l'orifice, à rétracter le moyen de mise en mouvement (par exemple 252), prévu pour le polymère en fusion considéré, afin de permettre de recevoir, en amont du moyen de mise en mouvement et extérieurement au système de canal principal, du polymère en fusion frais provenant de sa source, la pression du polymère en fusion frais produisant, dans le canal principal pour ce polymère, une pression résiduelle suffisante pour augmenter la vitesse de réponse dans le temps du polymère en fusion dans le canal principal (dans 288), à l'égard de mouvements subséquents du moyen de mise en mouvement (252), la grandeur du retrait et celle de la pression assurant en coopération une quantité suffisante de matière en fusion fraîche, pour la couche correspondante de l'article devant être moulé par injection, et ensuite, avant la libération de l'orifice (502), à actionner le moyen de mise en mouvement (252) en direction de l'orifice, afin de comprimer davantage la matière en fusion et d'élever la pression, dans le canal principal, à un niveau supérieur à la pression résiduelle et suffisamment élevé pour que, lorsque l'orifice (502) est libéré, l'écoulement du polymère en fusion, préalablement mis en pression, commence pratiquement en même temps à partir de tous les points de l'orifice, vers et dans le canal central (540).

263. Procédé suivant la revendication 262 caractérisé en ce que la pression élevée est suffisante pour établir un départ de l'écoulement tel que la matière en fusion ait une épaisseur de bord antérieur de valeur telle, en chaque point autour de sa périphérie, que dans une partie extrême marginale de l'article ladite couche ait une épaisseur d'au moins 1% de l'épaisseur totale de la partie extrême marginale.

264. Procédé suivant la revendication 262 ou la revendication 263 caractérisé en ce qu'il comprend l'étape, après la libération de l'orifice (502), consistant à continuer à soumettre la matière à une pression suffisante pour maintenir un écoulement épais et sensiblement uniforme de cette matière, avec un débit permanent, à partir de tous les points autour de l'orifice, vers et dans le canal central (540).

265. Procédé suivant la revendication 1 caractérisé en ce qu'il comprend l'utilisation d'une machine de moulage par injection de plusieurs polymères, laquelle comporte un système de canal principal (par exemple 288) s'étendant à partir d'un moyen de mise en mouvement (par exemple 252) pour au moins un polymère en fusion, en direction d'une pluralité de buses de co-injection (296) dont chacune comporte un passage correspondant pour le polymère en fusion et un orifice (502) qui fait communiquer à son tour le passage avec un canal central (540) dans la buse, et en ce qu'il comprend en outre les étapes consistant, pour le ou les polymères, à obturer physiquement l'orifice (502) d'une buse (596), afin d'empêcher que le polymère en fusion se trouvant dans le passage ne s'écoule vers et dans le canal central (540), et, tout en maintenant ainsi l'obturation de l'orifice, à mettre en mouvement le polymère en fusion se trouvant dans la partie du système du canal principal s'étendant jusqu'à l'orifice obturé (502), à déterminer le niveau de pression résiduelle du polymère en fusion mis en mouvement dans ladite partie du système de canal principal, et à déplacer le polymère en fusion se trouvant dans le système de canal principal, en direction de l'orifice (502), afin de comprimer la matière et d'élever la pression dans le système de canal principal à un niveau supérieur à la première pression précitée et qui est suffisamment élevé pour que, lors de la libération de l'orifice (502), le départ de l'écoulement du polymère en fusion, préalablement mis sous pression, se produise pratiquement simultanément et uniformément à partir de tous les points de l'orifice, vers et dans le canal central (540).

266. Procédé suivant la revendication 265 caractérisé en ce qu'il consiste à établir un début d'écoulement qui est uniformément épais.

267. Procédé suivant la revendication 1, pour la production d'articles en matière plastique à plusieurs couches ayant chacun une partie marginale extrême, des première et deuxième couches superficielles (B, A) et au moins une couche interne (C) entre elles, caractérisé en ce qu'il comprend l'utilisation d'une machine de moulage par injection comportant un système de canal principal (par exemple dans 288), pour transporter des polymères en fusion vers une pluralité de buses de co-injection (296) ayant chacune un passage d'écoulement pour chaque matière en fusion, afin de former une couche de l'article, un canal central (540) et un orifice pour chaque passage lequel communique avec le canal central, un moyen (par exemple 232, 234, 252) pour mettre en mouvement chacune des matières en fusion, en direction des orifices (par exemple 464, 502, 440) et vers et dans le canal central de la buse, des moyens pour alimenter les matières en fusion vers et dans le système de canal central, et des moyens (800, 832) pour obturer et libérer physiquement les orifices, le procédé comportant en outre les étapes consistant à obturer au moins l'orifice (502) pour la matière destinée à former la couche interne, afin d'empêcher l'écoulement de cette matière vers et dans le canal central (540), à mettre en mouvement des polymères en fusion vers et dans le système de canal principal, à déterminer le niveau de la pression résiduelle des polymères en fusion qui ont été mis en mouvement vers et dans le système de canal principal, à déplacer, dans son passage, la matière en fusion (C) destinée à constituer la couche interne, en direction de son orifice (502), afin de comprimer cette matière et d'élever la pression de cette matière à un niveau supérieur à la première pression déterminée, à faire s'écouler la matière (A) pour la première couche superficielle vers et dans le canal central (540) et le long de celui-ci, tout en empêchant l'écoulement de la matière (C) de la couche interne vers et dans le canal central, à faire s'écouler la matière (B) pour la seconde couche superficielle vers et dans le canal central et le long de celui-ci, sous la forme d'un courant annulaire entourant la matière (A) de la première couche superficielle en train de s'écouler , à libérer l'orifice (502) de la matière (C) de la couche interne mise en pression préalablement, afin de l'admettre dans le canal central et dans l'interface entre les matières (A, B) des couches superficielles interne et externe en train de s'écouler , le niveau de pression de la matière (C) de la couche interne, lors de la libération de son orifice (502), étant tel que le début de son écoulement se produit rapidement et sensiblement en même temps et uniformément, c'est-à-dire avec une épaisseur uniforme, à partir de tous les points de son orifice, vers et dans le canal central (540), afin de former une couche annulaire entre les matières des première et deuxième couches superficielles en train de s'écouler, et tel que le bord antérieur de la matière (C) de la couche interne en train de s'écouler se trouve dans un plan sensiblement perpendiculaire à l'axe du canal central si bien que l'injection du courant d'écoulement combiné, vers et dans l'empreinte d'injection (102) associée à la buse (296), se traduit par le fait que la matière de la couche interne s'étend d'une manière sensiblement uniforme vers, dans et autour de la partie extrême marginale de l'article.

268. Procédé suivant la revendication 267, pour la production d'un article en matière plastique à cinq couches, à extrémité ouverte, comportant, entre les couches superficielles, une couche interne (C) et deux couches intermédiaires (D, E) situées respectivement entre la couche interne et chaque couche superficielle (A, B), caractérisé en ce que la machine de moulage par injection comporte une pluralité de buses de co-injection (296) ayant chacune un passage d'écoulement de polymère en fusion pour chacune des matières, et des orifices associés (462, 482, 502, 522, 440) débouchant dans le canal central (540), un moyen (232, 234, 252, 260, 262) pour mettre en mouvement chacun des polymères en fusion alimenté vers et dans le système de canal principal, en direction des orifices et vers et dans le canal central de chaque buse de co-injection, et des moyens (800, 834) pour obturer et libérer physiquement au moins les orifices pour les matières destinées à former la couche interne et les couches intermédiaires (C, D, E), et en ce que le procédé comprend les étapes consistant à obturer ces orifices, afin d'empêcher que la matière de la couche interne (C) et les matières des couches intermédiaires (D, E) ne s'écoulent vers et dans le canal central (540) de chaque buse, à mettre en mouvement les polymères en fusion vers et dans le système de canal principal et à déterminer le niveau de la pression résiduelle des polymères en fusion qui ont été mis en mouvement vers et dans le système de canal principal, à déplacer ensuite les polymères en fusion pour la couche interne (C) et les couches intermédiaires (D, E) en direction de leurs orifices obturés (502, 522, 482), afin de comprimer les matières et d'élever la pression dans le système, pour ces matières, à un niveau supérieur au premier niveau déterminé, de telle façon que, lors de la libération des orifices (502, 522, 482) des matières, préalablement mise sous pression, de la couche interne et des couches intermédiaires, le début de l'écoulement de chacune des matières de la couche interne (C) et des couches intermédiaires (D, E) se produise, de préférence sous forme annulaire, pratiquement simultanément et uniformément, à partir de leurs orifices respectifs et vers et dans le canal central (540) de chaque buse, et que, lors de l'injection, la matière de la couche interne (C) et les matières des couches intermédiaires (D, E) se terminent d'une manière sensiblement uniforme dans et autour de la partie terminale de chaque article et que chacune de ces matières se termine dans un plan pratiquement perpendiculaire à un axe central de l'article.

269. Procédé suivant la revendication 267 ou la revendication 268 caractérisé en ce qu'il comporte en outre l'étape consistant à augmenter la vitesse de déplacement de la matière en fusion ou d'un nombre sélectionné quelconque de matières en fusion, destinées à former une ou plusieurs couches superficielles (A, B), lorsque l'orifice prévu pour ces matières est libéré, afin d'approcher et de maintenir un débit sensiblement permanent de cette matière ou de ces matières vers et dans le canal (540).

270. Procédé suivant la revendication 1, pour le moulage par injection d'articles en matière plastique à plusieurs couches dont chacun comporte une couche superficielle externe (B), une couche superficielle interne (A) et une ou plusieurs couches internes (C, D, E) entre les couches superficielles, caractérisé en ce qu'il met en oeuvre l'utilisation d'une machine de moulage équipée d'une pluralité de buses de co-injection (296) ayant chacune une extrémité ouverte avec un orifice d'injection (596), un passage central cylindrique (540), s'étendant axialement, en communication avec l'orifice d'injection, un passage pour chaque courant de polymère destiné à former une couche de l'article, le passage pour le ou un courant de couche interne (C, D, E) communiquant, par l'intermédiaire d'un orifice annulaire (502, 522, 482), avec le canal central, cet orifice annulaire ayant une ligne centrale sensiblement perpendiculaire à l'axe du canal central, et le passage pour le courant de la couche superficielle externe (B) ayant également un orifice annulaire (464) communiquant avec le canal central, en un emplacement se trouvant entre l'orifice d'injection (596) et le ou les orifices (502, 522, 482) pour le ou les courants de la ou des couches internes, l'orifice (464) pour la matière de la couche superficielle externe ayant sa ligne centrale sensiblement perpendiculaire à l'axe du canal central, la machine comportant un moyen (234) pour établir un écoulement de la matière destinée à former la couche superficielle interne (A), dans le canal central (540), à partir d'un emplacement plus éloigné de l'orifice d'injection (596) que l'un quelconque des orifices précités, et en ce qu'il comporte en outre les étapes consistant à utiliser un ou plusieurs polymères en phase condensée pour constituer le ou un courant en fusion de la couche interne, à faire s'écouler le courant en fusion de la couche superficielle interne (A), vers et dans le canal central (540), en tant que courant de noyau, en regard de l'orifice (502, 522, 482) pour le courant en fusion de la couche interne ou de chacun de ces orifices, à faire s'écouler le courant en fusion de la couche superficielle externe (B) vers et dans le canal central, de manière à entourer le courant de noyau s'écoulant dans ce canal, à établir une pression ambiante sélectionnée, dans le canal central, pour les courants combinés en train de s'écouler pour les couches superficielles externe et interne (B, A), à alimenter le ou un courant en fusion de la couche interne (C, D, ou E) vers et dans le passage prévu pour ce courant, à appliquer une première pression sélectionnée au ou à un courant en fusion de la couche interne (C, D ou E), à l'endroit de l'orifice pour ce courant, cette première pression étant inférieure à la pression qui, par rapport à la pression ambiante, amènerait la matière de la couche interne à s'écouler vers et dans le canal central (540), à ajuster la première pression à un niveau égal ou juste inférieur à la pression ambiante, afin de comprimer le courant en fusion de la couche interne et de donner à ce courant une réponse d'écoulement augmentée lors du début de son écoulement vers et dans le canal central (540) et d'empêcher un écoulement inverse des matières (B, A), déjà en train de s'écouler, vers et dans l'orifice de la couche interne, et à provoquer un début rapide de l'écoulement du courant en fusion de la couche interne (C, D ou E) à travers l'orifice correspondant, vers et dans le canal central, en créant une variation brutale des pressions relatives entre la matière de la couche interne (C, D ou E), à l'endroit de l'orifice précité, et la pression ambiante dans le canal central, si bien que la pression de la matière de la couche interne est modifiée rapidement pour être portée à un niveau suffisamment élevé, par rapport à la pression ambiante, pour que se produise le début de son écoulement, sous la forme d'un courant annulaire, vers et dans le canal central, et ce pratiquement en même temps à partir de tous les points autour de l'orifice (502, 522, 482).

271. Procédé suivant la revendication 270 caractérisé en ce que la variation de pression relative est réalisée soit en augmentant rapidement la pression de la matière de la couche interne, soit en diminuant la pression ambiante des courants (B, A) s'écoulant déjà dans le canal central (540), soit par une combinaison d'une augmentation de la première pression et d'une diminution de la seconde pression.

272. Procédé suivant la revendication 270 ou la revendication 271 caractérisé en ce qu'on injecte trois matières de couches internes (C, D et E) pour chacune desquelles il est prévu, dans chaque buse (296), un passage avec son propre orifice annulaire (502, 522, 482) communiquant avec le canal central (540), ces orifices étant disposés à proximité les uns des autres dans le sens axial, et le procédé comprend l'étape consistant à faire s'écouler chaque matière d'une couche interne en tant que courant indépendant vers et dans le canal central de la buse.

273. Procédé suivant la revendication 270 ou la revendication 271 caractérisé en ce qu'on injecte trois matières de couches internes (C, D et E) pour chacune desquelles il est prévu un passage, et ces passages communiquent avec au moins un orifice annulaire, et en ce qu'il comprend l'étape consistant à mettre en pression chacune des matières des couches internes et à les faire s'écouler simultanément à travers l'orifice, vers et dans le canal central (540), sous la forme d'un courant combiné de couches internes.

274. Procédé suivant la revendication 1 caractérisé en ce qu'un courant de polymère en fusion est admis, à travers des orifices annulaires, vers et dans les canaux centraux (540) d'une pluralité de buses de co-injection, chaque buse (296) ayant une extrémité ouverte avec un orifice d'injection (596) à cet endroit, un canal central (540), par exemple cylindrique, s'étendant axialement, communiquant avec l'orifice d'injection, et un passage (500) débouchant, par l'intermédiaire d'un orifice annulaire (par exemple 502), dans le canal central de la buse, l'orifice (502) ayant une ligne centrale sensiblement perpendiculaire à l'axe du canal central, et en ce qu'il comprend en outre les étapes consistant :
(a) à fournir un courant d'un polymère en fusion, de préférence en phase condensée, dans le passage, tout en l'empêchant de s'écouler à travers l'orifice (502),
(b) tout en continuant à empêcher que le polymère ne s'écoule à travers l'orifice (502), à soumettre ce polymère en fusion, dans le passage, à une pression initiale qui est au moins suffisante pour amener la matière à s'écouler vers et dans le canal central (540), et
(c) à permettre à la matière sous pression de s'écouler à travers l'orifice si bien que son écoulement initial se produit d'une manière sensiblement uniforme et simultanée à partir de toutes les parties du passage annulaire (500), vers et dans le canal central (540).

275. Procédé suivant la revendication 274 caractérisé en ce que le polymère est soumis à la pression initiale qui est supérieure d'au moins 20% au minimum nécessaire pour que la matière puisse s'écouler vers et dans le canal central (540).

276. Procédé suivant la revendication 274 ou la revendication 275 caractérisé en ce que la pression initiale est suffisante pour densifier la matière dans le passage, à proximité de l'orifice (502), de manière que sa masse volumique soit de 2 à 5% ou davantage supérieure à sa masse volumique à la pression atmosphérique.

277. Procédé suivant l'une quelconque des revendication 274 à 276 caractérisé en ce que l'étape (c) comprend le maintien d'une pression, exercée sur la matière, suffisante pour établir et maintenir un débit initial et permanent, sensiblement uniforme, en même temps à partir de tous les points de l'orifice (502), vers et dans le canal central (540).

278. Procédé suivant l'une quelconque des revendication 269 à 277 caractérisé en ce que, pour introduire la matière (par exemple C) à partir de l'orifice (502) du passage annulaire pour la matière interne, vers et dans le canal central (540) de chaque buse (296), de manière à entourer un courant d'une autre matière en fusion (par exemple A) s'écoulant déjà dans le canal central, il comprend les étapes consistant à faire s'écouler l'autre matière en fusion (A) à travers le canal central (540) de la buse, à partir d'un emplacement situé en amont de l'orifice annulaire (502), tout en empêchant l'écoulement de la première matière (C) vers et dans le canal central, à partir de l'orifice (502), et à mettre en pression la première matière (C) dans le passage (500), tout en continuant à empêcher son écoulement, afin de porter la première matière à une pression suffisamment supérieure à la pression ambiante dans le canal central (540) de la buse et suffisamment supérieure à la pression appliquée à l'autre matière (A) en train de s'écouler pour pouvoir densifier la première matière (C) dans le passage adjacent à l'orifice (502) et pour assurer que l'écoulement initial de la première matière se produit simultanément et uniformément à partir de tous les points autour de l'orifice du passage, lorsque la matière est autorisée à s'écouler à travers cet orifice.

279. Procédé suivant la revendication 278 caractérisé en ce que la première matière (C) est fournie, vers et dans la buse (296), à partir d'un premier passage (500) et de son orifice annulaire associé (502), l'autre matière (A) est fournie, vers et dans la buse, à travers un orifice (440) plus éloigné de l'orifice d'injection que le premier orifice (502), et une matière en fusion additionnelle (B) est fournie vers et dans la buse, à travers un passage additionnel (460) et son orifice annulaire associé (462) qui est situé entre le premier orifice (502) et l'orifice d'injection, et, avant de permettre l'écoulement de la première matière à travers le premier orifice (502), la matière en fusion additionnelle est amenée à s'écouler à travers le passage additionnel (460) et son orifice (462) de manière à entourer le courant de l'autre matière, s'écoulant déjà, lequel a passé à travers l'orifice (440), et la première matière (C) mise sous pression, provenant du premier orifice (502), est admise dans la buse (296) à une pression suffisante pour amener cette première matière à s'écouler et à se répartir d'elle-même sous forme annulaire autour de l'autre matière (A) s'écoulant déjà, de manière à donner un courant combiné sensiblement concentrique comprenant un noyau, uniforme dans le sens radial, constitué par l'autre matière, s'écoulant déjà, en provenance de l'orifice (440), une couche uniforme intermédiaire (C), entourant le noyau, en provenance du premier orifice (502), et une couche uniforme enveloppante (B) constituée par la matière provenant de l'orifice additionnel (462).

280. Procédé suivant la revendication 279 caractérisé en ce que la pression appliquée à la première matière est supérieure d'au moins 20% à la pression de l'autre matière et de la matière additionnelle s'écoulant déjà.

281. Procédé suivant l'une quelconque des revendication 274 à 280 caractérisé en ce qu'on applique une pression additionnelle à la matière de la couche interne (C), une fois que celle-ci a été autorisée à s'écouler, afin de maintenir une pression totale effective suffisante pour approcher et maintenir un débit sensiblement permanent de matière à travers le second orifice, vers et dans le canal (540).

282. Procédé suivant la revendication 274 ou la revendication 279 caractérisé en ce que la buse (296) comporte des passages (par exemple 460, 480, 500, 520) et des orifices (462, 482, 502, 522) pour canaliser une pluralité de matières en fusion (par exemple B, E, C, D), vers et dans le passage central (540) de la buse, et en ce qu'il comporte en outre les étapes consistant à alimenter un courant de polymère en fusion, de préférence d'un polymère en phase condensée, en direction de chaque passage tandis que les matières sont empêchées de s'écouler à travers les orifices (482, 502, 522), et, tout en continuant à empêcher que les matières ne s écoulent à travers les orifices, à soumettre les matières, dans leurs passages, à des premières pressions qui sont insuffisantes pour provoquer une fuite des matières à travers leurs orifices, vers et dans le canal central, ou bien à partir d'un orifice vers et dans un autre orifice, mais qui seraient toutefois suffisantes pour amener les matières à s'écouler vers et dans le canal central si leurs écoulements n'étaient pas bloqués, et, avant d'autoriser les matières à s'écouler à travers leurs orifices, à porter séparément et indépendamment les matières dans les passages à des secondes pressions supérieures aux premières pressions et suffisantes pour créer, lorsque leurs orifices sont libérés, un jaillissement des matières et des courants annulaires de départ uniformes de ces matières vers et dans le canal central, lorsque les bords antérieurs des courants d'écoulement respectifs sont considérés par rapport à des plans perpendiculaires à l'axe du canal central, les secondes pressions étant d'une amplitude suffisante et étant appliquées pendant une période de temps suffisante pour assurer que les écoulements de départ uniformes des matières (par exemple E, C, D) se produisent simultanément à partir de tous les points de leurs orifices.

283. Procédé suivant la revendication 282 caractérisé en ce qu'on applique une pression subséquente aux polymères, tandis que chacun eux s'écoule à travers son orifice, pour maintenir une force d'entraînement effective sur ce polymère suffisante pour lui permettre d'approcher et de maintenir un débit sensiblement permanent à travers l'orifice et vers et dans le canal central.

284. Procédé suivant la revendication 1, pour le moulage par injection d'articles en matière plastique à plusieurs couches, en créant des courants combinés à plusieurs couches, sensiblement concentriques, d'au moins trois polymères (par exemple B, C, A) et en injectant les courants combinés dans des empreintes afin de produire les articles à plusieurs couches, chaque courant combiné ayant une couche de matière structurale externe (B), pour former la couche superficielle externe de l'article, une couche de matière structurale de noyau pour former la couche superficielle interne (A) de l'article, et une ou plusieurs couches intermédiaires (C) pour former une ou plusieurs couches internes de l'article, caractérisé en ce qu'il comprend l'utilisation d'une pluralité de buses (296) ayant chacune un orifice d'injection (596) à une extrémité et un canal central cylindrique (540) débouchant dans l'orifice d'injection, la buse comportant en outre au moins trois passages de polymères communiquant avec le canal central, passages parmi lesquels au moins les premier et deuxième passages (460, 500) débouchent dans le canal à travers des orifices annulaires (462, 502) dont les lignes centrales se trouvent sensiblement perpendiculaires à l'axe du canal central, le premier orifice étant plus proche de l'orifice d'injection que les autres orifices, afin de canaliser la matière de la couche structurale externe (B) vers et dans le canal, le troisième orifice (par exemple 440) étant plus éloigné de l'orifice d'injection que les premier et deuxième orifices, afin de canaliser la matière du noyau (A) vers et dans le canal, et le deuxième orifice (502) étant situé au voisinage du premier orifice, pour diriger la matière de la couche intermédiaire (C) vers et dans le canal, la buse contenant, dans son canal central, une vanne (800, 834) intervenant au voisinage des orifices et adaptée de manière à obturer et à libérer le deuxième orifice (502), pour commander l'écoulement du polymère de la couche intermédiaire (C) à travers cet orifice et pour commander indépendamment l'écoulement et l'absence d'écoulement de la matière du noyau (A) à travers le troisième orifice (440), et en ce qu'il comprend en outre les étapes consistant :
(1) à empêcher l'écoulement des polymères à partir de tous les orifices,
(2) à continuer d'empêcher l'écoulement du polymère (C) à partir du deuxième orifice (502) tout en autorisant l'écoulement de la matière structurale à travers l'un des premier et troisième orifices (462, 440) ou à travers ces deux orifices,
(3), avant de libérer le deuxième orifice, à soumettre la matière se trouvant dans le deuxième passage (500) à une pression suffisante pour amener cette matière à s'écouler dans le canal central (540) si son orifice (502) etait libéré, cette pression étant toutefois inférieure à celle qui provoquerait une fuite de la matière à travers le deuxième orifice, le long de la vanne d'obturation (800, 834), la pression étant suffisante, lors de la libération du deuxième orifice, pour provoquer un jaillissement de polymère à travers l'orifice de telle façon que le départ de l'écoulement, vers et dans le canal central, soit établi sous la forme d'un courant d'écoulement annulaire qui est uniforme si on le considère par rapport à un plan perpendiculaire à l'axe du canal central,
(4), après la libération du deuxième orifice (502), à augmenter la vitesse du mouvement de la matière afin d'obtenir un débit sensiblement permanent de cette matière à travers le deuxième orifice,
(5) à empêcher l'écoulement de polymère à travers le troisième orifice (440) tout en autorisant la matière sous pression à s'écouler à travers le deuxième orifice (502), afin d'accoler à elle-même, par l'intermédiaire de la matière du noyau, la matière de la couche intermédiaire (C) sous pression, et
(6) à empêcher l'écoulement à travers le deuxième orifice (502) tout en permettant l'écoulement à travers le premier orifice (462) et soit à déplacer vers l'avant la vanne (800, 834), afin de repousser vers l'avant la couche intermédiaire accolée et d'encapsuler sensiblement la couche interne accolée avec la matière (B) provenant du premier orifice (462), soit à accumuler la matière (A), qui s'est écoulée à partir du troisième orifice (440), à l'extrémité antérieure de la vanne, et à déplacer la vanne vers l'avant de manière à encapsuler sensiblement la matière accolée de la couche intermédiaire (C) au moyen de la matière accumulée (A) provenant du troisième orifice.

285. Procédé suivant la revendication 284 caractérisé en ce qu'il comprend les étapes consistant à soumettre le polymère, se trouvant dans le deuxième passage (500), à une première pression qui serait suffisante pour amener ce polymère à s'écouler vers et dans le canal central (540) si son orifice (502) était libéré, et, avant d'autoriser l'écoulement à travers le deuxième passage (500), à soumettre la matière se trouvant dans ce deuxième passage à une seconde pression supérieure à la première pression mais toutefois inférieure à celle qui provoquerait une fuite de la matière à travers l'orifice (502), le long de la vanne d'obturation (800, 834), cette seconde pression étant suffisante pour créer, lorsque l'orifice est libéré, un jaillissement de polymère et un écoulement annulaire de départ du polymère uniforme, vers et dans le canal central (540), si on considère le courant d'écoulement par rapport à un plan perpendiculaire à l'axe du canal central.

286. Procédé suivant la revendication 284 ou la revendication 285 caractérisé en ce qu'on soumet la matière de la couche intermédiaire (C), dans le deuxième passage (500), à une première pression suffisante pour l'amener à s écouler si le deuxième orifice (502) était libéré, et on soumet ensuite la matière à une pression accrue qui est inférieure à celle qui provoquerait ladite fuite, cette matière, mise ainsi sous pression, étant amenée à jaillir à travers le second orifice (502) vers et dans le canal central (540).

287. Procédé suivant la revendication 284,285 ou 286 caractérisé en ce qu'il comprend en outre, avant d'autoriser l'écoulement à travers le premier orifice (462), les étapes consistant à soumettre la matière dans le premier passage (460) à une pression supérieure à la première pression et suffisante, lorsque son orifice (462) est libéré, pour créer un jaillissement de la matière à travers l'orifice si bien que le départ de son écoulement, vers et dans le canal central (540), est uniforme, si on considère le courant d'écoulement résultant par rapport à un plan perpendiculaire à l'axe du canal central, cette pression étant inférieure à celle qui provoquerait une fuite de la matière à travers le premier orifice (462), le long de la vanne d'obturation (800, 834), vers et dans le canal, et, après avoir autorisé l'écoulement de la matière à travers le premier orifice, à augmenter le débit à travers celui-ci afin d'obtenir un débit sensiblement permanent à travers le premier orifice.

288. Procédé suivant la revendication 284,285,286 ou 287 caractérisé en ce qu'il comprend en outre, avant d'autoriser l'écoulement de la matière structurale du noyau (A) à travers le troisième orifice (440), les étapes consistant à soumettre la matière du noyau, dans le troisième passage, à une pression supérieure à la première pression et suffisante pour empêcher toute chute de pression préjudiciable lorsque son orifice (440) est libéré, et, lors de l'libération de l'orifice, pour créer un écoulement immédiat de la matière du noyau vers et dans le canal central (540), cette pression étant inférieure à celle qui provoquerait une fuite de la matière du noyau (A) à travers le troisième orifice (440), le long de la vanne d'obturation (800, 834), vers et dans le canal (540), et, après avoir autorisé l'écoulement de la matière du noyau à travers le troisième orifice (440), à modifier le débit à travers cet orifice afin d'obtenir un débit sensiblement permanent à travers le troisième orifice.

289. Procédé suivant la revendication 1, pour le moulage par injection d'articles en matière plastique à plusieurs couches en créant des courants combinés à plusieurs couches sensiblement concentriques, d'au moins trois polymères et en injectant les courants dans des empreintes, afin de former les articles, les courants combinés ayant une couche de matière structurale externe (B) pour former la couche superficielle externe de l'article, un noyau de matière structurale (A) pour former la couche superficielle interne de l'article, et une ou plusieurs couches intermédiaires (par exemple E, C, D) de matière pour former une ou plusieurs couches internes de l'article, caractérisé en ce qu'il utilise une pluralité de buses de co-injection (296) ayant chacune un orifice d'injection (596) à une extrémité et un canal central cylindrique (540) débouchant dans l'orifice d'injection, la buse comportant en outre au moins trois passages de polymères (460, 500, 440) communiquant avec le canal central, passages parmi lesquels au moins les premier et deuxième passages débouchent dans le canal central par l'intermédiaire d'un orifice annulaire (462, 502), chaque orifice ayant une ligne centrale dans un plan sensiblement perpendiculaire à l'axe du canal central, le premier orifice (462) étant plus proche de l'orifice d'injection que les autres orifices, afin de diriger la matière structurale de la couche superficielle externe (B) vers et dans le canal (540), le troisième orifice (440) étant plus éloigné de l'orifice d'injection que les premier ou deuxième orifices (462, 502), pour diriger la matière du noyau (A) vers et dans le canal, et le deuxième orifice (502) étant situé au voisinage du premier orifice (462), pour diriger la matière de la couche intermédiaire (C) vers et dans le canal, la buse comportant en outre une vanne (800, 834) intervenant, dans le canal central de la buse, au voisinage immédiat des orifices, pour empêcher et autoriser l'écoulement des polymères à travers les premier, deuxième et troisième orifices, et en ce qu'il comprend en outres les étapes consistant à utiliser la vanne (800, 834) pour obturer les premier et deuxième orifices (462, 502), à soumettre les polymères (B, C), dans les passages obturés par la vanne, à une première pression qui serait suffisante pour amener les matières bloquées à s'écouler vers et dans le canal central (540) si la vanne n'obturait pas les premier et deuxième orifices, à libérer, à soumettre, juste avant de déplacer la vanne (800, 834) pour libérer les premier et deuxième orifices (462, 502), à soumettre les matières (B, C) dans les passages (460, 500) à une seconde pression supérieure à la première pression, cette seconde pression étant suffisante pour établir un écoulement annulaire de départ uniforme des matières, vers et dans le canal central (540), lorsque la vanne est déplacée, chaque écoulement ayant un bord de départ ou antérieur situé dans un plan sensiblement perpendiculaire à l'axe du canal central, à libérer, après avoir soumis les matières dans les passages précités à la seconde pression, les premier et deuxième orifices (462, 502), en déplaçant la vanne de manière à établir des écoulements annulaires de départ uniformes, vers et dans le canal central, et à maintenir une pression sur ces matières, pendant une période d'au moins 10 à 80 centièmes de seconde, afin d'obtenir un écoulement permanent des matières à travers les premier et deuxième orifice (462, 502) et de maintenir ainsi une épaisseur uniforme autour des écoulements de matières annulaires à partir des premier et deuxième orifices, les matières soumises à la pression étant de préférence des polymères en phase condensée.

290. Procédé suivant la revendication 1, pour la production, par moulage par injection, d'articles à plusieurs couches, tels que des paraisons dont les parois comprennent une couche superficielle interne (A), une couche superficielle externe (B) et au moins une couche interne (C) entre les couches superficielles interne et externe, caractérisé en ce qu'il comprend l'utilisation d'une pluralité de buses de co-injection (296) ayant chacune un canal central (540) et des moyens (800, 834) dans la buse qui peuvent être déplacés vers des positions sélectionnées afin d'empêcher ou d'autoriser l'écoulement, vers et dans le canal central, d'su moins la matière destinée à constituer la couche interne (C), et en ce qu il comprend en outre les étapes consistant à déplacer les moyens (800, 834) dans une première position dans laquelle ils empêchent l'écoulement, vers et dans le canal (540), de la matière destinée à constituer la couche interne (C), à amorcer l'écoulement, vers et dans le canal central, de la matière destinée à constituer la couche superficielle externe (B) tout en maintenant un écoulement de la matière destinée à constituer la couche superficielle interne (A), à élever la pression de la matière de la couche interne (C) à un niveau supérieur à la pression, dans le canal central, de l'une ou l'autre des matières destinées à constituer les couches superficielles interne et externe, et à déplacer les moyens (800, 834) vers une seconde position dans laquelle ils permettent l'écoulement, vers et dans le canal central, de la matière destinée à constituer la couche interne (C), ces matières étant de préférence amenées à pénétrer dans le canal de manière à s'écouler le long de celui-ci d'une manière concentrique les unes par rapport aux autres.

291. Procédé suivant l'une quelconque des revendication 249 à 290 caractérisé en ce qu'il comprend en outre les étapes consistant à introduire la matière structurale externe (B), dans le canal central (540), suivant un angle par rapport à ce canal central et à introduire la matière structurale la plus interne (A), dans le sens axial, sous la forme d'un courant solide dans le canal central, à obturer physiquement les orifices (462, 440) des matières de la couche superficielle externe et de la couche interne et à mettre préalablement en pression ces matières (B, C), dans leurs passages, tandis que leurs orifices sont obturés, de manière à réduire ainsi au minimum les temps transitoires exigés pour atteindre les types d'écoulement désirés et pour commander les débits volumétriques des matières de la couche superficielle externe et de la couche interne, dans la zone de combinaison (540).

292. Procédé suivant l'une quelconque des revendication 249 à 290 caractérisé en ce qu'il comprend les étapes consistant à introduire la matière structurale externe (B), dans le canal central (540), suivant un angle par rapport à ce canal central, et à introduire axialement la matière structurale interne (A) sous la forme d'un courant solide, dans la zone de combinaison, à mettre sous pression le polymère en fusion pour la couche externe (B) dans son passage (460), tout en obturant son orifice (462), puis à libérer cet orifice, puis, en tant que partie d'une étape de déplacement, à réaliser un départ uniforme de l'écoulement de la matière structurale de la couche externe (B) à partir de tous les points de son orifice de passage (462), vers et dans le canal central de la buse.

293. Procédé suivant la revendication 291 ou la revendication 292 caractérisé en ce que l'étape de déplacement comporte le fait de laisser l'orifice (462) pour la matière externe (B) libéré pendant un temps suffisant pour obtenir et maintenir une vitesse et un débit volumique continus et uniformes de la matière de la couche externe pendant 90% du cycle d'injection.

294. Procédé suivant l'une quelconque des revendication 291 à 293 caractérisé en ce qu'il comporte en outre les étapes consistant à mettre sous pression la matière de la couche interne (C) ou bien cette matière et une matière de la couche superficielle interne (A) tandis que leur orifice est obturé, et à libérer ensuite l'orifice et à produire un débit initial uniforme de la matière, à travers l'orifice de son passage, au départ du cycle d'injection, et à maintenir un écoulement continu, en termes de vitesse et de débit volumétrique, de toutes les matières, pendant la plus grande partie du cycle d'injection.

295. Procédé suivant l'une quelconque des revendication 291 à 294 caractérisé en ce que l'étape de mise en pression est effectuée pendant une étape de déplacement pour soumettre le polymère en fusion pour la couche superficielle externe (B), tandis qu'il se trouve dans son passage (460) et que son orifice (462) est obturé, à une première pression qui serait suffisante pour amener la matière à s'écouler vers et dans le canal central (540), si son orifice était libéré, et, avant de permettre l'écoulement de la matière de la couche superficielle externe (B) à travers son orifice, à actionner des moyens pour déplacer la matière de la couche superficielle externe dans son passage (460) et pour la porter ainsi à une seconde pression supérieure à la première pression et suffisante pour créer, lorsque son orifice (462) est libéré, un jaillissement de la matière en tant qu'écoulement annulaire de départ, à partir de tous les points de son orifice, vers et dans le canal central (540), le courant d'écoulement résultant étant uniforme si on le considère par rapport à un plan perpendiculaire à l'axe du canal central, la seconde pression étant inférieure à celle qui provoquerait une fuite de la matière de la couche superficielle externe (B) le long du moyen de blocage de l'écoulement (800, 834), vers et dans le canal, et à augmenter, pendant et après la libération de l'orifice de la couche superficielle externe (B), la vitesse du déplacement du polymère jusqu'à l'obtention d'un débit de type désiré, sensiblement permanent, de la matière à travers son orifice, vers et dans le canal central (540).

296. Procédé de moulage par injection suivant la revendication 1, comportant l'injection de courants d'écoulement à plusieurs couches, comprenant trois couches, dans les empreintes d'injection, la vitesse d'écoulement de chaque courant de couche étant la plus élevée sur une ligne de courant à écoulement rapide se trouvant entre les limites de ce courant de couche, caractérisé en ce qu'il comprend les étapes consistant à établir des écoulements de matières pour une première couche (A) et une deuxième couche (B) du courant d'écoulement et à former une interface entre les première et seconde couches s'écoulant, à placer l'interface en un premier endroit qui ne coïncide pas avec la ligne de courant à écoulement rapide, à interposer l'écoulement d'une matière pour une troisième couche (C) du courant d'écoulement entre les première et deuxième couches, cette troisième couche se trouvant dans une position qui ne coïncide pas avec la ligne de courant à écoulement rapide, et (i) soit à déplacer la troisième couche (C) vers un second emplacement qui est plus proche de la ligne de courant à écoulement rapide ou qui coïncide sensiblement avec cette ligne ou bien encore qui en est voisin, (ii) soit à déplacer la troisième couche (C), en travers de la ligne de courant à écoulement rapide, en direction d'un second emplacement ne coïncidant pas avec cette ligne.

297. Procédé suivant la revendication 296 caractérisé en ce qu'il comprend l'étape consistant à déplacer l'écoulement de la matière de la troisième couche (C) pratiquement immédiatement lors de l'interposition de cette matière entre les première et deuxième couches (A, B).

298. Procédé suivant la revendication 297 caractérisé en ce qu'il comprend l'étape consistant à déplacer la troisième couche (C), en direction du second emplacement, lorsque l'écoulement de la matière de la troisième couche à été interposé entre les première et deuxième couches (A, B), ou peu de temps après cette interposition, pratiquement en tous les endroits en travers de la largeur ou bien en tous les emplacements autour de l'anneau du courant de couches.

299. Procédé suivant la revendication 296,297 ou 298 caractérisé en ce qu'il comprend l'étape consistant à ajuster les débits relatifs des matières (A, B) des première et deuxième couches pour déplacer l'emplacement de la troisième couche (C).

300. Procédé suivant la revendication 296, 297, 298 ou 299 caractérisé en ce qu'il comprend l'étape consistant à sélectionner le débit de la matière de la première couche (A) et le débit de la matière de la deuxième couche (B) pour placer l'interface, à l'endroit du premier emplacement, de manière qu'elle ne coïncide pas avec la ligne de courant à écoulement rapide.

301. Procédé suivant l'une quelconque des revendication 296 à 300 caractérisé en ce que chaque courant d'écoulement à plusieurs couches est formé dans une buse correspondante (296) ayant un canal d'injection (540), par exemple disposé centralement, et il est ensuite injecté dans une empreinte d'injection associée (102), le courant d'écoulement formé dans le canal ayant une ligne de courant d'écoulement qui correspond à la ligne de courant à écoulement rapide dans l'empreinte d'injection, et le premier emplacement de l'interface dans le canal (540) ne coïncide pas avec la ligne de courant d'écoulement dans le canal qui correspond à la ligne de courant à écoulement rapide dans l'empreinte d'injection, la troisième couche (C) étant interposée entre les première et deuxième couches (A, B) en un emplacement qui ne coïncide pas avec la ligne de courant d'écoulement dans le canal (540) laquelle correspond à la ligne de courant à écoulement rapide dans l'empreinte d'injection, et la troisième couche (C) est soit déplacée vers un second emplacement dans le canal qui est plus proche ou qui coïncide pratiquement avec la ligne de courant d'écoulement dans ce canal qui correspond à la ligne de courant à écoulement rapide dans l'empreinte d'injection, soit déplacée en travers de ladite ligne de courant d'écoulement en direction du second emplacement ne coïncidant pas avec cette ligne.

302. Procédé suivant l'une quelconque des revendication 296 à 301 caractérisé en ce qu'il comprend les étapes consistant à former le courant d'écoulement à plusieurs couches comprenant trois couches, en vue d'une injection dans une empreinte d'injection sous la forme d'un courant de couches annulaire ou tubulaire, courant dans lequel la matière de la deuxième couche (B) est formée autour de la matière de la première couche (A), afin d'établir une interface annulaire ou tubulaire entre les matières des première et deuxième couches s'écoulant, l'interface étant située, entre les matières s'écoulant des première et deuxième couches, au premier emplacement qui ne coïncide pas avec la ligne de courant à écoulement rapide, cette dernière ligne étant de préférence annulaire.

303. Procédé suivant l'une quelconque des revendication 296 à 302 caractérisé en ce qu'il comprend l'étape consistant à former la troisième couche (C), pour son interposition entre les première et deuxième couches, sous la forme d'une combinaison de plusieurs couches obtenue à partir d'une pluralité de matières constitutives.

304. Procédé suivant la revendication 1 ou la revendication 102 caractérisé en ce que pour remédier au biais d'une partie de l'extrémité terminale de la couche interne de chaque article ou conteneur à plusieurs couches, moulé par injection-soufflage, il comprend l'étape consistant à replier sur elle-même la partie extrême terminale en biais, afin de donner à la couche interne un bord terminal ou antérieur qui n'est sensiblement pas en biais dans son ensemble.

305. Procédé suivant la revendication 1, pour produire des paraisons en matière plastique rigide, à plusieurs couches, moulées par injection, destinées à la production de conteneurs moulés par soufflage, la paroi latérale (26) de chaque paraison contenant une couche interne (C), caractérisé en ce qu'il comprend les étapes consistant à injecter un courant à plusieurs couches dans une empreinte d'injection, et, pendant l'étape d'injection, à amener une partie de la portion extrême marginale de la couche interne à se replier sur elle-même tandis que cette portion pénètre dans l'empreinte, afin de former, dans cette empreinte, une paraison ayant une portion (33) de la couche interne repliée sur elle-même, dans la partie extrême marginale (28,29) de la paroi latérale (26).

306. Procédé suivant la revendication 305 caractérisé en ce qu'il comporte en outre l'étape consistant à amener la portion repliée sur elle-même (44) et la partie extrême terminale et non repliée de la partie extrême marginale de la couche interne (C) à être finalement mise en position dans un plan qui n'est pratiquement pas en biais par rapport à l'axe du conteneur.

307. Appareil suivant l'une quelconque des revendications 13 à 27 ou la revendication 47 caractérisé en ce qu'il comporte un canal principal (276, 288) ayant une extrémité antérieure avec une pluralité de buses de co-injection (296) montées dans cette extrémité, des moyens (950, 282) pour supporter le canal principal et des moyens (956, 951; 974, 982) pour monter le canal principal sur son support de manière à permettre au canal principal (276, 288) de flotter axialement ou à la fois axialement et radialement sur son support, tandis que l'appareil est en fonctionnement.

308. Appareil suivant la revendication 307 caractérisé en ce que le canal principal (276, 288) est monté et supporté sur sa ligne centrale axiale.

309. Appareil suivant la revendication 307 ou la revendication 308 caractérisé en ce qu'il comporte en outre des moyens de compensation (340, 341, 986) pour appliquer au canal principal (276, 288) une force vers l'avant suffisante pour compenser n'importe quelle force vers l'arrière résultant du flottement axial du canal principal, force résultant par exemple d'une pression d'injection inverse et/ou d'une dilatation thermique pendant le fonctionnement.

310. Appareil suivant la revendication 309 caractérisé en ce que les moyens de compensation de la force comportent au moins un vérin hydraulique (340, 341, 986) disposé de telle façon que la force vers l'avant soit appliquée suivant la ligne centrale axiale du canal principal et le long de celle-ci, cette ligne centrale axiale coïncidant par exemple avec la ligne centrale axiale de la machine.

311. Appareil suivant la revendication 309 ou la revendication 310 caractérisé en ce que les buses de co-injection (296) ont des faces exposées aux entrées d'empreintes adjacentes à l'extrémité antérieure du canal principal (276, 288) et en ce qu'il y a un support d'empreintes juxtaposées (104) comportant une pluralité d'empreintes d'injection (102) ayant chacune une face d'entrée (439) destinée à coopérer avec une face exposée associée d'une buse juxtaposée, le moyen de compensation de la force intervenant pour exercer une force suffisante pour établir et maintenir un joint d'étanchéité effectif à contact sous pression entre les faces exposées des buses et les faces d'entrée des empreintes pendant le fonctionnement.

312. Appareil suivant l'une quelconque des revendication 307 à 311 caractérisé en ce que des parties du canal principal (276, 288) sont montés dans la structure de l'appareil avec un jeu (G) entre le canal principal et cette structure, afin de donner au canal principal la possibilité de flotter axialement ou à la fois axialement et radialement dans la structure.

313. Appareil suivant la revendication 311 ou la revendication 312 caractérisé en ce qu'il comporte en outre une platine mobile (114), un ensemble support se présentant sous la forme d'un premier support fixe (282) espacé de la platine mobile et d'un second support, le canal principal (276, 288), dans lequel sont montées les buses (296), étant placé entre la platine mobile (114) et le support fixe (282) et le second support comportant le bloc porte-empreintes (104) placé au voisinage immédiat de la face antérieure du canal principal, pour permettre la juxtaposition de chacune des empreintes d'injection (102) à une buse associée (296), le second support étant placé entre le premier support et la platine mobile et servant à maintenir les empreintes d'injection (102) sensiblement dans un même plan parallèle aux faces (439) des buses et à protéger le canal principal (288) à l'encontre de dommages dus à une force de serrage exercée par la platine mobile (114) par rapport au support fixe (282), le canal principal, le support fixe et le second support étant chacun adaptés de manière à permettre au canal principal (276, 288) de flotter axialement ou à la fois axialement et radialement par rapport au support, sous l'effet de la pression d'injection inverse et/ou de la dilatation thermique du canal principal (288).

314. Appareil suivant la revendication 313 caractérisé en ce que le bloc porte-empreintes (104) est un châssis à empreintes d'injection (950, 106) placé au voisinage du canal principal, entre celui-ci et la platine mobile (214).

315. Appareil suivant la revendication 314 caractérisé en ce que le support comporte des colonnes (122, 962, 963) s'étendant à partir du châssis à empreintes (950, 106) jusqu'au second support.

316. Appareil suivant la revendication 315 caractérisé en ce que le support (282) comporte un alésage (982) qui s'étend à travers lui pour permettre au canal principal (276) de flotter axialement à travers le support.

317. Appareil suivant l'une quelconque des revendication 307 à 315 caractérisé en ce que le support comporte des alésages d'appui axiaux (945, 982), à raison d'un alésage adjacent à chacune des extrémités antérieure et postérieure du canal principal (288, 276) et ce canal principal comporte des organes allongés (951, 276), s'étendant axialement, montés sur la ligne centrale axiale du canal principal, à raison d'un à l'extrémité antérieure et l'autre à son extrémité postérieure, chacun de ces organes étant adapté de manière à être logé dans l'un des alésages d'appui axiaux (945, 982), pour supporter le canal principal à chaque extrémité, chaque organe et son alésage associé étant conformés de manière à permettre au canal principal de flotter dans le support.

318. Appareil suivant la revendication 317 caractérisé en ce que l'alésage d'appui axial antérieur (945) se trouve dans le châssis des empreintes d'injection (950) tandis que l'alésage d'appui axial postérieur se trouve dans le support fixe (282).

319. Procédé suivant l'une quelconque des revendication 1 à 12, dans lequel une pluralité de courants de polymères sont alimentés, le long d'un canal principal (276, 288), en direction de chacune des buses (296), caractérisé en ce qu'il comprend les étapes consistant à monter le canal principal (276, 288), sur une ligne centrale axiale de celui-ci, de manière à lui permettre de flotter axialement, radialement ou à la fois axialement et radialement, sous l'effet de la dilatation thermique et de la pression d'injection inverse, et à compenser la force exercée vers l'arrière, par l'intermédiaire du canal principal, pendant le flottement axial, en exerçant sur le canal principal, suivant la ligne centrale axiale et le long de celle-ci, une force vers l'avant suffisante pour compenser la force vers l'arrière et suffisante pour créer un joint d'étanchéité effectif à contact sous pression entre les buses et les empreintes pendant le fonctionnement de la machine.

320. Appareil suivant l'une quelconque des revendications 13 à 27 ou la revendication 47 caractérisé en ce qu'il comporte en outre un dispositif d'alimentation allongé pour rediriger et alimenter des courants d'écoulement de polymères à partir d'un bloc de canal principal vers une buse d'injection (296) de l'appareil, le dispositif (294) est conçu de manière à recevoir une pluralité de courants d'écoulement de polymères séparés à partir du bloc de canal principal et, tout en maintenant les courants d'écoulement séparés, à les réorienter pour qu'ils s'écoulent axialement à l'extérieur d'une extrémité antérieure du dispositif, pour pénétrer dans la buse, le dispositif comportant une pluralité d'orifices d'entrée (392 à 396) entaillés radialement dans sa périphérie, chacun d'eux recevant l'un des courants de la pluralité de courants d'écoulement de polymères séparés en provenance du bloc du canal principal, une pluralité de canaux d'alimentation séparés dont chacun communique avec un orifice d'entrée respectif et comporte une partie dirigée vers l'intérieur (404, 408, 412) s'étendant vers l'axe central du dispositif, et une partie axiale (406, 412, 416, 414) s'étendant axialement vers l'avant, à travers le dispositif, en direction d'un trou de sortie associé (407, 411, 417, 415) dans une partie extrême antérieure (388) du dispositif, la pluralité de trous de sortie étant disposés, dans la partie extrême antérieure, de préférence suivant une répartition étagée circonférentiellement et radialement, afin d'alimenter les polymères sous la forme de courants d'écoulement séparés vers et dans l'arrière de la buse.

321. Appareil suivant la revendication 320 caractérisé en ce qu'il comprend une pluralité de premiers orifices d'entrée (392 à 395) et un deuxième orifice d'entrée (396) entaillés chacun radialement dans la périphérie du dispositif, les premiers orifices d'entrée et le second orifice d'entrée étant espaces axialement et alignés le long du dispositif, une pluralité de premiers étranglements d'alimentation (398-401) et un deuxième étranglement d'alimentation (402) entaillés chacun radialement dans la périphérie du dispositif, chaque premier étranglement d'alimentation étant en communication avec un premier orifice d'entrée respectif, s'étendant autour d'une partie de la périphérie du dispositif et ayant une partie extrême terminale, le second étranglement d'alimentation étant en communication avec le second orifice d'entrée et s'étendant axialement le long d'une partie de la périphérie du dispositif, la partie extrême terminale de chaque premier étranglement d'alimentation débouchant dans un premier canal d'alimentation associé ayant une partie radiale s'étendant vers l'intérieur, en direction de l'axe central de dispositif, et une partie axiale communiquant avec la partie radiale et s'étendant axialement vers l'avant, à travers le dispositif, une partie extrême antérieure du dispositif présentant une pluralité de premiers trous de sortie (407, 411, 415, 417) communiquant avec la partie axiale des premiers canaux d'alimentation respectifs, et un second trou de sortie (418) communiquant avec le second étranglement d'alimentation (402).

322. Appareil suivant la revendication 320 ou la revendication 321 caractérisé en ce que le dispositif d'alimentation comprend un canal d'alimentation central (379) s'étendant suivant son axe central.

323. Appareil suivant la revendication 321 caractérisé en ce que le dispositif d'alimentation comprend un canal d'écoulement central (390) qui s'étend suivant son axe central et la partie axiale de l'un des premiers canaux d'alimentation (404) communique, le long d'une partie de son tronçon axial, avec le canal d'alimentation central (390), avec lequel communique également son premier trou de sortie (407).

324. Appareil suivant la revendication 323 caractérisé en ce que le second orifice d'entrée du dispositif est l'orifice d'entrée (396) le plus proche de l'extrémité antérieure et le premier orifice d'entrée qui communique avec le canal d'alimentation central, est l'orifice d'entrée (392) qui est le moins proche de l'extrémité antérieure du dispositif.

325. Appareil suivant la revendication 320 ou 321 caractérisé en ce qu'il comporte une chambre (380) de réception d'une buse de co-injection formée dans l'extrémité antérieure du dispositif.

326. Appareil suivant la revendication 321,323 ou la revendication 324 caractérisé en ce que le dispositif d'alimentation comporte une chambre étagée (380) formée dans son extrémité antérieure et qui est adaptée de manière à recevoir une buse de co-injection, cette chambre comportant des premier, deuxième et troisième chambrages (382, 384, 386), espacés axialement et dont chacun s'étend transaxialement et est percé d'un premier trou de sortie (407, 411, 415, 417).

327. Appareil suivant la revendication 326 caractérisé en ce que un premier trou de sortie (407) qui communique avec un canal d'alimentation central, et situé dans le chambrage de sortie (382) se trouvant le plus à l'intérieur, dans le sens axial, tandis que le deuxième trou de sortie (418) du dispositif est situé dans la face antérieure (388) du dispositif.

328. Appareil suivant l'une quelconque des revendications 320 à 327 caractérisé en ce que les trous de sortie du dispositif d'alimentation sont espacés radialement les uns des autres et il y a un arc de 60° entre la plupart des trous de sortie et un arc de 120° entre deux des trous de sortie.

329. Appareil suivant l'une quelconque des revendications 320 à 328 caractérisé en ce qu'il comporte un moyen d'isolation (424) pour maintenir isolés les uns des autres les courants d'écoulement des polymères dirigés radialement à l'endroit du dispositif d'alimentation, ce moyen d'isolation comportant de préférence une pluralité de gorges annulaires (425) entaillées dans la périphérie du dispositif, chaque gorge étant disposée entre deux orifices d'entrée, et un segment de piston expansible (424) logé dans chaque gorge annulaire.

330. Appareil suivant la revendication 329 caractérisé en ce qu' il comporte en outre un bloc de canal principal (288) ayant un support, tel qu'un alésage, pour alimenter le dispositif, et des moyens d'étanchéité (424) sont disposés en amont de l'orifices d'entrée (492) qui est le moins proche de la face antérieure et qui coopère avec le support du bloc du canal principal pour empêcher que le polymère ne s'écoule axialement en amont des moyens d'étanchéité (424).

331. Appareil suivant la revendication 330 caractérisé en ce que les moyens d'étanchéité comportent une gorge annulaire (425) entaillée dans la périphérie du dispositif d'alimentation et un segment de piston expansible (424) logé dans cette gorge.

332. Appareil suivant l'une quelconque des revendications 13 à 27 ou la revendication 47 caractérisé en ce qu'il comporte en outre un dispositif allongé séparateur de courant d'écoulement (par exemple 276) destiné à être utilisé dans un bloc de canal principal de l'appareil, ce dispositif séparateur comportant une zone (278) d'entrée d'un courant d'écoulement de polymère, une pluralité de zones de sortie (344, 346) de courants d'écoulement, une pluralité de canaux d'écoulement espacés (220, 222, 250, 257, 258) s'étendant à travers une partie du dispositif et une pluralité de lumières d'entrée espacées, à l'endroit de la zone d'entrée (278), lesquelles communiquent avec les canaux d'écoulement (220, 222, 250, 275, 258), chacun des canaux d'écoulement comportant une partie (715 à 720) qui se branche, en un point de dérivation (342) dans le dispositif, où elle se subdivise en des première et seconde branches de sortie (par exemple 700, 701), ayant sensiblement la même longueur, qui conduisent à des première et seconde lumières de sortie respectives, l'ensemble des premières lumières de sortie (344) et l'ensemble des secondes lumières de sortie (346) étant disposés sous la forme de rangées, alignées longitudinalement, de lumières de sortie espacées, de manière à communiquer avec des entrées de canaux d'écoulement correspondantes du bloc de canal principal (288).

333. Appareil suivant la revendication 332 caractérisé en ce que la zone d'entrée (278) est située à une extrémité de l'appareil et les canaux d'écoulement (220, 222, 250, 257, 258) qui communiquent avec la zone d'entrée, s étendent d'une manière générale dans le sens longitudinal à partir de cette zone, jusqu'à leurs points de dérivation (342A à E).

334. Appareil suivant la revendication 332 caractérisé en ce que les zones d'entrée et de sortie sont des parties, s'étendant longitudinalement, de la surface du dispositif (290 ou 292) et dans chacune de ces parties leurs lumières (364, 366, 366'; 371, 372, 372') sont espacées les unes des autres dans une rangée s'étendant longitudinalement.

335. Appareil suivant la revendication 332,333 ou 334 caractérisé en ce que l'arc périphérique s'étendant de la ligne centrale axiale de chaque lumière d'entrée (par exemple 364) jusqu'à la ligne centrale axiale de chacune de ses lumières de sortie associées (par exemple 366, 366') est d'environ 90° ou supérieur, par exemple de 90° à 120°, et le point de dérivation des première et seconde branches de sortie est conformé de manière à empêcher une stagnation de l'écoulement de cet endroit.

336. Appareil suivant l'une quelconque des revendications 332 à 335 caractérisé en ce que la ligne centrale axiale du canal d'écoulement d'entrée (par exemple 250; 367; 373) recoupe la ligne centrale axiale de chacun de ses canaux d'écoulement de sortie en dérivation associés (704, 705; 368, 368'; 374, 374') en un point situé sur la ligne centrale axiale du dispositif séparateur.

337. Appareil suivant la revendication 332 ou la revendication 334 caractérisé en ce que le dispositif séparateur (290, 292) est cylindrique et les canaux d'écoulement (367, 373) pénétrant dans le dispositif sont dirigés vers son axe, par exemple radialement.

338. Appareil suivant l'une quelconque des revendications 332 à 337 caractérisé en ce que les première et seconde branches de sortie (par exemple 374, 374') s'étendent dans des direction opposées, suivant un angle inférieur à 90° l'une par rapport à l'autre, et suivant des angles supérieurs à 90° par rapport au canal d'écoulement (373) dont elles sont issues.

339. Appareil suivant la revendication 333 caractérisé en ce que chaque canal d'écoulement (par exemple 222) a une partie axiale (715) et une partie de canal de liaison (710, 710'') s'étendant entre la partie axiale du canal d'écoulement et son point de dérivation (342 B', 342B'').

340. Appareil suivant l'une quelconque des revendications 332 à 339 caractérisé en ce que chaque point de dérivation (par exemple 342) et ses première et seconde lumières de sortie (344, 346) se trouvent dans un même plan.

341. Appareil suivant l'une quelconque des revendications 332 à 339 caractérisé en ce que chaque canal d'écoulement (par exemple 250), son point de dérivation (342C) et ses première et seconde branches de sortie (704, 705), ainsi que les première et seconde lumières de sortie associées (344, 346) sont dans un même plan.

342. Appareil suivant l'une quelconque des revendications 332 à 341 caractérisé en ce que les première et seconde branches de sortie (700'', 701'') se trouvent dans des plans perpendiculaires à l'axe longitudinal du dispositif séparateur (276'').

343. Appareil suivant l'une quelconque des revendications 332 à 342 caractérisé en ce que les première et seconde lumières de sortie respectives se trouvent sur des parties de surface opposées du dispositif séparateur (276, 290, 292).

344. Appareil suivant l'une quelconque des revendications 332 à 343 caractérisé en ce qu'il comporte en outre des moyens pour isoler les courants d'écoulement de polymères respectifs qui sortent du dispositif séparateur à travers les première et seconde lumières de sortie en dérivation (344, 346), ayant un point de dérivation commun (par exemple 342C), à l'égard des autres courants d'écoulement qui sortent du dispositif à travers d'autres premières et secondes lumières de sortie en dérivation ayant d'autres points de dérivation communs.

345. Appareil suivant la revendication 344 caractérisé en ce qu'il comporte des moyens pour isoler, les uns des autres, les courants d'écoulement respectifs dirigés à l'endroit des lumières d'entrée (par exemple 364, 371).

346. Appareil suivant la revendication 344 caractérisé en ce que les moyens d'isolation respectifs comportent une pluralité de gorges annulaires (349, 370, 376) entaillées dans la périphérie du dispositif séparateur (276, 290, 292) et logeant des bagues d'étanchéité (348, 369, 376), les gorges et les bagues d'étanchéité étant disposées de manière à isoler des lumières, ayant un point de dérivation commun, a l'égard d'autres lumières ayant d'autres points de dérivation communs.

347. Appareil suivant la revendication 345 caractérisé en ce que le dispositif séparateur (276, 290 ou 292) est adapté de manière à être logé dans un alésage (par exemple 286) prévu dans un bloc de canal principal (288) et il comporte des moyens d'étanchéité (348, 369, 375) situés en aval d'une lumière d'entrée la plus en avant et des première et seconde lumières de sortie en dérivation, et en amont de la lumière la plus en arrière parmi les lumières d'entrée et des première et seconde lumières de sortie, afin d'empêcher que le polymère qui pénètre dans les lumières et en sort, ne puisse fuire axialement dans l'alésage (286) respectivement en aval des moyens d'étanchéité situés les plus en avant et en amont des moyens d'étanchéité situés les plus en arrière.

348. Appareil suivant la revendication 332 caractérisé en ce que les canaux d'écoulement (220, 222, 250, 257, 258) s'étendent dans des directions généralement longitudinales par rapport au dispositif séparateur (276), jusqu'à leurs points de dérivation, dans une partie extrême antérieure (284) du dispositif, les canaux d'alimentation étant agencés suivant une répartition d'ensemble qui, dans des plans transversaux à travers le dispositif et par suite de la réorientation des canaux tandis qu'ils s'étendent vers l'avant à travers le dispositif, passe d'une répartition radiale, à l'extrémité postérieure du dispositif, où chaque canal passe à travers un plan commun, à une répartition, espacée dans une direction axiale et sensiblement horizontale, des points de dérivation (342A à E), dans la partie extrême antérieure, où les points de dérivation se trouvent dans des plans transversaux différents, chaque canal d'écoulement étant subdivisé en une première et une seconde branches de sortie, de même longueur (700, 701 etc...), qui sont inclinées d'un certain angle par rapport au canal d'écoulement et qui se terminent respectivement à l'endroit des première et seconde lumières de sortie (344A à E, 346A à E), dans différentes parties de la périphérie de la partie extrême antérieure (278), chacune des premières lumières de sortie se trouvant dans un plan transversal différent des autres lumières et de la même façon les secondes lumières de sortie se trouvant dans des plans transversaux différents, la pluralité des premières lumières de sortie et la pluralité des secondes lumières de sortie étant disposées sous la forme d'une répartition, s'étendant longitudinalement, des lumières de sortie dans les parties de surface périphérique respectives du dispositif.

349. Appareil suivant la revendication 332 caractérisé en ce que les canaux d'écoulement séparés comprennent un canal d'écoulement axial et central (250) et une pluralité d'autres canaux d'écoulement (220, 222, 257, 258) qui s'étendent tous, d'une manière générale, dans le sens longitudinal, à travers une partie du dispositif séparateur, le canal d'écoulement axial (250) ayant une partie extrême (717) avec un point de dérivation (342C') qui sépare le canal d'écoulement axial en des première et seconde branches de sortie (704' et 705'), dans une partie extrême antérieure du dispositif, chacun des autres canaux d'écoulement ayant une partie extrême, un point de dérivation qui sépare le canal d'écoulement en des première et seconde branches de sortie (par exemple 700' et 701') et une partie de canal de liaison (par exemple 710, 711), sensiblement transversale, entre la partie extrême et le point de dérivation, les parties extrêmes, les parties des canaux de liaison et les points de dérivation pour tous les canaux d'écoulement étant situés dans la partie extrême antérieure (284') du dispositif (276'), les canaux d'écoulement étant disposés suivant une répartition globale qui, vue dans des plans transversaux à travers le dispositif et par suite de la réorientation des canaux d'écoulement tandis qu'ils s'étendent vers l'avant à travers le dispositif, passe d'une répartition radiale, à l'extrémité postérieure (278') du dispositif, où chaque canal passe à travers un plan transversal commun, à une disposition sensiblement coplanaire comportant des parties de canaux de liaison espacées axialement et à une disposition sensiblement coplanaire des points de dérivation espacés axialement, les première et seconde branches de sortie (par exemple 700', 701'), séparées à partir du même canal d'écoulement (par exemple 703'), ayant des longueurs sensiblement égales et se terminant respectivement aux première et seconde lumières de sortie (344, 346) qui sont situées dans des parties différentes de la périphérie de la partie extrême antérieure, chacune des premières lumières de sortie se trouvant dans un plan transversal différent de celui des autres lumières et de la même façon les secondes lumières de sortie étant dans des plans transversaux différents, la pluralité des premières lumières de sortie (344) et la pluralité des secondes lumières de sortie (346) étant disposées en rangées respectives, alignées longitudinalement, de lumières de sortie espacées dans les parties de la surface périphérique respectives.

350. Appareil suivant la revendication 349 caractérisé en ce que la partie de canal de liaison (par exemple 710), le point de dérivation (342) et les première et seconde lumières de sortie (344, 346) sont dans le même plan transversal pour chacun des autres canaux d'écoulement, et les première et seconde lumières de sortie (344C', 346C') pour le canal d'écoulement axial (250) sont dans le même plan transversal.

351. Appareil suivant la revendication 332 caractérisé en ce que les canaux d'écoulement (220, 222, 250, 257, 258) sont sensiblement alignés et s'étendent axialement à travers une partie du dispositif séparateur (276''), les canaux d'écoulement ayant chacun une partie extrême (715 à 720), un point de dérivation (342A'' à E'') qui sépare le canal d'écoulement en des première et seconde branches de sortie (par exemple 704'', 705''), et une partie de canal de liaison, (par exemple 713''), dirigée sensiblement dans le sens transversal, entre sa partie extrême et son point de dérivation, les parties extrêmes, les parties de canal de liaison et les points de dérivation pour tous les canaux d'écoulement étant situés dans une partie extrême antérieure du dispositif, les canaux d'écoulement étant disposés suivant une répartition globale qui, vue dans des plans transversaux à travers le dispositif et par suite de la réorientation des canaux tandis qu'ils s'étendent axialement vers l'avant à travers le dispositif, passe d'une répartition alignée à l'extrémité postérieure du dispositif, dans laquelle chaque canal passe à travers un plan transversal commun, à une répartition espacée axialement et transversalement de point de liaison entre les canaux de liaison et leurs canaux d'écoulement, une répartition, espacée axialement, de canaux de liaison et une répartition, espacée axialement, de points de dérivation, et les première et seconde branches de sortie (par exemple 704'', 705''), séparées à partir du même canal d'écoulement axial, ont des longueurs sensiblement égales et se terminent respectivement aux première et seconde lumières de sortie (344, 346), situées dans un plan transversal commun, en différentes parties de la périphérie de la partie extrême antérieure, la pluralité des premières lumières de sortie (344) et la pluralité des secondes lumières de sortie (346) étant disposées suivant des répartition respectives, alignées axialement, de lumières de sortie dans les différentes parties périphériques.

352. Appareil suivant la revendication 332 caractérisé en ce qu'il comporte une pluralité de canaux d'écoulement espacés (367, 373) à directions sensiblement radiales ou transaxiale, s'étendant à travers une partie du dispositif séparateur (290, 292), et une pluralité de lumières d'entrée espacées (364, 371), alignées axialement, disposées le long de la zone d'entrée , communiquant avec les canaux d'écoulement et se trouvant dans des plans transversaux différents, chacun des canaux d'écoulement (367, 373) ayant un point de dérivation dans le dispositif où le canal d'écoulement se sépare en des première et seconde branches de sortie (368'; 374, 374'), ayant des longueurs sensiblement égales, qui communiquent avec les première et seconde lumière de sortie respectives (366, 366'; 372, 372') et qui se terminent à l'endroit de ces lumières se trouvant dans les différentes zones de sortie, et en ce que la pluralité de premières lumières de sortie (366, 372) et la pluralité de secondes lumières de sortie (366', 372') sont disposées en séries respectives de lumières de sortie espacées, dans les zones de sortie respectives, chaque lumière d'entrée et sa lumière de sortie associée se trouvant par exemple dans un même plan transversal.

353. Appareil suivant l'une quelconque des revendications 348 à 352 caractérisé en ce que la partie extrême antérieure du dispositif comporte des moyens d'isolation pour maintenir isolés les uns des autres les courants d'écoulement qui sortent des lumières de sortie (344, 346).

354. Appareil suivant la revendication 353 caractérisé en ce que les moyens d'isolation comportent une pluralité de gorges entaillées dans la périphérie du dispositif (276''), chacune de ces gorges étant située entre deux lumières de sortie (344, 346) et étant prévue pour recevoir un organe d'étanchéité réalisé de préférence sous la forme d'un segment de piston extensible.

355. Appareil suivant la revendication 354 caractérisé en ce que les moyens d'isolation comprennent également un ruban métallique logé dans chaque gorge.

356. Appareil suivant l'une quelconque des revendications 348 à 355 caractérisé en ce que la partie extrême antérieure du dispositif séparateur est adaptée de manière à être logée dans un trou de même forme (par exemple 286), prévu dans un bloc de canal principal (288), et elle comporte des moyens d'étanchéité voisins et en aval de la paire de première et seconde lumières de sortie (344, 346-B) qui sont situées les plus en avant, et également voisins et en amont de la paire de première et seconde lumières de sortie (344, 346-A) qui sont situées le plus en arrière, afin d'empêcher que pratiquement des courants d'écoulement qui sortent des lumières de sortie, ne s'écoulent axialement dans le trou, vers l'aval au-delà des moyens d'étanchéité situés les plus en avant et vers l'amont au-delà des moyens d'étanchéité situés les plus en arrière.

357. Appareil suivant la revendication 352 caractérisé en ce que la ligne centrale axiale de chaque canal d'écoulement (par exemple 367) recoupe la ligne centrale axiale de chacune des ses branches de sortie associées (368, 368') en un point qui est décalé par rapport à la ligne centrale axiale du dispositif, dans la direction de la lumière d'entrée, et suivant un angle allant de 100° à 110°, par exemple de 105°.

358. Appareil suivant la revendication 352 ou la revendication 357 caractérisé en ce que l'arc périphérique allant du centre de chaque lumière d'entrée jusqu'au centre de chacune de ses lumières de sortie associées est d'environ 90°.

359. Appareil suivant la revendication 352,357 ou 358 caractérisé en ce que chaque canal d'entrée et le point de dérivation, les première et seconde branches de sortie et les première et seconde lumières de sortie associés à ce canal se trouvent dans le même plan transversal.

360. Appareil suivant l'une quelconque des revendications 352 et 357 à 359 caractérisé en ce que les première et seconde branches de sortie (374, 374') d'un canal d'écoulement (373) s'étendent dans des directions opposées suivant un angle, l'une par rapport à l'autre, inférieur à 90°, et chacune d'elles forme un angle supérieur à 90° avec le canal d'écoulement.

361. Appareil suivant la revendication 352 caractérisé en ce que l'arc périphérique allant du centre de chaque lumière d'entrée (364, 371) jusqu'au centre de chacune de ses lumières de sortie associées (366, 366'; 372, 372') est égales à 90° ou supérieur, par exemple il va de 90° à 120°, et chaque point de dérivation est conformé de manière à empêcher une stagnation de l'écoulement à l'endroit du point de dérivation.

362. Appareil suivant l'une quelconque des revendications 352 et 357 à 361 caractérisé en ce qu'il comporte des moyens d'isolation pour isoler, les uns des autres, des courants d'écoulement qui sont dirigés à l'endroit des lumières d'entrée (364, 371) et qui pénètrent à travers ces lumières, et pour isoler les courants d'écoulement qui quittent le dispositif séparateur à travers les première et seconde lumières de sortie (366, 366'; 372, 372'), ayant un pont de dérivation commun, à l'égard des autres courants d'écoulement qui quittent le dispositif à travers leurs premières et secondes lumières de sortie respectives ayant d'autres points de dérivation.

363. Appareil suivant la revendication 362 caractérisé en ce que les moyens d'isolation comportent une pluralité de gorges annulaires entaillées dans la périphérie du dispositif (290, 292), des gorges étant disposées de manière à isoler les lumières ayant un point de dérivation commun à l'égard de lumières ayant d'autres points de dérivation, et un segment de piston extensible est logé dans chaque gorge annulaire.

364. Appareil suivant la revendication 362 caractérisé en ce qu'il comporte des moyens d'étanchéité voisins et en aval de la lumière d'entrée et de ses première et seconde lumières de sortie situées les plus en avant, et des moyens d'étanchéité voisins et en amont de la lumière d'entrée et de ses première et seconde lumières de sortie situées les plus en arrière, afin d'empêcher pratiquement que des écoulements qui pénètrent dans les lumières et en sortent, ne s'écoulent axialement le long d'un alésage dans lequel le dispositif doit être installé, au-delà de ces moyens d'étanchéité.

365. Appareil suivant la revendication 13, pour le moulage, par injection simultanée, d'une pluralité d'articles ayant une pluralité de couches et formés à partir de courants d'au moins deux matières de moulage ayant des compositions différentes, caractérisé en ce qu il comprend une pluralité de buses de moulage (296) et une pluralité de conduits d'alimentation (220, 222, 250, 257, 258) correspondant au nombre des couches dans les structures, et en ce qu'il est caractérisé en outre par des moyens (par exemple 276, 290, 292) reliant ces conduits d'alimentation aux buses, ces moyens comprenant une série de canaux en dérivation (par exemple 700, 701; 368, 368'; 374, 374') s'étendant à partir de chacun des conduits d'alimentation, les longueurs et les angles des branches en dérivation des canaux reliés à un conduit d'alimentation quelconque étant sensiblement égaux, de manière à assurer un traitement identique de chaque matière de moulage fournie aux différentes buses de moulage.

366. Appareil suivant la revendication 365 caractérisé en ce qu'il comporte un premier moyen de séparation (290) relié à chacun des conduits, pour recevoir un courant de matière de moulage à partir de ce conduit et séparer ce courant en une pluralité de branches, et un second moyen de séparation (292) relié à chacune de ces branches pour recevoir un courant de matière de moulage à partir de cette branche et la diviser en sous-branches, l'angle entre chaque branche et son conduit associé étant sensiblement le même à l'endroit de n'importe quel premier moyen de séparation (290), l'angle entre chaque sous-branche et sa branche associée, à l'endroit de n'importe quel second moyen de séparation (292), étant sensiblement le même, et la longueur de chaque branche de chaque premier moyen de séparation (290) et de chaque second moyen de séparation (292) étant égale de manière à favoriser le traitement égal de la matière de moulage.

367. Appareil suivant la revendication 13, pour le moulage, par injection simultanée, d'une pluralité d'articles ayant chacun une pluralité de couches formées à partir de courants de matières de moulage ayant des compositions exigées par les couches de l'article, caractérisé en ce qu'il comprend une pluralité de buses de moulage (296), une pluralité de conduits d'alimentation sensiblement parallèles (220, 250, 222, 257, 258), pour diriger l'écoulement des matières de moulage, et des moyens reliant les buses aux conduits, et en ce qu'en outre les moyens de liaison comprennent un prolongement de canal principal (276) pour diviser le courant de matière de moulage provenant de chacun des conduits et réorienter les courants divisés en vue d'une division additionnelle, ce prolongement de canal principal comprenant un bloc allongé, par exemple cylindrique, ayant une pluralité de canaux primaires (220, 222, 250, 257, 258) reliés chacun à un conduit d'alimentation respectifs, ces canaux ayant des parties s'étendant d'une manière générale dans le sens axial du bloc et ayant des longueurs différentes, ces canaux étant reliés à une pluralité de branches (par exemple 700, 701) s'étendant à partir des canaux vers la surface du bloc, les branches qui s'étendent à partir de chaque canal ayant la même longueur et faisant sensiblement le même angle avec le canal.

368. Appareil suivant la revendication 367 caractérisé en ce que les branches partant des canaux rencontrent la surface du bloc suivant une ligne sensiblement parallèle à l'axe du bloc.

369. Appareil suivant la revendication 367 ou la revendication 368 caractérisé en ce que le prolongement de canal principal (276) est logé dans un bloc de canal principal (288) comportant des canaux à l'intérieur, au moins un canal du bloc de canal principal étant relié à une branche du prolongement de canal principal par un conduit arqué dans la surface du prolongement de canal principal.

370. Appareil suivant la revendication 367,368 ou 369 caractérisé en ce que le prolongement de canal principal (276) est emboîté dans un alésage (286) prévu dans un bloc de canal principal (288) qui comporte des canaux (par exemple 350, 351) reliés avec chaque branche du prolongement de canal principal, et chacun des canaux du bloc de canal principal se termine dans un premier moyen de division (290) prévu pour diviser le courant de matière de moulage se trouvant dans ce canal du bloc de canal principal en une pluralité de sous-courants, et de préférence chacun des sous-courants se termine dans un second moyen de division (292) séparant les sous-courants en une pluralité de courants extrêmes (par exemple 356A, 357A).

371. Procédé suivant l'une quelconque des revendications 1 à 12 caractérisé en ce qu'il comprend les étapes consistant à établir une pluralité de courants, par exemple de courants parallèles, de matières de moulage ayant des compositions requises pour les couches des articles, en vue de leur alimentation vers des buses de moulage (296), à diviser chacun de ces courants en une pluralité de branches et ce plusieurs fois, l'angle entre chaque branche et le courant avant la dérivation, en un point de dérivation quelconque (par exemple 342), étant pratiquement le même pour chaque branche, et la distance entre les points de dérivation, après la première dérivation, étant pratiquement la même pour chaque branche, si bien que chaque matière de moulage donnée, au cours de son déplacement vers une buse de moulage (296), suit un trajet sensiblement identique au trajet suivi vers chaque autre buse.

372. Procédé suivant l'une quelconque des revendication 1 à 12 caractérisé en ce qu'il comprend les étapes consistant à établir une pluralité de courants sensiblement parallèles de matières de moulage ayant des compositions exigées pour les couches des articles, à diriger régulairement chacun de ces courants vers des premiers points de division (par exemple 342A), à séparer chacun de ces 5 courants, à l'endroit de ces premiers points de division, en deux branches (708, 709), chacune des branches formant, en n'importe quel point de division, sensiblement le même angle, avec le courant dont elle est originaire, que n'importe quelle autre branche, à transporter chacune de ces branches vers des seconds points de division (290), à séparer chacune de ces branches en deux sous-branches (352A, 353A), chacune de ces sous-branches s'étendant sensiblement à angle droit par rapport à la branche (350A, 351A) dont elle est originaire, à transporter chacune de ces sous-branches vers des troisièmes points de division (292), à séparer chacune de ces sous-branches en deux lignes extrêmes (356A, 357A), chacune de ces lignes extrêmes formant, en un troisième point de division, le même angle, avec la sous-branche (352A) dont elle est originaire, que n'importe quelle autre ligne extrême, et à transporter chacune des lignes extrêmes vers une buse respective (296), vers un bloc (294) d'alimentation des buses respectives lequel est situé entre la ligne extrême et la buse, ou bien vers un quatrième point de division, la longueur de chaque branche, de chaque sous-branche et de chaque ligne extrême, pour la matière de moulage d'une couche de l'article à plusieurs couches, étant sensiblement la même que celle de chaque autre branche, sous-branche et ligne extrême respectives pour cette matière.

373. Appareil suivant la revendication 13 caractérisé en ce qu'il comprend une pluralité de vannes identiques (par exemple 800), à raison d'une dans chaque buse (296), pour amorcer, réguler et achever, d'une manière identique, l'écoulement des polymères à travers les buses respectives, des moyens d'actionnement adaptés pour actionner simultanément et d'une manière identique la pluralité de vannes, ces moyens comportant un moyen de mise en mouvement commun (par exemple 856) auquel chacune des vannes (par exemple 800) est associée opérationnellement de manière à produire simultanément des mouvements identiques de toutes les vannes dans les buses de co-injection à l'intérieur desquelles elles interviennent afin d'assurer une commande simultanée et identique de l'amorçage, de la régulation et de l'achèvement des écoulements de polymères à travers toutes les buses de co-injection (296), et des moyens de commande (2040) reliés au moyen de mise en mouvement commun (par exemple 856), afin de mettre en mouvement le moyen de mise en mouvement commun, suivant un mode désiré, pour obtenir les mouvements simultanés et identiques des vannes et les commandes simultanées et identiques des écoulements.

374. Appareil suivant la revendication 373 caractérisé en ce que les moyens d'actionnement comportent une pluralité de navettes (par exemple 860), dont chacune est reliée d'une manière mobile au moyen de mise en mouvement commun (par exemple 856), et chacune des vannes comporte un organe allongé (800) ayant une partie extrême antérieure pouvant fonctionner dans sa buse de co-injection (296) et une extrémité postérieure reliée à une navette (860), chaque navette comportant des moyens (par exemple 868, 878) associés et coopérant avec le moyen de mise en mouvement de telle façon que le mouvement du moyen de mise en mouvement commun provoque un déplacement identique et simultané de chacune des navettes (par exemple 860) et de chacune des vannes qui lui est reliée.

375. Appareil suivant la revendication 374 caractérisé en ce que la vanne comporte une tige allongée (834) et le moyen de mise en mouvement commun comporte une barre (850) formant came pour la navette de la tige allongée.

376. Appareil suivant la revendication 374 ou la revendication 375 caractérisé en ce que la vanne comporte un manchon allongé (800) et le moyen de mise mouvement commun comporte une barre (856) formant came pour la navette du manchon allongé.

377. Appareil suivant la revendication 373 caractérisé en ce que chaque buse (296) comporte un canal central recevant la vanne et les vannes (800, 834) comprennent une pluralité de premiers éléments de vanne identiques (800), à raison d'un pour chacune des buses de co-injection (296), communiquant avec le canal central (540) de cette buse, chacun de ces éléments étant adapté de manière à opérer, dans ce canal central, afin d'amorcer, de réguler et d'achever d'une manière identique les écoulements des polymères à travers ce canal, et une pluralité de seconds éléments de vanne identiques (834), dont chacun est monté mobile alternativement dans un élément respectif parmi les premiers éléments de vanne (800) et est adapté de manière à opérer, dans cet élément, afin d'amorcer, de réguler et d'achever d'une manière identique l'écoulement d'un polymère à travers le premier élément de vanne, et en ce qu'il comporte en outre un premier moyen d'entraînement (860) engagé dans un logement (902) pour pouvoir se déplacer dans celui-ci et entraîner, d'une manière simultanée et identique, les premiers éléments de vanne (800), ce premier moyen d'entraînement comportant un premier moyen de mise en mouvement commun (856) auquel chacun des premiers éléments de vanne est associé opérationnellement de manière à obtenir simultanément des mouvements identiques de chaque premier élément de vanne (800) dans la buse de co-injection (296) dans laquelle il intervient, ainsi qu'un second moyen d'entraînement (844) engagé dans le logement de manière à pouvoir s'y déplacer, afin d'entraîner d'une manière simultanée et identique la pluralité de seconds éléments de vanne (834), ce second moyen d'entraînement comportant un moyen de mise en mouvement commun (850) auquel est relié chacun des seconds éléments de vanne de manière à assurer simultanément des mouvements identiques de chaque second élément de vanne à l'intérieur de la buse de co-injection dans laquelle il intervient, ces moyens d'entraînement assurant, dans chaque buse de co-injection, une commande identique et simultanée de l'amorçage, de la régulation et de l'achèvement de l'écoulement des polymères à travers chacune des buses de co-injection, des premiers moyens de commande (918, 2040) reliés au premier moyen de mise en mouvement commun, afin de déplacer ce premier moyen de mise en mouvement commun suivant un mode désiré qui assure les mouvements simultanés et identiques et les commandes simultanées et identiques des écoulements, des seconds moyens de commande (906, 2040) reliés au second moyen de mise en mouvement commun (850) pour déplacer ce second moyen de mise en mouvement commun suivant un mode désiré qui assure les mouvements simultanés et identiques et les commandes simultanées et identiques des écoulements.

378. Appareil suivant la revendication 377 caractérisé en ce qu'il comporte en outre un moyen de commande commun (2040) relié à chacun des premiers moyens de commande (918, 2040) et des seconds moyens de commande (906, 2040), afin de déplacer les premier et second moyens respectifs de mise en mouvement communs suivant un mode désiré commun qui assure des mouvements indépendants, simultanés et non simultanés, des premier et second moyens de mise en mouvement communs.

379. Appareil suivant la revendication 377 ou la revendication 378 caractérisé en ce que le premier moyen d'entraînement comporte également une pluralité de premières navettes (860) dont chacune est reliée d'une manière mobile au premier moyen de mise en mouvement commun (856) et chacun des premiers éléments de vanne comporte un organe allongé (800) ayant une partie extrême antérieure intervenant dans sa buse associée et une extrémité postérieure reliée à une première navette associée, chaque première navette (860) comportant un moyen (868), coopérant avec le premier moyen de mise en mouvement commun (856), de telle façon que le mouvement du premier moyen de mise en mouvement commun (856) entraîne un déplacement, d'une manière identique et simultanée, de chacune des navettes et de chacun des premiers éléments de vanne (800) qui lui est relié.

380. Appareil suivant la revendication 378 ou la revendication 379 caractérisé en ce que le second moyen d'entraînement comporte également une pluralité de secondes navettes (844) dont chacune est reliée d'une manière mobile au second moyen de mise en mouvement commun (850) et chacun des seconds éléments de vanne comporte un organe allongé (834) ayant une partie extrême antérieure intervenant dans sa buse associée (296) et une extrémité postérieure reliée à une seconde navette associée, chaque seconde navette comportant un moyen (846), coopérant avec le second moyen de mise en mouvement commun (850), de telle façon que le mouvement du second moyen de mise en mouvement commun entraîne un déplacement, d'une manière identique et simultanée, de chacune des navettes et de chacun des seconds éléments de vanne qui lui est relié.

381. Appareil suivant la revendication 379 ou la revendication 380 caractérisé en ce que chaque second élément de vanne comporte une tige allongée (834) et le premier moyen de mise en mouvement commun comporte une barre (850) formant came pour la navette de la tige allongée.

382. Appareil suivant la revendication 379,380 ou 381 caractérisé en ce que chaque premier élément de vanne (800) comporte un manchon allongé percé d'une lumière et le second moyen de mise mouvement commun comporte une barre (856) formant came pour la navette du manchon allongé.

383. Appareil suivant l'une quelconque des revendications 373 à 382 caractérisé en ce que les moyens d'entraînement comportent un moyen de compensation associé aux éléments des vannes, par exemple à chacun des premiers éléments de vanne, afin de compenser le jeu axial dans les moyens d'entraînement, dans la vanne ou dans les deux à la fois, et de compenser les écarts de dimension dans les structures associées, le moyen de compensation comportant, par exemple, un ressort de compression (888) monté entre la vanne et le moyen de mise en mouvement commun.

384. Appareil suivant la revendication 379 ou la revendication 383 caractérisé en ce que le moyen de compensation (888) est associé à chaque premier élément de vanne (800) et chaque première navette (860) afin de compenser le jeu axial dans les moyens d'entraînement et/ou le premier élément de vanne et n'importe quel écart de dimension dans les structures associées, le moyen de compensation comportant par exemple un ressort de compression (888) monté entre chaque premier élément de vanne (800) et chaque première navette (860).
